# EUROPEAN PATENT APPLICATION

(11) **EP 4 130 963 A1**
(43) Date of publication of application: **08.02.2023**
(21) Application number: 20932244.5
(22) Date of filing: 31.12.2020
(51) Int. Cl.: G06F 3/0485

(54) **OBJECT DRAGGING METHOD AND DEVICE**

(30) Priority: 24.04.2020 CN 202010333906; 10.06.2020 CN 202010526717; 29.07.2020 CN 202010747180; 29.07.2020 CN 202010747181; 29.07.2020 CN 202010747173; 26.08.2020 CN 202010873983; 02.09.2020 CN 202010911452; 27.09.2020 CN 202011034860; 28.09.2020 CN 202011045760; 28.09.2020 CN 202011045443; 29.09.2020 CN 202011049448; 08.12.2020 CN 202011425441; 25.12.2020 CN 202011564390
(71) Applicant: Huawei Technologies Co., Ltd., Shenzhen, Guangdong 518129 (CN)
(72) Inventor: WANG, Haijun, Shenzhen, Guangdong 518129 (CN); WEI, Fanxiang, Shenzhen, Guangdong 518129 (CN); BIAN, Sucheng, Shenzhen, Guangdong 518129 (CN); ZHOU, Xueer, Shenzhen, Guangdong 518129 (CN); LU, Yuedong, Shenzhen, Guangdong 518129 (CN); ZHOU, Xingchen, Shenzhen, Guangdong 518129 (CN); DU, Zhong, Shenzhen, Guangdong 518129 (CN); LIN, Youhui, Shenzhen, Guangdong 518129 (CN); WANG, Huan, Shenzhen, Guangdong 518129 (CN); CAO, Yuan, Shenzhen, Guangdong 518129 (CN); DING, Ning, Shenzhen, Guangdong 518129 (CN); WEI, Xi, Shenzhen, Guangdong 518129 (CN); LIU, Min, Shenzhen, Guangdong 518129 (CN); JU, Ran, Shenzhen, Guangdong 518129 (CN); XU, Bo, Shenzhen, Guangdong 518129 (CN); XU, Liang, Shenzhen, Guangdong 518129 (CN); CHEN, Nai, Shenzhen, Guangdong 518129 (CN); WANG, Yong, Shenzhen, Guangdong 518129 (CN); LIU, Fengkai, Shenzhen, Guangdong 518129 (CN); YANG, Wanyi, Shenzhen, Guangdong 518129 (CN); HU, Kai, Shenzhen, Guangdong 518129 (CN)
(74) Representative: Gill Jennings & Every LLP
(86) International application number: PCT/CN2020/142420
(87) International publication number: WO 2021/212922

(57) **Abstract**

This application provides an object drag method and a device, and relates to the field of electronic devices, to improve usage efficiency of cooperatively using a plurality of terminals. A specific solution is as follows: A first terminal displays an object on a display of the first terminal. The first terminal receives a drag operation input by a user. The drag operation is used to initiate drag for the object. The first terminal displays, on the display of the first terminal in response to the drag operation, an animation in which the object moves with the drag operation. The first terminal sends drag data to a second terminal after determining that a drag intent of the user is cross-device drag. The drag data is used by the second terminal to display the object on a display of the second terminal.

## Description

This application claims priority to Chinese Patent Application No. 202010747180.5, filed with the China National Intellectual Property Administration on July 29, 2020 and entitled "CROSS-DEVICE OBJECT DRAG METHOD AND DEVICE", to Chinese Patent Application No. 202010747173.5, filed with the China National Intellectual Property Administration on July 29, 2020 and entitled "CROSS-DEVICE OBJECT DRAG METHOD AND DEVICE", to Chinese Patent Application No. 202010747181.X, filed with the China National Intellectual Property Administration on July 29, 2020 and entitled "CROSS-DEVICE OBJECT DRAG METHOD AND DEVICE", to Chinese Patent Application No. 202011049448.4, filed with the China National Intellectual Property Administration on September 29, 2020 and entitled "PROJECTION METHOD AND DEVICE", to Chinese Patent Application No. 20201091 1452.0, filed with the China National Intellectual Property Administration on September 2, 2020 and entitled "DISPLAY METHOD AND DEVICE", to Chinese Patent Application No. 202011564390.7, filed with the China National Intellectual Property Administration on December 25, 2020 and entitled "INTERFACE ELEMENT DISPLAY METHOD AND DEVICE", to Chinese Patent Application No. 202011045760.6, filed with the China National Intellectual Property Administration on September 28, 2020 and entitled "WINDOW DISPLAY METHOD AND DEVICE", to Chinese Patent Application No. 202010873983.5, filed with the China National Intellectual Property Administration on August 26, 2020 and entitled "INTERFACE DISPLAY METHOD AND DEVICE", to Chinese Patent Application No. 202011034860.9, filed with the China National Intellectual Property Administration on September 27, 2020 and entitled "DEVICE RECOMMENDATION METHOD AND DEVICE", to Chinese Patent Application No. 202011425441.8, filed with the China National Intellectual Property Administration on December 8, 2020 and entitled "PROJECTION METHOD AND DEVICE", to Chinese Patent Application No. 202011045443.4, filed with the China National Intellectual Property Administration on September 28, 2020 and entitled "FILE TRANSMISSION METHOD AND RELATED DEVICE", to Chinese Patent Application No. 202010333906.0, filed with the China National Intellectual Property Administration on April 24, 2020 and entitled "DATA TRANSMISSION METHOD AND APPARATUS", and to Chinese Patent Application No. 202010526717.5, filed with the China National Intellectual Property Administration on June 10, 2020 and entitled "MULTI-DEVICE POSE MEASUREMENT METHOD, ELECTRONIC DEVICE AND SYSTEM", which are incorporated herein by reference in their entireties.

### TECHNICAL FIELD

This application relates to the field of electronic devices, and in particular, to an object drag method and a device.

### BACKGROUND

With development of electronic technologies and the mobile Internet, a user may have more terminals such as a mobile phone, a tablet computer, a personal computer (personal computer, PC), and a smart home device (for example, a television). Generally, each terminal is used independently. In a scenario in which a plurality of terminals need to be cooperatively used, for example, collaborative office, the user connect the plurality of terminals for use. For example, the user has a PC and a mobile phone. The user may connect the PC and the mobile phone for cooperative use in a wireless or wired manner, to implement collaborative office between the PC and the mobile phone.

### SUMMARY

Embodiments of this application provide an object drag method and a device. In a scenario in which a plurality of terminals are collaboratively used, drag for an object, for example, a user interface (user interface, UI) element between the plurality of terminals is implemented, to improve usage efficiency of cooperatively using the plurality of terminals.

To resolve the foregoing problem, the following technical solutions are used in embodiments of this application.

According to a first aspect, an embodiment of this application provides an object drag method. The method may be applied to a first terminal, and the first terminal is connected to a second terminal. The method may include: The first terminal displays an object on a display of the first terminal. The first terminal receives a drag operation input by a user. The drag operation is used to initiate drag for the object. The first terminal displays, on the display of the first terminal in response to the drag operation, an animation in which the object moves with the drag operation. The first terminal sends drag data to the second terminal after determining that a drag intent of the user is cross-device drag. The drag data is used by the second terminal to display the object on a display of the second terminal.

In an example, in this embodiment, the first terminal and the second terminal each are a terminal that may run an operating system, on which an application may be installed, and that has a display (or a display). The operating systems run by the first terminal and the second terminal may be the same or different.

By using the technical solution provided in this embodiment, the user is allowed to drag, in a drag manner, an object, for example, a window, a UI element, or a UI control on an interface, from one terminal to another terminal that is collaboratively used with the terminal, to improve usage efficiency of collaboratively using a plurality of terminals, make drag more direct and explicit, and improve user experience in drag. This breaks a barrier between screens and systems of different terminals, and can implement dragging various objects without depending on a projection window. In addition, a drag target end device, for example, the second terminal, does not need to be used as an extended screen of the first terminal, to implement cross-device and cross-system object drag in a real sense. In addition, the user can implement drag without installing other auxiliary software in advance.

In a possible implementation, the method may further include: In a process in which the object moves on the display of the first terminal, the first terminal displays a second region of the object on the display of the first terminal when a first region of the object is dragged out of the display of the first terminal. The drag data is specifically used by the second terminal to display the first region of the object on the display of the second terminal. The second region of the object displayed on the first terminal and the first region of the object displayed on the second terminal can implement complete presentation of content of the object The first terminal and the second terminal cooperatively display the animation of the dragged object based on drag of the user, so that the drag animation is smoothly and intuitively presented to the user.

In another possible implementation, the drag operation includes at least an operation of triggering the object to move. The second region of the object displayed on the display of the first terminal dynamically changes with the operation. A region that is of the object and that is displayed on the display of the first terminal is dynamically adjusted based on an operation of the user on the first terminal, so that chirality is better.

In another possible implementation, after the first terminal displays the second region of the object on the display of the first terminal, the method may further include: The first terminal receives third drag data from the second terminal. The third drag data is sent by the second terminal to the first terminal after the second terminal receives a drag operation of the user for the first region of the object displayed on the second terminal, and the third drag data includes coordinate information of a first corner of the object. The second region of the object displayed on the display of the first terminal dynamically changes with a change of the third drag data. The region that is of the object and that is displayed on the display of the first terminal is dynamically adjusted based on an operation of the user on the second terminal, so that chirality is better. This implementation is applicable to a scenario of two different users or a non-continuous drag task.

In another possible implementation, the drag data includes first drag data and second drag data. Before the drag data is sent to the second terminal, the method may further include: The first terminal obtains the first drag data from a drag start event when the object starts to be dragged. The first terminal obtains the second drag data from a drag movement event in the process in which the object moves on the display of the first terminal.

In another possible implementation, the object may be a window or a partial region of a window, and the window includes an interface of an application. The first drag data includes the interface of the application and rectangle information of the object. The second drag data includes coordinate information of a first corner of the object For example, the coordinate information of the first corner of the object in the second drag data may be coordinate information of a first corner that is on the display of the first terminal and that is of the object.

In another possible implementation, after the drag data is sent to the second terminal, the method may further include: The first terminal receives a drag release operation input by the user. The drag release operation is used to indicate that drag for the object ends. The first terminal sends data to the second terminal in response to the drag release operation. The data is used by the second terminal to display the interface of the application or a partial region of the interface of the application on the display of the second terminal. After the user releases the drag, the corresponding data can be sent to the second terminal, so that the interface of the application or the partial region of the interface of the application in the dragged window is displayed on the second terminal, to give the user a visual effect of dragging the window or the partial region of the window to the second terminal.

In another possible implementation, the window is an application window or a freeform (freeform) small window.

In another possible implementation, the object may be a video component, a floating window, a picture-in-picture, or a freeform small window. The first drag data includes rectangle information of the object. The second drag data includes the coordinate information of the first corner of the object For example, the coordinate information of the first corner of the object in the second drag data may be coordinate information of a first corner that is on the display of the first terminal and that is of the object

In another possible implementation, after the first terminal determines that the drag intent of the user is cross-device drag, the method may further include: The first terminal sends screen recording data to the second terminal. The screen recording data and the drag data are used by the second terminal to display a partial region or an entire region of the object on the display of the second terminal. The screen recording data is sent to the second terminal, and is used by the second terminal to restore dragged corresponding content

In another possible implementation, after the drag data is sent to the second terminal, the method may further include: The first terminal receives a drag release operation input by the user. The drag release operation is used to indicate that drag for the object ends. The first terminal sends indication information to the second terminal in response to the drag release operation. The indication information is used to indicate the second terminal to display the entire region of the object on the display of the second terminal. After the user releases the drag, the indication information can be sent to the second terminal, so that the second terminal displays the entire region of the dragged object based on the indication information, to give the user a visual effect of dragging the UI element to the second terminal.

In another possible implementation, the object is a user interface (UI) control on a first interface, or the object is a partial region of a first interface, and the partial region includes a UI control. That the first terminal displays, on the display of the first terminal in response to the drag operation, an animation in which the object moves with the drag operation includes: The first terminal displays, on the display of the first terminal in response to the drag operation, an animation in which a shadow of the object moves with the drag operation. The first drag data includes rectangle information of the shadow, the shadow, and an identifier of the UI control. The second drag data includes coordinate information of a first corner of the shadow.

In another possible implementation, after the drag data is sent to the second terminal, the method may further include: The first terminal receives a drag release operation input by the user. The drag release operation is used to indicate that drag for the object ends. The first terminal obtains an instruction stream of the first interface and sends the instruction stream to the second terminal. The instruction stream and the identifier of the UI control are used by the second terminal to display the UI control on the display of the second terminal. After the user releases the drag, the instruction stream of the interface of the dragged UI control can be sent to the second terminal, so that the second terminal can extract the UI control from the instruction stream based on the received identifier of the dragged UI control, and display the UI control, to give the user with a visual effect of dragging the UI control to the second terminal.

In another possible implementation, the determining that a drag intent of the user is cross-device drag includes: The first terminal determines that the object is dragged to a drag sensing region disposed on an edge of the display of the first terminal. Alternatively, the first terminal determines that a distance between the object and an edge of the display of the first terminal is less than a predetermined distance.

In another possible implementation, the method may further include: The first terminal displays a first cursor on the object. That the first terminal displays, on the display of the first terminal in response to the drag operation, an animation in which the object moves with the drag operation includes: The first terminal displays, on the display of the first terminal in response to the drag operation, an animation in which the object moves with the first cursor. In a scenario in which a plurality of terminals are collaboratively used, the user can shuttle, with a cursor in a drag manner by using an input device, for example, a mouse, an object on one terminal between the plurality of terminals that are collaboratively used.

In another possible implementation, the drag data is specifically used by the second terminal to display, on the display of the second terminal, an animation in which the object moves with a second cursor. The drag data is sent to another terminal, so that the another terminal can continue to display, on the another terminal based on an operation input by the user, an animation in which the object moves with a cursor, to implementing drag continuation.

In another possible implementation, the object is an icon of an application, or the object is a window, and the window includes an interface of an application. When the object is the icon of the application, the drag data includes the icon of the application. When the object is the window, the drag data includes the interface of the application.

In another possible implementation, after the drag data is sent to the second terminal, the method may further include: The first terminal receives an indication message from the second terminal. The indication message is sent by the second terminal after the user inputs a drag release operation, and is used to indicate that drag for the object ends. The first terminal sends data to the second terminal. The data is used by the second terminal to display the interface of the application on the display of the second terminal. After drag for the object ends, the corresponding data is sent to the first terminal, so that the first terminal can display, on the display of the first terminal, the interface of the application corresponding to the dragged object.

In another possible implementation, that the first terminal displays, on the display of the first terminal, an animation in which the object moves with the first cursor includes: The first terminal displays, on the display of the first terminal, an animation in which a shadow of the object moves with the first cursor.

In another possible implementation, the object is a text, a file, or a folder, and the drag data includes drag event content and a bitmap of the shadow. When the object is the text, the drag event content includes the text When the object is the file or the folder, the drag event content is a file path.

In another possible implementation, that the first terminal receives a drag operation input by a user includes: The first terminal receives the drag operation input by the user by using an input device of the second terminal. The user can complete, by using an input device of one terminal, dragging an object on another terminal from the another terminal to the terminal. This improves usage efficiency of collaboratively using a plurality of terminals, increases interaction between the terminals when the plurality of terminals are collaboratively used, and improves user experience.

In another possible implementation, before the first terminal displays the first cursor on the object displayed by the first terminal, the method may further include: The first terminal receives first shuttle state information from the second terminal. The first shuttle state information is used to indicate that a shuttle starts. The first terminal displays the first cursor on the first terminal in response to the first shuttle state information. After the shuttle state information indicating that the shuttle starts is received, the user can control the first terminal by using the input device of the second terminal

In another possible implementation, after the first terminal displays the first cursor on the object, the method may further include: The first terminal receives an operation that is of moving the first cursor and that is input by the user by using the input device of the second terminal. In response to the operation of moving the first cursor, the first terminal displays, on the display of the first terminal until the first cursor moves to the object, an animation in which the first cursor moves. After the cursor starts to shuttle, the user can control the first terminal by using the input device of the second terminal.

In another possible implementation, the drag operation includes a press operation and a movement operation. That the first terminal receives the drag operation input by the user by using an input device of the second terminal includes: The first terminal receives a first operation parameter from the second terminal. The first operation parameter is an operation parameter included in a press event received by the second terminal after the user performs the press operation by using the input device of the second terminal. The first terminal receives a second operation parameter from the second terminal. The second operation parameter is an operation parameter included in a movement event received by the second terminal after the user performs the movement operation by using the input device of the second terminal. The first terminal simulates the press event based on the first operation parameter, and simulates the movement event based on the second operation parameter. The press event and the movement event are used to indicate to initiate drag for the object. That the first terminal displays, on the display of the first terminal in response to the drag operation, an animation in which the object moves with the first cursor includes: The first terminal displays, in response to the press event and the movement event, the animation in which the object moves with the first cursor.

In another possible implementation, after the first terminal determines that the object is dragged out of an edge of the display of the first terminal, the method may further include: The first terminal sends second shuttle state information to the second terminal. The second shuttle state information is used to indicate that the shuttle ends. The shuttle state information indicating that the shuttle ends is sent to the second terminal, so that the user can control the second terminal by using the input device of the second terminal.

In another possible implementation, that the first terminal receives a drag operation input by a user may include: The first terminal receives the drag operation input by the user by using an input device of the first terminal. In another possible implementation, the drag operation includes a press operation and a movement operation. When the first terminal determines that the drag intent of the user is cross-device drag, the method may further include: The first terminal sends, to the second terminal, data of the movement operation input by the user by using the input device of the first terminal. On a premise that projection is not started, the user can shuttle, with the cursor in a drag manner by using the input device, for example, the mouse, an object on one terminal between the plurality of terminals that are collaboratively used. Because no projection needs to be started, no display space of a display of a terminal is occupied. In addition, related drag data of the dragged object is sent to another terminal, and is used by the another terminal to continue dragging. In addition, the user is allowed to process the transferred object by using these terminals, so that hardware capabilities of the plurality of terminals can be used in collaborative office. This improves usage efficiency of collaboratively using the plurality of terminals, and improves user experience.

In another possible implementation, that the first terminal sends, to the second terminal, data of the movement operation input by the user by using the input device of the first terminal includes: The first terminal intercepts a movement event in a process in which the user performs the movement operation by using the input device of the first terminal. The first terminal sends, to the second terminal, an operation parameter included in the movement event.

In another possible implementation, after the first terminal determines that the drag intent of the user is cross-device drag, the method may further include: The first terminal sends shuttle state information to the second terminal. The shuttle state information is used to indicate that a shuttle starts. The shuttle state information used to indicate that the shuttle starts is sent to the another terminal, so that the another terminal prepares to continue dragging, for example, displays the cursor.

In another possible implementation, after the first terminal determines that the drag intent of the user is cross-device drag, the method may further include: The first terminal hides the first cursor and the object After it is determined that the cursor shuttles, the cursor and the dragged object that are displayed on the first terminal are hidden, to give the user a visual effect of dragging the object from the first terminal to the another terminal.

In another possible implementation, after the first terminal determines that the drag intent of the user is cross-device drag, the method may further include: The first terminal displays an invisible window. Transparency of the invisible window is greater than a threshold, and the invisible window is configured to receive a drag event Before the drag data is sent to the second terminal, the method may further include: The first terminal obtains the drag event content from the drag event received by the invisible window. The first terminal obtains the bitmap of the shadow of the object

In another possible implementation, the determining that a drag intent of the user is cross-device drag includes: The first terminal determines that the object is dragged out of the edge of the display of the first terminal.

In another possible implementation, before the drag data is sent to the second terminal, the method may further include: The first terminal obtains a data type of the object. The first terminal sends, to the second terminal, a determining request carrying the data type. The first terminal receives a determining result obtained by the second terminal based on the data type. The determining result indicates whether the object can be transmitted to the second terminal. The sending drag data to the second terminal includes: The first terminal sends the object to the second terminal when the determining result is that the object can be transmitted to the second terminal and a drag release operation is detected. Whether to send the object to the second terminal is determined based on the determining result fed back by the second terminal, to improve efficiency of cross-device drag.

In another possible implementation, after the first terminal receives the determining result obtained by the second terminal based on the data type, the method may further include: The first terminal displays the determining result. An intuitive visual feedback is provided for the user, to avoid a wrong operation and a repeated operation, and improve operation efficiency.

In another possible implementation, the determining request carries a data type field and/or an extended data type field. The data type field and the extended data type field are used to indicate the data type of the object

In another possible implementation, that the first terminal sends the object to the second terminal includes: The first terminal temporarily stores the object locally on the first terminal. The first terminal sends a data transmission request to the second terminal. The data transmission request is used to transmit the object. The first terminal sends, when receiving a first response signal that indicates that the data transmission request is accepted and that is returned by the second terminal, the object based on the first response signal.

In another possible implementation, after the first terminal temporarily stores the object locally on the first terminal, the method may further include: When detecting a call-out instruction for the temporarily stored object, the first terminal calls out the temporarily stored object, and sends the data transmission request to the second terminal.

In another possible implementation, that the first terminal sends the object based on the first response signal includes: The first terminal directly sends the object when receiving the first response signal. Alternatively, the first terminal delays, when receiving the first response signal, sending the object

A selectable operation for the dragged-in object can be displayed, so that the user adjusts a transmission process or a processing manner based on an actual requirement. In this way, the second terminal device can process the object based on the actual requirement

In another possible implementation, the method may further include: The first terminal sends a display instruction to the second terminal, to instruct the second terminal to display a first image of the object according to the display instruction and based on a location relationship between the second terminal and the first terminal. A second image that is of the object and that is displayed on the first terminal and the first image of the object displayed on the second terminal can be spliced into a complete image of the object. The object is sent to the second terminal if it is detected that an area of the second image that is of the object and that is displayed on the display of the first terminal meets a sending condition.

In another possible implementation, the method may further include: The first terminal sends a display state request to the second terminal, so that the second terminal returns to a current display interface of the second terminal in response to the display state request, and displays the display interface. That the first terminal sends, to the second terminal, a determining request carrying the data type includes: The first terminal sends the determining request to the second terminal. The determining request carries the data type and coordinates that are on the display interface and that are of a stay location of the drag operation. That the first terminal receives a determining result obtained by the second terminal based on the data type includes: The first terminal receives the determining result obtained by the second terminal based on the data type and the coordinates.

In another possible implementation, the method may further include: The first terminal determines a processing manner of the second terminal for the object. That the first terminal sends the object to the second terminal includes: The first terminal sends the object and indication information to the second terminal. The indication information is used to indicate the second terminal to process the object in the processing manner.

In another possible implementation, before the drag data is sent to the second terminal, the method may further include: The first terminal determines that a target device for cross-device drag is the second terminal.

In another possible implementation, before the first terminal determines that the target device for cross-device drag is the second terminal, the method may further include: The first terminal displays information about at least two candidate terminals. The at least two candidate terminals include a terminal connected to the first terminal, and/or a terminal that is not connected to the first terminal but whose distance from the first terminal is within a connectable range. That the first terminal determines that a target device for cross-device drag is the second terminal includes: The first terminal receives a selection operation of the user for information about at least one second terminal in the information about the at least two candidate terminals, or the first terminal determines at least one second terminal based on a relationship between a stay location of the drag operation and a display location of the information about the at least two candidate terminals. If the second terminal selected or determined by the user is not connected to the first terminal, the method further includes: The first terminal establishes a connection to the second terminal.

In another possible implementation, that the first terminal displays information about at least two candidate terminals includes: The first terminal displays device identifiers of the at least two candidate terminals based on a matching degree between each of the at least two candidate terminals and a first service corresponding to the object A higher matching degree between the candidate terminal and the first service indicates a higher recommendation priority of the device identifier of the candidate terminal. The first terminal can determine a matching degree between discovered devices (for example, the candidate terminals) and the first service, and recommend a device based on the determined matching degree. This improves accuracy of a device recommendation order, and improves user experience.

In another possible implementation, before the first terminal displays the device identifiers of the at least two candidate terminals based on the matching degree between each of the at least two candidate terminals and the first service corresponding to the object, the method further includes: The first terminal determines the matching degree between each of the at least two candidate terminals and the first service.

In another possible implementation, that the first terminal determines the matching degree between each of the at least two candidate terminals and the first service includes: For each of the at least two candidate terminals, the first terminal obtains a score of the candidate terminal in each dimension. The first terminal obtains a score of the first service in each dimension. The first terminal determines the matching degree between each candidate terminal and the first service based on the score of the candidate terminal in each dimension and the score of the first service in each dimension. The dimensions are divided based on different factors that affect a matching degree between a device and a service.

In another possible implementation, that the first terminal determines the matching degree between each candidate terminal and the first service based on the score of the candidate terminal in each dimension and the score of the first service in each dimension includes: The first terminal generates a device scoring model of the candidate terminal based on the score of the candidate terminal in each dimension, and generates a service scoring model of the first service based on the score of the first service in each dimension. The first device obtains a coincidence degree between the device scoring model and the service scoring model. The first device determines the matching degree between the candidate terminal and the first service based on the coincidence degree. A higher coincidence degree between the device scoring model and the service scoring model indicates a higher matching degree between the corresponding candidate terminal and the first service.

In this way, the device and the service are scored based on each dimension that affects the matching degree between the device and the service, to determine the matching degree between the device and the service based on a score result, so as to further improve the accuracy of the device recommendation order.

In another possible implementation, that the first terminal determines that a target device for cross-device drag is the second terminal includes: The first terminal determines at least one second terminal based on a location relationship between a stay location of the drag operation and an edge of the first terminal and relative locations of the first terminal and at least one candidate terminal.

In another possible implementation, before the first terminal determines the at least one second terminal based on the location relationship between the stay location of the drag operation and the edge of the first terminal and the relative locations of the first terminal and the at least one candidate terminal, the method further includes: The first terminal obtains a first photographing parameter of the first terminal. The first photographing parameter of the first terminal is a photographing parameter obtained by the first terminal through self-metering. The first terminal sends the first photographing parameter of the first terminal to the at least one candidate terminal. The first photographing parameter of the first terminal is used by the at least one candidate terminal to determine a respective second photographing parameter in combination with a respective first photographing parameter. A first photographing parameter of the candidate terminal is a photographing parameter obtained by the candidate terminal through self-metering, and a second photographing parameter of the candidate terminal is used by the candidate terminal to perform synchronous photographing. The first terminal performs the synchronous photographing with the at least one candidate terminal. The first terminal receives a result that is of the synchronous photographing and that is sent by the at least one candidate terminal The first terminal obtains the relative locations of the first terminal and the at least one candidate terminal based on results of the synchronous photographing performed by the first terminal and the at least one candidate terminal. The at least one candidate terminal adjusts a respective photographing parameter with reference to a first photographing parameter of a same device, for example, the first terminal, and performs the synchronous photographing by using an adjusted second photographing parameter. This avoids a measurement error caused by a mismatch of the photographing parameter, and makes consistency of the results of the synchronous photographing better and location measurement precision higher. In addition, this embodiment of this application does not depend on a special measurement environment, and has low costs and a wider application scope.

In another possible implementation, the second photographing parameter of the candidate terminal is a photographing parameter obtained by the candidate terminal based on the first photographing parameter of the first terminal, the first photographing parameter of the candidate terminal, and first photographing parameters of a preset quantity of candidate terminals other than the candidate terminal in the at least one candidate terminal. When determining the second photographing parameter used for the synchronous photographing, the candidate terminal can not only refer to the first photographing parameter of the first terminal, but also refer to the first photographing parameters of the preset quantity of other candidate terminals. This improves a matching degree of photographing parameters between the terminals, and makes consistency of the results of the synchronous photographing higher and location measurement precision higher.

In another possible implementation, the result that is of the synchronous photographing and that is sent by the at least one candidate terminal is feature point description information obtained by the at least one candidate terminal by performing feature point detection on a photo separately obtained by the at least one candidate terminal by performing the synchronous photographing. The result that is of the synchronous photographing and that is sent by the candidate terminal to the first terminal is information obtained after the candidate terminal processes the photo obtained through synchronous photographing. This reduces an amount of data transmitted between the candidate terminal and the first terminal and a calculation amount of the first terminal, and also reduces a processing burden of the first terminal.

In another possible implementation, after the first terminal receives the result that is of the synchronous photographing and that is sent by the at least one candidate terminal, the method may further include: If the result of the synchronous photographing does not meet a preset condition, the first terminal displays prompt information for assisting in photographing. The preset condition is that a quantity of feature points whose feature point intensity is greater than a first threshold in the result of the synchronous photographing is greater than a second threshold. When the result of the synchronous photographing does not meet the preset condition, the first terminal and/or the candidate terminal can display the prompt information for assisting in photographing, so that the user can assist in performing the synchronous photographing based on the prompt information, so as to obtain a photographing result that meets the preset condition, that is, obtain a high-precision measurement result at a very low interaction cost.

In another possible implementation, before the first terminal sends the screen recording data to the second terminal, the method may further include: The first terminal obtains the screen recording data. The screen recording data includes a first layer at which the object is located, and the first layer is composited to a virtual display based on a first geometric transformation matrix. The first geometric transformation matrix includes an offset parameter used to offset the first layer and a scaling parameter used to scale the first layer, so that the first layer covers the virtual display in least one direction. The first geometric transformation matrix is different from a second geometric transformation matrix, and the second geometric transformation matrix is a matrix used when the first layer is composited on the display of the first terminal. For the dragged object, a geometric transformation matrix corresponding to the layer at which the object is located can be re-determined, and is used to composite the layer on the virtual display. Because the re-determined geometric transformation matrix can scale the layer as much as possible to be consistent with a size of the virtual display, the object can be maximized on the second terminal for presentation to the user. For example, when the object is the picture-in-picture, the floating window, or the like, the layer at which the object is located is scaled as much as possible to be consistent with the size of the virtual display, so that the layer can cover the virtual display as much as possible, to remove or reduce a black border that exists when the second terminal presents the object, so as to maximize the object on the second terminal for presentation. This improves user experience.

In another possible implementation, before the first terminal obtains the screen recording data, the method may further include: The first terminal obtains a first identifier. The first identifier is an identifier of the first layer. The first terminal obtains the first geometric transformation matrix. 'I'he first terminal composites, based on the first identifier, the first layer to the virtual display by using the first geometric transformation matrix. The identifier of the layer at which the dragged object is located can be identified, so that when the layer is composited, only the layer is composited by using the re-determined geometric transformation matrix. This can not only ensure that an element at the layer can be maximized for presentation, but also improve efficiency when the terminal composites the layer.

In another possible implementation, that the first terminal obtains the first geometric transformation matrix includes: The first terminal obtains an initial display region of the first layer on the virtual display. The first terminal obtains the offset parameter based on coordinates of a first corner of the initial display region relative to a first corner of the virtual display. The first terminal obtains the scaling parameter based on the width and the height of the object and the width and the height of the virtual display. The first terminal obtains the first geometric transformation matrix based on the offset parameter and the scaling parameter. The offset parameter that needs to offset the layer can be determined based on the initial display region of the first layer on the virtual display, and the scaling parameter for scaling the layer is determined based on the width and the height of the object and the width and the height of the virtual display. This can not only prevent some parts of the layer from being truncated, but also ensure that content of the layer is expanded to be consistent with the virtual display as much as possible.

In another possible implementation, that the first terminal obtains the first geometric transformation matrix includes: The first terminal obtains rectangle information corresponding to the object. The first terminal obtains the offset parameter based on coordinates of a first corner in the rectangular information relative to a first corner of the virtual display. The first terminal obtains, the scaling parameter based on the width and the height of a rectangle corresponding to the rectangle information and the width and the height of the virtual display. The first terminal obtains the first geometric transformation matrix based on the offset parameter and the scaling parameter. The offset parameter that needs to offset the layer can be determined based on the rectangle information corresponding to the object, and the scaling parameter for scaling the layer is determined based on the width and the height of the rectangle corresponding to the rectangle information of the object and the width and the height of the virtual display, so that any region at the layer, for example, a region at which the object is located, can be maximized at a projection destination end for presentation.

In another possible implementation, after the first terminal receives the first shuttle state information from the second terminal, the method may further include: The first terminal displays a first interface. The first terminal receives a first operation of the user for content on the first interface. The first terminal sends data to the second terminal in response to the first operation when an input source for the first operation is the input device of the second terminal. The data is used by the second terminal to display a second interface on the display of the second terminal. The first terminal displays a second interface on the display of the first terminal in response to the first operation when an input source for the first operation is an input device of the first terminal. In a scenario in which the first terminal and the second terminal are collaboratively used, when the user controls the first terminal by using the input device of the second terminal, the first terminal can project a corresponding interface to the second terminal for display. When the user controls the first terminal by using the input device of the first terminal, the first terminal displays a corresponding interface on the first terminal, and does not project the corresponding interface to the second terminal for display. In this way, the user can freely control an interface on the first terminal for display on different devices based on an actual requirement of the user. This not only protects user privacy, but also avoids the user from diverting attention, thereby improving user experience.

In another possible implementation, the method may further include: The first terminal displays the first cursor in the window when the second cursor of the second terminal enters the interface of the application displayed by the second terminal. The first terminal receives a second operation input by the user by using an input device of the second terminal. The second operation is used to move the first cursor on the display of the first terminal. When the first cursor moves to first content in the window, the first terminal displays the first cursor in a first style, and/or changes a display manner of the first content from a first manner to a second manner, so that when the second cursor moves to content that corresponds to the first content and that is on the interface of the application, the second cursor is displayed in the first style, and/or a display manner of the content that corresponds to the first content and that is on the interface of the application is changed from the first manner to the second manner. When the first cursor moves to second content in the window, the first terminal displays the first cursor in a second style, and/or changes a display manner of the second content from a third manner to a fourth manner, so that when the second cursor moves to content that corresponds to the second content and that is on the interface of the application, the second cursor is displayed in the second style, and/or a display manner of the content that corresponds to the second content and that is on the interface of the application is changed from the third manner to the fourth manner.

In another possible implementation, after the first terminal displays the first cursor in the first style, the method may further include: The first terminal sends a cursor type of the first style to the second terminal. The cursor type of the first style is used by the second terminal to display the second cursor, so that the second cursor is displayed in the first style. After the first terminal displays the first cursor in the second style, the method may further include: The first terminal sends a cursor type of the second style to the second terminal. The cursor type of the second style is used by the second terminal to display the second cursor, so that the second cursor is displayed in the second style.

In another possible implementation, transparency of the first cursor is greater than a threshold.

In another possible implementation, the object may be an application window of a first application, and the application window includes a plurality of elements. The method may further include: The first terminal displays a first window on the display of the first terminal after the first terminal determines that the drag intent of the user is not cross-device drag. The first window includes a part of elements in the application window. The first terminal can extract a key element on a display interface of the terminal, and display the key element on a screen of the terminal in a form of a window, for example, a dynamic small window. Key content in the application window is displayed by using a limited display resource of a small window. In addition, this not only cannot display excessive content to affect user experience, but also can meet a processing requirement of the user, for example, can help the user obtain and quickly process multi-task information by using the window.

In another possible implementation, the determining that the drag intent of the user is not cross-device drag includes: The first terminal determines that the application window moves to a specified region of the display of the first terminal.

In another possible implementation, that the first terminal displays the application window on the display of the first terminal includes: The first terminal displays a multi-task interface after receiving a third operation. The multi-task interface includes the application window. The drag operation is a drag operation for the application window on the multi-task interface. Display of the window is triggered by using this system-level interaction gesture of sliding up the application window on the multi-task interface, so that display of the window can be more easily triggered, and an operation can be simpler.

In another possible implementation, the application window is a freeform small window.

In another possible implementation, before the first window is displayed on the display of the first terminal, the method further includes: The first terminal extracts the part of elements from the plurality of elements in the application window. After triggering display of the dynamic small window, the terminal can extract a key element in the currently displayed application window, and continue to present the key element to the user in the form of the dynamic small window.

In another possible implementation, the part of elements are predetermined. Alternatively, that the first terminal extracts the part of elements from the plurality of elements in the application window includes: The first terminal obtains a second identifier, and obtains, from stored configuration files corresponding to different identifiers, a configuration file corresponding to the second identifier. The configuration file corresponding to the second identifier includes identifiers of the part of elements. The first terminal extracts the part of elements from the plurality of elements in the application window based on the configuration file corresponding to the second identifier. The second identifier includes an identifier of the first application, or the second identifier includes an identifier of the first application and an identifier of an interface in the application window. Alternatively, that the first terminal extracts the part of elements from the plurality of elements in the application window includes: The first terminal obtains a type of the first application, and obtains, from stored recommendation models corresponding to different types of applications, a recommendation model corresponding to the type of the first application. The recommendation model has a function of extracting, based on a type corresponding to an application, an element that needs to be displayed in the first window. The first terminal extracts the part of elements from the plurality of elements in the application window based on the recommendation model corresponding to the type of the first application. Content and a layout effect presented in the first window, namely, the dynamic small window, support automatic recommendation by a system based on the different application types or customization by a third-party application developer, so that the user can more flexibly complete multi-task processing. This further meets requirements of display and flexibly layout in the dynamic small window.

In another possible implementation, a layout of the part of elements in the first window is different from a layout of elements corresponding to the part of elements in the application window. This embodiment further supports re-layout of the element in the dynamic small window.

In another possible implementation, the layout of the part of elements in the first window is predetermined. Alternatively, before the first window is displayed on the display of the first terminal, the method further includes: The first terminal obtains, from a stored layout file based on the second identifier or the type of the first application, a layout file corresponding to the second identifier or the type of the first application. The first terminal lays out the part of elements based on the obtained layout file. The second identifier includes the identifier of the first application, or the second identifier includes the identifier of the first application and the identifier of the interface in the application window

In another possible implementation, after the first window is displayed on the display of the first terminal, the method may further include: After receiving a fourth operation for the first window, the first terminal changes the first window to a second window and displays the second window on the display of the first terminal. The second window includes a part of elements in the application window, and the second window includes more elements than the first window includes.

In another possible implementation, the second window further includes a close button and a scale-up button. The method may further include: After the first terminal receives an operation for the close button, the first terminal skips displaying the second window After the first terminal receives an operation for the scale-up button, the first terminal displays the application window and skips displaying the second window.

In another possible implementation, after the first terminal changes the first window to the second window and displays the second window on the display of the first terminal, the method may further include: After determining that no user operation is received within preset duration or after receiving a fifth operation for the second window, the first terminal changes the second window to the first window and displays the first window on the display of the first terminal. The dynamic small window can further support a change from a form of a medium window to a form of a small window. This can meet a plurality of processing requirements of the user, thereby improving user experience.

In another possible implementation, the displaying a first window on the display of the first terminal includes: The first terminal displays a desktop on the display of the first terminal, and displays the first window on the desktop. The desktop includes an icon of a second application. After the first window is displayed on the display of the first terminal, the method further includes: The first terminal displays, after receiving a drag operation for the first window, an animation in which the first window moves. The first terminal displays an application window of the second application on the display of the first terminal when the first window is dragged to a location of the icon of the second application When the user drags the first window, so that the first window hovers over an icon of an application, a mobile phone can be triggered to display an application window of the application.

In another possible implementation, after the first terminal displays the first window, the method may further include: The first terminal displays the multi-task interface after receiving the third operation. The multi-task interface includes the application window of the second application. The first terminal displays, after receiving the operation of dragging the first window, the animation in which the first window moves. The first terminal displays the application window of the second application on the display of the first terminal when the first window is dragged to the location of the application window of the second application.

In another possible implementation, the method may further include: After receiving a drag release operation, the first terminal converts the first window into a resource file and then stores the resource file or sends the resource file to the second terminal by using the second application. For example, content in the first window is converted into the resource file, then the resource file is stored locally or sent to another device, and an insertion result is displayed in the application window of the second application.

In another possible implementation, after the first window is displayed on the display of the first terminal, the method may further include: The first terminal displays, after receiving the drag operation for the first window, the **animation** in which the first window moves. Data of the first window is sent to the second terminal after it is determined that the drag intent of the user is cross-device drag. The data of the first window is used by the second terminal to display the first window on the display of the second terminal. The foregoing is described by using an example in which a window in the form of the small window, namely, the first window, is dragged. A window in the form of the medium window, namely, the second window, also supports drag.

In another possible implementation, the object is a first element included in a first interface of an application displayed on the display of the first terminal. The method may further include: The first terminal displays a first floating element on the display of the first terminal after determining that the drag intent of the user is not cross-device drag. Content of the first floating element is the same as content of the first element. The first terminal can display any element on the interface on a screen of the terminal in a form of a floating element based on a user operation. Then, regardless of whether the user switches a page in the application, exits from the application, or starts another application, the floating element can continue to be displayed on the screen of the first terminal, to implement an operation, for example, cross-application information viewing, file transfer, or information sharing.

In another possible implementation, the determining that the drag intent of the user is not cross-device drag includes: The first terminal determines that the object is not dragged to a drag sensing region and receives a drag release operation, or the first terminal determines that the object is dragged to a trigger region and receives a drag release operation

In another possible implementation, the first interface further includes a second element within a preset range of the first element. The first floating element further includes content of the second element. In this way, a predetermined element on the first interface can be presented on the screen of the terminal in the form of the floating element based on a user operation, to further meet a requirement of the user for cross-application information viewing, file transfer, information sharing, or the like.

In another possible implementation, the first element is one or more of a text type element, a uniform resource locator URL network address, a picture type element, an icon type element, a card type element, a list contact type element, a video window type element, or a file resource type element.

In another possible implementation, after the first terminal displays the first interface on the display, the method may further include: After receiving a first operation, the first terminal displays, in a first form, an element that supports floating display and that is on the first interface, and displays, in a second form, an element that does not support floating display and that is on the first interface. The first element is an element that supports floating display, and the first form is different from the second form. In this way, the element that supports floating display and that is on the interface can be highlighted, so that it is convenient for the user to view which element supports floating display, to improve user experience.

In another possible implementation, the first operation is an operation for a predetermined functional control, or the first operation is an operation for the element that supports floating display and that is on the first interface

In another possible implementation, after the first terminal displays the first floating element on the display of the first terminal, the method may further include: The first terminal displays a second interface on the display of the first terminal. The second interface includes a third element. The first terminal displays a second floating element on the display of the first terminal after receiving a second operation for the third element. Content of the second floating element is the same as content of the third element, and the second floating element and the first floating element are displayed on the display of the first terminal according to a preset arrangement rule. The second operation includes a drag operation and a drag release operation, or the second operation is a copy operation. The second operation includes the drag operation and the drag release operation, or when the third element is a text type element or a URL network address, the second operation may be alternatively the copy operation. The technical solution supports displaying of a plurality of floating elements on the screen of the terminal at the same time, to meet a user requirement In addition, each floating element may be displayed according to a ranking rule, for example, a generation time sequence.

In another possible implementation, before the first terminal displays the second floating element on the display of the first terminal, the method may further include: The first terminal determines that a quantity of floating elements displayed on the display of the first terminal is less than N. N is a maximum quantity of floating elements that are allowed to be displayed on the display at the same time. The maximum quantity of floating elements that are allowed to be displayed on the screen of the terminal at the same time may be limited. This not only can meet a user requirement, but also does not affect user experience because a quantity of floating elements on the interface is larger.

In another possible implementation, the method may further include: When determining that the quantity of floating elements displayed on the display of the first terminal is equal to N, the first terminal deletes, from the N floating elements, a floating element that is ranked first according to the preset arrangement rule, and displays the second floating element In a case in which an upper limit of the floating elements that are allowed to be displayed at the same time is set, when a quantity of floating elements on a current screen reaches the upper limit, the user triggers to generate of a new floating element, and can delete an earliest generated floating element, and then display the newly generated floating element

In another possible implementation, before the first terminal displays the second floating element on the display of the first terminal, the method may further include: The first terminal determines that no floating element whose type is the same as that of the second floating element exists in the floating elements displayed on the display of the first terminal.

In another possible implementation, the method may further include: When the first terminal determines that a third floating element whose type is the same as that of the second floating element exists in the floating elements displayed on the display of the first terminal, the first terminal combines the second floating element and the third floating element into a floating element group and then displays the floating element group on the display of the first terminal.

In another possible implementation, the method may further include: The first terminal displays the second floating element and the third floating element on the display of the first terminal after receiving a third operation for the floating element group.

In a case in which the user triggers to generate a new floating element, if an element whose type is the same as that of the newly generated floating element exists on a current interface, the newly generated floating element and the element can be automatically combined into a floating element group for display. If no element whose type is the same as that of the newly generated floating element exists on a current interface, the new floating element is displayed. In this way, floating elements of a same type can be automatically classified and displayed, to improve user experience. In addition, the floating element group can be expanded for the user to view.

In another possible implementation, the method may further include: The first terminal deletes the first floating element after receiving a fourth operation for the first floating element Alternatively, the first terminal deletes the first floating element after the first floating element is displayed on the display of the first terminal for preset duration.

In another possible implementation, one or more of the following identifiers are displayed on the first floating element an identifier of the application, message reminder information, and indication information. The indication information is used to indicate a type of the first floating element. In this way, it is convenient for the user to learn an application from which the floating element comes or the type of the floating element

In another possible implementation, when the first element is the text type element, the URL network address, the picture type element, or the file resource type element, after the first terminal displays the first floating element on the display, the method may further include: The first terminal displays an interface including an input box. The first terminal fills, after the first terminal receives a drag operation for the first floating element and releases the drag operation at a location of the input box, the input box with content corresponding to the first floating element. For a floating element of a text type, a picture type, a card type, a file resource type, or a video window type, the floating element can be dragged to the input box, to trigger the terminal to send the floating element to a friend by using an instant messaging application. This simplifies an interaction procedure and an operation step during cross-application information sharing, and improves human-machine interaction performance.

In another possible implementation, when the first element is the icon type element or the list contact type element, after the first terminal displays the first floating element on the display, the method may further include: The first terminal executes a first function after the first terminal receives a fifth operation for the first floating element The first function is the same as a function executed by the first terminal after the first terminal receives an operation of the user for the first element. In this way, floating elements that represent specific contacts and that are extracted from contact lists of different applications support a function, for example, file sending or call making, based on a specific service scenario. This simplifies an interaction procedure and an operation step when the terminal is triggered to perform the function, and improves human-machine interaction performance.

In another possible implementation, when the first element is the list contact type element, after the first terminal displays the first floating element on the display, the method may further include: The first terminal sends, after receiving a drag operation for a text, a URL network address, or a picture on the interface and releasing the drag operation at a location of the first floating element, the text, the URL network address, or the picture to a terminal of a contact corresponding to the first floating element. Content, for example, a file, the picture, a character, or a URL, can be dragged to a list contact type floating element to directly share the content with a corresponding contact This simplifies the interaction procedure and the operation step during cross-application information sharing, and improves human-machine interaction performance.

In another possible implementation, the object is an object on a first interface. The first interface includes a display interface of the first terminal and collaboration windows corresponding to M third terminals that establish collaboration with the first terminal, and M is an integer greater than or equal to 0. The first terminal is any one of N terminals, the first terminal establishes collaboration with at least one another terminal of the N terminals, and N is an integer greater than 2. The object is a target file on the first interface. After the first terminal receives the drag operation input by the user, the method may further include: The first terminal notifies the another terminal of the N terminals to listen to a release location of the drag operation. The release location includes an interface of any one of the N terminals or the collaboration window. The first terminal detects the release location of the drag operation. The target file is a file stored on the first terminal. That the first terminal sends drag data to the second terminal after determining that a drag intent of the user is cross-device drag includes: The first terminal sends the target file to the second terminal when detecting that the release location of drag operation is on a display interface of the second terminal or when detecting that the release location of the drag operation is in a collaboration window that is of the second terminal and that is on the another terminal of the N terminals. The second terminal includes a device that establishes no collaboration with the first terminal and that is of the N devices. During multi-device collaboration, each device can send or receive the target file without interrupting collaboration, to avoid, when file transfer on two devices between which collaboration is not established is performed, interrupting collaboration established with another device and then reestablishing new collaboration for file transfer. This implements file transfer across a plurality of devices, improves file transfer efficiency in multi-device collaboration, and simplifies a user operation.

In another possible implementation, the target file is the file stored on the first terminal, and a start location of the drag operation is on the display interface. The target file is a file stored on a start third terminal of the M third terminals, and the start location of the drag operation is in a collaboration window corresponding to the start third terminal.

In another possible implementation, the method may further include: The first terminal obtains file information of the target file. The file information includes a file name, file content, and file size information of the target file. The first terminal determines whether a device matching the release location meets a condition for receiving the target file. The first terminal determines, if the device meets the condition, that the device matching the release location receives a storage path of the target file.

In another possible implementation, that the first terminal sends the target file to the second terminal includes: The first terminal establishes a data transmission channel. The data transmission channel is used to transmit the file information of the target file. If the first terminal establishes a direct connection to the second terminal, the first terminal sends the file information to the storage path of the second terminal through the data transmission channel. If the first terminal establishes an indirect connection to the second terminal, the file information is sent to a relay device through the data transmission channel, and the file information is forwarded to the storage path of the second terminal by using the relay device. The relay device is a device that establishes a direct connection to the first terminal and a direct connection to the second terminal at the same time.

In another possible implementation, the target file is a file stored on a start third terminal of the M third terminals. That the first terminal sends drag data to the second terminal after determining that a drag intent of the user is cross-device drag includes: The first terminal controls, when it is detected that the release location of the drag operation is on the display interface of the second terminal or when it is detected that the release location of the drag operation is in the collaboration window that is on the another terminal of the N terminals and that is of the second terminal, the start third terminal to send the target file to the second terminal.

In another possible implementation, that the first terminal controls the start third terminal to send the target file to the second terminal includes: The first terminal establishes a data transmission channel. The data transmission channel is used to transmit the file information of the target file. If the start third terminal establishes a direct connection to the second terminal, the first terminal sends the file information to a storage path of the second terminal through the data transmission channel. If the start third terminal establishes an indirect connection to the second terminal, the first terminal sends the file information to a relay device through the data transmission channel, and the file information is forwarded to a storage path of the second terminal by using the relay device. The relay device is a device that establishes a direct connection to the start third terminal and a direct connection to the second terminal at the same time.

According to a second aspect, an embodiment of this application provides an object drag method, applied to a second terminal The second terminal is connected to a first terminal. The method may include: The second terminal receives drag data from the first terminal. The drag data is sent by the first terminal after the first terminal determines that a drag intent of a user to drag an object on a display of the first terminal is cross-device drag. The second terminal displays the object on a display of the second terminal based on the drag data.

In a possible implementation, that the second terminal displays the object on a display of the second terminal based on the drag data includes: The second terminal displays, based on the drag data, a first region of the object on the display of the second terminal when determining that the first region of the object is dragged out of the display of the first terminal. A second region that is of the object and that is displayed on the first terminal and the first region of the object displayed on the second terminal can implement complete presentation of content of the object.

In another possible implementation, the drag data includes first drag data and second drag data. The first region of the object displayed on the display of the second terminal dynamically changes with a change of the second drag data.

In another possible implementation, the method may further include: The second terminal receives a drag operation of the user for the first region of the object displayed on the display of the second terminal. The first region of the object displayed on the display of the second terminal dynamically changes with the drag operation.

In another possible implementation, after the second terminal receives the drag operation of the user for the first region of the object displayed on the display of the second terminal, the method may further include: The second terminal sends third drag data to the first terminal. The third drag data includes coordinate information of a first corner of the object, and is used by the first terminal to dynamically adjust the second region that is of the object and that is displayed on the display of the first terminal.

In another possible implementation, the object is a window or a partial region of a window, and the window includes an interface of an application. The first drag data includes the interface of the application and rectangle information of the object The second drag data includes the coordinate information of the first corner of the object

In another possible implementation, after the second terminal displays, based on the drag data, the first region of the object on the display of the second terminal when determining that the first region of the object is dragged out of the display of the first terminal, the method may further include: The second terminal receives data from the first terminal The data is sent by the first terminal after the user inputs a drag release operation, and the drag release operation is used to indicate that drag for the object ends. The second terminal displays the interface of the application on the display of the second terminal based on the data, or displays a partial region of the interface of the application on the display of the second terminal based on the data and the drag data.

In another possible implementation, the window is an application window or a freeform small window.

In another possible implementation, the object is a video component, a floating window, a picture-in-picture, or a freeform small window. The first drag data includes rectangle information of the object. The second drag data includes coordinate information of a first corner of the object.

In another possible implementation, the method may further include: The second terminal receives screen recording data from the first terminal. That the second terminal displays, based on the drag data, a first region of the object on the display of the second terminal when determining that the first region of the object is dragged out of the display of the first terminal includes: The second terminal displays, based on the screen recording data, the first region of the object on the display of the second terminal when determining, based on the drag data, that the first region of the object is dragged out of the display of the first terminal.

In another possible implementation, after the second terminal displays, based on the drag data, the first region of the object on the display of the second terminal when determining that the first region of the object is dragged out of the display of the first terminal, the method may further include: The second terminal receives indication information from the first terminal. The indication information is sent by the first terminal after the user inputs a drag release operation. The second terminal displays an entire region of the object on the display of the second terminal in response to the indication information based on the screen recording data.

In another possible implementation, the object is a user interface UI control on a first interface, or the object is a partial region of a first interface, and the partial region includes a UI control. That the second terminal displays, based on the drag data, a first region of the object on the display of the second terminal when determining that the first region of the object is dragged out of the display of the first terminal includes: The second terminal displays, based on the drag data, a first region of a shadow of the object on the display of the second terminal when determining that the first region of the object is dragged out of the display of the first terminal. The first drag data includes rectangle information of the shadow, the shadow, and an identifier of the UI control. The second drag data includes coordinate information of a first corner of the shadow.

In another possible implementation, after the second terminal displays, based on the drag data, the first region of the object on the display of the second terminal when determining that the first region of the object is dragged out of the display of the first terminal, the method may further include: The second terminal receives an instruction stream of the first interface from the first terminal. The second terminal displays the UI control on the display of the second terminal based on the instruction stream and the identifier of the UI control. In another possible implementation, a layout of the UI control on the display of the second terminal is different from a layout of the UI control on the first interface.

In another possible implementation, before the second terminal receives the drag data from the first terminal, the method may further include: The second terminal sends, to the first terminal, data of a drag operation input by the user by using an input device of the second terminal. The drag operation is used to initiate drag for the object displayed by the first terminal.

In another possible implementation, that the second terminal displays the object on a display of the second terminal based on the drag data includes: The second terminal displays, on the display of the second terminal based on the drag data and the drag operation, an animation in which the object moves with a second cursor.

In another possible implementation, the object is an icon of an application, or the object is a window, and the window includes an interface of an application. When the object is the icon of the application, the drag data includes the icon of the application. When the object is the window, the drag data includes the interface of the application.

In another possible implementation, after the second terminal receives the drag data from the first terminal, the method may further include: The second terminal receives a drag release operation input by the user by using the input device of the second terminal. The second terminal displays the interface of the application on the display of the second terminal in response to the drag release operation.

In another possible implementation, that the second terminal displays the interface of the application on the display of the second terminal includes: The second terminal sends an indication message to the first terminal. The indication message is used to indicate that drag for the object ends. The second terminal receives data from the first terminal. The second terminal displays the interface of the application on the display of the second terminal based on the data.

In another possible implementation, that the second terminal displays, on the display of the second terminal based on the drag data and the drag operation, an animation in which the object moves with a second cursor includes: The second terminal displays, on the display of the second terminal based on the drag data and the drag operation, an animation in which a shadow of the object moves with the second cursor.

In another possible implementation, the object is a text, a file, or a folder, and the drag data includes drag event content and a bitmap of the shadow. When the object is the text, the drag event content includes the text When the object is the file or the folder, the drag event content is a file path.

In another possible implementation, before the second terminal sends, to the first terminal, data of the drag operation input by the user by using the input device of the second terminal, the method may further include: The second terminal determines that the second cursor slides out of an edge of the display of the second terminal.

In another possible implementation, before the second terminal determines that the second cursor slides out of the edge of the display of the second terminal, the method may further include: The second terminal receives an operation that is of moving the second cursor and that is input by the user by using the input device of the second terminal. In response to the operation of moving the second cursor, the second terminal displays, on the display of the second terminal, an animation in which the second cursor moves.

In another possible implementation, after the second terminal determines that the second cursor slides out of the edge of the display of the second terminal, the method may further include: The second terminal sends first shuttle state information to the first terminal. The first shuttle state information is used to indicate that a shuttle starts.

In another possible implementation, after the second terminal determines that the second cursor slides out of the edge of the display of the second terminal, the method may further include: The second terminal sends, to the first terminal, data of an operation that is of moving a first cursor and that is input by the user by using the input device of the second terminal. The data of the operation is used by the first terminal to display, on the display of the first terminal, an animation in which the first cursor moves.

In another possible implementation, the drag operation includes a press operation and a movement operation. That the second terminal sends, to the first terminal, data of a drag operation input by the user by using an input device of the second terminal includes: The second terminal intercepts a press event after the user performs the press operation by using the input device of the second terminal. The second terminal sends, to the first terminal, a first operation parameter included in the press event. The second terminal intercepts a movement event after the user performs the movement operation by using the input device of the second terminal. The second terminal sends, to the first terminal, a second operation parameter included in the movement event. The first operation parameter and the second operation parameter are respectively used by the first terminal to simulate the press event and the movement event, and are further used to indicate to initiate drag for the object.

In another possible implementation, before the second terminal displays, on the display of the second terminal based on the drag data and the drag operation, the animation in which the object moves with the second cursor, the method may further include: The second terminal receives second shuttle state information from the first terminal. The second shuttle state information is used to indicate that the shuttle ends.

In another possible implementation, after the second terminal receives the second shuttle state information from the first terminal, the method may further include: The second terminal cancels interception of an input event. That the second terminal displays, on the display of the second terminal based on the drag data and the drag operation, an animation in which the object moves with a second cursor includes: The second terminal receives a movement event after the user performs a movement operation by using the input device of the second terminal. The second terminal generates a press event. The second terminal displays, on the display of the second terminal based on the movement event, the press event, and the drag data, the animation in which the object moves with the second cursor.

In another possible implementation, after the second terminal determines that the second cursor slides out of the edge of the display of the second terminal, the method may further include: The second terminal displays an invisible window. Transparency of the invisible window is greater than a threshold, and the invisible window is configured to initiate a drag event.

In another possible implementation, that the second terminal displays the object on a display of the second terminal based on the drag data includes: The second terminal displays, on the display of the second terminal based on the drag data, the object dragged from the first terminal.

In another possible implementation, after the second terminal displays, on the display of the second terminal, the object dragged from the first terminal, the method may further include: The second terminal displays a second cursor on the object. The second terminal receives a movement operation input by the user by using an input device of the first terminal. The second terminal displays, on the display of the second terminal based on the movement operation, an animation in which the object moves with the second cursor. The drag data and the movement operation are sent by the first terminal to the second terminal after the first terminal determines, when the object moves with a first cursor on the display of the first terminal, that the object is dragged out of an edge of the display of the first terminal, and are used to initiate a drag event for the object.

In another possible implementation, before the second terminal displays, on the display of the second terminal, the object dragged from the first terminal, the method may further include: The second terminal receives shuttle state information from the first terminal. The shuttle state information is used to indicate that a shuttle starts.

In another possible implementation, the method may further include: The second terminal generates a press operation. That the second terminal displays, on the display of the second terminal based on the movement operation, an animation in which the object moves with the second cursor includes: The second terminal displays, on the display of the second terminal based on the movement operation, the press operation, and the drag data, the animation in which the object moves with the second cursor.

In another possible implementation, that the second terminal generates a press operation includes: The second terminal simulates a press event based on an operation parameter of the press operation. That the second terminal receives a movement operation input by the user by using an input device of the first terminal includes: The second terminal receives an operation parameter from the first terminal, and simulates a movement event based on the operation parameter. The operation parameter is an operation parameter included in the movement event received by the first terminal after the user performs the movement operation by using the input device of the first terminal. That the second terminal displays, on the display of the second terminal based on the movement operation, the press operation, and the drag data, the animation in which the object moves with the second cursor includes: The second terminal displays, on the display of the second terminal in response to the press event and the movement event based on the drag data, the animation in which the object moves with the second cursor.

In another possible implementation, that the second terminal displays, on the display of the second terminal, the object dragged from the first terminal includes: The second terminal displays, on the display of the second terminal, a shadow of the object dragged from the first terminal. That the second terminal displays, on the display of the second terminal based on the movement operation, an animation in which the object moves with the second cursor includes: The second terminal displays, on the display of the second terminal based on the movement operation, an animation in which the shadow of the object moves with the second cursor.

In another possible implementation, the object is a text, a file, or a folder, and the drag data includes drag event content and a bitmap of the shadow. When the object is the text, the drag event content includes the text. When the object is the file or the folder, the drag event content is a file path.

In another possible implementation, after the second terminal receives the drag data from the first terminal, the method further includes: The second terminal creates an invisible activity. The invisible activity has a view control whose transparency is greater than a threshold, and the view control is used to initiate the drag event.

In another possible implementation, before the second terminal receives the drag data from the first terminal, the method may further include: The second terminal receives a determining request sent by the first terminal. The determining request carries a data type of the to-be-transmitted object, and the determining request is used to request the second terminal to determine whether the object of the data type can be transmitted to the second terminal. The second terminal obtains a determining result based on the data type, and sends the determining result to the first terminal, so that the first terminal device displays the determining result.

In another possible implementation, the method may further include: The second terminal returns a current display interface of the second terminal to the first terminal when receiving a display state request sent by the first terminal, so that the first terminal determines coordinates of a stay location of a drag operation on the display interface. The drag operation is an operation used by the first terminal to initiate a process of transmitting the object to the second terminal. The determining request carries the coordinates. That the second terminal obtains a determining result based on the data type includes: The second terminal obtains the determining result based on the data type and the coordinates.

In another possible implementation, the method may further include: The second terminal processes, when receiving the object sent by the first terminal, the object based on one or more of the data type, a local storage status, an application service installed on the second terminal, and the coordinates.

In another possible implementation, that the second terminal processes the object based on one or more of the data type, a local storage status, an application service installed on the second terminal, and the coordinates includes: The second terminal opens, when the local storage status is having no storage capability, the object based on the application service installed on the second terminal. The second terminal locally stores the object when the local storage status is having a storage capability.

In another possible implementation, that the second terminal locally stores the object when the local storage status is having a storage capability includes: When the local storage status is having the storage capability and the data type is not allowed to be inserted into a corresponding location that is of the coordinates and that is on the display interface, the second terminal locally stores the object, and selects an application based on the data type, to open the object. When the local storage status is having the storage capability and the data type is allowed to be inserted into a corresponding location that is of the coordinates and that is on the display interface, the second terminal locally stores the object, and opens the object on the display interface based on the coordinates.

In another possible implementation, the method may further include: The second terminal temporarily stores, when receiving the object sent by the first terminal, the object locally if the second terminal has the storage capability. The second terminal displays a processing option. The second terminal processes the object based on a selection operation for the processing option.

In another possible implementation, the method may further include: The second terminal displays, when receiving a display instruction sent by the first terminal, a first image of the object according to the display instruction and based on a location relationship between the second terminal and the first terminal. A second image that is of the object and that is displayed on the first terminal and the first image of the object displayed on the second terminal can be spliced into a complete image of the object.

In another possible implementation, before the second terminal receives the drag data from the first terminal, the method may further include: The second terminal receives a first photographing parameter of the first terminal sent by the first terminal. The first photographing parameter of the first terminal is a photographing parameter obtained by the first terminal through self-metering. The second terminal obtains a first photographing parameter of the second terminal. The first photographing parameter of the second terminal is a photographing parameter obtained by the second terminal through self-metering. The second terminal obtains a second photographing parameter of the second terminal based on the first photographing parameter of the first terminal and the first photographing parameter of the second terminal. The second photographing parameter of the second terminal is used by the second terminal to perform synchronous photographing. The second terminal performs the synchronous photographing with the first terminal. The second terminal sends a result of the synchronous photographing to the first terminal. The result of the synchronous photographing is used by the first terminal to determine relative locations of the first terminal and the second terminal.

In another possible implementation, the first terminal and the second terminal are further connected to at least one second terminal. That the second terminal obtains a second photographing parameter of the second terminal based on the first photographing parameter of the first terminal and the first photographing parameter of the second terminal includes: The second terminal obtains the second photographing parameter of the second terminal based on the first photographing parameter of the first terminal, the first photographing parameter of the second terminal, and first photographing parameters of a preset quantity of second terminals of the at least one second terminal.

In another possible implementation, the result of the synchronous photographing is feature point description information obtained by the second terminal by performing feature point detection on a photo obtained by the second terminal by performing the synchronous photographing.

In another possible implementation, after the second terminal performs the synchronous photographing with the first electronic device, the method further includes: If the result of the synchronous photographing does not meet a preset condition, the second terminal displays prompt information for assisting in photographing The preset condition is that a quantity of feature points whose feature point intensity is greater than a first threshold in the result of the synchronous photographing is greater than a second threshold.

In another possible implementation, after the second terminal displays the interface of the application on the display of the second terminal, the method may further include: The second terminal receives a second operation input by the user by using the input device of the second terminal. The second operation is used to move the second cursor on the display of the second terminal. When the second cursor moves to first content on the interface of the application, a cursor style of the second cursor is a first style, and/or a display manner of the first content is changed from a first manner to a second manner. When the second cursor moves to second content on the interface of the application, the cursor style of the second cursor is a second style, and/or a display manner of the second content is changed from a third manner to a fourth manner.

In another possible implementation, the interface of the application is displayed in a partial region of the display of the second terminal. The method may further include: The second terminal displays, on the display of the second terminal in response to the second operation, an animation in which the second cursor moves. In a process in which the second cursor moves on the display of the second terminal, when determining that the second cursor enters the interface of the application, the second terminal sends, to the first terminal, an initial coordinate location at which the second cursor enters the interface of the application, and sends data of the second operation to the first terminal. The initial coordinate location is a coordinate location of a first corner of the second cursor relative to the interface of the application when the second cursor enters the interface of the application, and is used by the first terminal to display a first cursor on the display of the first terminal. The data of the second operation is used to move the first cursor on the display of the first terminal, so that when the second cursor moves to the first content, the first cursor moves to content that corresponds to the first content and that is in the window displayed by the first terminal, and when the first cursor moves to the content corresponding to the first content, a cursor style of the first cursor is the first style, and so that when the second cursor moves to the second content, the first cursor moves to content that corresponds to the second content and that is in the window, and when the first cursor moves to the content corresponding to the second content, the cursor style of the first cursor is the second style. When the second cursor moves to the first content on the interface of the application, the second terminal receives a cursor type of the first style from the first terminal, and displays the second cursor based on the cursor type of the first style, so that the second cursor is displayed in the first style. When the second cursor moves to the second content on the interlace of the application, the second terminal receives a cursor type of the second style from the first terminal, and displays the second cursor based on the cursor type of the second style, so that the second cursor is displayed in the second style.

In another possible implementation, when the first cursor moves to the content corresponding to the first content, a display manner of the content that corresponds to the first content and that is in the window is changed from the first manner to the second manner. The method may further include: The second terminal updates the interface of the application after the second cursor moves to the first content on the interface of the application The display manner of the first content on the interface of the application before updating is the first manner, and the display manner of the first content on the interface of the application after updating is the second manner. When the first cursor moves to the content corresponding to the second content, a display manner of the content that corresponds to the second content and that is in the window is changed from the third manner to the fourth manner. The method may further include: The second terminal updates the interface of the application after the second cursor moves to the second content on the interface of the application. The display manner of the second content on the interface of the application before updating is the third manner, and the display manner of the second content on the interface of the application after updating is the fourth manner.

In another possible implementation, transparency of the first cursor is greater than a threshold.

In another possible implementation, the method may further include: The second terminal receives drag data from another first terminal. That the second terminal displays the object on a display of the second terminal based on the drag data includes: The second terminal displays a plurality of objects on the first terminal based on drag data received from a plurality of first terminals. The plurality of objects are in a one-to-one correspondence with the plurality of first terminals. The second terminal can display, on the display of the first terminal based on the drag data sent by plurality of first terminals, the plurality of objects dragged from the first terminal. The plurality of objects are in a one-to-one correspondence with a plurality of second terminals. Many-to-one projection from a plurality of projection source ends to one projection destination end is implemented. In this way, for example, in a scenario, for example, a demonstration in a conference or a launch event, a plurality of mobile phones and tablet computers can project content (for example, a PPT or a played video) on displays of the plurality of mobile phones and tablet computers to a same large-screen device for presentation, to implement many-to-one projection. This improves usage efficiency of collaboratively using a plurality of devices, and improves user experience.

In another possible implementation, the method may further include: The second terminal creates a plurality of drawing components. The plurality of drawing components are in a one-to-one correspondence with the plurality of first terminals, and the drawing component is a view or a canvas. That the second terminal displays a plurality of objects on the first terminal based on drag data received from a plurality of first terminals includes: The second terminal respectively draws, on the plurality of drawing components based on the drag data received from the plurality of first terminals, the objects corresponding to the first terminals, to display the plurality of objects on the second terminal. The view or the canvas corresponding to the first terminal is created, and is used to draw the object corresponding to the first terminal, to prepare for implementing many-to-one projection.

In another possible implementation, before the second terminal displays the plurality of objects on the first terminal based on the drag data received from the plurality of first terminals, the method may further include: The second terminal configures a plurality of decoding parameters. The plurality of decoding parameters are in a one-to-one correspondence with the plurality of first terminals. The second terminal decodes, based on the plurality of decoding parameters, the drag data received from the corresponding first terminals. Corresponding decoding parameters are configured for different first terminals, and are used to decode corresponding data, to implement multichannel decoding.

In another possible implementation, the method may further include: The second terminal obtains connection information of the plurality of first terminals. The connection information is used by the second terminal to establish a connection to the corresponding first terminal. That the plurality of drawing components are in a one-to-one correspondence with the plurality of first terminals includes: The plurality of drawing components are in a one-to-one correspondence with the connection information of the plurality of first terminals. That the plurality of decoding parameters are in a one-to-one correspondence with the plurality of first terminals includes: The plurality of decoding parameters are in a one-to-one correspondence with the connection information of the plurality of first terminals.

According to a third aspect, an embodiment of this application provides a drag apparatus, used in a first terminal. The drag apparatus may include a processor and a memory configured to store instructions executable by the processor. When the processor is configured to execute the instructions, the drag apparatus is enabled to implement the method according to any one of the first aspect or the possible implementations of the first aspect.

According to a fourth aspect, an embodiment of this application provides a drag apparatus, used in a second terminal. The drag apparatus may include a processor and a memory configured to store instructions executable by the processor. When the processor is configured to execute the instructions, the drag apparatus is enabled to implement the method according to any one of the second aspect or the possible implementations of the second aspect.

According to a fifth aspect, an embodiment of this application provides a computer-readable storage medium. The computer-readable storage medium stores computer program instructions. When the computer program instructions are executed by an electronic device, the electronic device is enabled to implement the method according to any one of the first aspect or the possible implementations of the first aspect, or the second aspect or the possible implementations of the second aspect.

According to a sixth aspect, an embodiment of this application provides a drag system, including a first terminal and a second terminal. The first terminal includes the drag apparatus according to the third aspect, and the second terminal includes the drag apparatus according to the fourth aspect.

According to a seventh aspect, an embodiment of this application provides an electronic device (for example, the first terminal or the second terminal). The electronic device includes a display, one or more processors, and a memory. The display, the processor, and the memory are coupled, The memory is configured to store computer program code, and the computer program code includes computer instructions. When the computer instructions are executed by the electronic device, the electronic device is enabled to perform the method according to any one of the first aspect or the possible implementations of the first aspect, or the second aspect or the possible implementations of the second aspect.

According to an eighth aspect, an embodiment of this application provides a computer program product, including computer-readable code or a non-volatile computer-readable storage medium carrying computer-readable code. When the computer-readable code is run on an electronic device (for example, the first terminal or the second terminal), a processor in the electronic device performs the method according to any one of the first aspect or the possible implementations of the first aspect, or the second aspect or the possible implementations of the second aspect.

It may be understood that, for beneficial effects that can be achieved by the method according to any one of the second aspect and the possible implementations of the second aspect, the drag apparatus according to the third aspect, the drag apparatus according to the fourth aspect, the computer-readable storage medium according to the fifth aspect, the drag system according to the sixth aspect, the electronic device according to the seventh aspect, and the computer program product according to the eighth aspect, refer to the beneficial effects in any one of the first aspect and the possible implementations of the first aspect Details are not described herein again.

### BRIEF DESCRIPTION OF DRAWINGS

FIG. 1A and FIG. 1B are a simplified schematic diagram of a system architecture according to an embodiment of this application;
FIG. 1C is a schematic flowchart of drag according to an embodiment of this application;
FIG. 2 is a schematic diagram of a structure of a mobile phone according to an embodiment of this application;
FIG. 3 is a schematic composition diagram of a software architecture according to an embodiment of this application;
FIG. 4 is a schematic flowchart of an object drag method according to an embodiment of this application;
FIG. 5A(a) to FIG. 5A(c) are a schematic diagram of a cross-device object drag interface according to an embodiment of this application;
FIG. 5B is a schematic diagram of another cross-device object drag interface according to an embodiment of this application;
FIG. 6A is a schematic diagram of a drag sensing region according to an embodiment of this application;
FIG. 6B is a schematic diagram of a display coordinate system according to an embodiment of this application;
FIG. 6C is a schematic diagram in which a window overflows a device screen according to an embodiment of this application;
FIG. 7 is a schematic diagram of a recommended device list according to an embodiment of this application;
FIG. 8A(a) and FIG. 8A(b) are a schematic diagram of still another cross-device object drag interface according to an embodiment of this application;
FIG. 8B is a schematic diagram of still another cross-device object drag interface according to an embodiment of this application;
FIG. 9(a) and FIG. 9 (b) are a schematic diagram of still another cross-device object drag interface according to an embodiment of this application;
FIG. 10 is a schematic diagram of still another cross-device object drag interface according to an embodiment of this application;
FIG. 11 is a schematic diagram of still another cross-device object drag interface according to an embodiment of this application;
FIG. 12 is a schematic diagram of still another cross-device object drag interface according to an embodiment of this application;
FIG. 13 is a schematic diagram of still another cross-device object drag interface according to an embodiment of this application;
FIG. 14 is a schematic diagram of still another cross-device object drag interface according to an embodiment of this application;
FIG. 15 is a schematic diagram of still another cross-device object drag interface according to an embodiment of this application;
FIG. 16 is a schematic diagram of still another cross-device object drag interface according to an embodiment of this application;
FIG. 17 is a schematic flowchart of another object drag method according to an embodiment of this application;
FIG. 18(a) to FIG. 18(c) are a schematic diagram of still another cross-device object drag interface according to an embodiment of this application;
FIG. 19 is a schematic diagram of still another cross-device object drag interface according to an embodiment of this application;
FIG. 20 is a schematic diagram of still another cross-device object drag interface according to an embodiment of this application;
FIG. 21 is a schematic flowchart of still another object drag method according to an embodiment of this application;
FIG. 22(a) to FIG. 22(d) are a schematic diagram of still another cross-device object drag interface according to an embodiment of this application;
FIG. 23 is a schematic diagram of still another cross-device object drag interface according to an embodiment of this application;
FIG. 24 is a schematic diagram of still another cross-device object drag interface according to an embodiment of this application;
FIG. 25 is a schematic diagram of still another cross-device object drag interface according to an embodiment of this application;
FIG. 26 is a schematic diagram of still another cross-device object drag interface according to an embodiment of this application;
FIG. 27(a) to FIG. 27(d) are a schematic diagram of still another cross-device object drag interface according to an embodiment of this application;
FIG. 28(a) to FIG. 28(c) are a schematic diagram of still another cross-device object drag interface according to an embodiment of this application;
FIG. 29 is a schematic flowchart of a device recommendation method according to an embodiment of this application;
FIG. 30 is a schematic diagram of a scenario according to an embodiment of this application;
FIG. 31(a) to FIG. 31(f) are a schematic diagram of a device scoring model according to an embodiment of this application;
FIG. 32(a) to FIG. 32(f) are a schematic diagram of a service scoring model according to an embodiment of this application;
FIG. 33(a) to FIG. 33(f) is a schematic diagram of a superposition result of a device scoring model and a service scoring model according to an embodiment of this application;
FIG. 34 is a schematic diagram of a display interface according to an embodiment of this application;
FIG. 35A and FIG. 35B are a schematic flowchart of another device recommendation method according to an embodiment of this application;
FIG. 36 is a schematic diagram of another display interface according to an embodiment of this application;
FIG. 37 is a schematic diagram of still another display interface according to an embodiment of this application;
FIG. 38 is a schematic architectural diagram of a multi-device location measurement system according to an embodiment of this application;
FIG. 39A to FIG. 39D are a schematic diagram of some human-machine interaction in a splicing screen display scenario according to an embodiment of this application;
FIG. 40A and FIG. 40B are a schematic diagram of some human-machine interaction in a cross-device drag scenario according to an embodiment of this application;
FIG. 41 is a schematic diagram of a man-machine interaction according to an embodiment of this application;
FIG. 42 is a schematic diagram of still another man-machine interaction according to an embodiment of this application;
FIG. 43 is a schematic diagram of still another man-machine interaction according to an embodiment of this application;
FIG. 44A and FIG. 44B are a schematic flowchart of a multi-device location measurement method according to an embodiment of this application;
FIG. 45 is a schematic diagram of still another display interface according to a related technology,
FIG. 46 is a schematic diagram of still another display interface according to a related technology;
FIG. 47 is a schematic flowchart of a projection method according to an embodiment of this application;
FIG. 48 is a schematic diagram of still another display interface according to an embodiment of this application;
FIG. 49 is a schematic diagram of compositing an element on a virtual display according to an embodiment of this application;
FIG. 50 is a schematic diagram of processing a layer on a virtual display according to an embodiment of this application;
FIG. 51 is another schematic diagram of processing a layer on a virtual display according to an embodiment of this application;
FIG. 52 is still another schematic diagram of processing a layer on a virtual display according to an embodiment of this application;
FIG. 53 is a schematic diagram of still another display interface according to an embodiment of this application;
FIG. 54 is a schematic diagram of still another display interface according to an embodiment of this application;
FIG. 55 is a schematic diagram of still another display interface according to an embodiment of this application;
FIG. 56A and FIG. 56B are a schematic diagram of still another display interface according to an embodiment of this application;
FIG. 57(a) and FIG. 57(b) are a schematic diagram of still another display interface according to an embodiment of this application;
FIG. 58 is a simplified schematic diagram of still another system architecture according to an embodiment of this application;
FIG. 59 is a schematic composition diagram of still another software architecture according to an embodiment of this application;
FIG. 60A and FIG. 60B are a schematic flowchart of still another object drag method according to an embodiment of this application;
FIG. 61 is a schematic diagram of a coordinate system on a display according to an embodiment of this application;
FIG. 62 is a schematic diagram of still another cross-device object drag interface according to an embodiment of this application;
FIG. 63 is a schematic diagram of still another cross-device object drag interface according to an embodiment of this application;
FIG. 64 is a schematic diagram of still another cross-device object drag interface according to an embodiment of this application;
FIG. 65 is a schematic diagram of still another cross-device object drag interface according to an embodiment of this application;
FIG. 66(a) and FIG. 66(b) are a schematic diagram of still another cross-device object drag interface according to an embodiment of this application;
FIG. 67A and FIG. 67B are a schematic flowchart of still another object drag method according to an embodiment of this application;
FIG. 68 is a schematic diagram of still another cross-device object drag interface according to an embodiment of this application;
FIG. 69 is a schematic diagram of still another cross-device object drag interface according to an embodiment of this application;
FIG. 70 is a schematic diagram of still another cross-device object drag interface according to an embodiment of this application;
FIG. 71 is a schematic diagram of still another cross-device object drag interface according to an embodiment of this application;
FIG. 72 is a schematic diagram of still another cross-device object drag interface according to an embodiment of this application;
FIG. 73 is a schematic flowchart of still another object drag method according to an embodiment of this application,
FIG. 74 is a schematic diagram of still another cross-device object drag interface according to an embodiment of this application;
FIG. 75 is a schematic diagram of a data structure of a drag event at a Windows end according to an embodiment of this application;
FIG. 76 is a schematic diagram of a data structure of a drag event at an Android end according to an embodiment of this application;
FIG. 77 is a schematic diagram of still another cross-device object drag interface according to an embodiment of this application;
FIG. 78 is a schematic flowchart of still another object drag method according to an embodiment of this application;
FIG. 79 is a schematic diagram of still another cross-device object drag interface according to an embodiment of this application;
FIG. 80 is a schematic diagram of still another cross-device object drag interface according to an embodiment of this application;
FIG. 81 is a schematic diagram of a software architecture of a terminal according to an embodiment of this application;
FIG. 82A and FIG. 82B are flowcharts of a data transmission method according to an embodiment of this application;
FIG. 83 is a schematic diagram of an application scenario according to an embodiment of this application;
FIG. 84A and FIG. 84B show examples of manners of displaying a determining result according to an embodiment of this application;
FIG. 85 is a schematic diagram of a field included in a dragevent event according to an embodiment of this application;
FIG. 86 is a schematic diagram of another application scenario according to an embodiment of this application;
FIG. 87A and FIG. 87B are flowcharts of another data transmission method according to an embodiment of this application;
FIG. 87C is a flowchart of interaction in an application scenario according to an embodiment of this application;
FIG. 88A is a flowchart of still another data transmission method according to an embodiment of this application;
FIG. 88B is a flowchart of still another data transmission method according to an embodiment of this application;
FIG. 88C is a flowchart of still another data transmission method according to an embodiment of this application;
FIG. 88D-1 to FIG. 88E-2 are a schematic diagram of a display interface of a terminal according to an embodiment of this application;
FIG. 88F is a schematic diagram of a specific application scenario according to an embodiment of this application;
FIG. 88G is a schematic diagram of a display interface of another terminal according to an embodiment of this application;
FIG. 89 is a schematic diagram of still another application scenario according to an embodiment of this application;
FIG. 90A is a schematic diagram of a display interface of a first terminal according to an embodiment of this application;
FIG. 90B is a schematic diagram of a display interface of another first terminal according to an embodiment of this application;
FIG. 90C is a schematic diagram of a display interface of still another first terminal according to an embodiment of this application;
FIG. 90D is a schematic diagram of an application scenario of a display interface of a first terminal according to an embodiment of this application;
FIG. 91A is a flowchart of still another data transmission method according to an embodiment of this application;
FIG. 91B is a flowchart of still another data transmission method according to an embodiment of this application;
FIG. 92Ais a schematic diagram of still another application scenario according to an embodiment of this application;
FIG. 92B is a schematic diagram of cross-screen display according to an embodiment of this application;
FIG. 93A is a flowchart of still another data transmission method according to an embodiment of this application;
FIG. 93B is a flowchart of still another data transmission method according to an embodiment of this application;
FIG. 94A and FIG. 94B is a schematic diagram of still another application scenario according to an embodiment of this application;
FIG. 95 is a flowchart of still another data transmission method according to an embodiment of this application;
FIG. 96A and FIG. 96B are a schematic flowchart of a display method according to an embodiment of this application;
FIG. 97 is a schematic diagram of still another display interface according to an embodiment of this application;
FIG. 98(a) and FIG. 98(b) are a schematic diagram of still another display interface according to an embodiment of this application;
FIG. 99(a) and FIG. 99(b) are a schematic diagram of still another display interface according to an embodiment of this application;
FIG. 100(a) and FIG. 100(b) are a schematic diagram of still another display interface according to an embodiment of this application;
FIG. 101A and FIG. 101B are a schematic flowchart of another display method according to an embodiment of this application;
FIG. 102(a) and FIG. 102(b) are a schematic diagram of still another display interface according to an embodiment of this application;
FIG. 103(a) and FIG. 103(b) are a schematic diagram of still another display interface according to an embodiment of this application;
FIG. 104 is a schematic diagram of a display interface in a related technology according to an embodiment of this application;
FIG. 105 is a schematic flowchart of an interface display method according to an embodiment of this application;
FIG. 106 is a schematic diagram of still another display interface according to an embodiment of this application;
FIG. 107 is a schematic diagram of still another display interface according to an embodiment of this application;
FIG. 108 is a schematic diagram of another display coordinate system according to an embodiment of this application;
FIG. 109 is a schematic diagram of still another display coordinate system according to an embodiment of this application;
FIG. 110 is a schematic diagram of still another display interface according to an embodiment of this application;
FIG. 111 is a schematic diagram of a cursor style according to an embodiment of this application;
FIG. 112 is a schematic diagram of still another display interface according to an embodiment of this application;
FIG. 113 is a schematic diagram of still another display interface according to an embodiment of this application;
FIG. 114(a) and FIG. 114(b) are a schematic diagram of a display interface in a related technology according to an embodiment of this application;
FIG. 115(a) and FIG. 115(b) are a schematic diagram of a display interface in another related technology according to an embodiment of this application;
FIG. 116(a) to FIG. 116(c) are a schematic diagram of a display interface in still another related technology according to an embodiment of this application;
FIG. 117(a) and FIG. 117(b) are a schematic diagram of a display interface in still another related technology according to an embodiment of this application;
FIG. 118 is a schematic composition diagram of a software architecture of still another terminal according to an embodiment of this application;
FIG. 119 is a schematic flowchart of a window display method according to an embodiment of this application;
FIG. 120A is a schematic diagram of still another display coordinate system according to an embodiment of this application;
FIG. 120B is a schematic diagram of a display coordinate system according to an embodiment of this application;
FIG. 121(a) to FIG. 121(c) are a schematic diagram of still another display interface according to an embodiment of this application;
FIG. 122A(a) and FIG. 122A(b) are a schematic diagram of still another display interface according to an embodiment of this application;
FIG. 122B(a) and FIG. 122B(b) are a schematic diagram of still another display interface according to an embodiment of this application;
FIG. 123 is a schematic diagram of still another display interface according to an embodiment of this application;
FIG. 124 is a schematic diagram of still another display interface according to an embodiment of this application;
FIG. 125 is a schematic diagram of a dynamic small window according to an embodiment of this application;
FIG. 126 is a schematic diagram of display of a dynamic small window according to an embodiment of this application;
FIG. 127 is a schematic diagram of display of another dynamic small window according to an embodiment of this application;
FIG. 128 is a schematic diagram of display of still another dynamic small window according to an embodiment of this application;
FIG. 129 is a schematic diagram of display of still another dynamic small window according to an embodiment of this application;
FIG. 130A and FIG. 130B are a schematic flowchart of another window display method according to an embodiment of this application;
FIG. 131(a) and FIG. 131(b) are a schematic diagram of still another display interface according to an embodiment of this application;
FIG. 132A(a) to FIG. 132A(c) are a schematic diagram of still another display interface according to an embodiment of this application;
FIG. 132B(a) to FIG. 132B(e) are a schematic diagram of still another display interface according to an embodiment of this application;
FIG. 133A(a) and FIG. 133A(b) are a schematic diagram of still another display interface according to an embodiment of this application:
FIG. 133B is a schematic diagram of still another display interface according to an embodiment of this application;
FIG. 134(a) to FIG. 134(c) are a schematic diagram of still another display interface according to an embodiment of this application;
FIG. 135(a) to FIG. 135(c) are a schematic diagram of another dynamic small window according to an embodiment of this application;
FIG. 136A(a) to FIG. 136A(c) are a schematic diagram of still another dynamic small window according to an embodiment of this application;
FIG. 136B(a) to FIG. 136B(d) are a schematic diagram of still another display interface according to an embodiment of this application;
FIG. 136C(a) to FIG. 136C(e) are a schematic diagram of still another display interface according to an embodiment of this application;
FIG. 137(a) to FIG. 137(e) are a schematic diagram of still another display interface according to an embodiment of this application;
FIG. 138(a) to FIG. 138(d) are a schematic diagram of still another display interface according to an embodiment of this application;
FIG. 139(a) to FIG. 139(c) are a schematic diagram of still another display interface according to an embodiment of this application;
FIG. 140(a) and FIG. 140(b) are a schematic diagram of still another display interface according to an embodiment of this application;
FIG. 141(a) and FIG. 141(b) are a schematic diagram of a display interface in a related technology according to an embodiment of this application;
FIG. 142 is a schematic composition diagram of a software architecture of still another terminal according to an embodiment of this application;
FIG. 143A(a) to FIG. 143A(c) are a schematic diagram of still another display interface according to an embodiment of this application;
FIG. 143B(a) to FIG. 143B(c) are a schematic diagram of still another display interface according to an embodiment of this application;
FIG. 144 is a schematic flowchart of an interface element display method according to an embodiment of this application;
FIG. 145(a) to FIG. 145(c) are a schematic diagram of still another display interface according to an embodiment of this application;
FIG. 146(a) to FIG. 146(d) are a schematic diagram of still another display interface according to an embodiment of this application;
FIG. 147(a) to FIG. 147(c) are a schematic diagram of still another display interface according to an embodiment of this application;
FIG. 148(a) to FIG. 148(d) are a schematic diagram of still another display interface according to an embodiment of this application;
FIG. 149(a) to FIG. 149(c) are a schematic diagram of still another display interface according to an embodiment of this application;
FIG. 150 is a schematic flowchart of another interface element display method according to an embodiment of this application;
FIG. 151A(a) and FIG. 151A(b) are a schematic diagram of still another display interface according to an embodiment of this application;
FIG. 151B(a) to FIG. 151B(c) are a schematic diagram of still another display interface according to an embodiment of this application;
FIG. 152(a) to FIG. 152(d) are a schematic diagram of still another display interface according to an embodiment of this application;
FIG. 153(a) to FIG. 153(c) are a schematic diagram of still another display interface according to an embodiment of this application;
FIG. 154(a) to FIG. 154(c) are a schematic diagram of still another display interface according to an embodiment of this application;
FIG. 155(a) and FIG. 155(b) are a schematic diagram of still another display interface according to an embodiment of this application;
FIG. 156(a) to FIG. 156(d) are a schematic diagram of still another display interface according to an embodiment of this application;
FIG. 157(a) and FIG. 157(b) are a schematic diagram of still another display interface according to an embodiment of this application;
FIG. 158(a) to FIG. 158(c) are a schematic diagram of still another display interface according to an embodiment of this application;
FIG. 159 is a schematic diagram of still another display interface according to an embodiment of this application;
FIG. 160 is a schematic diagram of still another display interface according to an embodiment of this application;
FIG. 161(a) and FIG. 161(b) are a schematic diagram of still another display interface according to an embodiment of this application;
FIG. 162(a) to FIG. 162(c) are a schematic diagram of still another display interface according to an embodiment of this application;
FIG. 163(a) to FIG. 163(d) are a schematic diagram of still another display interface according to an embodiment of this application;
FIG. 164 is a schematic diagram of still another display interface according to an embodiment of this application;
FIG. 165 is a schematic diagram of still another display interface according to an embodiment of this application;
FIG. 166(a) and FIG. 166(b) are a schematic diagram of still another display interface according to an embodiment of this application;
FIG. 167(a) to FIG. 167(c) are a schematic diagram of still another display interface according to an embodiment of this application;
FIG. 168 is a schematic diagram of still another display interface according to an embodiment of this application;
FIG. 169(a) to FIG. 169(d) are a schematic diagram of still another display interface according to an embodiment of this application;
FIG. 170 is a simplified schematic diagram of still another system architecture according to an embodiment of this application;
FIG. 171 is a schematic composition diagram of still another software architecture according to an embodiment of this application;
FIG. 172 is a schematic flowchart of a projection method according to an embodiment of this application;
FIG. 173 is a schematic diagram of still another display interface according to an embodiment of this application;
FIG. 174 is a schematic flowchart of another projection method according to an embodiment of this application;
FIG. 175(a) to FIG. 175(c) are a schematic diagram of still another display interface according to an embodiment of this application;
FIG. 176 is a schematic diagram of still another display interface according to an embodiment of this application;
FIG. 177 is a schematic flowchart of still another projection method according to an embodiment of this application;
FIG. 178 is a schematic diagram of still another display interface according to an embodiment of this application;
FIG. 179 is a schematic diagram of still another display interface according to an embodiment of this application;
FIG. 180 is a schematic diagram of still another display interface according to an embodiment of this application;
FIG. 181 is a schematic diagram of still another display interface according to an embodiment of this application;
FIG. 182 is a schematic flowchart of still another projection method according to an embodiment of this application;
FIG. 183 is a schematic diagram of still another display interface according to an embodiment of this application;
FIG. 184(a) and FIG. 184(b) are a schematic diagram of still another display interface according to an embodiment of this application;
FIG. 185(a) and FIG. 185(e) are a schematic diagram of still another display interface according to an embodiment of this application;
FIG. 186 is a schematic diagram of still another display interface according to an embodiment of this application;
FIG. 187(a) to FIG. 187(c) are a schematic diagram of still another display interface according to an embodiment of this application;
FIG. 188 is a schematic diagram of still another display interface according to an embodiment of this application;
FIG. 189 is a schematic diagram of still another display interface according to an embodiment of this application;
FIG. 190 is a schematic diagram of still another display interface according to an embodiment of this application;
FIG. 191 is a schematic diagram of still another display interface according to an embodiment of this application;
FIG. 192 is a schematic diagram of still another display interface according to an embodiment of this application;
FIG. 193 is a schematic diagram of still another display interface according to an embodiment of this application;
FIG. 194 is a simplified schematic diagram of still another system architecture according to an embodiment of this application;
FIG. 195 is a schematic diagram of an architecture of a file transfer system of any one of N devices according to an embodiment of this application;
FIG. 196 is a schematic flowchart of a file transfer method according to an embodiment of this application;
FIG. 197A is a schematic diagram of a multi-device collaboration system (where three devices are used as an example) according to an embodiment of this application;
FIG. 197B is a schematic diagram of initiating file drag on a first device in a multi-device collaboration system (where three devices are used as an example) according to an embodiment of this application;
FIG. 197C is a schematic diagram of a release location of a first drag operation in a multi-device collaboration system (where three devices are used as an example) according to an embodiment of this application;
FIG. 197D is a schematic diagram of sending a target file in a multi-device collaboration system (where three devices are used as an example) according to an embodiment of this application;
FIG. 198 is a detailed schematic flowchart of a file transfer method according to an embodiment of this application;
FIG. 199A is a schematic diagram of a multi-device collaboration system (where five devices are used as an example) according to an embodiment of this application;
FIG. 199B is a schematic diagram of a target file in a multi-device collaboration system (where five devices are used as an example) according to an embodiment of this application;
FIG. 199C is a schematic diagram of drag effect in a multi-device collaboration system (where five devices are used as an example) according to an embodiment of this application;
FIG. 199D is a schematic diagram of a release location of a first drag operation in a multi-device collaboration system (where five devices are used as an example) according to an embodiment of this application; and
FIG. 199E is a schematic diagram of file drag in a multi-device collaboration system (where five devices are used as an example) according to an embodiment of this application

### DESCRIPTION OF EMBODIMENTS

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In descriptions of embodiments of this application, unless otherwise specified, "a plurality of" means two or more than two. In addition, "first" and "second" in embodiments may also be interchangeable. For example, a "first terminal" may also be referred to as a "second terminal", and a "second terminal" may also be referred to as a "first terminal".

A user may specify, by using another input device, for example, a mouse or a touchscreen, an object (for example, a file, a character, or a UI element) that needs to be dragged and a target location to which the object needs to be dragged. A conventional drag scenario includes drag on a PC and drag on a touchscreen terminal, for example, a mobile phone. For drag on the PC, the user may move, by moving a mouse, a mouse pointer to an object that needs to be dragged, specify the to-be-dragged object by pressing a left mouse button (or another button for achieving the purpose), and subsequently, drag the object from one location to another location on a display of the PC by moving the mouse. For drag on the touchscreen terminal, for example, the mobile phone, the user may use a continuous screen touch gesture to specify a to-be-dragged object, and drag the object from one location to another location on a display of the mobile phone. In addition, collaboratively using a plurality of terminals is a common office mode. When the plurality of terminals are collaboratively used, drag is also a function frequently used by the user. However, drag in a scenario in which the plurality of terminals are collaboratively used may be in cross-device drag for an object between the plurality of terminals

Based on this, embodiments of this application provide an object drag method. In some embodiments, the method may be applied to a scenario in which a plurality of terminals are cooperatively used. In this scenario, a user is allowed to drag, by using an input device, for example, a mouse or a touchscreen, a UI element (or an object), for example, an application window, a freeform (freeform) small window, a video component, a floating window, a picture-in-picture, a widget, or a UI control, from one terminal to another terminal collaboratively used with the terminal. In this scenario, the user is further allowed to drag, by using the input device, for example, the mouse or the touchscreen, a resource type object, for example, a document, a folder, a text, a picture, audio, a video, or a link, from one terminal to another terminal that is cooperatively used with the terminal. This improves usage efficiency of collaboratively using the plurality of terminals, makes drag more direct and explicit, and improves user experience in drag.
and improves user experience. In some other embodiments, the method may be applied to a scenario in which a terminal is independently used. In this scenario, a user is allowed to present, through drag, a key element on a current interface or an element, that is dragged by the user, on a screen of the terminal in a form of a dynamic small window or a floating UI element Then, regardless of whether the user switches a page or exits an application, the key element on the current interface or the element dragged by the user may continue to be displayed on the screen of the terminal for the user to continue using

The following describes implementations of embodiments of this application in detail with reference to the accompanying drawings.

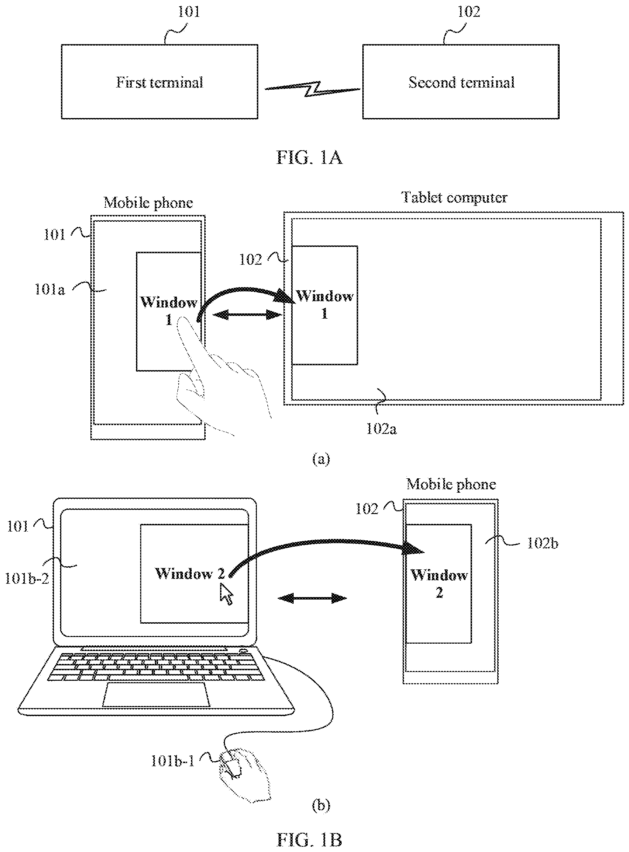

FIG. 1A to FIG. 1C are a simplified schematic diagram of a system architecture to which the foregoing method may be applied according to an embodiment of this application. As shown in FIG. 1A, the system architecture may include at least a first terminal 101 and a second terminal 102.

The first terminal 101 and the second terminal 102 may establish a connection in a wired (for example, a universal serial bus (universal serial bus, USB) data line) or wireless manner. A specific connection manner is not limited in this application. Based on the established connection, the first terminal 101 and the second terminal 102 may be cooperatively used together. In this embodiment, a wireless communication protocol used when the first terminal 101 and the second terminal 102 establish the connection in the wireless manner may be a wireless fidelity (wireless fidelity, Wi-Fi) protocol, a Bluetooth (Bluetooth) protocol, a ZigBee protocol, a near field communication (Near Field Communication, NFC) protocol, various cellular network protocols, or the like. This is not specifically limited herein.

In a specific implementation, the first terminal 101 and the second terminal 102 each may be a terminal, for example, a mobile phone, a tablet computer, a handheld computer, a PC, a cellular phone, a personal digital assistant (personal digital assistant, PDA), a wearable device (for example, a smartwatch or a smart band), a game console, an augmented reality (augmented reality, AR)/virtual reality (virtual reality, VR) device, or electronic ink. Specific device forms of the first terminal 101 and the second terminal 102 are not specially limited in this embodiment In addition, in addition to the foregoing terminal (or mobile terminal), the technical solution provided in this embodiment may also be applied to another electronic device, for example, a smart home device (for example, a television or a smart speaker), a vehicle-mounted computer (which is also referred to as a head unit), a dashboard of a vehicle, or a head-up display (head up display, HUD, which is also referred to as a head-up display). In addition, in this embodiment, device forms of the first terminal 101 and the second terminal 102 may be the same. For example, both the first terminal 101 and the second terminal 102 are mobile phones. Device forms of the first terminal 101 and the second terminal 102 may be alternatively different. For example, as shown in (a) in FIG. 1B, the first terminal 101 is a mobile phone, and the second terminal 102 is a tablet computer. For another example, as shown in (b) in FIG. 1B, the first terminal 101 is a PC, and the second terminal 102 is a mobile phone.

The first terminal 101 and the second terminal 102 each may be a touchscreen device or may be non-touchscreen device. The touchscreen device may control the terminal in a manner, for example, a tap or a slide, on a screen by using a finger, a stylus, or the like. The non-touchscreen device may be connected to an input device, for example, a mouse, a keyboard, or a touch panel, and control the terminal by using the input device. In this embodiment, the first terminal 101 and the second terminal 102 each are a terminal that may run an operating system, on which an application may be installed, and that may have a display (or a display). A display that includes only a display processing module is not the first terminal 101 or the second terminal 102 described in this embodiment The operating systems run on the first terminal 101 and the second terminal 102 each may be an Android system, an iOS system, a Windows system, a Mac system, a Linux system, or the like. This is not specifically limited herein in this embodiment The operating systems run on the first terminal 101 and the second terminal 102 may be the same or different. In an example, the first terminal 101 and the second terminal 102 each may include a memory, a processor, and the display. The memory may be configured to store the operating system, and the processor may be configured to run the operating system stored in the memory.

In some embodiments of this application, in a scenario in which a plurality of terminals are collaboratively used, when the first terminal 101 is connected to the second terminal 102, a user may drag a UI element, for example, an application window, a freeform small window, a video component, a floating window, a picture-in-picture, a widget, or a UI control, that is displayed on the display of the first terminal 101, to the display of the second terminal 102 for display in a drag manner by using an input device of the first terminal 101 (where the input device may be connected to the first terminal 101, or the first terminal 101 includes the input device, for example, the input device may be a mouse, a touchpad, or a touchscreen). Alternatively, a user may drag, by using an input device of the first terminal 101, a resource type object, for example, a document, a folder, a text, a picture, audio, a video, or a link of the first terminal 101 to the second terminal 102 in a drag manner.

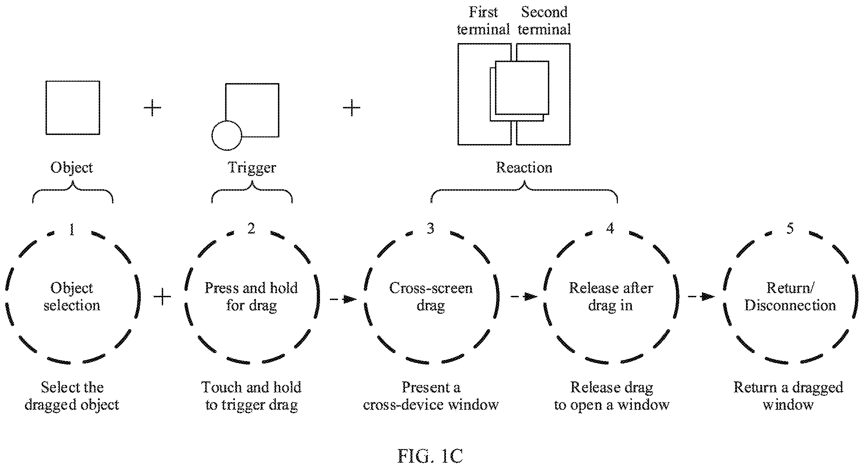

For example, a dragged object is an application window. FIG. 1C is a schematic flowchart of drag according to this embodiment. The user may select the dragged object (for example, an application window) on the first terminal 101. Then, the user may press and hold to drag the selected object, for example, touch and hold to trigger drag for the object, and the user may drag the object to trigger cross-device (or cross-screen) presentation of the application window. After the user releases the drag, the application window may be presented on the second terminal 102. Subsequently, the user may tap a corresponding button or disconnect the first terminal 101 from the second terminal 102, to trigger the dragged window to return to the first terminal 101.

For example, with reference to (a) in FIG. 1B, an example in which the first terminal 101 is a mobile phone and the second terminal 102 is a tablet computer is used. A display of the mobile phone has a touch function, for example, is referred to as a touchscreen 101a. The user may drag, by using the touchscreen 101a of the mobile phone, an application window displayed by the mobile phone, for example, referred to as a window I, from the touchscreen 101a of the mobile phone to a display 102a of the tablet computer for display.

For another example, with reference to (b) in FIG. 1B, an example in which the first terminal 101 is a PC and the second terminal 102 is a mobile phone is used. The PC is connected to a mouse 101b-1. The user may drag, by using the mouse 101b-1 of the PC, an application window displayed by the PC, for example, referred to as a window 2, from a display 101b-2 of the PC to a display 102b of the mobile phone for display.

It should be noted that the foregoing uses an example in which the user drags the UI element displayed by the first terminal 101 or the resource type object of the first terminal 101 from the first terminal 101 to one second terminal 102 for description. In some other embodiments, when the first terminal 101 establishes connections to a plurality of second terminals 102, the user may drag the UI element displayed by the first terminal 101 or the resource type object of the first terminal 101 to one or more of the plurality of second terminals 102 in a drag manner. Device forms of different second terminals 102 may be the same or different. Connection manners between the first terminal 101 and the different second terminals 102 may be the same or different. This is not specifically limited herein in this embodiment

In some other embodiments of this application, in a scenario in which a terminal (for example, the first terminal 101) is independently used (where in this scenario, the system architecture shown in FIG. 1A may not include the second terminal 102), the user is allowed to present, through drag, a key element on a current interface of the first terminal 101 or an element, that is dragged by the user, on a screen of the first terminal 101 in a form of a dynamic small window or a floating UI element.

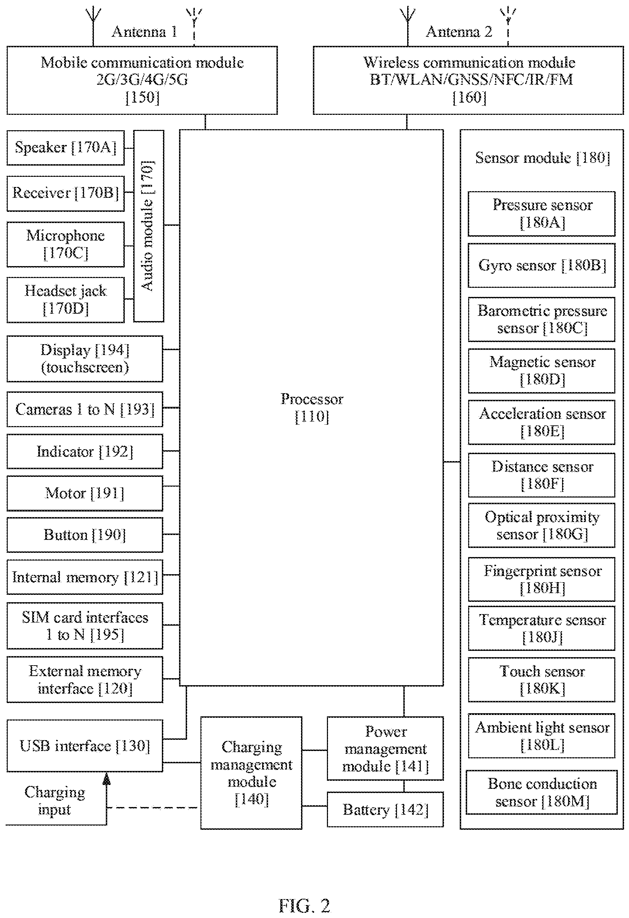

In this embodiment, an example in which the terminal is a mobile phone is used. FIG. 2 is a schematic diagram of a structure of a mobile phone according to an embodiment of this application. Methods in the following embodiments may be implemented in a mobile phone having the foregoing hardware structure.

As shown in FIG. 2, the mobile phone may include a processor 110, an external memory interface 120, an internal memory 121, a universal serial bus (universal serial bus, USB) interface 130, a charging management module 140, a power management module 141, a battery 142, an antenna 1, an antenna 2, a wireless communication module 160, an audio module 170, a speaker 170A, a receiver 170B, a microphone 170C, a headset jack 170D, a sensor module 180, a button 190, a motor 191, an indicator 192, a camera 193, a display 194, and the like. Optionally, the mobile phone may further include a mobile communication module 150, a subscriber identification module (subscriber identification module, SIM) card interface 195, and the like.

The sensor module 180 may include a pressure sensor 180A, a gyro sensor 180B, a barometric pressure sensor 180C, a magnetic sensor 180D, an acceleration sensor 180F, a distance sensor 180F, an optical proximity sensor 180G, a fingerprint sensor 180H, a temperature sensor 1801, a touch sensor 180K, an ambient light sensor 180L, a bone conduction sensor 180M, and the like.

It may be understood that the structure shown in this embodiment constitutes no specific limitation on the mobile phone. In some other embodiments, the mobile phone may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the mobile phone. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store an instruction or data that is just used or cyclically used by the processor 110. If the processor 110 needs to use the instruction or the data again, the processor 110 may directly invoke the instruction or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

The charging management module 140 is configured to receive a charging input from a charger. When charging the battery 142, the charging management module 140 may further supply power to the mobile phone by using the power management module 141. The power management module 141 is configured to connect the battery 142 and the charging management module 140 to the processor 110. The power management module 141 may also receive an input of the battery 142 to supply power to the mobile phone.

A wireless communication function of the mobile phone may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the mobile phone may be configured to cover one or more communication bands. Different antennas may be further multiplexed, to improve antenna utilization. For example, the antenna 1 may be multiplexed as a diversity antenna of a wireless local area network. In some other embodiments, the antenna may be used in combination with a tuning switch.

When the mobile phone includes the mobile communication module 150, the mobile communication module 150 may provide a solution that includes wireless communication such as 2G, 3G, 4G, and 5G and that is applied to the mobile phone. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules of the mobile communication module 150 may be disposed in a same component as at least some modules of the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same component as the mobile communication module 150 or another function module.

The wireless communication module 160 may provide a solution that includes wireless communication such as a wireless local area network (wireless local area network, WLAN) (for example, a Wi-Fi network), Bluetooth (Bluetooth, BT), a global navigation satellite system (global navigation satellite system, GNSS), frequency modulation (frequency modulation, FM), NFC, and an infrared (infrared, IR) technology and that is applied to the mobile phone. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the mobile phone, the antenna 1 and the mobile communication module 150 are coupled, and the antenna 2 and the wireless communication module 160 are coupled, so that the mobile phone can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The mobile phone implements a display function by using the GPU, the display 194, the application processor, and the like. The GPU is a microprocessor for image processing, and is connected to the display 194 and the application processor. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the mobile phone may include one or N displays 194, where N is a positive integer greater than 1.

The mobile phone may implement a photographing function by using the ISP, the camera 193, the video codec, the GPU, the display 194, the application processor, and the like. In some embodiments, the mobile phone may include one or N cameras 193, where N is a positive integer greater than 1 .

The external memory interface 120 may be configured to connect to an external memory card, for example, a micro SD card, to extend a storage capability of the mobile phone. The external memory card communicates with the processor 110 through the external memory interface 120, to implement a data storage function. For example, files such as music and a video are stored in the external memory card.

The internal memory 121 may be configured to store computer-executable program code. The executable program code includes instructions. The processor 110 runs the instructions stored in the internal memory 121, to perform various function applications of the mobile phone and data processing. The internal memory 121 may include a program storage region and a data storage region. The program storage region may store an operating system, an application required by at least one function (for example, a sound playing function or an image playing function), and the like. The data storage region may store data (for example, audio data or a phone book) created when the mobile phone is used, and the like. In addition, the internal memory 121 may include a high speed random access memory, or may include a non-volatile memory, for example, at least one magnetic disk storage device, a flash memory, or a universal flash storage (universal flash storage, UFS).

The mobile phone may implement an audio function, for example, music playing or recording by using the audio module 170, the speaker 170A, the receiver 170B, the microphone 170C, the headset jack 170D, the application processor, and the like.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. When a touch operation is performed on the display 194, the mobile phone detects intensity of the touch operation by using the pressure sensor 180A. The mobile phone may also calculate a touch location based on a detection signal of the pressure sensor 180A.

The gyro sensor 180B may be configured to determine a motion posture of the mobile phone. The barometric pressure sensor 180C is configured to measure barometric pressure. The magnetic sensor 180D includes a Hall sensor. The mobile phone may detect opening and closing of a flip cover by using the magnetic sensor 180D. The acceleration sensor 180E may detect magnitude of accelerations of the mobile phone in various directions (generally on three axes). The distance sensor 180F is configured to measure a distance. The mobile phone may detect, by using the optical proximity sensor 180G, that a user holds the mobile phone close to an car to make a call, to automatically turn off a screen for power saving. The optical proximity sensor 180G may also be used in a smart cover mode or a pocket mode to automatically perform screen unlocking or locking. The ambient light sensor 180L is configured to sense ambient light brightness. The fingerprint sensor 180H is configured to collect a fingerprint. The mobile phone may use a feature of the collected fingerprint to implement fingerprint-based unlocking, application lock access, fingerprint-based photographing, fingerprint-based call answering, and the like. The temperature sensor 180J is configured to detect a temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor to determine a type of a touch event A visual output related to the touch operation may be provided through the display 194. In some other embodiments, the touch sensor 180K may be alternatively disposed on a surface of the mobile phone and is at a location different from that of the display 194.

The bone conduction sensor 180M may obtain a vibration signal. The button 190 includes a power button, a volume button, and the like. The button 190 may be a mechanical button or a touch button. The motor 191 may generate a vibration prompt The motor 191 may be configured to provide an incoming call vibration prompt and a touch vibration feedback. The indicator 192 may be an indicator light, and may be configured to indicate a charging status and a power change, or may be configured to indicate a message, a missed call, a notification, and the like.

When the mobile phone includes the SIM card interface 195, the SIM card interface 195 is configured to connect to a SIM card. The SIM card may be inserted into the SIM card interface 195 or removed from the SIM card interface 195, to implement contact with or separation from the mobile phone. The mobile phone may support one or N SIM card interfaces, where N is a positive integer greater than 1. The mobile phone interacts with a network by using the SIM card, to implement functions such as calling and data communication In some embodiments, the mobile phone uses an eSIM, namely, an embedded SIM card. The eSIM card may be embedded in the mobile phone, and cannot be separated from the mobile phone.

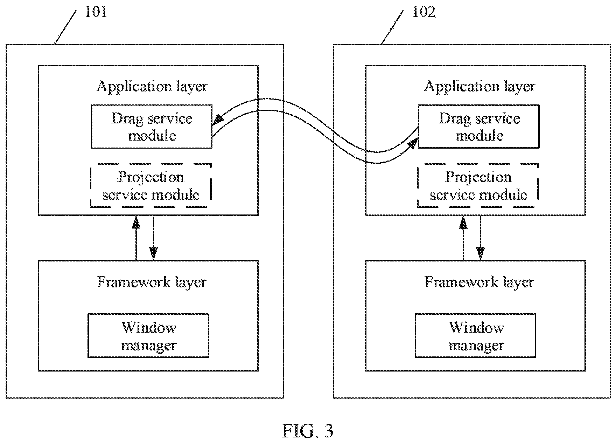

With reference to FIG. 1, FIG. 3 is a schematic composition diagram of a software architecture according to an embodiment of this application. As shown in FIG. 3, software architectures of the first terminal 101 and the second terminal 102 each may include an application layer and a framework (framework, FWK) layer.

In some embodiments, an application layer may include applications installed on a terminal. For example, the applications installed on the terminal may include a setting, a calculator, a camera, messaging, a music player, a file manager, a gallery, a browser, a notepad, news, a video player, an email, and the like. These applications may be system applications of the terminal, or may be third-party applications. This is not specifically limited herein in this embodiment of this application. For example, the application layer of the first terminal 101 may include applications installed on the first terminal 101, for example, a file manager, a gallery, a notepad, and a video player. For another example, the application layer of the second terminal 102 may include applications installed on the first terminal 101, for example, a video player and an email. The application layer may further include a drag service module. The application layers each may further include a launcher, a system interface (System UI), and the like (not shown in the figure). The framework layer may include a window manager. The drag service module may also be referred to as a drag management module or a drag service system. The window manager may also be referred to as a window management module or referred to as a window management service.

In some embodiments of this application; in a scenario in which a plurality of terminals are collaboratively used, after the first terminal 101 establishes a connection to the second terminal 102, based on the foregoing software architectures, the user may transfer, by using the input device (for example, the mouse, the touchpad, or the touchscreen) of the first terminal 101, a Ul element displayed on the first terminal 101 or a resource type object of the first terminal 101 to the second terminal 102 in a drag manner. In other words, the user may drag, by using the input device of the first terminal 101, the UI element or the resource type object from the first terminal 101 to the second terminal 102 in the drag manner, that is, implement cross-device drag.

It may be understood that, in cross-device drag, the first terminal 101 and the second terminal 102 may be respectively referred to as a source end device (or referred to as a source (source) end) and a target device (or referred to as a sink (sink) end) based on different functions implemented by the first terminal 101 and the second terminal 102. Specifically, the source end device may be a device that provides drag-related data or a party that initiates cross-device transmission and sends drag-related data. The target device may be a device that receives the drag-related data. It may be understood that the first terminal 101 and the second terminal 102 each may be a source end device or a target device. In embodiments of this application, for ease of clearly describing the technical solutions, unless otherwise specified, the first terminal 101 is a source end device, and the second terminal 102 is a target device. In addition, in an implementation of this application, a terminal used as a source end device in a relationship may be also a target device in another relationship. In other words, one terminal may be used as a source end device of another terminal and may also be a target device of another terminal.

In some other embodiments of this application, in a scenario in which the terminal (for example, the first terminal 101 or the second terminal 102) is independently used, based on a software architecture of the terminal, the user may present, on the screen of the first terminal 101 in a form of a dynamic small window or a floating UI element, a key element or a dragged element on a current interface of the first terminal 101 by using the input device (for example, the mouse, the touchpad, or the touchscreen) of the first terminal 101. In other words, an effect of presenting an element in the form of the dynamic small window or the floating UI element is achieved through local drag.

It should be noted that the software architectures shown in this embodiment constitute no specific limitation on the first terminal 101 and the second terminal 102. In some other embodiments, the first terminal 101 and/or the second terminal 102 may include more or fewer layers than those shown in the figure or more or fewer modules, or some modules may be combined, or there may be a different module layout This is not specifically limited herein in this embodiment. For example, in addition to the application layer and the framework layer, the software architectures shown above each may further include another layer, for example, a kernel layer (not shown in FIG. 3). The kernel layer is a layer between hardware and software. The kernel layer includes at least a display driver, a camera driver, an audio driver, a sensor driver, and the like.

As described in the foregoing embodiment, a dragged object in this embodiment may be a UI element or a resource type object displayed on a display of the terminal. The UI element may be specifically an interface element, for example, an application window, a freefrom small window, a widget (widget, for example, a clock widget, a card widget, or a calendar widget), a video widget, a floating window, a picture-in-picture, or a UI control. The resource type object may be specifically a document, a folder, a text, a picture, audio, a video, a link, or the like. Drag may be classified into cross-device drag and local drag. With reference to FIG. 1, FIG. 3, and other accompanying drawings, the following separately describes in detail, based on different dragged objects, the object drag method provided in embodiments of this application.

With reference to the software architecture shown in FIG. 3, a function of each module in a scenario of cross-device drag for a UI element is briefly described For example, the first terminal 101 is a source end device, and the second terminal 102 is a target device. With reference to FIG. 3, the application layer of the first terminal 101 may be used to provide drag-related data, to implement drag for the UI element The framework layer of the first terminal 101 may be used to provide a drag function and a window management function of the source end device. For example, the window manager of the framework layer is used to implement windowing of a display interface. For another example, the framework layer may be used to provide basic drag logic to implement drag on the source end device and the like. A module at the application layer of the first terminal 101, for example, the launcher or the system UI, may be used to listen to drag initiated by the framework layer. The drag service module may be used to obtain the drag-related data and send the drag-related data to the second terminal 102 used as the target device.

A module at the application layer of the second terminal 102, for example, the drag service module, may be used to receive the drag-related data. The framework layer of the second terminal 102 is used to provide a drag function and a window management function of the target device. For example, the window manager at the framework layer is used to cooperate with the drag service module of the second terminal 102 to implementing drawing of a window on the target device and the like based on the received data. For another example, when a user continues to perform drag on the target device, the framework layer may be used to provide basic drag logic to implement drag on the target device and the like.

Further, in this embodiment, the application layers each may further include a projection service module. In this embodiment, the projection service modules of the first terminal 101 and the second terminal 102 may be used to cooperate to implement a projection processing function. For example, after the user stops a drag operation on the first terminal 101, the projection service module of the first terminal 101 may start a projection process, so that the drag service module of the first terminal 101 obtains related data, for example, screen recording data, and then sends the related data to the second terminal 102. The drag service module of the second terminal 102 may send the received screen recording data to the projection service module of the second terminal 102 to draw and display a corresponding UI element. In addition, after the first terminal 101 projects the UI element to the second terminal 102 for display, the user may perform an operation on the UI element projected to the second terminal 102. The projection service modules of the first terminal 101 and the second terminal 102 may cooperate to respond to the operation, to implement reverse control on the source end device at a target device end.

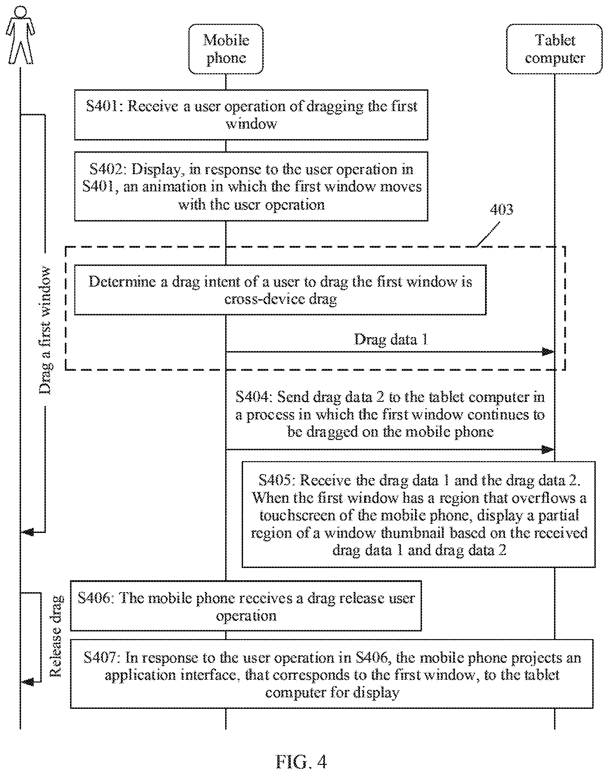

Refer to FIG. 4 to FIG. 28(c). The following specifically describes a process of cross-device drag for the UI element

FIG. 4 is a schematic flowchart of an object drag method according to an embodiment of this application. In this embodiment, the method provided in this embodiment is described in detail by using an example in which the first terminal 101 is a mobile phone, the second terminal 102 is a tablet computer, the input device of the first terminal 101 is a touchscreen, and the dragged object is an application window or a freeform small window. For example, the mobile phone is used as the source end device, and the tablet computer is used as the target device.

As shown in FIG. 4, the method may include the following S401 to S407.

S401: The mobile phone receives a user operation of dragging a first window.

S402: The mobile phone displays, in response to the user operation in S401, an animation in which the first window moves with the user operation.

The first window in this embodiment may be an application window or a freeform small window. The user operation is used to trigger the first window to move on the touchscreen as a finger (or a stylus) of a user moves, or the user operation is used to initiate drag for the first window. In other words, by executing the user operation, a user may trigger the first window, for example, the application window or the freeform small window, to move with movement of the finger (or the stylus) of the user on the touchscreen of the mobile phone, that is, trigger drag for the first window. It should be noted that the application window may be a window of any application installed on the mobile phone. The application may be a system application or a third-party application. This is not limited herein in this embodiment.

The user operation in S401 may be the drag operation in this embodiment of this application. In some embodiments, the user operation in S401 may include one or more operations. For example, the user operation may include an operation of triggering drag for the first window and an operation of triggering movement of the first window.

The operation of triggering drag for the first window may be a screen touch gesture operation. For example, the first window is an application window. The screen touch gesture operation of triggering drag for the first window may be, for example, any one of the following predetermined gesture operations: a gesture operation (for example, a touch and hold operation or a double-tap operation) for a title bar in the first window, a slide operation (for example, a slide operation that starts from the lower edge of the mobile phone and that points to the upper edge of the mobile phone when the terminal currently displays the first window) for the first window, a gesture operation (for example, a single-finger touch and hold operation, a single-finger double-tap operation, or a multi-finger touch and hold operation) for the first window, a 3D touch (3D touch) operation on the first window, and a palm operation (for example, a palm touch and hold operation or a palm single-tap operation) on the first window. For example, the first window is a freeform small window. The screen touch gesture operation of triggering drag for the first window may be, for example, any one of the following predetermined gesture operations: a tap operation for an application icon in a side dock bar and a slide operation of sliding up from the bottom of an application interface when the terminal currently displays the application interface. The operation of triggering drag for the first window may be alternatively an air gesture operation. The air gesture operation may be a static air gesture operation or a dynamic air gesture operation. The static air gesture operation refers to a hand posture at a moment, for example, finger bending or folding, for example, an OK gesture, a V gesture, or a five-finger stretching gesture. The dynamic air gesture operation refers to a hand motion situation in a period of time, including a motion direction, a speed, a hand posture change, and the like, for example, a sweep gesture, a pan gesture, a fisting gesture, and a press gesture. The air gesture operation of triggering drag for the first window may be the foregoing static air gesture operation or dynamic air gesture operation.

The operation of triggering movement of the first window may be a screen touch gesture operation. For example, the screen touch gesture operation of triggering movement of the first window may be an operation of pressing and moving the dragged first window. The operation of triggering movement of the first window may be alternatively an air gesture operation. For example, the air gesture operation of triggering movement of the first window is a press gesture and a pan gesture for the dragged first window. For another example, the air gesture operation of triggering movement of the first window is a fisting gesture and a pan gesture that are performed after the first window is dragged. For another example, the air gesture operation of triggering movement of the first window is the static air gesture operation and the pan gesture that are performed after the first window is dragged. The press described in this embodiment may also be described as press and hold, and refers to an operation of pressing by the user without uplifting the finger (or pressing a screen by the user with the stylus without uplifting the stylus).

It should be noted that the foregoing screen touch gesture operation may be performed by the user with a hand, or may be performed by the user by using the stylus. This is not limited herein in this embodiment

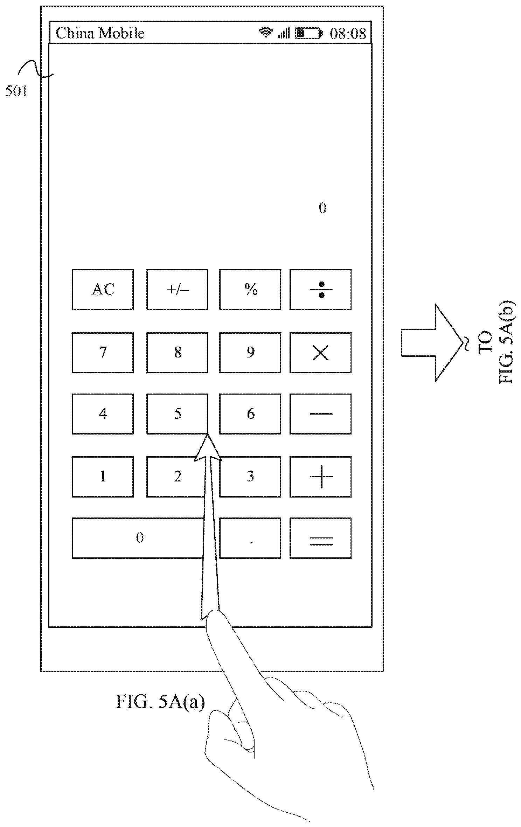

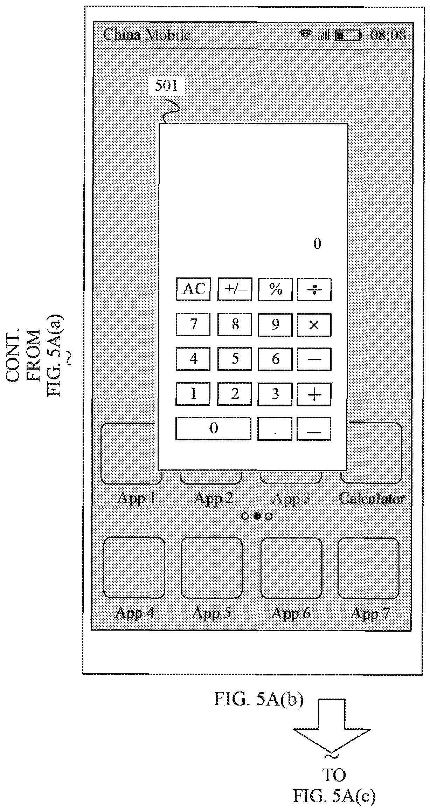

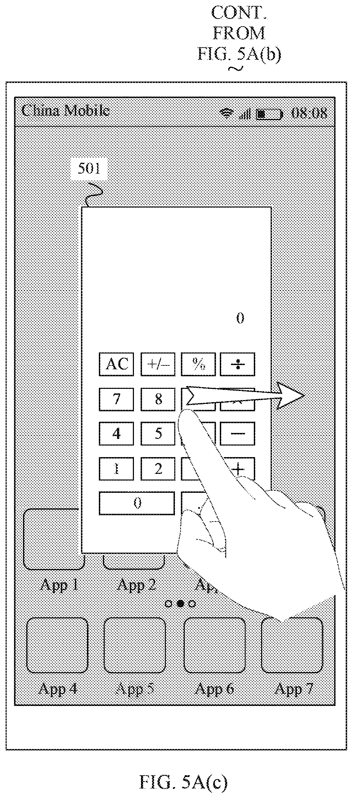

For example, with reference to FIG. 5A(a) to FIG. 5A(c), an example in which the first window is an application window, for example, a calculator window, and the user operation in S401 includes a slide operation for the calculator window and an operation of pressing and moving the dragged calculator window is used. As shown in FIG. 5A(a), a window, for example, referred to as a calculator window 501, is displayed on the touchscreen of the mobile phone. The calculator window 501 includes a calculator interface. When wanting to drag the calculator window 501, the user may perform a slide operation on the calculator window 501, for example, slide up the calculator window 501. As shown in FIG. 5A(b), in response to the operation, the mobile phone may display the calculator window 501 in a dragged state. For example, a window manager of the mobile phone may perform scale-down processing on the calculator window 501, and may further perform background blurring processing, and send a scaled-down calculator window 501 to a launcher at an application layer of the mobile phone to display the scaled-down calculator window 501.

Then, the user presses the calculator window 501 and moves the finger, so that the calculator window 501 moves on the touchscreen of the mobile phone as the finger of the user moves, to give the user a visual effect of dragging the calculator window 501 by the finger of the user. In this embodiment, a direction in which the window is dragged (or a drag direction) may be a direction pointing to the upper edge of the touchscreen of the mobile phone (for example, upward drag for short), a direction pointing to the left edge of the touchscreen of the mobile phone (for example, leftward drag for short), a direction pointing to the right edge of the touchscreen of the mobile phone (for example, rightward drag for short), or a direction pointing to the lower edge of the touchscreen of the mobile phone (for example, downward drag for short). For example, as shown in FIG. 5A(c), the user may use the finger to perform a press operation on the dragged calculator window 501 and an operation of moving the finger rightward. As the finger of the user moves, the mobile phone, for example, a framework layer of the mobile phone, may draw an animation (or a drag animation) in which the calculator window 501 moves with the finger of the user, and send the animation to the application layer (for example, the launcher at the application layer) of the mobile phone to display, on the touchscreen of the mobile phone, the animation in which the calculator window 501 moves with the finger of the user, to give the user a visual effect of dragging the calculator window 501 rightward by the finger of the user.

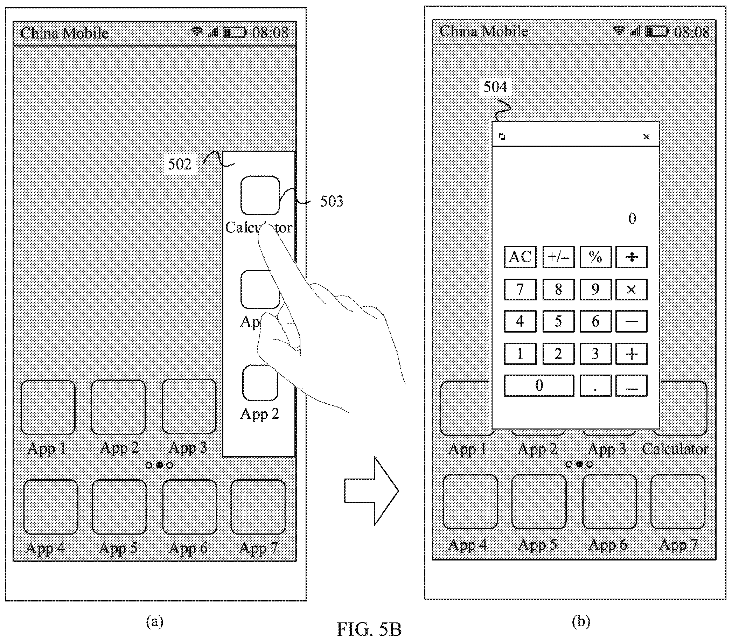

For another example, with reference to FIG. 5B, an example in which the first window is a freeform small window, the freeform small window includes a calculator interface, and the user operation in S401 includes a tap operation for a calculator icon in a side dock bar and an operation of pressing and moving the freeform small window is used. As shown in (a) in FIG. 5B, a home screen is displayed on the touchscreen of the mobile phone, and the user may perform, on the touchscreen of the mobile phone, a leftward slide operation starting from the right edge of the touchscreen of the mobile phone. In response to the slide operation, the mobile phone may display a dock bar 502. The dock bar 502 includes icons of one or more applications. After the user performs an operation on an icon in the dock bar 502, for example, a tap operation, the mobile phone may display an interface of a corresponding application in a form of a freeform small window. The dock bar 502 includes a calculator icon 503. The user may perform a tap operation on the calculator icon 503 included in the dock bar 502. In response to the tap operation, as shown in (b) in FIG. 5B, the mobile phone (for example, a window manager of the mobile phone) may display a freeform small window 504. The freeform small window 504 includes a calculator interface. Then, the user presses the freeform small window 504 and moves the finger, so that the freeform small window 504 moves on the touchscreen of the mobile phone as the finger of the user moves, to give the user a visual effect of dragging the freeform small window 504 by the finger of the user. Specific descriptions of dragging the freeform small window 504 by the user are similar to the specific descriptions of dragging the calculator window 501 in 5A(a) to FIG. 5A(c) by the user. Details are not described herein again. In addition, in addition to the foregoing tap operation for the corresponding icon in the dock bar 502, a user operation of displaying an application interface in a form of a freeform small window may be alternatively a slide operation of sliding up by the user from the bottom of the application interface when the terminal displays the application interface. An end point of the slide operation may be any location on the application interface, for example, may be the top of the application interface. This is not specifically limited herein in this embodiment.

S403: The mobile phone sends drag data 1 to the tablet computer when determining that a drag intent of the user to drag the first window is cross-device drag.

The drag data 1 may be first drag data in this embodiment of this application.

It may be understood that drag may be classified into intra-device drag (or local drag) and cross-device drag (or inter-device drag). Intra-device drag may mean that a drag intent is drag of dragging a dragged object from one location of a device to another location of the device. Cross-device drag may mean that a drag intent is drag of dragging a dragged object from one location of a device to another device.

In this embodiment, after the first window is dragged by the user, the mobile phone may determine whether the drag intent of the user to drag the first window is cross-device drag. After it is determined that the drag intent of the user to drag the first window is cross-device drag, drag data, for example, referred to as the drag data 1, is sent to a target device for cross-device drag, and is used by the target device to draw a dragged window, to give the user a visual effect of dragging the first window from a source end device to the target device. For example, with reference to FIG. 3, in a process of dragging the first window, the application layer (for example, the launcher at the application layer) of the mobile phone may perform drag listening, to determine whether the intent of the user to drag the first window is cross-device drag.

In some embodiments, the mobile phone (for example, the launcher at the application layer of the mobile phone) may determine, by using a drag sensing region, whether the drag intent of the user to drag the first window is cross-device drag.

The drag sensing region may be a region on the touchscreen of the mobile phone at a predetermined distance from an edge of the touchscreen. The predetermined distance may be predefined, or a setting interface may be provided for the user to set the predetermined distance. This is not limited herein in this embodiment.

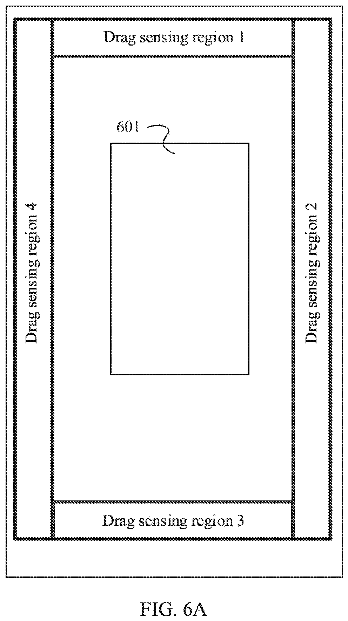

For example, one terminal (for example, one mobile phone) may have one or more drag sensing regions. For example, FIG. 6A is a schematic diagram of locations of drag sensing regions according to this embodiment As shown in FIG. 6A, the mobile phone may be provided with four drag sensing regions, which are respectively referred to as a drag sensing region 1, a drag sensing region 2, a drag sensing region 3, and a drag sensing region 4. These drag sensing regions each are provided with a transparent view (view) control. The drag sensing region 1is at a location close to the upper edge of the touchscreen of the mobile phone. The drag sensing region 2 is at a location close to the right edge of the touchscreen of the mobile phone. The drag sensing region 3 is at a location close to the lower edge of the touchscreen of the mobile phone. The drag sensing region 4 is at a location on the left edge of the touchscreen of the mobile phone. In other words, locations close to four edges of the touchscreen of the mobile phone each are provided with a transparent view control. When the first window, for example, a first window 601 shown in FIG. 6A, is dragged to any one of the four drag sensing regions, a view control that is set in a corresponding region may monitor drag in of the first window 601. When the view control monitors drag in of the first window 601, the mobile phone may determine that the drag intent of the user is cross-device drag.

The drag sensing region may be further used by the mobile phone to determine a drag direction. As described in S402, the drag direction may include upward drag, rightward drag, downward drag, and leftward drag. The mobile phone may determine the drag direction based on a location, on the touchscreen, of the drag sensing region to which the first window is dragged. For example, still with reference to FIG. 6A, when the first window 601 is dragged to a drag sensing region located on the upper side of the touchscreen of the mobile phone, for example, the drag sensing region 1 in FIG. 6A, the view control that is set in the drag sensing region 1 may monitor drag in of the first window 601, and the mobile phone may determine that the drag direction is upward drag. When the first window 601 is dragged to a drag sensing region located on the right side of the touchscreen of the mobile phone, for example, the drag sensing region 2 in FIG. 6A, the view control that is set in the drag sensing region 2 may monitor drag in of the first window 601, and the mobile phone may determine that the drag direction is rightward drag. When the first window 601 is dragged to a drag sensing region located on the lower side of the touchscreen of the mobile phone, for example, the drag sensing region 3 in FIG. 6A, the view control that is set in the drag sensing region 3 may monitor drag in of the first window 601, and the mobile phone may determine that the drag direction is downward drag. When the first window 601 is dragged to a drag sensing region located on the left side of the touchscreen of the mobile phone, the view control that is set in the drag sensing region 4 may monitor drag in of the first window 601, for example, the drag sensing region 4 in FIG. 6A, and the mobile phone may determine that the drag direction is leftward drag.

In some other embodiments, the mobile phone (for example, the launcher at the application layer of the mobile phone) may determine, by determining a distance between the first window and an edge of the touchscreen, whether the drag intent of the user to drag the first window is cross-device drag.

For example, when it is determined that a distance between one of the upper left corner, the upper right corner, the lower left corner, and the lower right corner of the first window and the edge of the touchscreen is less than a predetermined distance, it may be determined that the drag intent of the user is cross-device drag. The drag direction may also be determined by determining which edge of the touchscreen is specifically less than the predetermined distance.

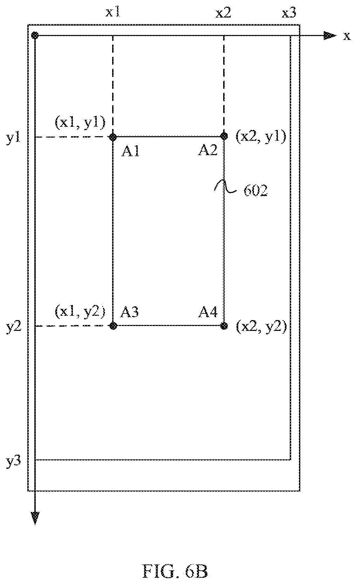

For example, FIG. 6B is a schematic diagram of a display coordinate system according to this embodiment. As shown in FIG. 6B, a coordinate origin of the display coordinate system is the upper left corner of the touchscreen of the mobile phone, an x axis points from the coordinate origin to the right edge of the touchscreen of the mobile phone, and a y axis points from the coordinate origin to the lower edge of the touchscreen of the mobile phone. The mobile phone may determine coordinates of each edge of the mobile phone in the display coordinate system. For example, a coordinate of the right edge of the touchscreen of the mobile phone on the X axis is x3, a coordinate of the left edge of the touchscreen of the mobile phone on the X axis is 0, a coordinate of the upper edge of the touchscreen of the mobile phone on the Y axis is 0, and a coordinate of the lower edge of the touchscreen of the mobile phone on the Y axis is y3. In the process in which the first window, for example, a first window 602 shown in FIG. 6B, is dragged by the user on the touchscreen of the mobile phone, the mobile phone may monitor the upper left corner, the upper right corner, the lower left corner, and the lower right corner of the first window 602 in real time, for example, which are respectively coordinates of A1, A2, A3, and A4 shown in FIG. 6B in the display coordinate system. For example, the coordinates of the upper left corner A1 in the display coordinate system are (x 1, yl), the coordinates of the upper right corner A2 in the display coordinate system are (x2, yl), the coordinates of the lower left corner A3 in the display coordinate system are (x1, y2), and the coordinates of the lower right corner A4 in the displayed coordinate system are (x2, y2). Based on the coordinates of four corners of the first window 602 and the coordinates of four edges of the touchscreen of the mobile phone, when determining that a distance between one of the four corners and the edge of the touchscreen is less than the predetermined distance, the mobile phone may determine that the drag intent of the user to drag the first window 602 is cross-device drag, and may further determine the drag direction. For example, if the mobile phone determines, based on the coordinate x2 of the upper right corner A2 on the X axis and the coordinate x3 of the right edge of the touchscreen, that a distance (for example, x3-x2) between the upper right corner A2 and the right edge of the touchscreen is less than the predetermined distance, the mobile phone may determine that the drag intent of the user to drag the first window 602 is cross-device drag, and may further determine that the drag direction is rightward drag. For another example, if the mobile phone determines, based on the coordinate x1 of the lower left corner A3 on the X axis and the coordinate 0 of the left edge of the touchscreen, that a distance (for example, xl-0 or x1) between the lower left corner A3 and the left edge of the touchscreen is less than the predetermined distance, the mobile phone may determine that the drag intent of the user to drag the first window 602 is cross-device drag, and may further determine that the drag direction is leftward drag.

As described above, after the mobile phone determines that the drag intent of the user to drag the first window is cross-device drag, to implement continuation of drag on the target device and give the user the visual effect of dragging the first window from the source end device to the target device, the mobile phone may send the corresponding drag data, for example, referred to as the drag data 1, to the target device. For example, with reference to FIG. 3, the drag data 1 may be sent by a drag service module at the application layer of the mobile phone to the target device, and is used by the target device to draw a dragged window.

The drag service module at the application layer of the mobile phone may obtain the drag data 1 when the first window starts to be dragged. In an example, a specific implementation in which the drag service module at the application layer of the mobile phone obtains the drag data 1 may be as follows: After the mobile phone (for example, the launcher at the application layer of the mobile phone) initiates drag for the first window, the framework layer of the mobile phone generates a corresponding drag event, for example, a drag start event. The drag start event includes the drag data 1. The launcher at the application layer of the mobile phone may call back the drag start event generated by the framework layer, to extract the drag data 1 from the drag start event. After extracting the drag data 1, the launcher at the application layer of the mobile phone may send the drag data 1 to the drag service module at the application layer of the mobile phone. In this way, the drag service module at the application layer of the mobile phone can obtain the drag data 1. Then, the launcher at the application layer of the mobile phone performs drag listening, and after determining that the drag intent of the user to drag the first window is cross-device drag, may notify the drag service module at the application layer of the mobile phone that the drag is cross-device drag. In this case, the drag service module at the application layer of the mobile phone may send the obtained drag data 1 to the target device for cross-device drag.

In some embodiments, the drag data 1 may include an interface of an application in the first window, for example, may be a screenshot of the first window (or a screenshot of the interface of the application in the first window) or rectangle (rectangle, rect) information of the first window. The drag data 1 may further include a type (for example, a window type) of the dragged object and/or an indication used to indicate that the drag data 1 is related data in the drag start event. The indication may identify a start of the drag, and may be used to notify the source end device and the target device for cross-device drag to start a related service for cross-device drag, for example, a drag service or a projection service. The related service is used to implement cross-device drag.

The rect information of the first window includes coordinate information of the upper left corner, the upper right corner, the lower left corner, and the lower right corner of the first window when drag starts. Specifically, still refer to FIG. 6B. In the display coordinate system provided in this embodiment, the rect information of the first window may include the coordinates (x1, y1) of the upper left corner A1 in the display coordinate system, the coordinates (x2, y1) of the upper right corner A2 in the display coordinate system, the coordinates (x1, y2) of the lower left corner A3, and the coordinates (x2, y2) of the lower right corner A4.

As described above, the mobile phone used as the source end device may send the obtained drag data 1 to the target device for cross-device drag, so that the target device to draw the dragged window.

In some embodiments, a process in which the mobile phone used as the source end device determines the target device may be as follows: The mobile phone obtains a device that establishes a connection to the mobile phone. If the mobile phone establishes a connection to only one device, the mobile phone may determine the device as the target device. For example, if the mobile phone establishes a connection to only the tablet computer, after determining that the drag intent of the user is cross-device drag, the mobile phone may determine the tablet computer as the target device, and send the obtained drag data (for example, the drag data 1) to the tablet computer.

If the mobile phone establishes connections to a plurality of devices at the same time, the mobile phone may display information about the plurality of devices (for example, referred to as candidate terminals). For example, the mobile phone may display a recommended device list. The recommended device list includes information about each device (or each candidate terminal) that establishes the connection to the mobile phone, for example, a device identifier, for selection by the user. The user may perform a selection operation on one or more device identifiers. After receiving the selection operation of the user, the mobile phone may determine, as the target device, a device corresponding to the device identifier selected by the user. For example, if the mobile phone establishes connections to the tablet computer and a PC at the same time, after determining that the drag intent of the user is cross-device drag, the mobile phone may display a recommended device list including an identifier of the tablet computer and an identifier of the PC. When wanting to drag the first window to the tablet computer, the user may perform a selection operation on the identifier of the tablet computer in the recommended device list After receiving the selection operation, the mobile phone may determine the tablet computer as the target device, and send the obtained drag data (for example, the drag data 1) to the tablet computer.

If the mobile phone establishes no connection to another device, the mobile phone may obtain, by using a discovery technology, for example, Bluetooth discovery or Wi-Fi discovery, a device whose distance from the mobile phone is within a connectable range, and display information about the device (for example, referred to as a candidate terminal) whose distance from the mobile phone is within the connectable range. For example, the mobile phone may display information about these devices, for example, a recommended device list including a device identifier, for selection by the user. Similarly, the user may perform a selection operation on one or more device identifiers. After receiving the selection operation of the user, the mobile phone may determine, as the target device, a device corresponding to the device identifier selected by the user. Because the device currently establishes no connection to the mobile phone, after determining the target device, the mobile phone may send a request to the device, to request to establish a connection to the device. After the connection to the device is successfully established, the mobile phone may send the obtained drag data (for example, the drag data 1) to the device. For example, by using a positioning technology, the mobile phone obtains that both distances between the tablet computer and the mobile phone and between a PC and the mobile phone are within the connectable range. In tₕis case, the mobile phone displays a recommended device list including an identifier of the tablet computer and an identifier of the PC. When wanting to drag the first window to the tablet computer, the user may perform a selection operation on the identifier of the tablet computer in the recommended device list. After receiving the selection operation, the mobile phone may determine the tablet computer as the target device, and the mobile phone may request to establish a connection to the tablet computer. After the connection is successfully established, the mobile phone may send the obtained drag data 1 to the tablet computer.

In some other embodiments, a process in which the mobile phone determines the target device may be as follows: The mobile phone obtains a device connected to the mobile phone, and obtains, by using a positioning technology, a device whose distance from the mobile phone is within a connectable range. The mobile phone may determine information about these devices (for example, referred to as candidate terminals) based on an obtaining result For example, the mobile phone may display a recommended device list for selection by the user. It may be understood that the recommended device list may include information about one or more devices that establish connections to the mobile phone, for example, a device identifier, and/or information about one or more devices that establish no connection to the mobile phone but whose distances from the mobile phone are within the connectable range, for example, a device identifier. Then, the mobile phone may determine, as the target device based on a selection operation of the user, a device corresponding to a device identifier selected by the user, and send the obtained drag data (for example, the drag data 1) to the target device. Specific descriptions of implementation details in this implementation are similar to corresponding descriptions in the previous implementation. Details are not described herein again.

It should be noted that the device identifier included in the foregoing recommended device list may be an icon of the device, or may be a name of a device, or may be an icon and a name of a device. This is not specifically limited herein in this embodiment.

In addition, in this embodiment, the device identifier included in the recommended device list displayed by the mobile phone may be displayed according to a predetermined rule. For ease of description, the device identifier of the device that establishes the connection to the mobile phone is referred to as a connected device identifier for short, and the device identifier of the device that establishes no connection to the mobile phone but whose distance from the mobile phone is within the connectable range is referred to as an unconnected device identifier for short.

For example, the predetermined rule may include one or more of the following rules.

Rule 1: A recommendation priority of the connected device identifier is higher than a recommendation priority of the unconnected device identifier. In other words, the device that is connected to the mobile phone is preferably recommended as the target device.

Rule 2: A recommendation priority of a device identifier of a device that is close to the mobile phone is higher than a recommendation priority of a device identifier of a device that is far away from the mobile phone. In other words, the device that is close to the mobile phone is preferably recommended as the target device.

Rule 3: A recommendation priority of a device identifier of a device located in the drag direction is higher than a recommendation priority of a device identifier of a device located in another direction. In other words, the device located in the drag direction is preferably recommended as the target device. For example, if the drag direction is upward drag, a device in a direction pointing to the upper edge of the mobile phone is preferably recommended. For another example, if the drag direction is leftward drag, a device in a direction pointing to the left edge of the mobile phone is preferably recommended. For another example, if the drag direction is downward drag, a device in a direction pointing to the lower edge of the mobile phone is preferably recommended. For another example, if the drag direction is rightward drag, a device in a direction pointing to the right edge of the mobile phone is preferably recommended.

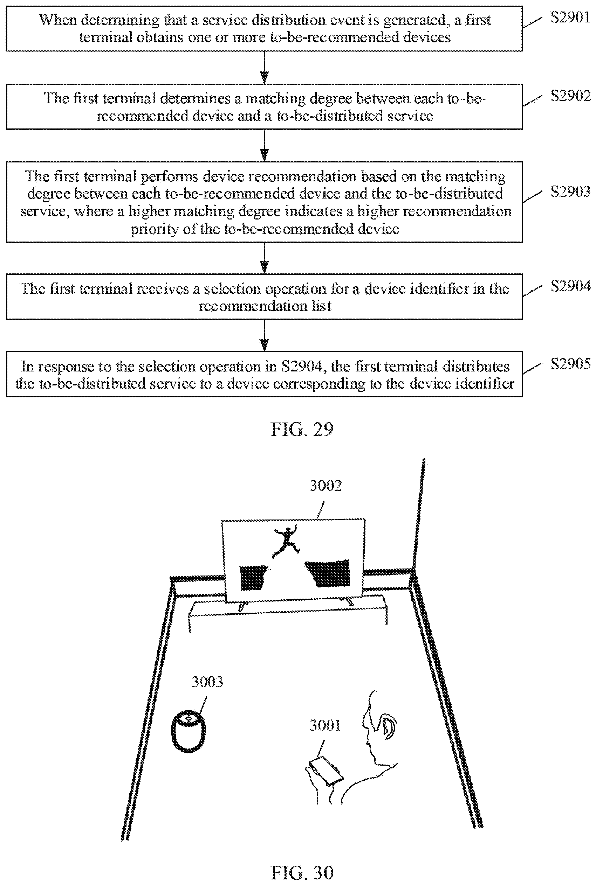

Rule 4: Recommend the target device based on dragged content. For example, if content (or a service) in the dragged window is a video, a PPT, or the like, a recommendation priority of a device identifier of a device having a large screen (for example, a television) is higher than a recommendation priority of a device identifier of a device having a smaller screen size (for example, a mobile phone). In other words, a large-screen device is preferably recommended as the target device. For another example, if the dragged window is a window of an editing application, for example, a picture editing window, a drawing window, or a character editing window, a recommendation priority of a device identifier of a device with a higher interaction capability (for example, a PC, a mobile phone, or a tablet computer) is higher than a recommendation priority of a device identifier of a device with a lower interaction capability (for example, a television). In other words, a device with a high interaction capability is preferably recommended as the target device. Specifically, the target device may be recommended based on a matching degree between a service corresponding to the dragged object (for example, the dragged window) and a device (for example, referred to as a to-be-recommended device). The to-be-recommended device may include the foregoing device that is connected to the mobile phone, and/or the device that is not connected to the mobile phone but is within the connectable range of the mobile phone. A higher matching degree indicates a higher recommendation priority of the to-be-recommended device. In an example, the mobile phone may display a device identifier of each to-be-recommended device based on a matching degree between each to-be-recommended device and the service corresponding to the dragged object (for example, the dragged window). For example, the recommended device list displayed by the mobile phone includes the device identifier of each to-be-recommended device. A to-be-recommended device with a higher matching degree with the service corresponding to the dragged object (for example, the dragged window) has a higher recommendation priority. For example, a device identifier of a to-be-recommended device with a higher matching degree with the service corresponding to the dragged object (for example, the dragged window) is ranked higher in the recommended device list. For another example, a device identifier of a to-be-recommended device with a higher matching degree with the service corresponding to the dragged object (for example, the dragged window) is highlighted for marking in a darker color in the recommended device list. For ease of understanding by a person skilled in the art, in this embodiment of this application, a specific process of the device recommendation in the rule 4 is described in detail in the following embodiments corresponding to FIG. 29 to FIG. 37.

Rule 5: Display a corresponding device identifier based on a direction of the device relative to the mobile phone. For example, a device identifier of the device located in the direction pointing to the upper edge of the mobile phone is displayed in a display region that is close to the upper edge and that is of the touchscreen of the mobile phone. A device identifier of the device located in the direction pointing to the right edge of the mobile phone is displayed in a display region that is close to the right edge and that is of the touchscreen of the mobile phone. A device identifier of the device located in the direction pointing to the lower edge of the mobile phone is displayed in a display region that is close to the lower edge and that is of the touchscreen of the mobile phone. A device identifier of the device located in the direction pointing to the left edge of the mobile phone is displayed in a display region that is close to the left edge and that is of the touchscreen of the mobile phone. Alternatively, a corresponding device identifier is displayed based on different classifications of device types. For example, a device identifier of a mobile device, for example, a mobile phone or a tablet computer, is displayed in a display region that is close to the left edge or the right edge and that is of the touchscreen of the mobile phone. For example, a device identifier of a large-screen device (for example, a television or a PC) or a wearable device is displayed in a display region that is close to the upper edge and that is of the touchscreen of the mobile phone.

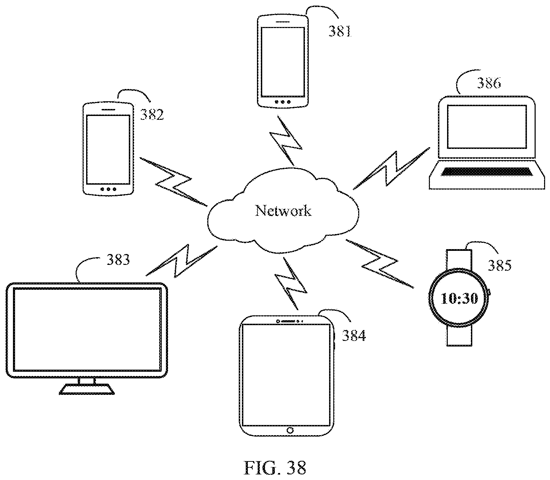

It should be noted that a distance between the mobile phone and the another device and a direction of the another device relative to the mobile phone may be obtained by the mobile phone by using a positioning technology, for example, Bluetooth, ultra-wideband (Ultra-wideband, UWB), an ultrasonic wave, or location measurement It should be noted that Rule 3 is described by using an example in which the device located in the drag direction is preferably recommended as the target device. In some other embodiments, the mobile phone may alternatively directly determine the target device based on the drag direction and a relative direction between the source end device and the another device, or the mobile phone may directly determine the device in the drag direction as the target device. For example, if the drag direction is upward drag, the mobile phone determines, as the target device, the device located in the direction pointing to the upper edge of the mobile phone. If the drag direction is downward drag, the mobile phone determines, as the target device, the device located in the direction pointing to the lower edge of the mobile phone. If the drag direction is leftward drag, the mobile phone determines, as the target device, the device located in the direction pointing to the left edge of the mobile phone. If the drag direction is rightward drag, the mobile phone determines, as the target device, the device located in the direction pointing to the right edge of the mobile phone. In some embodiments, when there is only one device in the drag direction, the mobile phone may not display the recommended device list, and determines the device as the target device. When there are a plurality of devices in the drag direction, the mobile phone may display the dragged device list, and determine, as the target device based on selection of the user, a device that is selected by the user and that is in the drag direction. For ease of understanding by a person skilled in the art, in this embodiment of this application, a specific process of obtaining the direction and the distance of the another device to and from the source end device by using location measurement is described in detail in the following embodiments corresponding to FIG. 38 to FIG. 44B. In addition, recommendation priorities may be presented in the recommended device list in a manner, for example, ranking (for example, a device identifier with a high recommendation priority is ranked before a device identifier with a low recommendation priority), highlighting (for example, a device identifier with a high recommendation priority is highlighted for display, and a device identifier with a low recommendation priority is normally displayed), or dynamic display (for example, a device identifier with a high recommendation priority is dynamically displayed, and a device identifier with a low recommendation priority is statically displayed). This is not specifically limited herein in this embodiment

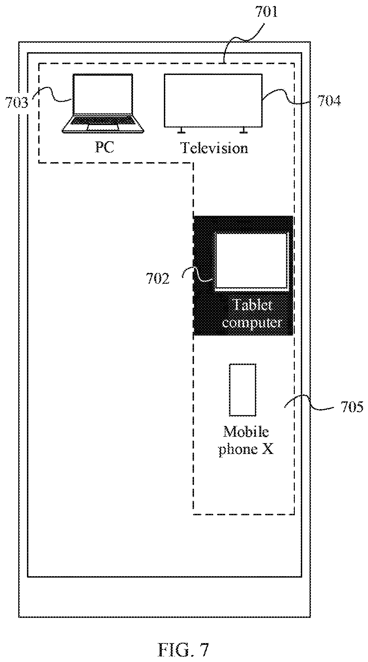

For example, with reference to FIG. 7, an example in which the target device is selected by the user from the recommended device list displayed on the mobile phone, the recommended device list is displayed according to Rule 1 and Rule 5, and the device identifier includes the icon and the name of the device is used. After determining that the drag intent of the user is cross-device drag, as shown in FIG. 7, the mobile phone may display a recommended device list 701. The recommended device list 701 includes a device identifier 702 of a tablet computer, a device identifier 703 of a PC, a device identifier 704 of a television, and a device identifier 705 of a mobile phone X. The tablet computer has established a connection to the mobile phone, and the PC, the mobile phone X, and the television establishes no connection to the mobile phone. As shown in FIG. 7, the device identifier 702 of the tablet computer and the device identifier 705 of the mobile phone X are displayed in the display region that is close to the right edge and that is of the touchscreen of the mobile phone, the device identifier 703 of the PC and the device identifier 704 of the television are displayed in the display region that is close to the upper edge and that is of the touchscreen of the mobile phone, and the device identifier 702 of the tablet computer in displayed in a highlighted manner, to prompt the user that the mobile phone establishes the connection to the tablet computer.

After the mobile phone displays the information about the candidate device, for example, the recommended device list, the user may select, from the recommended device list, the target device to which the user wants to drag the first window. The user may select one or more devices as the target devices. If the user selects one device as the target device, the mobile phone (for example, the drag service module at the application layer of the mobile phone) may send the obtained drag data (for example, the drag data 1) to the device, and the obtained drag data is used by the device to draw the dragged window. If the user selects a plurality of devices as the target devices, the mobile phone (for example, the drag service module at the application layer of the mobile phone) may send the obtained drag data (for example, the drag data 1) to the plurality of devices, and the obtained drag data is used by these devices to draw the dragged window. For example, still with reference to FIG. 7, the user wants to drag the first window to the tablet computer is used. The user may perform a selection operation (for example, a tap operation) on the device identifier 702 of the tablet computer in the recommended device list 701. In response to the operation, the mobile phone may determine the tablet computer as the target device. Then, the mobile phone may send the obtained drag data 1 to the tablet computer.

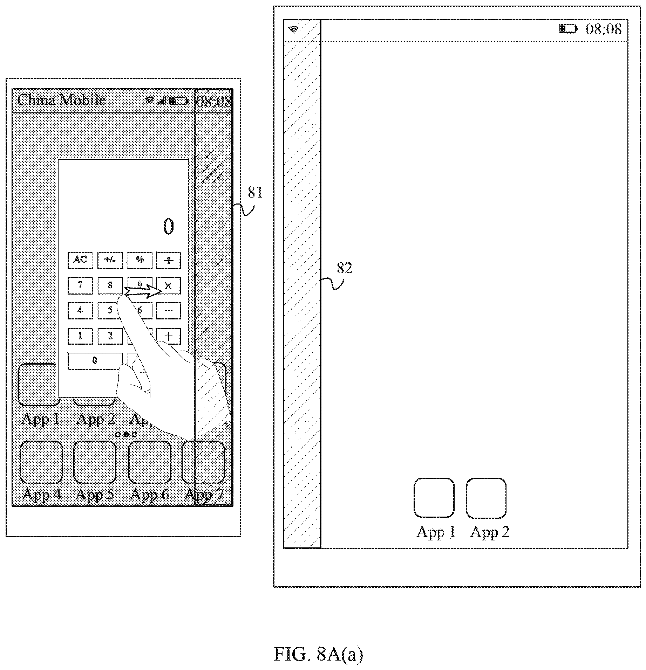

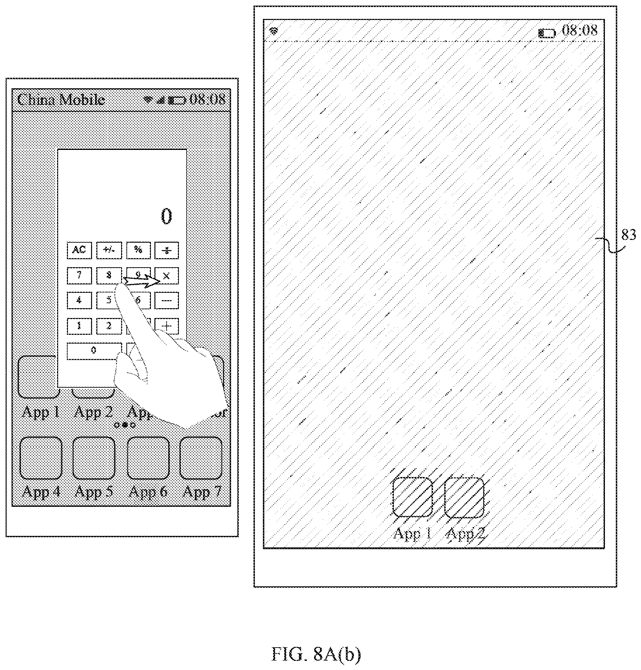

In addition, in some embodiments, when determining that the drag intent of the user is cross-device drag, the mobile phone used as the source end device may display a related prompt (for example, referred to as prompt information), to prompt the user that the dragged object is to be dragged out of the mobile phone. Similarly, when receiving the drag data 1, the tablet computer used as the target device may also display a related prompt. For example, the tablet computer may display the related prompt based on an indication that is in the drag data 1 and that is used to indicate that the drag data 1 is related data in the drag start event, to prompt the user that the object that is to be dragged in exists. Certainly, during cross-device drag, it may be prompted only on the source end device that the object is to be dragged out, or may be prompted only on the target device that the object that is to be dragged in exists, or both the source end device and the target device may give the corresponding prompts. This is not specifically limited herein in this embodiment. For example, as shown in FIG. 8A(a), when the mobile phone determines that the drag intent of the user is cross-device drag, the mobile phone may display an interface element 81 on an edge that is of the screen and from which the object is to be dragged out, to prompt the user that the dragged object is to be dragged out of the mobile phone. For example, the mobile phone may determine, based on the drag direction, on which edge the interface element 81 is specifically displayed. For example, if the drag direction is rightward drag, the interface element 81 is displayed on the right edge of the screen. If the drag direction is upward drag, the interface element 81 is displayed on the upper edge of the screen. In addition, when the tablet computer receives the drag data 1, the tablet computer may display an interface element 82 on an edge of a screen in which the object is to be dragged, to prompt the user that the object that is to be dragged in exists. For another example, as shown in FIG. 8A(b), the mobile phone gives no prompt when determining that the drag intent of the user is cross-device drag. The tablet computer displays an interface element 83 on a display when receiving the drag data 1, to prompt the user that the object that is to be dragged in exists. The interface element 81, the interface element 82, and the interface element 83 may be bar-shaped interface elements, for example, rectangular interface elements shown in the figures, or may be interface elements in another shape and another size, and may be further filled with a color, for example, blue, white, or a mixed color. In addition, the interface element 81, the interface element 82, and the interface element 83 may be statically displayed on the screens, or may be dynamically displayed on the screens. This is not limited in this embodiment of this application either.

8404: Send drag data 2 to the tablet computer in a process in which the first window continues to be dragged on the mobile phone.

The drag data 2 may include coordinate information of a first corner of the first window. The first comer may be any one of the upper left corner, the lower left corner, the upper right corner, and the lower right corner of the first window. In some other embodiments, the drag data 2 may alternatively include coordinate information of a plurality of corners of the upper left corner, the lower left corner, the upper right corner, and the lower right corner of the first window In the following embodiment, an example in which the drag data 2 includes the coordinate information of the first corner of the first window and the first corner is the upper left corner is used for description.

The drag data 2 may further include an indication used to indicate that the drag data 2 is related data in a drag movement event. The indication may be used to notify the target device for cross-device drag to continue to move, with the hand, the window displayed on the target device.

After triggering cross-device drag, for example, dragging the first window to the drag sensing region, the user may continue to move the finger (or the stylus). As the finger (or the stylus) of the user moves, the first window moves accordingly on the touchscreen of the mobile phone. It may be understood that, in the process in which the user drags the first window on the touchscreen of the mobile phone, a partial region of the first window (for example, the region may be a second region in this embodiment of this application) is displayed on the touchscreen of the mobile phone, and another partial region of the first window is hidden (or overflows the touchscreen, for example, the region may be a first region in this embodiment of this application). In some embodiments, during cross-device drag, to give the user the visual effect of dragging the first window from the source end device to the target device, in the process of dragging the first window, if a partial region of the first window overflows the touchscreen, the first window may be displayed on the source end device and the target device at the same time. Specifically, a partial region of the dragged first window is displayed on the source end device, and another partial region of the dragged first window (namely, the region overflowing the source end device) is displayed on the target device. To achieve this effect, in the process of dragging the first window, the mobile phone may obtain corresponding drag data, for example, referred to as the drag data 2, in real time in the drag process, and send the drag data 2 to the target device for cross-device drag (for example, the tablet computer) in real time. The drag data 2 is used by the target device to draw the dragged window on the target device with reference to the drag data 1.

For example, with reference to FIG. 3, in a specific implementation, in the process of dragging the first window (or in a process of moving the first window), the drag service module at the application layer of the mobile phone may obtain the drag data 2 in real time, and send the drag data 2 to the target device for cross-device drag (for example, the tablet computer) in real time.

In an example, a specific implementation in which the drag service module at the application layer of the mobile phone obtains the drag data 2 may be as follows: In the process of dragging the first window, the framework layer of the mobile phone generates a corresponding drag event, for example, the drag movement event. The drag movement event includes the drag data 2. The launcher at the application layer of the mobile phone may call back the drag movement event generated by the framework layer, to extract the drag data 2 from the drag movement event. After extracting the drag data 2, the launcher at the application layer of the mobile phone may send the drag data 2 to the drag service module at the application layer of the mobile phone. In this way, the drag service module at the application layer of the mobile phone can obtain the drag data 2.

S405: The tablet computer receives the drag data 1 and the drag data 2. When the first window has a region that overflows the touchscreen of the mobile phone, the tablet computer displays a partial region of a window thumbnail based on the received drag data 1 and drag data 2.

The window thumbnail is drawn based on the screenshot of the first window included in the drag data 1, and has content the same as that of the screenshot of the first window. Content in the region that is displayed on the display of the tablet computer and that is in the window thumbnail is the same as content of the region that overflows the touchscreen of the mobile phone and that is of the first window. A size of the window thumbnail may be the same as or different from a size of the first window. For example, the size of the window thumbnail is a size of the first window which is scaled by a specific ratio. The scale ratio may be greater than 1, or may be less than 1. In an example, the scale ratio may be determined based on a ratio of a screen size of the source end device to a screen size of the target device. For example, if the screen of the source end device is larger than the screen of the target device, the scale ratio is less than 1. For another example, if the screen of the source end device is smaller than the screen of the target device, the scale ratio is greater than 1. In another example, the scale ratio may be alternatively set by the user.

As described in S404, to give the user the visual effect of dragging the first window from the mobile phone to the tablet computer, the tablet computer may determine, based on resolution of the mobile phone and the received drag data 1 and drag data 2, whether the dragged first window has the region that overflows the touchscreen of the mobile phone. When the tablet computer determines that the dragged first window has the region that overflows the touchscreen of the mobile phone, the tablet computer may correspondingly display the partial region of the window thumbnail (where content in the region is the same as that in the region that overflows the touchscreen of the mobile phone and that is of the first window) on the display of the tablet computer. The resolution of the mobile phone may be sent by the mobile phone to the tablet computer in a process in which the tablet computer establishes the connection to the mobile phone, or after the connection is successfully established.

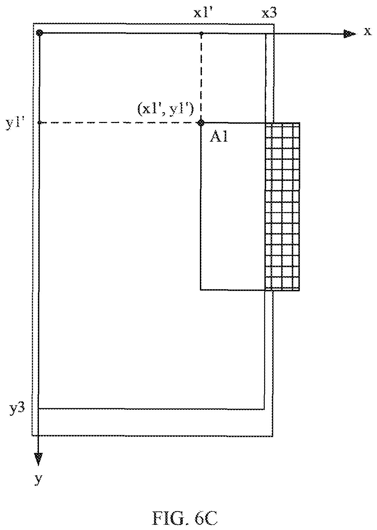

In an example, with reference to FIG. 6B, for example, the rect information of the first window included in the drag data 1 is as follows: the coordinates (x1, y1) of the upper left corner A1 of the first window, the coordinates (x2, y1) of the upper right corner A2 of the first window, the coordinates (x1, y2) of the lower left corner A3 of the first window, the coordinates (x2, y2) of the lower right corner A4 of the first window, and coordinates (x1', y1') of the upper left corner A1 of the first window in the drag data 2. As shown in FIG. 6C, a specific implementation in which the tablet computer determines, based on the resolution of the mobile phone and the received drag data 1 and drag data 2, whether the dragged first window has the region that overflows the touchscreen of the mobile phone may be as follows: The tablet computer may determine, based on the coordinates (x1, y1) of the upper left corner A1 of the first window and the coordinates (x2, y1) of the upper right corner A2 of the first window in the drag data 1, that the width of the first window is x2-xl. The tablet computer may determine, based on the coordinates (x1, y1) of the upper left corner A1 of the first window and the coordinates (x1, y2) of the lower left corner A3 of the first window in the drag data 1, that the length of the first window is y2-y1. The tablet computer may determine, based on the resolution of the mobile phone, the coordinate of the right edge of the touchscreen of the mobile phone on the x axis, for example, x3, and the coordinate of the lower edge of the touchscreen of the mobile phone on the y axis, for example, y3.

The tablet computer may determine, based on the width (x2-xl) and the length (y2-y1) of the first window, the coordinate x3 of the right edge of the touchscreen of the mobile phone, the coordinate y3 of the lower edge of the touchscreen of the mobile phone, and the coordinates (x1', y1') of the upper left corner of the first window in the drag data 2, whether the dragged first window has the region that overflows the touchscreen of the mobile phone. When xl' is less than 0, it may be determined that the first window has the region of that overflow the touchscreen of the mobile phone. When y1' is less than 0, it may be determined that the first window has the region that overflows the touchscreen of the mobile phone. When a sum of x1' and the width (x2-xl) of the first window is greater than the coordinate x3 of the right edge of the touchscreen of the mobile phone, it may be determined that the first window has the region that overflows the touchscreen of the mobile phone. When a sum of y1' and the length (y2-y1) of the first window is greater than the coordinate y3 of the lower edge of the touchscreen of the mobile phone, it may be determined that the first window has the region that overflows the touchscreen of the mobile phone. For example, with reference to FIG. 6C and the example shown in FIG. 5A(a) to FIG. 5A(c), because the drag direction in which the user drags the first window is rightward drag, the right edge of the first window first slides out of the touchscreen of the mobile phone, and after receiving the drag data 1 and the drag data 2, the tablet computer may determine that the sum of x1' and the width (x2-xl) of the first window is greater than the coordinate x3 of the right edge of the touchscreen of the mobile phone. In this case, the tablet computer may determine that the first window has the region that overflows the touchscreen of the mobile phone.

After determining that the first window has the region that overflows the touchscreen of the mobile phone, the tablet computer may determine, based on the drag data 1 and the drag data 2, a part that overflows the touchscreen of the mobile phone and that is of the first window, and display the corresponding region of the window thumbnail (where the content in the region is the same as that in the region that overflows the touchscreen of the mobile phone and that is of the first window) on the display of the tablet computer.

For example, in a specific implementation, the tablet computer may generate the window thumbnail based on the screenshot of the first window in the drag data 1. The tablet computer may further determine the size of the first window based on the determined width (x2-xl) and length (y2-yl) of the first window, and may determine the size of the window thumbnail based on the size of the first window. The size of the window thumbnail may be the same as or different from the size of the first window. For example, the size of the window thumbnail is the size of the first window which is scaled by the specific ratio (where the scale ratio may be adjusted based on the size of the screen of the target device, or the scale ratio may be set by the user).

The tablet computer may further determine, based on the rect information of the first window in the drag data 1 and the coordinates of the upper left corner of the first window in the drag data 2, which region of the window thumbnail is displayed on the display of the tablet computer. For example, the tablet computer may determine, based on the rect information of the first window in the drag data 1 and the coordinates of the upper left corner of the first window in the drag data 2, which of the left side, the right side, the upper side, and the lower side of the first window overflows the touchscreen of the mobile phone, and determine a ratio of the region, that overflows the touchscreen of the mobile phone and that is of the first window, to the first window, that is, may determine a specific region that overflows the touchscreen of the mobile phone and that is of the first window. Based on this, the tablet computer may determine which region of the window thumbnail is displayed on the display of the tablet computer. For example, when determining that the right one-third region of the first window overflows the touchscreen of the mobile phone, the tablet computer may determine to display the right one-third region of the window thumbnail on the display of the tablet computer. For another example, when determining that the upper one-fifth region of the first window overflows the touchscreen of the mobile phone, the tablet computer may determine to display the upper one-fifth region of the window thumbnail on the display of the tablet computer.

For example, still with reference to the foregoing example, a specific implementation in which the tablet computer determines the specific region that overflows the touchscreen of the mobile phone and that is of the first window may be as follows: When the tablet computer determines that xl' is less than 0, the tablet computer may determine that the left side of the first window overflows the touchscreen of the mobile phone. The tablet computer may further determine the ratio of the region, that overflows the touchscreen of the mobile phone and that is of the first window, to the first window, for example, specifically |x1'|/(x2-x1). When the tablet computer determines that y1' is less than 0, the tablet computer may determine that the upper side of the first window overflows the touchscreen of the mobile phone. The tablet computer may further determine the ratio of the region, that overflows the touchscreen of the mobile phone and that is of the first window, to the first window, for example, specifically |y1'|/(y2-y1). When the tablet computer determines that the sum of x I' and the width (x2-x1) of the first window is greater than the coordinate x3 of the right edge of the touchscreen of the mobile phone, the tablet computer may determine that the right side of the first window overflows the touchscreen of the mobile phone. The tablet computer may further determine the ratio of the region, that overflows the touchscreen of the mobile phone and that is of the first window, to the first window, for example, specifically 1-(x3-x1')/(x2-x1). When the tablet computer determines that the sum of y1' and the length (y2-y1) of the first window is greater than the coordinate y3 of the lower edge of the touchscreen of the mobile phone, the tablet computer may determine that the lower side of the first window overflows the touchscreen of the mobile phone. The tablet computer may further determine the ratio of the region, that overflows the touchscreen of the mobile phone and that is of the first window, to the first window, for example, specifically 1-(y3-y1')/(y2-y1).

In addition, in S405, a location (for example, referred to as a drag-in location) at which the partial region of the window thumbnail is displayed and that is of the tablet computer may correspond to a location (for example, a drag-out location for short) at which the first window is dragged out of the touchscreen of the mobile phone.

That the drag-in location corresponds to the drag-out location may include: An edge that is dragged out of the source end device and that is of the window corresponds to an edge that is dragged to the target device and that is of the window. For example, if the drag-out location is the left edge of the touchscreen of the mobile phone, the drag-in location is the right edge of the display of the tablet computer. If the drag-out location is the right edge of the touchscreen of the mobile phone, the drag-in location is the left edge of the display of the tablet computer. If the drag-out location is the upper edge of the touchscreen of the mobile phone, the drag-in location is the lower edge of the display of the tablet computer. If the drag-out location is the lower edge of the touchscreen of the mobile phone, the drag-in location is the upper edge of the display of the tablet computer. In a specific implementation, the tablet computer may determine the drag-in location based on the drag direction of the first window on the touchscreen of the mobile phone. For example, if the drag direction is rightward drag, the drag-out location is the right edge of the touchscreen of the mobile phone. Therefore, the tablet computer may determine that the drag-in location is the left edge of the display of the tablet computer, to give the user a visual effect of dragging the window in from the left edge of the tablet computer. If the drag direction is leftward drag, the drag-out location is the left edge of the touchscreen of the mobile phone. Therefore, the tablet computer may determine that the drag-in location is the right edge of the display of the tablet computer, to give the user a visual effect of dragging the window in from the right edge of the tablet computer. If the drag direction is upward drag, the drag-out location is the upper edge of the touchscreen of the mobile phone. Therefore, the tablet computer may determine that the drag-in location is the lower edge of the display of the tablet computer, to give the user a visual effect of dragging the window in from the lower edge of the tablet computer. If the drag direction is downward drag, the drag-out location is the lower edge of the touchscreen of the mobile phone. Therefore, the tablet computer may determine that the drag-in location is the upper edge of the display of the tablet computer, to give the user a visual effect of dragging the window in from the upper edge of the tablet computer.

In an example, the tablet computer may determine the drag direction of the first window on the touchscreen of the mobile phone based on the drag data 2 received in real time. As described above, in the process in which the user drags the first window, the mobile phone obtains the drag data 2 in real time and sends the drag data 2 to the tablet computer in real time. The tablet computer may determine the drag direction of the first window on the touchscreen of the mobile phone based on a change of the coordinates of the upper left corner of the first window in the drag data 2 received in real time. For example, the coordinates of the upper left corner of the first window in the drag data 2 received by the tablet computer at a first moment are (x1_1', y1_1'), and the coordinates of the upper left corner of the first window in the drag data 2 received by the tablet computer at a second moment (where the second moment is later than the first moment) are (x1_2', y1_2'). If x1_2' is greater than x1_1' and y1_1' is equal to y1_2', the tablet computer may determine that the drag direction of the first window on the touchscreen of the mobile phone is rightward drag. If x1_2' is less than x1_1' and y1_1' is equal to y1_2', the tablet computer may determine that the drag direction of the first window on the touchscreen of the mobile phone is leftward drag. If x1_2' is equal to x1_1' and y1_1' is less than y1_2', the tablet computer may determine that the drag direction of the first window on the touchscreen of the mobile phone is downward drag. If x1_2' is equal to x1_1' and y1_1' is greater than yl_2', the tablet computer may determine that the drag direction of the first window on the touchscreen of the mobile phone is upward drag.

That the drag-in location corresponds to the drag-out location may further include: A specific location of the window on an edge of the source end device corresponds to a specific location of the window on an edge of the target device. For example, if the drag-out location is the center location of an edge (for example, the right edge) of the touchscreen of the mobile phone, the drag-in location is also the center location of a corresponding edge (for example, the left edge) of the tablet computer. In a specific implementation, the tablet computer may determine a specific drag-in location on the corresponding edge of the tablet computer based on the coordinates of the upper left corner of the first window in the drag data 2. For example, with reference to FIG. 6C, an example in which the coordinates of the upper left corner of the first window are (x1', y1') is used. The tablet computer may determine, based on the coordinate y1' of the upper left corner of the first window on the Y axis of the display coordinate system of the mobile phone and the resolution of the mobile phone, a ratio of a distance between the top edge of the first window and the upper edge of the touchscreen of the mobile phone to the height of the mobile phone. For example, the determined ratio is one fifth. The tablet computer may determine, based on the ratio and resolution of the tablet computer, a location that is at a distance from the upper edge of the tablet computer and that is of the top edge of the window thumbnail (for example, a product of the ratio and the height of the tablet computer is used as a coordinate of the top edge of the window thumbnail on a Y axis of a display coordinate system of the tablet computer), to achieve an effect that the specific location of the window on the edge of the source end device corresponds to the specific location of the window on the edge of the target device.

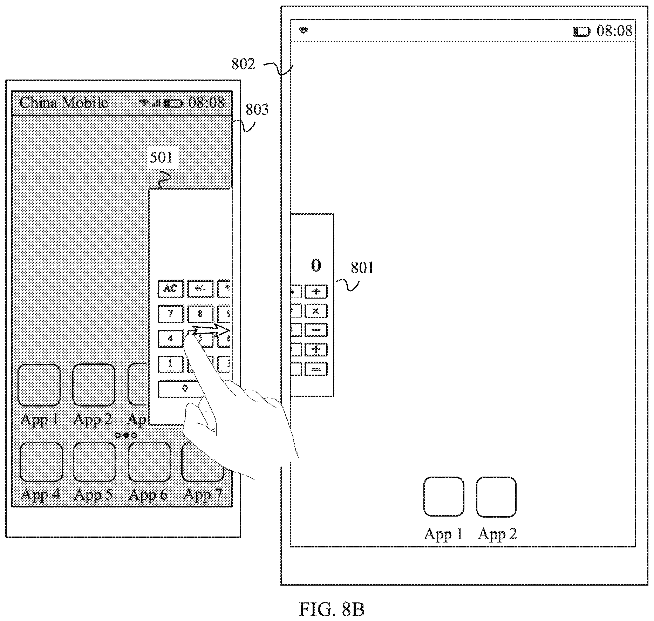

For example, with reference to FIG. 3, FIG. 5A(a) to FIG. 5A(c), and FIG. 6C, an example in which the drag data 1 includes a screenshot of the calculator window and rect information of the calculator window (namely, the coordinate information of the upper left corner, the upper right corner, the lower left corner, and the lower right corner of the first window when drag starts), and the drag data 2 includes the coordinate information of the upper left corner of the first window in the drag process is used. After the mobile phone sends the drag data 1 and the drag data 2 to the tablet computer, a drag service module at an application layer of the tablet computer may receive the drag data 1 and the drag data 2. Then, the drag service module at the application layer of the tablet computer may send the drag data 1 and the drag data 2 to a framework layer of the tablet computer, and the framework layer draws, based on the drag data 1 and the drag data 2, and displays the partial region of the window thumbnail on the display of the tablet computer. For example, as shown in FIG. 8B, the window thumbnail displayed by the tablet computer is shown in 801. It can be seen that content in the window thumbnail 801 is the same as content in a part that overflows the mobile phone and that is of the calculator window 501, or the window thumbnail 801 and a part that is displayed on the mobile phone and that is of the calculator window 501 can implement complete presentation of content in the computer window 501. In addition, a drag direction in which the calculator window 501 is dragged is rightward drag, and a drag-in location of the window thumbnail 801 is the left edge 802 of the display of the tablet computer. In addition, a drag-out location is the center location of the right edge 803 of the touchscreen of the mobile phone, and the drag-in location also is specifically the center location of the left edge 802. In this way, a visual effect provided for the user is that the calculator window 501 is dragged from the mobile phone to a target device end for cross-device drag, namely, the tablet computer.

It may be understood that, as the first window continues to be dragged on the mobile phone, the mobile phone may dynamically adjust, based on the user operation, a size of the region that is displayed on the touchscreen of the mobile phone and that is of the first window. In addition, the mobile phone also obtains the drag data 2 in real time and sends the drag data 2 to the tablet computer in real time. The tablet computer may also dynamically adjust, based on the received drag data 2, a size of the region that is displayed on the display of the tablet computer and that is of the window thumbnail.

In other words, in the process in which the user drags the first window on the touchscreen of the mobile phone, as the finger (or the stylus) of the user moves, the region that is displayed on the touchscreen of the mobile phone and that is of the first window changes, and the region that overflows the touchscreen of the mobile phone and that is of the first window also changes. In this embodiment, to reflect chirality, as the finger (or the stylus) of the user moves, the source end device (for example, the mobile phone) and the target device (for example, the tablet computer) may dynamically adjust, based on movement of the finger (or the stylus), sizes of display parts that display content and that are of the source end device and the target device.

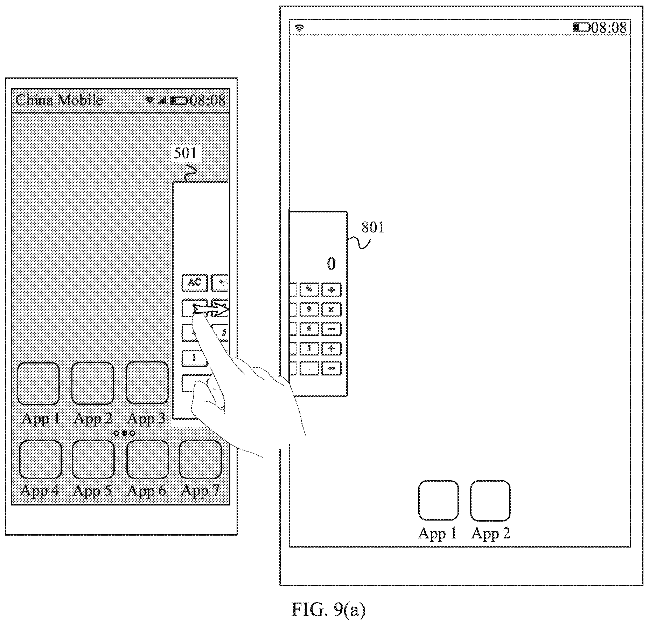

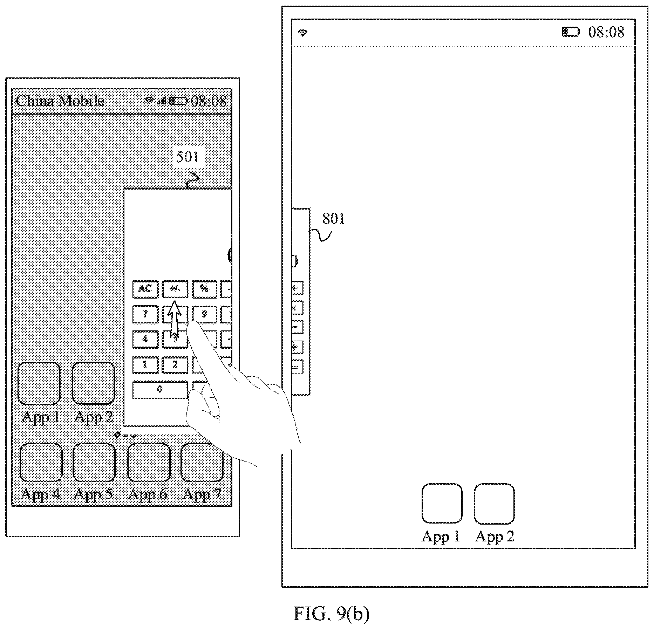

Specifically, the mobile phone may dynamically adjust, based on movement of the finger of the user, the size of the region that is displayed on the touchscreen of the mobile phone and that is of the first window. The tablet computer may dynamically adjust, based on a change of the part that overflows the touchscreen of the mobile phone and that is of the first window, the size of the region that is displayed on the display of the tablet computer and that is of the window thumbnail. For example, if the finger (or the stylus) of the user continues to move in a same direction in S401, the region that is displayed on the touchscreen of the mobile phone and that is of the first window decreases, and the part that overflows the touchscreen and that is of the first window increases. Accordingly, the region that is displayed on the tablet computer and that is of the window thumbnail increases. If the finger (or the stylus) of the user moves in an opposite direction in S401, the region that is displayed on the touchscreen of the mobile phone and that is of the first window increases, and the part that overflows the touchscreen and that is of the first window decreases. Accordingly, the region that is displayed on the tablet computer and that is of the window thumbnail decreases. For example, with reference to FIG. 8B, as shown in FIG. 9(a), when the finger of the user continues to move rightward, the calculator window 501 moves rightward, a region displayed on the touchscreen of the mobile phone decreases, and the calculator window 501 continues to move rightward to overflow the touchscreen of the mobile phone. Correspondingly, a region that is displayed on the tablet computer and that is of the window thumbnail 801 increases. To be specific, a region that newly overflows the touchscreen of the mobile phone is displayed on the tablet computer. As shown in FIG. 9(b), when the finger of the user moves leftward, the calculator window 501 moves leftward, a region displayed on the touchscreen of the mobile phone increases, and a region that overflows the touchscreen of the mobile phone and that is of the calculator window 501 decreases. Correspondingly, a region that is displayed on the tablet computer and that is of the window thumbnail 801 decreases.

In a specific implementation, in the process in which the user drags the first window, the mobile phone used as the source end device may obtain the drag data 2 in real time and send, in real time, the drag data 2 to the tablet computer used as the target device. The drag data 2 includes the coordinate information of the upper left corner of the first window. The tablet computer may obtain, in real time based on the coordinate information of the upper left corner of the first window in the drag data 2 received in real time, the part that overflows the touchscreen of the mobile phone and that is of the first window, to dynamically adjust, in real time based on the part, the size of the region that is displayed on the display of the tablet computer and that is of the window thumbnail. A specific implementation of obtaining the part that overflows the touchscreen of the mobile phone and that is of the first window is similar to a specific implementation of corresponding content in S405. Details are not described herein again.

It should be noted that, in the foregoing embodiment, an example in which the target device for cross-device drag determines the ratio of the region, that overflows the touchscreen of the mobile phone and that is of the first window, to the first window is used for description. In some other embodiments, the source end device for cross-device drag may alternatively determine a ratio of a region, that overflows the touchscreen of the mobile phone and that is of the first window, to the first window, and may send the determined ratio to the target device. For example, when determining that the first window has the region that overflows the touchscreen of the mobile phone, the source end device adds the ratio to the drag data 2 and sends the drag data 2 to the target device. In this way, the target device may determine, based on the received ratio and a determined specific side that overflows the touchscreen of the mobile phone and that is of the first window, a specific region in which the window thumbnail needs to be displayed on the display of the tablet computer. A specific implementation in which the source end device determines the foregoing ratio is similar to a specific implementation in which the tablet computer determines the ratio. Details are not described herein again.

S406: The mobile phone receives a drag release user operation.

S407: In response to the user operation in S406, the mobile phone projects an application interface, that corresponds to the first window, to the tablet computer for display.

The drag release user operation may be an operation of stopping moving the finger (or the stylus) and uplifting the finger (or the stylus) by the user. After cross-device drag is triggered, for example, the first window is dragged to the drag sensing region, if the user wants to display the dragged first window on the tablet computer used as the target device, the user may stop moving the finger (or the stylus) and uplift the finger (or the stylus). In response to the user operation, the tablet computer may display the application interface corresponding to the first window. For example, the mobile phone may project the application interface corresponding to the first window to the tablet computer for display. In an example, the application interface displayed by the tablet computer may be displayed on an edge or in the middle of the screen of the tablet computer in a window hovering manner. The application interface may be alternatively displayed in full screen. This is not specifically limited herein in this embodiment.

It should be noted that, in some embodiments, after cross-device drag is triggered, the mobile phone may perform S407 after receiving the drag release user operation. In some other embodiments, after cross-device drag is triggered, after receiving the drag release user operation, the mobile phone may first determine whether the size of the region that is displayed on the touchscreen of the mobile phone and that is of the first window is less than a preset threshold (or determine whether a size of the region that overflows the touchscreen of the mobile phone and that is of the first window is greater than a preset threshold, for example, the preset threshold is 50%). When it is determined that the size of the region that is displayed on the touchscreen of the mobile phone and that is of the first window is less than the preset threshold (or it is determined that the size of the region that overflows the touchscreen of the mobile phone and that is of the first window is greater than the preset threshold), S407 is performed. If it is determined that the size of the region that is displayed on the touchscreen of the mobile phone and that is of the first window is greater than the preset threshold (or it is determined that the size of the region that overflows the touchscreen of the mobile phone and that is of the first window is less than the preset threshold), projection for display may not be performed. To be specific, the application interface corresponding to the first window is not projected to and displayed on the tablet computer. For example, the mobile phone may normally display the application interface of the first window on the touchscreen of the mobile phone. The mobile phone may further send indication information to the tablet computer, and the indication information is used to indicate that drag stops, so that the tablet computer normally displays an interface of the tablet computer. Alternatively, if it is determined that the size of the region that is displayed on the touchscreen of the mobile phone and that is of the first window is greater than the preset threshold (or it is determined that the size of the region that overflows the touchscreen of the mobile phone and that is of the first window is less than the preset threshold), the dragged first window is hovered, adsorbed and displayed on the mobile phone and the tablet computer. For example, a display effect may be shown in FIG. 8B. To be specific, a part of the dragged first window is displayed on the mobile phone, and a part of the dragged first window is displayed on the tablet computer. It should be noted that, after the drag release user operation is received, when it is determined that the size of the region that is displayed on the touchscreen of the mobile phone and that is of the first window is greater than the preset threshold (or it is determined that the size of the region that overflows the touchscreen of the mobile phone and that is of the first window is less than the preset threshold), whether to perform an operation of hovering, adsorbing, and displaying the first window on the mobile phone and the tablet computer, or not to perform projection for display may be pre-configured.

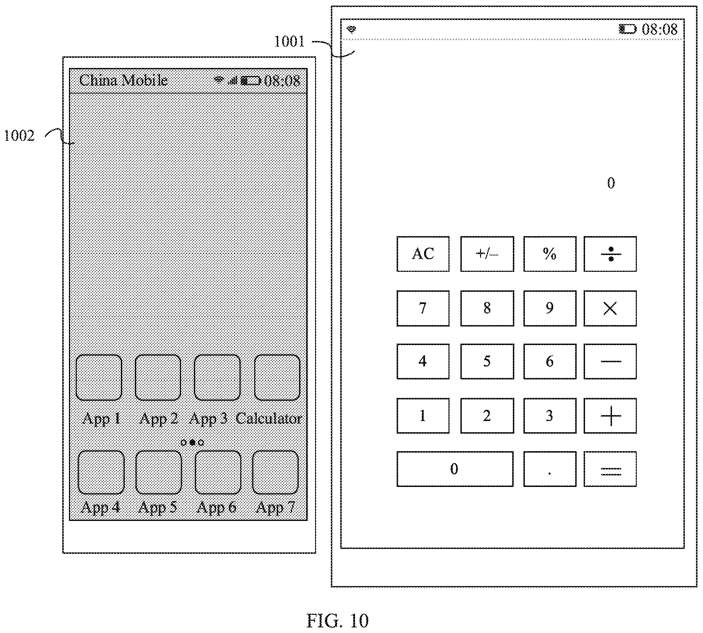

For example, with reference to FIG. 3 and the examples shown in FIG. 5A(a) to FIG. 5A(c), FIG. 8B, FIG. 9(a), and FIG. 9(b), after cross-device drag is triggered, for example, the calculator window is dragged to the drag sensing region and continues to be dragged, the user stops moving the finger and uplifts the finger. Correspondingly, the mobile phone may receive the drag release user operation. In response to the operation, a projection service module of the mobile phone may start a projection process. In response to the start of the projection process, the drag service module of the mobile phone may obtain corresponding data by using a display manager of the mobile phone (for example, the display manager is a module at the framework layer of the mobile phone), and send the corresponding data to the tablet computer. The tablet computer may display, on the tablet computer based on the received data, the application interface corresponding to the first window. For example, in response to the start of the projection process, the drag service module of the mobile phone may obtain the corresponding data, for example, screen recording data, by using the display manager of the mobile phone, and send the corresponding data to the tablet computer, that is, implement projection of the application interface corresponding to the first window to the tablet computer for display. In some embodiments, a distributed multimedia protocol (Distributed Multi-media Protocol, DMP) may be used to implement projection and display of the application interface corresponding to the first window to and on the tablet computer. For example, after the projection process is started, the drag service module of the mobile phone may create a virtual display (VirtualDisplay) by using the display manager (DisplayManager) of the mobile phone. For example, the drag service module of the mobile phone sends, to the display manager of the mobile phone, a request for creating the VirtualDisplay. After completing creating the VirtualDisplay, the display manager of the mobile phone may return the created VirtualDisplay to the drag service module of the mobile phone. Then, the drag service module of the mobile phone may draw the application interface corresponding to the first window, and move the application interface to the VirtualDisplay. In addition, the VirtualDisplay may be further bound to the projection service module of the mobile phone for screen recording. In this way, the drag service module of the mobile phone can obtain the screen recording data. After obtaining the screen recording data, the drag service module of the mobile phone may encode the screen recording data, and then send encoded screen recording data to the tablet computer. The drag service module of the tablet computer may receive the corresponding data, and obtain the screen recording data after decoding the data The drag service module of the tablet computer sends, to a projection service module of the tablet computer, the screen recording data obtained after decoding. As shown in FIG. 10, the projection service module of the tablet computer cooperates with the framework layer of the tablet computer, to draw, based on the screen recording data, an application interface 1001 corresponding to the calculator window, and display the application interface 1001. For example, the framework layer of the tablet computer may provide a surfaceview to implement projection and display of the application interface 1001 to and on the tablet computer end. In addition, as shown in FIG. 10, for the mobile phone, after receiving the drag release user operation, the mobile phone may display a home screen 1002. In another embodiment, the mobile phone may alternatively display an application interface (not shown in the figure) of the calculator window. The calculator window may be displayed on an edge or in the middle of the screen of the mobile phone in a hovering manner, or may be displayed in full screen. This is not specifically limited herein in this embodiment in some other embodiments, wireless projection (Miracast) may be alternatively used to implement projection and display of the application interface corresponding to the first window to and on the tablet computer. To be specific, the mobile phone may obtain all layers of the application interface, then integrate all the obtained layers into a video stream (or referred to as screen recording data), encode the video stream, and then send encoded video stream to the tablet computer by using a real time streaming protocol (real time streaming protocol, RTSP). After receiving the video stream, the tablet computer may decode the video stream and play the video stream, to implement projection and display of the application interface corresponding to the first window to and on the tablet computer. Alternatively, the mobile phone may obtain an instruction stream after performing instruction extraction on the application interface corresponding to the first window, obtain layer information and the like of the application interface, and then send the instruction stream, the layer information, and the like to the tablet computer. The instruction stream, the layer information, and the like are used by the tablet computer to restore the application interface corresponding to the first window, to implement projection and display of the application interface corresponding to the first window to and on the tablet computer.

In some embodiments, after the source end device projects the application interface corresponding to the first window to the target device for display, the application interface corresponding to the first window may be dragged back to the source end device (or projection is exited) in the following manner.

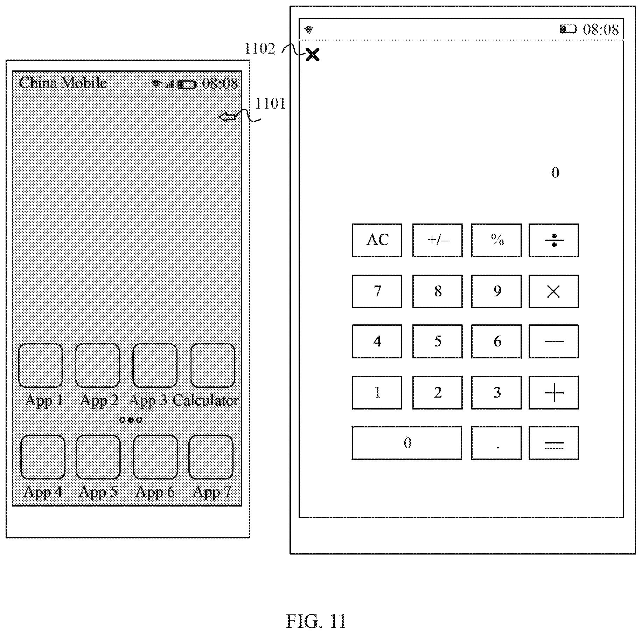

Manner 1: As shown in FIG. 11, after the source end device projects the application interface corresponding to the first window to the target device for display, the application interface displayed by the target device may include a button configured to drag the application interface corresponding to the first window back to the source end device, for example, a button 1102. After receiving an operation of the user for the button 1102, the target device may exit projection, and the source end device may continue to display the application interface corresponding to the first window to give the user a visual effect of dragging the application interface from the target device back to the source end device. For example, after receiving the operation of the user for the button 1102, the target device may send a projection exit request to the source end device. After receiving the request, the source end device stops projection, and displays the application interface of the first window on the source end device.

Manner 2: The foregoing button configured to drag the application interface corresponding to the first window back to the source end device may be alternatively displayed on the source end device. For example, still as shown in FIG. 11, after the source end device projects the application interface corresponding to the first window to the target device for display, the source end device displays a button configured to drag the application interface corresponding to the first window back to the source end device, for example, a button 1101. After receiving an operation of the user for the button 1101, the source end device may stop projection, and continue to display the application interface corresponding to the first window, to give the user a visual effect of dragging the application interface from the target device back to the source end device.

It should be noted that, in a specific implementation, after the application interface corresponding to the first window is projected to and displayed on the target device, only one of the button 1101 and the button 1102 may be displayed, or both the button 1101 and the button 1102 may be displayed. This is not specifically limited herein in this embodiment.

Manner 3: After receiving an operation of disconnecting from the target device by the user in a status bar or a shortcut toolbar, the source end device may stop projection, and continue to display the application interface corresponding to the first window, to give the user a visual effect of dragging the application interface from the target device back to the source end device.

Manner 4: The user may drag the application interface displayed by the target device back to the source end device in a drag manner. An effect thereof is similar to the effect of dragging the first window from the source end device to the target device. Details are not described herein again.

It should be noted that the steps in the foregoing embodiment and the corresponding descriptions thereof are merely a possible implementation of dragging the window from the source end device to the target device. Implementation of drag in this application is not limited to the foregoing descriptions.

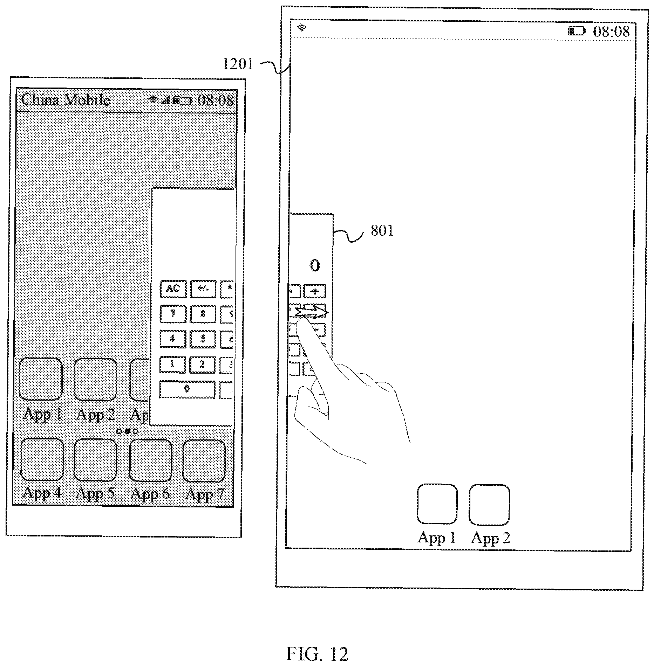

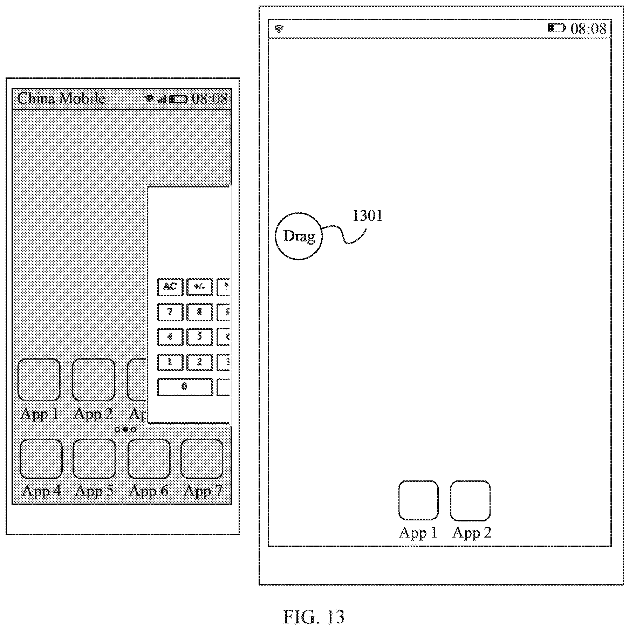

For example, in the foregoing embodiment, an example in which the user drags the window out of the source end device and then releases the finger to complete drag is used for description. Such drag may be considered as coherent drag. In some other embodiments, drag by the user may alternatively not be a coherent drag action. In other words, drag is a non-coherent process. For example, the window supports in being first dragged out of the source end device and then being dragged in on the target device. This implementation is applicable to a scenario of two different users or a non-continuous drag task. This implementation is similar to implementation of S401 to S407 in the foregoing embodiment, and a difference lies in that, after receiving the screen recording data, the tablet computer used as the target device temporarily caches the screen recording data, that is, does not use the received screen recording data temporarily to draw and display the application interface corresponding to the first window. In this way, the display of the tablet computer displays the partial region of the window thumbnail. The user may drag, by using an input device of the tablet computer, the window thumbnail displayed on the display of the tablet computer, to implement drag in on the target device. For example, with reference to FIG. 8B, as shown in FIG. 12, the display of the tablet computer has a touch function. The user may input a corresponding user operation (for example, a rightward slide) on a display 1201 of the tablet computer by using the finger (or the stylus), to trigger drag for the window thumbnail (for example, the window thumbnail 801) on the tablet computer. Then, the user may release drag on the tablet computer when wanting to display, on the tablet computer used as the target device, the application interface corresponding to the first window. Correspondingly, the tablet computer may receive the drag release user operation. In this case, in response to the operation, the tablet computer may draw, based on the cached screen recording data, the application interface corresponding to the first window and display the application interface on the display of the tablet computer. It should be noted that, in a process in which the user drags the window thumbnail by using the input device of the tablet computer, the tablet computer may dynamically adjust, based on the user operation, the size of the region that is displayed on the display of the tablet computer and that is of the window thumbnail, and the mobile phone may also correspondingly dynamically adjust the size of the region that is displayed on the touchscreen of the mobile phone and that is of the first window. For example, the tablet computer may send, to the mobile phone based on the user operation, drag data that includes coordinate information of the upper left corner of the window thumbnail (where the drag data may be third drag data in this embodiment of this application), so that the mobile phone dynamically adjusts, based on the drag data, the size of the region that is displayed on the touchscreen of the mobile phone and that is of the first window. A specific implementation thereof is similar to descriptions of corresponding content in S405. Details are not described herein again. In addition, the user may alternatively choose not to perform drag on the target device. If the tablet computer receives no drag operation of the user for the window thumbnail within preset duration, as shown in FIG. 13, the tablet computer may collapse the displayed window thumbnail. Optionally, still with reference to FIG. 13, after collapsing the window thumbnail, the tablet computer may further support re-drag in, for example, display a floating ball 1301 (or a floating bar). The user may perform a corresponding operation, for example, a tap operation, on the floating ball 1301, to trigger the tablet computer to redisplay the window thumbnail (as shown in FIG. 12), so as to support the user in performing, on the tablet computer, a drag operation.

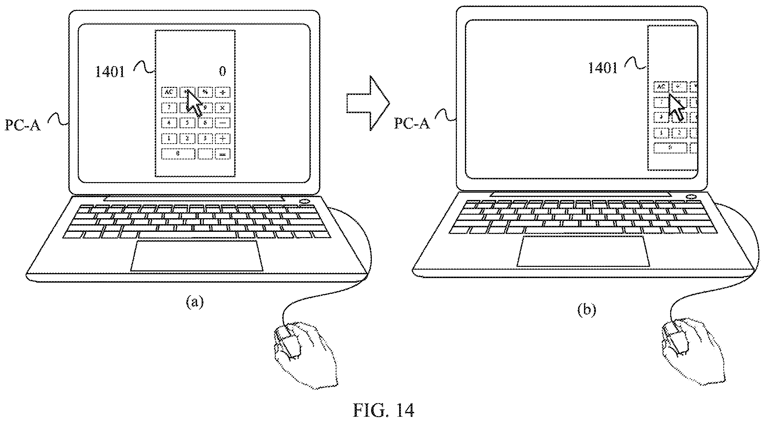

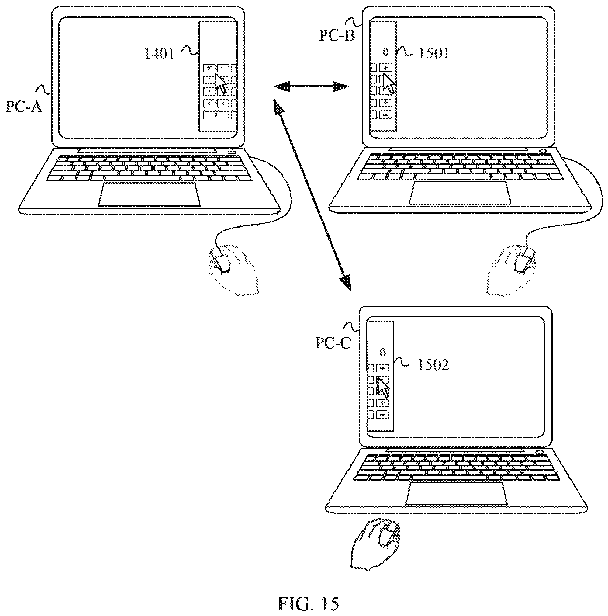

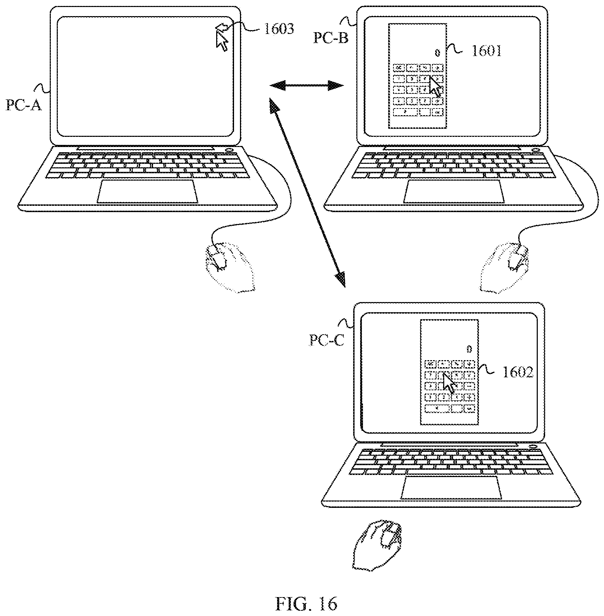

For another example, in the foregoing embodiment, an example in which there is one target device is used for description. In some other embodiments, there may be alternatively a plurality of target devices. For example, if the user selects a plurality of device identifiers from the recommended device list displayed by the source end device, devices corresponding to the plurality of device identifiers are all used as target devices. For another example, the source end device establishes connections to a plurality of devices at the same time, and the source end device automatically determines, as target devices, the plurality of devices that establish the connections to the mobile phone (where in this implementation, the source end device may display no recommended device list). It should be noted that device forms of the plurality of devices used as the target devices may be the same (for example, be all tablet computers, or be all PCs), or may be different (for example, include a tablet computer and a PC, or include a tablet computer, a PC, and a television). This is not specifically limited herein in this embodiment. This implementation is similar to implementation of S401 to S407 in the foregoing embodiment, and a difference lies in that the source end device separately sends the obtained drag data to the plurality of devices, for example, the drag data 1 and the drag data 2, so that the obtained drag data is used by the plurality of devices to respectively display window thumbnails based on the received drag data. In addition, after receiving the drag release user operation, the source end device separately projects the application interface corresponding to the first window to the plurality of devices for display. In an example, the source end device is a PC, for example, referred to as a PC-A. For example, the PC-A establishes connections to two PCs (for example, respectively referred to as a PC-B and a PC-C) at the same time. With reference to FIG. 14, as shown in (a) in FIG. 14, the user initiates drag for a calculator window 1401 on the PC-A. As shown in (b) in FIG. 14, after the calculator window 1401 moves to a drag sensing region of the PC-A, the PC-A obtains the drag data 1 and sends the drag data 1 to the PC-B and the PC-C. In a process in which the user continues to drag the calculator window 1401, the PC-A obtains the drag data 2 in real time and sends the drag data 2 to the PC-B and the PC-C in real time. With reference to FIG. 14, as shown in FIG. 15, when the calculator window 1401 has a region that overflows a display of the PC-A, the PC-B and the PC-C may respectively display partial regions of window thumbnails based on the received drag data 1 and drag data 2. For example, the window thumbnail displayed by the PC-B is shown in 1501, and the window thumbnail displayed by the PC-C is shown in 1502. After the target devices display the window thumbnails, the user may continue to drag the first window out of the source end device by using an input device (for example, a mouse) of the PC-A, or drag the first window to the destination device by using an input device of the PC-B or the PC-C. Then, as shown in FIG. 16, if a drag release user operation is received, the application interface corresponding to the calculator window is projected to the PC-B and the PC-C for display. For example, an application interface displayed by the PC-B is shown in 1601, and an application interface displayed by the PC-C is shown in 1602. After the application interface corresponding to the window is projected to the plurality of target devices for display, if an application service of the application does not support multi-focus editing, the user is allowed to perform a corresponding editing operation on only one target device at a time. If an application service of the application supports multi-focus editing, the user is allowed to perform an editing operation on the plurality of target devices at the same time. In addition, after the application interface corresponding to the window is projected to the plurality of target devices for display, the user may drag the application interfaces on the plurality of target devices back to the source end device at a time by using the button that is configured to drag the application interface corresponding to the windows back to the source end device and that is displayed on the source end device. For example, still with reference to FIG. 16, the PC-A displays a button 1603, the user may perform an operation on the button 1603, to trigger the PC-A to stop projection, and the PC-A may further continue to display the application interface corresponding to the calculator window, to give the user the visual effect of dragging the application interface from the PC-B and the PC-C back to the PC-A.

For another example, in the foregoing embodiment, after receiving the drag release user operation, the source end device projects the application interface corresponding to the first window to the target device to display the window. In some other embodiments, the window may be alternatively displayed by starting a corresponding application on the target device. This implementation is similar to implementation of S401 to S407 in the foregoing embodiment, and a difference lies in that, after receiving the drag release user operation in S406, 5407 is not performed, but the following is performed: The mobile phone may send indication information to the tablet computer, where the indication information is used to indicate that drag for the window ends. After receiving the indication information, the tablet computer detects whether the tablet computer includes an application corresponding to an application label. The application label may include an identity (Identity, ID, for example, a package name) of the application or a name of the application. The application label may further include a class name of the application. The application label may be added to the drag data 1 by the mobile phone and sent to the tablet computer. The application corresponding to the application label may be an application the same as an application corresponding to the first window, or may be an application having a same function. If there is the application corresponding to the application label, the tablet computer starts the application and displays a corresponding application interface based on content information (where the content information is information about content that is displayed in the first window and that is sent by the mobile phone to the tablet computer). If no application corresponding to the application label exists on the tablet computer, the screen recording data may be requested from the mobile phone. To be specific, the window is displayed by projecting the application interface corresponding to the first window to the tablet computer. In addition, if the target device displays the window in a manner of starting the corresponding application, the window service is run on the target device end. Therefore, no case in which the application interface corresponding to the first window is dragged back to the source end device (or projection is exited) exits.

For another example, in the foregoing embodiment, an example in which the input device is the touchscreen is used for description. In some other embodiments, the input device may be alternatively a mouse, a touchpad, or the like. This is not limited herein in this embodiment. This implementation is similar to implementation of S401 to S407 in the foregoing embodiment, and a difference lies in that the input devices used by the user to input a corresponding operation are different.

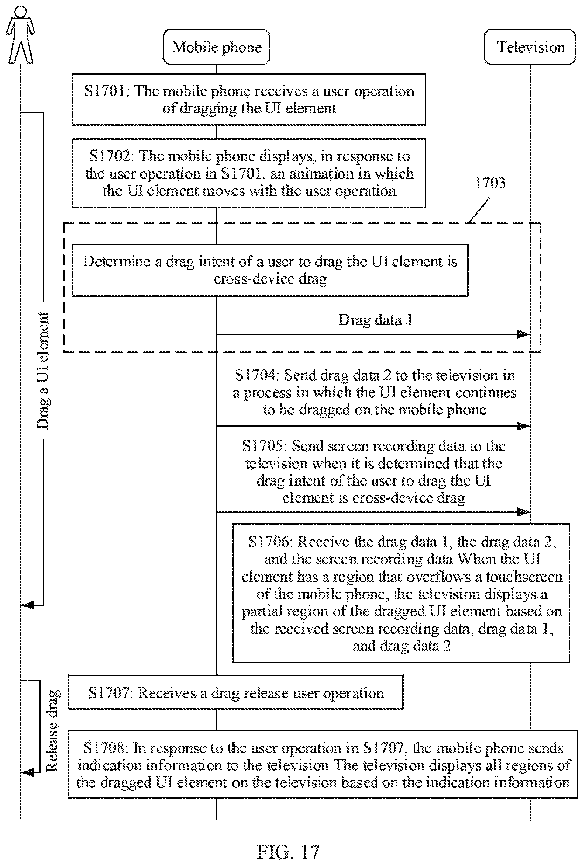

FIG. 17 is a schematic flowchart of an object drag method according to an embodiment of this application. In this embodiment, the method provided in this embodiment is described in detail by using an example in which the first terminal 101 is a mobile phone, the second terminal 102 is a television, the input device of the first terminal 101 is a touchscreen, and the dragged object is a UI element, for example, a video component (view), a floating window, or a picture-in-picture. For example, the mobile phone is used as the source end device, and the television is used as the target device.

As shown in FIG. 17, the method may include the following S1701 to S1708.

S1701: The mobile phone receives a user operation of dragging the UI element.

S1702: The mobile phone displays, in response to the user operation in S1701, an animation in which the UI element moves with the user operation.

The UI element in this embodiment may be a video component (or referred to as a video element), a floating window (for example, a video chat window), a picture-in-picture, or the like. The user operation in S1701 may be the drag operation in this embodiment of this application.

It should be noted that descriptions of corresponding content in S1701 and S1702 are similar to descriptions of corresponding content in S401 and S402 in the embodiment shown in FIG. 4, and a difference lies in that the dragged object in S1701 and S1702 is the UI element, for example, the video component, the floating window (for example, the video chat window), or the picture-in-picture. Details are not described herein again in this embodiment.

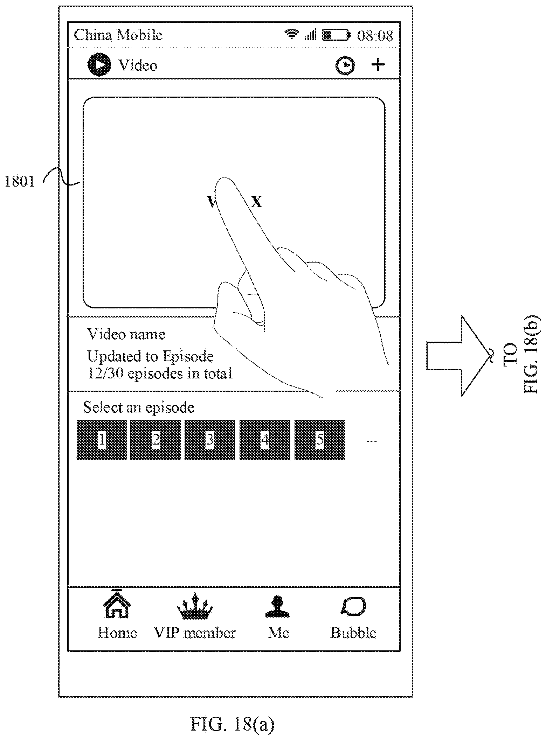

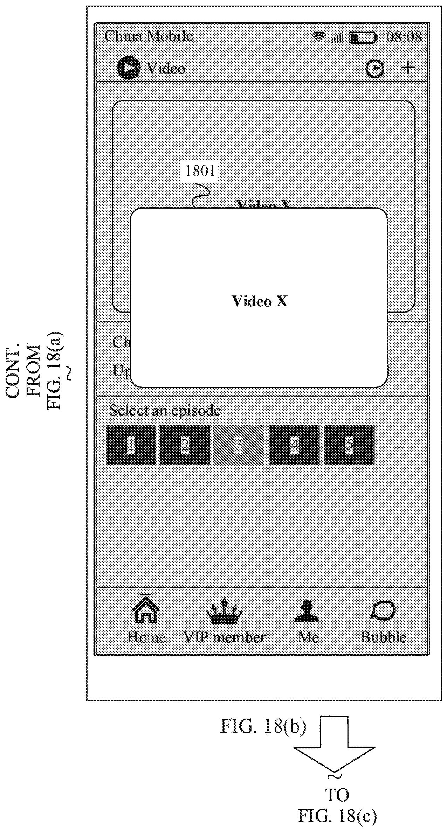

For example, with reference to FIG. 3 and FIG. 18(a) to FIG. 18(c), an example in which the dragged object is the video component and the user operation in S1701 includes a touch and hold operation for the video component and an operation of pressing and moving the dragged video component is used. As shown in FIG. 18(a), an interface of a video application is displayed on the touchscreen of the mobile phone, and the interface includes a video component 1801. A video (for example, a video X) is being played on the video component 1801. When wanting to drag the video component 1801, a user may perform a touch and hold operation on the video component 1801. As shown in FIG. 18(b), in response to the operation, the mobile phone may trigger drag for the video component 1801. For example, a window manager of the mobile phone may perform scale-down processing on the video component 1801, and may further perform background blurring processing, and send a scaled-down video component 1801 to a launcher at an application layer of the mobile phone to display the scaled-down video component 1801. In addition, on the interface of the video application, the original video component may continue to be displayed to play the video (as shown in FIG. 18(a) to FIG. 18(c), that is, a dragged video component 1801 is a window copied by the mobile phone), or may not be displayed (not shown in the figure, that is, a dragged video component 1801 is the original video component).

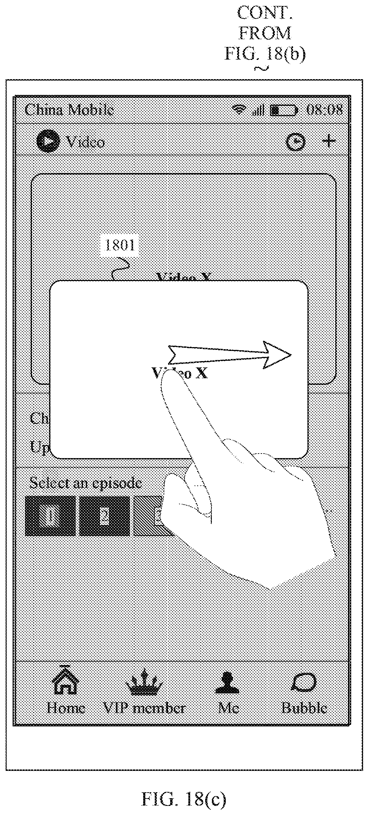

Then, the user presses the video component 1801 and moves a finger, so that the video component 1801 moves on the touchscreen of the mobile phone as the finger of the user moves, to give the user a visual effect of dragging the video component 1801 by the finger of the user. In this embodiment, a drag direction of the video component 1801 may be upward drag, leftward drag, rightward drag, or downward drag. For example, as shown in FIG. 18(c), the user may use the finger to perform a press operation on the dragged video component 1801, and perform an operation of moving the finger rightward. As the finger of the user moves, the mobile phone, for example, a framework layer of the mobile phone, may draw an animation in which the video component 1801 moves with the finger of the user, and send the animation to the application layer (for example, the launcher at the application layer) of the mobile phone to display, on the touchscreen of the mobile phone, the animation in which the video component 1801 moves with the finger of the user.

It should be noted that, for these UI elements such as the video component, the floating window, and the picture-in-picture, the UI element may be in a dragged state on the touchscreen of the mobile phone. The user only needs to directly press the UI element and move the finger, to drag the UI element on the touchscreen of the mobile phone. Therefore, in some embodiments, the user operation in S1701 may include no operation of triggering drag for the UI element, but include only an operation of triggering movement of the UI element.

S1703: The mobile phone sends drag data 1 to the television when determining that a drag intent of the user to drag the UI element is cross-device drag.

The drag data 1 may be first drag data in this embodiment of this application. For example, the drag data 1 may include rect information of the UI element. The drag data 1 may further include a type (for example, a video component, a picture-in-picture, or a floating window) of the dragged object and/or an indication used to indicate that the drag data 1 is related data in a drag start event.

S1704: Send drag data 2 to the television in a process in which the UI element continues to be dragged on the mobile phone.

The drag data 2 may be second drag data in this embodiment of this application. For example, the drag data 2 may include coordinate information of a first corner of the UI element The first corner may be any one of the upper left corner, the lower left corner, the upper right corner, and the lower right corner of the UI element In some other embodiments, the drag data 2 may alternatively include coordinate information of a plurality of corners of the upper left corner, the lower left corner, the upper right corner, and the lower right corner of the Ul element. In the following embodiment, an example in which the drag data 2 includes the coordinate information of the first corner of the UI element and the first corner is the upper left corner is used for description.

**The** drag data 2 may further include an indication used to indicate that the drag data 2 is related data in a drag movement event

S1705: Send screen recording data to the television when it is determined that the drag intent of the user to drag the UI element is cross-device drag.

In this embodiment, content in the dragged object changes in real time. Therefore, after determining that the drag intent of the user to drag the UI element is cross-device drag, the mobile phone used as the source end device needs to obtain the screen recording data in real time and send, in real time, the screen recording data to the television used as the target device.

S1706: The television receives the drag data 1, the drag data 2, and the screen recording data. When the UI element has a region that overflows the touchscreen of the mobile phone, the television displays a partial region of the dragged UI element based on the received screen recording data, drag data 1, and drag data 2.

It should be noted that, in S1703 to S1706 in this embodiment, specific descriptions of determining whether the drag intent is cross-device drag, determining the drag direction, determining the target device, and displaying the partial region of the dragged UI element by the target device based on the drag data 1 and the drag data 2 are similar to descriptions of corresponding content in S403 to S405 in the embodiment shown in FIG. 4. Details are not described herein again. A difference lies in that an implementation of obtaining the screen recording data is different from a specific implementation of obtaining the screen recording data in the embodiment shown in FIG. 4. In this embodiment, a process of obtaining the screen recording data is as follows: After the mobile phone creates a VirtualDisplay, the mobile phone may composite a current display interface of the mobile phone to the VirtualDisplay layer by layer. In a layer-by-layer compositing process, the mobile phone may determine whether a layer that currently needs to be composited is a layer at which the UI element is dragged by the user is located. For example, after the user drags the UI element, the mobile phone may obtain a layer name (layer name) of the UI element on the current display interface. Based on the obtained layer name, the mobile phone may composite only a layer corresponding to the layer name the VirtualDisplay, and does not composite another layer to the VirtualDisplay, to obtain corresponding projection data (where the projection data in this embodiment may also be referred to as screen recording data). The projection data includes only data corresponding to a layer at which the UI element dragged by the user is located, to achieve an objective of projecting, to the target device, only the UI element dragged by the user. In addition, in this embodiment, the mobile phone further needs to send the screen recording data to the target device in real time after determining that the drag intent of the user to drag the UI element is cross-device drag. In this embodiment, the screen recording data includes video data and audio data. The video data is used by the target device to display the corresponding UI element on a display of the target device. The audio data is used by the target device to play a corresponding sound.

For example, with reference to FIG. 3 and the example shown FIG. 18(a) to FIG. 18(c), after receiving the user operation in S1701, the mobile phone (for example, a third-party application at the application layer of the mobile phone, which is specifically a video application) triggers drag for the video component on the mobile phone. The framework layer of the mobile phone generates a corresponding drag event, for example, the drag start event The drag start event includes the drag data 1 and the layer name of the dragged UI element on the current display interface. The third-party application at the application layer of the mobile phone may call back the drag start event generated by the framework layer, to extract the drag data 1 and the layer name of the dragged UI element on the current display interface from the drag start event. After extracting the drag data 1 and the layer name of the dragged UI element on the current display interface, the third-party application at the application layer of the mobile phone may send the drag data 1 and the layer name of the dragged UI element on the current display interface to a drag service module at the application layer of the mobile phone. In this way, the drag service module at the application layer of the mobile phone can obtain the drag data 1 and the layer name of the dragged UI element on the current display interface. Then, the third-party application at the application layer of the mobile phone performs drag listening, and after determining that the drag intent of the user to drag the UI element is cross-device drag, may notify the drag service module at the application layer of the mobile phone that the drag is cross-device drag. In this case, the drag service module at the application layer of the mobile phone may send the obtained drag data 1 to the target device for cross-device drag.

After it is determined that the drag intent of the user is cross-device drag, in a process of dragging the video component, the framework layer of the mobile phone generates a corresponding drag event, for example, the drag movement event The drag movement event includes the drag data 2. The third-party application at the application layer of the mobile phone may call back the drag movement event generated by the framework layer, to extract the drag data 2 from the drag movement event After extracting the drag data 2, the third-party application at the application layer of the mobile phone may send the drag data 2 to the drag service module at the application layer of the mobile phone. The drag service module at the application layer of the mobile phone sends the drag data 2 to the target device.

In addition, after drag for the video component is triggered on the mobile phone, or after it is determined that the drag intent is cross-device drag, the mobile phone may start a projection process. For example, the drag service module at the application layer of the mobile phone notifies a projection service module at the application layer of the mobile phone to start projection, to perform screen recording on the mobile phone, so as to obtain the screen recording data. The mobile phone may further notify the target device, for example, a projection service module of the television, that projection starts. After determining that the drag intent is cross-device drag, the mobile phone may send the obtained screen recording data to the target device. It may be understood that, in this embodiment, the screen recording data includes the video data and the audio data. For a process of obtaining the video data, refer to the process of obtaining the screen recording data described in S1706. Details are not described herein again. A process of obtaining the audio data may be as follows: The mobile phone may pre-create an audio record (AudioRecord) object, and create a buffer (buffer). After drag starts, the drag service module of the mobile phone may invoke the AudioRecord object After the AudioRecord object is invoked, audio data in the mobile phone may be recorded. For example, if the dragged object is the video component, audio in the video played on the video component may be recorded, to obtain the audio data. The audio data is stored in the created buffer. In this way, after it is determined that the drag intent is cross-device drag, the drag service module of the mobile phone can obtain the audio data from the buffer. It should be noted that, during cross-device drag for the UI element, for example, the video component, both the video data and the audio data may be projected to the target device, or only the video data may be projected to the target device, and no audio data is projected to the target device. This is not specifically limited herein in this embodiment.

After the television used as the target device receives the drag data 1, the drag data 2, and the screen recording data that are from the mobile phone, the television may determine, based on resolution of the mobile phone, the drag the data 1, and the drag data 2, whether the dragged UI element has the region that overflows the touchscreen of the mobile phone. When the television determines that the dragged UI element has the region that overflows the touchscreen of the mobile phone, the television may display the dragged UI element, for example, a partial region of the video component, based on the received screen recording data (for example, the video data in the screen recording data), and may further play the sound based on the audio data in the screen recording data. Content in the region that is displayed on the display of the television and that is of the video component is the same as content in the region that overflows the touchscreen of the mobile phone and that is of the video component

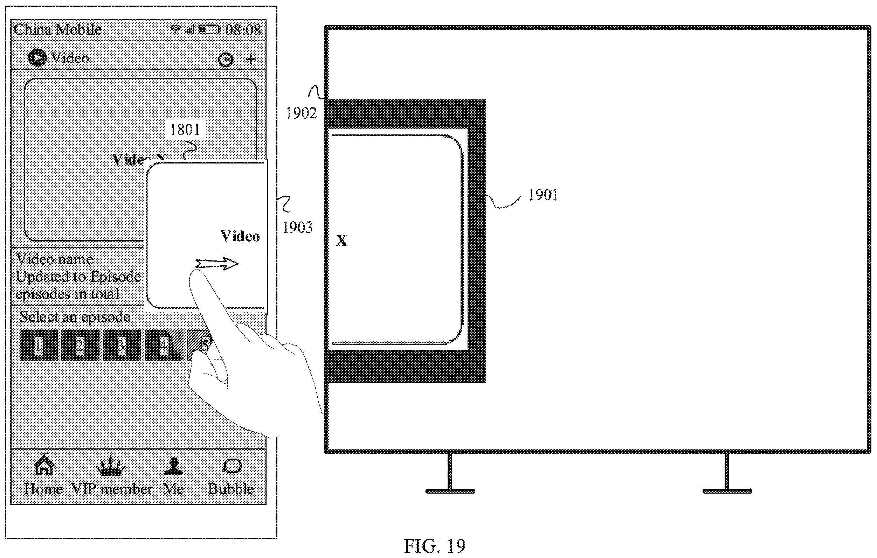

For example, with reference to FIG. 3 and FIG. 18(a) to FIG. 18(c), after the mobile phone sends the drag data 1, the drag data 2, and the screen recording data to the television, a drag service module at an application layer of the television may receive the drag data 1, the drag data 2, and the screen recording data. Then, the drag service module at the application layer of the television may determine, based on the resolution of the mobile phone, the drag data 1, and the drag data 2, whether dragged video component has the region that overflows the touchscreen of the mobile phone. When it is determined that the dragged video component has the region that overflows the touchscreen of the mobile phone, the drag service module of the television may determine a specific region that overflows the touchscreen of the mobile phone and that is of the video component, and send a determined result and the screen recording data to the projection service module of the television. The projection service module of the television cooperates with a framework layer of the television, to draw the partial region of the video component based on the determined result of the specific region that overflows the touchscreen of the mobile phone and that is of the dragged video component and the screen recording data, and display the partial region of the video component on the display of the television. For example, the framework layer of the tablet computer (for example, a window manager included in the framework layer, where the window manager is configured with a related parameter that allows an object, for example, a video component, to overflow a screen) may provide a surfaceview to display the partial region of the video component on the television. For example, as shown in FIG. 19, the video component displayed by the television is shown in 1901. It can be seen that content on the video component 1901 is the same as content in a part that overflows the mobile phone and that is of the video component 1801, or the video component 1901 and a part that is displayed on the mobile phone and that is of the video component 1801 can implement complete presentation of content in the computer window 1801. In addition, the drag direction in which the video component 1801 is dragged is rightward drag, and a drag-in location of the video component 1901 is the left edge 1902 of the television display. In addition, a drag-out location is the center location of the right edge 1903 of the touchscreen of the mobile phone, and the drag-in location also is specifically the center location of the left edge 1902. In this way, a visual effect provided for the user is that the video component 1801 is dragged from the mobile phone to a target device end for cross-device drag, namely, the television. The television may further play the sound based on the audio data in the screen recording data.

It maybe understood that, as the UI element continues to be dragged on the mobile phone, the mobile phone may dynamically adjust, based on the user operation, a size of a region that is displayed on the touchscreen of the mobile phone and that is of the UI element. In addition, the mobile phone may obtain the screen recording data and the drag data 2 in real time and send the screen recording data and the drag data 2 to the television in real time. The television may dynamically adjust, based on the received screen recording data and drag data 2, a size of the region and displayed content that are displayed on the display of the television and that are of the Ul element. A specific implementation is similar to descriptions of corresponding content in the embodiment shown in FIG. 4. Details are not described herein again.

It should be noted that, in the foregoing example, an example in which the Ul element dragged by the user is the video component is used for description. As described above, the UI element dragged by the user may be alternatively the floating window or the picture-in-picture. Specific implementations of dragging the floating window and the picture-in-picture are similar to a specific implementation of dragging the video component. Details are not described herein again. A difference lies in that, in the specific implementation of dragging the picture-in-picture, after a user operation of dragging the picture-in-picture is received, a system UI at the application layer of the mobile phone triggers drag for the picture-in-picture, and the system UI calls back a drag event generated by the framework layer, to send corresponding drag data, for example, the drag data 1 and the drag data 2, to the drag service module at the application layer of the mobile phone.

S1707: The mobile phone receives a drag release user operation.

S1708: In response to the user operation in S1707, the mobile phone sends indication information to the television. The television displays an entire region of the dragged UI element on the television based on the indication information.

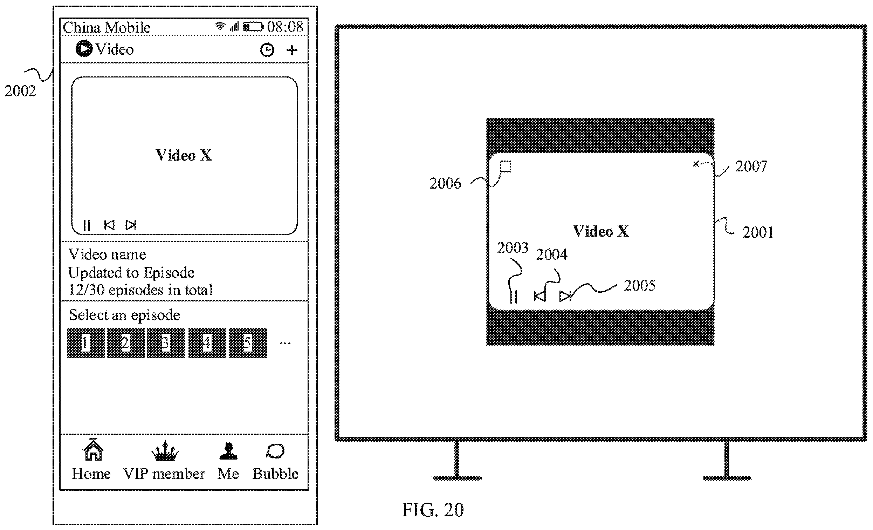

As described in S1706, the mobile phone sends the screen recording data to the television in real time. After the user releases drag on the mobile phone, the mobile phone may send, to the television, indication information used to indicate that the user stops drag. The television may learn, based on the indication information, that the user has stopped drag, and the television may display the entire region of the dragged UI element on the display of the television based on screen recording data (for example, video data in the screen recording data) received at a current moment. For example, with reference to FIG. 19, as shown in FIG. 20, after the user releases drag on the mobile phone, the television may display an entire region of a video component 2001 on the display of the television in a floating manner. The video component 2001 may be displayed on an edge or in the middle of a screen of the television in the floating manner, or may be displayed in full screen. In addition, as shown in FIG. 20, for the mobile phone, after receiving the drag release user operation, the mobile phone may display an interface 2002 of the video application including the video component. in another embodiment, the mobile phone may alternatively display the interface of the video application, but the interface includes no video component (not shown in the figure), or the mobile phone may display a home screen (not shown in the figure). This is not specifically limited herein in this embodiment. Alternatively, the mobile phone may display the video component in a floating manner, for example, display the video component in the middle or on an edge of the screen of the mobile phone in the floating manner.

It should be noted that, as described in S407, after receiving the drag release user operation, the source end device may project, in an implementation (for example, referred to as an implementation 1), the entire region of the dragged object to the target device end for display, or projects, in another implementation (for example, referred to as an implementation 2), the entire region of the dragged object to the target device end for display only when a ratio in which the dragged object overflows the source end device is greater than a preset threshold (or a ratio in which the dragged object is displayed on the source end device is less than a preset threshold). In some embodiments, in the foregoing implementation 2, the dragged object may be hovered, adsorbed, and displayed on the source end device and the target device if the ratio in which the dragged object overflows the source end device is less than the preset threshold (or the ratio in which the dragged object is displayed on the source end device is greater than the preset threshold) after the release operation is received. For example, in a process of dragging the UI element, for example, the video component, the floating window, or the picture-in-picture, if a ratio in which the dragged UI element overflows the source end device is less than the preset threshold when the source end device receives the drag release user operation, for example, when the user stops dragging the IJI element on the source end device, the dragged UI element is hovered, adsorbed, and displayed on the source end device and the target device. For example, a display effect may be shown in FIG. 19. To be specific, a part of the dragged video component is displayed on the mobile phone, and a part of the dragged video component is displayed on the television. In some other embodiments, in the foregoing implementation 2, projection and display of the dragged object to and on the target device end may be stopped if the ratio in which the dragged object overflows the source end device is less than the preset threshold (or the ratio in which the dragged object is displayed on the source end device is greater than the preset threshold) after the release operation is received. For example, the mobile phone may normally display the video component on the touchscreen of the mobile phone. The mobile phone may further send the indication information to the television, and the indication information is used to indicate that drag stops, so that the television normally displays an interface of the television. It should be noted that, whether to perform an operation of hovering, adsorbing, and displaying the dragged UI element on the source end device and the target device, or stop projection and display may be pre-configured when the ratio in which the dragged object overflows the source end device is less than the preset threshold (or the ratio in which the dragged object is displayed on the source end device is greater than the preset threshold) after the release operation is received.

The user may further implement control, for example, a control operation, for example, scale up or reverse control, on the video component 2001 by using an input device of the television. For example, reverse control may be control, for example, playing/pausing, fast forwarding, or rewinding the video played by the video component. For example, with reference to FIG. 20, the video component 2001 further includes a play/pause button 2003, a rewind button 2004, and a fast forward button 2005. The user may perform an operation on a button in the video component 2001 by using the input device of the television, for example, a remote control. For example, the user performs an operation on the fast forward button 2005. After the user performs the operation on the fast forward button 2005 by using the remote control the projection service module of the television may obtain location information of the operation, and the television may determine, based on the location information and a video source region, a location that is of the fast forward button in the video component in the mobile phone and that corresponds to a location. The video source region is used to indicate a correspondence between each location in the video component 2001 and each location in the video component in the mobile phone. Then, the projection service module of the television may send, to the drag service module of the mobile phone by using the drag service module of the television, an instruction indicating that the user performs the operation on the fast forward button. The drag service module of the mobile phone forwards the instruction to the framework layer of the mobile phone. In response to the instruction, the framework layer of the mobile phone may perform fast forward processing on the video, and obtain corresponding screen recording data. The obtained screen recording data may be sent to the drag service module of the television by using the drag service module of the mobile phone. Then, the drag service module of the television may send the screen recording data to the projection service module of the television, and the projection service module of the television cooperates with the framework layer of the television, to draw a fast forwarded video and display the fast forwarded video on the display of the television, so as to implement reverse control on a mobile phone end at a television end. For another example, with reference to FIG. 20, the video component 2001 further includes a button 2006. The user may perform a tap operation on the button 2608 by using the remote control of the television, and in response to the tap operation, the television scales up the video component 2001. The video component 2001 further includes a button 2007. The user may perform a tap operation on the button 2007 by using the remote control of the television, and in response to the tap operation, the video stops being played on the television. For example, the television may send a projection exit request to the mobile phone, and after receiving the request, the mobile phone stops projection of the video component

By using the method in the embodiment shown in FIG. 17, the UI element, for example, the video component, the floating window, or the picture-in-picture, can be dragged from the source end device to the target device. For example, the user watches a variety show video or makes a video call with a friend on the mobile phone by using the floating window. After arriving at home, the user may drag the floating window to the television and continue to watch the variety show video or make the video call on the television by using the floating window.

It should be noted that descriptions of other content in this embodiment are similar to descriptions of corresponding content in FIG. 4. Details are not described herein again. In addition, when the dragged object is a freeform small window, drag from the source end device to the target device may be implemented based on the solution in the embodiment shown in FIG. 4, or drag from the source end device to the target device may be implemented based on the solution in the embodiment shown in FIG. 11. This is not specifically limited herein in this embodiment

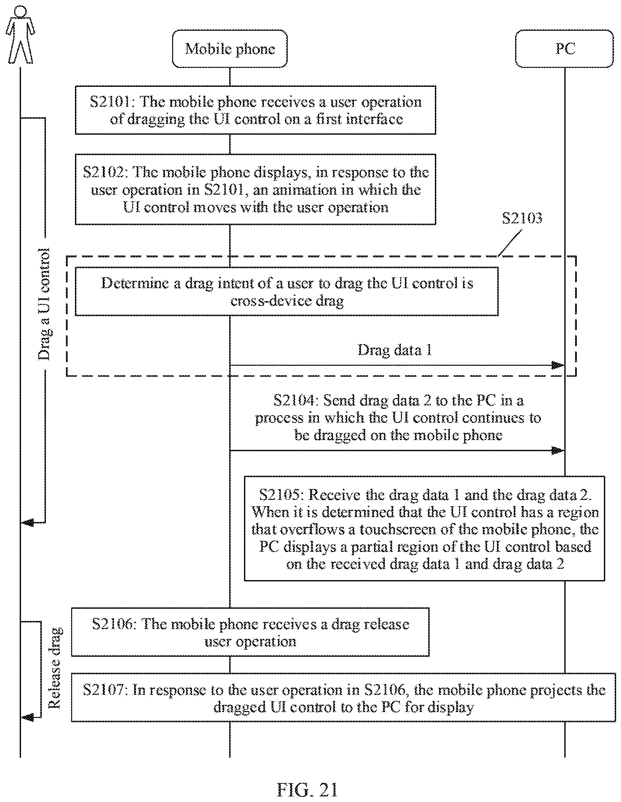

FIG. 21 is a schematic flowchart of an object drag method according to an embodiment of this application. In this embodiment, the method provided in this embodiment is described in detail by using an example in which the first terminal 101 is a mobile phone, the second terminal 102 is a PC, the input device of the first terminal 101 is a touchscreen, and the dragged object is a UI control on an interface. For example, the mobile phone is used as the source end device, and the PC is used as the target device.

As shown in FIG. 21, the method may include the following S2101 to S2107.

S2101: The mobile phone receives a user operation of dragging a UI control on a first interface.

S2102: The mobile phone displays, in response to the user operation in S2101, an animation in which the UI control moves with the user operation.

The UI control is an interface element, and is included in an application. A user may interact with the UI control through direct manipulation (direct manipulation), to read or edit related information of the application. Generally, the UI control may include visual interface elements such as an icon, a button, a menu, a tab, a text box, a dialog box, a status bar, and a navigation bar.

It may be understood that different interfaces include different UI controls. In this embodiment, UI controls that are allowed to be dragged and that are on different interfaces may be all or some of UI controls included in the interface. A UI control that is allowed to be dragged and that is on the interface may be predefined. For example, a corresponding configuration file may be pre-configured on the mobile phone. The configuration file includes configuration information of UI controls that are allowed to be dragged and that are on interfaces of different applications. For example, the configuration file includes an identifier of a UI control that is allowed to be dragged and that is on each interface. In other words, only the UI control whose identifier is included in the configuration file is a UI control that is allowed to be dragged. In an actual application, there may be one or more UI controls dragged by the user. This is not specifically limited herein in this embodiment.

In this embodiment, the user operation in S2101 may be the drag operation in this embodiment of this application. The user operation in S2101 may include one or more operations. For example, the user operation may include an operation of selecting the UI control and an operation of triggering movement of the selected UI control.

The operation of selecting the UI control may be used by the mobile phone to determine a UI control that the user wants to drag. In some embodiments, the operation of selecting the UI control may include a gesture operation, and the gesture operation may be a screen touch gesture operation. In other words, the UI control that the user wants to drag may be selected by performing the screen touch gesture operation.

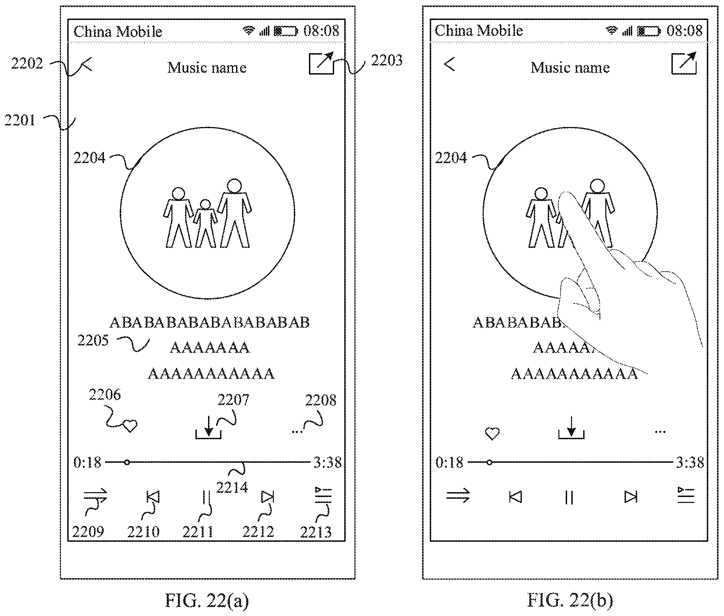

For example, there is one UI control that the user wants to drag. The operation of selecting the UI control may be a single-finger operation for the UI control, for example, a single-finger touch and hold operation or a single-finger double-tap operation, or may be a 3D touch (3D touch) operation for the UI control, or may be a palm operation for the UI control, for example, a palm touch and hold operation or a palm single-tap operation. For example, as shown in FIG. 22(a), the mobile phone currently displays a first interface 2201, and the first interface 2201 is a music playing interface. All U! controls on the first interface 2201, for example, a back button 2202, a share button 2203, an album button 2204, a lyric 2205, a favorites button 2206, a download button 2207, another button 2208, a play mode button 2209, a previous button 2210, a play/pause button 2211, a next button 2212, a menu button 2213, and a progress bar 2214 are allowed to be dragged. With reference to in FIG. 22(a), for example, the operation of selecting the UI control is the single-finger touch and hold operation. When wanting to drag the album button 2204, as shown in FIG. 22(b), the user may perform a single-finger touch and hold operation on the album button 2204. After receiving the operation, the mobile phone may determine that the album button 2204 is the UI control that the user selects and wants to drag.

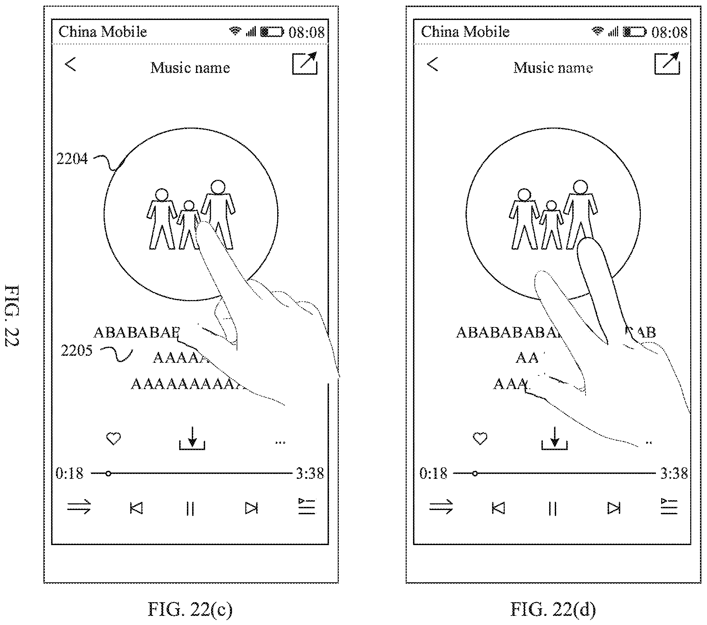

For another example, there are a plurality of UI controls that the user wants to drag. The operation of selecting the UI control may be a two-finger pinch operation. All UI controls that are allowed to be dragged and that are in a two-finger pinch region are to be determined by the mobile phone as UI controls that the user wants to drag. For example, with reference to FIG. 22(a), when the user wants to drag the album button 2204 and the lyric 2205, as shown in FIG. 22(c), the user may perform a two-finger pinch operation. After receiving the operation, the mobile phone may determine that UI controls in a two-finger pinch region, for example, the album button 2204 and the lytic 2205, are the UI controls that the user selects and wants to drag.

For another example, the user wants to drag all UI controls that are allowed to be dragged and that are on the first interface. The operation of selecting the UI control may be a three-finger pinch operation. For example, with reference to in FIG. 22(a), when the user wants to drag all the UI controls that are allowed to be dragged and that are on the first interface 2201, as shown in FIG. 22(d), the user may perform a three-finger pinch operation on the first interface 2201. After receiving the operation, the mobile phone may determine that all the UI controls (namely, the controls 2202 to 2214 shown in FIG. 22(a)) on the first interface 2201 are the UI controls that the user selects and wants to drag.

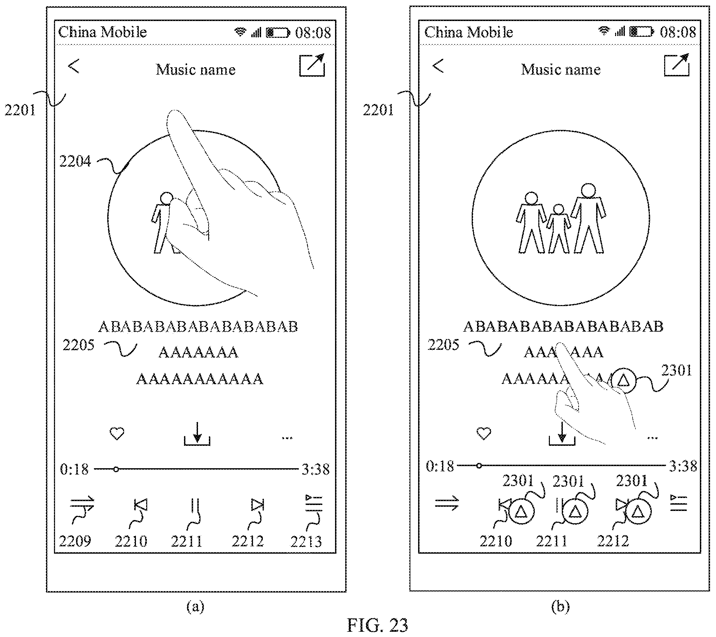

In some other embodiments, the operation of selecting the UI control may include two gesture operations. In other words, the UI control that the user wants to drag may be selected by performing the two gesture operations. For example, the two gesture operations include a gesture operation 1 and a gesture operation 2. The gesture operation 1 may be a screen touch gesture operation, or may be an air gesture operation. The operation is similar to the operation of triggering drag for the first window in S401. Details are not described herein again. A difference lies in that a function of the gesture operation 1 is used to trigger the mobile phone to enable a multi-element drag mode. After the multi-element drag mode is enabled, the mobile phone may display, in a to-be-dragged state, a UI control that is allowed to be dragged and that is on the first interface. The drag state of the UI control may be presented in a manner, for example, jittering or displaying a selection box on the UI control that is allowed to be dragged. The gesture operation 2 may be a screen touch gesture operation. For example, the gesture operation 2 may be specifically a tap operation for the UI control displayed in the to-be-dragged state. The mobile phone may determine, based on the gesture operation 1 and the gesture operation 2, the UI control that the user wants to drag. For example, with reference to in FIG. 22(a), an example in which UI controls that are allowed to be dragged and that are on the first interface 2201 include the album button 2204, the lyric 2205, the play mode button 2209, the previous button 2210, the play/pause button 2211, the next button 2212, and the menu button 2213, the gesture operation 1 is a single-finger double-tap operation for the first interface 2201, and the gesture operation 2 is a tap operation for the UI control. As shown in (a) in FIG. 23, the user performs the single-finger double-tap operation on the first interface 2201. In response to the operation, the album button 2204, the lyric 2205, the play mode button 2209, the previous button 2210, the play/pause button 2211, the next button 2212, and the menu button 2213 start to jitter. The user may perform a tap operation on one or more of these UI controls, to select the UI control that the user wants to drag. For example, the UI controls that the user wants to drag include the lyric 2205, the previous button 2210, the play/pause button 2211, and the next button 2212. The user may separately perform a tap operation on the lyric 2205, the previous button 2210, the play/pause button 2211, and the next button 2212. As shown in (b) in FIG. 23, to help the user learn which tJI controls are selected, selection identifiers 2301 may be displayed on the selected Ul controls. In this way, the mobile phone may determine, based on the gesture operation 1 and the gesture operation 2 that are performed by the user, that the lyric 2205, the previous button 2210, the play/pause button 2211, and the next button 2212 are the UI controls that the user selects and wants to drag.

**The** foregoing operation of triggering movement of the UI control may be a screen touch gesture operation. For example, the screen touch gesture operation of triggering movement of the UI control may be an operation of pressing and moving the selected UI control. The operation of triggering movement of the UI control may be alternatively an air gesture operation. For example, the air gesture operation of triggering movement of the UI control is a press gesture and a pan gesture for the selected UI control. For another example, the air gesture operation of triggering movement of the UI control is a fisting gesture and a pan gesture that are performed after the UI control is selected. The operation of triggering movement of the UI control may be performed on any one or more of the foregoing selected UI controls. For example, the operation of triggering movement of the UI control is the operation of pressing and moving the selected UI control. With reference to the example shown in FIG. 23, the user may perform a press and movement operation on the lyric 2205.

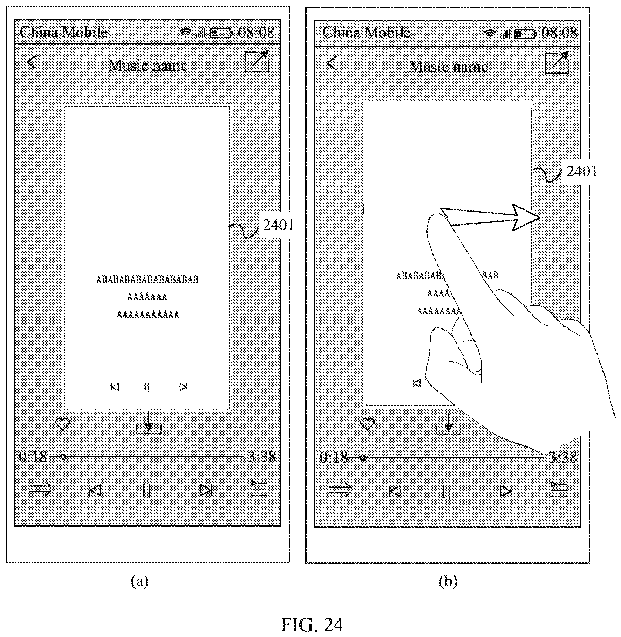

Then, the mobile phone may draw and display an animation in which the selected UI control moves as the finger of the user moves. In some embodiments, the mobile phone may draw and display an animation in which a shadow (shadow, or referred to as a dragged shadow) of the selected UI control moves as a finger of the user moves. For example, before displaying the animation, the mobile phone may generate the shadow of the selected UI control. For example, with reference to FIG. 3 and the example shown in FIG. 23, a specific process in which the mobile phone generates the shadow may be as follows: After the user selects the UI control that the user wants to drag, and performs the press and movement operation on the selected UI control, a drag service module of the mobile phone may receive the corresponding operation. The drag service module of the mobile phone sends, to a framework layer of the mobile phone, an indication for triggering drag for the control. For example, the indication may include an identifier that is of the dragged UI control and that is obtained by the mobile phone. After receiving the indication, the framework layer of the mobile phone listens to the corresponding UI control based on the identifier of the dragged Ut control, and sends control information of the dragged UI control to the drag service module of the mobile phone. The control information may include the identifier and the shadow of the dragged UI control, location information of the dragged UI control on the first interface, and the like. For example, the lyric 2205, the previous button 2210, the play/pause button 2211, and the next button 2212 are the dragged UI controls. The framework layer of the mobile phone monitors these UI controls, namely, the lyric 2205, the previous button 2210, the play/pause button 2211, and the next button 2212 based on received identifiers of the UI controls, and transmits the identifier and the shadow of each Ul control of the lyric 2205, the previous button 2210, the play/pause button 2211, and the next button 2212 and location information of each of the lyric 2205, the previous button 2210, the play/pause button 2211, and the next button 2212 on the first interface to the drag service module of the mobile phone. The drag service module of the mobile phone may generate the shadow of the selected Ul control based on the received control information of the dragged UI control. For example, the generated shadow is shown in 2401 in (a) of FIG. 24. In this way, as the finger of the user moves, the mobile phone may display an animation in which the shadow is dragged, to give the user a visual effect of dragging the selected UI control by the finger of the user. For example, with reference to (b) in FIG. 24, an example in which the user moves the finger rightward is used. As the finger of the user moves, the mobile phone, for example, the framework layer of the mobile phone, may draw an animation in which the shadow 2401 moves with the finger of the user, and send the animation to an application layer (for example, a launcher at the application layer) of the mobile phone to display, on the touchscreen of the mobile phone, the animation in which the shadow 2401 moves with the finger of the user. In addition, the dragged UI control may still be displayed on the first interface (as shown in FIG. 24), or may not be displayed (not shown in the figure). This is not limited herein in this embodiment. It should be noted that the shadow 2401 shown in FIG. 24 includes the shadows of the dragged UI controls and a background carrying these shadows. The background is used to carry the shadow of the dragged UI control, and the background may be a canvas or a drawing board, and may be transparent or opaque (as shown in FIG. 24). This is not specifically limited herein in this embodiment.

After receiving the corresponding operation, the mobile phone (for example, the drag service module of the mobile phone) may identify, by using the UI control, a type of the Ul control dragged by the user. The mobile phone may determine an identifier of the dragged UI control based on the identified type of the UI control. The type of the control is in a one-to-one correspondence with the identifier, and the correspondence is pre-stored in the mobile phone. For example, the type of the UI control dragged by the user may be identified by using an artificial intelligence (artificial intelligence) identification method. For example, each interface (for example, which includes the foregoing music playing interface) of each application on the mobile phone may be obtained in advance. For example, entire-frame image data of the music playing interface may be obtained by using a screen capture method. A region of each UI control on the music playing interface may be located by using a target detection technology (for example, a model algorithm, for example, an R-CNN, a Fast-R-CNN, or YOLO) in machine learning, and then, the located region and a type of each UI control on the music playing interface and an identifier of the music playing interface may be stored in the mobile phone in a correspondence manner. After receiving an operation of dragging the UI control on the music playing interface by the user, the mobile phone may identify, based on a location touched when the user selects the UI control and the stored region of each Ul control on the music playing interface, the type of the UI control dragged by the user. For another example, after an operation of dragging the UI control on the music playing interface by the user is received, the UI control selected by the user may be drawn, and then a type of the drawn UI control may be identified by using a target classification technology (for example, a ResNet model algorithm) in machine learning.

S2103: The mobile phone sends drag data 1 to the PC when determining that a drag intent of the user to drag the UI control is cross-device drag.

The drag data 1 may be the first drag data in embodiments of this application. The drag data 1 may include rect information of the shadow, the shadow, and the identifier of the dragged UI control The drag data 1 may further include a type (for example, a UI control) of the dragged object and/or an indication used to indicate that the drag data 1 is related data in a drag start event.

S2104: Send drag data 2 to the PC in a process in which the UI control continues to be dragged on the mobile phone.

The drag data 2 may be the second drag data in embodiments of this application. The drag data 2 may include coordinate information of a first corner of the shadow. The first corner may be any one of the upper left corner, the lower left corner, the upper right corner, and the lower right corner of the shadow. In some other embodiments, the drag data 2 may alternatively include coordinate information of a plurality of corners of the upper left corner, the lower left corner, the upper right corner, and the lower right corner of the shadow. In the following embodiment, an example in which the drag data 2 includes the coordinate information of the first corner of the shadow and the first corner is the upper left corner is used for description.

The drag data 2 may further include an indication used to indicate that the drag data 2 is related data in a drag movement event.

S2105: The PC receives the drag data 1 and the drag data 2. When it is determined that the UI control has a region that overflows the touchscreen of the mobile phone, the PC displays a partial region of the UI control based on the received drag data 1 and drag data 2.

It should be noted that, in S2103 to S2105 in this embodiment, specific descriptions of determining whether the drag intent is cross-device drag, determining a drag direction, determining the target device, and displaying the partial region of the UI control by the target device based on the drag data 1 and the drag data 2 are similar to descriptions of corresponding content in S403 to S405 in the embodiment shown in FIG. 4. Details are not described herein again.

For example, with reference to FIG. 3 and the examples shown in FIG. 23 and FIG. 24, after the mobile phone receives the user operation in S2101, the mobile phone (for example, a third-party application at the application layer of the mobile phone, which is specifically a music player) triggers drag for the UI control on the mobile phone. The drag service module at the application layer of the mobile phone may obtain the drag data 1 and send the obtained drag data 1 to the target device for cross-device drag, for example, a television. In a process of dragging the UI control, the drag service module at the application layer of the mobile phone may obtain the drag data 2 and send the drag data 2 to the target device.

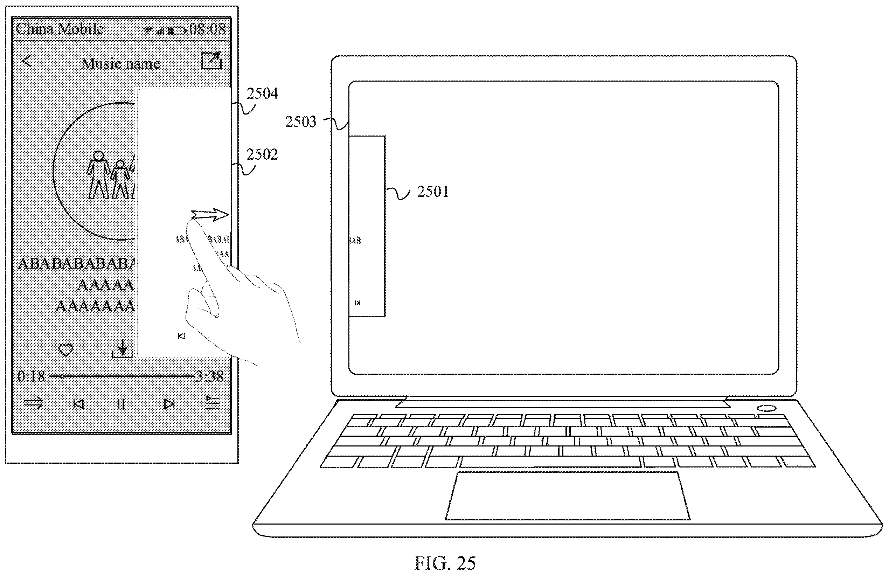

A drag service module at an application layer of the PC may receive the drag data 1 and the drag data 2. When the drag service module at the application layer of the PC determines, based on the received drag data 1 and drag data 2, that the dragged UI control, for example, the shadow of the dragged UI control, has the region that overflows the touchscreen of the mobile phone, the drag service module at the application layer of the PC may determine a specific region that overflows the touchscreen of the mobile phone and that is of the shadow, and send a determined result and the shadow to a framework layer of the PC. The framework layer draws a partial region of the shadow based on the determined result of the specific region that overflows the touchscreen of the mobile phone and that is of the shadow, and displays the partial region of the shadow on a display of the PC. For example, as shown in FIG. 25, the shadow displayed by the PC is shown in FIG. 2501. It can be seen that content in the shadow 2501 is the same as content in a part that overflows the mobile phone and that is of a shadow 2502, or the shadow 2501 and a part that is displayed on the mobile phone and that is of a shadow 2502 can implement complete presentation of content in the shadow 2502. In addition, a drag direction in which the shadow 2502 is dragged is rightward drag, and a drag-in location of the shadow 2501 is the left edge 2503 of the PC. In addition, a drag-out location is the center location of the right edge 2504 of the touchscreen of the mobile phone, and the drag-in location also is specifically the center location of the left edge 2503. In this way, a visual effect provided for the user is that the UI control is dragged from the mobile phone to a target device end for cross-device drag, namely, the PC.

It may be understood that, as the UI control continues to be dragged on the mobile phone, the mobile phone may dynamically adjust, based on the user operation, a size of a region that is displayed on the touchscreen of the mobile phone and that is of the shadow. In addition, the mobile phone obtains the drag data 2 in real time and sends the drag data 2 to the PC in real time. The PC may dynamically adjust, based on the received drag data 2, a size of the region that is displayed on the display of the PC and that is of the shadow. A specific implementation is similar to descriptions of corresponding content in the embodiment shown in FIG. 4. Details are not described herein again.

S2106: The mobile phone receives a drag release user operation.

S2107: In response to the user operation in S2106, the mobile phone projects the dragged UI control to the PC for display.

Specific descriptions of S2106 and S2107 in this embodiment are similar to descriptions of corresponding content in S406 and S407 in the embodiment shown in FIG. 4. A difference lies in that, in this embodiment, the mobile phone performs instruction extraction on the first interface to obtain an instruction stream corresponding to the first interface. After the mobile phone sends the obtained instruction stream to the PC, the PC may extract, from the instruction stream based on the identifier of the dragged UI control included in the drag data 1, a canvas (canvas) instruction corresponding to the dragged UI control. In this way, the dragged UI control is displayed on the PC based on the canvas instruction. The dragged UI control may be displayed in the middle or on an edge of a screen of the PC in a floating manner. For example, the PC provides a surfaceview to display content of the canvas instruction. The content is the UI control. The PC may display each UI control based on a pre-configured layout file when the UI control is displayed by the surfaceview. The layout file includes a configuration of a drawing region of each UI control (for example, a configuration including the identifier, a location, and a style of the UI control), and the drawing regions of the UI controls do not overlap. In addition, the drawing region of each UI control in the layout file may not correspond to a region of a corresponding UI control on an original interface. In other words, re-layout of the UI control may be implemented by using the layout file. The UI control may be displayed on the PC in a form of a window. In addition, in this embodiment, the UI control supports in being displayed on the display of the target device for cross-device drag, for example, the PC, in a form of a floating small window.

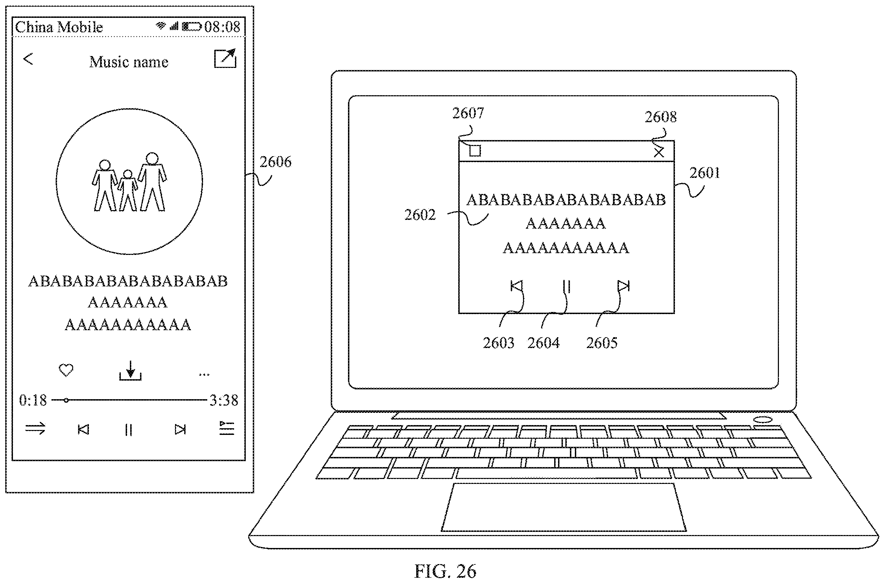

For example, with reference to FIG. 3 and the examples shown in FIG. 23, FIG. 24, and FIG. 25, after triggering cross-device drag, the user stops moving the finger and uplifts the finger. Correspondingly, the mobile phone may receive the drag release user operation. In response to the operation, the mobile, for example, the drag service module of the mobile phone, may obtain an instruction stream of a current display interface, and send the instruction stream to the PC. After receiving the instruction stream, the drag service module of the PC may send the obtained instruction stream to the framework layer of the PC. The framework layer of the PC may extract, from the instruction stream based on the identifier of the dragged UI control included in the drag data 1, the canvas instruction corresponding to the dragged UI control, then implement re-layout of the UI control based on the pre-configured layout file and the canvas instruction, and as shown in FIG. 26, draw the corresponding UI controls and display the corresponding UI controls, for example, which includes a lyric 2602, a previous button 2603, a play/pause button 2604, and a next button 2605, in a window 2601. It can be seen that a layout of the dragged UI controls projected to the PC is different from a layout of these controls on the mobile phone. In addition, as shown in FIG. 26, for the mobile phone, after receiving the drag release user operation, an interface 2606 displayed by the mobile phone may include the dragged UI control (as shown in FIG. 26), or the dragged UI control may not be shown (not shown in the figure). This is not specifically limited herein in this embodiment.

The user may further implement control, for example, a control operation, for example, scale up or reverse control, on the window 2601 by using an input device (for example, a mouse) of the PC. For example, the window 2601 further includes a button 2607. The user may perform a click operation on the button 2607 by using the mouse of the PC, and in response to the click operation, the window 2601 is displayed on the display of the PC in full screen. For another example, the window 2601 further includes a button 2608. The user may perform a click operation on the button 2608 by using the mouse of the PC, and in response to the click operation, the window 2601 stops being displayed on the display of the PC. In addition, the PC may further send a projection exit request to the mobile phone, and after receiving the request, the mobile phone stops projection of the Ul control. For another example, reverse control may be control, for example, playing/pausing, playing a previous song, playing a next song, or adjusting lyric progress of music on a mobile phone end at a PC end Specific descriptions are similar to descriptions of corresponding content in S1708 in the embodiment shown in FIG. 17. Details are not described herein again.

By using the method in the embodiment shown in FIG. 21, a UI control in an application window can be dragged from the source end device to the target device. For example, the user drags a canvas of a picture editing or drawing window to a tablet computer, to perform hand drawing by using a stylus of the tablet computer, while a tool, for example, a palette or a stroke, is retained on the mobile phone.

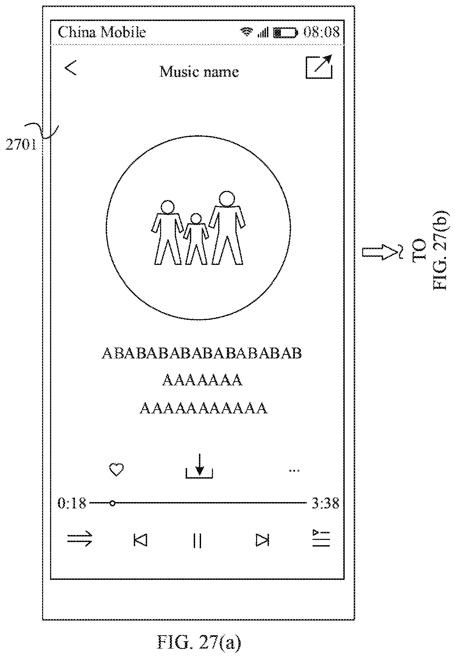

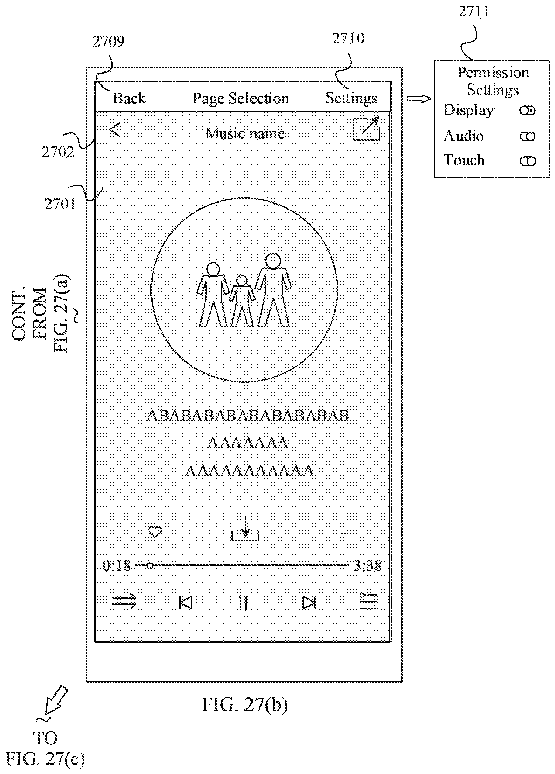

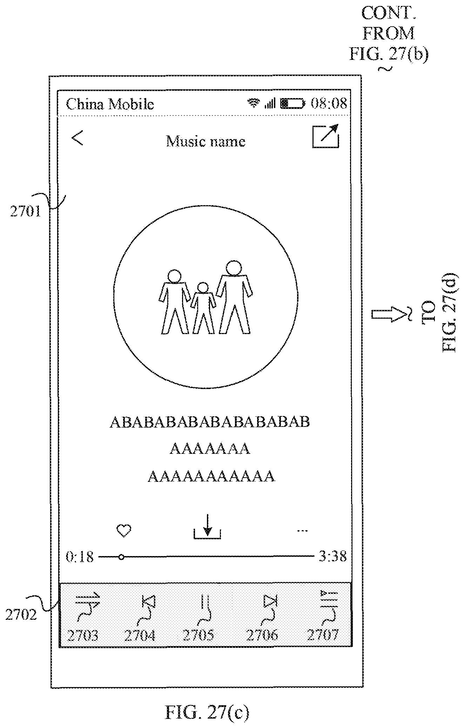

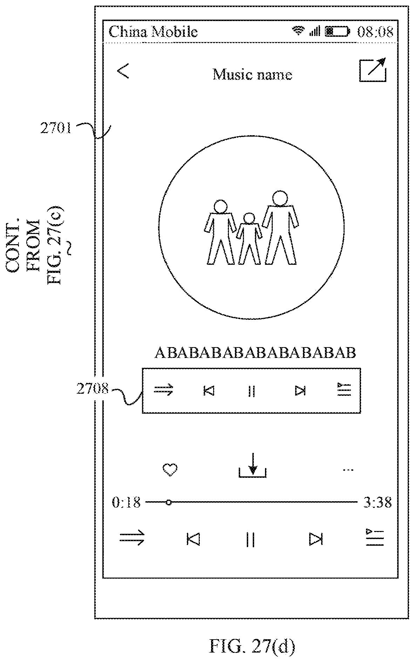

In the foregoing embodiment, how to drag the UI control on the first interface is described. In some other embodiments, the user may alternatively select, in a form of box selection (for example, drawing a circle) by using a page selection gesture, a knuckle gesture, or a finger (for example, an index finger) gesture, or by using a mouse, a region that the user wants to drag and that is of the first interface, that is, may drag a partial region of the first interface. For example, with reference to FIG. 27(a) to FIG. 27(d), an example in which the user box-selects, by using the page selection gesture, the region that the user wants to drag and that is of the first interface is used. As shown in FIG. 27(a), the mobile phone currently displays a first interface 2701, and the first interface 2701 is a music playing interface. When wanting to drag a partial region of the first interface 2701, the user may perform a predetermined operation. The operation may be a predefined operation used to indicate the mobile phone to enter a page selection state, for example, double taping a status bar. This is not specifically limited herein in this embodiment. In response to the operation, the mobile phone enters the page selection state, as shown in FIG. 27(b), and displays a selection box 2702 on the first interface 2701. The user may adjust the selection box 2702 by using a gesture operation, to select a region that the user wants to drag. A region box-selected by using the selection box 2702 is the region that the user selects and wants to drag. For example, the user adjusts, by using the gesture operation, the selection box 2702 to a location and a size shown in FIG. 27(c), and a region box-selected by an adjusted selection box 2702 is the region that the user wants to drag. Then, the user may indicate, to the mobile phone by touching and holding the adjusted selection box 2702 or by performing an operation on a button used to determine a to-be-dragged region, that the region that the user wants to drag is selected. After receiving the operation, the mobile phone may obtain an identifier of a UI control in the to-be-dragged region selected by the user. The mobile phone may generate, based on the obtained identifier of the UI control, a shadow corresponding to the selected to-be-dragged region (where a specific implementation is similar to an implementation of dragging the UI control, and details are not described herein again). For example, as shown in FIG. 27(c), the to-be-dragged region selected by the user includes a play mode button 2703, a previous button 2704, a play/pause button 2705, a next button 2706, and a menu button 2707. After receiving the operation that the user selects the to-be-dragged region, the mobile phone may obtain an identifier of the play mode button 2703, an identifier of the previous button 2704, an identifier of the play/pause button 2705, an identifier of the next button 2706, and an identifier of the menu button 2707. Based on these identifiers, the mobile phone may generate the shadow corresponding to the selected to-be-dragged region, for example, 2708 shown in FIG. 27(d). Then, the user may move the finger, and as the finger of the user moves, the mobile phone may draw and display an animation in which the shadow 2708 of the selected to-be-dragged region moves as the finger of the user moves, that is, drag the region of the interface. Then, a procedure of cross-device drag is similar to a procedure of dragging the UI control. Details are not described herein again. In addition, after the mobile phone enters the page selection state, the mobile phone may further display an exit button 2709 and a setting button 2710. The exit button 2709 is used to exit the page selection state, to normally display a page. The setting button 2710 provides a permission setting after cross-device drag. For example, after the user performs a tap operation on the setting button 2710, the mobile phone may display a permission setting option 2711. Through on/off selection for a button in the permission setting option 2711, whether the target device for cross-device drag supports display, audio, and reverse control may be controlled. For example, if display permission is enabled, after cross-device drag is completed, the dragged object, for example, the foregoing selected to-be-dragged region, may be displayed on the target device for cross-device drag. For another example, if touch permission starts, the user is allowed to perform an operation on the control in the dragged region displayed on the target device for cross-device drag, to control the source end device.

It should be noted that, when the dragged object is a partial region of the first interface, in addition to the solution in the embodiment shown in FIG. 21, drag from the source end device to the target device may be further implemented according to the solution in the embodiment shown in FIG. 4, and a difference lies in that the drag data 1 includes rectangle information of the dragged region, and the drag data 2 includes coordinate information of the first corner of the region. In addition, after drag is released, only the dragged region is displayed on the target device.

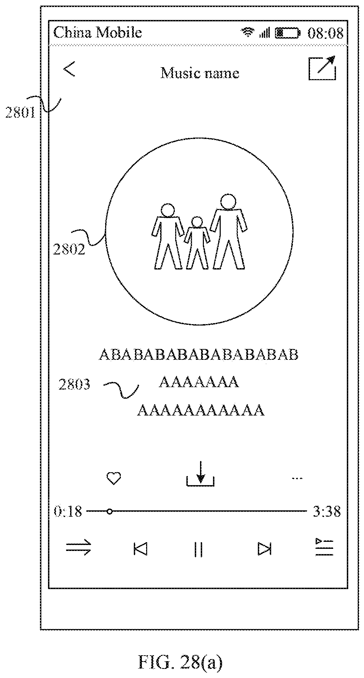

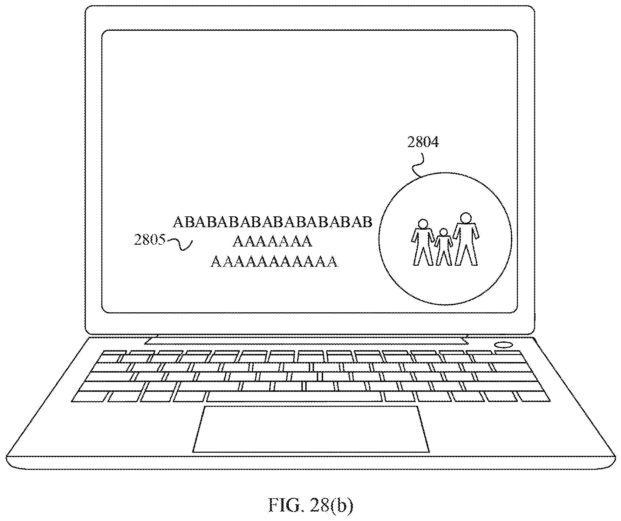

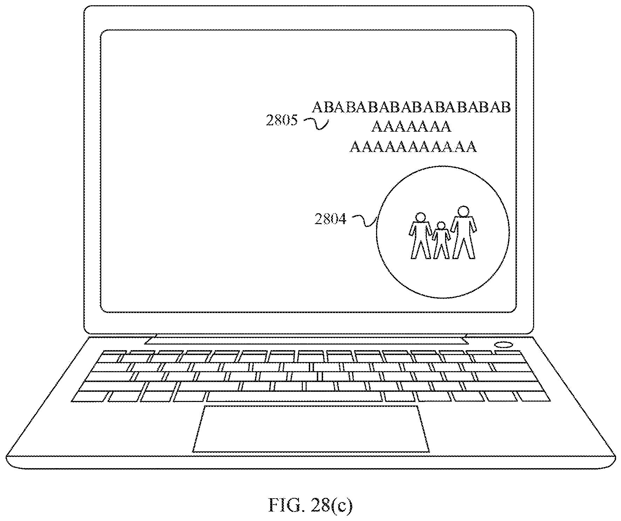

In addition, in the foregoing embodiment, an example in which the plurality of UI controls on the first interface are dragged at a time is used to describe an implementation process of dragging the Ul controls. In some other embodiments, the plurality of UI controls on the first interface may be alternatively dragged for a plurality of times, and one or more UI controls may be dragged at a time. For example, with reference to FIG. 28(a) to FIG. 28(c), an example in which the user drags two controls to the PC end for two times is used. As shown in FIG. 28(a), the user may trigger drag, on the mobile phone, of a first interface 2801, for example, an album button 2802 on a music playing interface by performing the user operation in S2101. The mobile phone may obtain an identifier of the album button 2802 based on the user operation. By listening to the album button 2802, the mobile phone may obtain control information corresponding to the album button 2802, and the mobile phone may generate a corresponding shadow based on the control information, to draw an animation in which the shadow moves with the user operation and display the animation on the mobile phone. In a process in which the user drags the control, the mobile phone may send corresponding drag data to the PC, so that the mobile phone and the PC collaborate to achieve a cross-screen drag effect. After the user releases drag, the mobile phone may project the album button 2802 to the PC end for display. As shown in FIG. 28(b), the album button 2802 is projected to and displayed on the PC end, as shown in 2804. Then, the user may triggers drag, on the mobile phone, of the first interface 2801, for example, a lyric 2803 on the music playing interface by re-performing the user operation in S2101. Similarly, the mobile phone may collaborate with the PC to implement a cross-screen drag effect of the lyric 2803. After the user releases drag, the mobile phone may project the lyric 2803 to the PC end for display. As shown in FIG. 28(b), the lyric 2804 is projected to and displayed on the PC end, as shown in 2805. It should be noted that, after drag is released for the first time, descriptions of projecting and displaying the album button 2802 to and on the PC end are the same as descriptions of corresponding content in the foregoing embodiment After drag is released for the second time, projection and display of the UI control are also similar to descriptions of corresponding content described above. A difference lies in that, when the UI control is projected for the second time, the UI control dragged for the first time also needs to be added, to achieve an effect of projecting and displaying, to and on the target device, all UI controls dragged for two times. In addition, after the UI control is projected to and displayed on the PC, this embodiment may further support processing, for example, moving or scaling up, the projected and displayed UI control by the user on the PC end. For example, as shown in FIG. 28(c), the user may move the lyric 2805 displayed on the PC from the left to the top of the album button 2804.

It should be noted that descriptions of other content in this embodiment are similar to descriptions of corresponding content in FIG. 4. Details are not described herein again. In addition, a specific implementation when the dragged object is a widget (for example, a clock widget, a card widget, a calendar widget, or a music widget) is similar to a specific implementation when the dragged object is the UI control in the embodiment shown in FIG. 21. Details are not described herein again.

in conclusion, by using the method provided in this embodiment, the user is allowed to drag, by using an input device, for example, a mouse or a touchscreen, a window, a UI element, or a UI control on an interface from one terminal to another terminal that is collaboratively used with the terminal, to improve usage efficiency of collaboratively using a plurality of terminals, make drag more direct and explicit, and improve user experience in drag. This breaks a barrier between screens and systems of different terminals, and can implement dragging an application window and various UI elements (for example, a floating window and the UI control) without depending on a projection window. In addition, the source end device and the target device end cooperatively display the animation of the dragged object based on drag of the user, so that the drag animation is smoothly and intuitively presented to the user. In addition, a drag target end device does not need to be used as an extended screen of the source end device, to implement cross-device and cross-system window drag in a real sense. In addition, the user can implement window drag without installing other auxiliary software in advance.

It should be noted that, in the foregoing embodiments, an example in which the object is dragged from the source end device to the target device is used for description. The user may alternatively drag the object from the target device to the source end device. A specific implementation is similar to an implementation of dragging the object from the source end device to the target device. Details are not described herein again.

As described in the foregoing embodiment, during cross-device drag for an object, the source end device may display a recommended device list (or referred to as a recommendation list) for the user to select the target device to which the object is dragged. Currently, in a background of a related distributed technology, after a terminal (for example, a terminal 1) receives an operation of distributing a service of the terminal 1 to another terminal by the user, the terminal 1 may display a recommendation list based on whether a device around the terminal 1 has been connected to the terminal 1. In the recommendation list, a device identifier of a terminal that has been successfully connected to the terminal 1 is ranked at a priority location. To be specific, the terminal 1 preferably recommends, to the user, the terminal that has been successfully connected to the terminal 1. However, a successful connection to the terminal 1 is data generated based on a historical behavior of the user, and the successfully connected terminal may not be a target device to which the user wants to distribute the service this time. As a result, a recommendation order provided by the terminal is inaccurate. Based on this, in this embodiment of this application, when the terminal (for example, the terminal is the foregoing first terminal) determines that a service distribution condition is met, for example, after a cross-device drag operation of the user is received, the terminal may perform device recommendation based on an essential factor that affects a matching degree between a device and a service. The essential factor that affects the matching degree between the device and the service may include one or more of the following influencing essential factors: a hardware configuration of the device, a service type, a human factor, and an environmental factor. In this way, device recommendation is performed based on the essential factor that affects the matching degree between the device and the service, to improve accuracy of the device recommendation order, and improve user experience.

It should be noted that the foregoing service may refer to a function that can be distributed by the terminal and can continue to be implemented on another terminal. For example, content of the service may include one or more of content such as an interface (or referred to as a UI), audio (audio), and a video (video). The interface may be a complete interface, or may be an element on the interface (for example, may be an element on the interface, or a combination of some elements on the interface).

The following describes in detail a specific implementation of device recommendation with reference to FIG. 29 to FIG. 37.

FIG. 29 is a schematic flowchart of a device recommendation method according to an embodiment of this application. As shown in FIG. 29, the method may include the following steps.

S2901: When determining that a service distribution event is generated, the first terminal obtains one or more to-be-recommended devices.

In a process in which a user uses the terminal, there may be various scenarios in which a service of the current terminal needs to be distributed to another terminal for implementation. In an example, the service may refer to a function that may be distributed by the terminal and may continue to be implemented on the another terminal. Content of the service may include one or more of content such as an interface (UI), audio (audio), and a video (video). The interface may be a complete interface, or may be an element on the interface. In other words, the service may be the interface displayed by the terminal, or music, a movie, a short video, or the like played by the terminal.

The foregoing service distribution event is used to trigger the first terminal to recommend, to the user, a device to which the service currently run on the first terminal may be distributed

In some embodiments, the service distribution event may be triggered by the user. For example, when the first terminal runs a service, the first terminal may generate the service distribution event when receiving a user operation used by the user to trigger service distribution.

For example, the foregoing user operation may be a cross-device drag operation For example, the first terminal is a mobile phone. When the user plays the video or the audio, or browses the interface by using the mobile phone, the mobile phone receives the cross-device drag operation input by the user, and the mobile phone may generate the service distribution event. For descriptions of the cross-device drag operation, refer to descriptions of corresponding content in the embodiment shown in FIG. 4. Details are not described herein again. In an example, the cross-device drag operation may be a press operation and a movement operation of the user for an object (for example, the foregoing played video or audio, or the foregoing browsed interface) displayed by the mobile phone. Specifically, the object may be a UI element, for example, an application window, a fieeform (freeform) small window, a dynamic small window a video component, a floating window, a picture-in-picture, a widget (widget), or a UI control. The object may be alternatively a resource type object, for example, a document, a folder, a text, a picture, audio, a video, or a link

For another example, the foregoing user operation may be a user operation of triggering wireless projection of the first terminal. For example, the first terminal is a mobile phone. When the user plays the video or the audio, or browses the interface by using the mobile phone, the mobile phone receives the user operation that is used to trigger wireless projection and that is input by the user, and the mobile phone may generate the service distribution event In an example, in a scenario of wireless projection, the foregoing user operation of triggering wireless projection may be an operation of enabling a projection service function of the mobile phone by the user, or may be a selection operation of the user for a confirmation button on a connection confirmation interface in a process in which the mobile phone establishes a connection to the another terminal after a projection service function of the mobile phone is enabled, or the like.

In some other embodiments, the service distribution event may be alternatively automatically triggered by the first terminal. For example, when the first terminal runs a service, the first terminal may determine whether a current scenario meets the service distribution condition. When it is determined that the current scenario meets the service condition, the service distribution event may be generated.

For example, with reference to a schematic diagram of a scenario shown in FIG. 30, an example in which the first terminal is a mobile phone 3001 is used. A home of the user is equipped with home devices such as a television 3002 and a smart speaker 3003. When the user plays the video or the audio, or browses the interface by using the mobile phone 3001, the mobile phone 3001 may determine, when detecting that a current location of the user is at the home of the user, that the current scenario meets a service distribution condition, and the mobile phone 3001 may generate a service distribution event. In an example, the mobile phone 3001 may communicate with a network by using an antenna and a mobile communication module of the mobile phone 3001 and by using a GPS, to obtain a current location of the mobile phone 3001. The current location of the mobile phone 3001 may be considered as the current location of the user. The current location of the user may be alternatively obtained in another manner. This is not specifically limited herein in this embodiment.

For another example, an example in which the first terminal is a mobile phone is used. A vehicle of the user is equipped with a head unit, a HUD, and the like. When the user uses the mobile phone for navigation, the mobile phone may determine, when detecting that a current movement speed of the user is greater than a preset threshold, that the user is currently driving the vehicle, that is, determine that the current scenario meets a service distribution condition, and the mobile phone may generate a service distribution event. In an example, the mobile phone may detect magnitude of an acceleration of the mobile phone by using an acceleration sensor of the mobile phone, and the mobile phone may determine a current movement speed of the mobile phone based on the detected acceleration. The current movement speed of the mobile phone may be considered as the current movement speed of the user. The current movement speed of the user may be alternatively obtained in another manner. This is not specifically limited herein in this embodiment

When the first terminal currently runs a service (for example, displays an interface, or plays a video or audio), after determining that the service distribution event is generated, the first terminal may obtain one or more to-be-recommended devices. The to-be-recommended device may be the candidate terminal in embodiments of this application.

in this embodiment, the to-be-recommended device may be a device discovered by the first terminal. For example, the to-be-recommended device may include a device that is connected to the first terminal, and/or a device that is not connected to the first terminal but is within a connectable range of the first terminal. The mobile phone may obtain, by using a positioning technology, a device that is not connected to the first terminal but whose distance from the first terminal is within the connectable range. The positioning technology may be a positioning technology, for example, Bluetooth, UWB, or an ultrasonic wave.

It should be noted that, in S2901, an example in which the one or more to-be-recommended devices are obtained after it is determined that the service distribution event is generated is used for description. In some other embodiments, there may be no restriction on an execution sequence of obtaining the to-be-recommended device by the first terminal and determining, by the first terminal, that the service distribution event is generated. For example, the first terminal may alternatively first obtain the to-be-recommended device, and then perform the following S2902 after determining that the service distribution event is generated.

S2902: The first terminal determines a matching degree between each to-be-recommended device and a to-be-distributed service.

The to-be-distributed service may be a service that is to be distributed to the another terminal for further implementation. For example, when the first terminal currently runs a service (for example, the run service is music), the to-be-distributed service is the service currently run by the first terminal. For another example, when the first terminal currently runs a plurality of services (for example, runs a music service and an email reply service), the first terminal may select one service from the plurality of currently run services as the to-be-distributed service, and match the selected service with the to-be-recommended device. The first terminal may alternatively use all the plurality of services as the to-be-distributed services, and separately match all the plurality of services with each to-be-recommended device. The to-be-distributed service may be the first service in embodiments of this application. For example, content of the first service corresponding to the dragged object may include one or more of an interface, audio, and a video.

An implementation in which the first terminal selects one service from the plurality of currently run services as the to-be-distributed service may be as follows: The first terminal may randomly select one service from the plurality of run services as the to-be-distributed service, or the first terminal may select the to-be-distributed service from the plurality of services based on a current specific scenario and/or the obtained to-be-recommended device. For example, the music service and the email reply service are currently run. In view of the fact that the user usually wants to implement the music on a speaker, and the user usually wants to implement the email reply on a computer, the first terminal may determine the music service as the to-be-distributed service when determining that the obtained to-be-recommended device includes a speaker, or may determine the email reply service as the to-be-distributed service when determining that the obtained to-be-recommended devices include a computer. If the to-be-recommended device includes not only a speaker but also a computer, the first terminal may determine both the music service and the email reply service as the to-be-distributed services. For another example, a music service and an email reply service are currently run. In view of the fact that the user usually wants, when driving the vehicle, to implement the music service on the head unit, after the service distribution event is generated, if the first terminal determines that a current movement speed of the user is greater than a preset threshold, to be specific, determines that the user is currently driving the vehicle, the first terminal may determine the music service as the to-be-distributed service.

After the first terminal obtains the one or more to-be-recommended devices and determines the to-be-distributed service, the first terminal may determine the matching degree between each obtained to-be-recommended device and the to-be-distributed service.

In some embodiments, a specific implementation in which the first terminal determines the matching degree between each to-be-recommended device and the to-be-distributed service may be as follows: The first terminal scores each to-be-recommended device and the to-be-distributed service based on the essential factor that affects the matching degree between the device and the service, to obtain score results. Then, the first terminal may determine the matching degree between each to-be-recommended device and the to-be-distributed service based on the score result of each to-be-recommended device and the score result of the to-be-distributed service.

In an example, the score result of the to-be-recommended device and the score result of the to-be-distributed service may be provided in a form of scoring models. For example, for ease of description, in this embodiment, the score result of the to-be-recommended device provided in the form of the scoring model is referred to as a device scoring model, and the score result of the to-be-distributed service provided in the form of the scoring model is referred to as a service scoring model. The first terminal may determine the matching degree between the to-be-recommended device and the to-be-distributed service based on a coincidence degree between the device scoring model and the service scoring model. For example, a higher coincidence degree between the device scoring model and the service scoring model indicates a higher matching degree between the to-be-recommended device and the to-be-distributed service.

The essential factor that affects the matching degree between the device and the service may include one or more of the following influencing essential factors: a hardware configuration of the device, a service type, a human factor, and an environmental factor.

In an example, as shown in Table 1, each foregoing influencing essential factor may include one or more of the following dimensions.

**Table 1**

| Influencing essential factor | Dimension |
|---|---|
| Service type | Interaction complexity |
| | Quantity of services |
| | Task duration |
| | Interaction mode |
| | Content form of the service |
| | Service class |
| | Status when the service is used |
| Environmental factor | Environmental privacy |
| | Being outdoor/indoor |
| | Environmental situation: season, temperature, weather situation, or the like |
| Human factor | Immersion degree |
| | Privacy: whether to share with a stranger, an acquaintance, a family member, or the like |
| | Human status: whether both hands are occupied or the like |
| | Sitting posture: random/upright |
| Hardware configuration of the device | Screen size |
| | Display quality |
| | Supported interaction mode |
| | Audio and video quality |
| | Mobility/Portability |

As shown in Table 1, the service type may include one or more of dimensions such as the interaction complexity, the quantity of services, the task duration, the interaction mode, the content form of the service, the service class, and the status when the service is used. The environmental factor may include one or more of dimensions such as the environmental privacy, being outdoor/indoor, and the environmental situation. The human factor may include one or more of dimensions such as the immersion degree, the privacy, the human status, and the sitting posture. The hardware configuration of the device may include one or more of dimensions such as the screen size, the display quality, the supported interaction mode, the audio and video quality, and the mobility/portability.

In the service type, the interaction complexity may be considered from two influencing factors. One influencing factor may be an operation step required from a start to an end to use a service (or complete a task corresponding to a service). Another influencing factor may be whether an operation that needs to be performed to complete a task corresponding to a service needs to use a peripheral device (for example, a keyboard, a mouse, or a stylus), and whether a plurality of operations need to be switched. The quantity of services may be a quantity of other services that can be used at the same time by the user when a service is run, or a quantity of services that supports in being run at the same time. The task duration may be time duration of a task corresponding to a service, or a period of time required for processing a task corresponding to a service. The interaction mode may be an available input mode for completing a task corresponding to the service, for example, touch control, voice control, control by a remote control, a keyboard, a mouse, a stylus, or a handle. The content form of a service may refer to which piece or pieces of content, such as an interface, audio, and a video, that content of a service specifically includes. The service class may be a class, for example, an audio service, a video service, or an interface presentation service, that corresponds to a service. The status when a service is used may be a status when the user uses the service, for example, being at home (leisure and relaxation), driving (where spirit needs to be kept highly concentrated), or exercising outdoors.

In the environmental factor, the environmental privacy may refer to a privacy requirement of the user in a process of using a device or a service. For example, whether to accept to share content of the service with the stranger, the acquaintance, the family member, or the like is used to measure whether there is another person in an environment in which the device or the service is used or whether privacy may be infringed by another person in a process of using the device or the service. The environmental factor is an objective factor. Being outdoor/indoor may refer to whether the current location of the user is outdoor or indoor. The environmental situation may be an environmental situation, for example, the season, the temperature, or the weather situation, at the current location of the user.

In the human factor, the immersion degree may refer to whether the user can be disturbed by an external factor (which includes a device and a human factor) in a process of performing a task corresponding to a service. The privacy may refer to whether the user can accept to share a service with a stranger, an acquaintance, a family member, or the like, and is a subjective choice of the user. The human status may be a status when the service is used, for example, whether both hands of the user are occupied, whether the user sits, stands, or walks, or the like. The sitting posture may refer to whether the sitting posture is random or upright when a current state of the user is sitting.

In the hardware configuration of the device, the screen size may be a size of a display of the device. The display quality may refer to resolution, brightness, contrast, or the like of a display of the device. The supported interaction mode may be an input mode supported by the device, for example, touchscreen input, mouse input, or keyboard input. The audio and video quality may include audio quality and/or video quality. The audio quality may refer to a capability of the device to play audio, and a score in the dimension may be given with reference to a quantity of speakers of the device. A measurement parameter of the audio quality may include a sampling frequency, a sound effect, loudness, and the like. The sampling frequency is generally divided into three levels in total: 22.05 kHz (kilohertz), 44.1 kHz, and 48 kHz. 22.05 KHz can only achieve sound quality of FM broadcast, 44.1 KHz is theoretically a CD sound quality limit, and 48 KHz can achieve DVD sound quality. The sound effect is, for example, whether the Dolby Atmos is supported. For the loudness, for example, during audio or video production, target loudness should be -23 LUFS (where a deviation range is ±1 LU), and a true peak cannot exceed -1 dB. Generally, the loudness is referred to as -23 LUFS/-1 dB TP. For example, if the device has no speaker, a corresponding score in the dimension is 0, if the device has a single speaker and the audio quality is general, a corresponding score in the dimension is 1, or the like. For example, a score of a watch in the dimension is 0, a score of a mobile phone in the dimension may be 2, and a score of a head unit in the dimension may be 5. The video quality may refer to a video playing capability of the device, and a score may be given with reference to screen resolution, a color depth, a color gamut, a video encoding and decoding capability, and the like of the device. The screen resolution commonly includes 2K screen, 4K HD, and a 4K HDR screen. The color depth is, for example, 8 bits (bits) or 10 bits (bits). The color gamut commonly includes a wide color gamut Currently, according to an international standard, a color gamut that reaches 92% of an NTSC color gamut is referred to as the wide color gamut (a high color gamut). For example, a score of the watch in the dimension is 0, a score of the mobile phone in the dimension may be 4, and a score of a television in the dimension may be 6. The mobility/portability may refer to whether the device is movable or portable

An example in which the service type includes three dimensions: the interaction complexity, the quantity of services, and the task duration, the environmental factor includes one dimension: the environmental privacy, the human privacy includes one dimension: the immersion degree, and the hardware configuration of the device includes one dimension: the screen size, is used. This embodiment provides an example of a comparison table of scores in the dimensions, as shown in Table 2.

**Table 2**

| Standard comparison table of scores in dimensions | | | | | | |
|---|---|---|---|---|---|---|
| Influencing essential factor | Dimension | Score | | | | |
| | | 1 to 2 | 2 to 3 | 3 to 4 | 4 to 5 | 5 to 6 |
| Service type | Interaction complexity | Simple interaction for a task that can be completed through one operation | Simple interaction for a task that can be completed through one or two operations | Complex interaction | Having complex switching and requiring a precise operation | Needing to depend on the peripheral device and requiring complex interaction for switching between the plurality of operations |
| | Quantity of services | Only one service can be run at a time | One or two services can be run at a time | Two or three services can be run at a time | Three to four services can be run at a time | Four or more services can be run at a time |
| | Task duration | A task can be processed and completed within a short period of time | A task can be processed and completed within 5 minutes | A task can be processed and completed within approximately 5 to 10 minutes | A task can be processed and completed within approximately 10 to 20 minutes | A task can be processed and completed within more than 30 minutes |
| Environmental factor | Environmental privacy | No requirement on privacy | The user can share the content with the stranger | The user can share the content with the acquaintance | The user can share the content with the family member and the friend | Only the user can view the content |
| Human factor | Immersion degree | Short-time task processing that has no requirement on immersion | A plurality of tasks can be processed at the same time | One or two tasks can be processed at the same time | Only one task can be processed, concentration is required, and interruption may be | Being highly focused is required and interruption cannot be accepted |
| | | | | | allowed | |
| Hardware configuration | Screen size | 1 to 3 inches | 3 to 7 inches | 7 to 9 inches | 9 to 16 inches | Above 17 inches |

In Table 2, it can be seen that, for the interaction complexity, if use of a service (or completion of a task corresponding to a service) requires simple interaction from a start to an end, for example, can be implemented through one operation, the score may be 1 to 2. If use of a service (or completion of a task corresponding to a service) requires simple interaction from a start to an end, for example, can be implemented through one or two operations, the score may be 2 to 3. If use of a service (or completion of a task corresponding to a service) requires complex interaction, for example, character entering or form filling, from a start to an end for implementation, the score may be 3 to 4. If use of a service (or completion of a task corresponding to a service) requires complex switching from a start to an end, and requires a precise operation for implementation, the score may be 4 to 5. If use of a service (or completion of a task corresponding to a service) needs to depend on the peripheral device, for example, a keyboard, a mouse, or a stylus, and requires complex interaction for switching between the plurality of operations for implementation, the score may be 5 to 6. It can be seen that a higher interaction complexity indicates a higher corresponding score.

For the quantity of services, if only one service can be run at a time, or the user is not allowed to use another service when one service is run, the score is 1 to 2. If one or two services can support in being run at a time, the score may be 2 to 3. If two or three services can support in being run at a time, or the user is allowed to use one or two other services when one service is run, the score may be 3 to 4. If three or four services can support in being run at a time, or the user is allowed to use two or three other services when one service is run, the score may be 4 to 5. If four or more services can support in being run at a time, or the user is allowed to use three or more other services when one service is run, the score may be 5 to 6. It can be seen that a larger quantity of services indicates a higher corresponding score.

For the task duration, if a task corresponding to a service, for example, viewing an SMS message or declining an incoming call, can be processed and completed within a short period of time, the score is 1 to 2. If a task corresponding to a service, for example, appreciating a song or browsing a piece of news, can be processed and completed within 5 minutes, the score may be 2 to 3. If a task corresponding to a service, for example, filling in a questionnaire, can be processed and completed within approximately 5 to 10 minutes, the score may be 3 to 4. If a task corresponding to a service, for example, post processing of a photo, can be processed and completed within approximately 10 to 20 minutes, the score may be 4 to 5. If a task corresponding to a service, for example, document editing, report processing, or watching a movie, can be processed and completed within above 30 minutes, the score may be 5 to 6. It can be seen that longer task duration indicates a higher corresponding score.

For the environmental privacy, if the user has no requirement on privacy in the process of using the device or the service, the score is 1 to 2. If the user allows to share the content with the stranger in the process of using the device or the service, the score may be 2 to 3. If the user allows to share the content with the acquaintance in the process of using the device or the service, the score may be 3 to 4. If the user allows to share the content with a family member or a friend in the process of using the device or the service, the score may be 4 to 5. If the user allows only the user to view the content in the process of using the device or the service, the score may be 5 to 6. It can be seen that higher environmental privacy indicates a higher corresponding score.

For the immersion degree, if the user performs short-time task processing that has no requirement on immersion, the score is 1 to 2. If the user is allowed to process the plurality of tasks (for example, two or more tasks) at the same time, the score may be 2 to 3. If the user is allowed to process one or two tasks at the same time, the score may be 3 to 4. If the user can process one task, needs to be focused, and can be interrupted, the score may be 4 to 5. If the user needs to be highly focused and cannot be interrupted, the score may be 5 to 6. It can be seen that a higher immersion degree indicates a higher corresponding score.

For the screen size, if the screen size of the device is 1 to 3 inches, the score is 1 to 2. If the screen size of the device is 3 to 7 inches, the score may be 2 to 3. If the screen size of the device is 7 to 9 inches, the score may be 3 to 4. If the screen size of the device is 9 to 16 inches, the score may be 4 to 5. If the screen size of the device is 17 inches or larger, the score may be 5 to 6. It can be seen that a larger screen size indicates a higher corresponding score.

The example in which the service type includes the three dimensions: the interaction complexity, the quantity of services, and the task duration, the environmental factor includes the dimension: the environmental privacy, the human privacy includes the dimension: the immersion degree, and the hardware configuration of the device includes the dimension: the screen size, is still used. Based on the comparison table of the scores in the dimensions shown in Table 2, scores of different types of devices in the dimensions included in the influencing essential factors may be obtained.

A mobile phone is used as an example. Based on the standard comparison table of the scores in the dimensions shown in Table 2, parameters and scores of the mobile phone in the dimensions included in the influencing essential factors are shown in Table 3.

**Table 3**

| Influencing essential factor | Dimension | **Parameter** | Score |
|---|---|---|---|
| Service type | Interaction complexity | Complex interaction is supported | 1 to 4 |
| | Quantity of services | Generally, a maximum of two services are run at the same time | 1 to 3 |
| | Task duration | No restriction | 1 to 6 |
| Environmental factor | Environmental privacy | No restriction | 1 to 6 |
| **Human factor** | Immersion degree | No restriction | 1 to 6 |
| Hardware configuration | Screen size | 3 to 7 inches | 2 to 3 |

Based on Table 3, it may be understood that the mobile phone not only supports in implementing simple interaction for a task that can be completed through one operation or one or two operations, but also supports complex interaction. Therefore, in the dimension of the service type, namely, the interaction complexity, the score being 1 to 4 may be given to the mobile phone. Similarly, the mobile phone usually can run only one service at a time, but a mobile phone that supports a split-screen function can support in running two services at a time. Therefore, in the dimension of the service type, namely, the quantity of services, the score being 1 to 3 may be given to the mobile phone. The mobile phone has no restriction on the task processing duration. To be specific, the mobile phone supports both the task that can be processed and completed within the short period of time and a task that can be processed and completed within a long period of time. Therefore, in the dimension of the service type, namely, the task duration, the score being 1 to 6 may be given to the mobile phone. The mobile phone has no restriction on both the environmental privacy and the immersion degree. Therefore, both the scores of the environmental factor being the environmental privacy and the human factor being the immersion degree are also 1 to 6. Generally, the screen size of the mobile phone is 3 to 7 inches. Therefore, the score of the hardware configuration being the screen size is 2 to 3.

Similarly, scores, for example, as shown in Table 4, of another type of device in the dimensions included in the influencing essential factors may also be obtained based on the standard comparison table of the scores in the dimensions shown in Table 2.

**Table 4**

| Influencing essential factor | Dimension | Device type | | | | | |
|---|---|---|---|---|---|---|---|
| | | Head unit | Watch | Mobile phone | Tablet computer | Computer | Television |
| Service Type | Interaction complexity | 1 to 3 | 1 to 3 | 1 to 4 | 1 to 6 | 1 to 6 | 1 to 3 |
| | Quantity of services | 1 to 3 | 1 to 2 | 1 to 3 | 1 to 4 | 1 to 6 | 1 to 2 |

| Influencing essential factor | Dimension | Device type | | | | | |
|---|---|---|---|---|---|---|---|
| | | Head unit | Watch | Mobile phone | Tablet computer | Computer | Television |
| | Task duration | 1 to 6 | 1 to 3 | 1 to 6 | 1 to 6 | 1 to 6 | 1 to 6 |
| Environmental factor | Environmental privacy | 2 to 6 | 1 to 6 | 1 to 6 | 1 to 6 | 1 to 6 | 1 to 6 |
| Human factor | Immersion degree | 1 to 6 | 1 to 2 | 1 to 6 | 1 to 6 | 1 to 6 | 1 to 6 |
| Hardware configuration | Screen size | 1 to 4 | 1 to 2 | 2 to 3 | 3 to 5 | 4 to 6 | 4 to 6 |

It can be seen that Table 4 separately shows the scores of the head unit, the watch, the mobile phone, the tablet computer, the computer, and the television in six dimensions: the interaction complexity, the quantity of services, the task duration, the environmental privacy, the immersion degree, and the screen size. For example, for the head unit, the score of the interaction complexity is 1 to 3, the score of the quantity of services is 1 to 3, the score of the task duration is 1 to 6, the score of the environmental privacy is 2 to 6, the score of the immersion degree is 1 to 6, and the score of the screen size is 1 to 4. For another example, for the watch, the score of the interaction complexity is 1 to 3, the score of the quantity of services is 1 to 2, the score of the task duration is 1 to 3, the score of the environmental privacy is 1 to 6, the score of the immersion degree is 1 to 2, and the score of the screen size is 1 to 2. It can be seen that each type of device has its own feature. Some devices, such as the tablet computer and the computer, have an advantage in interaction complexity. Some devices, such as the watch, have no advantage in task duration. Some devices, such as the television and the computer, have an advantage in screen size.

Similarly, the example in which the service type includes the three dimensions: the interaction complexity, the quantity of services, and the task duration, the environmental factor includes the dimension: the environmental privacy, the human privacy includes the dimension: the immersion degree, and the hardware configuration of the device includes the dimension: the screen size, is still used. Based on the comparison table of the scores in the dimensions shown in Table 2, scores of different services in the dimensions included in the influencing essential factors may be obtained. The service may include music, a movie, a game, a yoga tutorial, an email reply, a short video, and the like. These services are merely examples in this embodiment. The service may not be limited thereto during actual use, for example, may further include navigation and the like. For example, the service is the music. Based on the standard comparison table of the scores in the dimensions shown in Table 2, parameters and scores of the music service in the dimensions included in the influencing essential factors are shown in Table 5.

**Table 5**

| Influencing essential factor | Dimension | Parameter | Score |
|---|---|---|---|
| Service type | Interaction complexity | Simple interaction for a corresponding interaction operation that can be completed in one step or one to two steps | 1 to 3 |
| | Quantity of services | Only one service can be run at a time | 1 to 2 |
| | Task duration | A task can be processed and completed within a short period of time or 5 minutes | 1 to 3 |
| Enviromental factor | Environmental privacy | No restriction | 1 to 6 |
| Human factor | Immersion degree | Short-time task processing that has no requirement on immersion | 1 to 2 |
| Hardware configuration | Screen size | No restriction | 1 to 6 |

Based on Table 5, it may be understood that, for the music service, the user generally only needs to perform single interaction, for example, a corresponding interaction operation that is of enjoying the music service and that can be completed in one step or one or two steps. Therefore, in the dimension of the service type, namely, the interaction complexity, the score being 1 to 3 may be given to the music service. Similarly, generally, when the music service is run, another service (for example, another service of a same type) is no longer allowed to be run at the same time. Therefore, in the dimension of the service type, namely, the quantity of services, the score being 1 to 2 may be given to the music service. Generally, processing duration of a task corresponding to the music service is 5 minutes or shorter. For example, for a system, processing once the task related to the music service may be mostly ended within 5 minutes or shorter. Therefore, in the dimension of the service type, namely, the task duration, the score being 1 to 3 may be given to the music service. The music service has no restriction on the environmental privacy. For example, the music service may have no requirement on privacy. For another example, the music service may be allowed to be shared with the stranger, the acquaintance, the family member, or the friend. For still another example, the user may allow only the user to view the music service. Therefore, when the environmental factor is the environmental privacy, the music service has the score being 1 to 6. The music service has no requirement on the immersion degree. Therefore, the score of the human factor being the immersion degree is 1 to 2. The music service has no restriction on the screen size of the device when being run, and a screen may be in any size. Therefore, the score of the hardware configuration being the screen size is 1 to 6.

It should be noted that an application that provides the music service may further include some elements that do not belong to the complex interaction operation of enjoying the music service. For example, commenting on a piece of music requires a complex operation. An operation for such an element may not be included in the corresponding interaction operation of enjoying the music service, but is listed as another service, for example, an interaction operation corresponding to a "character entering" service. It may be understood that a corresponding score of the "character entering" service in each dimension may be different from the score of the music service in each dimension.

Similarly, scores, for example, as shown in Table 6, of another service in the dimensions included in the influencing essential factors may also be obtained based on the standard comparison table of the scores in the dimensions shown in Table 2.

**Table 6**

| Influencing essential factor | Dimension | Service | | | | | |
|---|---|---|---|---|---|---|---|
| | | Music | Movie | Game | Yoga tutorial | Email reply | Short video |
| Service type | Interaction complexity | 1 to 3 | 1 to 3 | 1 to 5 | 1 to 3 | 3 to 6 | 1 to 3 |
| | Quantity of services | 1 to 2 | 1 to 2 | 1 to 2 | 1 to 2 | 1 to 6 | 1 to 2 |
| | Task duration | 1 to 3 | 1 to 6 | 2 to 6 | 1 to 2 | 2 to 6 | 1 to 3 |
| Environmental factor | Environmental privacy | 1 to 6 | 1 to 6 | 1 to 6 | 1 to 6 | 5 to 6 | 1 to 6 |
| Human factor | Immersion degree | 1 to 2 | 3 to 6 | 4 to 6 | 1 to 6 | 4 to 6 | 1 to 6 |
| Hardware configuration | Screen size | 1 to 6 | 2 to 6 | 2 to 6 | 1 to 6 | 2 to 6 | 2 to 6 |

It can be seen that Table 6 separately shows the scores of these services: the music, the movie, the game, the yoga tutorial, the email reply, and the short video, in six dimensions: the interaction complexity, the quantity of services, the task duration, the environmental privacy, the immersion degree, and the screen size. For example, for the movie service, the score of the interaction complexity is 1 to 3, the score of the quantity of services is 1 to 2, the score of the task duration is 1 to 6, the score of the environmental privacy is 2 to 6, the score of the immersion degree is 3 to 6, and the score of the screen size is 2 to 6. For another example, for the short video service, the score of the interaction complexity is 1 to 3, the score of the quantity of services is 1 to 2, the score of the task duration is 1 to 3, the score of the environmental privacy is 1 to 6, the score of the immersion degree is 1 to 6, and the score of the screen size is 2 to 6. It can be seen that each service has its own feature. Some services, such as the game and the email reply, have a higher interaction complexity. Some services, such as the game and the email reply, have a higher requirement on the immersion degree.

As described in the foregoing embodiment, the first terminal may determine the matching degree between each to-be-recommended device and the to-be-distributed service based on a score of each to-be-recommended device in each dimension included in each influencing essential factor and a score of the to-be-distributed service in each dimension included in each influencing essential factor that are obtained in S2901. In some embodiments, the first terminal may pre-store the scores of the different types of devices in each dimension included in each influencing essential factor and the scores of the different services in each dimension included in each influencing essential factor. For example, the example in which the service type includes the three dimensions: the interaction complexity, the quantity of services, and the task duration, the environmental factor includes the dimension: the environmental privacy, the human privacy includes the dimension: the immersion degree, and the hardware configuration of the device includes the dimension: namely, the screen size, and the first terminal may store Table 4 and Table 6 is still used. In this way, based on a type of each to-be-recommended device obtained in S2901 and Table 4, the first terminal may determine the score of each to-be-recommended device in each dimension included in each influencing essential factor, to obtain the score result. Based on the to-be-distributed service and Table 6, the first terminal may determine the score of the to-be-distributed service in each dimension included in each influencing essential factor, to obtain the score result.

The type of each to-be-recommended device may be reported by the corresponding to-be-recommended device to the first terminal. For example, when the to-be-recommended device is a device that has been connected to the first terminal, the type of the to-be-recommended device may be sent by the to-be-recommended device to the first terminal in a process in which the first terminal discovers the to-be-recommended device, or in a process in which the to-be-recommended device is connected to the first terminal, or after the to-be-recommended device is successfully connected to the first terminal. For another example, when the to-be-recommended device is a device that is not connected to the first terminal but is within the connectable range of the first terminal, the type of the to-be-recommended device may be sent by the to-be-recommended device to the first terminal in a process in which the first terminal discovers the to-be-recommended device, for example, may be sent by the to-be-recommended device to the first terminal in a process in which the first terminal discovers the to-be-recommended device by using the positioning technology (for example, Bluetooth). In some embodiments, the to-be-recommended device may actively or passively report the type of the to-be-recommended device to the first terminal. For example, an implementation in which the to-be-recommended device passively reports the type of the to-be-recommended device may be as follows: In any one of the foregoing processes, the first terminal may first send a device information reporting notification to the to-be-recommended device. After receiving the notification, the to-be-recommended device may report device information of the to-be-recommended device, for example, including the type of the to-be-recommended device, to the first terminal. After receiving the device information (for example, including the type) from the to-be-recommended device, the first terminal may cache the device information of the to-be-recommended device, so that the first terminal uses the device information when determining the matching degree between the to-be-recommended device and the to-be-distributed service.

After determining the score result of each to-be-recommended device and the score result of the to-be-distributed service, the first terminal may determine the matching degree between each to-be-recommended device and the to-be-distributed service based on the score result of each to-be-recommended device and the score result of the to-be-distributed service.

For example, the score result of the to-be-recommended device and the score result of the to-be-distributed service may be provided in the form of the scoring models, the to-be-recommended device obtained in S2901 includes a mobile phone, a watch, a head unit, a tablet computer, a computer, and a television, and the to-be-distributed service is music. A specific implementation of determining the matching degree between each to-be-recommended device and the to-be-distributed service based on the score result of each to-be-recommended device and the score result of the to-be-distributed service may be as follows: The first terminal may construct the scoring model of each to-be-recommended device based on the score result of each obtained to-be-recommended device.

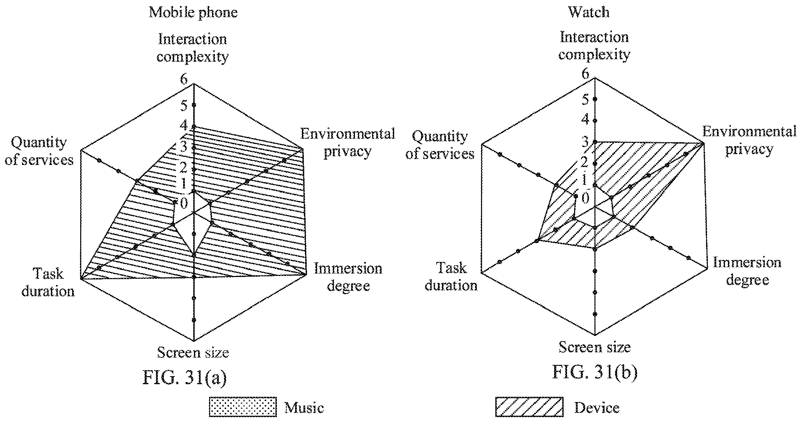

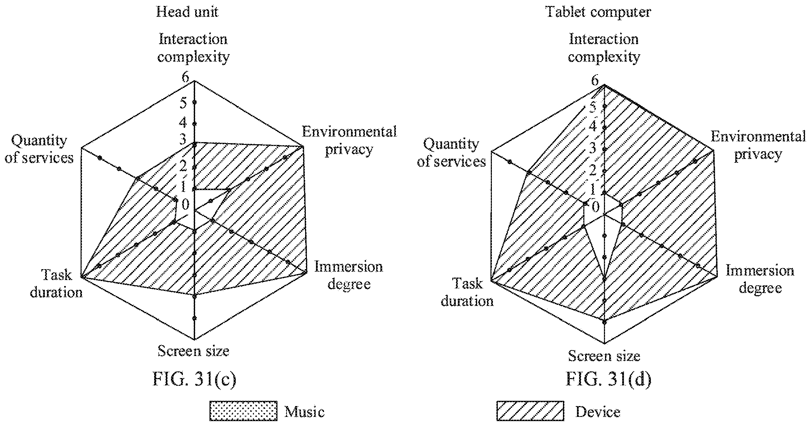

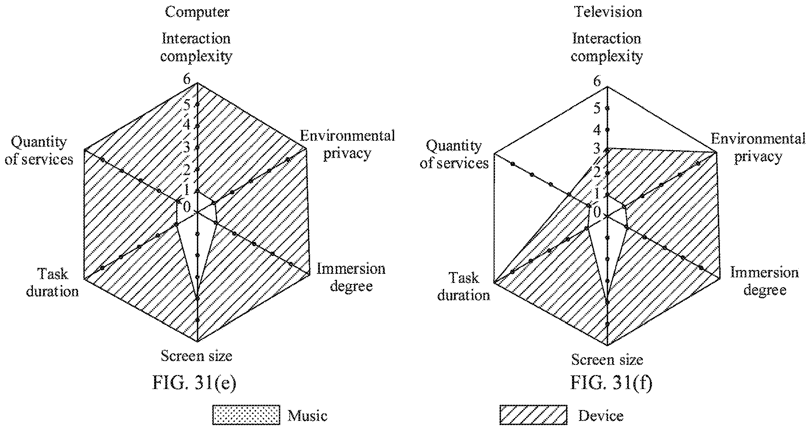

For ex ample, as shown in FIG. 31(a) to FIG. 31(f), device scoring models of the mobile phone, the watch, the head unit, the tablet computer, the computer, and the television are respectively shown. For example, the first terminal may construct the device scoring model of the watch shown in FIG. 31(b) based on the fact that the watch has a score being 1 to 3 in the interaction complexity, a score being 1 to 2 in the quantity of services, a score being 1 to 3 in the task duration, a score being 1 to 6 in the environmental privacy, a score being 1 to 2 in the immersion degree, and a score being 1 to 2 in the screen size. For another example, the first terminal may construct the device scoring model of the head unit shown in FIG. 31(c) based on the fact that the head unit has a score being 1 to 3 in the interaction complexity, a score being 1 to 3 in the quantity of services, a score being 1 to 6 in the task duration, a score being 2 to 6 in the environmental privacy, a score being 1 to 6 in the immersion degree, and a score being 1 to 4 in the screen size. Similarly, the first terminal may further construct the device scoring model of the mobile phone shown in FIG. 31(a), the device scoring model of the tablet computer shown in FIG. 31(d), the device scoring model of the computer shown in FIG. 31(e), and the device scoring model of the television shown in FIG. 31(f).

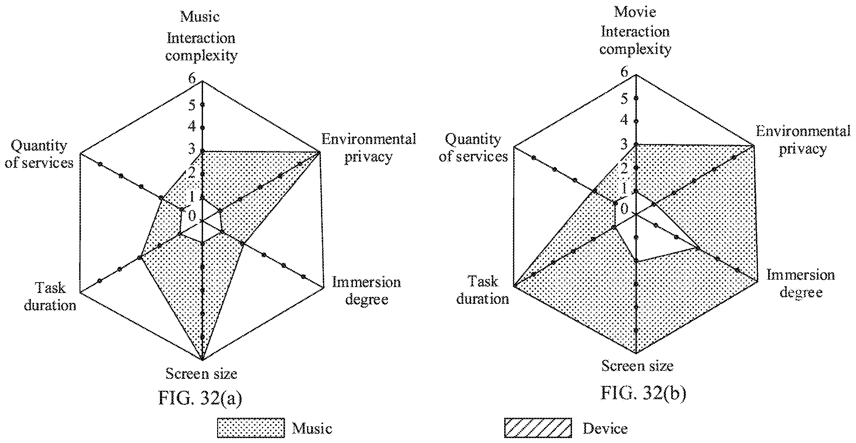

As shown in FIG. 32(a), a service scoring model for the music service is shown. The first terminal may construct the service scoring model of the music service shown in FIG. 32(a) based on the fact that the music service has a score being 1 to 3 in the interaction complexity, a score being 1 to 2 in the quantity of services, a score being 1 to 3 in the task duration, a score being 1 to 6 in the environmental privacy, a score being 1 to 2 in the immersion degree, and a score being 1 to 6 in the screen size.

The first terminal separately determines a coincidence degree between the device scoring models of the mobile phone, the watch, the head unit, the tablet computer, the computer, and the television and the service scoring model of the music service. The first terminal may determine a matching degree between the to-be-recommended device and the to-be-distributed service based on the coincidence degree between the device scoring model of each to-be-recommended device and the service scoring model of the music service.

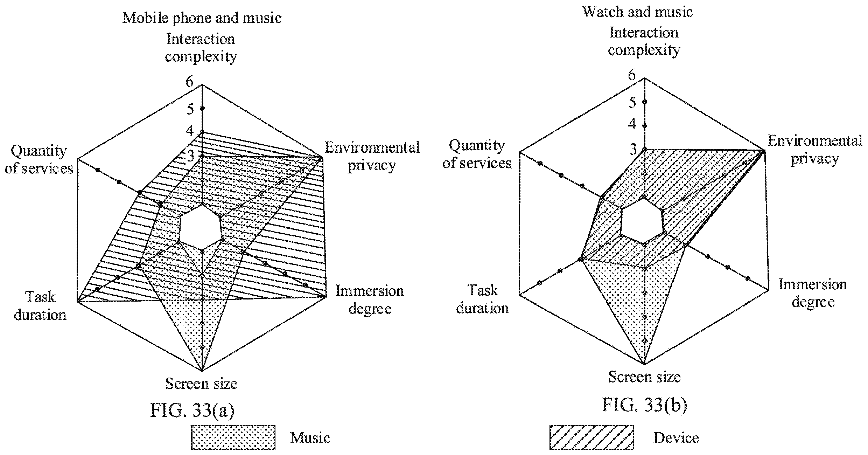

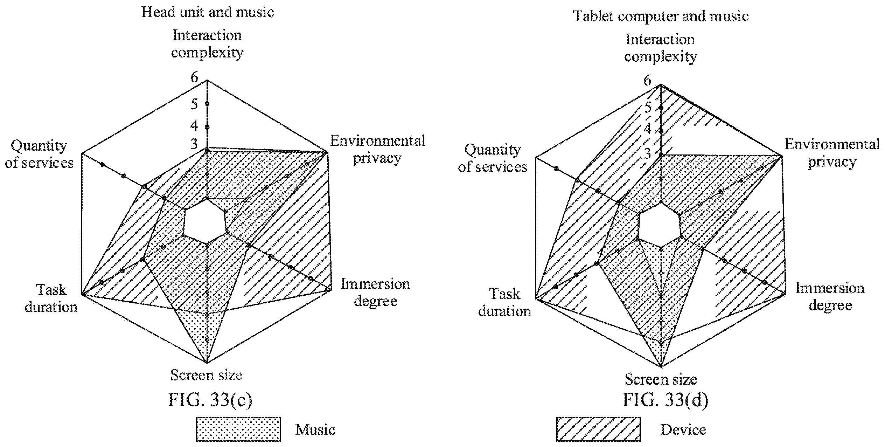

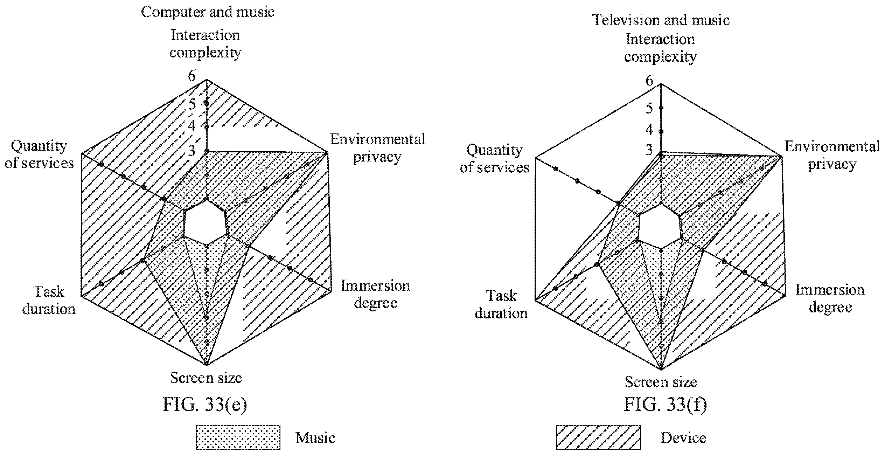

For example, with reference to FIG. 31(a) to in FIG. 32(a), as shown in FIG. 33(a) to FIG. 33(f), the first terminal may separately superpose the device scoring model of each to-be-recommended device with the service scoring model of the music service, and may determine the coincidence degree between the device scoring model of the to-be-recommended device and the service scoring model of the music service based on a superposition result It may be considered that a higher coincidence degree indicates a higher matching degree. For example, based on the superposition results shown in FIG. 33(a) to FIG. 33(f), the coincidence degrees between the device scoring models of the to-be-recommended devices and the service scoring model of the music service in descending order may be as follows: the tablet computer, the head unit, the mobile phone, the computer, the television, and the watch. The first terminal may determine, based on the coincidence degrees, that the matching degrees between the to-be-recommended devices and the music service in descending order may be as follows: the tablet computer, the head unit, the mobile phone, the computer, the television, and the watch.

It should be noted that, in the foregoing embodiment, the comparison table of the scores provided in Table 2 and the scores provided in Table 3 to Table 6 are all examples. In a specific implementation, the comparison table and the scores may be set based on a requirement of an actual application scenario. This is not limited herein in this embodiment In addition, in the foregoing embodiment, the score results of each to-be-recommended device and the to-be-distributed service are determined by using the example in which the service type includes the three dimensions: the interaction complexity, the quantity of services, and the task duration, the environmental factor includes the dimension: the environmental privacy, the human privacy includes the dimension: the immersion degree, and the hardware configuration of the device includes the dimension: the screen size. In some other embodiments, each to-be-recommended device and the to-be-distributed service may be alternatively scored based on another dimension of the essential factor that affects the matching degree between the device and the service. Certainly, the essential factors that affect the matching degree between the device and the service are also not limited to the service type, the environmental factor, the human factor, and the hardware configuration that are shown in this embodiment, and there may be further another essential factors. The dimensions of the essential factors are also not limited to the dimensions shown in Table 1, and there may be further another dimension. This is not limited herein in this embodiment either.

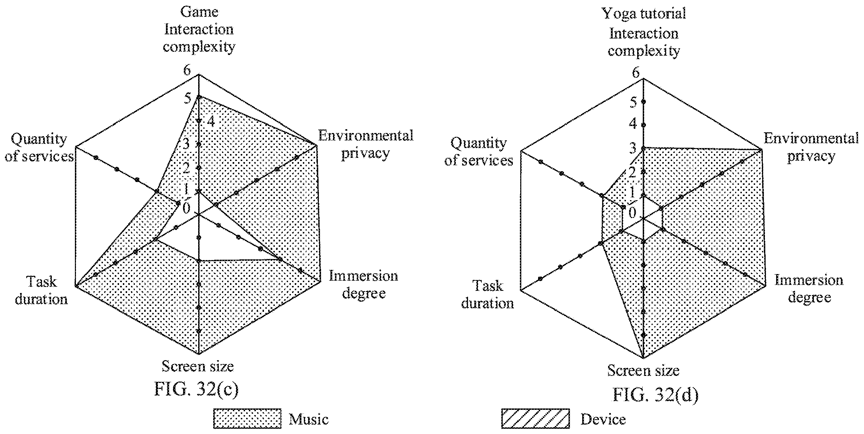

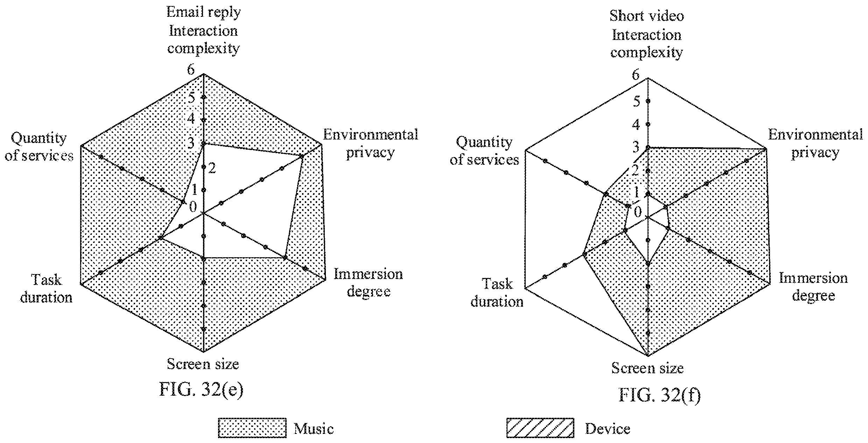

In addition, in the foregoing example, an example in which the scores (for example, Table 4) of the different types of devices in each dimension included in each influencing essential factor and the scores (for example, Table 6) of the different services in each dimension included in each influencing essential factor are stored in the first terminal, and when needing to determine the matching degree between the device and the service, the first terminal obtains a corresponding score based on a stored corresponding score table, constructs a corresponding scoring model based on an obtained score result, and then determines the matching degree based on the corresponding scoring model is used for description. In some other embodiments, device scoring models of different types and service scoring models of different services may be alternatively stored in the first terminal. For example, the service type includes three dimensions: the interaction complexity, the quantity of services, and the task duration, the environmental factor includes one dimension: the environmental privacy, the human privacy includes one dimension: the immersion degree, the hardware configuration of the device includes one dimension: the screen size, and the service includes music, a movie, a game, a yoga tutorial, an email reply, and a short video. The device scoring models shown in FIG. 31(a) to FIG. 31(f) and service scoring models shown in FIG. 32(a) to FIG. 32(f) may be stored in the first terminal. The service scoring models shown in FIG. 32(a) to FIG. 32(f) further includes a service scoring model of the movie service shown in FIG. 32(b), a service scoring model of the game service shown in FIG. 32(c), a service scoring model of the yoga tutorial service shown in FIG. 32(d), a service scoring model of the email reply service shown in FIG. 32(e), and a service scoring model of the short video service shown in FIG. 32(f). In this way, when needing to determine the matching degree between the device and the service, the first terminal may directly determine the matching degree based on the stored corresponding scoring model. Whether the score table or the scoring model is stored in the first terminal is not specifically limited herein in this embodiment, and may be selected and set based on a requirement of an actual scenario. In addition, in the foregoing example, an example in which the influencing essential factors and the dimensions based on which the different services are scored are all the same is used for description. In some other embodiments, influencing essential factors and/or dimensions considered when the different services are scored may be alternatively different. However, it needs to ensure that an influencing essential factor and a dimension that are considered when the device is scored are the same as an influencing essential factor and a dimension that are considered when the service is scored. In this way, the matching degree between the device and the service can be determined based on corresponding score results.

In the example of the foregoing embodiment, scores of devices of a same type in each dimension included in each influencing essential factor are the same, that is, determined score results or obtained device scoring models of the devices of the same type are the same. In view of the fact that parameters of different devices of the same type in each dimension included in each influencing essential factor may be different, corresponding scores of the devices may also be different. For example, for the mobile phone, screen sizes of some mobile phones are 6 inches, and screen sizes of some mobile phones are 8 inches. However, scores corresponding to 6 inches and 8 inches are different. For example, when the screen size of the mobile phone is 6 inches, a corresponding score is 2 to 3, and when the screen size of the mobile phone is 8 inches, a corresponding score is 3 to 4. Therefore, in some other embodiments, when determining the matching degree between the to-be-recommended device and the to-be-distributed service, the first terminal may also consider scores in one or some single dimensions. For example, the first terminal may determine the matching degree between each to-be-recommended device and the to-be-distributed service based on the coincidence degree between the device scoring model of each to-be-recommended device and the service scoring model of the music service and scores in one or some single dimensions. For example, the first terminal may weight the coincidence degree and the score in each dimension to determine the matching degree between the to-be-recommended device and the to-be-distributed service. The coincidence degree and the weight in each dimension may be predefined and stored in the first terminal. For another example, the first terminal may directly add the coincidence degree and the score in each dimension to determine the matching degree between the to-be-recommended device and the to-be-distributed service. In an example, an example in which the first terminal determines the matching degree between the to-be-recommended device and the to-be-distributed service based on the coincidence degree, a score in a dimension 1, and a score in a dimension 2, a weight of the coincidence degree is a, a weight of the dimension 1 is b, and a weight of the dimension 2 is c is used. After determining the coincidence degree, the first terminal may determine a score corresponding to the coincidence degree. For example, when a value range of the coincidence degree is 0% to 100%, a value range of the corresponding score is 0 to 10 points. For example, when the coincidence degree is 0%, the corresponding score is 0 points, when the coincidence degree is 50%, the corresponding score is 5 points, and when the coincidence degree is 100%, the corresponding score is 10 points. In this case, the matching degree=the score corresponding to the coincidence degree×a+the score in the dimension 1xb+the score in the dimension 2xe, or the matching degree=the score corresponding to the coincidence degree+the score in the dimension 1+the score in the dimension 2. A specific calculation method is not limited herein in this embodiment. Alternatively, when the first terminal determines the device scoring model of the to-be-recommended device, if the device not only reports the device type, but also reports specific parameters of one or some dimensions, for these dimensions whose specific parameters are reported, the first terminal may construct the device scoring model by using a score corresponding to the specific parameter of the dimension, and does not construct the device scoring model based on a corresponding score of the device type in the dimension. For a dimension whose specific parameter is not reported, the device scoring model may be constructed based on a corresponding score of the device type in the dimension. For example, when the to-be-recommended device is a mobile phone, if the mobile phone reports a screen size of the mobile phone, for example, 8 inches, a corresponding score is 3 to 4 points. However, refer to Table 4. A score of a device of this type, for example, the mobile phone, in the dimension, namely, the screen size, is 2 to 3 points. In this case, the first terminal may construct a device scoring model by using a specific parameter, for example, 8 inches, of the mobile phone in the dimension, namely, the screen size, the corresponding score being 3 to 4 points, and a score in another dimension. The device scoring model is not constructed based on the score, for example, 2 to 3 points, of the device of this type, for example, the mobile phone, in the dimension, namely, the screen size. In this way, a difference between matching degrees between the different devices of the same type and the service can be reflected. In addition, when coincidence degrees between different to-be-recommended devices of a same type or to-be-recommended devices of different types and the to-be-distributed service are the same, matching degrees between the different to-be-recommended devices of the same type or the to-be-recommended devices of the different types and the service can be distinguished by using scores in a single dimension.

In some other embodiments, the first terminal may alternatively first perform, based on a specific parameter that is of a single dimension and that is reported by the to-be-recommended device, primary selection on the to-be-recommended device obtained in S2901, to determine to-be-recommended devices on which S2902 needs to be performed. To be specific, a matching degree between which to-be-recommended devices and the to-be-distributed service needs to be determined. For a device that fails in primary selection, S2902 may not be performed. For example, the to-be-distributed service is music. A device whose score corresponding to audio and video quality is higher than a threshold may be configured to continue to implement the service. Therefore, after obtaining the to-be-recommended device, the first terminal may determine, based on a specific parameter that is of the audio and video quality and that is reported by each recommended device, which to-be-recommended devices whose scores corresponding to the audio and video quality are greater than the threshold. S2902 is performed on the to-be-recommended device whose score corresponding to the audio and video quality is greater than the threshold. S2902 is not performed on a to-be-recommended device whose score corresponding to the audio and video quality is less than the threshold. Whether S2902 needs to be performed may be alternatively directly determined based on a specific parameter in a single dimension.

It should be noted that the foregoing single dimension used to calculate the matching degree or used for primary selection may be any dimension in the influencing essential factor shown in Table 1. The corresponding scores in the dimensions, for example, similar to the standard comparison table of the scores in the dimensions shown in Table 2, may be pre-stored in the first terminal. In addition, a specific parameter of each dimension of each to-be-recommended device (for example, the screen size of the device) may be reported by the corresponding to-be-recommended device to the first terminal. Similar to the foregoing descriptions of reporting the type of the to-be-recommended device, the specific parameter of each dimension of the to-be-recommended device may also be carried in the device information of the to-be-recommended device. For specific descriptions, refer to the descriptions of reporting the type of the to-be-recommended device. Details are not described herein again. Specific parameters that are of which dimensions and that need to be reported by the to-be-recommended device may be predefined, or may be indicated by the first terminal. For example, specific parameters that are of which dimensions and that need to be reported are indicated in the device information reporting notification. This is not specifically limited herein in this embodiment

In addition, as described in the foregoing embodiment, the content of the service may be the interface, and the specific content that the user wants to distribute may be the complete interface, or may be the element on the interface. It may be understood that the element on the interface may be classified into a presentation element, a manipulation element, and the like. The presentation element may include one or more of the following: a picture, a video, a text, an icon, and a banner (banner). The manipulation element may include one or more of the following: a button, a progress slider, and a toolbar. For different types of elements, influencing essential factors (essential factors that affect a matching between the device and the element) that may need to be considered during distribution may also be different. For example, the presentation element has a high requirement on the screen size of the device, and the manipulation element has a high requirement on the interaction complexity supported by the device. Therefore, for a scenario in which the element on the interface needs to be distributed, the specific implementation in which the first terminal determines the matching degree between the service and the to-be-recommended device may be as follows: determining the content of the service, namely, a matching degree between the elements (for example, a first element and a second element) on the interface and the to-be-recommended device, to perform device recommendation based on the matching degree. For example, the first terminal may display, for each element, a recommendation list corresponding to the element For example, a first recommendation list corresponding to the first element is displayed. A higher matching degree between the to-be-recommended device and the first element indicates a higher recommendation priority of a device identifier of the to-be-recommended device in the first recommendation list A second recommendation list corresponding to the second element is further displayed A higher matching degree between the to-be-recommended device and the second element indicates a higher recommendation priority of the device identifier of the to-be-recommended device in the second recommendation list. A specific implementation of determining the matching degree between each element and the to-be-recommended device may be as follows: The first terminal may pre-store scores of different elements in each dimension included in each influencing essential factor. The first terminal may obtain a score result of each element based on a corresponding scoring table and an element that needs to be distributed, and then determine a scoring model, for example, referred to as an element scoring model. The first terminal may determine the matching degree between each element and the to-be-recommended device based on the element scoring model and the device scoring model. A specific implementation is similar to a specific implementation of determining the matching degree between the service and the to-be-recommended device. Details are not described herein again. Similarly, if a service that the user wants to distribute includes a plurality of pieces of content, for example, includes two or three of an element on an interface, audio, and a video, a matching degree between the content and the to-be-recommended device may be alternatively determined, to perform device recommendation based on the matching degree.

S2903: The first terminal performs device recommendation based on the matching degree between each to-be-recommended device and the to-be-distributed service, where a higher matching degree indicates a higher recommendation priority of the to-be-recommended device.

Based on the matching degree that is between each to-be-recommended device and the to-be-distributed service and that is determined in S2902, the first terminal may perform device recommendation based on the matching degree. For example, the first terminal displays the device identifier of each to-be-recommended device based on the matching degree between each to-be-recommended device and the to-be-distributed service. For example, the first terminal displays a recommendation list. The recommendation list includes the device identifier of each to-be-recommended device. In this embodiment, a recommendation priority of a to-be-recommended device with a higher matching degree with the to-be-distributed service is higher. For example, a device identifier of a to-be-recommended device with a higher matching degree with the to-be-distributed service is ranked higher in the recommendation list For another example, a device identifier of a to-be-recommended device with a higher matching degree with the to-be-distributed service is highlighted in a darker color in the recommendation list.

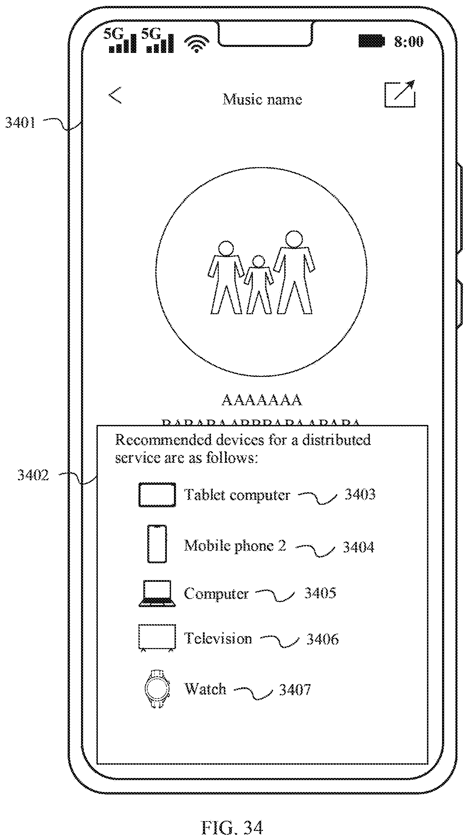

For example, with reference to the example shown in FIG. 33(a) to FIG. 33(f) and the corresponding descriptions, an example in which the to-be-distributed service is the music, for example, the user listens to the music by using a music application on the first terminal, the first terminal displays the music details interface shown in FIG. 7, the first terminal is a mobile phone (for example, a mobile phone 1), and to-be-recommended devices obtained by the mobile phone 1 include a computer, a television, a watch, a mobile phone 2, and a tablet computer is still used. As shown in FIG. 34, the mobile phone 1 may display a recommendation list 3402 on a music details interface 3401. In the recommendation list 3402, recommendation priorities in descending order are a device identifier 3403 of the tablet computer, a device identifier 3404 of the mobile phone (for example, the mobile phone 2), a device identifier 3405 of the computer, a device identifier 3406 of the television, and a device identifier 3407 of the watch. For example, the recommendation priority may be a ranking of the device identifier of the to-be-recommended device in the recommendation list. For example, a higher ranking in the recommendation list indicates a higher recommendation priority (as shown in FIG. 34). To be specific, a higher matching degree indicates a higher ranking. The recommendation priority may be alternatively a background color of the device identifier of the to-be-recommended device in the recommendation list. For example, a deeper background color indicates a higher recommendation priority. To be specific, a higher matching degree indicates a deeper background color. In an example, the device identifier may include an icon and/or a name of the device. In FIG. 34, an example in which the device identifier includes the icon and the name of the device is used for illustration.

The foregoing is described by using an example in which device recommendation is performed based on the matching degree between the to-be-recommended device and the to-be-distributed service. In some other embodiments, both the matching degree between the to-be-recommended device and the to-be-distributed service and whether the to-be-recommended device has been successfully connected to the first terminal may be alternatively considered during device recommendation. For example, when the recommendation list is displayed, the device identifiers of the to-be-recommended devices are ranked based on the matching degrees. In addition, for a to-be-recommended device recently connected to the first terminal, a visual reminder, for example, highlighting or ranking higher, may be provided.

It should be noted that, as described in the foregoing embodiment, in an implementation in which the first terminal first performs, based on the specific parameter that is of the single dimension and that is reported by the to-be-recommended device, primary selection on the to-be-recommended device obtained in S2901, and determines the matching degree between the to-be-recommended device that succeeds in primary selection and the to-be-distributed service only for the to-be-recommended device that succeeds in primary selection, when displaying the recommendation list, the first terminal may display no device identifier of the to-be-recommended device that fails in primary selection. Alternatively, a device identifier of the to-be-recommended device that fails in primary selection may be displayed at the end, or a background color of the to-be-recommended device that fails in primary selection may be set to the lightest. This is not specifically limited herein in this embodiment. In addition, if the first terminal uses the plurality of services as the to-be-distributed services in S2902, the first terminal may perform the foregoing matching process on each to-be-distributed service. In this scenario, in S2903, the first terminal may display a recommendation list of each to-be-distributed service on a screen, and mark the to-be-distributed service corresponding to each recommendation list for the user to view.

S2904: The first terminal receives a selection operation for the device identifier in the recommendation list

S2905: In response to the selection operation in S2904, the first terminal distributes the to-be-distributed service to a device corresponding to the device identifier.

After the first terminal displays the recommendation list, the user may team, based on the recommendation list, a current service or a device to which the to-be-distributed service may be distributed, or may learn a recommendation priority of each device based on the device identifier ranked in the recommendation list. The user may select, from the recommendation list based on a requirement of the user and the recommendation priority, a device to which the service needs to be distributed. For example, the user may perform a selection operation, for example, a tap operation, on a device identifier of a device that the user wants to select from the recommendation list. The first terminal may receive the corresponding selection operation. After receiving the selection operation for the device identifier in the recommendation list, in response to the selection operation, the first terminal may distribute the to-be-distributed service to the device corresponding to the device identifier selected by the user

As described in the foregoing embodiment, the content of the service may include one or more of content such as the interface, the audio, and the video. When the content of the service includes the interface, the first terminal may obtain data of the interface, and send the data of the interface to the device corresponding to the device identifier selected by the user. The device may display the corresponding interface on a display of the device based on the received data, that is, display, on the device corresponding to the device identifier selected by the user, the interface on the first terminal.

In some embodiments, a DMP may be used to implement display (or projection and display), on the device corresponding to the device identifier selected by the user, of the interface on the first terminal. In some other embodiments, wireless projection (Miracast) may be alternatively used to implement projection and display, to and on the device corresponding to the device identifier selected by the user, of the interface on the first terminal Alternatively, the first terminal may obtain an instruction stream after performing instruction extraction on the interface on the first terminal, obtain layer information of the interface, and the like, and then send the instruction stream, the layer information, and the like to the device corresponding to the device identifier selected by the user. The instruction stream, the layer information, and the like are used by the device to restore the interface on the first terminal, to implement projection and display, to and on the device, of the interface on the first terminal.

When the content of the service includes the audio, the first terminal may obtain data of the audio, and send the data of the audio to the device corresponding to the device identifier selected by the user. The device may play, based on the received data, the corresponding audio by using the device.

When the content of the service includes the video, the first terminal may obtain data of the video, and send the data of the video to the device corresponding to the device identifier selected by the user. The device may play, based on the received data, the corresponding video by using the device. A process of obtaining the data of the video is similar to a manner of obtaining the screen recording data in the foregoing descriptions of displaying, on the another device, the interface on the first terminal. Details are not described herein again.

When the content of the service includes one or some elements on the interface, the first terminal may obtain identifiers of these elements and data (for example, an instruction stream) of the interface, and send the identifiers of the elements and the instruction stream of the interface to the device corresponding to the device identifier selected by the user. The device may display the corresponding element on a display of the device based on the received identifier of the element and instruction stream of the interface. For example, the device may extract, from the instruction stream of the interface based on the identifier of the element, a canvas (canvas) instruction corresponding to the element, to display the element on the display of the device based on the canvas instruction.

In addition, as described in S2901, the to-be-recommended device obtained by the first terminal may be a device that is connected to the first terminal, or may be a device that is not connected to the first terminal but is within the connectable range of the first terminal. When the device corresponding to the device identifier selected by the user is a device that is connected to the first terminal, the first terminal may directly distribute the service to the device. When the device corresponding to the device identifier selected by the user is not a device that is connected to the first terminal, but a device that is not connected to the first terminal but is within the connectable range of the first terminal, before sending the service to the device, the first terminal further needs to establish a connection to the device.

In some embodiments, the first terminal may establish the connection to the device in a wired manner, for example, establish a wired connection to the device through a data line.

In some other embodiments, the first terminal may establish the connection to the device in a wireless manner. There are two requirements for establishing a connection between devices in a wireless manner. One requirement is that the devices know connection information of each other, and the other requirement is that each device has a transmission capability. In other words, when the first terminal and the device have a transmission capability respectively and know connection information of each other, the first terminal may establish the connection to the device in the wireless manner. The connection information may be an identifier of the device, for example, an Internet Protocol (Internet Protocol, IP) address, a port number, or an account logged in on the device. The account logged in on the device may be an account provided by an operator for the user, for example, a HUAWEI account. The account logged in on the device may be an application account, for example, a WeChat^{™} account or a Youku^{™} account. The transmission capability that the device has may be a near-field communication capability, or may be a long-distance communication capability. In other words, a wireless communication protocol used to establish a connection between the devices, for example, the first terminal and another device, may be a near-field communication protocol, for example, a Wi-Fi protocol, a Bluetooth protocol, a ZigBee protocol, or an NFC protocol, or may be a cellular network protocol. The connection information required for the connection may be exchanged between the first terminal and the device in a process in which the first terminal discovers the device. In addition, a wireless communication protocol used by the first terminal to discover the device may be the same as or different from the wireless communication protocol used by the first terminal to establish the connection to the device. For example, the first terminal uses a Bluetooth protocol to discover a device 1, and may also use the Bluetooth protocol to establish a connection to the device 1, or may use another wireless communication protocol, for example, a Wi-Fi protocol, to establish a connection to the device 1. This is not specifically limited herein in this embodiment

With reference to a specific scenario, the following describes the device recommendation method provided in this embodiment by using an example.

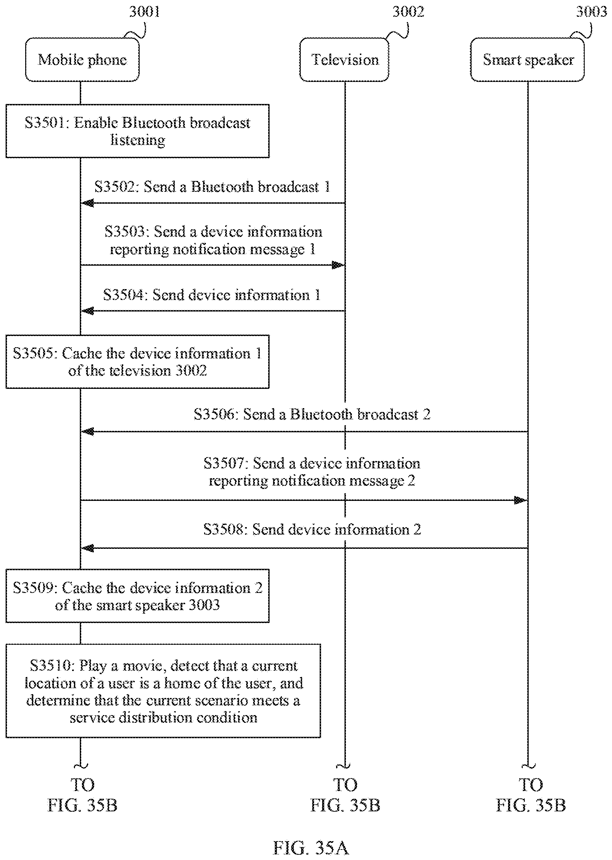

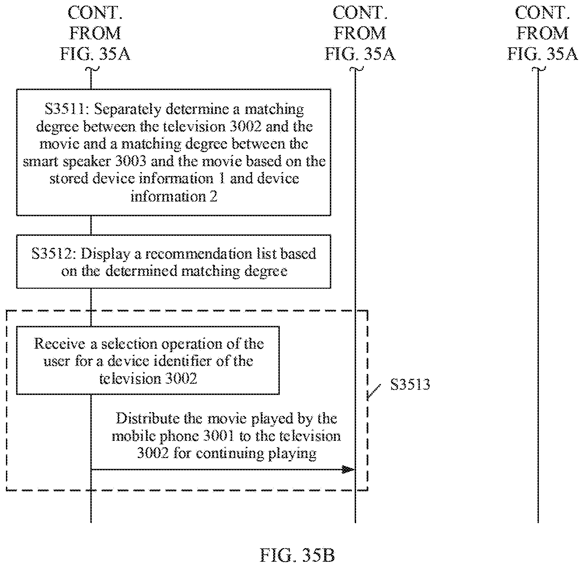

For example, with reference to the scenario shown in FIG. 30, the first terminal is the mobile phone 3001, and the home of the user is provided with the television 3002 and the smart speaker 3003. As shown in FIG. 35A and FIG. 35B, the user may enable a Bluetooth function of the mobile phone 3001. The mobile phone 3001 may enable Bluetooth broadcast listening (for example, S3501 in FIG. 35A).

When a Bluetooth function of the television 3002 is enabled, the television 3002 may send a Bluetooth broadcast, for example, referred to as a Bluetooth broadcast 1 (for example, S3502 in FIG. 35A). The mobile phone 3001 may receive the Bluetooth broadcast 1, to determine that the television 3002 is nearby, or determine that the television 3002 is in a connectable range. The mobile phone 3001 may send a device information reporting notification message, for example, referred to as a notification message 1, to the television 3002 (for example, S3503 in FIG. 35A). After receiving the notification message 1, the television 3002 may send device information, for example, referred to as device information 1, of the television 3002 to the mobile phone 3001 (for example, S3504 in FIG. 35A). The device information 1 may include a device type of the television 3002. The device information 1 may further include connection information of the television 3002, for example, an IP address of the television 3002. After receiving the device information 1, the mobile phone 3001 may cache the device information 1 of the television 3002 (for example, S3505 in FIG. 35A).

Similarly, when a Bluetooth function of the smart speaker 3003 is enabled, the smart speaker 3003 may send a Bluetooth broadcast, for example, referred to as a Bluetooth broadcast 2 (for example, S3506 in FIG. 35A). The mobile phone 3001 may receive the Bluetooth broadcast 2, to determine that the smart speaker 3003 is nearby, or determine that the smart speaker 3003 is in a connectable range. The mobile phone 3001 may send a device information reporting notification message, for example, referred to as a notification message 2, to the smart speaker 3003 (for example, S3507 in FIG. 35A). After receiving the notification message 2, the smart speaker 3003 may send device information, for example, referred to as device information 2, of the smart speaker 3003 to the mobile phone 3001 (for example, S3508 in FIG. 35A). The device information 2 may include a device type of the smart speaker 3003. The device information 2 may further include connection information of the smart speaker 3003, for example, an IP address of the smart speaker 3003. After receiving the device information 2, the mobile phone 3001 may cache the device information 2 of the smart speaker 3003 (for example, S3509 in FIG. 35A).

The user uses the mobile phone 3001 to play a movie (where the movie is a to-be-distributed service). When detecting a drag operation of the user for a video component used to present the movie, and determining that a drag intent of the user is cross-device drag, the mobile phone 3001 may determine that the current scenario meets a service distribution condition (for example, S3510 in FIG. 35A). The mobile phone 3001 may separately determine a matching degree between the television 3002 and the movie service and a matching degree between the smart speaker 3003 and the movie service based on the stored device information 1 and device information 2 (for example, S3511 in FIG. 35B). For example, the mobile phone 3001 determines scores of the television in the six dimensions: the interaction complexity, the quantity of services, the task duration, the environmental privacy, the immersion degree, and the screen size, based on the device type included in the device information 1, to obtain a score result 1. The mobile phone 3001 determines scores of the speaker in the six dimensions: the interaction complexity, the quantity of services, the task duration, the environmental privacy, the immersion degree, and the screen size, based on the device type included in the device information 2, to obtain a score result 2. The mobile phone 3001 determines scores of the movie service in the six dimensions: the interaction complexity, the quantity of services, the task duration, the environmental privacy, the immersion degree, and the screen size, to obtain a score result 3. The mobile phone 3001 constructs a device scoring model of the television 3002 based on the score result 1, constructs a device scoring model of the smart speaker 3003 based on the score result 2, and constructs a service scoring model of the movie service based on the score result 3. The mobile phone 3001 determines a matching degree 1 between the television 3002 and the movie service based on the device scoring model of the television 3002 and the service scoring model of the movie service, and determines a matching degree 2 between the smart speaker 3003 and the movie service based on the device scoring model of the smart speaker 3003 and the service scoring model of the movie service. For example, the matching degree 1 is greater than the matching degree 2.

The mobile phone 3001 displays a recommendation list based on the determined matching degree (for example, S3512 in FIG. 35B).

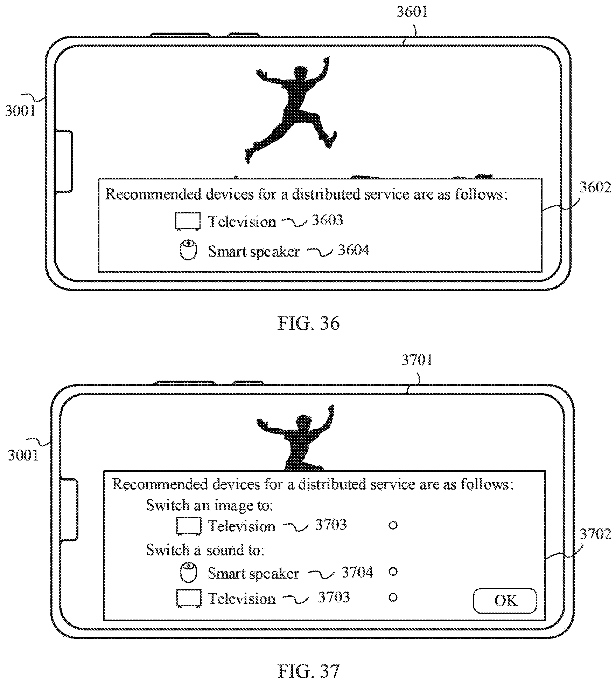

In an example, as shown in FIG. 36, when playing the movie, the mobile phone 3001 displays a playing interface 3601, and the mobile phone 3001 may display a recommendation list 3602 on the playing interface 3601. In the recommendation list 3602, recommendation priorities in descending order are a device identifier 3603 of the television 3002 and a device identifier 3604 of the smart speaker 3003. If the mobile phone 3001 receives a selection operation of the user for the device identifier 3603 of the television 3002, the movie played by the mobile phone 3001 may be distributed to the television 3002 for continuing playing (for example, S3513 in FIG. 35B).

In still another example, the movie played by the mobile phone 3001 includes audio and an interface (or an image). The mobile phone 3001 may further separately determine a matching degree between the audio and the television 3002 and a matching degree between the audio and the smart speaker 3003, and determine a matching degree between the interface and the television 3002 and a matching degree between the interface and the smart speaker 3003. For the audio, for example, the matching degree of the smart speaker 3003 is greater than the matching degree of the television 3002. For the interface, it may be determined, through primary selection, that the smart speaker 3003 has no display function, and it may be considered that the matching degree of the television 3002 is highest As shown in FIG. 37, the mobile phone 3001 may display a recommendation list 3702 on a playing interface 3701. In the recommendation list 3702, recommendation priorities for the audio in descending order are a device identifier 3704 of the smart speaker 3003 and a device identifier 3703 of the television 3002, and a recommendation for the interface is the device identifier 3703 of the television 3002. If the mobile phone 3001 receives a selection operation of the user for the device identifier 3703 of the television 3002 in the recommendation for the interface, the interface of the movie played by the mobile phone 3001 may be distributed to the television 3002 for continuing playing. If the mobile phone 3001 receives a selection operation of the user for the device identifier 3704 of the smart speaker 3003 in a recommendation for the audio, the audio of the movie played by the mobile phone 3001 may be distributed to the smart speaker 3003 for continuing playing.

It should be noted that, for a specific process in which the mobile phone distributes the played movie, in other words, drags, to a target device, the video component used to carry the movie, refer to corresponding descriptions of S1703 to S1708 in the embodiment shown in FIG. 17. Details are not described herein again.

For another example, an example in which the first terminal is a mobile phone 1 is used. A vehicle of the user is equipped with a head unit, a HUD, and the like. In a process in which the user drives the vehicle, the mobile phone 1 is used for navigation. The mobile phone 1 determines that the user is currently driving the vehicle, that is, determines that the current scenario meets a service distribution condition. The mobile phone 1 may obtain a to-be-recommended device in a connectable range. For example, the to-be-recommended device obtained by the mobile phone 1 includes a mobile phone 2, the head unit, and the HUD. The mobile phone 1 may separately determine a matching degree between the mobile phone 2 and navigation, a matching degree between the head unit and navigation, and a matching degree between the HUD and navigation. For example, the mobile phone 1 determines that the matching degrees with navigation in descending order are the head unit, the mobile phone 2, and the HUD. In this case, the mobile phone 1 may display a recommendation list. In the recommendation list, a recommendation priority of the head unit is higher than a recommendation priority of the mobile phone 2, and a recommendation priority of the mobile phone 2 is higher than a recommendation priority of the HUD. Alternatively, the mobile phone 1 may perform device recommendation based on a matching degree between content in the navigation or each element on a navigation interface and the device.

For another example, an example in which the first terminal is a mobile phone is used. When the user uses the mobile phone to play a video or audio, or browse an interface, the mobile phone determines that a current location is at the home of the user. The mobile phone 1 may obtain a to-be-recommended device in a connectable range, and perform device recommendation by determining a matching degree between the to-be-recommended device and the service.

In an example, according to the foregoing method, as shown in Table 7, this embodiment provides an instance of a recommendation order for different services and different application types.

**Table 7**

| Presentation form of service content | Application classification | Typical application | Application feature | Instruction (content needing to be distributed) | Weight order | Recommendation order |
|---|---|---|---|---|---|---|
| UI | System tool | Calendar and notepad | The user primarily performs an interaction operation when using a service | UI interface | Screen size, device mobility, and environmental privacy | Television, computer, tablet computer, head unit, AR/VR, watch, and speaker |
| | Drawing tool | procreate^{™} | | | | |
| | Photographing | Meitu^{™} and snapseed^{™} | | UI interaction | Interaction complexity, device mobility, and environmental privacy | Computer, tablet computer, head unit, AR/VR, watch, speaker, and television |
| | Catering service | | | | | |
| UI+audio | Music audio | HUAWEI Music, QQ Music^{™}, and Kugou Music^{™} | The user primarily performs reading and secondarily performs hearing when using a service | UI interface | Interaction complexity, device mobility, and screen size | AR/VR, tablet computer, computer, watch, head unit, television, and speaker |
| | Minor literature and art | MONO^{™} and Douban^{™} | | UI interaction | Device mobility, interaction complexity, and environmental privacy | AR/VR, watch, tablet computer, head unit, speaker, computer, and television |
| | Electronic reading | | | Audio | Audio quality, device mobility, and interaction complexity | AR/VR, speaker, head unit, tablet computer, computer, and television |
| | Broadcast receiving | | | | | |
| UI+video | Express delivery, logistics, stocks, and real estate | | The user primarily aims to obtain information when using a service | UI interface | Screen size, device mobility, and environmental privacy | Television, computer, tablet computer, head unit, AR/VR, watch, and speaker (with a screen) |
| | | | | UI interaction | Device mobility, interaction complexity, and environmental privacy | AR/VR, watch, tablet computer, head unit, speaker, computer, and television |
| | | | | Video | Video quality, device mobility, and interaction complexity | AR/VR, television, computer, head unit, tablet computer, and speaker |
| UI+audio+video | Mobile video | HUAWEI Video and iQIYI^{™} | When using a service, the user primarily aims to obtain information, primarily watches and listens to a service, and secondarily perform an interaction operation | UI interface | Device mobility, interaction complexity, and screen size | AR/VR, television, tablet computer, computer, watch, head unit, speaker (with a screen), HUD (only some navigation elements), and dashboard (only some navigation elements) |
| | News | | | UI interaction | Device mobility, interaction complexity, and environmental privacy | AR/VR, watch, tablet computer, head unit, speaker, computer, and television |
| | Application distribution | | | Audio | Audio quality, device mobility, and interaction complexity | AR/VR, speaker, head unit, tablet computer, computer, and television |
| | Learning and education | Netease Open Course^{™}, Xueersi Online School^{™} | | | | |
| | Fitness and health | HUAWEI Health application | | Video | Screen size, immersion degree, and video quality | AR/VR, television, computer, head unit, tablet computer, and speaker (with a screen) |
| | Mobility service | Baidu Map^{™} and AutoNavi Map^{™} | | | | |
| | Online shopping | | When the user uses a service, interaction is as important as the service | UI interface | Screen size, device mobility, and environmental privacy | AR/VR, television, computer, tablet computer, head unit, and watch |
| | Travel service | | | | | |
| | Game | | | UI interaction | Interaction complexity, device mobility, and environmental privacy | AR/VR, computer, tablet computer, watch, and head unit |
| | | | | Audio | Audio quality, device mobility, and interaction complexity | AR/VR, speaker, tablet computer, computer, television, and head unit |
| | | | | Video | Screen size, immersion degree, and video quality | AR/VR, television, computer, head unit, tablet computer, and speaker |

It may be seen that, by using the method provided in this embodiment, for different applications, a recommendation order suitable for the different services (or content of the services) may be provided for the different services, so that the user can more intuitively see or learn of a device to which a current service is suitable to be distributed. In addition, Table 7 provides the weight order of dimensions corresponding to the different applications and the different service content. A weight may be set for a corresponding dimension based on the weight order, so that the weight is used when the matching degree between the service and the device is determined. Before the service is distributed to the another device, the device needs to meet a distribution condition. For example, a distribution condition for AR/VR, a headset, and the watch is being in a worn state, a distribution condition for the tablet computer and the head unit is being screen-on, a distribution condition for the television and the computer is running (or being not hibernated or turned off), and a distribution condition for the speaker is being powered on (or turned on). In some embodiments, the device recommendation order corresponding to the different applications and the different services (or the content of the services) in Table 7 may be pre-stored in the first terminal. In this way, when there is a requirement to distribute a service, device recommendation may be directly performed based on a stored correspondence and a discovered device.

It may be understood that, by using the foregoing technical solution, after the terminal determines that the service distribution condition is met, the terminal may score the device and the service based on the influencing essential factors that affect the matching degree between the device and the service, such as the hardware configuration of the device, the service type, the human factor, and the environmental factor, to determine the matching degree between the device and the service based on the score results. Finally, device recommendation is performed based on the determined matching degree. This improves accuracy of the device recommendation order, and improves user experience. In addition, the terminal may further score the element on the interface (or the content of the service) based on the foregoing essential factors, to determine a matching degree between the device and the element on the interface (or the content of the service) based on the score result, and perform device recommendation based on the score result. This can further improve accuracy of the device recommendation order.

As described in the foregoing embodiment, in a cross-device drag scenario, the source end device may determine the target device based on the drag direction and the direction of the another device relative to the source end device. For example, the device in the drag direction is determined as the target device, or the device that is selected by the user and that is in the drag direction is determined as the target device. In an example, locations and postures (for example, relative displacement and rotation values in a three-dimensional spatial coordinate system) of the plurality of devices may be measured, and a relative direction (or a relative location) between the plurality of devices may be determined based on a measurement result. For example, whether another device is located in the drag direction is determined, to determine the target device for cross-device drag. Currently, in some other multi-screen interaction application scenarios, for example, a splicing screen display scenario and a dual-screen or multi-screen display scenario, locations and postures of the plurality of devices also need to be measured, so that the plurality of devices display a corresponding user interfaces based on a measurement result.

However, currently, a technology for measuring the locations of the plurality of devices based on machine vision has a limitation. For example, a group of coplanar points may be photographed by using cameras of the plurality of devices, and then the locations of the plurality of devices are calculated based on a photographing result. A plane prop is required for measurement based on the coplanar points, and a measurement error is high. In addition, the cameras need to be calibrated in advance, and this is complex. A same or associated reference object may be alternatively photographed, but there is a requirement on a location or the like of the reference object, collaborative control between the plurality of cameras lacks, and consistency of taken photos is poor. As a result, this causes an error in measurement of the location. Therefore, how to measure the locations of the plurality of devices with low costs and high precision without depending on a special measurement environment is a problem that is being studied by a person skilled in the art. Another embodiment of this application further provides a multi-device location measurement method, to improve consistency of taken photos, so as to improve precision of a measured location. In addition, the method does not depend on a special measurement environment, and has low costs.

With reference to FIG. 38 to FIG. 44B, the following describes a multi-device location measurement process according to an embodiment of this application.

First, refer to FIG. 38. FIG. 38 is a schematic architectural diagram of a multi-device location measurement system according to an embodiment of this application.

As shown in FIG. 38, the multi-device location measurement system may include a plurality of electronic devices. In FIG. 38, an electronic device 381, an electronic device 382, an electronic device 383, an electronic device 384, an electronic device 385, and an electronic device 386 are used as an example for description of the plurality of electronic devices. In a specific implementation, a quantity of the plurality of electronic devices may be larger or smaller.

As shown in FIG. 38, the plurality of electronic devices may be connected and communicate through a network. The network may include a communication line, for example, a wired line or a wireless line, and a gateway device, for example, a router or an access point (access point, AP). In other words, the plurality of electronic devices may be connected to and communicate with each other in a wired (for example, a USB, a twisted pair, a coaxial cable, or an optical fiber) or wireless (for example, Wi-Fi, Bluetooth, or a mobile device network) manner. Each of the plurality of electronic devices may be integrated with one or more cameras and a display. The cameras of the plurality of electronic devices may constitute a cross-device multi-camera array based on a network connection, to collaboratively adjust photographing parameters and perform synchronous photographing.

In some multi-screen interaction scenarios, for example, a cross-device drag scenario, a splicing screen display scenario, and a dual-screen or multi-screen display scenario, any one of the plurality of electronic devices may be a primary electronic device, and another electronic device is a secondary electronic device. The primary electronic device and a plurality of secondary electronic devices may communicate with each other to perform time synchronization and collaboratively set a photographing parameter. Then, the primary electronic device may control the camera of the primary electronic device and cameras of the plurality of secondary electronic devices to perform synchronous photographing based on the collaboratively set photographing parameter. The primary electronic device may receive photographing results of the plurality of secondary electronic devices, and obtain relative displacement and rotation values of the plurality of electronic devices in a three-dimensional spatial coordinate system with reference to a photographing result of the primary electronic device. The primary electronic device may perform a corresponding operation based on the obtained relative displacement and rotation values of the plurality of electronic devices in the three-dimensional spatial coordinate system. For example, in the cross-device drag scenario, the primary electronic device may determine a target device for cross-device drag based on the obtained relative displacement and rotation values of the plurality of electronic devices in the three-dimensional spatial coordinate system. For another example, in the splicing screen display scenario or the dual-screen or multi-screen display scenario, the primary electronic device delivers a measurement result to the plurality of secondary electronic devices, and the primary electronic device and the secondary electronic device display corresponding user interfaces based on measurement results of locations and postures of the primary electronic device and the secondary electronic device.

In an example, the primary electronic device may be the first terminal in the foregoing embodiment, and the secondary electronic device may be the second terminal in the foregoing embodiment, or the secondary electronic device may be the candidate terminal in embodiments of this application. For ease of description, in the following embodiment, the primary electronic device and the secondary electronic device are used as an example for description.

Hardware structures of the electronic device 381 to the electronic device 386 may be the same as the hardware structure shown in FIG. 2. Details are not described herein again. With reference to the hardware structure shown in FIG. 2, in this embodiment of this application, the electronic device 381 is connected to at least one other electronic device (for example, the electronic device 382, the electronic device 383, the electronic device 384, the electronic device 385, or the electronic device 386 in FIG. 38) through the network, and may perform time synchronization, collaboratively set the photographing parameter, and perform synchronous photographing. Any one electronic device is the primary electronic device, and another electronic device is the secondary electronic device. The camera of the electronic device 381 may be configured to perform metering and automatic focusing, to obtain a corresponding first photographing parameter. When the electronic device 381 is the primary electronic device, the obtained first photographing parameter may be a photographing parameter used when the electronic device 381 performs synchronous photographing, and the obtained first photographing parameter may be used to determine, from the electronic device with reference to the first photographing parameter obtained by the electronic device through metering, a second photographing parameter used when the electronic device performs synchronous photographing. When the electronic device 381 is the secondary electronic device, a processor may determine, with reference to a first photographing parameter of the primary electronic device and the obtained first photographing parameter, a second photographing parameter used when the electronic device 381 performs synchronous photographing. The obtained first photographing parameter may also be used by another secondary electronic device to determine a second photographing parameter used when the another secondary electronic device performs synchronous photographing.

A camera may also be configured to perform synchronous photographing, to obtain a taken photo that is used to determine the locations and the postures of the primary electronic device and the secondary electronic device. The camera may send the taken photo to a processor for processing through a MIPI interface. When the electronic device 381 is the primary electronic device, the processor may obtain relative locations and postures of the primary electronic device and the secondary electronic device with reference to a taken photo of the electronic device 381 and a taken photo sent by the secondary electronic device, and then the electronic device 381 may send a measurement result of the secondary electronic device to the secondary electronic device. When the electronic device 381 is the secondary electronic device, the electronic device 381 may send, to the primary electronic device, a photo taken by the camera, so that the primary electronic device determines relative locations and postures of the primary electronic device and the secondary electronic device based on photographing results of the primary electronic device and the secondary electronic device, and then the electronic device 381 receives a measurement result of the electronic device 381 sent by the primary electronic device. Finally, for example, in the splicing screen display scenario or the dual-screen or multi-screen display scenario, the processor determines, based on the relative location and the posture of the electronic device 381, a user interface displayed by the electronic device 381, and controls the display to display the user interface. For example, in the cross-device drag scenario, a processor of the primary electronic device may determine the target device for cross-device drag based on the obtained relative locations and postures of the primary electronic device and the secondary electronic device.

The following describes an application scenario in an embodiment of this application and a schematic diagram of human-machine interaction in the scenario.

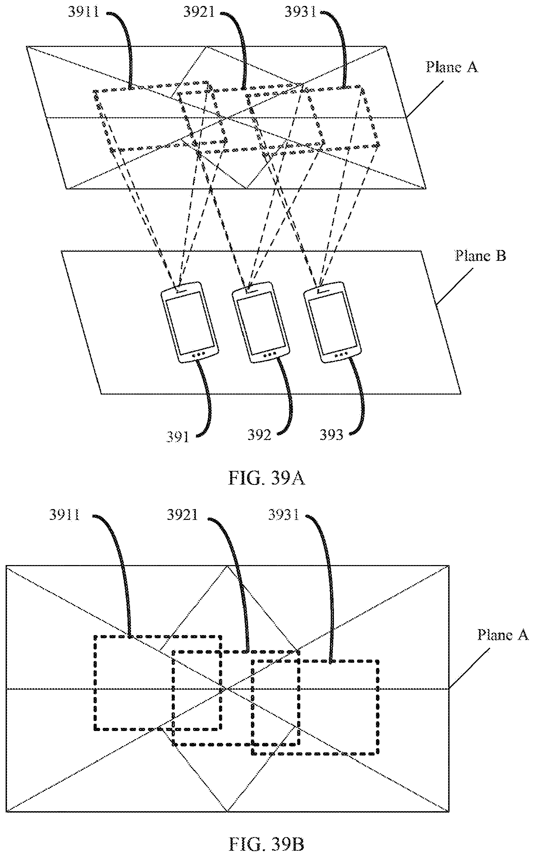

The following describes a splicing screen display scenario in which a first electronic device 391, a second electronic device 392, and a third electronic device 393 are placed in parallel on a plane B. A plane A is above the plane B, and is parallel to the plane B. The plane A is a photographing scene of the foregoing three electronic devices. The foregoing three electronic devices may be connected to each other by using Wi-Fi or Bluetooth. An example in which the first electronic device 391 is a primary electronic device, and the second electronic device 392 and the third electronic device 393 are secondary electronic devices is used for description. A user may control the foregoing three electronic devices to display a same picture in combination. For details, refer to descriptions of FIG. 39A to FIG. 39D. It should be noted that the plane A is merely an example. In a specific implementation, the photographing scene of the foregoing three electronic devices may be alternatively an irregular object. This is not limited in this embodiment of this application.

Specifically, the first electronic device 391 detects, by using a touch sensor, a touch operation performed by the user on a display, and reports the touch operation to a processor in the first electronic device 391. In response to the foregoing touch operation, on one hand, the processor controls a wireless communication module of the first electronic device 391 to send a current timestamp of the first electronic device 391 to the second electronic device 392 and the third electronic device 393.

The second electronic device 392 receives the current timestamp of the first electronic device 391 by using a wireless communication module, and adjusts time of the second electronic device 392. For example, the second electronic device 392 may measure an average transmission delay *T_{d}* of transmitting data to the first electronic device 391, and a current timestamp of the first electronic device 391 may be T. In this case, the second electronic device 392 may set the time of the second electronic device 392 to T+*T_{d}*, to complete time synchronization. A process in which the third electronic device 393 performs time synchronization is similar to that of the second electronic device 392. Details are not described herein again.

In response to the foregoing touch operation, on another hand, the processor of the first electronic device 391 controls a camera of the first electronic device 391 to be enabled to perform metering and automatic focusing, to obtain a first photographing parameter of the first electronic device 391. Then, the first electronic device 391 sends the first photographing parameter of the first electronic device 391 and a synchronous photographing time point to the second electronic device 392 and the third electronic device 393 by using the wireless communication module. The photographing parameter includes but is not limited to photographic sensitivity, a shutter, a focal length, exposure compensation, white balance, resolution, and the like.

The second electronic device 392 receives the first photographing parameter of the first electronic device 391 and the synchronous photographing time point by using the wireless communication module. A processor of the second electronic device 392 controls a camera of the second electronic device 392 to be enabled to perform metering and automatic focusing, to obtain a first photographing parameter of the second electronic device 392. Then, the processor of the second electronic device 392 uses the first photographing parameter of the first electronic device 391 and the first photographing parameter of the second electronic device 392 as an input based on a preset algorithm, to obtain an output second photographing parameter of the second electronic device 392. The second photographing parameter is used by the second electronic device 392 to perform synchronous photographing.

As shown in FIG. 39A, the processor of the first electronic device 391 controls the camera of the first electronic device 391 to perform synchronous photographing according to the foregoing synchronous photographing time point by using the first photographing parameter of the first electronic device 391. A photo obtained through photographing may be shown in 3911 in FIG. 39A and FIG. 39B. The processor of the second electronic device 392 controls the camera of the second electronic device 392 to perform synchronous photographing according to the foregoing synchronous photographing time point by using the second photographing parameter of the second electronic device 392. A photo obtained through photographing may be shown in 3921 in FIG. 39A and FIG. 39B. A process in which the third electronic device 393 obtains a second photographing parameter that is of the third electronic device 393 and that is used for synchronous photographing and performs synchronous photographing is similar to that of the second electronic device 392. Details are not described herein again. A photo obtained by the third electronic device 393 through synchronous photographing may be shown in 3931 in FIG. 39A and FIG. 39B. Then, the second electronic device 392 and the third electronic device 393 send, to the first electronic device 391 by using wireless communication modules, the photos obtained through synchronous photographing.

The first electronic device 391 receives, by using the wireless communication module, results of synchronous photographing of the second electronic device 392 and the third electronic device 393, uses a preset three-dimensional reconstruction algorithm, for example, a structure from motion (structure-from-motion, SFM) algorithm, a semi-direct monocular visual adometry (semi-direct monocular visual odometry, SVO) algorithm, or a semi-global block matching (semi-global block matching, SGM) algorithm, to process a plurality of photos that are at different angles and that are obtained by the first electronic device 391, the second electronic device 392, and the third electronic device 393 through synchronous photographing, to obtain relative displacement and rotation values of the first electronic device 391, the second electronic device 392, and the third electronic device 393, sends the relative displacement and the rotation value of the second electronic device 392 to the second electronic device 392, and sends the relative displacement and the rotation value of the third electronic device 393 to the third electronic device 393.

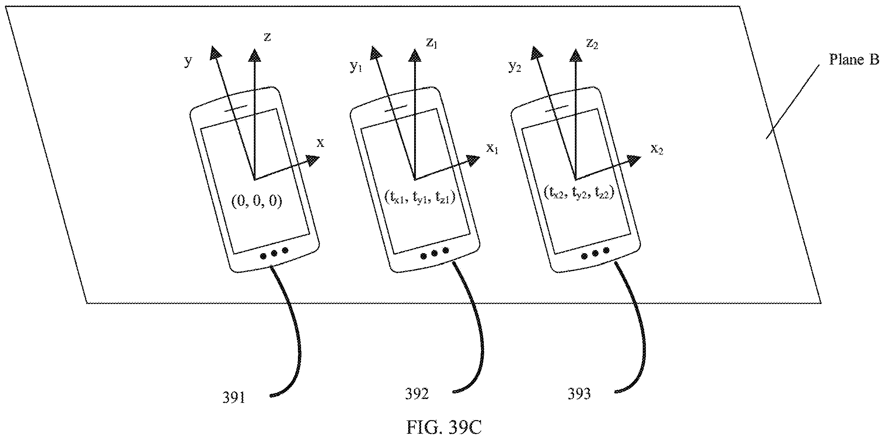

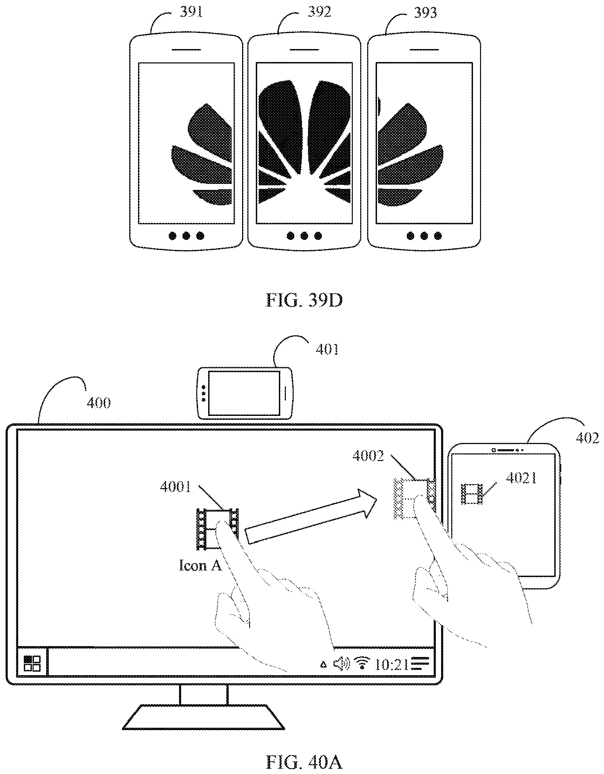

With reference to FIG. 39C and FIG. 39D, the following describes how to obtain the relative displacement and the rotation values of the secondary electronic devices (namely, the second electronic device 392 and the third electronic device 393) through calculation by using the three-dimensional reconstruction algorithm.

As shown in FIG. 39C, coordinates of the device center of the first electronic device 391 are an origin (0, 0, 0), and a screen plane of the first electronic device 391 is a two-dimensional coordinate plane: an xy plane. A normal direction of the screen plane is a z axis. Relative displacement of coordinates of the device center of the second electronic device 392 relative to the device center (0, 0, 0) of the first electronic device 391 may be represented as (*t*_{*x*1}, *t*_{*y*1}, *t*_{*z*1}), and a screen plane of the second electronic device 392 is a two-dimensional coordinate plane: an *x*₁*y*₁ plane. A normal direction of the screen plane is a z, axis. A rotation value of a three-dimensional coordinate system of the second electronic device 392 relative to a three-dimensional coordinate system of the first electronic device 391 may be represented as (*r*_{*x*1}, *r*_{*y*1}, *r*_{*z*1}). Similarly, the relative displacement of the third electronic device 393 may be represented as (*t*_{*x*2}, *t*_{*y*2}, *t*_{*z*2}), and the rotation value of the third electronic device 393 may be represented as (*r*_{*x*2}, *r*_{*y*2}, *r*_{*z*2}). In FIG. 39A to FIG. 39D, an example in which both the rotation value of the second electronic device 392 and the rotation value of the third electronic device 393 are (0, 0, 0) is used for description.

As shown in FIG. 39C, the relative displacement (*t*_{*x*2}, *t*_{*y*2}, *t*_{*z*2}) of the third electronic device 393 is greater than the relative displacement (*t*_{*x*1}, *t*_{*y*1}, *t*_{*z*1}) of the second electronic device 392, and the relative displacement of the second electronic device 392 and the third electronic device 393 are greater than the relative displacement (0, 0, 0) of the first electronic device 391. The rotation values of the first electronic device 391, the second electronic device 392, and the third electronic device 393 are the same and are all (0, 0, 0). The first electronic device 391, the second electronic device 392, and the third electronic device 393 may display corresponding pictures based on the relative displacement and the rotation values of the first electronic device 391, the second electronic device 392, and the third electronic device 393. Specifically, as shown in FIG. 39D, a picture is divided into three parts: a left part, a middle part, and a right part. It is agreed that the center of the left part of the picture is the origin (0, 0, 0), and a relative distance between the middle part and the left part is less than a relative distance between the right part and the left part. Because relative displacement of the first electronic device 391 relative to the origin (0, 0, 0) is the smallest, the first electronic device 391 displays the left part of the picture. Because relative displacement of the second electronic device 392 relative to the origin (0, 0, 0) is less than relative displacement of the third electronic device 393 relative to the origin (0, 0, 0), the second electronic device 392 displays the middle part of the picture, and the third electronic device 393 displays the right part of the picture.

In some embodiments, the first electronic device 391 may alternatively take a reference photo during metering, and send the reference photo to the secondary electronic device together when sending the first photographing parameter of the first electronic device 391 and the synchronous photographing time point The secondary electronic device may obtain a second photographing parameter of the secondary electronic device through adjustment based on the reference photo taken by the first electronic device 391 and the first photographing parameter of the first electronic device 391. For example, the second electronic device 392 may analyze a same part and a different part between the reference photo taken by the first electronic device 391 and a photo experimentally taken by the second electronic device 392. The same part is mainly based on the first photographing parameter of the first electronic device 391, and the different part is mainly based on the first photographing parameter of the second electronic device 392, to obtain a second photographing parameter that is most suitable for a current photographing environment This makes consistency of results of synchronous photographing better, thereby improving measurement precision of relative locations and postures of a plurality of electronic devices.

In some embodiments, the first electronic device 391 may send the synchronous photographing time point before sending the first photographing parameter of the first electronic device 391 or after sending the first photographing parameter of the first electronic device 391. This is not limited in this embodiment of this application.

In some embodiments, the first electronic device 391, the second electronic device 392, and the third electronic device 393 may be alternatively connected to a same time server, and may adjust time of the first electronic device 391, the second electronic device 392, and the third electronic device 393 during time synchronization based on time of the time server. This is not limited in this embodiment of this application.

In some embodiments, the secondary electronic device may alternatively determine, based on the first photographing parameter of the primary electronic device and first photographing parameters of preset quantity of other secondary electronic devices, a second photographing parameter used when the secondary electronic device performs synchronous photographing. For example, the second electronic device 392 may obtain a first photographing parameter of the third electronic device 393, and use the first photographing parameter of the first electronic device 391, the first photographing parameter of the second electronic device 392, and the first photographing parameter of the third electronic device 393 as an input based on a preset three-dimensional reconstruction algorithm, to obtain an output second photographing parameter of the second electronic device 392, and perform synchronous photographing by using the second photographing parameter of the second electronic device 392. The second photographing parameter not only uses a first photographing parameter of a same primary electronic device as a reference, but also uses a first photographing parameter of another secondary electronic device as a reference, to adjust a photographing parameter of the second photographing parameter. Although a calculation amount is large, consistency of taken photos is better. This improves measurement precision of relative locations and postures of a plurality of electronic devices. Similarly, the third electronic device 393 may also adjust a photographing parameter of the third electronic device 393 with reference to the first photographing parameter of the second electronic device 392. An adjustment process is similar to that of the second electronic device 392. Details are not described herein again.

In some embodiments, the secondary electronic device may process the photo that is obtained through synchronous photographing, extract a part that is more conducive to calculation and that is of the photo, and send the part to the primary electronic device, to reduce a data transmission amount and a calculation amount of the primary electronic device. For example, the secondary electronic device may perform feature point detection on the photo obtained through synchronous photographing, and send obtained feature point description information to the primary electronic device. The primary electronic device only needs to perform feature point detection on the photo obtained by the primary electronic device through synchronous photographing, then perform matching processing on feature point description information of the primary electronic device and the secondary electronic device, and finally, obtain relative locations and postures of the primary electronic device and the secondary electronic device.

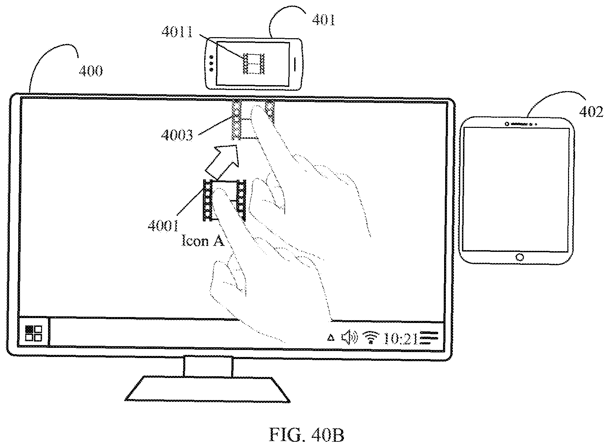

The following describes a cross-device drag scenario in which a fourth electronic device 400, a fifth electronic device 401, and a sixth electronic device 402 may be connected to each other by using Wi-Fi or Bluetooth. An example in which the fourth electronic device 400 is a primary electronic device, the fifth electronic device 401 and the sixth electronic device 403 are secondary electronic devices, and an object dragged by the user is an icon A is used for description. The icon A located at a location 4001 exists on a display of the fourth electronic device 400. The user may drag the icon A from the fourth electronic device 400 to the fifth electronic device 401 or the sixth electronic device 402. For details, refer to descriptions of FIG. 40A and FIG. 40B.

As shown in FIG. 40A, the fourth electronic device 400 detects, by using a touch sensor, a slide operation performed by the user on the icon A, and the slide operation is used to move the icon A from the location 4001 to a location 4002. It should be noted that the location 4002 exceeds a boundary of the display of the fourth electronic device 400. Therefore, the slide operation aims to drag the icon A to the sixth electronic device 402, instead of moving the icon A on a display interface of the fourth electronic device 400.

In response to the foregoing slide operation, a processor of the fourth electronic device 400 controls a camera of the fourth electronic device 400 to be enabled to perform metering, to obtain a first photographing parameter of the fourth electronic device 400 after metering. Then, the first photographing parameter of the fourth electronic device 400, a current timestamp of the fourth electronic device 400, and a synchronous photographing time point are sent to the fifth electronic device 401 and the sixth electronic device 403 by using a wireless communication module. The processor of the fourth electronic device 400 controls the camera of the fourth electronic device to perform synchronous photographing at the synchronous photographing time point by using the first photographing parameter of the fourth electronic device 400.

The fifth electronic device 401 receives the foregoing information by using a wireless communication module, and a processor of the fifth electronic device 401 adjusts time of the fifth electronic device 401 based on the current timestamp of the fourth electronic device 400, to complete time synchronization. The processor of the fifth electronic device 401 adjusts, based on a preset three-dimensional reconstruction algorithm and the first photographing parameter of the fourth electronic device 400, a first photographing parameter obtained by the fifth electronic device 401 through metering, to obtain a second photographing parameter used for synchronous photographing. Then, the processor of the fifth electronic device 401 controls a camera of the fifth electronic device 401 to perform synchronous photographing at the synchronous photographing time point by using the second photographing parameter obtained after adjustment A process in which the sixth electronic device 402 performs time synchronization, adjusts a photographing parameter, and performs synchronous photographing is similar to that of the fifth electronic device 401. Details are not described herein again. The fifth electronic device 401 and the sixth electronic device 402 send results of synchronous photographing to the fourth electronic device 400.

The fourth electronic device 400 receives the result of synchronous photographing sent by the secondary electronic device, and processes, based on the preset three-dimensional reconstruction algorithm, a plurality of photos that are at different angles and that are obtained by the primary electronic device and the secondary electronic device through synchronous photographing, to obtain relative displacement and rotation values of the primary electronic device and the secondary electronic device

As shown in FIG. 40A, the fourth electronic device 400 determines, based on the foregoing slide operation and the relative displacement and the rotation value of the secondary electronic device, that the slide operation is used to drag the icon A from the fourth electronic device 400 to the sixth electronic device 402 rather than the fifth electronic device 401. Therefore, by using the wireless communication module, the fourth electronic device 400 sends the relative displacement and the rotation value of the fifth electronic device 401 to the fifth electronic device 401, and sends a file corresponding to the icon A and the relative displacement and the rotation values of the fourth electronic device 400 and the sixth electronic device 402 to the sixth electronic device 402. The fifth electronic device 401 determines that no file corresponding to the icon A is received, and therefore does not need to display related content of the icon A. The sixth electronic device 402 determines that the file corresponding to the icon A is received, and then determines, based on the relative displacement and the rotation values of the fourth electronic device 400 and the sixth electronic device 402, that the sixth electronic device 402 needs to display the icon A located at a location 4021. Subsequently, specific content of the icon A may be viewed by using the sixth electronic device 402. The fourth electronic device 400 may alternatively not send the relative displacement and the rotation value of the fifth electronic device 401 to the fifth electronic device 401. The fourth electronic device 400 may also send the relative location and the rotation value of the fifth electronic device 401 to the sixth electronic device 402, to more conveniently determine the location 4021 at which the icon A is displayed.

As shown in FIG. 40B, the fourth electronic device 400 detects, by using a touch sensor, a slide operation performed by the user on the icon A, and the slide operation is used to move the icon A from a location 4001 to a location 4003. It should be noted that the location 4003 exceeds a boundary of a display of the fourth electronic device 400. Therefore, the slide operation aims to drag the icon A to the fifth electronic device 401, instead of moving the icon A on a display interface of the fourth electronic device 400.

For a process in which the fourth electronic device 400, the fifth electronic device 401, and the sixth electronic device 402 perform time synchronization, collaborative adjustment of a photographing parameter, and synchronous photographing, refer to the descriptions of FIG. 40A. Details are not described herein again. The fourth electronic device 400 determines, based on the foregoing slide operation and the relative location and the rotation value of the secondary electronic device, that the slide operation is used to drag the icon A from the fourth electronic device 400 to the fifth electronic device 401 rather than the sixth electronic device 402. Therefore, by using a wireless communication module, the fourth electronic device 400 sends a file corresponding to the icon A and the relative displacement and the rotation values of the fourth electronic device 400 and the fifth electronic device 401 to the fifth electronic device 401, and sends the relative displacement and the rotation value of the sixth electronic device 402 to the sixth electronic device 402. The sixth electronic device 402 determines that no file corresponding to the icon A is received, and therefore does not need to display related content of the icon A. The fifth electronic device 401 determines that the file corresponding to the icon A is received, and then determines, based on the relative displacement and the rotation values of the fourth electronic device 400 and the fifth electronic device 401, that the fifth electronic device 401 needs to display the icon A located at a location 4011. Subsequently, specific content of the icon A may be viewed by using the fifth electronic device 401. The fourth electronic device 400 may alternatively not send the relative displacement and the rotation value of the sixth electronic device 402 to the sixth electronic device 402. The fourth electronic device 400 may also send the relative location and the rotation value of the sixth electronic device 402 to the fifth electronic device 401, to more conveniently determine the location 4011 at which the icon A is displayed.

In some embodiments, there is further another secondary electronic device around the fifth electronic device 401, or there is further another secondary electronic device around the sixth electronic device 402. In the scenario shown in FIG. 40A, both the sixth electronic device 402 and the another secondary electronic device around the sixth electronic device 402 may receive the icon A sent by the fourth electronic device 400, and display the icon A or the specific content of the icon A in combination based on relative displacement and rotation values of the sixth electronic device 402 and the another secondary device around the sixth electronic device 402. Alternatively, the fourth electronic device 400 displays, on the display, device identifiers of the sixth electronic device 402 and the another secondary electronic device around the sixth electronic device 402. The user may select one or more secondary electronic devices from the sixth electronic device 402 and the another secondary electronic device around the sixth electronic device 402, and the fourth electronic device 400 sends the icon A to the secondary electronic device selected by the user. In the scenario shown in FIG. 40B, both the fifth electronic device 401 and the another secondary electronic device around the fifth electronic device 401 may receive the icon A sent by the fourth electronic device 400, and display the icon A or the specific content of the icon A in combination based on relative displacement and rotation values of the fifth electronic device 401 and the another secondary device around the fifth electronic device 401 Alternatively, the fourth electronic device 400 displays, on the display, device identifiers of the fifth electronic device 401 and the another secondary electronic device around the fifth electronic device 401. The user may select one or more secondary electronic devices from the fifth electronic device 401 and the another secondary electronic device around the fifth electronic device 401, and the fourth electronic device 400 sends the icon A to the secondary electronic device selected by the user.

This embodiment is not limited to the foregoing enumerated case. In a specific implementation, any one secondary electronic device (which is referred to as a target secondary electronic device) may alternatively receive a user operation used to transfer a target file. After the primary electronic device obtains the relative locations and the postures of the primary electronic device and all the secondary electronic devices based on the results of synchronous photographing performed by the primary electronic device and all the secondary electronic devices, the primary electronic device may send the relative locations and the postures of the primary electronic device and all the secondary electronic devices to the target secondary electronic device, so that the target secondary electronic device determines, based on the relative locations and the postures of the primary electronic device and all the secondary electronic devices, a target device to which the target file needs to be sent. This is not limited in this embodiment of this application.

This embodiment is not limited to the foregoing enumerated touch operation and slide operation In a specific implementation, a process of measuring the relative locations and the postures of the plurality of electronic devices may be alternatively triggered by using a user operation that is performed on a button of at least one of the plurality of electronic devices, a voice signal, a brain wave signal of the user, or another operation. This is not limited in this embodiment of this application.

This embodiment is not limited to the foregoing enumerated case. In a specific implementation, alternatively, after the user performs an operation of triggering the process of measuring the relative locations and the postures of the plurality of electronic devices, the plurality of electronic devices are connected and communicate in a wired or wireless manner, to complete the multi-device location measurement method.

In this embodiment of this application, if the plurality of electronic devices are connected in the wired or wireless manner, in the multi-screen interaction scenario, the plurality of electronic devices usually perform a related process together. However, if the user only needs a part of the plurality of electronic devices to perform multi-screen interaction, the user may autonomously select an electronic device. The following provides an example in which the user autonomously selects an electronic device for multi-screen interaction.

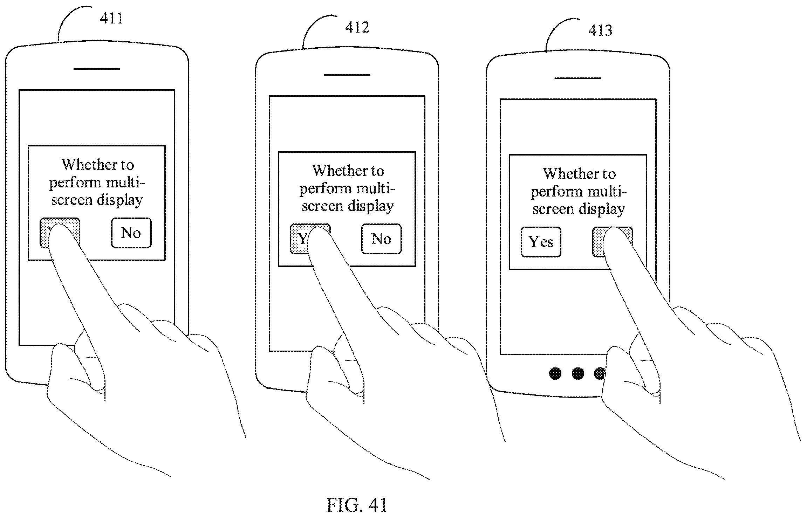

FIG. 41 is a schematic diagram of human-machine interaction. As shown in FIG. 41, a seventh electronic device 411, an eighth electronic device 412, and a ninth electronic device 413 are connected by using Wi-Fi or Bluetooth. The foregoing three electronic devices receive, by using microphones, a voice signal sent by the user, and the voice signal is a language of "multi-screen display". Processors of the foregoing three electronic devices control, in response to an instruction of the voice signal, displays to display "Whether to perform multi-screen display" prompt boxes. The prompt boxes further include "Yes" and "No" controls.

As shown in FIG. 41, the seventh electronic device 411 receives, by using a pressure sensor, a press operation performed by the user on the "Yes" control, the eighth electronic device 412 receives, by using a pressure sensor, a press operation performed by the user on the "Yes" control, and the ninth electronic device 413 receives, by using a pressure sensor, a press operation performed by the user on the "No" control. Therefore, the seventh electronic device 411 and the eighth electronic device 412 perform multi-screen display together, and the ninth electronic device 413 perform no multi-screen display.

In response to the foregoing press operations performed on the "Yes" controls, the seventh electronic device 411 and the eighth electronic device 412 select one electronic device as a primary electronic device and the other electronic device as a secondary electronic device, and then together perform a process of time synchronization, collaborative setting of a photographing parameter, and synchronous photographing. The primary electronic device obtains relative locations and postures of the primary electronic device and the secondary electronic device based on results of synchronous photographing, and sends, to the secondary electronic device, the result of synchronous photographing performed by the secondary electronic device. For a detailed process, refer to the foregoing descriptions of FIG. 39A to FIG. 39D. Details are not described herein again. The seventh electronic device 411 and the eighth electronic device 412 display corresponding user interfaces based on the locations and the postures of the seventh electronic device 411 and the eighth electronic device 412. The ninth electronic device 413 may display a user interface before the voice signal is received.

It may be understood that the example of selecting the electronic device to perform multi-screen display shown in FIG. 41 is only used to explain this embodiment of this application, and should not be construed as a limitation. A user interface for selecting the electronic device may be alternatively in another form. Alternatively, the electronic device for multi-screen display may be selected by using another user operation, for example, a voice signal of the user or a brain wave signal of the user. This is not limited in this embodiment of this application.

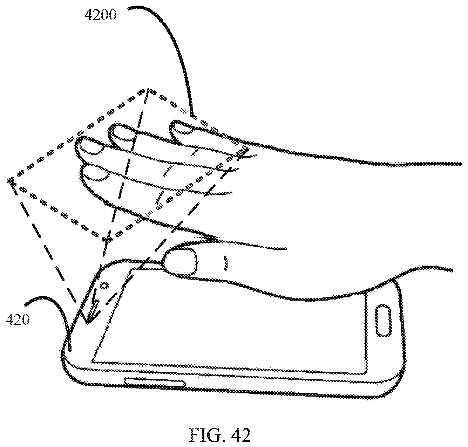

In this embodiment of this application, if the photo obtained through synchronous photographing does not meet a requirement, for example, a quantity of feature points whose intensity reaches a preset threshold in the taken photo is insufficient, the plurality of electronic devices may prompt the user to perform visual assistance. The intensity of the feature points is used to indicate a change speed of a grayscale value of a corresponding pixel, for example, an image gradient The visual assistance that the user is prompted to perform is but not limited to, for example, placing the face in front of a lens, placing a hand in front of a lens, placing an object, for example, a book, in front of a lens, or adjusting the location of the electronic device. After the user performs visual assistance, the primary electronic device and the secondary electronic device collaboratively reset photographing parameters, perform synchronous photographing, and calculate the locations and the postures of the primary electronic device and the secondary electronic device, to obtain a high-precision measurement result based on a photographing result that meets the requirement. To be specific, the high-precision measurement result is obtained at a very low interaction cost. An example in which the user performs visual assistance is shown in FIG. 42. The user may place a palm above a tenth electronic device 420, and the tenth electronic device 420 resets a photographing parameter, and performs synchronous photographing by using the reset photographing parameter, to obtain a taken photo 4200 that meets the requirement

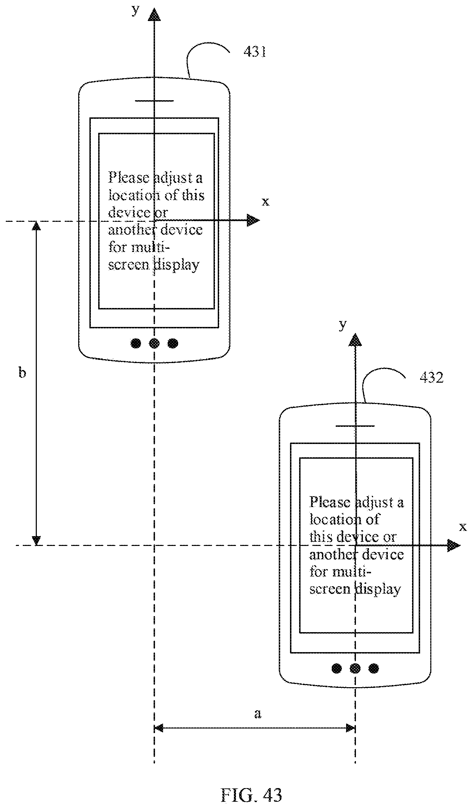

In this embodiment of this application, if multi-screen interaction cannot be performed based on the relative locations and the postures of the plurality of electronic devices obtained through measurement, the user may be prompted to adjust a location of at least one of the plurality of electronic devices. For example, in a scenario shown in FIG. 43, an eleventh electronic device 431 and a twelfth electronic device 432 are placed in parallel on a same plane. An example in which the plane is a two-dimensional coordinate plane: an xy plane, a transverse direction is an x axis, a longitudinal direction is a y axis, and a normal direction of the plane is a z axis (not shown) is used for description.

As shown in FIG. 43, the eleventh electronic device 431 and the twelfth electronic device 432 have a relative displacement value being a on the x axis, a relative displacement value being b on the y axis, and a relative displacement value being 0 on the z axis. Relative displacement values (namely, a and b) in two axial directions in a three-dimensional coordinate system are large. Therefore, multi-screen display cannot be performed based on current relative locations and postures of the eleventh electronic device 431 and the twelfth electronic device 432. As a result, the eleventh electronic device 431 and the twelfth electronic device 432 may display prompt information "Please adjust a location of this device or another device for multi-screen display". After the user adjusts the location based on the prompt, the plurality of electronic devices perform processes such as collaboratively setting a photographing parameter, synchronous photographing, and calculating relative positions and postures, It should be noted that FIG. 43 shows only an embodiment of determining, based on relative displacement between the plurality of electronic devices, whether multi-screen interaction can be performed. In a specific implementation, a rotation value between the plurality of electronic devices further needs to be considered. For example, when a rotation value of the electronic device is greater than a specific threshold (for example, 180 degrees), the user is prompted to adjust the location.

Based on some embodiments shown in FIG. 38, FIG. 2, FIG. 39A to FIG. 39D, FIG. 40A and FIG. 40B, and FIG. 41 to FIG. 43, the following describes the multi-device location measurement method provided in this application.

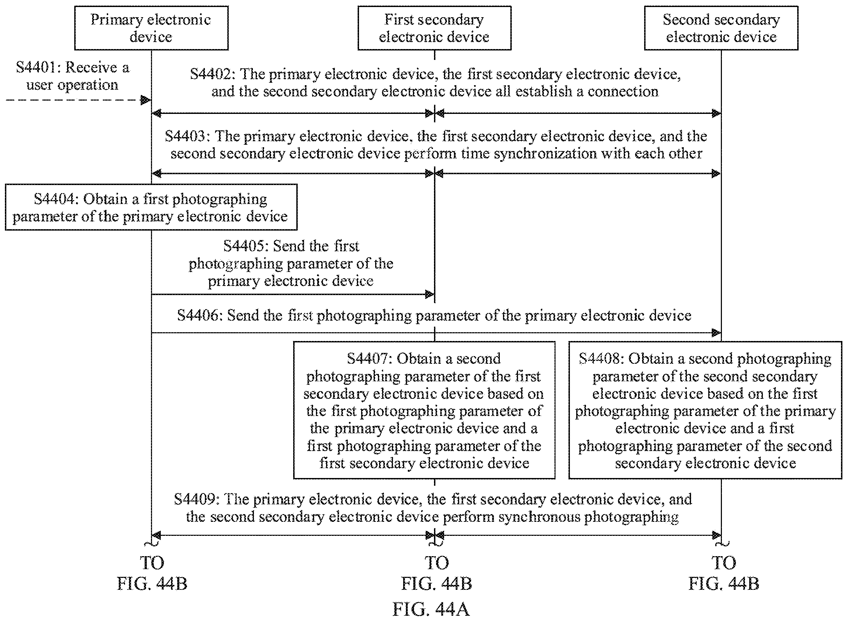

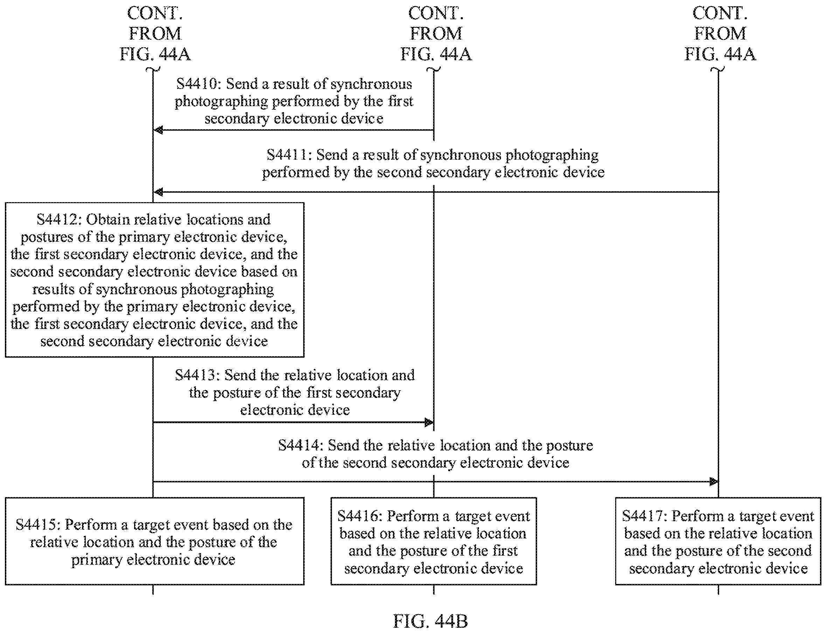

FIG. 44A and FIG. 44B show a multi-device location measurement method according to an embodiment of this application. In FIG. 44A and FIG. 44B, two secondary electronic devices (namely, a first secondary electronic device and a second secondary electronic device) are used as an example for description. It should be noted that there may be more or fewer secondary electronic devices in this solution. The method includes but is not limited to the following steps.

S4401: At least one of a primary electronic device, the first secondary electronic device, and the second secondary electronic device receive a user operation.

Specifically, the user operation may be but is not limited to an operation, for example, a touch, a press, or a slide, that is performed on displays of the electronic devices, an operation performed on buttons of the electronic devices, a voice signal, a gesture operation, a brain wave signal of the user, or the like, for example, the touch operation shown in FIG. 39A to FIG. 39D or the slide operation shown in FIG. 40A and FIG. 40B.

S4402: The primary electronic device, the first secondary electronic device, and the second secondary electronic device all establish a connection.

Specifically, the primary electronic device, the first secondary electronic device, and the second secondary electronic device establish the connections in a wired (for example, a USB, a twisted pair, a coaxial cable, or an optical fiber) or wireless (for example, Wi-Fi, Bluetooth, or a mobile device network) manner.

S4403: The primary electronic device, the first secondary electronic device, and the second secondary electronic device perform time synchronization with each other.

Specifically, the primary electronic device, the first secondary electronic device, and the second secondary electronic device perform time synchronization, to implement subsequent synchronous photographing, and prevent a case in which a photographing scene changes due to inconsistent photographing time points and consistency of photos obtained through synchronous photographing is poor.

Optionally, the primary electronic device, the first secondary electronic device, and the second secondary electronic device are connected to a same time server, and correct time of the primary electronic device, the first secondary electronic device, and the second secondary electronic device based on time of the time server, to complete time synchronization.

Optionally, the first secondary electronic device and the second secondary electronic device adjust, to a sum of current time of the primary electronic device and delays of transmitting data to the primary electronic device by the first secondary electronic device and the second secondary electronic device, based on the delays and the current time sent by the primary electronic device.

S4404: The primary electronic device obtains a first photographing parameter of the primary electronic device.

Specifically, a camera of the primary electronic device is enabled to perform metering and automatic focusing on a current photographing environment, to obtain the first photographing parameter of the primary electronic device. The photographing parameter may include but is not limited to photographic sensitivity, a shutter, a focal length, exposure compensation, white balance, resolution, and the like. In this embodiment of this application, the photographic sensitivity, the shutter, the focal length, the exposure compensation, and the white balance are used as an example for description. ISO is used to represent the photographic sensitivity, S is used to represent the shutter, F is used to represent the focal length, EV is used to represent the exposure compensation, and WB is used to represent the white balance. In this case, the first photographing parameter of the primary electronic device may be represented as (*ISO*₁, *S*₁, *F*₁*, EV*₁*, WB*₁).

S4405: The primary electronic device sends the first photographing parameter of the primary electronic device to the first secondary electronic device.

S4406: The primary electronic device sends the first photographing parameter of the primary electronic device to the second secondary electronic device.

S4407: The first secondary electronic device obtains a second photographing parameter of the first secondary electronic device based on the first photographing parameter of the primary electronic device and a first photographing parameter of the first secondary electronic device.

Specifically, before step S4407, a camera of the first secondary electronic device is enabled to perform metering and automatic focusing on the current photographing environment, to obtain the first photographing parameter of the first secondary electronic device. The first photographing parameter of the first secondary electronic device may be represented as (*ISO*₂, *S*₂, *F*₂, *EV*₂, *WB*₂). Then, the first secondary electronic device may use the first photographing parameter of the primary electronic device and the first photographing parameter of the first secondary electronic device as an input based on a preset algorithm, to obtain the output second photographing parameter of the first secondary electronic device. The second photographing parameter of the first secondary electronic device is used by the first secondary electronic device to implement subsequent synchronous photographing.

The following Table 8 shows a method for obtaining the second photographing parameter of the first secondary electronic device based on the first photographing parameter of the primary electronic device and the first photographing parameter of the first secondary electronic device. In a specific implementation, another method may be alternatively used. This is not limited in this embodiment of this application.

**Table 8 Method for obtaining the second photographing parameter of the first secondary electronic device based on the first photographing parameter of the primary electronic device and the first photographing parameter of the first secondary electronic device**

| | Photographic sensitivity | Shutter | Focal length | Exposure compensation | White balance |
|---|---|---|---|---|---|
| First photographing parameter of the primary electronic device | *ISO*₁ | *S*₁ | *F*₁ | *EV*₁ | *WB*₁ |
| First photographing parameter of the first secondary electronic device | *ISO*₂ | *S*₂ | *F*₂ | *EV*₂ | *WB*₂ |
| Second photographing parameter of the first secondary electronic device | *ISO*₂ | *a* × *S*₂ + (1 - a) × *S*₁ | max(*F*₁, *F*₂) | min(*EV*₁, *EV*₂) | *WB*₁ |

A value range of a is [0, 1], and a value of a may be generally 0.8. Specifically, the value of a may be adjusted based on a photographing parameter and a photographing scene. For example, when a shutter parameter of the primary electronic device is more suitable for the photographing scene, the value of a may be smaller, when a shutter parameter of the first secondary electronic device is more suitable for the photographing scene, the value of a may be larger. Whether a shutter parameter of an electronic device is suitable for the photographing scene may be determined by experimentally taking a photo and based on a photo effect.

As shown in Table 8, the second photographing parameter of the first secondary electronic device may be represented as (*ISO*₂, *a* × *S*₂ + (1 - a) × *S*₁, max(*F*₁, *F*₂), min(*EV*₁, *EV*₂), *WB*₁). The photographic sensitivity is sensitivity of a camera to light, and the shutter is duration for effective exposure of a photosensitive film. The photographic sensitivity and the shutter usually need to be synchronously adjusted, to avoid excessive exposure (namely, overexposure) or insufficient exposure (namely, underexposure) of the photo obtained through photographing. Usually, the photographic sensitivity and the shutter that are obtained by the camera of the first secondary electronic device through metering are more consistent with the current photographing environment of the first secondary electronic device. Therefore, in condiseration of *ISO*₁, *S*₁, the photographic sensitivity and the shutter need to be consistent with *ISO*₂, *S*₂ as much as possible. A value of the photographic sensitivity usually increases by an integer multiple of 100. Therefore, the photographic sensitivity may be directly *ISO*₂, and a corresponding calculation formula *a* × *S*₂ + (1 - a) × *S*₁ may be obtained for the shutter based on experience.

The focal length determines the framing range. A shorter focal length indicates a wider framing range but a smaller ratio of an object in an image. A longer focal length indicates a narrower framing range but a larger ratio of an object in an image. In this embodiment of this application, feature point detection and matching are performed on the photos obtained through synchronous photographing, to obtain locations and postures of a plurality of electronic devices based on feature points that meet a requirement It is required that both intensity and a quantity of the feature points need to be greater than preset thresholds. However, when the object in the image has a larger ratio in the picture, the intensity and the quantity of the obtained feature points better meet the requirement. Therefore, a value of the focal length is max(*F*₁, *F*₂). The intensity of the feature points is used to indicate a change speed of a grayscale value of a corresponding pixel, for example, an image gradient.

The exposure compensation may be used to adjust brightness of the taken photo. Increasing the exposure compensation may increase the brightness of the photo, so that an object in the photo is more unobvious. If the exposure compensation is more, the intensity of the feature points in the photo is easily reduced and/or the quantity of the feature points in the photo is easily reduced. In this embodiment of this application, feature point detection and matching are performed on the photos obtained through synchronous photographing, to obtain the locations and the postures of the plurality of electronic devices based on the feature points that meet the requirement. It is required that both the intensity and the quantity of the feature points need to be greater than the preset thresholds. Therefore, a value of the focal length is min(*EV*₁, *EV*₂).

The white balance is used to restore a real color of the environment, and adjust cold and warm tones of the image. To make the consistency of the taken photos better, the secondary electronic devices are all subject to the white balance of the primary electronic device.

In some embodiments, the first secondary electronic device may alternatively obtain a first photographing parameter obtained by another secondary electronic device through metering, and use the first photographing parameter of the primary electronic device, the first photographing parameter of the first secondary electronic device, and first photographing parameters of preset quantity of other secondary electronic devices as an input based on a preset algorithm, to obtain an output second photographing parameter of the first secondary electronic device. The second photographing parameter of the first secondary electronic device is used to implement subsequent synchronous photographing.

For example, the secondary electronic device includes the first secondary electronic device, the second secondary electronic device, ..., and an (n-1)^{th} secondary electronic device. A first photographing parameter of an i^{th} secondary electronic device may be represented as (*ISO*_{*i*+1},*S*_{*i*+1},*F*_{*i*+1}*,EV*_{*i*+1},*WB*_{*i*+1}), where a value range of i is [0, n-1], and i is an integer. The following Table 9 shows a method for obtaining a second photographing parameter of the i^{th} secondary electronic device based on the first photographing parameter of the primary electronic device and first photographing parameters of other (n-2) secondary electronic devices. In a specific implementation, another method may be alternatively used. This is not limited in this embodiment of this application.

**Table 9 Method for obtaining the second photographing parameter of the i^{th} secondary electronic device based on the first photographing parameter of the primary electronic device and the first photographing parameters of the other (n-2) secondary electronic devices**

| | Photographic sensitivity | Shutter | Focal length | Exposure compensation | White balance |
|---|---|---|---|---|---|
| First photographing parameter of the primary electronic device | *ISO*₁ | *S*₁ | *F*₁ | *EV*₁ | *WB*₁ |
| First photographing parameter of the first secondary electronic device | *ISO*₂ | *S*₂ | *F*₂ | *EV*₂ | *WB*₂ |
| ... | ... | ... | ... | ... | ... |
| First photographing parameter of the i^{th} secondary electronic device | *ISO*_{*i*+1} | *S*_{*i*+1} | *F*_{*i*+1} | *EV*_{*i*+1} | *WB*_{*i*+1} |
| ... | ... | ... | ... | ... | ... |
| First photographing parameter of the (n-l)^{th} secondary electronic device | *ISOₙ* | *Sₙ* | *Fₙ* | *EVₙ* | *WBₙ* |
| Second photographing parameter of the i^{th} secondary electronic device | *ISO*_{*i*+1} | 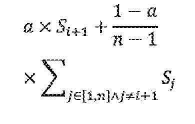 | 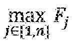 | 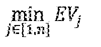 | *WB*₁ |

A value range of a is [0, 1], and a value of a may be generally 0.8. Specifically, the value of a may be adjusted based on a photographing parameter and a photographing scene. Descriptions of a value in Table 9 are consistent with descriptions of Table 8. Details are not described herein again.

S4408: The second secondary electronic device obtains a second photographing parameter of the second secondary electronic device based on the first photographing parameter of the primary electronic device and a first photographing parameter of the second secondary electronic device.

Specifically, a process of S4408 is similar to that of S4407. Details are not described herein again.

S4409: The primary electronic device, the first secondary electronic device, and the second secondary electronic device perform synchronous photographing.

Specifically, the primary electronic device performs photographing at a preset synchronous photographing time point by using the first photographing parameter of the primary electronic device. The first secondary electronic device performs photographing at the synchronous photographing time point by using the second photographing parameter of the first secondary electronic device. The second secondary electronic device performs photographing at the synchronous photographing time point by using the second photographing parameter of the second secondary electronic device. The synchronous photographing time point may be sent by the primary electronic device to the secondary electronic device before the primary electronic device performs synchronous photographing. For example, in S4405, the primary electronic device sends the photographing parameter of the primary electronic device and the synchronous photographing time point to the first secondary electronic device.

S4410: The first secondary electronic device sends, to the primary electronic device, a result of synchronous photographing performed by the first secondary electronic device.

S4411: The second secondary electronic device sends, to the primary electronic device, a result of synchronous photographing performed by the second secondary electronic device.

S4412: The primary electronic device obtains relative locations and postures of the primary electronic device, the first secondary electronic device, and the second secondary electronic device based on results of synchronous photographing performed by the primary electronic device, the first secondary electronic device, and the second secondary electronic device.

Specifically, the primary electronic device uses a preset three-dimensional reconstruction algorithm (for example, but not limited to an SFM algorithm, an SVO algorithm, or an SGM algorithm) to obtain, based on the results of synchronous photographing performed by the primary electronic device, the first secondary electronic device, and the second secondary electronic device, the relative locations and the postures of the primary electronic device, the first secondary electronic device, and the second secondary electronic device, for example, the relative displacement and the rotation values of the first electronic device 391, the second electronic device 392, and the third electronic device 393 shown in FIG. 39A to FIG. 39D.

For example, the primary electronic device may perform, by using a detector (for example, an SURF detector, an HOG descriptor, or a scale-invariant feature transform (scale-invariant feature transform, SIFT) detector) in a feature point algorithm, feature point detection on the results of synchronous photographing performed by the primary electronic device, the first secondary electronic device, and the second secondary electronic device, and obtain feature point description information of the photo by using a descriptor (for example, an SURF detector, a DPM descriptor, or a SIFT descriptor) in the feature point algorithm. Then, the primary electronic device performs pairwise matching on the feature point description information of the plurality of photos, for example, performs processing by using a k-nearest neighbors (k-nearest neighbors, kNN) algorithm, establishes hash indexes for all feature point description vectors, and then, searches for feature points of every two electronic devices to obtain a closest value. Optionally, a cross-check may be further performed on a matching result, to improve matching precision. Finally, the relative locations and the postures of the primary electronic device, the first secondary electronic device, and the second secondary electronic device are obtained by using the preset three-dimensional reconstruction algorithm (for example, the SFM algorithm) and based on the feature point matching result.

This embodiment is not limited to the foregoing enumerated case. In a specific implementation, the primary electronic device may alternatively perform SFM processing on the result of synchronous photographing, that is, input a group of images, that are obtained through synchronous photographing, to an SFM processing program (for example, VisualSFM or Bundler). The SFM processing program extracts feature points of each image in the image group, performs matching between the images, then obtains relative locations and postures of the primary electronic device and the secondary electronic device based on a matching result, and outputs relative locations and the postures. This is not limited in this embodiment of this application.

In some embodiments, the first secondary electronic device and the second secondary electronic device may alternatively perform, based on a feature point algorithm, feature point detection on the photos obtained by the first secondary electronic device and the second secondary electronic device through synchronous photographing, to obtain feature point description information, and then send the feature point description information of the first secondary electronic device and the second secondary electronic device to the primary electronic device in S4410 and S4411. In S4412, the primary electronic device only needs to perform feature point detection on a photo taken by the primary electronic device and obtain feature point description information. This reduces a data transmission amount and a calculation amount of the primary electronic device, and reduces a processing burden of the primary electronic device.

In some embodiments, if the obtained feature point description information does not meet a requirement, for example, the quantity of feature points whose intensity is greater than the preset threshold is less than a minimum value *Nₘᵢₙ* of a preset interval [*Nₘᵢₙ, Nₘₐₓ*], the user may be prompted to perform visual assistance, for example, place the face in front of a lens, place a hand in front of a lens, place an object, for example, a cup, in front of a lens, or adjust the location of an electronic device. For details, refer to the example in FIG. 42. The intensity of the feature points is used to indicate a change speed of a grayscale value of a corresponding pixel, for example, an image gradient. Then, the primary electronic device and the secondary electronic device re-perform S4404 to S4412 on an adjusted photographing scene, so that obtained feature point description information meets the requirement, location measurement precision is higher, and a high-precision measurement result is obtained at a very low interaction cost.

In some embodiments, the photographing parameters that are used for synchronous photographing and that are of the primary electronic device and the secondary electronic device may also be adjusted based on the obtained feature point description information. For example, the photographing parameter includes resolution. If the quantity of feature points whose intensity is greater than the preset threshold is smaller, the resolution may be increased. If the quantity of feature points whose intensity is greater than the preset threshold is larger, the resolution may be lowered. Optionally, whether the obtained feature point description information meets the requirement may be further determined based on the photographing parameter. For example, the photographing parameter includes the resolution. If the resolution has been adjusted to the highest, but the quantity of feature points whose intensity is greater than the preset threshold is still insufficient, it is considered that the obtained feature point description information does not meet the requirement.

It may be understood that, in this embodiment, when the primary electronic device is a drag source end device, the secondary electronic device may be used as a drag target device. In this case, the primary electronic device may display a recommended device list based on the determined relative locations of the primary electronic device and each secondary electronic device. With reference to FIG. 7, for example, the mobile phone is used as the primary electronic device, and the secondary electronic device includes the tablet computer, the mobile phone X, the PC, and the television. The mobile phone may determine relative locations of the mobile phone, the tablet computer, the mobile phone X, the PC, and the television. For example, if it is determined that the tablet computer and the mobile phone X are located at a location close to the right edge of the touchscreen of the mobile phone, and the PC and the television are located at a location close to the upper edge of the touchscreen of the mobile phone, the mobile phone may display the recommended device list shown in FIG. 7 based on the determined relative locations. To be specific, the mobile phone displays the device identifier 702 of the tablet computer and the device identifier 705 of the mobile phone X in the display region that is close to the right edge and that is of the touchscreen, and displays the device identifier 703 of the PC and the device identifier 704 of the television in the display region that is close to the upper edge and that is of the touchscreen of the mobile phone.

S4413: The primary electronic device sends the relative location and the posture of the first secondary electronic device to the first secondary electronic device.

S4414: The primary electronic device sends the relative location and the posture of the second secondary electronic device to the second secondary electronic device.

S4415: The primary electronic device performs a target event based on the relative location and the posture of the primary electronic device.

S4416: The first secondary electronic device performs the target event based on the relative location and the posture of the first secondary electronic device.

S4417: The second secondary electronic device performs the target event based on the relative location and the posture of the second secondary electronic device.

Specifically, the target event is but not limited to, for example, splicing and displaying a target image, and transmitting a target file. The primary electronic device and the secondary electronic device may perform the target event and display corresponding user interfaces based on the relative locations and the postures of primary electronic device and the secondary electronic device. For details, refer to the examples in FIG. 39A to FIG. 39D and FIG. 40A and FIG. 40B.

In some embodiments, the target event is transmitting the target file. The primary electronic device sends the target file to the target electronic device, and the primary electronic device may send only the relative locations and the postures of the primary electronic device and the target electronic device to the target electronic device, and skip sending, to the secondary electronic device used as a non-target electronic device, the relative location and the posture of the secondary electronic device. For example, the fourth electronic device 400 in FIG. 40A may send only the relative locations and the postures of the fourth electronic device 400 and the sixth electronic device 402 to the sixth electronic device 402, and skip sending the relative location and the posture of the fifth electronic device 401 to the fifth electronic device 401.

In some embodiments, the target event is transmitting the target file. The secondary electronic device, for example, the first secondary electronic device, may alternatively send the target file to the target electronic device. The primary electronic device may send the relative locations and the postures of the primary electronic device, the first secondary electronic device, and the second secondary electronic device to the first secondary electronic device, so that the first secondary electronic device determines, based on the relative locations and the postures of the primary electronic device and all the secondary electronic devices, the target electronic device to which the target file is sent

It should be noted that a sequence of S4401 and S4402 is not limited. A sequence of S4403 and S4404 to S4408 is not limited. A sequence of S4405 and S4406 is not limited. A sequence of S4407 and S4408 may not be limited. A sequence of S4410 and S4411 is not limited. A sequence of S4413 and S4414 is not limited. A sequence of S4415, S4416, and S4417 is not limited.

In the method shown in FIG. 44A and FIG. 44B, the plurality of secondary electronic devices adjust respective photographing parameters by using a photographing parameter of a same primary electronic device as a reference, and the primary electronic device and the secondary electronic device perform synchronous photographing after completing time synchronization. This avoids a measurement error caused by a mismatch between the photographing parameters and a change of the photographing scene, consistency of the photos obtained through synchronous photographing is better, and location measurement precision is higher. In addition, this embodiment of this application does not need to depend on a special measurement environment, and has low costs and a wider application scope.

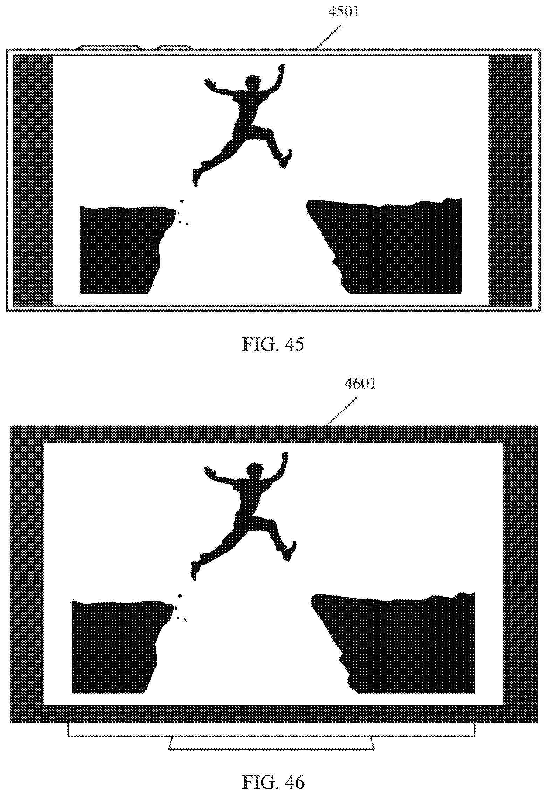

In the cross-device drag scenario, when a dragged element is a video element, a picture-in-picture, a floating window, or the like, a layer at which these elements are located may not cover a virtual display after being composited on the virtual display. For example, the layer at which the dragged element is located only covers the virtual display horizontally, or the layer at which the dragged element is located only covers the virtual display vertically, or the layer at which the dragged element is located does not cover the virtual display horizontally or vertically either. As a result, a black border exists when the element is displayed on the target device (where a region that is not covered is presented as a black border after being displayed on a projection destination end), as shown in FIG. 19 or FIG. 20. This issue also occurs in a wireless projection scenario. For example, when the user watches a video by using a mobile phone, if an aspect ratio of the watched video is inconsistent with an aspect ratio of a screen of the mobile phone, a black border appears on the screen of the mobile phone when the video is displayed in full screen on the mobile phone. For example, with reference to FIG. 45, an example in which a screen resolution of a mobile phone 4501 is 2244×1080 and a resolution of a video is 1920×1080 is used. An aspect ratio (2244/1080) of a screen of the mobile phone 4501 is different from an aspect ratio (1920/1080) of the video. In this case, as shown in FIG. 45, when the mobile phone 4501 plays the video in full screen, the video does not cover the entire screen of the mobile phone 4501, but has black borders on the left and right sides of the video. If the mobile phone 4501 projects a current display interface to another terminal (for example, a television) for display, black borders on two sides of the video are also projected to the television. To be specific, black borders also exist on a projection interface displayed on the television. In addition, currently, screen resolution of the mobile phone is usually different from a resolution of a video in a frequently used video application. For example, resolution of most videos is 1920×1080, but screen resolution of most mobile phones is not 1920x 1080. For example, screen resolution of some mobile phones is 2244×1080. For another example, screen resolution of some mobile phones is 2340×1080. However, screen resolution of televisions is basically 1920×1080. As a result, with reference to FIG. 45 and FIG. 46, when a display interface of the mobile phone (for example, the mobile phone 4501 in FIG. 45) is projected to a television (for example, a television 4601 shown in FIG. 46), because an aspect ratio of the video needs to be kept unchanged, the television 4601 needs to scale the video displayed on the screen of the mobile phone 4501, as shown in FIG. 46. This causes a case that black borders finally exist on the top, bottom, left, and right of the video when the video is played on the television 4601. As a result, the video cannot be maximized on the television for presentation.

An embodiment of this application further provides a projection method. After an element presented by a projection source end is projected to a projection destination end, the element can be maximized at the projection destination end for presentation, to improve user experience.

In this embodiment, a terminal that projects a display interface of the terminal may be referred to as a projection source end, and a terminal that receives projection of the projection source end and displays the display interface of the projection source end may be referred to as a projection destination end. An interface that is projected by the projection source end and that is displayed on the projection destination end is referred to as a projection interface. For example, in the cross-device drag scenario, the source end device may be a projection source end, and the target device may be a projection destination end.

By using the method, for the element displayed by the projection source end, a geometric transformation matrix corresponding to a layer at which the element is located may be re-determined, and is used to composite the layer on a virtual display. The re-determined geometric transformation matrix can scale as much as possible the layer to be consistent with a size of the virtual display, so that the element projected to the projection destination end can be maximized at the projection destination end for presentation to the user. For example, when the element displayed by the projection source end has a black border, the layer at which the element is located is scaled as much as possible to be consistent with a size of the virtual display, so that the layer covers the virtual display as much as possible, to remove or shrink the black border of the corresponding element projected to the projection destination end, so as to maximize the element, that is projected to the projection destination end, at the projection destination end for presentation. This improves user experience.

It should be noted that the foregoing element may be a video element (or referred to as a video component (Surface view)), a picture-in-picture, a floating window (for example, a video chat window), a picture, a PPT, or the like. This is not specifically limited herein in this embodiment.

The technical solution in this embodiment may be applied to the system architecture shown in FIG. 1. Based on the system architecture shown in FIG. 1, in the cross-device drag scenario or the wireless projection scenario, when the first terminal 101 is connected to the second terminal 102, a projection source end in the first terminal 101 and the second terminal 102 may project, to a display of a projection destination end for display, an interface displayed on a display of the projection source end. For example, the first terminal 101 is used as the projection source end, and the second terminal 102 is used as the projection destination end. The first terminal 101 may project, to the display of the second terminal 102 for display, an interface or an interface element displayed on the display of the first terminal 101. In addition, in this embodiment of this application, for the element displayed by the projection source end, for example, the first terminal 101, the first terminal 101 may re-determine the geometric transformation matrix corresponding to the layer at which the element is located, and the geometric transformation matrix is used to composite the layer on the virtual display. The re-determined geometric transformation matrix can scale as much as possible the layer to be consistent with the size of the virtual display, so that the element projected to the projection destination end, for example, the second terminal 102, can be maximized at the second terminal 102 for presentation to the user. The following describes in detail the projection method provided in this embodiment of this application with reference to FIG. 45 to FIG. 57(b) by using an example in which the first terminal 101 is used as the mobile phone, the second terminal 102 is a television, the mobile phone is used as a projection source end, and the television is used as the projection destination end.

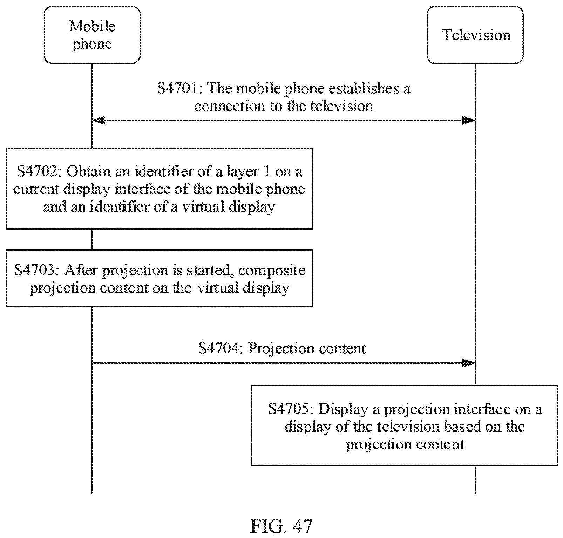

FIG. 47 is a schematic flowchart of a projection method according to an embodiment of this application. As shown in FIG. 47, the method may include the following steps.

S4701: The mobile phone establishes a connection to the television.

For specific descriptions of establishing the connection to the television by the mobile phone, refer to specific descriptions of corresponding content in the embodiment shown in FIG. 29. Details are not described herein again.

For example, a user may use the mobile phone to touch an NFC tag of the television, and the mobile phone reads connection information stored in the NFC tag. For example, the connection information includes an IP address of the television. Then, the mobile phone may establish, based on the IP address of the television, the connection to the television by using another protocol, for example, a Bluetooth protocol For another example, Bluetooth functions and Wi-Fi functions are enabled on both the mobile phone and the television. The mobile phone may broadcast a Bluetooth signal, to discover a surrounding terminal. For example, the mobile phone may display a discovered device list The discovered device list may include an identifier of a device discovered by the mobile phone, for example, include an identifier of the television. In a process of discovering a device, the mobile phone may also exchange connection information, for example, an IP address, with the discovered device. Then, after the mobile phone receives an operation of selecting the identifier of the television from the displayed device by the user, the mobile phone may establish, based on the IP address of the television, the connection to the television by using a Wi-Fi protocol. For another example, both the mobile phone and the television are connected to a cellular network, and a same HIJAWEI account is logged in on the mobile phone and the television. The mobile phone and the television may establish the connection based on the HUAWEI account and the cellular network

S4702: The mobile phone obtains an identifier of a layer 1 on a current display interface of the mobile phone and an identifier of a virtual display.

When a plurality of terminals are collaboratively used, one terminal (for example, the mobile phone) may be used as the projection source end to project a current display interface or an element on an interface to a display of another terminal (for example, the television), that is used as the projection destination end, for display.

The layer 1 may be the first layer in embodiments of this application. The layer 1 may be a layer at which an element that needs to be maximized at the projection destination end (for example, the television) for presentation is located. The identifier of the layer 1 may be a layer name (layer name). For ease of description, in the following embodiment, the element that needs to be maximized at the projection destination end for presentation is referred to as a target element for short for description. The target element may be the object in embodiments of this application.

The virtual display (VirtualDisplay) may be a virtual display that is used to composite projection content and that is created when the mobile phone used as the projection source end needs to project the current display interface or the element on the interface to the projection target end.

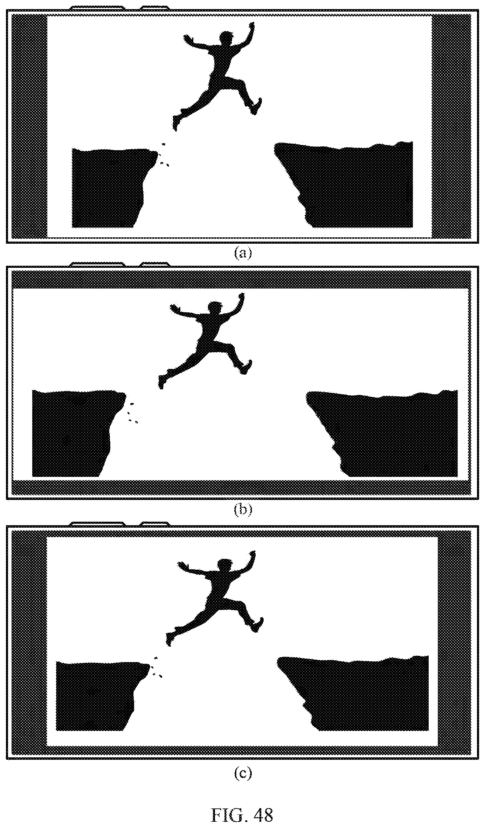

In some embodiments, the target element may be a predetermined element, for example, a video element, on the interface in a wireless projection scenario. For example, with reference to FIG. 48, as described in the foregoing embodiment, in view of the case that, when the user watches a video in full screen (or watches a video in landscape mode) by using the mobile phone, if an aspect ratio of the watched video is inconsistent with an aspect ratio of a display of the mobile phone, when the video is displayed in full screen on the mobile phone, a black border appear on the display of the mobile phone. For example, black borders exist on the left and right sides of the video (as shown in (a) in FIG. 48), or black borders exist on the upper and lower sides of the video (as shown in (b) in FIG. 48), or black borders exist on the upper, lower, left, and right sides of the video (as shown in (c) in FIG. 48). As a result, a black border also exists when the video is projected to the projection destination end. Therefore, in the wireless projection scenario, a video element used to carry a video (or video content) may be the target element.

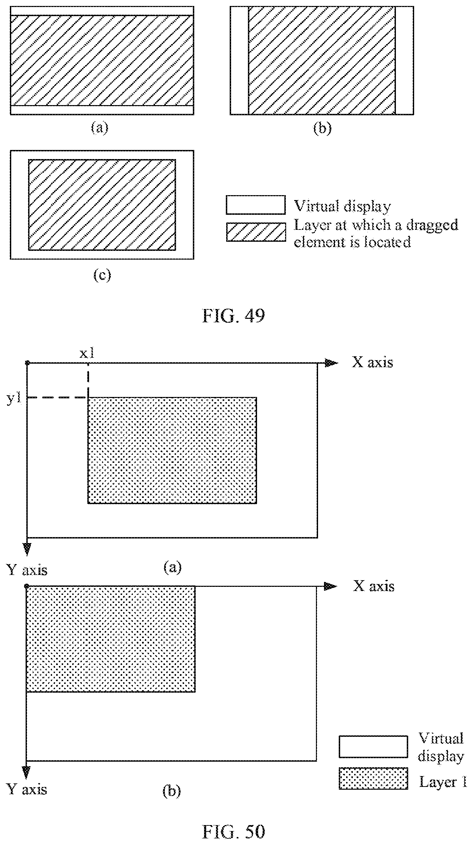

In some other embodiments, the target element may be an element dragged by the user in a cross-device drag scenario, for example, a video element, a picture-in-picture, or a floating window. During cross-device drag, a device that provides drag-related data (for example, referred to as drag data) may be referred to as a source end device, and a device that receives the drag-related data may be referred to as a target device. The source end device (for example, the mobile phone) may be used as the projection source end, composite, on the virtual display, a layer at which the element dragged by the user is located, and then project the layer to the target device (for example, the television), that is used as the projection destination end, for display. For example, with reference to FIG. 49, as described in the foregoing embodiment, during cross-device drag, after being composited on the virtual display, the layer at which the element dragged by the user, for example, the video element, the picture-in-picture, or the floating window, is located may not cover the virtual display. As shown in (a) in FIG. 49, the layer at which the dragged element is located only covers the virtual display horizontally, or as shown in (b) in FIG. 49, the layer at which the dragged element is located only covers the virtual display vertically, or as shown in (c) in FIG. 49, the layer at which the dragged element is located does not cover the virtual display horizontally or vertically either. As a result, a black border exists when the dragged element is displayed on the projection destination end (where a region that is not covered is presented as a black border after being displayed on the projection destination end). Therefore, in a cross-device drag scenario, the element dragged by the user, for example, the video element, the picture-in-picture, or the floating window, may be the target element.

In the wireless projection scenario, the mobile phone may find, by using a query command, a layer name of a layer at which the target element is located For example, the target element is a video element in HUAWEI Video. The mobile phone may query, by using an ADB command, for example, adb shell dumpsys SurfaceFlinger, layer names of all layers on the cunent display interface (for example, an interface of HUAWEI Video) of the mobile phone. Based on the found layer names of all the layers on the current display interface, the mobile phone may determine the target element by identifying a prefix of each found layer name, for example, a layer name of a layer at which the video element is located. For example, a prefix of the layer name of the layer at which the video element is located is generally surfaceview. Therefore, the mobile phone may determine a layer name with a prefix of surfaceview as the layer name of the layer (for example, referred to as the layer 1) at which the target element is located.

In the cross-device drag scenario, the mobile phone may obtain, from the drag data (for example, the drag data 1 in the foregoing embodiment), the layer name of the layer at which the target element is located. For example, as described in the foregoing embodiment, an operation of dragging the element by the user (for example, referred to as a drag operation) may usually include an operation of pressing and moving the element, or may include a touch and hold operation and a movement operation. The mobile phone may set touch and hold listening on the element in advance, and the touch and hold listening is used to listen to a touch and hold event corresponding to the touch and -hold operation. After the user triggers drag for the element, the mobile phone generates a corresponding drag event. In this embodiment, after listening and obtaining the touch and hold event, the mobile phone may obtain the drag data from the corresponding drag event. The drag data includes a layer name of the dragged element (or an object on which the touch and hold operation is performed, namely, the target element) on the current display interface.

The layer name may be the first identifier in embodiments of this application.

For example, with reference to FIG. 18(a) to FIG. 18(c), an example in which the target element or the element dragged by the user is the video element (for example, Surface View) is used. As shown in FIG. 18(a), the interface of the video application is displayed on the display of the mobile phone, the interface includes a video element 1801, and the touch and hold listening is set on the video element 1801 in advance. The video (for example, the video X) is being played on the video element 1801.

When the user wants to drag the video element 1801, the user may perform a corresponding drag operation (for example, the double-tap operation) on the video element 1801. In response to the operation, as shown in FIG. 18(b), the video element 1801 is dragged. For example, a window manager of the mobile phone may perform scale-down processing on the video element 1801, and may further perform background blurring processing, and send a scaled-down video element 1801 to a launcher at an application layer of the mobile phone to display the scaled-down video element 1801. In addition, on the interface of the video application, the original video element may continue to be displayed to play the video (as shown in FIG. 18(a) to FIG. 18(c), that is, the dragged video element 1801 is a window copied by the mobile phone), or may not be displayed (not shown in the figure, that is, a dragged video element 1801 is the original video component). Then, after the mobile phone receives the operation (which includes the touch and hold operation and the movement operation) of dragging the video element 1801 by the user, the mobile phone (for example, a third-party application at the application layer of the mobile phone, which is specifically the video application) may trigger drag for the video element 1801 on the mobile phone. For example, the user touches and holds the video element 1801 and moves a finger, so that the video element 1801 moves on the display of the mobile phone as the finger of the user moves, to give the user a visual effect of dragging the video element 1801 by the finger of the user. The drag direction of the video element 1801 may be upward drag, leftward drag, rightward drag, or downward drag. For example, as shown in FIG. 18(c), the user may use the finger to perform a touch and hold operation on the dragged video element 1801, and perform an operation of moving the finger rightward. As the finger of the user moves, the mobile phone may draw and display an animation in which the video element 1801 moves with the finger of the user.

It may be understood that, after the mobile phone receives the operation of dragging the video element 1801 by the user, that is, the touch and hold operation and the movement operation, a framework layer of the mobile phone generates the corresponding drag event, for example, a drag start event The drag start event includes the drag data. In addition, after the user performs the touch and hold operation on the video element 1801, the corresponding touch and hold event may be listened and obtained through the touch and hold listening set on the video element 1801. The mobile phone may call back the drag start event generated by the framework layer, to extract the drag data from the drag start event The drag data includes a layer name of the video element 1801 on the current display interface. In this way, the mobile phone can obtain the layer name of the layer (for example, referred to as the layer 1) at which the dragged element, namely, the target element, is located.

As described in the foregoing embodiment, the virtual display is a virtual display used to composite the projection content when the projection source end needs to project the current display interface or the element of the interface to the projection target end. It should be noted that a creation occasion of the virtual display is not specifically limited in this embodiment. For example, in the wireless projection scenario, the virtual display may be created before a projection function of the mobile phone is enabled (for example, when the mobile phone is turned on), or may be created after a projection function of the mobile phone is enabled, or may be created after the mobile phone successfully establishes a connection to another terminal. In the cross-device drag scenario, because drag may be classified into cross-device drag and local drag, the virtual display may be created after it is determined that this drag is cross-device drag, or may be created when drag starts (for example, when the foregoing touch and hold event is listened and detected). If the mobile phone pre-creates a plurality of virtual displays, when projection is required, the mobile phone may select, from the plurality of pre-created virtual displays, a virtual display used to composite the projection content. After the virtual display is created (or selected), the mobile phone used as the projection source end may obtain the identifier (for example, an ID or a name) of the virtual display used to composite the projection content.

It should be noted that, in this embodiment, both S4701 and S4702 are preparations for projection, and there is no limitation on a sequence of performing S4701 and S4702. For example, S4701 may be performed before S4702, or S4702 may be performed before S4701, or S4701 and S4702 may be performed at the same time. S4701 and S4702 need to be performed before projection is started.

S4703: After projection is started, the mobile phone composites the projection content on the virtual display.

S4704: The mobile phone sends the projection content to the television

S4705: The television displays a projection interface on a display of the television based on the projection content.

In the wireless projection scenario, the mobile phone may start projection after receiving a user operation used to trigger a projection start. For example, the user operation may be an operation of enabling a projection service function of the mobile phone. For example, the user operation may be a tap operation of the user for an enabling button for the projection service function on a setting interface of the mobile phone. The user operation may be alternatively a tap operation of the user for a confirmation button on a projection confirmation interface displayed by the mobile phone.

In the cross-device drag scenario, the mobile phone may start projection when determining that an intent of the user to drag the element is cross-device drag. For example, in a process in which an element, for example, a video element, a picture-in-picture, or a floating window, on a display interface of the mobile phone is dragged by the user, the mobile phone may determine whether an intent of the user to drag the element is cross-device drag, and may start projection if the mobile phone determines that the intent of the user to drag the element is cross-device drag. For example, as described in the foregoing embodiment, the mobile phone may set a drag sensing region to determine whether the drag intent of the user is cross-device drag. For another example, the mobile phone may determine, by determining a distance between the dragged element and an edge of the display, whether the intent of the user to drag the element is cross-device drag. For a specific implementation, refer to descriptions of corresponding content in the foregoing embodiments. Details are not described herein again.

After projection is started, the mobile phone may composite the projection content on the virtual display.

For example, in the wireless projection scenario, the mobile phone may use content of each layer on the current display interface as the projection content, and composite the projection content to the virtual display.

It may be understood that one interface may include one or more layers, and each layer carries one or more elements. When being presented on the display, these elements have respective layout location and size requirements. These layout location and size requirements may be met by adjusting a size and a location of the layer that carries these elements. For example, an interface is displayed on the display of the mobile phone, and the interface includes the layer 1. The mobile phone may composite layers to the display of the mobile phone based on original parameters and corresponding geometric transformation matrices (for example, referred to as geometric transformation matrices 1) of the layers (which include the layer 1) on the interface, to set a size and a location of each layer. In this way, an element carried on each layer meets a layout location and size requirement of the clement The original parameter of each layer and the geometric transformation matrix 1 corresponding to each layer are generated by the mobile phone based on logic of a system and an application. The original parameter of the layer records an original size of the layer and a start location of the layer during compositing. The geometric transformation matrix corresponding to the layer records geometric information, for example, displacement or scaling of the layer. For example, the geometric transformation matrix 1 includes an offset parameter 1 and a scaling parameter 1. The offset parameter 1 is used to indicate a displacement amount for the layer on the basis of the start location, and the scaling parameter 1 is used to indicate a scaling amount for the layer on the basis of the original size of the layer. The geometric transformation matrix 1 may be the second geometric transformation matrix in embodiments of this application.

As described in the foregoing embodiment, in the wireless projection scenario, for the target element, for example, the video element, because a size of the video carried by the video element is inconsistent with a size of the display of the mobile phone, a black border exists when the target element is presented on the display of the mobile phone. The presentation result appears after the mobile phone composites the layer, at which the video element is located, to the display of the mobile phone based on an original parameter of the layer and the geometric transformation matrix 1 corresponding to the layer. In addition, the projection content composited on the virtual display is sent to the projection destination end, and is used by the projection destination end to present the projection content to the user through the display of the projection destination end. To maximize the video, that is carried by the video element (for example, remove a black border or narrow a range of a black border), for presentation after the video is projected to the projection destination end, in this embodiment, the content of each layer on the current display interface may be used as the projection content In a process of compositing the projection content to the virtual display, the layer (for example, the layer 1) at which the target element is located is composited to the virtual display by using a geometric transformation matrix 2, without using the geometric transformation matrix 1 corresponding to the layer 1. The geometric transformation matrix 2 is different from the geometric transformation matrix 1 corresponding to the layer 1, and the geometric transformation matrix 2 may enable the layer 1 to cover the virtual display in at least one direction after the layer 1 is composited to the virtual display. In this way, an effect of maximizing the target element carried at the layer 1 at the projection destination end for presentation is achieved. Another layer on the current display interface, for example, a status bar (status bar) includes no element that needs to be maximized at the projection destination end (for example, no black border exists when the layer is presented on the mobile phone, that is, the black border does not need to be removed or reduced) for presentation. In this case, the geometric transformation matrix 1 corresponding to the layer may be used to composite the layer to the virtual display. The geometric transformation matrix 2 may be the first geometric transformation matrix in embodiments of this application.

In other words, that the mobile phone uses the content of each layer on the current display interface as the projection content, and composites the projection content to the virtual display may include the following process:

For each layer on the current display interface, in a process of compositing the content of the layer to the virtual display, the mobile phone may first determine whether the layer name of the layer matches the layer name obtained in S4702.

The layer name obtained in S4702 is the layer name of the layer at which the target element is located. The layer name may be represented by using a string. Whether a layer name of a currently composited layer matches the layer name obtained in S4702 may be that two strings are equal, or may be that two strings are in an inclusion relationship. This is not specifically limited herein in this embodiment.

When the layer name of the layer does not match the layer name obtained in S4702, it indicates that the layer does not include the element that needs to be maximized at the projection destination end for presentation, and the mobile phone may composite the layer to the virtual display based on the original parameter and the corresponding geometric transformation matrix of the layer 1. The mobile phone continues to determine a next layer.

If a layer name of the layer matches the layer name obtained in S4702, it indicates that the layer includes the target element that needs to be maximized at the projection destination end for presentation, that is, is the layer 1. The mobile phone may obtain the geometric transformation matrix 2 corresponding to the layer 1, and then composite the layer 1 to the virtual display based on the original parameter of the layer 1 and the geometric transformation matrix 2.

For example, the layer 1 includes one element, that is, the target element. A specific process in which the mobile phone obtains the geometric transformation matrix 2 may include the following step 1 to step 4.

Step 1: The mobile phone obtains an initial display region of the layer 1 on the virtual display, and obtains an offset parameter 2 based on coordinates of a first corner, for example, the upper left corner, of the initial display region. The offset parameter 2 includes a horizontal offset and a vertical offset The horizontal offset and the vertical offset are respectively coordinates of the upper left corner of the initial display region relative to an origin of the virtual display (or a first corner, for example, the upper left corner of the virtual display).

As described in the foregoing embodiment, when a layer is composited on a screen (for example, the display (or referred to as a home screen) of the mobile phone, or the virtual display), an original parameter (which includes an original size and a start location of the layer) and a geometric transformation matrix of the layer are used to determine a size and a location of the layer during compositing.

Generally, the original parameter may be used as a reference, and the geometric transformation matrix is adjusted, for example, an offset parameter in the geometric transformation matrix is adjusted, to change, on the basis of the start location of the layer, a location at which the layer is composited to the screen. In this embodiment, the offset parameter of the geometric transformation matrix may be set, so that after the layer 1 is composited to the virtual display, a first corner (for example, the upper left corner) of the layer 1 can coincide with the origin of the virtual display (for example, the upper left corner of the virtual display).

The mobile phone may first obtain the initial display region of the layer 1 on the virtual display, and obtain the offset parameter, which is referred to as the offset parameter 2 in this embodiment, based on the coordinates of the first corner (for example, the upper left corner) of the initial display region.

For example, FIG. 50 is a schematic diagram of a display coordinate system of the virtual display according to this embodiment. As shown in (a) in FIG. 50, a coordinate origin of the display coordinate system is the upper left corner of the virtual display, an X axis points from the coordinate origin to the right edge of the virtual display, and a Y axis points from the coordinate origin to the lower edge of the virtual display. If the mobile phone composites the layer 1 to the virtual display based on the original parameter, namely, the start location and the original size, of the layer 1, the layer 1 is composited to a location shown in (a) in FIG. 50. The region may be the foregoing initial display region. If a compositing result shown in (a) in FIG. 50 is projected to the projection destination end as the projection content, a blank region shown in (a) in FIG. 50 is presented as a black border at the projection destination end. Therefore, in this embodiment, the mobile phone may obtain the initial display region of the layer 1 on the virtual display based on the original parameter of the layer 1, namely, the original size and the start location of the layer 1. Then, the mobile phone may obtain the coordinates, for example, (x1, yl), of the first corner, for example, the upper left corner, of the initial display region in the display coordinate system of the virtual display. The mobile phone may determine the coordinates (x1, y1) as the horizontal offset and the vertical offset of the offset parameter 2. For example, the horizontal offset is x1, and the vertical offset is y1. In this way, if the layer 1 is composited to the virtual display based on the original size and the start location of the layer 1 and the geometric transformation matrix having the offset parameter 2, the layer 1 may be composited from the location shown in (a) in FIG. 50 to a location shown in (b) in FIG. 50 after being separately horizontally and vertically offset for xl and yl. To be specific, the upper left corners of the layer 1 and the virtual display coincide.

In addition, the original parameter of the layer may be used as the reference, and the geometric transformation matrix is adjusted, for example, a scaling parameter in the geometric transformation matrix is adjusted, to change, on the basis of the initial size of the layer, a size in which the layer is composited to the screen. In this embodiment, the scaling parameter of the geometric transformation matrix may be set, so that the layer 1 may cover the virtual display in at least one direction (for example, a transverse direction, a longitudinal direction, or a transverse direction and a longitudinal direction) after being composited to the virtual display. Specifically, the following step 2 and step 3 are included.

Step 2: The mobile phone obtains the width and the height of the target element at the layer 1, and the width and the height of the virtual display.

For example, a structure of the layer 1 may store a width and a height of each element at the layer 1. For example, if the layer 1 includes the target element, the mobile phone may obtain the width and the height of the target element from the structure of the layer 1. The structure of the layer 1 may be generated and stored in the mobile phone when the mobile phone displays, on the display of the mobile phone, the interface that includes the layer 1 The width of the target element may be represented by using elementWidth, and the width of the target element may be represented by using elementHeight.

The mobile phone may further obtain the width and the height of the virtual display used to composite the projection content The width and the height of the virtual display may be automatically created when the mobile phone creates the virtual display, or may be predefined. The width of the virtual display may be represented by using displayWidth, and the width of the virtual display may be represented by using displayHeight.

Step 3: The mobile phone determines a scaling parameter 2 based on the width and the height of the target element and the width and the height of the virtual display.

In some embodiments, uniform scaling may be performed. In this case, the determined scaling parameter 2 is R, where $R = Min \left(displayWidth/elementWidth, displayHeight/elementHeight\right) .$

In other words, a ratio of the width of the virtual display to the width of the target element and a ratio of the height of the virtual display to the height of the target element may be separately determined, and a smaller value is used as a final scaling parameter R.

In some other embodiments, full-screen scaling may be alternatively performed. In this case, the determined scaling parameter 2 may include a transverse scaling parameter Rw and a longitudinal scaling parameter Rh, where $Rw = displayWidth / elementWidth , and Rh = displayHeight / elementHeight .$

In other words, a ratio of the width of the virtual display to the width of the target element may be determined, the ratio is used as a horizontal scaling parameter Rw, a ratio of the height of the virtual display to the height of the target element is determined, and the ratio is used as a vertical scaling parameter Rh.

Step 4: The mobile phone obtains the geometric transformation matrix 2 based on the offset parameter 2 and the scaling parameter 2.

**Then,** the mobile phone may composite the layer 1 to the virtual display based on the original parameter of the layer 1 and the obtained geometric transformation matrix 2.

It may be understood that, in a scenario in which uniform scaling is performed, if the mobile phone composites the layer 1 to the virtual display based on the original size and the start location of the layer 1 and a geometric transformation matrix having the offset parameter 2 and the scaling parameter R, namely, the geometric transformation matrix 2, the layer 1 may cover the virtual display in the at least one direction (for example, the transverse direction, the longitudinal direction, or the transverse direction and the longitudinal direction) by using the origin of the virtual display (for example, the upper left corner of the virtual display) as the coordinate origin.

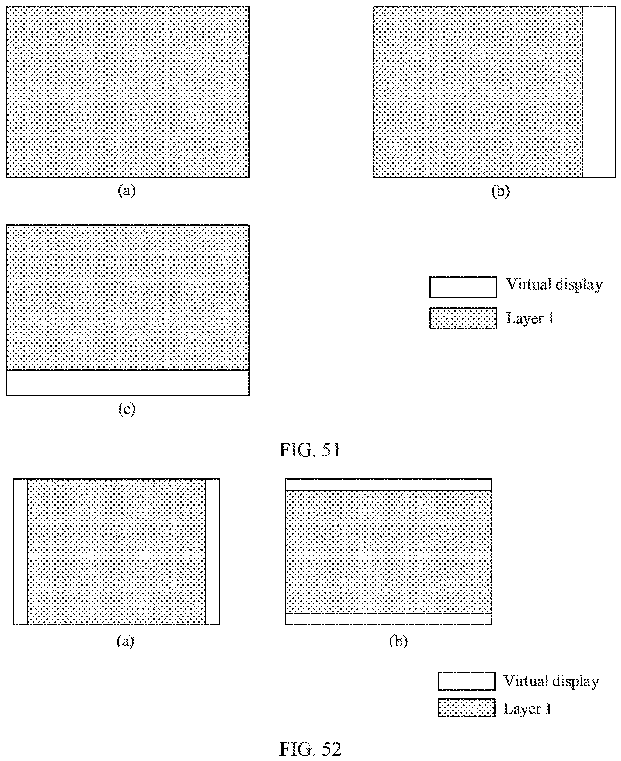

For example, with reference to FIG. 50 and FIG. 51, an example in which the layer 1 still includes only the target element, the ratio of the width of the target element to the width of the virtual display is displayWidth/elementWidth=a, and the ratio of the height of the target element to the height of the virtual display is displayHeight/elementHeight=b is used.

For example, on the basis of the original size and the start location of the layer 1, the mobile phone first offsets the layer 1 based on the offset parameter 2, and the location at which the layer 1 is composited to the virtual display after offsetting is shown in (b) in FIG. 50. Then, the mobile phone may scale an offset layer 1 based on the scaling parameter R.

If a=b, that is, the determined scaling parameter R=a=b, after the mobile phone performs uniform scaling on the layer 1 horizontally and vertically based on the case that the scaling parameter R=a=b, as shown in (a) in FIG. 51, the layer 1 may cover the virtual display horizontally and vertically by using the upper left corner of the virtual display as the coordinate origin. To be specific, the target element at the layer 1 may cover the virtual display horizontally and vertically by using the upper left corner of the virtual display as the coordinate origin.

If a>b, that is, the determined scaling parameter R=b, after the mobile phone performs uniform scaling on the layer 1 horizontally and vertically based on the case that the scaling parameter R=b, as shown in (b) in FIG. 51, the layer 1 may cover the virtual display vertically by using the upper left corner of the virtual display as the coordinate origin. To be specific, the target element at the layer 1 may cover the virtual display vertically by using the upper left corner of the virtual display as the coordinate origin.

If a<b, that is, the determined scaling parameter R=a, after the mobile phone performs uniform scaling on the layer 1 horizontally and vertically based on the case that the scaling parameter R=a, as shown in (c) in FIG. 51, the layer 1 may cover the virtual display horizontally by using the upper left corner of the virtual display as the coordinate origin. To be specific, the target element at the layer 1 may cover the virtual display horizontally by using the upper left corner of the virtual display as the coordinate origin.

In this way, after a compositing result in FIG. 51 is projected to the projection destination end as the projection content, the target element at the layer 1 may be maximized on the display of the projection destination end for presentation.

It may be understood that, because uniform scaling is performed on the layer 1 horizontally and vertically, content presented by the target element at the layer 1 is not stretched. In addition, it may be seen that, when a is unequal to b, the layer 1 may cover the virtual display in only one direction (for example, the transverse direction or the longitudinal direction). If the layer 1 (for example, a compositing result in (b) in FIG. 51 or (c) in FIG. 51) is projected to the projection destination end as the projection content, blank regions shown in (b) in FIG. 51 and (c) in FIG. 51 are presented as black borders at the projection destination end. After the foregoing processing, although the black border exists when the corresponding content is projected to the projection target end, because the size of the layer is scaled as much as possible to be consistent with a size of the virtual display through the foregoing processing, a range of the black border of the content projected to the projection target end can be narrowed down. In addition, an effect of maximizing the corresponding content at the projection destination end for presentation can be also achieved.

In addition, when a>b, if the compositing result shown in (b) in FIG. 51 is projected to the projection destination end as the projection content, an effect presented by the projection destination end is that a black border exists on one side (namely, the right side) of the target element. Therefore, in this embodiment, further, the offset parameter 2 may be further offset rightward in the transverse direction based on an offset, for example, dx. The offset dx=(displayWidth-elementWidth×R)/2 in the transverse direction. In this way, after the layer 1 is composited to the virtual display by using a geometric transformation matrix having the offset parameter 2+da and the scaling parameter 2, the layer 1 may be composited to a location shown in (a) in FIG. 52 on the virtual display (that is, displayed in the center of a horizontal line), and cover the virtual display longitudinally. Similarly, when a<b, if the compositing result shown in (c) in FIG. 51 is projected to the projection destination end as the projection content, an effect presented by the projection destination end is that a black border exists on one side (namely, the lower side) of the target element. Therefore, in this embodiment, further, the offset parameter 2 may be further offset downward in the longitudinal direction based on an offset, for example, dy. The offset dy=(displayHeight-elementHeight×R)/2 in the longitudinal direction. In this way, after the layer 1 is composited to the virtual display by using a geometric transformation matrix having the offset parameter 2+dy and the scaling parameter 2, the layer 1 may be composited to a location shown in (b) in FIG. 52 on the virtual display (that is, displayed in the center longitudinally), and cover the virtual display horizontally.

In a scenario in which full-screen scaling is performed, if the mobile phone composites the layer 1 to the virtual display based on the original size and the start location of the layer 1 and a geometric transformation matrix having the offset parameter 2, the horizontal scaling parameter Rw, and the vertical scaling parameter Rh, namely, the geometric transformation matrix 2, the layer 1 may cover the virtual display by using the origin of the virtual display (for example, the upper left corner of the virtual display) as the coordinate origin. To be specific, the target element at the layer 1 may cover the virtual display by using the upper left corner of the virtual display as the coordinate origin.

It may be understood that an example in which the horizontal scaling parameter Rw=displayWidth/elementWidth=a and the vertical scaling parameter Rh=displayHeight/elementHeight=b is used. When a=b, the content presented by the target element at the layer 1 may cover the virtual display without being stretched. When a>b, the content presented by the target element at the layer 1 may cover the virtual display when being stretched horizontally. When a<b, the content presented by the target element at the layer 1 may cover the virtual display when being stretched vertically.

The mobile phone may obtain the corresponding projection content after each layer on the current display interface is composited to the virtual display based on the original parameter and the corresponding geometric transformation matrix (for example, the geometric transformation matrix 1 or the geometric transformation matrix) of each layer. The mobile phone may send the projection content to the projection destination end. For example, the mobile phone may obtain data of the projection content, which may be referred to as projection data (or referred to as screen recording data). Then, the mobile phone may encode the projection data and send encoded projection data to the television used as the projection destination end. The television may receive the corresponding data, and may obtain the projection data after decoding the data. After obtaining the projection data, the television may draw a corresponding interface based on the projection data (for example, content on the interface is the same as the content presented by the target element), and display the interface on the display of the television. The content displayed by the television is the projection content Because the projection content is content on the virtual display, when the content is composited, the layer at which the target element is located has been scaled as much as possible to be consistent with the size of the virtual display, and therefore may be maximized on the television for presentation to the user.

In the foregoing embodiment, an example in which, when it may be determined, when the layer is composited to the virtual display, that the layer name of the layer matches the layer name obtained in S4702, the layer is composited to the virtual display by using the geometric transformation matrix 2, without using the geometric transformation matrix 1 corresponding to the layer 1 is used for description. In some other embodiments, in view of the fact that the mobile phone may have a plurality of virtual displays, when compositing the layer to the virtual display, the mobile phone may determine whether the layer name of the layer and an identifier (for example, an ID or a name) of a virtual display to which the layer needs to be composited separately match the layer name and the identifier of the virtual display that are obtained in S4702. The layer is composited, only when both the layer names and both the identifiers of the virtual displays match, to the virtual display by using the geometric transformation matrix 2. The identifier of the virtual display, for example, the ID or the name, may also be represented by using a string. Whether the identifier of the virtual display to which the layer is to be composited matches the identifier of the virtual display obtained in S4702 may be that two strings are equal, or may be that two strings are in an inclusion relationship. This is not specifically limited herein in this embodiment

It should be noted that the foregoing is described by using an example in which all the layers on the current display interface are used as the projection content and composited on the virtual display in the wireless projection scenario. In some other embodiments, in the wireless projection scenario, only one or more layers on the current display interface may be used as the projection content and composited on the virtual display. In such an embodiment, the foregoing compositing processing may be performed only on the layer used as the projection content, and another layer does not participate in compositing. The layer used as the projection content, namely, a layer participating in compositing on the virtual display, may be predefined, or may be specified by an application developer, or may be identified by the mobile phone (for example, the mobile phone may identify only the layer, at which the target element is located, to perform the foregoing compositing processing, and another layer does not participate in compositing).

For another example, in the cross-device drag scenario, the mobile phone may use, as the projection content, content of the layer at which the element that is dragged by the user and that is on the current display interface is located, and composite the projection content to the virtual display. A specific compositing processing process is similar to a process of compositing the layer in the foregoing wireless projection scenario. Details are not described herein again. A difference lies in that, the mobile phone does not composite the layer to the virtual display when determining that the layer name of the layer does not match the layer name obtained in S4702.

With reference to a scenario, the following describes S4701 to S4705 by using an example.

For example, with reference to FIG. 48, the user watches the video in full screen (or watches the video in landscape mode) by using the mobile phone. The black border exists when the video is displayed on mobile phone. For example, the black borders exist on the left and right sides, or the black borders exist on the upper and lower sides, or the black borders exist on the upper, lower, left, and right sides. The mobile phone may find, by using an ADB command, an identifier (for example, a layer name A) of a layer (for example, referred to as a layer A) at which a video element that is used to present the video and that is on a display interface is located. The mobile phone may further obtain an identifier (for example, an identifier B) of a virtual display, and the virtual display may be referred to as a virtual screen B. The virtual screen B is used to composite projection content in the wireless projection scenario.

After the user triggers wireless projection, the mobile phone may start wireless projection. After projection is started, the mobile phone uses content of each layer on a current display interface on the display of the mobile phone as the projection content, and composites the projection content to the virtual screen B. It can be teamed from the example shown in FIG. 48 that the current display interface includes the layer A of the video element. In addition, for example, the layer A includes only the video element. In a process in which the mobile phone performs data compositing, the mobile phone may match whether a layer name of a currently composited layer and an identifier of a virtual screen used to composite the layer are respectively the layer name A and the identifier B.

If the layer name of the currently composited layer does not match the layer name A, and/or the identifier of the virtual screen does not match the identifier B, it indicates that the current layer is not the layer A or current data compositing is not used for wireless projection. The mobile phone may composite the layer to a corresponding virtual screen based on an original parameter and a corresponding geometric transformation matrix 1 of the layer, and continue to perform matching on a next layer.

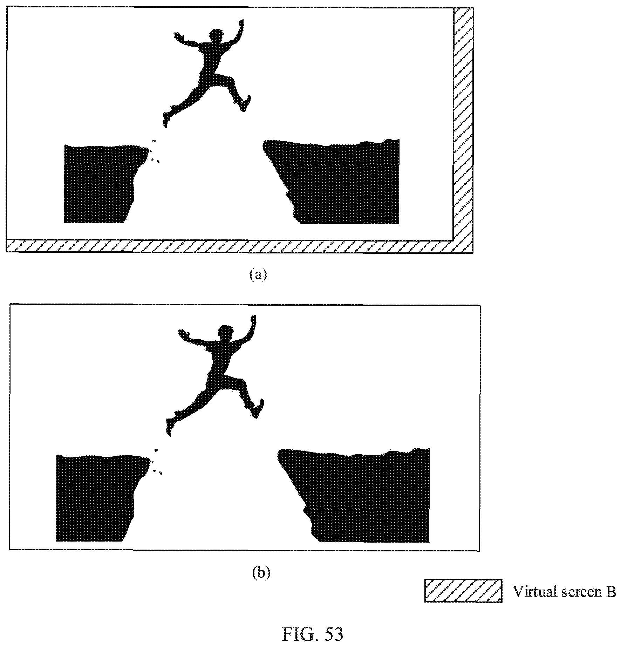

If the layer name of the currently composited layer matches the layer name A, and the identifier of the virtual screen matches the identifier B, it indicates that the current layer is the layer including the video element, namely, the layer A, and current data compositing is used for wireless projection. The mobile phone may obtain an initial display region, for example, referred to as a region V, of the layer A on the virtual screen B. The mobile phone obtains an offset parameter 2 based on coordinates of the upper left corner of the region V. A horizontal offset and a vertical offset that are included in the offset parameter 2 are respectively coordinates of the upper left corner of the region V relative to the upper left corner of the virtual display. After the layer A is composited to the virtual screen B by using a geometric transformation matrix having the offset parameter 2, as shown in (a) in FIG. 53, the upper left corner of the layer A, namely, the video element (for example, a video image shown in the figure) at the layer A, may coincide with the upper left corner of the virtual screen B. The mobile phone may obtain the width (videoWidth) and the height (videoHeight) of the video element at the layer A from a structure of the layer A. The mobile phone may further obtain the width (displayWidth) and the height (displayHeight) of the virtual screen B. The mobile phone may determine a scaling parameter 2 based on the width and the height of the video element and the width and the height of the virtual screen B. For example, uniform scaling is performed The mobile phone may determine that the scaling parameter 2 is R=Min(displayWidth/videoWidth, displayHeight/videoHeight). The mobile phone may obtain a geometric transformation matrix 2 based to the offset parameter 2 and the scaling parameter 2. For example, displayWidth/videoWidth=displayHeight/videoHeight. The mobile phone may composite the layer A to the virtual screen B based on an original parameter of the layer A and the obtained geometric transformation matrix 2. After the layer A is composited to the virtual screen B, as shown in (b) in FIG. 53, the layer A, namely, the video element (for example, the video image shown in the figure) at the layer A, may cover the virtual screen B horizontally and vertically by using the upper left corner of the virtual screen B as a coordinate origin. In addition, the layer A is uniformly scaled horizontally and vertically. Therefore, the video image is not stretched.

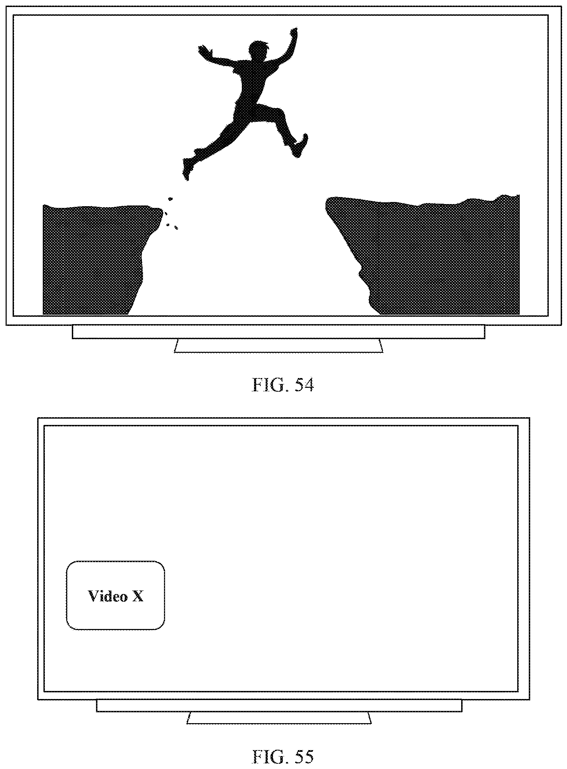

The mobile phone may obtain corresponding projection content after each layer on the current display interface on the display of the mobile phone is composited to the virtual screen B based on an original parameter and a corresponding geometric transformation matrix (for example, a geometric transformation matrix 1 or a geometric transformation matrix 2) of each layer. The mobile phone may send the projection content to the projection destination end, for example, the television. After receiving the projection content, the television may draw a corresponding video image based on the projection content, and display the video image on the television. For example, the television may provide a full-screen view to display the video image on the television. When uniform scaling is performed, an aspect ratio of a virtual display created by the mobile phone may be consistent with an aspect ratio of the full-screen view. It may be understood that, with reference to the example shown in FIG. 53, the video content that is uniformly scaled is presented on the television. In addition, as shown in FIG. 54, the television may display a video image without a black border, to maximize the video image at the projection destination end for presentation.

It should be noted that, in the foregoing example, an example in which uniform scaling is performed, in the wireless projection scenario, on a layer that needs to be processed is used for description. Alternatively, full-screen scaling may be performed on a layer that needs to be processed. This is not specifically limited herein in this embodiment

For another example, with reference to FIG. 18(a) to FIG. 18(c), when watching the video by using the video application on the mobile phone, the user performs a drag operation on a video element that presents the video. In the cross-device drag scenario, a layer at which the video element is located cannot cover a corresponding virtual display (where, as shown in FIG. 49, the layer cannot cover the virtual display horizontally, or cannot cover the virtual display vertically, or cannot cover the virtual display horizontally and vertically). Touch and hold listening is set on the video element in advance.

After the user performs the drag operation (which may include a touch and bold operation and a movement operation) on the video element, the mobile phone may generate a drag event. In addition, the mobile phone may further listen and detect, by using touch and hold listening set on the video element, a touch and hold event corresponding to the touch and hold operation. After listening and detecting the touch and hold event, the mobile phone may obtain drag data from the drag event, for example, may obtain the drag data through an interface of Surface View. The drag data includes a layer name (for example, referred to as a layer name A') of a layer (for example, a layer A') at which the dragged video element is located on a current interface. After listening and detecting the touch and hold event, the mobile phone may further create a virtual display. For example, the virtual display is referred to as a virtual screen B'. The virtual screen B' is used to composite projection content in the cross-device drag scenario. After the mobile phone determines that a drag intent of the user is cross-device drag, the mobile phone may start projection.

After projection is started, the mobile phone composites the layer A' on a current display interface on the display of the mobile phone to the virtual screen B'. In a process in which the mobile phone performs data compositing, the mobile phone may match whether a layer name of a currently composited layer and an identifier of a virtual screen used to composite the layer are respectively the layer name A' and the identifier B'.

If the layer name of the currently composited layer does not match the layer name A', and/or the identifier of the virtual screen does not match the identifier B', it indicates that the current layer is not the layer A' or current data compositing is not used for cross-device drag projection. The mobile phone may not perform compositing processing on the layer, and continue to perform matching on a next layer.

If the layer name of the currently composited layer matches the layer name A', and the identifier of the virtual screen matches the identifier B', it indicates that the current layer is the layer including the video element, namely, the layer A', and current data compositing is used for cross-device drag projection. The mobile phone may obtain an initial display region, for example, referred to as a region V', of the layer A' on the virtual screen B. The mobile phone obtains an offset parameter 2 based on coordinates of the upper left corner of the region V'. A horizontal offset and a vertical offset that are included in the offset parameter 2 are respectively coordinates of the upper left corner of the region V' relative to the upper left corner of the virtual display. After the layer A is composited to the virtual screen B by using a geometric transformation matrix having the offset parameter 2, the upper left corner of the layer A', namely, the video element at the layer A', may coincide with the upper left corner of the virtual screen B'. The mobile phone may obtain the width (videoWidth) and the height (videoHeight) of the video element at the layer A' from a structure of the layer A'. The mobile phone may further obtain the width (displayWidth) and the height (displayHeight) of the virtual screen B'. The mobile phone may determine a scaling parameter 2 based on the width and the height of the video element and the width and the height of the virtual screen B'. For example, full-screen scaling is performed. The mobile phone may determine that a horizontal scaling parameter Rw=displayWidth/videoWidth and a vertical scaling parameter Rh=displayHeight/videoHeight The mobile phone may obtain a geometric transformation matrix 2 based to the offset parameter 2, the horizontal scaling parameter Rw and the vertical scaling parameter Rh. The mobile phone may composite the layer A' to the virtual screen B' based on an original parameter of the layer A' and the obtained geometric transformation matrix 2. After the layer A' is composited to the virtual screen B', the layer A', namely, the video element at the layer A', may cover the virtual screen B' horizontally and vertically by using the upper left corner of the virtual screen B' as a coordinate origin.

After the layer ' including the video element that is dragged by the user is composited to the virtual screen B, the mobile phone may obtain corresponding projection content. The mobile phone may send the projection content to the projection destination end, for example, the television. In this way, after the television receives the projection content, the television may display, on the television based on the projection content, the video X carried by the video element. Compared with that in FIG. 20, as shown in FIG. 55, the television may display a video X without a black border on the current interface of the television, to maximize the video X at the projection destination end for presentation. For example, the television may provide a Surfaceview to display the video X on the television. When full-screen scaling is performed, an aspect ratio of a virtual display created by the mobile phone may be consistent with an aspect ratio of the Surfaceview.

In addition, as described in the foregoing embodiment, in this example, to improve chirality experience of the user during cross-device drag, the mobile phone may display the video X shown in FIG. 55 at the television end after receiving a drag release operation of the user. It may be understood that, in a drag process of the user, a partial region of a dragged object, for example, the video element, is displayed on the display of the mobile phone, and another partial region of the dragged object, for example, the video element, is hidden (or overflows the display). To give the user a visual effect of dragging the object from the mobile phone to the television, in a process of dragging the object, if a partial region of the object overflows the display, the object may be displayed on the mobile phone and the television at the same time. Specifically, a partial region of the dragged object is displayed on the mobile phone, and another partial region (the region that overflows the mobile phone) of the dragged object is displayed on the television. In addition, in this embodiment, when the region that overflows the display of the mobile phone and that is of the object is displayed on the television, a layer at which a target element in used projection content is located is also composited by using the geometric transformation matrix 2. Therefore, no black border exists in the video X in the displayed partial region.

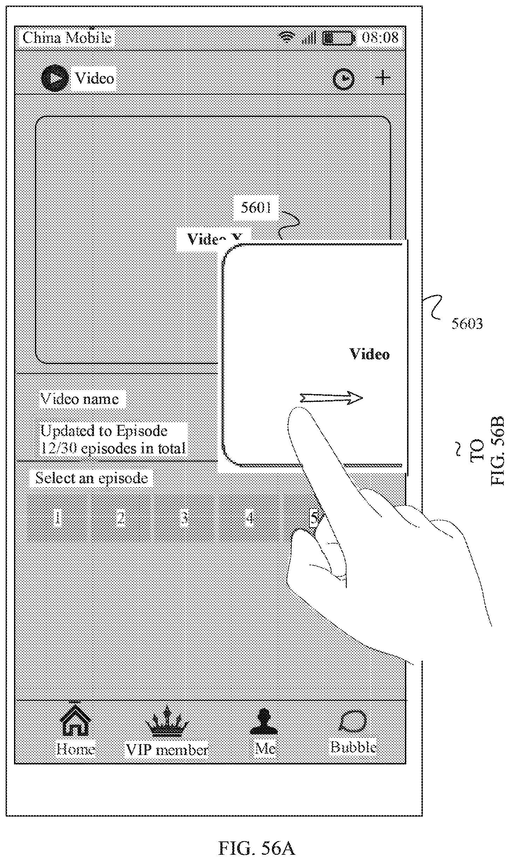

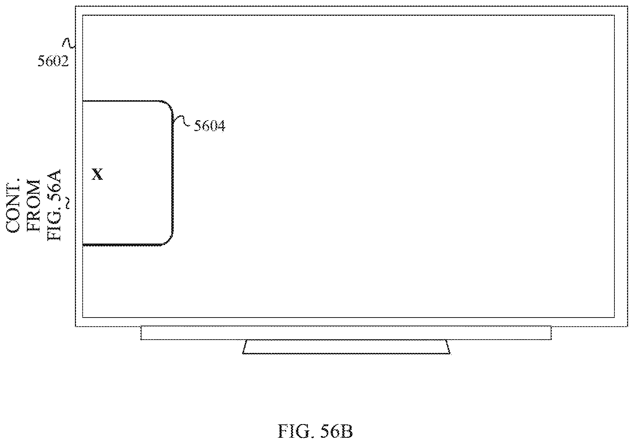

In an example, compared with that in FIG. 19, with reference to FIG. 56Aand FIG. 56B, as described in the foregoing embodiment, in the drag process, a specific implementation of displaying the dragged object (for example, the video element) on the mobile phone and the television at the same time may be as follows: The mobile phone not only needs to send the projection content to the television, but also needs to send, to the television, rectangle (rect) information of the video element and coordinate information of a corner (for example, any one of the upper left corner, the lower left corner, the upper right corner, and the lower right corner) of the video element in the drag process. The rectangle information of the video element includes coordinate information of the upper left corner, the upper right corner, the lower left corner, and the lower right corner of the first window when drag starts. In this way, the television may determine, based on the rectangle information of the video element, the coordinate information of the corner of the video element in the drag process, and resolution of the mobile phone, whether a video X 5601 presented by the video element has a region that overflows a display 5603 of the mobile phone. If the video X 5601 presented by the video element has the region that overflows the display 5603 of the mobile phone, the television may determine, based on the rectangle information of the video element, the coordinate information of the corner of the video element in the drag process, and the resolution of the mobile phone, information about a region that is of the video element and that can be correspondingly displayed on a display 5602 of the television (where content of the region is the same as that of the region that overflows the display 5603 of the mobile phone and that is of the object). The resolution of the mobile phone may be sent by the mobile phone to the tablet computer in a process in which the television establishes a connection to the mobile phone, or after the television successfully establishes a connection to the mobile phone. The television displays, on the display 5602 of the television based on the information about the determined region and the projection content, content 5604 of a corresponding region of the video X carried by the video element, and no black border exists. This implements maximizing a video image at the projection destination end for presentation.

It should be noted that, in the foregoing example, an example in which full-screen scaling is performed, in the cross-device drag scenario, on a layer that needs to be processed is used for description. Alternatively, uniform scaling may be performed on a layer that needs to be processed. This is not specifically limited herein in this embodiment. In the cross-device drag scenario, a specific implementation of dragging the picture-in-picture or the floating window is similar to the specific implementation of dragging the video element, to also maximize corresponding content in the picture-in-picture or the floating window at the projection destination end for presentation. Details are not described herein in this embodiment.

In the foregoing embodiment, an example in which the offset parameter 2 is determined based on the initial display area that is on the virtual display and that is of the layer at which the target element is located, and the scaling parameter 2 is determined based on the width and the height of the target element and the width and height of the virtual display, to maximize the target element at the projection destination end for presentation is used for description. In some other embodiments, the offset parameter 2 and the scaling parameter 2 may be alternatively determined based on rectangle information of the target element, to maximize the target element at the projection destination end for presentation. A specific implementation process is similar to implementations of S4701 to S4705 in the foregoing embodiment, and a difference lies in the following:
1. In S4702, the identifier of the layer 1 may not be obtained, and the mobile phone may obtain the rectangle (rect) information of the target element in S4702. The rectangle information corresponding to the target element includes coordinate information of the upper left corner, the upper right corner, the lower left corner, and the lower right corner of the target element in the display coordinate system of the virtual display. The rectangle information corresponding to the target element may be obtained in the following manner. For example, the rectangle information corresponding to the target element may be predefined, for example, predefined and stored in the mobile phone by the application developer, and specifically, may be defined by default as information about a region in which the target element is located on the display of the mobile phone. For another example, in the cross-device drag scenario, the rectangle information of the target element may be identified, based on an operation of the user, by the mobile phone after the user triggers drag. For example, if the user box-selects the dragged object, the rectangle information may be determined based on a region box-selected by the user. For still another example, the rectangle information corresponding to the target element may be alternatively automatically identified by the mobile phone. For example, the mobile phone may obtain a screenshot of the current interface, and identify the screenshot to identify a region in which the target element is located, to determine the rectangle information corresponding to the target element
2. In S4703, in a process of compositing the projection content after projection is started, the mobile phone composites all the layers on the current display interface on the virtual display based on the geometric transformation matrix 2. An offset parameter, namely, a horizontal offset parameter and a vertical offset parameter, that is included in the geometric transformation matrix 2 are respectively coordinates, relative to the origin of the virtual display (or the first corner, for example, the upper left corner of the virtual display), of a first corner, for example, the upper left corner, in the rectangular information corresponding to the target element. In addition, the mobile phone determines the scaling parameter based on the width and the height of a rectangle corresponding to the rectangle information and the width and the height of the virtual display. For example, the width (for example, represented by using rcetWidth) of the rectangle corresponding to the rectangle information may be a difference between a coordinate value (for example, xl) of the upper right corner on the X axis and a coordinate value (for example, x2) of the upper left corner on the X axis in the rectangle information, that is, rcetWitdh=x1-x2. The height (for example, represented by using rcetHcight) of the rectangle corresponding to the rectangle information is a difference between a coordinate value (for example, y1) of the lower left corner on the Y axis and a coordinate value (for example, y2) of the upper left corner on the Y axis in the rectangle information, that is, rcetHeight=y1-y2. The width of the virtual display is represented by using displayWidth, and the width of the virtual display is represented by using displayHeight. The scaling parameter may include the horizontal scaling parameter Rw and the vertical scaling parameter Rh. The horizontal scaling parameter Rw=displayWidth/rcetWidth, and the vertical scaling parameter Rh=displayHeight/rcetHeight. In this embodiment, this processing manner may be referred to as cropping scaling.

Other descriptions are similar to corresponding descriptions of S4701 to S4705. Details are not described herein again. This cropping scaling processing method can remove a black border that exists in the video element (for example, a black border exist in a video element on the Bilibili^{™} during a design). In addition, it should be noted that, in the cropping scaling processing manner, the identifier of the layer 1 may be alternatively obtained in S4702, and corresponding processing is performed only on the layer 1 in subsequent processing. This is not limited herein in this embodiment

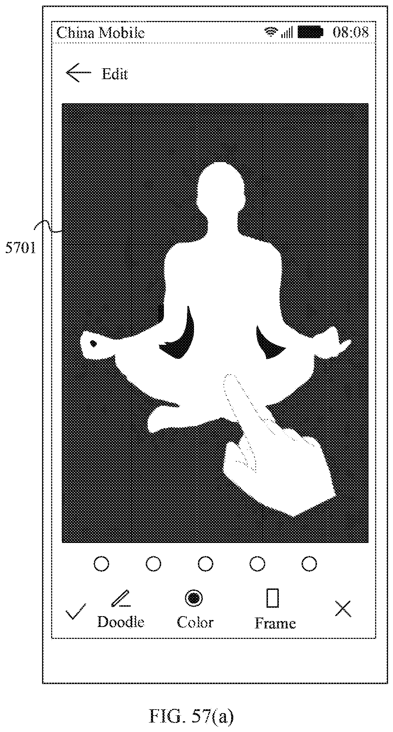

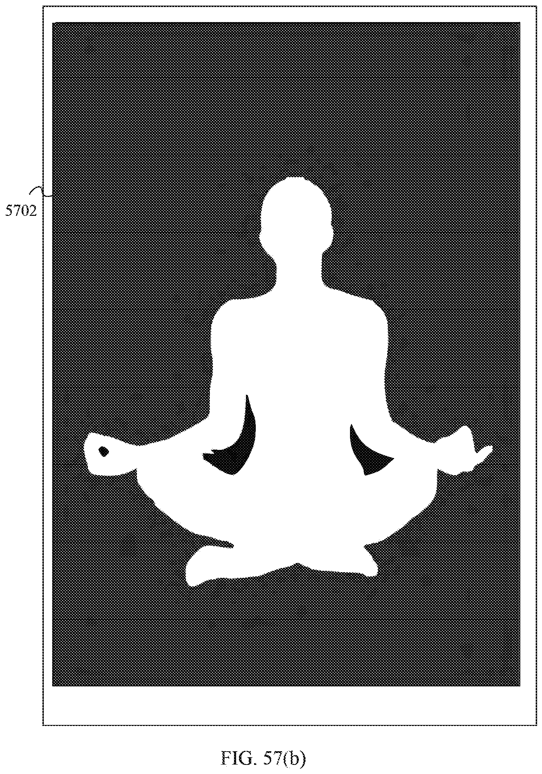

For example, with reference to FIG. 57(a) and FIG. 57(b), in the cross-device drag scenario, as shown in FIG. 57(a), when editing a picture 5701 by using a gallery application on the mobile phone, the user performs a drag operation on a view (or a canvas) that carries the picture 5701. Touch and hold listening is set on the view in advance.

After the user performs the drag operation (which may include a touch and hold operation and a movement operation) on the view, the mobile phone may generate a drag event. In addition, the mobile phone may further listen and detect, by using touch and hold listening set on the view, a touch and hold event corresponding to the touch and hold operation. After listening and detecting the touch and hold event, the mobile phone may obtain drag data from the drag event. The drag data includes rectangle information of the view. After listening and detecting the touch and hold event, the mobile phone may further create a virtual display. For example, the virtual display is referred to as a virtual screen C. An identifier of the virtual screen C is an identifier C. The virtual screen C' is used to composite projection content in the cross-device drag scenario. After the mobile phone determines that a drag intent of the user is cross-device drag, the mobile phone may start projection.

After projection is started, the mobile phone composites all layers on a current display interface on the display of the mobile phone to the virtual screen C. In a process in which the mobile phone performs data compositing, the mobile phone may match whether an identifier of a virtual screen used to composite the layer is the identifier C.

If an identifier of a virtual screen currently used for compositing does not match the identifier C, it indicates that current data compositing is not used for cross-device drag projection. The mobile phone may composite the layer to a corresponding virtual display based on an original parameter of the layer and a corresponding geometric transformation matrix 1, and continue to match a next layer.

If an identifier of a virtual screen currently used for compositing matches the identifier C, it indicates that current compositing is used for cross-device drag projection. The mobile phone may determine an offset parameter 2 based on coordinates of the upper left corner in the rectangle information of the view. A horizontal offset and a vertical offset included in the offset parameter 2 are respectively coordinates of the upper left corner of the view relative to the upper left corner of the virtual screen C. After the layer is composited to the virtual screen C by using a geometric transformation matrix having the offset parameter 2, the upper left corner of the view of the layer may coincide with the upper left corner of the virtual screen C. The mobile phone may determine the width and the height of the rect based on the rectangle information of the view, and the mobile phone may further obtain the width and the height of the virtual screen C. The mobile phone may determine the scaling parameter according to the width and height of a rect and the width and height of the virtual screen C. Cropping scaling is used as an example. The mobile phone may determine that a horizontal scaling parameter Rw=displayWidth/rectWidth and a Rh=displayHeight/rectHeight. The mobile phone may obtain a geometric transformation matrix 2 based to the offset parameter 2, the horizontal scaling parameter Rw and the vertical scaling parameter Rh. The mobile phone may composite the layer to the virtual screen C based on an original parameter of the layer and the obtained geometric transformation matrix 2. After the layer is composited to the virtual screen C, the view at the layer may cover the virtual screen C horizontally and vertically by using the upper left corner of the display C as a coordinate origin.

The mobile phone may obtain corresponding projection content after all the layers on the current display interface are composited to the virtual screen C based on original parameters and corresponding geometric transformation matrices 2 of all the layers. The mobile phone may send the projection content to the projection destination end, for example, the tablet computer. In this way, after receiving the projection content, the tablet computer may display, on the tablet computer based on the projection content, the picture carried by the view. In addition, as shown in FIG. 57(b), the tablet computer may display a cropped picture 5702 on the tablet computer, to maximize the picture at the projection destination end for presentation. For example, the tablet computer may provide a full-screen view to display the picture on the tablet computer. When cropping scaling is performed, an aspect ratio of a virtual display created by the mobile phone may be consistent with an aspect ratio of the full-screen view.

In addition, similar to that in descriptions in the example of dragging the video element, in a process of dragging the picture, if a partial region of the picture overflows the display of the mobile phone, the picture may be displayed on the mobile phone and the tablet computer at the same time. Specifically, a partial region of the dragged picture is displayed on the mobile phone, and another region (the region that overflows the mobile phone) of the dragged picture is displayed on the tablet computer. A specific implementation thereof is similar to a corresponding implementation in the example of dragging the video element In addition, in this embodiment, the cropped picture is displayed on the mobile phone and the tablet computer at the same time, to improve chirality experience of the user during cross-device drag.

It should be noted that, in the foregoing examples, examples in which, in the wireless projection scenario, uniform scaling (a processing manner 1) is used to maximize corresponding content at the projection destination end for presentation, in scenarios of cross-device drag of the video element, the picture-in-picture, and the floating window, full-screen scaling (a processing manner 2) is used to maximize corresponding content at the projection destination end for presentation, and in a scenario of cross-device drag of the picture or a scenario in which a target element at a layer cannot be identified, cropping scaling (a processing manner 3) is used to maximize corresponding content at the projection destination end for presentation are used for description In an actual implementation, a processing manner used in different scenarios is not limited to the foregoing examples, and any one of the three processing manners may be selected. Alternatively, in a corresponding scenario, a corresponding processing manner may be set in advance to process the layer that needs to be processed.

For example, processing capabilities, for example, may be respectively referred to as a uniform scaling capability, a full-screen scaling capability, and a cropping capability, that correspond to the three processing manners may be pre-configured on the mobile phone. When invoking a corresponding capability, the mobile phone may perform step 1 to step 4 to obtain a corresponding geometric transformation matrix 2. Corresponding processing modes, for example, respectively referred to as a uniform scaling mode, a full-screen scaling model, and a cropping mode, may be alternatively pre-configured on the mobile phone. In the wireless projection scenario, a processing mode may be set (for example, set by the user or set by default) to the uniform scaling mode. In this way, when the mobile phone needs to perform wireless projection, a uniform scaling capability may be invoked to remove a black border in one or two directions of a video presented by an element that needs to be projected, for example, a video element This not only ensures that the video is not scaled, to ensure an aspect ratio of the video, but also maximizes corresponding content at the projection destination end for presentation. In the scenarios of cross-device drag of the video element, the picture-in-picture, and the floating window, a processing mode may be set (for example, set by the user or set by default) to the full-screen scaling mode. In this way, when cross-device element drag is performed, a full-screen scaling capability may be invoked to remove black borders in two directions of a video presented by an element that needs to be projected, for example, a video element, a picture-in-picture, or a floating window, to maximize corresponding content at the projection destination end for presentation. In the scenario of cross-device drag of the picture or the scenario in which the target element at the layer cannot be identified, a processing mode may be set (for example, set by the user or set by default) to the cropping mode. In this way, in the corresponding scenario, a cropping capability may be invoked to obtain corresponding content through cropping and project the corresponding content to the projection destination end, to maximize the corresponding content at the projection destination end for representation. In addition, in the foregoing examples, examples in which the layer at which the target element is located is identified, and corresponding processing is performed on the layer are used for description. In some other embodiments, a specified layer may be alternatively processed. For example, the layer can be specified by an application developer or a system developer. Similarly, a layer composited on a specified virtual display may be alternatively processed. For example, the virtual display may be specified by a system developer. This is not specifically limited herein in this embodiment

By using the method provided in this embodiment, for an element displayed by the projection source end, a geometric transformation matrix corresponding to a layer at which the element is located may be re-determined, and is used to composite the layer to a virtual display. Because the re-determined geometric transformation matrix can scale the layer as much as possible to be consistent with a size of the virtual display, the element projected to the projection destination end can be maximized at the projection destination end for presentation to the user. For example, when the element displayed by the projection source end has a black border, the layer at which the element is located is scaled as much as possible to be consistent with the size of the virtual display, so that the layer covers the virtual display as much as possible, to remove or shrink the black border of the element projected to the projection destination end, so as to maximize the element, that is projected to the projection destination end, at the projection destination end for presentation. This improves user experience.

In the foregoing embodiment shown in FIG. 4 to FIG. 28(c), an example in which the input device of the terminal is the touchscreen is used to describe cross-device drag of the UI element when the plurality of terminals are collaboratively used. In some other embodiments of this application, in a scenario in which the plurality of terminals are collaboratively used, cross-device object drag may be alternatively implemented by using a keyboard and mouse sharing technology. For example, in a scenario in which a mobile phone and a PC are collaboratively used, the keyboard and mouse sharing technology may be used to implement drag, from the mobile phone to the PC, of a UI element, for example, an application icon or an application interface, or a resource type object, for example, a file, a text, or a folder, on the mobile phone. This improves usage efficiency of collaboratively using the PC and the mobile phone, and increases interaction between terminals when the plurality of terminals are collaboratively used.

For example, in the scenario in which the plurality of terminals are collaboratively used, by using the keyboard and mouse sharing technology, a same input device (for example, a mouse or a touchpad) may be used to control all the terminals. For example, cross-device drag of an object, for example, an application icon or an application interface, may be implemented. For another example, content (or a resource type object), for example, a text or a file, may be mutually transferred between the plurality of terminals, that are collaboratively used, in a drag manner and the user is allowed to use these terminals to process the transferred content. This increases interaction between the terminals when the plurality of terminals are collaboratively used, and improves user experience.

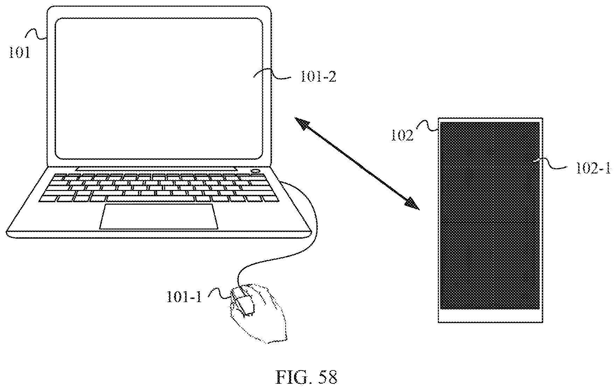

Refer to FIG. 58 to FIG. 80. The following specifically describes a process of cross-device drag by using a keyboard and mouse sharing technology.

With reference to FIG. 1A, FIG. 58 is a simplified schematic diagram of a system architecture for implementing cross-device drag by using a keyboard and mouse sharing technology. As shown in FIG. 58, in the system architecture, the first terminal 101 (where a PC is used as an example in FIG. 58) is connected to an input device 101-1 (as shown in FIG. 58), or includes an input device 101-1 (not shown in FIG. 58). In an example, the input device 101-1 may be a mouse, a touchpad, or the like. In FIG. 58, for example, the input device 101-1 is a mouse.

The first terminal 101 and the second terminal 102 (where a mobile phone is used as an example in FIG. 58) may establish a connection in a wired or wireless manner. After the first terminal 101 is connected to the second terminal 102, by using the keyboard and mouse sharing technology, a user may control both the first terminal 101 and the second terminal 102 by using one input device, for example, the input device 101-1. In other words, the user may not only control the first terminal 101 by using the input device 101-1 of the first terminal 101, but also share the input device 101-1 of the first terminal 101 with the second terminal 102, so that the user controls the second terminal 102.

For example, one or more applications are installed on the second terminal 102. The second terminal 102 may display an icon of a corresponding application on a display 102-1 of the second terminal 102. In this embodiment, after the first terminal 101 establishes the connection to the second terminal 102, by using the keyboard and mouse sharing technology, the user may drag the icon of the application from the display 102-1 of the second terminal 102 to the display 101-2 of the first terminal 101 by using the input device 101-1.

For another example, an interface of an application is displayed on a display 102-1 of the second terminal 102. In this embodiment, after the first terminal 101 establishes the connection to the second terminal 102, by using the keyboard and mouse sharing technology, the user may drag the interface of the application from the display 102-1 of the second terminal 102 to a display 101-2 of the first terminal 101 by using the input device 101-1.

For another example, the input device 101-1 is a mouse. After the first terminal 101 is connected to the second terminal 102, on a premise that projection is not started, by using the keyboard and mouse sharing technology, the user may drag content (or a resource type object), for example, a text or a file of the first terminal 101, to the second terminal 102 in a drag manner by using the mouse. The user may further drag content, for example, a text or a file of the second terminal 102, to the first terminal 101 in a drag manner by using the mouse.

It should be noted that, in this embodiment of this application, on a premise that projection is not started, content drag between two terminals can be implemented, and content drag between three or more terminals can be further implemented. For example, when the second terminal 102 further establishes a connection to another device, for example, referred to as a third terminal, in this embodiment of this application, on the premise that projection is not started, by using the keyboard and mouse sharing technology, after dragging content, for example, a text or a file, from one terminal to another device, the user may continue to drag the content to the third terminal in a drag manner. The example in which the input device 101-1 is the mouse is still used. On the premise that projection is not started, by using the mouse, after dragging content, for example, a text or a file of the first terminal 101, to the second terminal 102 in a drag manner, the user may continue to drag the content to the third terminal in a drag manner. After the user releases the mouse, the content drag is completed.

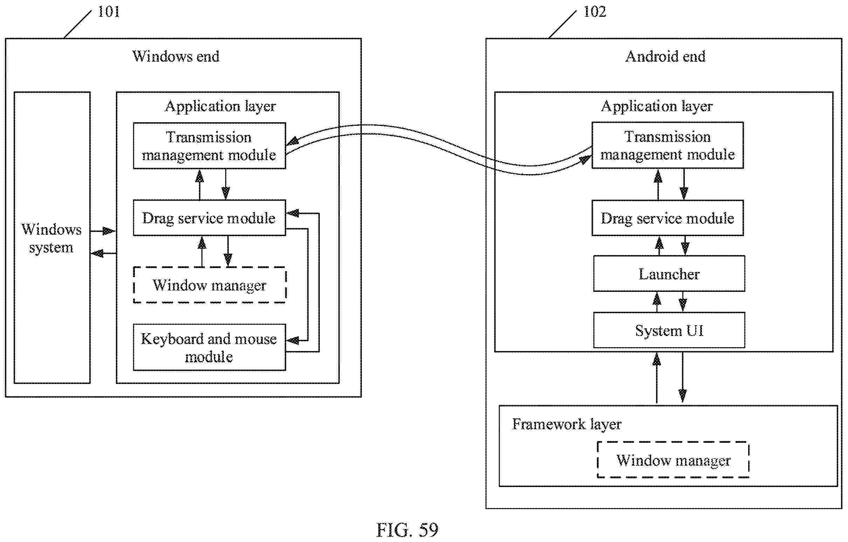

With reference to FIG. 58 and the software architecture shown in FIG. 3, a software architecture for implementing cross-device drag by using a keyboard and mouse sharing technology is described. Refer to FIG. 59. For example, a software system of the first terminal 101 is a Windows system, and a software system of the second terminal 102 is an Android system.

With reference to FIG. 3, as shown in FIG. 59, when the software system of the first terminal 101 is the Windows system, a software architecture of the first terminal 101 may include no framework layer, but includes the application layer and a Windows system (Windows shell). An application at the application layer of the first terminal 101 may directly interact with the Windows system. For example, in addition to the application and the drag service module, the application layer may further include a keyboard and mouse module and a transmission management module. In addition, the window manager may be included in the application layer of the first terminal 101.

When the software system of the second terminal 102 is the Android system, the software system of the second terminal 102 may be a layered architecture, an event-driven architecture, a microkernel architecture, a microservice architecture, or a cloud architecture. For example, the software system of the second terminal 102 is a layered architecture in the layered architecture, software is divided into several layers, and each layer has a clear role and task. The layers communicate with each other through a software interface. In some embodiments, with reference to FIG. 3, as shown in FIG. 59, the second terminal 102 may include the application layer and the framework layer (framework, FWK). In addition to an application, the drag service module, the launcher, and the system UI, the application layer may further include a transmission management module. The framework layer is mainly responsible for providing an application programming interface (application programming interface, API) and a programming framework for the application at the application layer.

**In a scenario** in which a plurality of terminals are collaboratively used, to improve usage efficiency, a user may control the plurality of terminals by using a same input device. In this embodiment, with reference to FIG. 58, for example, the plurality of terminals include the first terminal 101 and the second terminal 102, and the input device 101-1 of the first terminal 101 is a mouse. After the first terminal 101 establishes a connection to the second terminal 102, based on the foregoing software architecture and by using the keyboard and mouse sharing technology, the user may control the first terminal 101 and the second terminal 102 by using the input device 101-1 of the first terminal 101. For example, in some embodiments, the user may drag, from the second terminal 102 to the first terminal 101 by using the input device 101-1 of the first terminal 101, an icon of an application or an interface of an application displayed by the second terminal 102. For another example, in some other embodiments, on a premise that projection is not started, the user may transfer content, for example, a file or a text of the first terminal 201, to the second terminal 202 in a drag manner by using the input device 201-1 of the first terminal 201. Content, for example, a file or a text of the second terminal 202, may be further transferred to the first terminal 201 in a drag manner. In other words, on the premise that projection is not started, the user may use the input device 201-1 of the first terminal 201 to implement bidirectional drag of the content, for example, a file or a text in an application, between the first terminal 201 and the second terminal 202 in the drag manner.

The keyboard and mouse sharing technology may be a technology in which an input device (for example, a mouse or a touchpad) of a terminal is used to control another terminal.

It should be noted that, in this embodiment, the first terminal 101 and the second terminal 102 each include the transmission management module, and communication between the first terminal 101 and the second terminal 102 may be implemented by using the transmission management module. In some other embodiments, the drag service module may also have a function of communicating with another terminal. To be specific, the first terminal 101 and the second terminal 102 each may include no transmission management module, and communication between the first terminal 101 and the second terminal 102 may be implemented by using the drag service module. This is not specifically limited herein in this embodiment For ease of description, in the following embodiment, an example in which communication between the first terminal 101 and the second terminal 102 is implemented by using the transmission management module is used for description.

In some embodiments, with reference to FIG. 58 and FIG. 59, the following describes in detail a method provided in this embodiment with reference to the accompanying drawings by using an example in which the first terminal 101 is a PC, the second terminal 102 is a mobile phone, and the input device 101-1 is a mouse. It should be noted that, in this embodiment of this application, the first terminal and the second terminal are merely intended to distinguish between two different devices. In some embodiments, nouns "first terminal" and "second terminal" used to describe different devices may also be interchanged. For example, in this embodiment, the first terminal 101 may also be referred to as a second terminal (for example, a PC), and the second terminal 102 may also be referred to as a first terminal (for example, a mobile phone). This is not specifically limited herein in this embodiment.

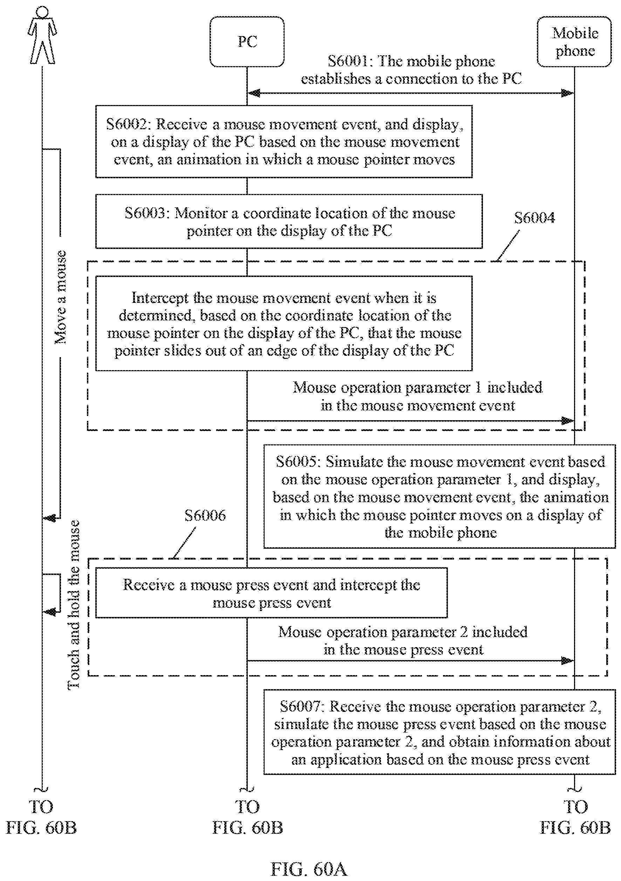

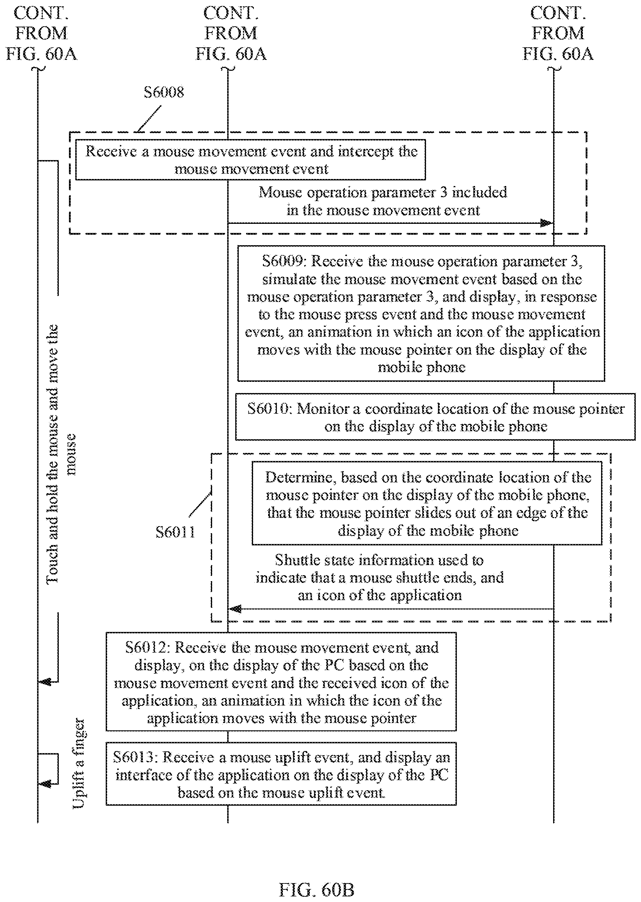

FIG. 60A and FIG. 60B is a schematic flowchart of an object drag method according to an embodiment of this application. In this embodiment, an implementation process in which a user drags, by using the mouse shared by the PC, an icon of an application displayed by the mobile phone (where the icon of the application is a dragged object) from the mobile phone to the PC is described. As shown in FIG. 60A and FIG. 60B, the method may include the following S6001 to S6013.

S6001: The mobile phone establishes a connection to the PC.

For specific descriptions of establishing the connection to the PC by the mobile phone, refer to specific descriptions of corresponding content in the embodiments shown in FIG. 29 and FIG. 47. Details are not described herein again.

After the mobile phone successfully establishes the connection to the PC, the mobile phone and the PC may be collaboratively used. To improve collaboration usage efficiency, the user may use an input device, for example, the mouse of the PC, to control both the PC and the mobile phone.

In an example implementation, when a keyboard and mouse sharing mode of the PC is enabled, one input device may be used to control both the PC and the mobile phone.

For example, in some embodiments, after another terminal successfully establishes a connection to the PC, the PC may display a pop-up window. The pop-up window is used to ask the user whether to enable the keyboard and mouse sharing mode. If an operation of selecting, by the user, to enable the keyboard and mouse sharing mode is received, the PC may enable the keyboard and mouse sharing mode.

After enabling the keyboard and mouse sharing mode, the PC may notify all terminals establishing connections to the PC that the keyboard and mouse sharing mode is enabled. For example, the PC establishes the connection to the mobile phone. In this case, the PC notifies the mobile phone that the keyboard and mouse sharing mode is enabled. After receiving the notification (for example, referred to as a notification message), the mobile phone may create a virtual input device. The virtual input device has a same function as a conventional input device, for example, a mouse or a touchpad, and may be used by the mobile phone to simulate a corresponding input event. For example, the input device is the mouse. The virtual input device created by the mobile phone has a same function as a conventional mouse, may be considered as a mouse shared by the PC with the mobile phone, and can be used to simulate a mouse event at the mobile phone end, to implement control of the mouse of the PC on the mobile phone. For example, an operating system of the mobile phone is an Android system. The mobile phone may use a uinput capability of Linux to create the virtual input device, where uinput is a kernel layer module, and may simulate an input device. By writing /dev/uinput (or /dev/input/uinput) to a device, a process may create a virtual input device with a specific function. Once the virtual input device is created, the virtual input device may simulate a corresponding event. Similarly, the another terminal that establishes the connection to the PC also creates a virtual input device based on the received notification message. It should be noted that, if an operating system of the terminal that receives the notification message is an Android system, the virtual input device may be created by using a uinput capability of Linux, or the virtual input device may be created by using a human interface device (human interface device, HID) protocol. If an operating system of the terminal that receives the notification message is another operating system, for example, an iOS system or a Windows system, the virtual input device may be created by using an HID protocol In addition, in the foregoing embodiment, an example in which the terminal that establishes the connection to the PC creates the virtual input device after receiving the notification message used to notify that the keyboard and mouse sharing mode of the PC is enabled is used for description. In some other embodiments, after receiving the notification message, the terminal that is connected to the PC may alternatively display a pop-up window to ask the user whether the user wants to use the input device of the PC to control this device. If an operation of selecting, by the user, to use the input device of the PC to control this device is received, the virtual input device is created. Otherwise, the virtual input device is not created.

For another example, in some other embodiments, for example, after the mobile phone establishes the connection to the PC, the PC automatically enables the keyboard and mouse sharing mode, and the user does not need to manually enable the keyboard and mouse sharing mode. For example, after another terminal, for example, the mobile phone, establishes a connection to the PC, may also automatically create a virtual input device, and the PC does not need to send a notification message. Alternatively, after establishing a connection to the PC, another terminal may first display a pop-up window to ask the user whether the user wants to use the input device of the PC to control this device. Then, if an operation of selecting, by the user, to use the input device of the PC to control this device is received, a virtual input device is automatically created. Otherwise, a virtual input device is not created.

In addition, with reference to FIG. 58, because the mouse is the input device of the PC, after the another terminal, for example, the mobile phone, establishes the connection to the PC, generally, the PC temporarily responds to an operation of the mouse, or in other words, the user may temporarily control the PC by using the mouse. In this embodiment, after enabling the keyboard and mouse sharing mode, the PC may further trigger, when determining that a mouse shuttle condition is met, the another terminal that creates the virtual input device and that establishes the connection to the PC, for example, the mobile phone, to respond to the operation of the mouse. In other words, after the mouse shuttle condition is met, the user may use the mouse to control the another terminal that creates the virtual input device and that establishes the connection to the PC, for example, the mobile phone.

For example, the mouse shuttle condition may be that a mouse pointer that is correspondingly displayed on a display of the PC and that is of the mouse slides over an edge of the display of the PC. In other words, the user may move the mouse, so that the mouse pointer that is correspondingly displayed on the display of the PC and that is of the mouse slides over the edge of the display of the PC, to trigger the another terminal, that creates the virtual input device and that establishes the connection to the PC, to respond to the operation of the mouse.

In an example implementation, after enabling the keyboard and mouse sharing mode, the PC may enable input (input) listening and mount a hook (HOOK). Input listening may be used to listen to relative displacement and a coordinate location of the mouse pointer After a mouse shuttle starts, the mounted hook may be used to intercept a corresponding input event (or shield a corresponding input event). For example, the input device is the mouse. The input event may be a mouse event (or shielding a mouse event). In this way, the mouse event is not transmitted to a Windows system of the PC after being received by a keyboard and mouse module of the PC. The mounted hook may also be used to capture a parameter in the intercepted input event, for example, the mouse event, after the mouse shuttle starts. The PC may listen to the relative displacement and the coordinate location of the mouse pointer by using input listening, and determine, based on listened and detected data, whether the mouse shuttle condition is met After it is determined that the mouse shuttle condition is met, the mounted hook intercepts the mouse event, captures an operation parameter in the mouse event, and sends the captured operation parameter to the another terminal that creates the virtual input device and that is connected to the PC, so that the terminal simulates the corresponding input event, for example, the mouse event, by using the created virtual input device, to respond to the corresponding input event. In other words, the another terminal that creates the virtual input device and that is connected to the PC responds to the operation of the mouse.

Certainly, another manner (for example, registering RAWINPUT in the PC) may be alternatively used to intercept the input event and capture the operation parameter in the input event. Alternatively, different manners may be respectively used to intercept the input event and capture the operation parameter in the input event. For example, the input device is the mouse. After enabling the keyboard and mouse sharing mode, the PC may mount the hook and register RAWINPUT. After the mouse shuttle starts, the mounted hook may be used to intercept the mouse event (or shield the mouse event), and registered RAWINPUT may be used to capture the operation parameter in the intercepted mouse event. A specific implementation of intercepting the mouse event and capturing the operation parameter in the mouse event is not limited herein in this embodiment For ease of description, in the following embodiment, an example in which the mounted hook is used to intercept the input event and capture the operation parameter in the input event is used for description.

For example, the user wants to drag the icon (icon) of the application displayed by the mobile phone from the mobile phone to the PC. A process of triggering the another terminal, that creates the virtual input device and that is connected to the PC, for example, the mobile phone, to respond to the operation of the mouse may include the following S6002 to S6004.

S6002: The PC receives a mouse movement event, and displays, on the display of the PC based on the mouse movement event, an animation in which the mouse pointer moves.

It should be noted that the mouse pointer in this embodiment may also be referred to as a cursor. The cursor may be an image, and the cursor may be dynamic or static. Cursor styles of the cursor may also be different in different cases. In this embodiment, the mouse pointer is used as an example for description. The mouse pointer displayed on the display of the PC may be the second cursor in this application.

S6003: The PC monitors a coordinate location of the mouse pointer on the display of the PC.

S6004: When determining, based on the coordinate location of the mouse pointer on the display of the PC, that the mouse pointer slides out of the edge of the display of the PC, the PC intercepts the mouse movement event, and sends a mouse operation parameter 1 included in the mouse movement event to the mobile phone.

In this embodiment, after the keyboard and mouse sharing mode is enabled, when the user wants to use the mouse to control the another terminal that creates the virtual input device and that is connected to the PC, for example, the mobile phone, for example, wants to drag the icon of the application displayed on the mobile phone from the mobile phone to the PC, the user may continuously move the mouse in a same direction, so that the mouse pointer correspondingly displayed on the display of the PC slides over (or slides out of) the edge of the display of the PC, that is, the mouse shuttle condition is triggered.

For example, the PC may determine the coordinate location of the mouse pointer on the display of the PC based on an initial location and the relative displacement of the mouse pointer, to determine whether the mouse pointer slides out of the edge of the display of the PC.

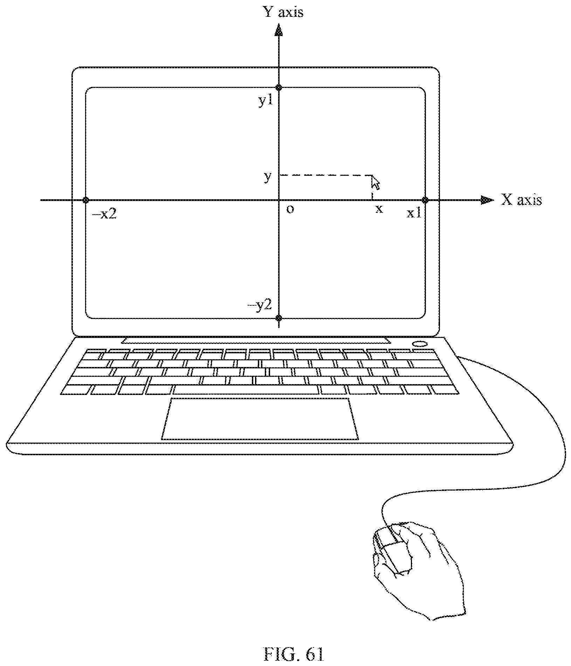

The initial location of the mouse pointer may be a coordinate location of the mouse pointer on the display of the PC when the mouse starts to move, or a coordinate location of the mouse pointer on the display of the PC before the mouse starts to move. The initial location of the mouse pointer may be specifically a coordinate location in a coordinate system in which the upper left corner of the display of the PC is used as a coordinate origin, an X axis points from the upper left corner to the right edge of the display of the PC, and a Y axis points from the upper left corner to the lower edge of the display of the PC. For example, a specific process in which the PC determines whether the mouse pointer slides out of the edge of the display of the PC may be as follows: With reference to FIG. 61, the PC may establish a coordinate system in which the initial coordinate location is used as a coordinate origin (for example, a location o shown in FIG. 61), an X axis points from the coordinate origin o to the right edge of the display of the PC, and a Y axis points from the coordinate origin o to the upper edge of the display of the PC. The PC may determine a coordinate value of each edge of the display of the PC in the coordinate system. The coordinate value of each edge of the display of the PC in the coordinate system may be determined based on resolution of the display of the PC and the initial location of the mouse pointer. For example, as shown in FIG. 61, in the coordinate system, a coordinate value of the right edge of the display of the PC on the X axis is x1, a coordinate value of the left edge of the display of the PC on the X axis is -x2, a coordinate value of the upper edge of the display of the PC on the Y axis is y1, and a coordinate value of the lower edge of the display of the PC on the Y axis is -y2. After the mouse moves, the mouse reports the relative displacement corresponding to the mouse pointer to the PC. The PC may calculate, based on the relative displacement reported by the mouse, a coordinate location (x, y) of the mouse pointer on the display of the PC after the mouse moves. The PC may determine, based on the coordinate location (x, y), whether the mouse pointer slides out of the edge of the display of the PC. For example, if a coordinate value x of the mouse pointer on the X axis is greater than x1, it may be determined that the mouse pointer slides out of the right edge of the display of the PC. If a coordinate value x of the mouse pointer on the X axis is less than -x2, it may be determined that the mouse pointer slides out of the left edge of the display of the PC. If a coordinate value y of the mouse pointer on the Y axis is greater than y1, it may be determined that the mouse pointer slides out of the upper edge of the display of the PC. If a coordinate value y of the mouse pointer on the Y axis is less than -y2, it may be determined that the mouse pointer slides out of the lower edge of the display of the PC.

After it is determined that the mouse pointer slides out of the edge of the display of the PC, that is, the mouse shuttle condition is triggered, if the user continues to operate the input device of the PC, for example, the mouse, the PC may send, to the another terminal that creates the virtual input device, data about the operation that is input by the user by using the input device of the PC. For example, after the user inputs the operation by using the input device of the PC, the PC may intercept a received corresponding input event, for example, a mouse movement event, a mouse press event, or a mouse uplift event, and transmit an operation parameter included in the intercepted input event, for example, a mouse operation parameter, to the another terminal that creates the virtual input device and that is connected to the PC, so that the terminal responds to the operation of the input device of the PC, for example, the mouse. For example, the input event is a mouse event. An operation parameter (for example, a mouse operation parameter) included in the input event (or the mouse event) may include a mouse button flag bit (which is used to indicate which operation of press, uplift, movement, or scroll wheel scrolling is performed by the user on the mouse), coordinate information (which is used to indicate an X coordinate and a Y coordinate for which the mouse moves when the user moves the mouse), scroll wheel information (which is used to indicate an X-axis distance and a Y-axis distance at which a scroll wheel scrolls when the user operates the scroll wheel of the mouse), and button location information (which is used to indicate which button of a left button, a middle button, or a right button of the mouse is operated by the user).

In some embodiments, if there is only one device that is connected to the PC, for example, the mobile phone, and the mobile phone creates the virtual input device, the PC may transmit the corresponding operation parameter to the mobile phone, so that the mobile phone responds to the operation of the input device of the PC, for example, the mouse. If there are a plurality of devices that are connected to the PC, and some or all of the plurality of devices create virtual input devices, the PC may display a list option on the display of the PC when determining that the mouse shuttle condition is triggered. The list option includes an identifier of the device that creates the virtual input device in the devices that are connected to the PC (for example, includes an identifier of the mobile phone). The PC may determine, based on a selection of the user, a device that responds to the operation of the input device of the PC. For example, the user selects the identifier of the mobile phone. In this case, the PC may send the corresponding operation parameter to the mobile phone, so that the mobile phone responds to the operation of the input device of the PC. For example, after receiving the corresponding operation parameter, the mobile phone may simulate the corresponding input device, for example, the mouse event, and correspondingly responds, that is, the mobile phone responds to the operation of the input device of the PC. In this embodiment, after completing creation of the virtual input device, the device that is connected to the PC may send, to the PC, an indication message indicating that the virtual input device is successfully created The PC may obtain, based on the received indication message, which devices in the devices that are connected to the PC successfully create the virtual input devices, and display the list options based on the received indication message. It should be noted that, for a specific rule for displaying the list option by the PC, refer to specific descriptions of content related to the recommended device list in the embodiment shown in FIG. 4. Details are not described herein again.

In some other embodiments, a shuttle relationship may be pre-configured. If there are a plurality of devices that are connected to the PC, and some or all of the plurality of devices establish virtual input devices, a device to which the mouse shuttles may be determined based on the pre-configured shuttle relationship, that is, a device which responds to the operation of the input device of the PC may be determined. For example, the plurality of devices that are connected to the PC include the mobile phone, and the mobile phone creates the virtual input device. A pre-configured shuttle relationship is that the mouse pointer slides out from the left side (or the left edge) of the display of the PC, and the mouse shuttles to the mobile phone. In this case, when the user moves the mouse, so that the mouse pointer slides over the left edge of the display of the PC, the PC may not only determine that a mouse shuttle starts, but also determine that the mouse shuttles to the mobile phone. To be specific, the PC may send a corresponding operation parameter to the mobile phone, so that the mobile phone responds to the operation of the input device of the PC. Certainly, if there is one device that is connected to the PC, and the device creates a virtual input device, whether the mouse shuttles to the device may be also determined based on a pre-configured shuttle relationship. For example, the pre-configured shuttle relationship is that the mouse pointer slides out from the left edge of the display of the PC. In this case, the mouse shuttles to the mobile phone. However, after the user moves the mouse, so that the mouse pointer slides over the right edge of the display of the PC, it may be determined that the mouse does not shuttle to the mobile phone. In some other embodiments, a device to which the mouse shuttles may be determined by identifying a device location. For example, the input device is the mouse. The user presses and moves the mouse, so that the mouse pointer slides over the left edge of the display of the PC. In this case, a positioning technology, for example, Bluetooth, UWB, an ultrasonic wave, or location measurement, may be used to identify a device location around the PC. For example, the PC identifies that the mobile phone is on the left of the PC, it may be determined that the mouse shuttles to the mobile phone. It should be noted that, for a specific implementation of identifying the device location by using location measurement, refer to specific descriptions of corresponding content in the embodiment shown in FIG. 38 to FIG. 44B. Details are not described herein again.

The shuttle relationship may be configured in advance by the user by using a configuration file, or a configuration interface for configuring the shuttle relationship may be provided for the user, and the user may configure the shuttle relationship in advance by using the configuration interface. For example, the user configures a shuttle relationship of the mobile phone by using an interface. The PC receives an operation of opening a configuration interface by the user, and displays the configuration interface. The configuration interface includes an identifier of the PC (for example, an icon of the PC) and the identifier of the mobile phone (for example, an icon of the mobile phone). The user may configure the shuttle relationship by dragging the two identifiers. In an example, if the user places the identifier of the mobile phone on the left side of the identifier of the PC, the PC may determine that the mouse shuttles to the mobile phone when the mouse pointer slides over the left edge of the display of the PC. If the user places the identifier of the mobile phone on the right side of the identifier of the PC, the PC may determine that the mouse shuttles to the mobile phone when the mouse pointer slides over the right edge of the display of the PC. When there are a plurality of devices, a shuttle relationship of each device may be configured in a pre-configuration manner. In the following embodiments, an example in which it is determined that the mouse shuttles to the mobile phone is used for description. It should be noted that, for the two implementations of determining, based on the pre-configured shuttle relationship and the identified device location, the device to which the mouse shuttles, S6001 may be performed before the mouse shuttle is triggered, or may be performed after the mouse shuttle is triggered. This is not specifically limited herein in this embodiment.

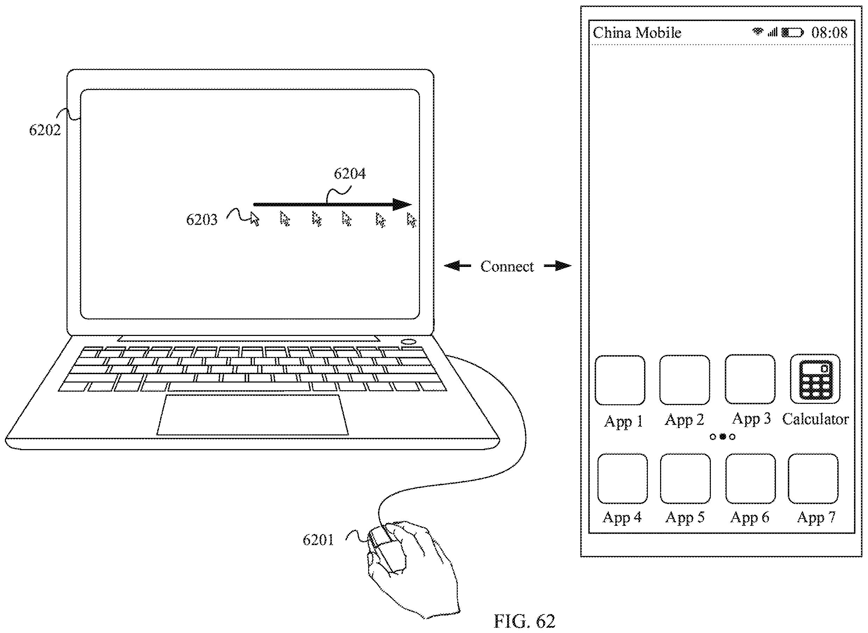

For example, in a process in which the user input a movement operation by using the input device of the PC, for example, the user moves the mouse, the keyboard and mouse module of the PC may receive a corresponding input event, for example, a movement event. The movement event may be referred to as a mouse movement event. In this case, because the mouse shuttle condition is not triggered, the hook does not intercept the input event, that is, does not intercept the mouse movement event The mouse movement event is transmitted to the Windows system of the PC. Based on the received mouse movement event, the Windows system of the PC may draw an animation in which the mouse pointer moves and display the animation on the display of the PC. For example, as shown in FIG. 62, as a mouse 6201 moves, the PC correspondingly displays, on a display 6202 of the PC, an animation in which a mouse pointer 6203 moves. For example, a movement track of the mouse pointer 6203 shown in FIG. 62 is shown as a track 6204.

As described in S6001, after the keyboard and mouse sharing mode is enabled, the PC enables input listening, and mounts the book. In a process in which the mouse pointer moves on the display of the PC, the keyboard and mouse module of the PC may monitor a real-time coordinate location of the mouse pointer on the display of the PC by using input listening. When the keyboard and mouse module of the PC determines, based on the monitored real-time coordinate location of the mouse pointer on the display of the PC, that the mouse pointer slides over the edge of the display of the PC, it may be determined that the mouse shuttle condition is met, and indicate that the user wants to control the another terminal by using the mouse. The keyboard and mouse module of the PC may determine that the mouse shuttle starts.

After the keyboard and mouse module of the PC determines that the mouse shuttle starts, if the user performs an operation on the input device of the PC, for example, the mouse, the keyboard and mouse module of the PC uses the hook to intercept a received input device, for example, a mouse event, uses the hook to capture an operation parameter in the intercepted input event, for example, a mouse operation parameter, and then sends the operation parameter to the mobile phone through the established connection by using a transmission management module of the PC. The operation parameter is used by the mobile phone to correspondingly respond. With reference to the example shown in FIG. 62, for example, the input device is the mouse. After the mouse pointer slides over the edge of the display of the PC, the user continues to move the mouse in a same direction. The keyboard and mouse module of the PC may receive a movement event, for example, a mouse movement event. Because the mouse shuttle has started, the keyboard and mouse module of the PC may intercept (or shield) the mouse movement event by using the hook, so that the mouse movement event is not sent to the Windows system of the PC. In this way, the PC does not respond to the received mouse movement event. The keyboard and mouse module of the PC may further capture an operation parameter, for example, a mouse operation parameter (for example, referred to as a mouse operation parameter 1) in the mouse movement event by using the hook, and send the mouse operation parameter 1 to the mobile phone through the established connection by using the transmission management module of the PC. In an example, the mouse operation parameter 1 corresponding to the mouse movement event may be a mouse button flag bit used to indicate that the user moves the mouse, coordinate information used to indicate an X coordinate and a Y coordinate for which the mouse moves, scroll wheel information (where a value is empty), and button location information (where a value is empty).

In addition, after the keyboard and mouse module of the PC determines that the mouse shuttle starts, the keyboard and mouse module of the PC may send, to the mobile phone through the established connection by using the transmission management module of the PC, shuttle state information used to indicate that the mouse starts to shuttle (where the shuttle state information may be the first shuttle state information in this embodiment of this application). After receiving the information, the mobile phone may simulate a mouse pointer, and display the mouse pointer on a display of the mobile phone (where the mouse pointer displayed on the display of the mobile phone may be the first cursor in embodiments of this application). For example, after receiving the information, a transmission management module of the mobile phone transmits the information to a drag service module and a launcher of the mobile phone. In this way, the drag service module of the mobile phone may create a mouse pointer, and the launcher of the mobile phone displays the mouse pointer. The keyboard and mouse module of the PC may alternatively hide the mouse pointer displayed on the display of the PC. This gives the user a visual effect that the mouse pointer shuttles from the PC to the mobile phone.

S6005: The mobile phone receives the mouse operation parameter 1, simulates the mouse movement event based on the mouse operation parameter 1, and displays, on the display of the mobile phone based on the mouse movement event, an animation in which the mouse pointer moves.

After receiving an operation parameter, for example, the mouse operation parameter 1, the mobile phone may simulate a movement event, for example, the mouse movement event, based on the mouse operation parameter 1. In response to the mouse movement event, the mobile phone may draw the animation in which the mouse pointer moves and display the animation on the display of the mobile phone.

Generally, for applications installed on the mobile phone, the mobile phone may display icons of these applications on a desktop (or referred to as a home screen (home screen)) of the mobile phone. In addition, with reference to the descriptions of S6004, a purpose of the user to trigger the mouse pointer to shuttle from the display of the PC to the display of the mobile phone is to drag, from the mobile phone to the PC, the icon of the application displayed on the display of the mobile phone. Therefore, after the user shuttles the mouse pointer from the display of the PC to the display of the mobile phone by moving the mouse, the user continues to move the mouse, that is, the user uses the mouse of the PC to input an operation of moving the mouse pointer on the mobile phone, until the mouse pointer moves to a location of the icon that is of the application displayed on the display of the mobile phone and that the user wants to drag.

It should be noted that the application described in this embodiment may be an embedded application (namely, a system application of the mobile phone, for example, a calculator, a camera, a setting, or a gallery), or may be a downloadable application (for example, a browser, a weather application, and an email). The embedded application is an application provided as a part of an implementation of the mobile phone. The downloadable application is an application that may provide an Internet Protocol multimedia subsystem (Internet Protocol multimedia subsystem, IMS) connection of the downloadable application. The downloadable application may be an application preinstalled on the mobile phone, or may be a third-party application downloaded and installed by the user on the mobile phone.

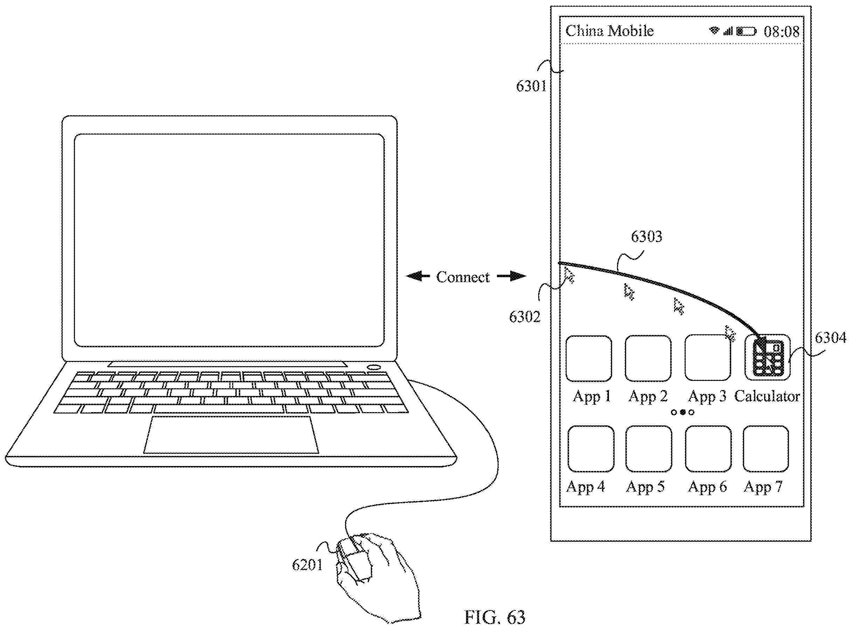

For example, after the transmission management module of the mobile phone receives the operation parameter, for example, the mouse operation parameter 1, the transmission management module of the mobile phone may transmit the mouse operation parameter 1 to the drag service module of the mobile phone. Because the operating systems of the PC and the mobile phone are different, button values in mouse operation parameters in input events, for example, mouse events, of the PC and the mobile phone are different Therefore, the drag service module of the mobile phone may convert, based on a preset mapping relationship, a button bit code of the received mouse operation parameter 1 into a button bit code that can be identified by the mobile phone. Then, the mobile phone may simulate, by using the created virtual input device and based on a mouse operation parameter 1 obtained after the button bit code is converted, an input device that can be identified by the mobile phone, for example, the corresponding mouse event, that is, may simulate the movement event, for example, the mouse movement event. The drag service module of the mobile phone may draw, based on the simulated mouse movement event, the animation in which the mouse pointer moves, and send the animation to the launcher of the mobile phone to display, on the display of the mobile phone, the animation in which the mouse pointer moves. For example, as shown in FIG. 63, the icon that is of the application and that the user wants to drag is an icon 6304 of a calculator displayed on the display of the mobile phone. As the mouse 6201 moves, the mobile phone correspondingly displays, on a display 6301 of the mobile phone, an animation in which a mouse pointer 6302 moves. For example, a movement track of the mouse pointer 6302 is shown as a track 6303. To be specific, as the mouse 6201 moves, the mouse pointer 6302 may move along the track 6303 to a location of the icon 6304 of the calculator.

After the mouse pointer moves to a location of the object that the use wants to drag, for example, a location of the icon of the application, the user may input a drag operation by using the mouse of the PC, so that the mobile phone may drag the icon of the application based on the drag operation. The drag operation may an operation used to indicate to initiate drag for the object**,** for example, the icon of the application. The drag operation may include one operation, or may include a plurality of operations. For example, the drag operation may include two operations: a press operation and a movement operation. For example, the input device is the mouse. The press operation may be a mouse press operation, and the movement operation may be a mouse movement operation. A process in which the user drags the icon of the application on the mobile phone by using the mouse of the PC may include the following S6006 to S6009.

S6006: The PC receives the mouse press event, intercepts the mouse press event, and sends a mouse operation parameter 2 included in the mouse press event to the mobile phone.

The mouse operation parameter 2 may be the first operation parameter in embodiments of this application.

S6007: The mobile phone receives the mouse operation parameter 2, simulates the mouse press event based on the mouse operation parameter 2, and obtains information about the application based on the mouse press event.

A press event, for example, the mouse press event, is an event received by the PC after the user performs a press operation on the input device of the PC, for example, the mouse, when the mouse pointer moves to the display location of the icon of the application. It should be noted that an example in which the input device is the mouse is used herein. "A press operation for the mouse or a mouse press operation" may be a press operation for a left mouse button, or may be a press operation for a right mouse button. This is not specifically limited herein in this embodiment

With reference to FIG. 63 and the descriptions of S6005, the user wants to drag the icon of the application (for example, the icon 6304 of the calculator in the example shown in FIG. 63) displayed on the display of the mobile phone from the mobile phone to the PC. For example, the input device is the mouse. When the user moves the mouse pointer to a location of the icon 6304 of the calculator by moving the mouse, the user may perform a press operation on the mouse (for example, the left mouse button). The keyboard and mouse module of the PC may receive a press event, for example, a mouse press event. Because the mouse press event is received by the PC after the mouse shuttle starts, the keyboard and mouse module of the PC intercepts (or shields) the mouse press event by using the hook, so that the mouse press event is not sent to the Windows system of the PC. In this way, the PC does not respond to the received mouse movement event. The keyboard and mouse module of the PC may further capture an operation parameter of the mouse press event by using the hook, for example, a mouse operation parameter, for example, referred to as a mouse operation parameter 2, and send the captured mouse operation parameter 2 to the mobile phone through the established connection by using the transmission management module of the PC. The mouse operation parameter 2 may include a mouse button flag bit used to indicate that the user presses the mouse, coordinate information (where a value is empty), scroll wheel information (where a value is empty), and button location information used to indicate that the user performs the operation on the left button of the mouse.

The transmission management module of the mobile phone may receive the corresponding mouse operation parameter 2, and send the mouse operation parameter 2 to the drag service module of the mobile phone. After receiving the mouse operation parameter 2, the drag service module of the mobile phone may convert, based on the preset mapping relationship, a button bit code of the received mouse operation parameter 2 into a button bit code that can be identified by the mobile phone, and simulate, by using the created virtual input device and based on a mouse operation parameter 2 obtained after the button bit code is converted, the press event that can be identified by the mobile phone, for example, the mouse press event Then, the drag service module of the mobile phone may determine, based on a current display location of the mouse pointer, that the user wants to drag an icon of an application (for example, an icon of a calculator) at the current display location of the mouse pointer. For example, after a keyboard and mouse shuttle starts (for example, the mobile phone receives shuttle state information that is used to indicate that the mouse starts to shuttle and that is from the PC), the mobile phone may register a listener for a coordinate location of the mouse pointer. The mobile phone may monitor a coordinate location of the mouse pointer on the display of the mobile phone in real time by using the listener. In other words, the drag service module of the mobile phone may determine a current coordinate location of the mouse pointer by using the listener. Then, the mobile phone may obtain the information about the application For example, the launcher of the mobile phone may obtain the information about the application, and send the obtained information about the application to the drag service module of the mobile phone. The drag service module of the mobile phone saves the received information about the application. The information about the application may include one or more of the following information: a name of the application, the icon of the application, a package name of the application, a class name of the application, a size of the icon of the application, and a display location of the icon of the application on the display of the mobile phone.

In addition, in this embodiment, after the mobile phone simulates the press event, for example, the mouse press event, that is, determines that the user performs the press operation, for example, the mouse press operation, on the icon of the application, the drag service module of the mobile phone may further create an icon (for example, referred to as a dragged icon, where the dragged icon may be the dragged object in this application) that is the same as the icon of the application, and the dragged icon is used for subsequent drag. The drag service module of the mobile phone may appropriately adjust transparency of the dragged icon, or may not adjust transparency of the dragged icon. Optionally, for the icon (for example, referred to as an original icon) of the application displayed on the display of the mobile phone, the drag service module of the mobile phone may perform hiding processing, or may not perform hiding processing, but the launcher of the mobile phone continues to display the icon on the display of the mobile phone.

S6008: The PC receives the mouse movement event, intercepts the mouse press event, and sends a mouse operation parameter 3 included in the mouse press event to the mobile phone. The mouse operation parameter 3 may be the second operation parameter in embodiments of this application.

S6009: The mobile phone receives the mouse operation parameter 3, simulates the mouse movement event based on the mouse operation parameter 3, and displays, on the display of the mobile phone in response to the mouse press event and the mouse movement event, an animation in which the icon of the application moves with the mouse pointer.

When the user wants to drag the icon of the application, in the descriptions of S6007, after performing the press operation on the mouse, the user may not uplift a finger, and moves the mouse when continuing to perform the press operation on the mouse. In this case, the keyboard and mouse module of the PC may receive a movement event, for example, a mouse movement event. Similarly, because the mouse movement event is received by the PC after the mouse shuttle starts, the keyboard and mouse module of the PC intercepts (or shields) the mouse press event by using the hook, so that the mouse movement event is not sent to the Windows system of the PC. In this way, the PC does not respond to the received mouse movement event The keyboard and mouse module of the PC may further capture an operation parameter included in the mouse movement event by using the hook, for example, a mouse operation parameter, for example, referred to as a mouse operation parameter 3, and send the captured mouse operation parameter to the mobile phone through the established connection by using the transmission management module of the PC.

The transmission management module of the mobile phone may receive the mouse operation parameter 3, and send the mouse operation parameter 3 to the drag service module of the mobile phone. After receiving the mouse operation parameter 3, the drag service module of the mobile phone performs button bit code conversion on the mouse operation parameter 3, and then may simulate the corresponding movement event, for example, the mouse movement event, by using the created virtual input device. Then, with reference to the simulated press event and movement event (for example, the mouse press event and the mouse movement event), the drag service module of the mobile phone may initiate drag for the icon of the application, and may further draw an animation in which the icon of the application moves with the mouse pointer, and send the animation to the launcher of the mobile phone for display on the display of the mobile phone.

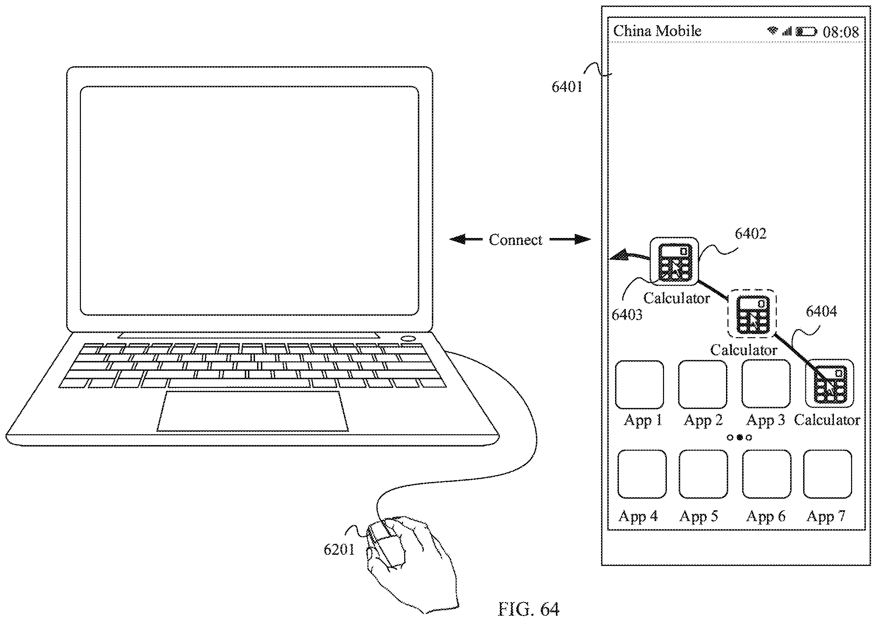

For example, with reference to the example in FIG. 63, after the user performs a press operation on the mouse when the mouse pointer moves to a location of the icon of the calculator, the user does not uplift a finger, and moves the mouse when continuing to perform the press operation on the mouse. Then, as shown in FIG. 64, as the mouse 6201 moves, the mobile phone displays, on a display 6401 of the mobile phone, an animation in which the icon 6402 of the calculator moves with a mouse pointer 6403. For example, a track along which the icon 6402 of the calculator moves with the mouse pointer 6403 is shown as a track 6404. In some embodiments, the icon 6402 of the calculator that moves with the mouse pointer 6403 may be the dragged icon described in the descriptions of S6007, namely, an icon that is the same as the icon of the calculator displayed on the desktop and that is created (or copied) by the mobile phone. In addition, it may be understood that, when the mobile phone does not perform hiding processing on the original icon of the calculator, after the dragged icon is dragged, the display of the mobile phone not only displays the original icon of the calculator, but also displays the dragged icon that moves with the mouse pointer 6403. It should be noted that, in some embodiments, as the mouse moves, only the icon of the application may accordingly move, that is, only the icon of the application is dragged. In some other embodiments, as the mouse moves, the icon of the application and the name of the application are accordingly dragged together. In other words, the icon of the application and the name of the application are dragged together (as shown in FIG. 64). In the embodiment in which the icon of the application and the name of the application are dragged together, when creating the dragged icon, the mobile phone further needs to create a name that is the same as the name of the dragged application. The name is used for drag.

In this embodiment, in a process of dragging the dragged icon, the mobile phone may not perform processing of searching for a new placement location for the icon, and does not perform page turning processing on the desktop, but performs the following S6010 and S6011, to drag the dragged icon to the display of the PC.

S6010: The mobile phone monitors the coordinate location of the mouse pointer on the display of the mobile phone.

S6011: When determining, based on the coordinate location of the mouse pointer on the display of the mobile phone, that the mouse pointer slides out of an edge of the display of the mobile phone, the mobile phone sends, to the PC, shuttle state information used to indicate that the mouse shuttle ends, and sends the icon of the application to the PC.

In a process in which the icon of the application moves with the mouse pointer on the display of the mobile phone, the mobile phone may determine whether the dragged icon of the application is dragged out of the edge of the display of the mobile phone. In this embodiment, that the icon of the application is dragged out of the edge of the display of the mobile phone may be that a partial region of the icon of the application is dragged out of (or overflows) the display of the mobile phone (that is, a ratio in which the region of the icon of the application that overflows the display is greater than a preset threshold), or may be that an entire region of the icon of the application is dragged out of (or overflows) the display of the mobile phone, or may be that the mouse pointer slides out of the edge of the display of the mobile phone when the icon of the application moves with the mouse pointer on the display of the mobile phone. This is not specifically limited herein in this embodiment. The following uses an example in which determining whether the dragged icon of the application is dragged out of the edge of the display of the mobile phone is specifically determining whether the mouse pointer slides out of the edge of the display of the mobile phone for description.

In the process in which the icon of the application moves with the mouse pointer on the display of the mobile phone, the mobile phone (for example, the transmission management module of the mobile phone) may monitor a real-time coordinate location of the mouse pointer on the display of the mobile phone (where, as described in S6007, the real-time coordinate location of the mouse pointer may be obtained by using the registered listener). For example, the mobile phone may determine the coordinate location of the mouse pointer on the display of the mobile phone based on an initial location and relative displacement of the mouse pointer, to determine whether the mouse pointer slides out of the edge of the display of the mobile phone. The initial location of the mouse pointer may be a coordinate location of the mouse pointer on the display of the mobile phone when the mouse starts to move, or a coordinate location of the mouse pointer on the display of the mobile phone before the mouse starts to move. The initial location of the mouse pointer may be specifically a coordinate location in a coordinate system in which the upper left corner of the display of the mobile phone is used as a coordinate origin, an X axis points from the upper left corner to the right edge of the display of the mobile phone, and a Y axis points from the upper left corner to the lower edge of the display of the mobile phone. A specific implementation in which the mobile phone determines that the mouse pointer slides out of the edge of the display of the mobile phone is similar to a specific implementation in which the PC determines that the mouse pointer slides out of the edge of the display of the PC. Details are not described herein again.

When the transmission management module of the mobile phone determines, based on the monitored real-time coordinate location of the mouse pointer on the display of the mobile phone, that the mouse pointer slides over the edge of the display of the mobile phone, it indicates that the user wants to control another device by using the mouse. As described in S6004, if the mobile phone establishes the connection to only the PC, it indicates that the user wants to control the PC by using the mouse. If the mobile phone establishes connections to a plurality of devices, the mobile phone may display a list option. The list option includes identifiers of all the devices connected to the mobile phone, for the user to select a device that the user wants to control by using the mouse. If the user selects the identifier of the PC, it indicates that the user wants to control the PC by using the mouse. Alternatively, a shuttle relationship may be pre-configured on the mobile phone, and is used to determine a device to which the mouse shuttles, that is, determine which device responds to the operation of the mouse. Specific descriptions of configuration and application of the shuttle relationship are similar to descriptions of corresponding content in the foregoing embodiment. Details are not described herein again.

**When** it is determined that the user wants to control the PC by using the mouse, the transmission management module of the mobile phone may determine that the mouse shuttle ends. In this case, the transmission management module of the mobile phone may send, to the PC through the established connection, the shuttle state information used to indicate that the mouse shuttle ends (where the shuttle state information may be the second shuttle state information in embodiments of this application). The transmission management module of the mobile phone may further indicate, to the drag service module of the mobile phone, that the mouse shuttle ends, so that the drag service module of the mobile phone sends drag data to the PC through the established connection by using the transmission management module of the mobile phone. For example, the drag data may include the icon of the application. Before the icon of the application is sent to the PC, the mobile phone may further perform serialization processing on the icon of the application. In other words, the icon of the application sent by the mobile phone to the PC may be data obtained after serialization processing is performed. If the name of the application and the icon of the application are dragged together, the mobile phone further needs to send the name of the application to the PC.

In addition, after the mouse pointer slides over the edge of the display of the mobile phone, that is, after it is determined that the mouse shuttle ends, drag for the icon of the application on the display of the mobile phone ends. The drag service module of the mobile phone may further indicate, to the launcher of the mobile phone, that the mouse shuttle ends, so that the launcher of the mobile phone displays a drag end animation on the display of the mobile phone, for example, displays an animation in which the dragged icon returns to an original location from the edge of the display of the mobile phone based on a track (for example, the track 6404 shown in FIG. 64, where a direction is opposite to a direction of the track 64(4). In addition, the mobile phone does not perform re-layout processing on the icon of the application displayed on the display of the mobile phone.

It should be noted that, in the foregoing embodiment, an example in which the mobile phone sends the drag data, for example, the icon of the foregoing application, to the PC after it is determined that the mouse shuttle ends is used for description. In some other embodiments, the mobile phone may alternatively temporarily cache drag data, for example, information about an object (for example, which includes the icon of the application) when drag starts. After determining that a mouse shuttle ends, the mobile phone sends, to the PC, shuttle state information used to indicate that the mouse shuttle ends. After receiving the shuttle state information, the PC may send a drag data request message to the mobile phone. After receiving the message, the mobile phone sends the drag data to the PC.

S6012: The PC receives a mouse movement event, and displays, on the display of the PC based on the mouse movement event and the received icon of the application, an animation in which the icon of the application moves with the mouse pointer.

After receiving the shuttle state information that is used to indicate that the mouse shuttle ends and that is from the mobile phone, the transmission management module of the PC may indicate, to the drag service module of the PC and the keyboard and mouse module of the PC, that the mouse shuttle ends. The PC may determine that the user needs to turn back to the PC to respond to the operation of the mouse. Then, the PC may uninstall the hook, that is, cancel interception of the input event, for example, the mouse event. Then, when the user performs an operation on the input device of the PC, the keyboard and mouse module of the PC does not intercept a received input event, but sends the received input event to the Windows system of the PC, so that the Windows system of the PC responds to the input event. The keyboard and mouse module of the PC may further redisplay the mouse pointer on the display of the PC.

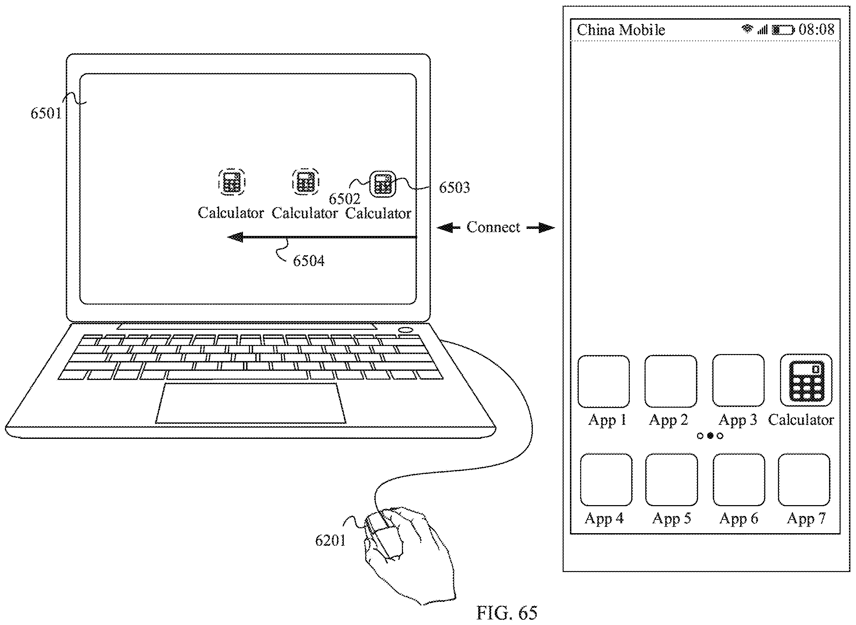

For example, the input device is the mouse. The user continues to perform the press operation on the mouse, and moves the mouse at the same time. The PC may receive a movement event, for example, the mouse movement event. Because the hook has been uninstalled at this time, the keyboard and mouse module of the PC sends the received mouse movement event to the Windows system of the PC, so that the Windows system of the PC responds to the mouse movement event. For example, the PC may draw the icon of the application based on the mouse movement event and the received icon of the application, and display the icon of the application in a form of a window. The PC further draws an animation in which the icon of the application moves with the mouse pointer, and displays, on the display of the PC, the animation in which the icon of the application moves with the mouse pointer. If the name of the application and the icon of the application are dragged together, the PC further needs to draw the name of the application, and displays the name of the application in a form of a window. The name of the application further moves as the mouse pointer moves. For example, with reference to FIG. 64, as shown in FIG. 65, as the mouse 6201 moves, the PC displays, on a display 6501 of the PC, an animation in which an icon 6502 of the calculator moves with a mouse pointer 6503. For example, a track along which the icon 6502 of the calculator moves with the mouse pointer 6503 is shown as a track 6504. In other words, with reference to FIG. 64 and FIG. 65, by touching and holding the mouse and moving the mouse, the user may visually achieve an effect of dragging, from the display of the mobile phone to the display of the PC, the icon of the application (for example, the icon of the calculator) displayed on the display of the mobile phone. Certainly, if the mobile phone further performs serialization processing before sending the icon of the application to the PC, after receiving the corresponding data, the PC may obtain the icon of the application by performing deserialization processing.

In addition, in S6011, the mobile phone may further send, to the PC, the size of the icon of the application and the display location of the icon of the application on the display of the mobile phone that are obtained in S6007. The PC may determine, based on the data and by using a preset rule, a size and an initial location of a window used to display the icon of the application In an example, the preset rule may be that the size of the window is the same as the size of the icon of the application obtained in S6007, the initial location of the window is the same as the display location of the icon of the application on the display of the mobile phone obtained in S6007 (for example, if the display location of the icon of the application on the display of the mobile phone obtained in S6007 is the lower right corner of the display of the mobile phone, the initial location of the window is the lower right corner of the display of the PC). Alternatively, the size of the window is twice the size of the icon of the application obtained in S6007, and the initial location of the window is the same as the display location of the icon of the application on the display of the mobile phone obtained in S6007, or the like. This rule is not specifically limited herein in this embodiment of this application.

Step S6012 is optional.

S6013: The PC receives a mouse uplift event, and displays an interlace of the application on the display of the PC based on the mouse uplift event.

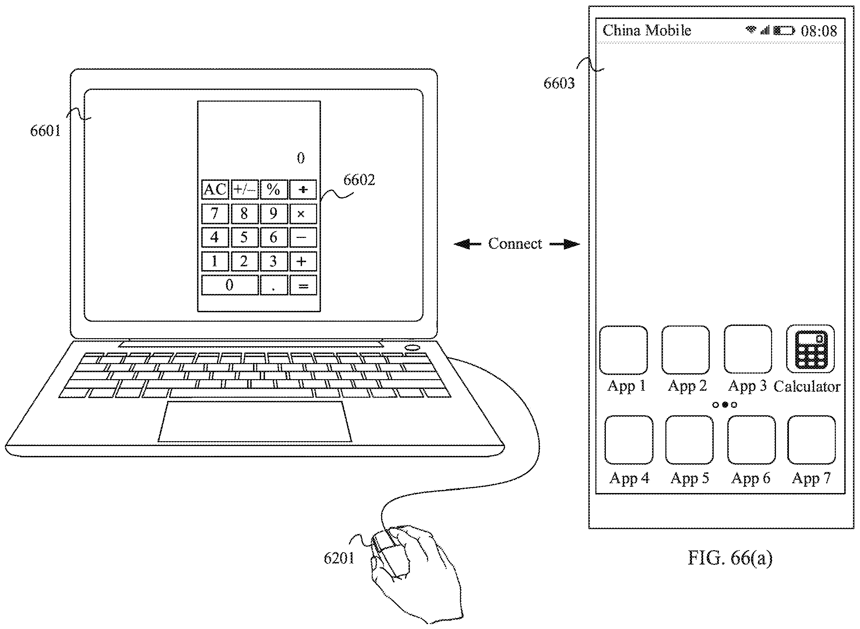

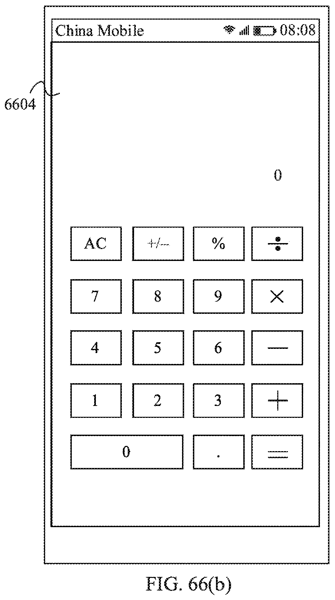

After the user drags, to the display of the PC, the icon of the application (for example, the icon of the calculator) that the user wants to drag, the user may input a drag release operation, to end drag for the icon of the application. For example, the user may uplift the finger (that is, the drag release operation may be an operation of uplifting the finger, or an operation of stopping touching and holding the mouse). The user may further stop moving the mouse. The keyboard and mouse module of the PC may receive an uplift event, for example, the mouse uplift event. Similarly, because the hook has been uninstalled at this time, the keyboard and mouse module of the PC sends the received uplift event, for example, the mouse uplift event, to the Windows system of the PC, so that the Windows system of the PC responds to the mouse uplift event For example, in response to the mouse uplift event, the PC may display the interface of the dragged application on the display of the PC at a location at which the mouse pointer stops moving. For example, with reference to the example in FIG. 65, as shown in FIG. 66(a) and FIG. 66(b), after the user drags the icon of the calculator to the display of the PC, the user uplift the finger, and stops moving the mouse. In this case, in response, the PC may display an interface 6602 of the calculator on a display 6601 of the PC. In addition, for the mobile phone, after the user uplifts the finger, and stops moving the mouse, an interface displayed by the mobile phone may not change. As shown in FIG. 66(a), a desktop 6603 is still displayed, and the mobile phone may alternatively display the interface of the calculator. As shown in FIG. 66(b), the mobile phone displays an interface 6604 of the calculator.

In an example, a specific implementation in which the PC displays the interface of the application on the display of the PC based on the mouse uplift event may be as follows: After the keyboard and mouse module of the PC receives the uplift event, for example, the mouse uplift event, the keyboard and mouse module of the PC may send a message to the mobile phone through the established connection to the mobile phone by using the transmission management module of the PC. The message may be a request message used to request the interface of the application. Alternatively, the message may be an indication message used to indicate that drag for the icon of the application ends. After receiving the message, the mobile phone may start the application based on the package name and the class name of the application in the information about the application obtained in S6007, and send the interface of the opened application to the PC through the connection established with the PC, so that the PC may display the interface of the application on the display of the PC. For example, the PC and the mobile phone may display the interface of the application on the display of the PC by using wireless projection (Miracast). For another example, the mobile phone may display the interface of the application on the display of the PC by using a DMP technology.

By using this technical solution, in a scenario in which a plurality of terminals are collaboratively used, when a same input device, for example, a mouse, is used to control all the terminals, the user may drag, from a terminal that displays an icon of an application, the icon of the application to another terminal by moving the mouse. This increases interaction between the terminals when the plurality of terminals are collaboratively used, and improves user experience.

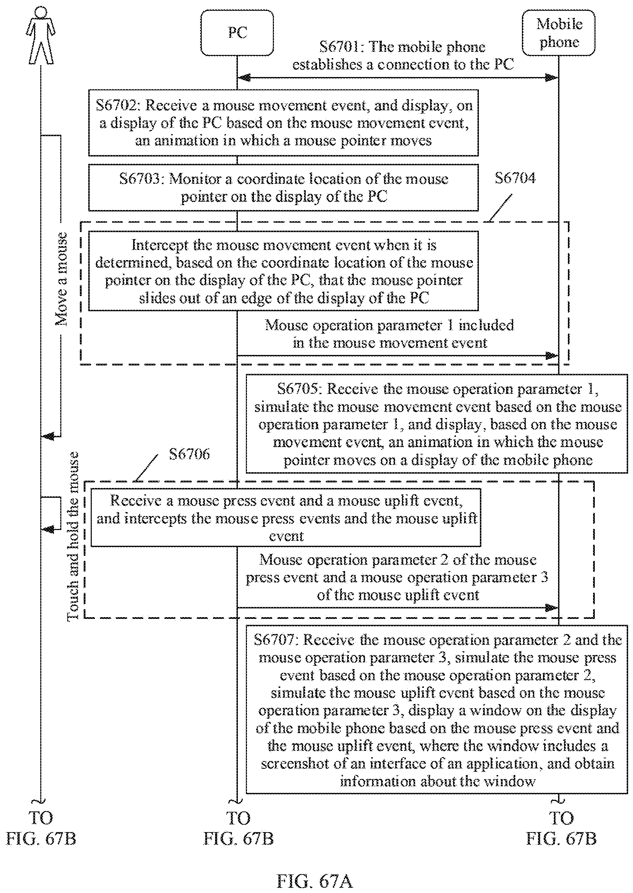

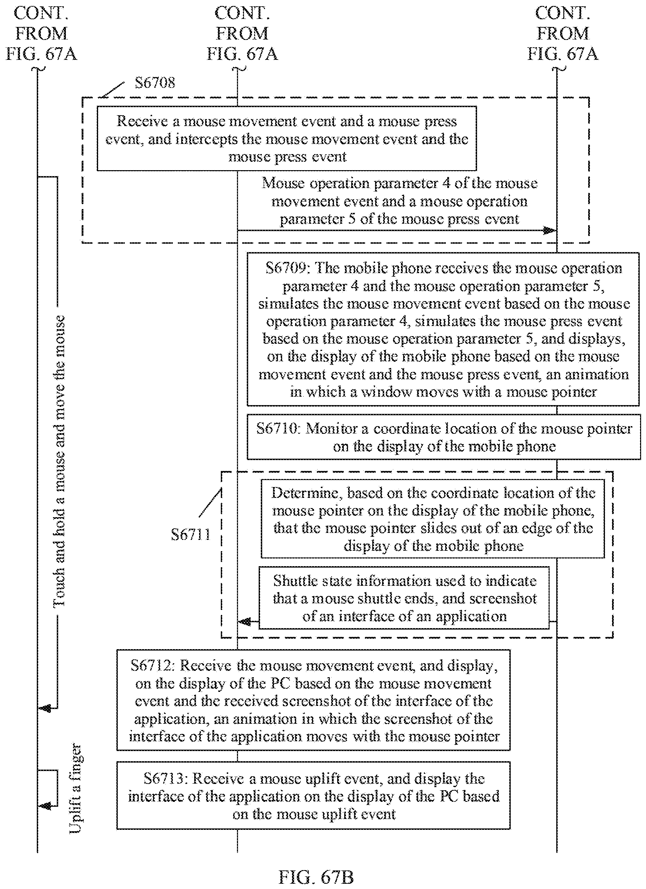

FIG. 67A and FIG. 67B are a schematic flowchart of another object drag method according to an embodiment of this application. In this embodiment, an implementation process in which a user drags, by using a mouse shared by a PC, an icon of an application displayed by a mobile phone (where the icon of the application is a dragged object) from the mobile phone to the PC is described. As shown in FIG. 67A and FIG. 67B, the method may include the following S6701 to S6713.

S6701: The mobile phone establishes a connection to the PC.

S6702: The PC receives a mouse movement event, and displays, on a display of the PC based on the mouse movement event, an animation in which a mouse pointer moves.

S6703: The PC monitors a coordinate location of the mouse pointer on the display of the PC.

S6704: When determining, based on the coordinate location of the mouse pointer on the display of the PC, that the mouse pointer slides out of an edge of the display of the PC, the PC intercepts the mouse movement event, and sends a mouse operation parameter 1 included in the mouse movement event to the mobile phone.

It should be noted that, for descriptions of other related content in S6701 to S6704, refer to descriptions of corresponding content in S6001 to S6004 in the embodiment shown in FIG. 60A. Details are not described herein again.

S6705: The mobile phone receives the mouse operation parameter 1, simulates the mouse movement event based on the mouse operation parameter 1, and displays, on a display of the mobile phone based on the mouse movement event, an animation in which the mouse pointer moves.

After receiving the mouse operation parameter 1, the mobile phone may simulate a movement event, for example, the mouse movement event, based on the mouse operation parameter 1. In response to the mouse movement event, the mobile phone may draw the animation in which the mouse pointer moves and display the animation on the display of the mobile phone. In other words, by moving the mouse, the user may trigger the mouse pointer to shuttle from the display of the PC to the display of the mobile phone.

For example, a purpose of the user to trigger the mouse pointer to shuttle from the display of the PC to the display of the mobile phone is to drag, from the mobile phone to the PC, an icon of an application currently displayed on the display of the mobile phone. In this embodiment, an operation of triggering windowing of the interface of the application may be a predefined operation. For example, the operation may be a touch and hold operation for a status bar. Therefore, after the user shuttles the mouse pointer from the display of the PC to the display of the mobile phone by moving the mouse, the user continues to move the mouse until the mouse pointer moves to a location of a status bar displayed on the display of the mobile phone.

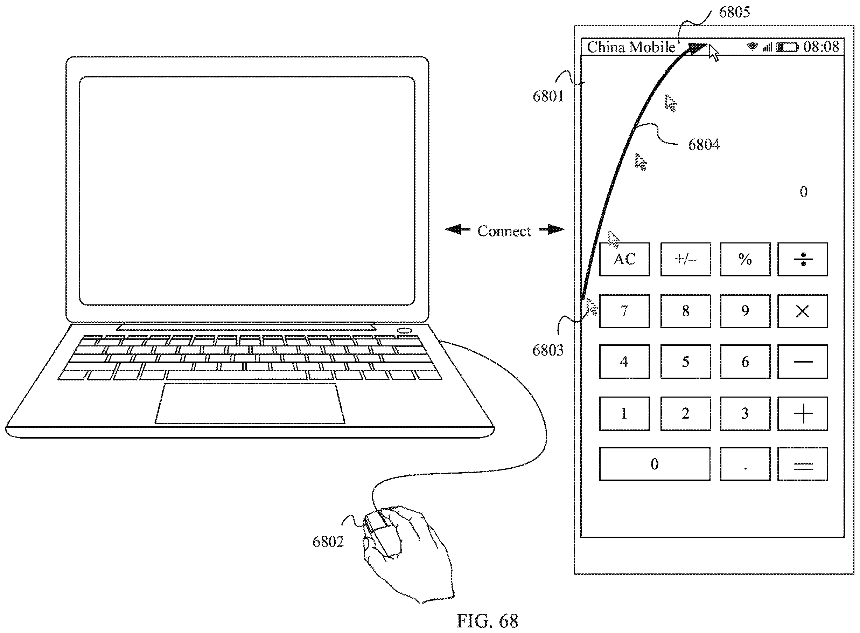

For example, the user wants to drag, to the display of the PC, an interface of a calculator displayed on the mobile phone. As shown in FIG. 68, the display of the mobile phone currently displays an interface 6801 of the calculator. After the user moves a mouse 6802 to trigger a mouse pointer to shuttle from the display of the PC to the display of the mobile phone, the user continues to move the mouse 6802. As the mouse 6802 moves, the mobile phone correspondingly displays, on the display of the mobile phone, an animation in which a mouse pointer 6803 moves. For example, a movement track of the mouse pointer 6803 is shown as a track 6804. To be specific, as the mouse 6802 moves, the mouse pointer 6803 may move along the track 6804 to a location of a status bar 6805 displayed by the mobile phone.

S6706: The PC receives a mouse press event and the mouse uplift event, intercepts the mouse press event and the mouse uplift event, and sends a mouse operation parameter 2 of the mouse press event and a mouse operation parameter 3 of the mouse uplift event to the mobile phone.

S6707: The mobile phone receives the mouse operation parameter 2 and the mouse operation parameter 3, simulates the mouse press event based on the mouse operation parameter 2, simulates the mouse uplift event based on the mouse operation parameter 3, displays a window on the display of the mobile phone based on the mouse press event and the mouse uplift event, where the window includes a screenshot of the interface of the application, and obtains information about the window.

With reference to FIG. 68 and the descriptions of S6705, the user wants to drag, from the mobile phone to the PC, the interface of the application (for example, the interface 6801 of the calculator in the example shown in FIG. 68) displayed on the display of the mobile phone. In addition, for example, the operation of triggering windowing of the interface of the application is the touch and hold operation for the status bar. When the user moves the mouse pointer to the location of the status bar by moving the mouse, the user may perform a press operation on the mouse (for example, a left mouse button), and uplift a finger after specific duration. A keyboard and mouse module of the PC may receive a press event (for example, the mouse press event) and an uplift event (for example, the mouse uplift event), and intercept the mouse press event and the mouse uplift event. The keyboard and mouse module of the PC may further capture operation parameters (for example, referred to as the mouse operation parameter 2 and the mouse operation parameter 3) of the intercepted mouse press event and mouse uplift event by using a transmission management module of the PC, and send the captured operation parameters to the mobile phone through an established connection.

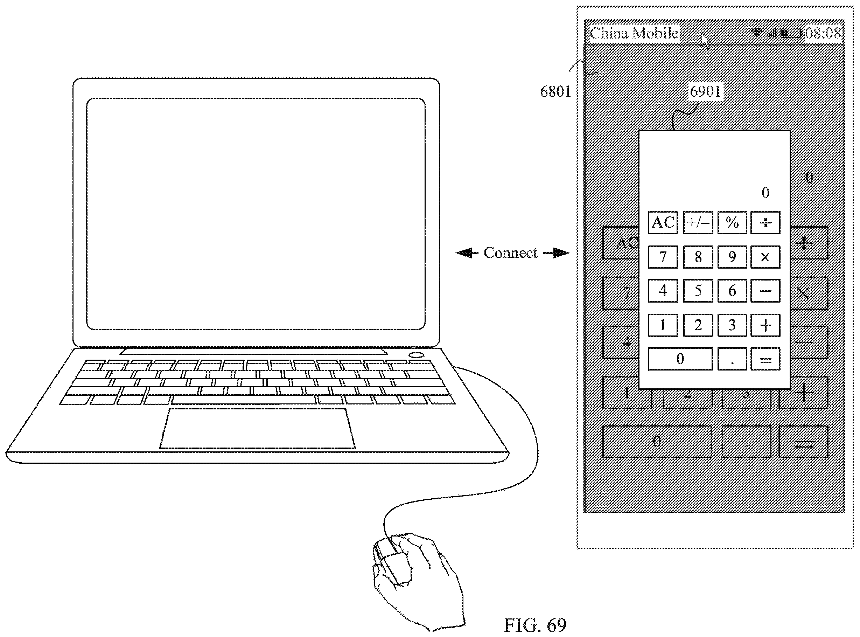

A transmission management module of the mobile phone may receive the mouse operation parameter 2 and the mouse operating parameter 3, and send the mouse operating parameter 2 and the mouse operation parameter 3 to a drag service module of the mobile phone. After receiving the mouse operation parameter 2 and the mouse operation parameter 3, the drag service module of the mobile phone converts, based on a preset mapping relationship, a button bit code of the received mouse operation parameter 2 into a button bit code that can be identified by the mobile phone, converts a button bit code of the received mouse operation parameter 3 into a button bit code that can be identified by the mobile phone, and then may use a created virtual input device to simulate the press event, for example, the mouse press event, based on a mouse operation parameter 2 obtained after the button bit code is converted, and use the created virtual input device to simulate the uplift event, for example, the mouse uplift event, based on a mouse operation parameter 3 obtained after the button bit code is converted. Then, the drag service module of the mobile phone may determine, based on a current display location of the mouse pointer, that the user wants to drag an interface of an application (for example, the interface of the calculator) currently displayed on the mobile phone. In response to the mouse press event and the mouse uplift event, a system UI of the mobile phone sends a status bar event to a launcher of the mobile phone. After receiving the status bar event, the launcher of the mobile phone may perform windowing on the interface of the currently displayed application, that is, display a window on the display of the mobile phone. The window includes the interface of the application, for example, a screenshot of the interface of the application (for example, a screenshot of the interface of the calculator). A size of the window may be a preset value. In addition, the mobile phone (for example, the launcher of the mobile phone) may further perform background blurring processing. In this embodiment, a background may be the interface of the application, or may be a desktop of the mobile phone. This is not limited herein in this embodiment. For example, with reference to FIG. 68, as shown in FIG. 69, after simulating the mouse press event and the mouse uplift event, the mobile phone may display a window 6901 on the display of the mobile phone. The window 6901 includes a screenshot of the interface 6801 of the calculator. The mobile phone further performs background blurring processing. FIG. 69 shows an example in which the background is the interface 6801 of the computer.

The mobile phone (for example, the launcher of the mobile phone) may further obtain the information about the window. The information about the window may include one or more of the following information: a name of the application in the window, a package name of the application, a class name of the application, the screenshot of the interface of the application, the size of the window, and a display location of the window on the display of the mobile phone.

S6708: The PC receives the mouse movement event and the mouse press event, intercepts the mouse movement event and the mouse press event, and sends a mouse operation parameter 4 of the mouse movement event and a mouse operation parameter 5 of the mouse press event to the mobile phone.

S6709: The mobile phone receives the mouse operation parameter 4 and the mouse operation parameter 5, simulates the mouse movement event based on the mouse operation parameter 4, simulates the mouse press event based on the mouse operation parameter 5, and displays, on the display of the mobile phone based on the mouse movement event and the mouse press event, an animation in which the window moves with the mouse pointer.

When the user wants to drag the interface of the application, the user may move the mouse to trigger the mouse pointer to move from the status bar on the display of the mobile phone to the location of the window in S6707. Then, the user may perform a touch and hold operation on the mouse, and move the mouse at the same time. In this case, the keyboard and mouse module of the PC may receive a press event (for example, the mouse press event) and a movement event (for example, the mouse movement event). Similarly, the keyboard and mouse module of the PC intercepts the mouse press event and the mouse movement event, captures corresponding operation parameters (for example, referred to as the mouse operation parameter 4 and the mouse operation parameter 5), and sends the captured operation parameters to the mobile phone through the established connection by using the transmission management module of the PC. The mouse operation parameter 4 may be the first operation parameter in embodiments of this application. The mouse operation parameter 5 may be the second operation parameter in embodiments of this application

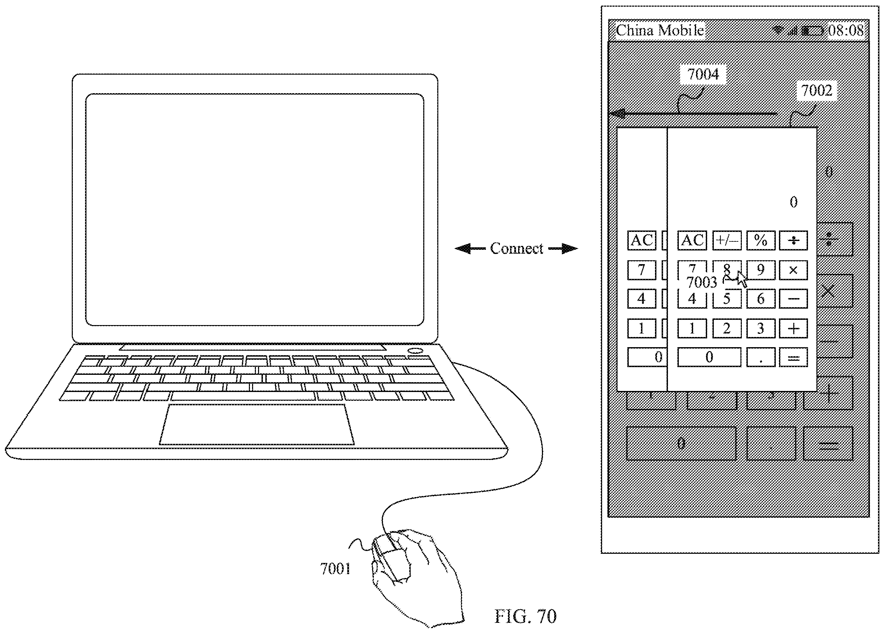

The transmission management module of the mobile phone may receive the mouse operation parameter 4 and the mouse operating parameter 5, and send the mouse operating parameter 4 and the mouse operation parameter 5 to the drag service module of the mobile phone. After receiving the mouse operation parameter 4 and the mouse operation parameter 5, the drag service module of the mobile phone converts, based on the preset mapping relationship, a button bit code of the received mouse operation parameter 4 into a button bit code that can be identified by the mobile phone, converts a button bit code of the received mouse operation parameter 5 into a button bit code that can be identified by the mobile phone, and then may use the created virtual input device to simulate the press event, for example, the mouse press event, based on a mouse operation parameter 4 obtained after the button bit code is converted, and use the created virtual input device to simulate the movement event, for example, the mouse movement event, based on a mouse operation parameter 5 obtained after the button bit code is converted. Then, in response, the drag service module of the mobile phone may initiate drag for the window, and may further draw the animation in which the window moves with the mouse pointer, and send the animation to the launcher of the mobile phone for display on the display of the mobile phone. For example, with reference to FIG. 69, the user moves the mouse to trigger the mouse pointer to move from the status bar on the display of the mobile phone to a location of the window in FIG. 69. Then, as shown in FIG. 70, the user may perform a touch and hold operation on the mouse 7001, and move the mouse 7001 at the same time. As the mouse 7001 moves, the mobile phone displays, on the display of the mobile phone, an animation in which a window 7002 (where the window 7002 includes the screenshot of the interface of the calculator) moves with a mouse pointer 7003. For example, a track along which the window 7002 moves with the mouse pointer 7003 is shown as a track 7004.

In a process in which the window moves with the mouse pointer, the mobile phone may determine whether the dragged window is dragged out of an edge of the display of the mobile phone. In this embodiment, that the window is dragged out of the edge of the display of the mobile phone may be that a partial region of the window is dragged out of (or overflows) the display of the mobile phone (that is, a ratio in which the region of the window that overflows the display is greater than a preset threshold), or may be that an entire region of the window is dragged out of (or overflows) the display of the mobile phone, or may be that the mouse pointer slides out of the edge of the display of the mobile phone when the window moves with the mouse pointer on the display of the mobile phone. This is not specifically limited herein in this embodiment. The following uses an example in which determining whether the dragged window is dragged out of the edge of the display of the mobile phone is specifically determining whether the mouse pointer slides out of the edge of the display of the mobile phone for description.

S6710: The mobile phone monitors a coordinate location of the mouse pointer on the display of the mobile phone.

S6711: When determining, based on the coordinate location of the mouse pointer on the display of the mobile phone, that the mouse pointer slides out of an edge of the display of the mobile phone, the mobile phone sends, to the PC, shuttle state information used to indicate that a mouse shuttle ends, and sends the screenshot of the interface of the application to the PC. The shuttle state information in S6711 may be the second shuttle state information in embodiments of this application.

Before the screenshot of the interface of the application is sent to the PC, the mobile phone may further perform serialization processing on the screenshot of the interface of the application. In other words, the screenshot of the interface of the application sent by the mobile phone to the PC may be data obtained after serialization processing is performed.

S6712: The PC receives a mouse movement event, and display, on the display of the PC based on the mouse movement event and the received screenshot of the interface of the application, an animation in which the screenshot of the interface of the application moves with the mouse pointer.

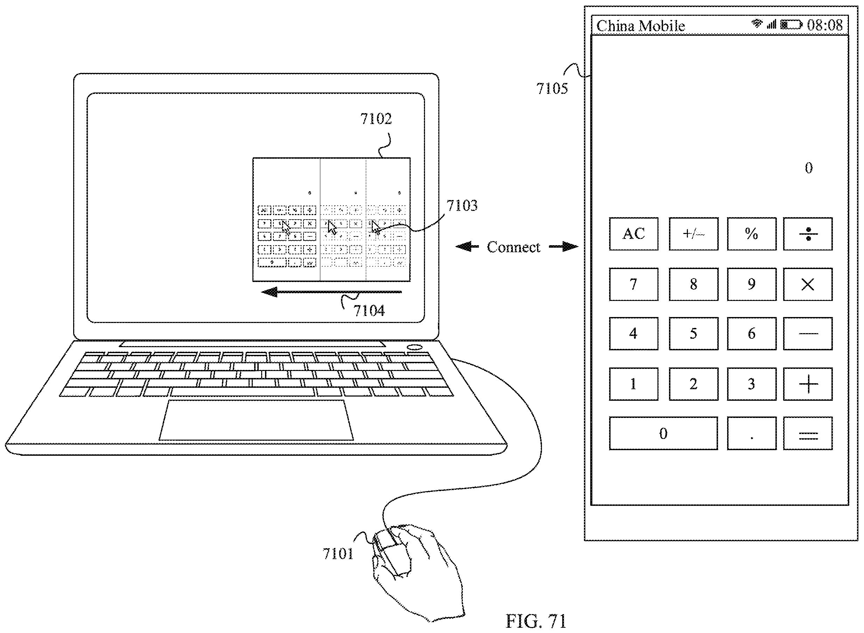

For example, the user continues to perform the press operation on the mouse, and moves the mouse at the same time. The PC may receive a movement event, for example, the mouse movement event. The PC may draw the screenshot of the interface of the application based on the mouse movement event and the received icon of the interface of the application, and display the screenshot in a form of a window. The PC further draws the animation in which the screenshot of the interface of the application moves with the mouse pointer, and displays, on the display of the PC, the animation in which the screenshot of the interface of the application moves with the mouse pointer. For example, with reference to FIG. 70, as shown in FIG. 71, as a mouse 7101 moves, the PC displays, on the display of the PC, an animation in which a screenshot 7102 of the interface of the application moves with a mouse pointer 7103. For example, a track along which the screenshot 7102 of the interface of the application moves with the mouse pointer 7103 is shown as a track 7104. In addition, after the mouse pointer slides over the edge of the display of the mobile phone, drag for the interface of the application on the display of the mobile phone ends, and the mobile phone may display a drag end animation on the display of the mobile phone. For example, the mobile phone displays an animation in which the interface of the application is restored (or displays an animation in which the desktop is restored). As shown in FIG. 71, after drag on the mobile phone ends, the mobile phone displays an interface 7105 of the calculator.

In other words, with reference to FIG. 70 and FIG. 71, by touching and holding the mouse and moving the mouse, the user may visually achieve an effect of dragging, from the display of the mobile phone to the display of the PC, the interface of the application (for example, the interface of the calculator) displayed on the display of the mobile phone. Certainly, if the mobile phone further performs serialization processing before sending the screenshot of the interface of the application to the PC, after receiving the corresponding data, the PC may obtain the screenshot of the interface of the application by performing deserialization processing.

In addition, in S6711, the mobile phone may further send, to the PC, the size of the window and the display location of the window on the display of the mobile phone that are obtained in S6707. The PC may determine, based on the data and by using a preset rule, a size and an initial location of a window used to display the screenshot of the interface of the application. In an example, the preset rule may be that the size of the window is the same as the size of the window obtained in S6707, and the initial location of the window is the same as the display location of the window on the display of the mobile phone obtained in S6707. Alternatively, the size of the window is twice the size of the window obtained in S6707, and the initial location of the window is the same as the display location of the window on the display of the mobile phone obtained in S6707, or the like. This rule is not specifically limited herein in this embodiment of this application.

S6713: The PC receives a mouse uplift event, and displays the interface of the application on the display of the PC based on the mouse uplift event.

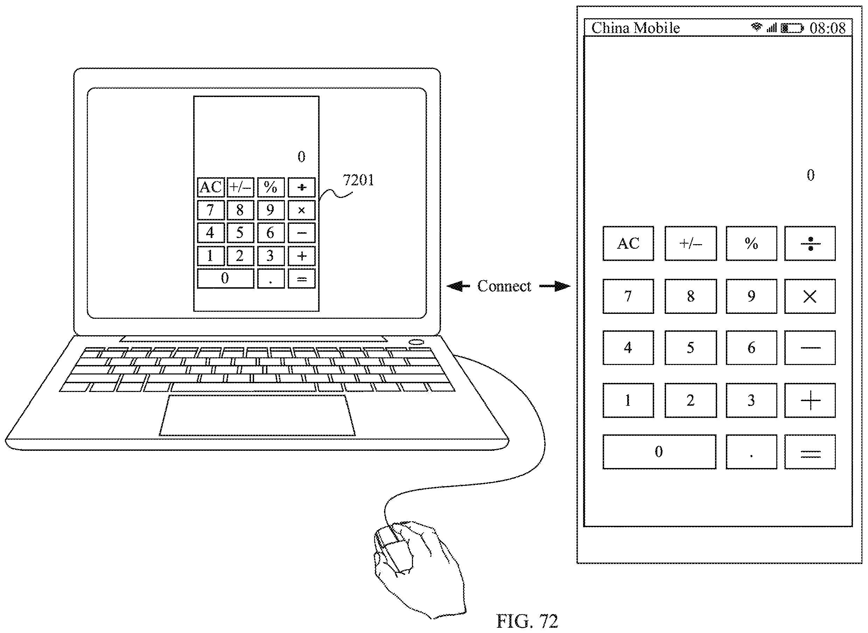

After the user drags, to the display of the PC, the interface of the application (for example, the interface of the calculator) that the user wants to drag, the user may uplift the finger (that is, stop the touch and hold operation for the mouse), and stop moving the mouse. The PC may receive an uplift event, for example, the mouse uplift event In response to the mouse uplift event, the PC may display the interface of the application on the display of the PC at a location at which the mouse pointer stops moving. For example, with reference to the example in FIG. 71, as shown in FIG. 72, after the user drags the screenshot of the interface of the calculator to the display of the PC, the user uplift the finger, and stops moving the mouse In this case, in response, the PC may display an interface 7201 of the calculator on the display of the PC.

**In** an example, a specific implementation in which the PC displays the interface of the application on the display of the PC based on the mouse uplift event may be as follows: After the keyboard and mouse module of the PC receives the mouse uplift event, the keyboard and mouse module of the PC may send a request message to the mobile phone through the established connection to the mobile phone by using the transmission management module of the PC. The request message is used to request the interface of the application. After receiving the request message, the mobile phone may obtain the interface of the application based on the name, the package name, and the class name of the application in the information about the window obtained in S6707, and send the interface of the application to the PC through the established connection to the PC, so that the PC may display the interface of the application on the display of the PC. For example, the PC and the mobile phone may display the interface of the application on the display of the PC by using Miracast For another example, the mobile phone may display the interface of the application on the display of the PC by using a DMP technology.

It should be noted that specific descriptions of other content in the steps of this embodiment are similar to descriptions of corresponding content in the embodiment shown in FIG. 60A and FIG. 60B. Details are not described herein again.

By using this technical solution, in a scenario in which a plurality of terminals are collaboratively used, when a same input device, for example, a mouse, is used to control all the terminals, the user may drag, from a terminal that displays an interface of an application, the icon of the application to another terminal by moving the mouse. This increases interaction between the terminals when the plurality of terminals are collaboratively used, and improves user experience.

It may be understood that, currently, when collaborative office between a plurality of terminals, for example, a PC and a mobile phone, is implemented through multi-screen collaboration, a prerequisite for dragging content (or a resource type object) is that an interface of the mobile phone is projected to a display of the PC for display, and in addition, drag and processing for the content are both implemented by using hardware of the PC. The mobile phone is usually screen-off, and a hardware capability (for example, the display or a stylus) of the mobile phone cannot participate in collaborative office. As a result, it is difficult for the user to comprehensively use features of different terminals, that participate in collaborative office, to promote strengths, avoid weaknesses and maximize work efficiency. In addition, the interface projected from the mobile phone to the PC also occupies display space of the display of the PC. This affects usage efficiency of cooperatively using the plurality of terminals. According to the object drag method provided in this embodiment, on a premise that projection is not started, by using a keyboard and mouse sharing technology, the user can use an input device, for example, a touchpad or a mouse, to transfer content (or a resource type object), for example, a text or a file, between the plurality of terminals, that participate in collaborative use, in a drag manner. In addition, the user is allowed to use these terminals to process the transferred content. In addition, because no projection needs to be started, no display space of a display of a terminal is occupied. This improves usage efficiency of collaboratively using the plurality of terminals, and improves user experience.

In some other embodiments, with reference to FIG. 58 and FIG. 59, the following describes in detail the object drag method provided in embodiments of this application with reference to the accompanying drawings by using an example in which the first terminal 101 is a PC, the second terminal 102 is a tablet computer, and the input device 102-1 is a mouse.

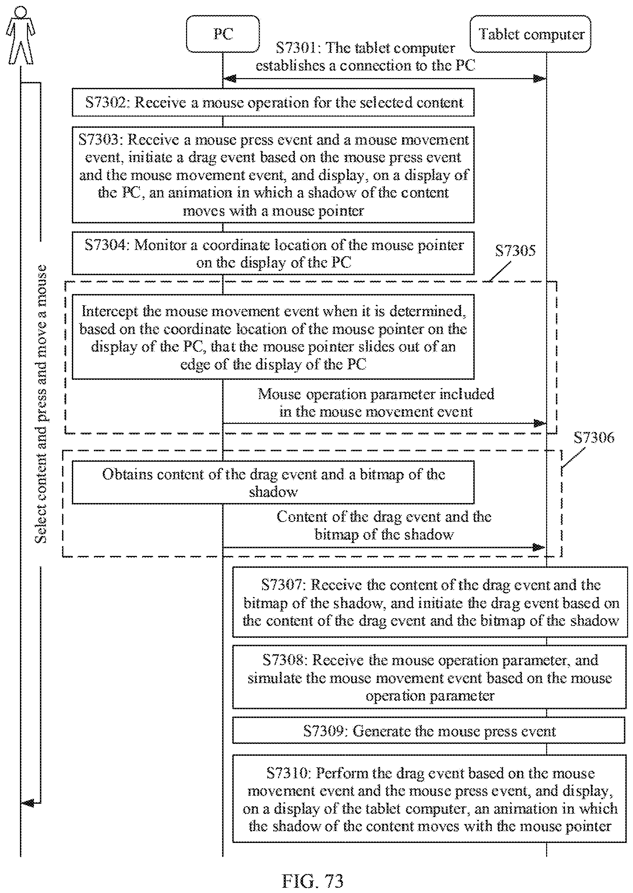

FIG. 73 is a schematic flowchart of an object drag method according to an embodiment of this application. In this embodiment, the method provided in this embodiment is described in detail by using an example in which a user uses the mouse of the PC to transfer content (where the content is a dragged object) on the PC to the tablet computer in a drag manner. As shown in FIG. 73, the method may include the following S7301 to S7310.

S7301: The tablet computer establishes a connection to the PC.

After the tablet computer successfully establishes the connection to the PC, the mobile phone and the PC may be collaboratively used. To improve collaboration usage efficiency, the user may use an input device, for example, the mouse of the PC, to control both the PC and the tablet computer.

In addition, because the mouse is the input device of the PC, after another terminal establishes a connection to the PC, generally, the user may temporarily control the PC by using the mouse. In this embodiment, after enabling a keyboard and mouse sharing mode, the PC may further trigger, when determining that a mouse shuttle condition is met, another terminal. that creates a virtual input device and that establishes a connection to the PC, to respond to an operation of the mouse. For example, the mouse shuttle condition may be that a mouse pointer that is correspondingly displayed on a display of the PC and that is of the mouse slides over an edge of the display of the PC.

It should be noted that, for specific descriptions of S7301 in this embodiment, refer to specific descriptions of corresponding content in S6001 in another embodiment of this application. Details are not described herein again.

For example, the user wants to transfer the content on the PC to the tablet computer in the drag manner, and continue drag the content on the tablet computer. A process of triggering the another terminal that creates the virtual input device and that is connected to the PC, for example, the tablet computer, to respond to the operation of the mouse may include the following S7302 to S7306.

S7302: The PC receives a mouse operation of selecting the content.

The foregoing content may be a text (or referred to as a character, text), or may be a file, or may be a folder. The file may include files in one or more of the following formats, for example, a Word document, an Excel workbook, a PowerPoint presentation, a bitmap, an image file, a plain text file, a sound file, a film file, a flash animation file, a web page file, and a compressed file.

In addition, in this embodiment, one or more of content may be selected. For example, two Word documents are selected. For another example, a Word document and an image file are selected. For another example, two folders are selected.

S7303: The PC receives a mouse press event and a mouse movement event, initiates a drag event based on the mouse press event and the mouse movement event, and displays, on the display of the PC, an animation in which a shadow of the content moves with the mouse pointer. The mouse pointer of the PC may be the second cursor in embodiments of this application.

S7304: The PC monitors a coordinate location of the mouse pointer on the display of the PC.

S7305: When determining, based on the coordinate location of the mouse pointer on the display of the PC, that the mouse pointer slides out of the edge of the display of the PC, the PC intercepts the mouse movement event, and sends a mouse operation parameter included in the mouse movement event to the tablet computer.

S7306: The PC obtains drag event content and a bitmap of the shadow, and sends the drag event content and the bitmap of the shadow to the tablet computer.

The drag event content is used by a drag continuation end device, for example, the tablet computer, to initiate the drag event. For example, when the content in S7302 is a text, the drag event content may include the text (text). For another example, when the content in S7302 is a file or a folder, the drag event content may include a file path (for example, a uniform resource identifier (uniform resource identifier, URJ). Drag data in this application may include the drag event content and the bitmap of the shadow, and may be used by the drag continuation end device, for example, the tablet computer, to display, on a display of the drag continuation device, an animation in which the object moves with the mouse pointer.

In this embodiment, after the keyboard and mouse sharing mode is enabled, when the user wants to transfer, in the drag manner, the content of the PC to the another terminal that creates the virtual input device and that is connected to the PC, for example, the tablet computer, and continue to drag the content on the tablet computer, the user may use the input device of the PC to select the content that the user wants to drag. Subsequently, when the mouse pointer of the PC is displayed on the content, the user may input a drag operation, so that the PC may drag the corresponding object, namely, the content (for example, the selected content in S7302), based on the drag operation.

The drag operation may be an operation used to indicate to initiate the drag event for the selected content. The drag operation may include one operation, or may include a plurality of operations. For example, the drag operation includes two operations: a press operation and a movement operation. For example, the input device is the mouse. The press operation may be a mouse press operation, and the movement operation may be a mouse movement operation. The user may press and move the mouse (to be specific, use the mouse of the PC to input the mouse press operation and the mouse movement operation), to trigger a Windows system of the PC to initiate the drag event for the content, so that the content (for example, the shadow of the content) may move, on the display of the PC, as the mouse pointer of the PC moves. The shadow may also be referred to as a dragged shadow.

In a process in which the content (for example, the shadow of the content) moves with the mouse pointer, the PC may determine whether the dragged content (for example, the shadow of the content) is dragged out of the edge of the display of the PC. The mouse shuttle condition may be triggered when the content (for example, the shadow of the content) is dragged out of the edge of the display of the PC. In this embodiment, that the content is dragged out of the edge of the display of the PC may be that a partial region of the content (for example, the shadow of the content) is dragged out of (or overflows) the display of the PC (that is, a ratio in which the region of the window that overflows the display is greater than a preset threshold), or may be that an entire region of the content (for example, the shadow of the content) is dragged out of (or overflows) the display of the PC, or may be that the mouse pointer slides out of the edge of the display of the PC when the content (for example, the shadow of the content) moves with the mouse pointer on the display of the PC. This is not specifically limited herein in this embodiment. The following uses an example in which determining whether the dragged content (for example, the shadow of the content) is dragged out of the edge of the display of the PC is specifically determining whether the mouse pointer slides out of the edge of the display of the PC for description.

In an example, the user may continuously move the mouse in a same direction, so that the mouse pointer correspondingly displayed on the display of the PC slides over (or slides out of) the edge of the display of the PC, that is, the mouse shuttle condition is triggered.

For example, the PC may determine the coordinate location of the mouse pointer on the display of the PC based on an initial location and relative displacement of the mouse pointer, to determine whether the mouse pointer slides out of the edge of the display of the PC.

After it is determined that the mouse pointer slides out of the edge of the display of the PC, that is, the mouse shuttle condition is triggered, the user may use the input device of the PC to control the another terminal that creates the virtual input device and that is connected to the PC. In other words, after the mouse shuttle condition is triggered, the PC may send, to the another terminal that creates the virtual input device, data of an operation that is input by the user by using the input device of the PC. For example, if the user still continues to move the mouse in the same direction, the PC may intercept a received movement event, for example, the mouse movement event, and transmit an operation parameter, for example, the mouse operation parameter, that is included in the mouse movement event to the another terminal that creates the virtual input device and that is connected to the PC, so that the terminal may continue the drag event.

It should be noted that a specific process in which the PC determines the device for continuing the drag event is similar to a specific implementation process in which the PC determines the device for responding to the operation of the input device of the PC in the embodiment shown in FIG. 60A and FIG. 60B. Details are not described herein again.

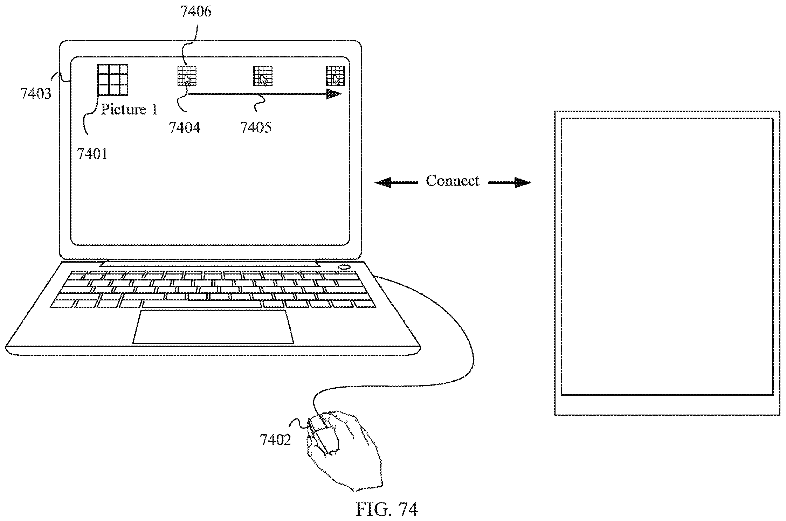

For example, with reference to FIG. 59, after the user selects, by using the mouse, the content that the user wants to drag, a keyboard and mouse module of the PC may receive a corresponding operation, for example, the mouse operation of selecting the content by the user. The user may move the mouse, so that the mouse pointer of the PC is displayed on the content selected by the user. Then, if the user presses and moves the mouse (that is, uses the mouse of the PC to input the press operation (for example, the mouse press operation) and the movement operation (for example, the mouse movement operation), the keyboard and mouse module of the PC may correspondingly receive the press event (for example, the mouse press event) and the movement event (for example, the mouse movement event). In this case, because the mouse shuttle condition is not triggered, a mounted hook does not intercept the input event, and the mouse press event and the mouse movement event are transmitted to the Windows system of the PC. Based on the received mouse press event and mouse movement event, the Windows system of the PC may initiate the drag event for the content, and draw the content For example, the animation (or a drag animation) in which the shadow of the content moves with the mouse pointer is displayed on the display of the PC. For example, as shown in FIG. 74, the user wants to drag a picture 7401 on the PC to the tablet computer, and continue to drag the picture 7401 on the tablet computer. The user selects the picture 7401 by using a mouse 7402, and then presses and moves the mouse 7402. As the mouse 7402 moves, the PC correspondingly displays, on a display 7403 of the PC, an animation in which a shadow 7406 of the picture 7401 moves with a mouse pointer 7404. As shown in FIG. 74, a drag track along which the shadow 7406 of the picture 7401 moves with the mouse pointer 7404 is shown as a track 7405. It should be noted that, in this embodiment, an operation of selecting the content, for example, the mouse operation of selecting the content in S7302, is optional. For example, when the content that the user wants to drag is a file or a folder, the mouse operation of selecting the content may not be performed, but a press operation and a movement operation are performed when the mouse pointer is displayed on the file or the folder, to initiate a drag event for the file or the folder.

In addition, as described in S7301, after the keyboard and mouse sharing mode is enabled, the PC enables input listening, and mounts the hook. After the drag event is initiated, the mouse pointer moves on the display of the PC, and the keyboard and mouse module of the PC may monitor a real-time coordinate location of the mouse pointer on the display of the PC by using input listening. When the keyboard and mouse module of the PC determines, based on the monitored real-time coordinate location of the mouse pointer on the display of the PC, that the mouse pointer slides out of the edge of the display of the PC, it may be determined that the foregoing mouse shuttle condition is met. In this case, the keyboard and mouse module of the PC may determine that a mouse shuttle starts.

After the keyboard and mouse module of the PC determines that the mouse shuttle starts, the keyboard and mouse module of the PC may send, to the tablet computer through the established connection to the tablet computer by using a transmission management module of the PC, shuttle state information used to indicate that the mouse starts to shuttle (where the shuttle state information used to indicate that the mouse starts to shuttle may be the first shuttle state information in embodiments of this application). After receiving the information, the tablet computer may simulate a mouse pointer, and display the mouse pointer on the display of the tablet computer (where the mouse pointer displayed on the display of the tablet computer may be the first cursor in embodiments of this application). The keyboard and mouse module of the PC may alternatively hide the mouse pointer displayed on the display of the PC. Certainly, the object that moves with the mouse pointer, for example, the shadow of the object, is also hidden. For example, with reference to FIG. 74, as the mouse 7402 moves, after the mouse pointer 7404 slides over the edge of a display 7403 of the PC, the PC hides the shadow 7406 of the picture 7401 displayed on the display 7403 of the PC and the mouse pointer 7404. In addition, the tablet computer displays the mouse pointer on the display of the tablet computer. This gives the user a visual effect that the mouse pointer shuttles from the PC to the tablet computer

After the keyboard and mouse module of the PC determines that the mouse shuttle starts, if the user performs an operation on the mouse, the keyboard and mouse module of the PC may intercept, by using the hook, a received corresponding input event, for example, a mouse event, and capture an operation parameter, for example, a mouse operation parameter, in the intercepted mouse event. The mouse operation parameter may include a mouse button flag bit (which is used to indicate which operation of press, uplift, movement, or scroll wheel scrolling is performed by the user on the mouse), coordinate information (which is used to indicate an X coordinate and a Y coordinate for which the mouse moves when the user moves the mouse), scroll wheel information (which is used to indicate an X-axis distance and a Y-axis distance at which a scroll wheel scrolls when the user operates the scroll wheel of the mouse), and button location information (which is used to indicate which button of a left button, a middle button, or a right button of the mouse is operated by the user). The keyboard and mouse module of the PC may further transmit the captured operation parameter, for example, the mouse operation parameter, to the tablet computer through the established connection by using the transmission management module of the PC. The captured operation parameter is used by the tablet computer to respond. For example, still with reference to the example shown in FIG. 74, after the mouse pointer slides over the edge of the display of the PC, the user continues to move the mouse in the same direction. The keyboard and mouse module of the PC may receive a movement event, for example, a mouse movement event. In this case, the keyboard and mouse module of the PC may intercept (or shield) the mouse movement event by using the hook, so that the mouse movement event is not sent to the Windows system of the PC. In this way, the PC does not respond to the received mouse movement event. The keyboard and mouse module of the PC may further capture an operation parameter of the intercepted mouse movement event, for example, a mouse operation parameter, by using the hook, and send the captured mouse operation parameter to the tablet computer through the established connection by using the transmission management module of the PC. In an example, when the mouse event is the mouse movement event, the corresponding mouse operation parameter may be a mouse button flag bit used to indicate that the user moves the mouse, coordinate information used to indicate an X coordinate and a Y coordinate for which the mouse moves, scroll wheel information (where a value is empty), and button location information (where a value is empty).

In addition, after the mouse shuttle starts, the PC (for example, a drag service module of the PC) may identify a current drag state (namely, whether the PC is performing drag) of the PC. If the PC is currently performing drag, the PC may initiate continuation for the drag event, or initiate cross-screen drag. For a Windows end, the drag event needs to be initiated from a window and received by using a window Therefore, after determining that the mouse shuttle starts, the PC may display a nonvisible window, or referred to as an invisible window. For example, after the keyboard and mouse module of the PC determines that the mouse shuttle starts, the keyboard and mouse module of the PC may send, to the drag service module of the PC, a callback indication indicating that the mouse shuttle starts. The drag service module of the PC may send, to a window manager of the PC based on the callback indication, a request used to indicate to create the invisible window. The window manager of the PC may create, based on the request, and display the invisible window. For example, the window manager of the PC may display the invisible window on the edge of the display of the PC. Transparency of the invisible window is greater than a threshold. For example, the transparency of the invisible window is very high, or the invisible window is completely transparent.

After the invisible window is displayed, if the PC is performing drag when the mouse shuttle occurs, that is, when the mouse shuttle occurs, the Windows system of the PC initiates the drag event for the content, the invisible window may receive the drag event from the Windows system. If the PC performs no drag when the mouse shuttle occurs, that is, the user select no any content when moving the mouse, but only moves the mouse, the invisible window receives no drag event After the invisible window receives the drag event, the window manager of the PC may obtain the drag event content from the drag event received by the invisible window. For example, the window manager of the PC may capture the drag event content from the drag event by using a DragEnter event. After obtaining the drag event content, the window manager of the PC may send the drag event content to the tablet computer through the established connection to the tablet computer by using the transmission management module of the PC. Before the drag event content is sent to the tablet computer, the PC may further perform serialization processing on the drag event content. To be specific, the drag event content sent by the PC to the tablet computer may be data obtained after serialization processing is performed.

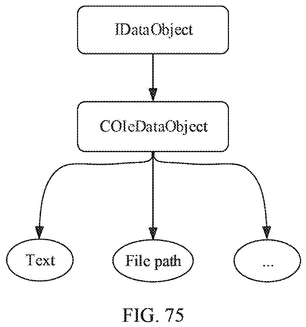

For example, FIG. 75 is a schematic diagram of a data structure of the drag event at the Windows end according to an embodiment of this application. When the drag event enters the invisible window, the invisible window receives a data object, for example, IDataObject that corresponds to the drag event. The window manager of the PC may attach (attach) the data object to COleDataObject. Then, the drag event content in IDataObject corresponding to the drag event is obtained by using the DragEnter event, for example, calling a GetData function. In this embodiment, the drag event content required for continuing the drag event may include a text, a file path, or the like. In an example, the window manager of the PC may obtain the text in IDataObject by using a GetData(CF_UNICODETEXT) function. The window manager of the PC may obtain the file path in IDataObject by using a GetData(CF_HDROP) function. After the text or the file path is obtained, serialization processing may be performed on the text or the file path, and then a processed text or file path is sent to the tablet computer.

In addition, in this embodiment, to display the dragged object at the tablet computer end, for example, the animation in which the shadow of the object moves with the mouse pointer, because the shadow and the bitmap (bitmap) may be mutually converted, the PC further needs to obtain the bitmap (bitmap) of the shadow displayed at the PC end. For example, the PC may obtain the bitmap of the shadow in a manner of capturing an image that is displayed on the display of the PC and that is of the dragged content. For another example, the dragged content is the text. The PC may generate the bitmap of the shadow based on the dragged text. For still another example, the dragged content is the file. The PC may find the dragged content based on the obtained file path of the dragged content, to determine a type (for example, an image file) of the dragged content, and then use a corresponding default material as the bitmap of the shadow based on the type, or may obtain a thumbnail of the content as the bitmap of the shadow based on the obtained file path of the dragged content. The bitmap of the shadow may be sent to the tablet computer through the established connection to the tablet computer by using the transmission management module of the PC. Before the bitmap of the shadow is sent to the tablet computer, the PC may further perform serialization processing on the bitmap of the shadow. To be specific, the bitmap of the shadow sent by the PC to the tablet computer may be data obtained after serialization processing is performed.

S7307: The tablet computer receives the drag event content and the bitmap of the shadow, and initiates a drag event based on the drag event content and the bitmap of the shadow.

S7308: The tablet computer receives the mouse operation parameter, and simulates the mouse movement event based on the mouse operation parameter.

S7309: The tablet computer generates the mouse press event.

After receiving the drag event content and the bitmap of the shadow, the tablet computer may parse the drag event content and the bitmap of the shadow, and initiate the drag event. For an Android system, the drag event needs to be initiated from a view control and received by using a view control. Therefore, the tablet computer may enable a transparent activity (activity), or referred to as an invisible activity. The invisible activity has a view control whose transparency is greater than a threshold. By using the view control and by invoking an Android open source project (Android open source project, AOSP) interface, the tablet computer may initiate the corresponding drag event based on the received drag event content and bitmap of the shadow, to continue the drag event on the tablet computer.

For example, with reference to FIG. 59 and the example shown in FIG. 75, after receiving the drag event content and the bitmap of the shadow, a transmission management module of the tablet computer may transmit the drag event content and the bitmap of the shadow to a drag service module of the tablet computer. The drag service module of the tablet computer parses the receive drag event content to obtain the text or the file path from the PC. Based on the obtained text or file path, the drag service module of the PC may construct content data (clipData) of the drag event. In addition, the drag service module of the tablet computer may further generate a corresponding shadow based on the received bitmap of the shadow. Then, by using the view control of the transparent activity enabled by the tablet computer, the drag service module of the tablet computer may invoke a startDragAndDrop method provided by the AOSP interface, and use the clipData and the shadow as an input parameter, to initiate the drag event at the tablet computer end. Certainly, if the PC further performs serialization processing before sending the drag event content and the bitmap of the shadow to the tablet computer, after receiving the corresponding data, the tablet computer performs deserialization processing to obtain the drag event content and the bitmap of the shadow.

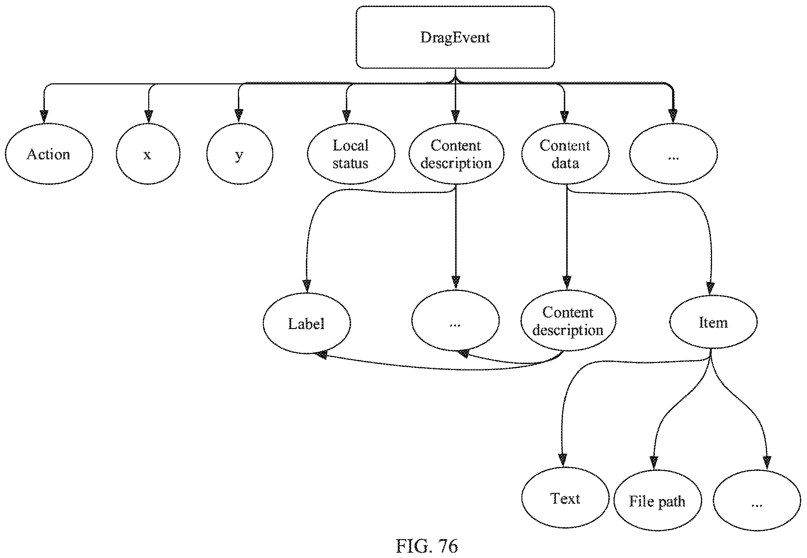

In an example, FIG. 76 is a schematic diagram of a data structure of the drag event (DragEvent) at an Android end according to an embodiment of this application. With reference to FIG. 76, the drag service module of the tablet computer may construct the content data (clipData) based on the text (text), the file path (URI), or the like received from the PC (where the text or the file path is included in an item (item) included in the content data), generate the corresponding shadow based on the received bitmap of the shadow, invoke the startDragAndDrop method of the AOSP, and use the clipData, the shadow, another parameter (for example, an action (action, which may include start, entering, hovering, release, leaving, end, and the like), a current x coordinate, a current y coordinate, a local state (local state), a content description (clipdescription)) obtained based on information about the operation of the user for the mouse (for example, the received mouse movement event), and the like as an input parameter, to initiate (dispatch) the drag event (DragEvent) at the tablet computer end.

It should be noted that, with reference to FIG. 76, the content description includes a label (label). The label is used to indicate whether the drag event is initiated by the drag service module of the tablet computer or initiated by an application on the tablet computer. For example, the label is a string (String). For example, when being "windowscast", the label is used to indicate that the drag event is initiated by the drag service module of the tablet computer, or when being not "windowscast", the label is used to indicate that the drag event is not initiated by the drag service module of the tablet computer, but initiated by the application on the tablet computer. In the foregoing example, because the drag event is initiated by the drag service module, the label in the content description of the drag event is "windowscast". Specific descriptions and a construction rule of the another parameter are similar to a corresponding implementation of generating an original drag event at the Android end in the conventional technology. Details are not described herein again.

It may be understood that execution of the drag event may be triggered by the drag operation, and the drag operation may include the press operation (for example, the mouse press operation) and the movement operation (for example, the mouse movement operation). However, when the user wants to transfer the content on the PC to the tablet computer in the drag manner, and continue to drag the content on the tablet computer, after the user moves the mouse to trigger a mouse shuttle, the user continues to move the mouse in the same direction. In other words, the user inputs the movement operation by using the input device of the PC, for example, inputs the mouse movement operation by using the mouse of the PC. In this case, as described in S7305, after the user inputs the mouse movement operation by using the mouse of the PC, the keyboard and mouse module of the PC intercepts the corresponding received movement event, for example, the mouse movement event, captures and processes the operation parameter, for example, the mouse operation parameter, that is included in the mouse movement event, and then sends a processed mouse operation parameter to the tablet computer by using the transmission management module of the PC, for example, sends the processed mouse operation parameter to the transmission management module of the tablet computer. In this case, the transmission management module of the tablet computer may receive the mouse operation parameter. Because operating systems of the PC and the tablet computer are different, button values of mouse operation parameters in mouse events of the PC and the tablet computer are different. Therefore, after receiving the mouse operation parameter, the tablet computer may convert, based on a preset mapping relationship, a button bit code of the received mouse operation parameter into a button bit code that can be identified by the tablet computer. Then, the tablet computer (for example, a keyboard and mouse module of the tablet computer) may simulate, by using a created virtual input device and based on a mouse operation parameter obtained after the button bit code is converted, an input event that can be identified by the tablet computer, for example, the mouse event, to simulate a movement event that can be identified by the tablet computer, for example, the mouse movement event The keyboard and mouse module of the tablet computer may further send the mouse movement event to a framework layer of the tablet computer.

In addition, when the mouse shuttle starts, a shuttle initiator, namely, the PC, is in a state of being performing drag, that is, the PC is in a mouse press state, and a shuttle target end, namely, the tablet computer, may receive only the mouse movement event, that is, is not in the mouse press state. Therefore, the tablet computer may generate a press operation, for example, a mouse press operation. For example, after the tablet computer invokes the startDragAndDrop method provided by the AOSP interface, the tablet computer may receive a drag start callback (onDragStart). In this case, the tablet computer may determine, based on the label in the drag event initiated by the tablet computer, whether the drag event is initiated by the drag service module of the tablet computer. When it is determined that the drag event is initiated by the drag service module of the tablet computer (for example, the label is "windowscast"), the tablet computer may generate (or simulate) a press event, for example, the mouse press event, based on an operation parameter of the press operation, for example, the mouse press operation and by using the created virtual input device. For example, the drag service module of the tablet computer controls the keyboard and mouse module of the tablet computer to send the mouse press event to the framework layer of the tablet computer by using the created virtual input device. In this way, only the drag event initiated in S7307 at the tablet computer end can be attached to the mouse pointer displayed on the display of the tablet computer.

S7310: The tablet computer performs the drag event based on the mouse movement event and the mouse press event, and displays, on the display of the tablet computer, an animation in which the shadow of the content moves with the mouse pointer.

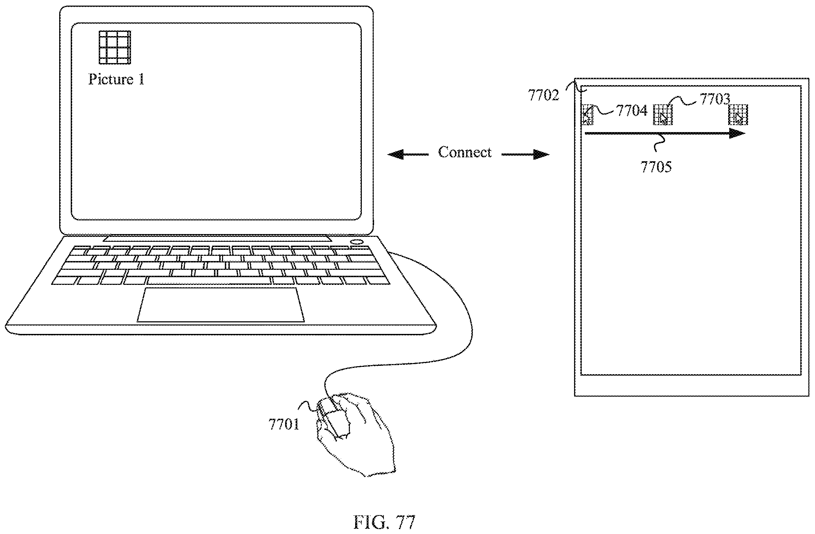

The tablet computer (for example, the framework layer of the tablet computer) may perform, based on the movement event, for example, the mouse movement event, and the press event, for example, the mouse press event, the drag event initiated in S7307. In a process of performing the drag event, the tablet computer may further display the content on the display of the tablet computer, for example, an animation in which the shadow of the content moves with the mouse pointer (where the mouse pointer may be the first cursor in embodiments of this application). For example, with reference to FIG. 74, as shown in FIG. 77, as a mouse 7701 moves, the tablet computer correspondingly displays, on a display 7702 of the tablet computer, an animation in which a shadow 7703 of a picture moves with a mouse pointer 7704. As shown in FIG. 77, a drag track along which the shadow 7703 of the picture moves with the mouse pointer 7704 is shown as a track 7705.

After the user drags the content from the PC to the tablet computer in the drag manner, and continues to drag the content on the tablet computer, because at the tablet computer end, the drag event is attached to the mouse pointer displayed on the display of the tablet computer, the user may accurately select a mouse release point by using the mouse pointer. For example, if the user wants to use or process the content on the tablet computer, the user may release the mouse after moving the mouse pointer to a view control that is on the tablet computer and that is of the content that the user wants to use or process. After the mouse is released, the keyboard and mouse module of the PC may receive a corresponding uplift event, for example, a mouse uplift event. Because the mouse uplift event is received by the PC after the mouse shuttle starts, the keyboard and mouse module of the PC intercepts (or shields) the mouse uplift event by using the hook, so that the mouse uplift event is not sent to the Windows system of the PC. In this way, the PC does not respond to the received mouse uplift event The keyboard and mouse module of the PC may further capture an operation parameter included in the mouse uplift event, for example, a mouse operation parameter, by using the hook, and send the captured mouse operation parameter to the tablet computer through the established connection by using the transmission management module of the PC. The mouse operation parameter of the mouse uplift event may include a mouse button flag bit used to indicate that the user uplifts the mouse, coordinate information (where a value is empty), scroll wheel information (where a value is empty), and button location information used to indicate that the user performs an operation on a left button of the mouse. Correspondingly, the transmission management module of the tablet computer may receive the mouse operation parameter. After the tablet computer receives the mouse operation parameter, the tablet computer may convert, based on the preset mapping relationship, a button bit code of the received mouse operation parameter into a button bit code that can be identified by the tablet computer. Then, the tablet computer may simulate, by using the created virtual input device and based on an operation parameter obtained after the button bit code is converted, for example, the mouse operation parameter, a mouse event that can be identified by the tablet computer, that is, may simulate a corresponding input event, for example, the mouse uplift event.

After simulating the mouse uplift event, the tablet computer may determine the mouse release point based on a current coordinate location of the mouse pointer. For example, after the tablet computer learns that a keyboard and mouse shuttle starts, the tablet computer may register a listener for the coordinate location of the mouse pointer. In this way, the tablet computer may monitor the coordinate location of the mouse pointer on the display of the tablet computer in real time by using the listener. Based on this, after the tablet computer receives the mouse uplift event, the tablet computer may obtain a current coordinate location of the mouse pointer on the display of the tablet computer by using the listener. The tablet computer may determine the mouse release point based on the obtained coordinate location. For another example, after the tablet computer invokes the startDragAndDrop method of the AOSP to initiate the drag event, the tablet computer listens to an input event For example, when the user continues dragging on the tablet computer, the tablet computer may listen to a movement event, for example, a mouse movement event, and the tablet computer may obtain an operation parameter, for example, a mouse operation parameter, of the mouse movement event based on the mouse movement event, for example, extract the parameter from MotionEvent. The mouse operation parameter includes coordinate information used to indicate a mouse location. Then, after the user uplifts a finger, and the tablet computer listens and detects an uplift event, for example, a mouse uplift event, the tablet computer may determine the coordinate location of the mouse pointer based on the previously obtained coordinate information, to determine the mouse release point based on the obtained coordinate location.

After the user releases the mouse, because the PC end directly intercepts the received uplift event, for example, the mouse uplift event, the drag event at the PC end is not released. In this case, after receiving the mouse uplift event, the tablet computer may send signaling to the PC through the established connection, to notify the PC of a drag release event.

In addition, the tablet computer may further correspondingly respond to the uplift event, for example, the mouse uplift event For example, the content in S7302 is a text After the tablet computer simulates the mouse uplift event, the drag service module of the tablet computer may send the content data in the drag event to a view control at the mouse release point. The content data includes the text. After receiving the content data, the view control may perform corresponding processing based on the text in the content data, for example, display the text on the view control. For another example, the content in S7302 is a file. In a process of dragging the file on the tablet computer, the file is actually not transmitted to the tablet computer. Therefore, after the user releases the mouse, and the PC receives, from the tablet computer, the signaling for notifying the drag release event, the PC may transfer the file to the tablet computer. After receiving the file, the tablet computer may store the file in a predetermined cache directory. In this case, the drag service module of the tablet computer may obtain a URI (for example, referred to as URI 1) of the file. The URI 1 is a path of the file in the cache directory, and is different from the URI in the drag event content sent by the PC to the tablet computer in S7307 (where the URI sent by the PC is a storage path of the file on the PC). The drag service module of the tablet computer may construct new content data based on the URI 1, and in response to the mouse uplift event, send the content data to the view control at the mouse release point After receiving the content data, the view control may perform corresponding processing. For example, if the view control is a view control in a notepad, the file may be displayed. For another example, if the view control is an input box in a chat window, the file may be sent

In some other embodiments, when the tablet computer further establishes a connection to another device, for example, a mobile phone, if the user wants to continue to drag the content to the mobile phone, the user may continue to move the mouse, so that the mouse pointer on the tablet computer slides over an edge of the display of the tablet computer, and triggers a mouse shuttle from the tablet computer to the mobile phone, to continue the drag event on the mobile phone. It should be noted that, after the mouse shuttles to the mobile phone, the PC may directly interact with the mobile phone, so that the mobile phone continues the drag event. Specific descriptions of continuing the drag event on the mobile phone are similar to the specific descriptions of continuing the drag event on the tablet computer. Details are not described herein again.

It may be understood that, by using the foregoing process, on a premise that projection is not started, the user may use the input device, for example, the mouse of the PC, to move content, for example, a text or a file in an application on the PC, to an edge of a screen of the PC in a drag manner and continue to move the content in a same direction, to trigger a mouse shuttle. After the mouse shuttle starts, the mouse pointer appears on the tablet computer. In addition, the PC sends drag event content to the tablet computer, so that a drag event may continue to be attached to the mouse pointer of the tablet computer, to continue the drag event on the tablet computer. This gives the user a visual effect of dragging the content from the PC to the tablet computer.

In this embodiment of this application, the user may not only have a requirement of transferring the content on the PC to the tablet computer in the drag manner, and continuing to drag the content on the tablet computer, but also have a requirement of transferring content on the tablet computer to the PC in a drag manner. For example, with reference to the examples in S7301 to S7310, the user transfers a picture 1 on the PC to the tablet computer in the drag manner, and releases the mouse after continuing to drag the picture I on the tablet computer. Then, the user edits the picture 1 by using a stylus of the tablet computer, and then saves an edited picture 1. The user wants to transfer the edited picture 1 to the PC in the drag manner, and release the mouse after continuing to drag the picture I on the PC, to save the edited picture 1 on the PC end.

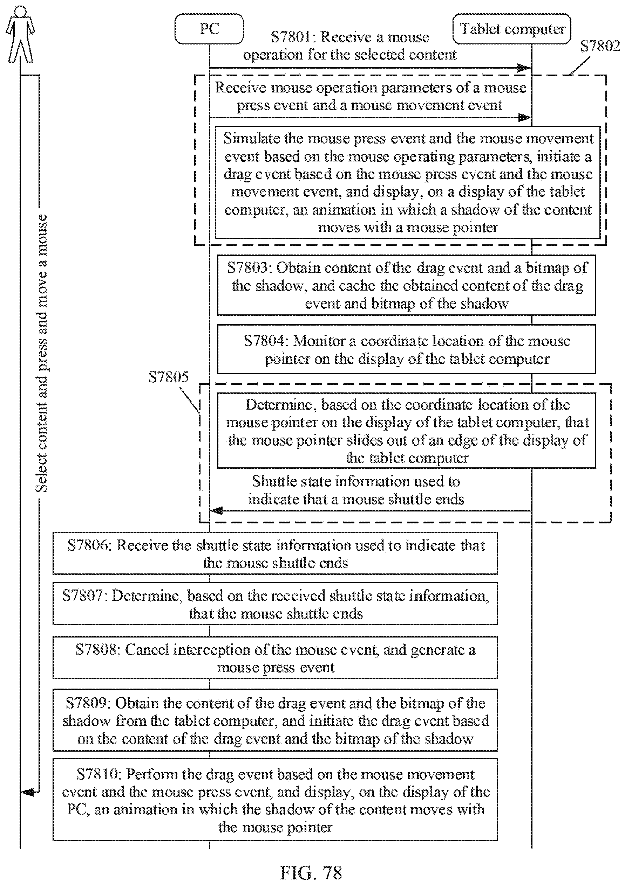

FIG. 78 is a schematic flowchart of another object drag method according to an embodiment of this application. With reference to the embodiment shown in FIG. 73, the following describes the method provided in this embodiment by using an example in which after a mouse shuttle occurs, the user wants to transfer content on the tablet computer to the PC in a drag manner and continue drag the content on the PC. As shown in FIG. 78, the method may include the following S7801 to S7810.

S7801: The tablet computer receives a mouse operation that is of selecting the content and that is from the PC.

S7802: The tablet computer receives mouse operation parameters of a mouse press event and a mouse movement event from the PC, simulates the mouse press event and the mouse movement event based on the mouse operation parameters, initiates a drag event based on the mouse press event and the mouse movement event, and displays, on the display of the tablet computer, an animation in which a shadow of the content moves with a mouse pointer.

In this embodiment, the mouse operation parameter of the mouse press event may be the first operation parameter in embodiments of this application, and the mouse operation parameter of the mouse movement event may be the second operation parameter in embodiments of this application.

As described in the embodiment shown in FIG. 73, after the keyboard and mouse sharing mode is enabled, if the mouse shuttle occurs, the PC uses the mounted hook to intercept a corresponding input event, for example, a mouse event, after the user operates the input device of the PC, for example, the mouse. In addition, the PC captures an operation parameter included in the intercepted mouse event, for example, a mouse operation parameter, and sends the captured operation parameter to the tablet computer. For example, after the mouse shuttles to the tablet computer, the user wants to transfer the content on the tablet computer to the PC in the drag manner and continue to drag the content on the PC. With reference to FIG. 59, the user uses the input device of the PC, for example, the mouse, to select the content that the user wants to drag. The keyboard and mouse module of the PC may receive a corresponding input operation, for example, a mouse operation. The keyboard and mouse module of the PC intercepts a received corresponding input event, for example, a mouse event, by using the hook, so that the input event is not sent to the Windows system of the PC. In this way, the PC does not respond to the received input event. The keyboard and mouse module of the PC further captures, by using the hook, an operation parameter in the intercepted input event, for example, a mouse operation parameter, and transmits the operation parameter to the tablet computer through an established connection by using the transmission management module of the PC. In this case, the transmission management module of the tablet computer may receive the corresponding operation parameter, for example, the mouse operation parameter. After performing button bit code conversion on the received operation parameter, the tablet computer may simulate the corresponding input event, for example, the mouse event, by using the created virtual input device.

Then, when the mouse pointer of the tablet computer is displayed on an object that the user wants to drag, for example, the content selected by the user, the user may use the input device of the PC, for example, the mouse, to input a drag operation, so that the tablet computer may drag the corresponding object, that is, drag the content, based on the drag operation. The drag operation may be an operation used to indicate to initiate the drag event for the selected content. The drag operation may include one operation, or may include a plurality of operations. For example, the drag operation includes two operations: a press operation and a movement operation. For example, the input device is the mouse. The press operation may be a mouse press operation, and the movement operation may be a mouse movement operation. For example, the user may press and move the mouse of the PC, that is, use the mouse of the PC to input the mouse press operation and the mouse movement operation. Then, the keyboard and mouse module of the PC may correspondingly receive a press event (for example, the mouse press event) and a movement event (for example, the mouse movement event). Similarly, the keyboard and mouse module of the PC may intercept the received mouse press event and mouse movement event by using the hook, capture the operation parameters of the intercepted mouse press event and mouse movement event, for example, the mouse operating parameters, and send the captured operation parameters to the tablet computer through the established connection by using the transmission management module of the PC. In this case, the transmission management module of the tablet computer may receive the corresponding operation parameter, for example, the mouse operation parameter. After performing button bit code conversion on the received operation parameter, the tablet computer may simulate the corresponding input event by using the created virtual input device, for example, simulate the press event (for example, the mouse press event) and the movement event (for example, the mouse movement event).

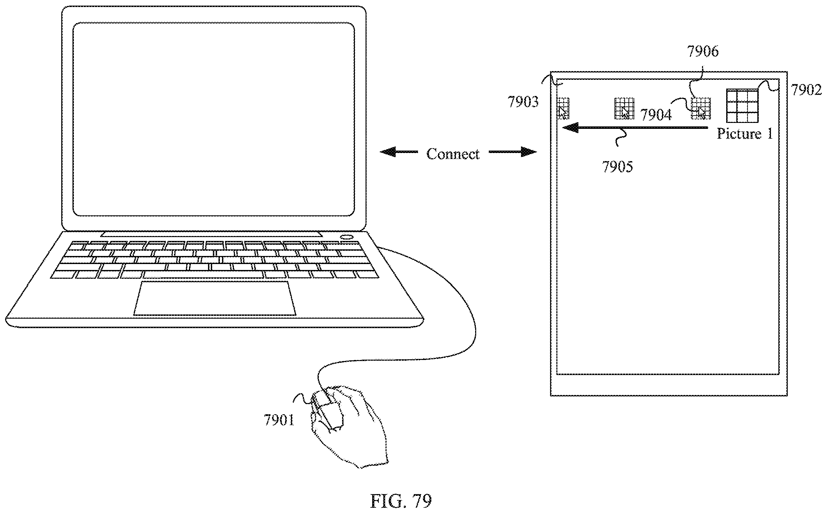

After the tablet computer simulates the press event (for example, the mouse press event) and the movement event (for example, the mouse movement event), in response to these events, the tablet computer may initiate the drag event by using a corresponding application (for example, if the selected content is a Word document, the application is an office application, for another example, if the selected content is a picture in a file manager, the application is the file manager, or for still another example, if the selected content is a text in a notepad, the application is the notepad), and draw the content. For example, the animation in which the shadow of the content moves with the mouse pointer is displayed on the display of the tablet computer. For example, the user edits, by using the stylus of the tablet computer, the picture 1 dragged from the PC, and then saves the edited picture 1. The user wants to drag the edited picture to the PC and continue to drag the edited picture on the PC. As shown in FIG. 79, the user may use a mouse 7901 to select an edited picture 7902, and then press and move the mouse 7901. As the mouse 7901 moves, the tablet computer correspondingly displays, on a display 7903 of the tablet computer, an animation in which a shadow 7906 of the edited picture 7902 moves with a mouse pointer 7904. As shown in FIG. 79, a drag track along which the shadow 7906 of the picture 7902 moves with the mouse pointer 7904 is shown as a track 7905.

It should be noted that the foregoing uses an example in which a drag trigger event includes the press event and the movement event for description. For example, the user may press and move the mouse to trigger drag. In some other embodiments, the drag trigger event may include only the press event. For example, the user may trigger drag by touching and holding the mouse, or the user may trigger drag by pressing the mouse. This is not specifically limited herein in this embodiment.

S71303: The tablet computer obtains drag event content and a bitmap of the shadow, and cache the obtained drag event content and bitmap of the shadow.

The drag event content is used by the drag continuation device to construct the drag event. For example, when the content in S7801 is a text, the drag event content may include the text (text). For another example, when the content in S7801 is a file or a folder, the drag event content may include a file path (for example, a URI).

For example, with reference to FIG. 59, when the application on the tablet computer initiates the drag event, the corresponding drag event content may be called back by a framework layer to an application layer. For example, when the application invokes the startDragAndDrop method provided by the AOSP interface to initiate the drag event, the framework layer may extract the drag event content in a manner of program instrumentation. For example, a location and content that require instrumentation may be predetermined, and then program instrumentation is performed based on the determined location and content, to extract the drag event content Then, the framework layer of the tablet computer may call back the extracted drag event content to the drag service module at the application layer of the tablet computer. After obtaining the drag event content, the drag service module of the tablet computer may cache the drag event content. In an example, the drag event content required for continuing the drag event may include a text, a file path, or the like. When the application initiates the drag event, the framework layer may extract the text or the file path in the manner of program instrumentation.

In addition, in this embodiment, the drag event may be initiated in two manners. In one manner, the drag service module of the tablet computer initiates the drag event (to be specific, drag shuttles from the PC to the tablet computer, as described in the embodiment shown in FIG. 73). In the other manner, drag is initiated by the application on the tablet computer. In addition, with reference to the descriptions of the data structure shown in FIG. 76 in the embodiment shown in FIG. 73, it may be learned that, in this embodiment, a content description of the drag event on the tablet computer includes a label (label), used to indicate whether the drag event is initiated by the drag service module of the tablet computer or initiated by the application on the tablet computer. It may be understood that, the drag event content needs, only when the drag event is initiated by the application on the tablet computer, or not initiated by the drag service module of the tablet computer, to be obtained and cached, so that the drag event content is used by the PC to continue the drag event after drag shuttles to the PC. In other words, after the drag event is initiated, the tablet computer may distinguish, based on the label (label) in the content description of the drag event, whether the drag event is initiated by the application on the tablet computer or initiated by the drag service module of the tablet computer. If the label is not "windowscast", it may be determined that the drag event is not initiated by the drag service module of the tablet computer, but initiated by the application of the tablet computer. The framework layer needs, only when the drag event is not initiated by the drag service module of the tablet computer, to obtain the drag event content, and send the obtained drag event content to the drag service module of the tablet computer, so that the drag service module caches the drag event content

In addition, in this embodiment, the framework layer may further obtain the bitmap (bitmap) of the shadow through a new interface or an original interface (for example, an interface for calling back clipData). The obtained bitmap of the shadow may also be called back to the drag service module at the application layer of the tablet computer. After obtaining the bitmap of the shadow, the drag service module of the tablet computer may also cache the bitmap of the shadow.

S7804: The tablet computer monitors a coordinate location of the mouse pointer on the display of the tablet computer.

S7805: When determining, based on the coordinate location of the mouse pointer on the display of the tablet computer, that the mouse pointer slides out of the edge of the display of the tablet computer, the tablet computer sends, to the PC, shuttle state information used to indicate that the mouse shuttle ends.

S7806: The PC receives the shuttle state information used to indicate that the mouse shuttle ends.

The shuttle state information used to indicate that the mouse shuttle ends may be the second shuttle state information in embodiments of this application.

In a process in which the content (for example, the shadow of the content) moves with the mouse pointer, the tablet computer may determine whether the dragged content (for example, the shadow of the content) is dragged out of the edge of the display of the tablet computer. When the content (for example, the shadow of the content) is dragged out of the edge of the display of the tablet computer, it indicates that the user wants to control another device by using the mouse. In this embodiment, specific descriptions of dragging the content out of the edge of the display of the tablet computer are similar to the specific descriptions of dragging the content out of the PC. Details are not described herein again. The following uses an example in which determining whether the dragged content (for example, the shadow of the content) is dragged out of the edge of the display of the tablet computer is specifically determining whether the mouse pointer slides out of the edge of the display of the tablet computer for description.

In an example, after the drag event is initiated, the mouse pointer moves on the display of the tablet computer, and the tablet computer may monitor a real-time coordinate location of the mouse pointer on the display of the tablet computer. For example, after a keyboard and mouse shuttle starts, the tablet computer may register a listener for the coordinate location of the mouse pointer. In this way, the tablet computer may monitor the coordinate location of the mouse pointer on the display of the tablet computer in real time by using the listener. The tablet computer may determine, based on a real-time coordinate location that is of the mouse pointer on the display of the tablet computer and that is monitored by the listener, whether the mouse pointer slides over the edge of the display of the tablet computer. For example, the tablet computer may determine the coordinate location of the mouse pointer on the display of the tablet computer based on an initial location and relative displacement of the mouse pointer, to determine whether the mouse pointer slides out of the edge of the display of the tablet computer. The initial location of the mouse pointer may be a coordinate location of the mouse pointer on the display of the tablet computer when the mouse starts to move, or a coordinate location of the mouse pointer on the display of the tablet computer before the mouse starts to move. The initial location of the mouse pointer may be specifically a coordinate location in a coordinate system in which the upper left corner of the display of the tablet computer is used as a coordinate origin, an X axis points from the upper left corner to the right edge of the display of the tablet computer, and a Y axis points from the upper left corner to the lower edge of the display of the tablet computer. A specific implementation in which the tablet computer determines that the mouse pointer slides out of the edge of the display of the mobile phone is similar to a specific implementation in which the PC determines that the mouse pointer slides out of the edge of the display of the PC. Details are not described herein again.

After the tablet computer determines that the mouse pointer slides over the edge of the display of the tablet computer, it indicates that the user wants to control the another device by using the mouse. As described in S7306, if the tablet computer establishes the connection to only the PC, it indicates that the user wants to control the PC by using the mouse. If the tablet computer establishes connections to a plurality of devices, the mobile phone may display a list option. The list option includes identifiers of all the devices connected to the tablet computer, for the user to select a device that the user wants to control by using the mouse. If the user selects the identifier of the PC, it indicates that the user wants to control the PC by using the mouse. Alternatively, a shuttle relationship may be preconfigured on the tablet computer, and is used to determine a device to which the mouse shuttles, that is, determine which device responds to the operation of the mouse. Specific descriptions of configuration and application of the shuttle relationship are similar to descriptions of corresponding content in the foregoing embodiment. Details are not described herein again. When it is determined that the user wants to control the PC by using the mouse, the tablet computer may determine that the mouse shuttle ends. In this case, the tablet computer may send, to the PC through the established connection, the shuttle state information used to indicate that the mouse shuttle ends.

S7807: The PC determines, based on the received shuttle state information, that the mouse shuttle ends.

S7808: The PC cancels interception of the mouse event, and generates a mouse press event.

S7809: The PC obtains the drag event content and the bitmap of the shadow from the tablet computer, and initiates a drag event based on the drag event content and the bitmap of the shadow.

Drag data in this application may include the drag event content and the bitmap of the shadow. After receiving the shuttle state information used to indicate that the mouse shuttle ends, the PC may determine that the mouse shuttle ends.

After determining that the mouse shuttle ends, the PC may display the mouse pointer on the display of the PC. With reference to the descriptions in the embodiment shown in FIG. 73, when the mouse shuttle starts, the PC hides the mouse pointer on the display of the PC. Therefore, after determining that the mouse shuttle ends, the PC may display the mouse pointer on the display of the PC again. In addition, a trigger condition for starting the mouse shuttle is that the mouse pointer slides over the edge of the display of the PC. Therefore, the mouse pointer is displayed on the edge of the display of the PC before being hidden. In this case, in this embodiment, when the mouse shuttle ends, after the PC cancels hiding of the mouse pointer, the mouse pointer is displayed on the edge of the display of the PC. Certainly, when the mouse shuttle ends, the mouse pointer at the tablet computer is no longer displayed. This gives the user a visual effect that the mouse pointer shuttles from the tablet computer to the PC.

After it is determined that the mouse shuttle ends, the PC further needs to uninstall the hook (or close the hook), to cancel interception for the input device, for example, the mouse event. For example, after the user transfers the content on the tablet computer to the PC in the drag manner by moving the mouse, and triggers the mouse to end the shuttle, the user continues to move the mouse in a same direction, and the keyboard and mouse module of the PC may receive a movement event, for example, a mouse movement event. Because the HOOK has been uninstalled at this time, the keyboard and mouse module of the PC sends the received movement event, for example, the mouse movement event, to the Windows system of the PC, so that the Windows system of the PC responds to the movement event.

In addition, before the mouse shuttle ends, the tablet computer is in a state of being performing drag, and that the mouse shuttles back to the PC is to continue drag, that is, continue drag on the PC. On a Windows platform, drag can be normally initiated only when the mouse is pressed on a window. However, in a process in which the user continues to move the mouse, the PC may receive only the movement event, for example, a mouse movement event, that is, does not receive the press event, for example, the mouse press event. Therefore, the PC (for example, the drag service module of the PC) may generate a press event, for example, a mouse press event, and transmit the press event to an invisible window. For example, after the PC determines that the mouse shuttle ends, when the tablet computer is being in drag, the PC may generate the mouse press event, and transmit the mouse press event to the invisible window, so that the drag event initiated by the PC end in S7809 can be attached to the mouse pointer displayed on the display of the PC, that is, the drag event continues on the PC.

In this embodiment, after determining that the mouse shuttle ends, the PC may further request a drag state (namely, whether the tablet computer is being in drag) of the tablet computer from the tablet computer. When the drag state returned by the tablet computer indicates that the tablet computer is being in drag, the PC may request the drag event content and the bitmap of the shadow from the tablet computer. The PC may send a request message to the tablet computer. The request message may be used to request drag data, that is, is used to request the drag event content and the bit of the shadow.

For example, with reference to FIG. 59, when the PC determines that the mouse shuttle ends, the keyboard and mouse module of the PC may send, to the drag service module of the PC, an indication indicating that the mouse shuttle ends. The drag service module of the PC may request the drag state from the tablet computer based on the received indication by using the transmission management module of the PC. When the drag state returned by the tablet computer indicates that the tablet computer is being in drag, the drag service module of the PC may request, from the tablet computer by using the transmission management module of the PC, the drag event content and the bitmap of the shadow. Correspondingly, the transmission management module of the tablet computer may receive the request, and forward the request to the drag service module of the tablet computer. After receiving the request, the drag service module of the tablet computer may feed back, to the transmission management module of the PC by using the transmission management module of the tablet computer, the drag event content and the bitmap of the shadow that are cached in S7803.

With reference to the descriptions in S7803, after receiving the drag event content, the transmission management module of the PC may transmit the drag event content to the drag service module of the PC. The drag service module of the PC parses the receive drag event content to obtain the text or the file path from the tablet computer. Based on the obtained text or file path, the drag service module of the PC may construct a data object of the drag event, for example, IDataObject. In addition, after receiving the bitmap of the shadow, the transmission management module of the PC may restore the shadow at the PC end based on the bitmap. For example, an IDragSourceHelper interface provided by the PC end may be used to restore the shadow. Then, the PC may initiate the drag event at the PC end. For example, with reference to the descriptions in the embodiment shown in FIG. 73, when the mouse shuttle starts, the PC displays an invisible window. Therefore, the PC may initiate the drag event by using the displayed invisible window. After the drag event is initiated, the invisible window may be closed.

S7810: The PC performs the drag event based on the mouse movement event and the mouse press event, and displays, on the display of the PC, an animation in which the shadow of the content moves with the mouse pointer.

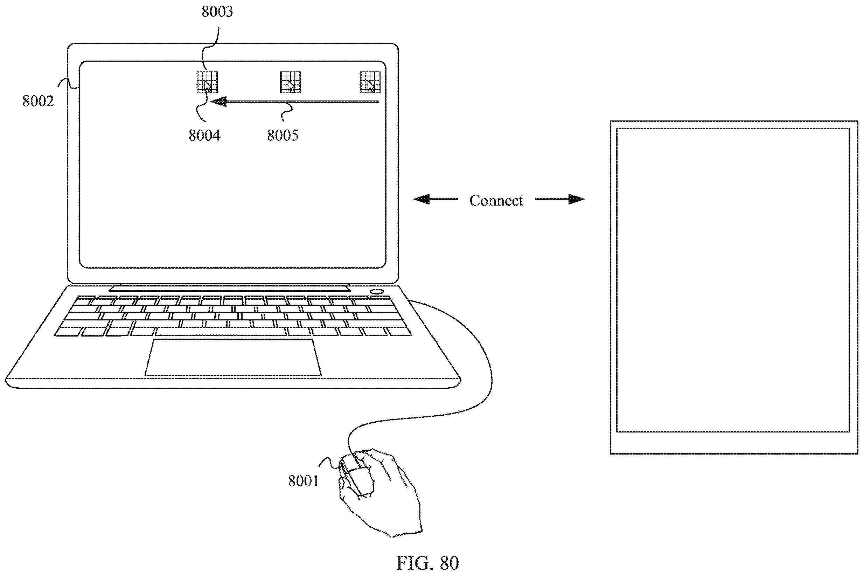

After the drag event is initiated, in response to the movement event, for example, the mouse movement event, and the press event, for example, the mouse press event, the PC may perform the drag event, and display the content on the display of the PC, for example, the animation in which the shadow of the content moves with the mouse pointer. For example, with reference to FIG. 79, as shown in FIG. 80, as a mouse 8001 moves, the PC correspondingly displays, on a display 8002 of the PC, an animation in which a shadow 8003 of an edited picture moves with a mouse pointer 8004. As shown in FIG. 80, a drag track along which the shadow 8003 moves with the mouse pointer 8004 is shown as a track 8005.

It should be noted that, in the foregoing example, an example in which the user first drags the content from the PC to the tablet computer, and then drags the content from the tablet computer to the PC is used for description. In some other embodiments, the user may not drag the content from the PC to the tablet computer, but directly drag content on the tablet computer to the PC. A specific implementation in this embodiment is similar to the specific implementation in the embodiments shown in FIG. 73 and FIG. 78, and a difference lies in that S7302 is not performed. S7303 is replaced with receiving the movement event (for example, the mouse movement event), and displaying the animation in which the mouse pointer moves on the display of the PC based on the movement event. S7306 is not performed, but an operation of displaying the invisible window by the PC needs to be performed, but the invisible window does not receive the drag event. S7307 and S7309 are not performed. S7310 is replaced with that the tablet computer displays, on the display of the tablet computer based on the movement event, for example, the mouse movement event, the animation in which the mouse pointer moves. In other words, after the mouse shuttle starts, the tablet computer may receive an operation that is of moving the mouse pointer (for example, referred to as a first cursor) displayed by the tablet computer end and that is input by the user by using the input device of the PC, for example, the mouse. In response to the operation, the tablet computer may display, on the display of the tablet computer, the animation in which the mouse pointer moves. If the user wants to drag a piece of content, the user may continue to move the mouse of the PC until the mouse pointer moves to the content. That the tablet computer receives the operation that is of moving the first cursor and that is input by the user by using the input device of the PC, for example, the mouse, may be specifically: The PC intercepts a corresponding movement event, for example, a mouse movement event, and sends, to the tablet computer, an operation parameter, for example, referred to as a third operation parameter, that is included in the movement event. The tablet computer may simulate the movement event, for example, the mouse movement event, based on the third operation parameter, to display, on the display of the tablet computer, an animation in which the mouse pointer moves. Another operation is similar. Details are not described herein again in this embodiment of this application.

In the foregoing embodiment, an example in which the tablet computer caches the drag data when drag starts, and the PC requests the drag data from the tablet computer after the mouse shuttle ends is used for description. In some other embodiments, when the drag starts, the tablet computer may not cache the drag data, but after determining that the mouse shuttle ends, obtains and actively sends the drag data to the PC without a request of the PC.

According to the method provided in this embodiment, on the premise that projection is not started, by using a keyboard and mouse sharing technology, the user can use the input device, for example, the mouse, to enable, in a drag manner, the content, for example, the text or the file, to shuttle with the mouse pointer between a plurality of terminals participating in collaborative use. In addition, the user is allowed to use these terminals to process the transmitted content, so that hardware capabilities of the plurality of terminals can all participate in collaborative office. In addition, because no projection needs to be started, no display space of a display of a terminal is occupied. This improves usage efficiency of collaboratively using the plurality of terminals, and improves user experience.

In addition, in the foregoing embodiment, an example in which the input device is the mouse is used for description. In this embodiment, the input device may be alternatively a touchpad. When the input device is a touchpad, the user may input the press operation by using a button (a left button or a right button) of the touchpad, and input a movement operation by sliding the finger on the touchpad. A specific implementation in which the user drags the object by using the touchpad is similar to a specific implementation in which the user drags the object by using the mouse. Details are not described herein again. In some other embodiments, the input device may be alternatively a touchscreen. When the input device is a touchscreen. the user may use the finger to select, on the touchscreen, a resource type object that the user wants to drag, and slide the finger on the touchscreen, to implement cross-device drag for the resource type object.

It may be understood that, currently, data transmission may be implemented between different devices through drag. For example, when data is transmitted through drag between a mobile phone and a computer on which a same operating system is installed, a specific application needs to be used on the computer for login with an account that is the same as an account logged in to on the mobile phone, to drag a photo or a file on the mobile phone to the computer. However, this manner needs to depend on a same account, and specific functions such as window display and reverse control capabilities of the operating system, and data transmission cannot be implemented between any two devices through such an operation. In addition, if one drag operation fails, the user repeatedly performs drag. This causes a complex operation and low efficiency.

Some other embodiments of this application further provide a data transmission method. The data transmission method may be applied to a scenario of cross-device drag for a resource type object when a plurality of terminals are collaboratively used, to implement cross-device data transmission. The resource type object (referred to as an object for short below) may include a document, a folder, a text, a picture, audio, a video, a link, and the like. In addition, the transmission method can provide an intuitive visual feedback based on a matching degree between a to-be-transmitted object and a receiving device, to avoid a wrong operation and a repeated operation, and improve operation efficiency.

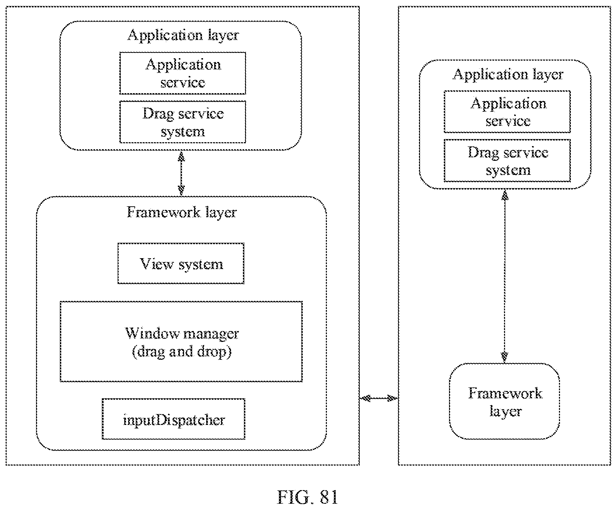

Refer to FIG. 81 to FIG. 95. The following specifically describes a process of cross-device drag for the resource type object.

FIG. 81 is a schematic diagram of an internal system structure (or referred to as a software architecture) of a terminal according to an embodiment of this application. With reference to FIG. 3, as shown in FIG. 81, the system of the terminal may include an application service layer (or referred to as an application layer), an application framework layer (or referred to as a framework layer, where a framework is an example), and a cross-device transmission service system that implements a cross-device data transmission function. For example, a drag service system in FIG. 81 is an example of the cross-device transmission service system. The drag service system may be located at the application layer of the terminal. The drag service system may be the drag service module in the software architecture shown in FIG. 3.

In this embodiment, the application framework layer includes a window manager (or referred to as a window manager service (windowManagerService, WmS), or a window management module), and in addition, the application framework layer may further include an inputDispatcher and a view system.

With reference to FIG. 81, the following describes a function of each module in the scenario of cross-device drag of the resource type object by using an example. The inputDispatcher at the framework layer is responsible for receiving a user operation and distributing the operation to each window for processing. The WmS may be used together with the view system as a part of the window manager to manage a displayed window. The WmS responds to a user operation of a user in the window, for example, a drag action, a screen touch action, or a tap operation. In response to the user operation, the WmS may determine whether the user operation is a cross-device transmission operation (for example, a drag operation). The cross-device transmission operation herein may be an operation used to transmit an object on one terminal to another terminal, that is, the terminal detects that the cross-device transmission operation is used as an operation of a source end. The cross-device transmission operation may be one preset operation or a series of preset operations. When the WmS compares the user operation with a preset operation and determines that the user operation complies with the preset operation, it may be determined that the user operation is a cross-device transmission operation. If the WmS determines that the user operation is a cross-device transmission operation, a cross-device transmission event may be generated and sent to the dragging service system. The drag service system may be a service that is used to implement cross-device data transmission based on operations in various forms such as drag and that is added at a system runtime library layer. The drag service system may listen to a cross-device transmission event at the framework layer, and send the cross-device transmission event to the drag service system of the another connected terminal.

An application service at the application service layer may register listening (for example, drag listening) for a cross-device transmission operation with the WmS at the framework layer. After listening for the cross-device transmission operation is registered, if the framework layer of the terminal detects that a cross-device transmission event (for example, a drag event) for the application service exists in the window or a drag service system of the terminal receives a cross-device transmission event sent by the drag service system of the another terminal, the framework layer may send the cross-device transfer event to the application service. The application service may determine whether an object (data) in the cross-device transmission event can be accepted. The cross-device transmission event for the application service may mean that the user drags an object on a terminal to an application service, a location in the application service, or the like on another terminal. That the framework layer of the terminal detects that the cross-device transmission event for the application service exists in the window may mean that, after receiving the object sent by the source end, a device used as a receive end detects, in a local display window, an operation used to drag the object to the application service or the location in the application service, for example, drag for the object. In this case, the framework layer of the receive end may send the cross-device transmission event to the application service, and the application service may determine whether the object (data) in the cross-device transmission event can be accepted.

In a possible implementation, the drag service system in FIG. 81 may include a first interface and a second interface. The first interface may be used to communicate with the framework layer. The second interface may be used to communicate with a communication component of the terminal. The communication component of the terminal may be a wireless communication component, for example, an antenna, or may be a hardware interface for implementing wired communication. This is not limited in this application.

Both the first interface and the second interface may be implemented in a form of a software interface. For example, both the first interface and the second interface may be implemented by using a callback function. Another function of the drag service system may also be implemented in a form of software. For example, a callback function for monitoring the cross-device transmission operation may be registered at the framework layer, that is, a pointer for invoking the drag service system (a drag service function) may be registered at the framework layer. When listening and detecting the cross-device transmission operation, the framework layer may generate the cross-device transmission event, to trigger invoking of the drag service system (drag service function). The drag service system may generate a determining request based on the cross-device transmission event at the framework layer, and send the determining request to the another terminal through the second interface and by using the communication component. After receiving the determining request, the drag service system of the another terminal may send the determining request to the framework layer of the another device through the first interface.

It should be noted that FIG. 81 shows only an internal structure at the framework layer of one terminal (where the terminal may be the first terminal or the second terminal in the foregoing embodiments), and the another terminal also has a same structure, which is merely not shown.

An operating system installed on the terminal may be a system, for example, Android, iOS, Windows, Mac, or Linux. This is not limited in this application. For different systems, an application of a drag service may be developed in the foregoing manner to support cross-device data transmission in a drag manner.

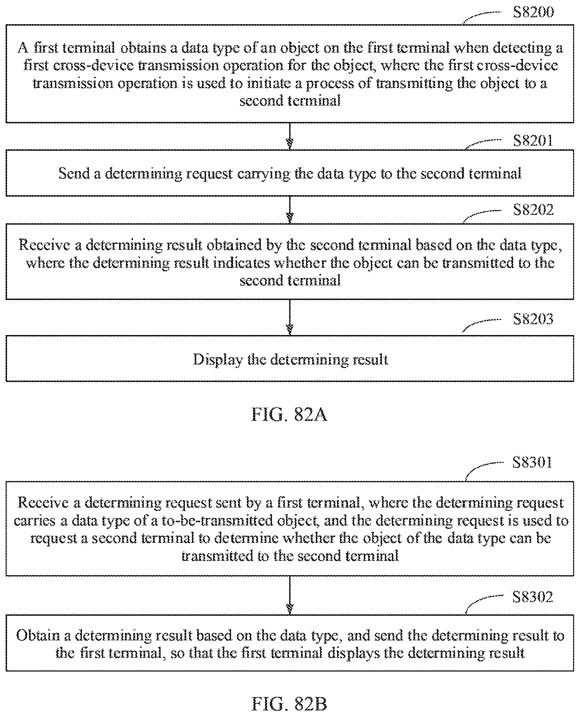

It can be learned from the foregoing example that the system of the terminal is improved or a new application service is added, so that data can be transmitted between two terminals. On this basis, the data transmission method in this application is described. FIG. 82A and FIG. 82B each show a flowchart of a data transmission method according to an embodiment of this application. The data transmission method shown in FIG. 82A may be applied to the first terminal in FIG. 1A, that is, may be applied to a source end device. The transmission method may include the following steps.

Step S8200: The first terminal obtains a data type of an object on the first terminal when detecting a first cross-device transmission operation for the object, where the first cross-device transmission operation is used to initiate a process of transmitting the object to the second terminal.

Step S8201: Send, to the second terminal, a determining request carrying the data type.

Step S8202: Receive a determining result obtained by the second terminal based on the data type, where the determining result indicates whether the object can be transmitted to the second terminal.

Step S8203: Display the determining result.

The method shown in FIG. 82B may be applied to the second terminal in FIG. 1A, that is, may be applied to a receive end device (or referred to as a target device). In this implementation, the data transmission method may include the following steps.

Step S8301: Receive a determining request sent by a first terminal, where the determining request carries the data type of the to-be-transmitted object, and the determining request is used to request the second terminal to determine whether the object of the data type can be transmitted to the second terminal.

Step S8302: Obtain a determining result based on the data type, and send the determining result to the first terminal, so that the first terminal displays the determining result.

In step S8200, that the first cross-device transmission operation is used to initiate the process of transmitting the object to the second terminal may mean that the drag service system may be called up by using the first cross-device transmission operation. In other words, the user may trigger a dragstart event on the display of the first terminal by using the first cross-device transmission operation, drag data (an object) can be specified in the dragstart event by using setData(), and the dragstart event may be triggered to call up the drag service system, to initiate the process of transmitting the object to the second terminal.

As shown in FIG. 81, a framework layer of the first terminal may monitor a user operation, and an operation that can call up a drag service system may be preset on the first terminal and the second terminal as a preset operation. The first terminal may compare the monitored user operation with the preset operation. When the user operation matches the preset operation, the first terminal may determine that there is a first cross-device transmission operation for an object. This is equivalent to detecting the first cross-device transmission operation for the object on the first terminal, and may call up the drag service system.

In a possible implementation, the first cross-device transmission operation may refer to a process from operation initiation to operation stay. When a stay location of the operation is in a preset region (for example, an edge of the display) of the first terminal, it indicates that cross-device transmission needs to be performed, and the drag service system may be called up.

In a possible implementation, the first cross-device transmission operation may be a drag operation. For ease of description, the following uses the drag operation as an example for description. However, this application is not limited thereto. For different terminal types (for example, a touchscreen device or a non-touchscreen device) or different objects, corresponding first cross-device operations may also be different.

For example, for the touchscreen device, the preset operation may be touching and holding the object by using a finger or a palm of the user and dragging the object to the edge of the screen, or using a stylus to tap the object and immediately sliding to the edge of the screen. A slide direction is not limited, and may be downward, upward, leftward, rightward, or another direction. Alternatively, after a text is selected, a plurality of controls invoked by touching and holding the selected text may include a "cross-device transmission" control. When the "cross-device transmission" control is triggered, the drag service system may be called up. in other words, the preset operation may be that the "cross-device transmission" control is triggered, or the like. For the non-touchscreen device, the preset operation may be moving a mouse to the object, and clicking a left mouse button by a finger without release and dragging the left mouse button to the edge of the display, or controlling a touch panel by a finger to select the object and dragging the object to the edge of the screen, or the like. It should be noted that the foregoing possible manners in which the first terminal detects the first cross-device transmission operation are merely some examples of this application, and this application is not limited thereto.

The object in this application may be a document, a folder, a text, or a picture, or may be audio, a video, a link, or the like. The first terminal may identify a type of data by using an extension name of the data. For example, for the object, the data type of the object may be obtained by identifying an extension name of the object A video is used as an example. If the extension of the object includes an extension that represents an image, for example, ".avi" or ".mov", the data type of the object may be identified as a video. Audio is used as an example. If the extension of the object includes an extension name that represents a sound, for example ".wav", ".mp4", or ".mp3", the type of the object can be identified as audio.

In a possible implementation, the drag data specified by using setData() in the dragstart event may include two parts of information: a data type and a data value, namely, the data type of the object and data corresponding to the object. After obtaining the data type of the object, the first terminal may add the data type to setData() in the dragstart event. When the dragstart event is triggered to call up the drag service system, the determining request may carry the data type of the object when the drag service system may send the determining request to the second terminal based on the data type specified in the dragstart event.

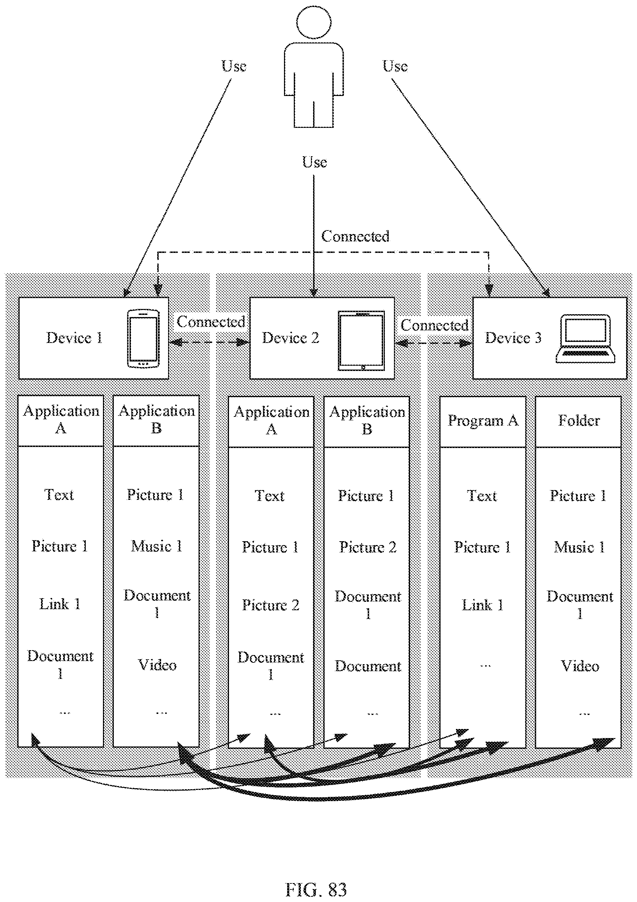

FIG. 83 is a schematic diagram of an application scenario of a data transmission method according to an embodiment of this application. As shown in FIG. 83, a device 1 and a device 2 are paired and connected in a wireless manner, the device 2 and a device 3 may be paired and connected in a wireless manner, or may be connected in a wired manner, and the device 1 and the device 3 are connected in a wireless or wired manner. Cross-device data transmission in this embodiment of this application may be performed between the device 1, the device 2, and the device 3.

In a possible implementation, the device 1 and the device 2 each may be a touchscreen terminal, for example, a smartphone or a tablet computer. A plurality of applications may be installed on both the device 1 and the device 2. For example, an application A and an application B may be installed on both the device 1 and the device 2 shown in FIG. 83. The application A may be a "rich media" application, for example, a social application, an email application, or a browser application. Content may include a text. a picture, a document, a link, and the like. The application B may be a file management application, for example, a file manager or a gallery. Content mainly includes a picture, a video, audio, and a document without independent text content. The device 3 may be a non-touchscreen device, for example, a notebook computer. A program A may be installed on the device 3, and a folder may be stored on the device 3. The program A may refer to an application, for example, Office software or a browser in a Windows/Mac system. FIG. 83 shows data types and possible presentation forms of some examples of objects. The presentation forms may be located in the application or archive management. This application is not limited to the types and presentation forms of the objects represented in FIG. 83.

For step S8201, as shown in FIG. 81, the first terminal may send the determining request to the drag service system of the second terminal by using the called-up drag service system. The determining request includes the data type of the object. Therefore, in step S8301, the second terminal receives the determining request sent by the first terminal. The determining request carries the data type of the to-be-transmitted object, and the determining request is used to request the second terminal to determine whether the object of the foregoing data type can be transmitted to the second terminal.

For step S8302, in a possible implementation, the second terminal may determine, based on the data type of the object and a type of the second terminal, whether the object can be transmitted to the second terminal. A data type that is allowed to be transmitted or not allowed to be transmitted may be preset for each type of second terminal. For example, if the object is a text file or a folder, and the second terminal is a Bluetooth speaker, the determining result of the second terminal may be that the object cannot be transmitted to the second terminal. If the object is an audio file or a video file that carries audio, and the second terminal is a Bluetooth speaker, the determining result of the second terminal may be that the object can be transmitted to the second terminal.

For step S8302, in a possible implementation, the second terminal may alternatively determine, based on the data type of the object and an application service installed on the second terminal, whether the object can be transmitted to the second terminal. The application service installed on the second terminal may be an application or a software program installed on the second terminal, for example, an App installed on a smartphone or a software program installed on a notebook computer.

The foregoing merely provides examples of two implementations of determining, based on the data type of the object, whether the object can be transmitted to the second terminal, this application is not limited thereto.

After obtaining the determining result, the second terminal may send the determining result to the drag service system of the first terminal by using the drag service system. After receiving the determining result, the drag service system of the first terminal device may send the determining result to the framework layer, and the framework layer controls the display of the first terminal to display the determining result.

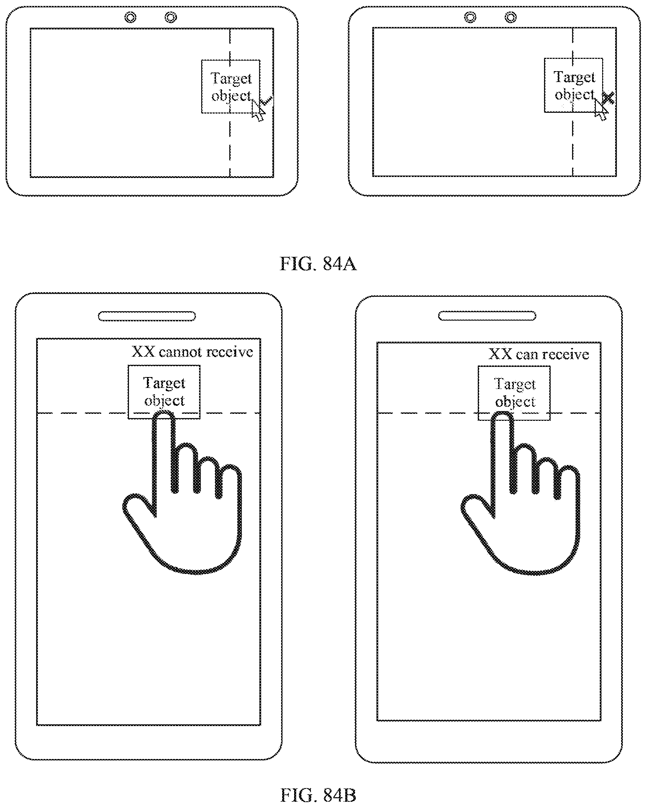

The determining result may be displayed in a plurality of manners. FIG. 84A and FIG. 84B respectively show examples of manners of displaying the determining result according to an embodiment of this application. FIG. 84A is a schematic diagram of a display interface of the first terminal in two examples. FIG. 84B is a schematic diagram of a display interface of the first terminal in two examples. In FIG. 84A and FIG. 84B, dashed lines are used to indicate edge regions of the display.

As shown in FIG. 84A, a mouse drag manner is used as an example. A small icon may be displayed near a pointer of the mouse on the display. Different colors of small icons may indicate different determining results. For example, if the small icon is green, it indicates that the object can be transmitted to the second terminal, or if the small icon is red, it indicates that the object cannot be transmitted to the second terminal. Alternatively, as shown in FIG. 84A, different shapes of small icons may represent different determining results. If the small icon has a tick "√", it may indicate that the object can be transmitted to the second terminal, or if the small icon has a cross "x", it may indicate that the object cannot be transmitted to the second terminal, or the like.

As shown in FIG. 84B, a finger operation is used as an example, prompt information may be displayed near an icon (for example, a thumbnail) of the object, to display the determining result. For example, prompt information "XX cannot receive" or "XX can receive" may be displayed in the upper right corner of the icon of the object to respectively indicate different determining results. "XX" may represent identification information of the second terminal. In an example of a mouse operation, the determining result may be also displayed in this manner.

The displayed determining result may further include a reason for generating the determining result, for example, "a device B cannot receive a file in a .avi form". In this way, the user can more intuitively learn the reason and take corresponding measures.

It should be noted that the foregoing manners of displaying the determining result are merely some examples of this application, and this application is not limited in any manner, provided that the determining result can be intuitively presented to the user.

By using the data transmission method in the foregoing implementations of this application, an intuitive visual feedback can be provided for the user based on a matching degree between the data type of the object and a receive end. This avoids a wrong operation and a repeated operation, and improves operation efficiency.

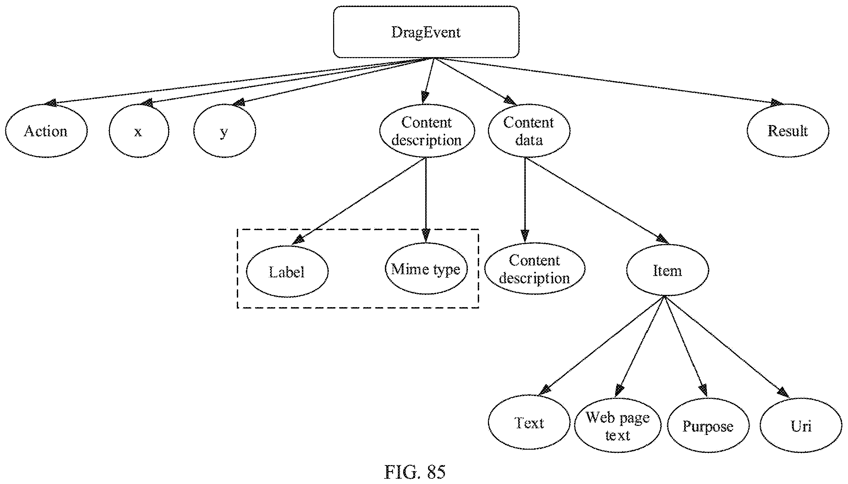

In a related technology, only content such as a text, a document, a picture, and a file can be dragged, and the content that can be dragged is limited. To resolve this technical problem, in this application, an extended field is added to a dragevent event to extend the content that can be dragged. FIG. 85 is a schematic diagram of a field included in a dragevent event according to an embodiment of this application. As shown in FIG. 85, a field label (label) and a mime type (mime type) that are boxed by using dashed lines are fields extended on a content description (clipDescription) object The label is of a string (string) type and may be used to extend an action, for example, "open". The mime type is a data type of an object. The foregoing two extended fields may be used to extend a dragged object and an action for the dragged object

In FIG. 85, "action (action)" that is on the left and that is directly connected to the dragevent event refers to actions such as drag, dragstart, dragenter, dragend, and drop, and refers to a series of drag actions, and x and y may represent coordinates of a stay location of the drag action. Content data (clipdata) may refer to some attributes of drag data, for example, a mime type of a clip object and ClipData. The item (item) object includes a text, a web page text (HTML Text), a URI, or intent (Intent) data. A result (result) may be a field that records a returned determining result. It should be noted that FIG. 85 shows merely a manner of extending the field in this application. This application is not limited thereto. The field may be further extended on another appropriate object or location in the dragevent event.

Therefore, in a possible implementation, the determining request may carry a data type field and/or an extended data type field. The data type field and the extended data type field are used to indicate the data type of the object. In this way, when the drag service system of the first terminal sends the determining request to the second terminal, the second terminal may determine, based on the data type field and/or the extended data type field, whether the object that the first terminal prepares to move to the second terminal can be processed, to obtain a determining result.

The content that can be dragged can be extended based on the data transmission method in the foregoing implementations of this application. The extended data type field may indicate a data type that is customized, or applicable to a specific device or application. or newly emerges, so that more data types and devices are applicable during cross-device data transmission, to facilitate a user operation.

For example, in a related technology, a drag operation for an official account article on some social platforms cannot be implemented. According to an implementation of this application, a data type "Weblinks" may be added to an extended field in the dragevent event A corresponding action may be opening in a browser, opening in an application corresponding to the social platform, or the like. Different strings may be used to represent different actions. In an example, for the data type "Weblinks", if there is no setting (for example, a label field is empty), the data type "Weblinks"can be opened with a browser by default

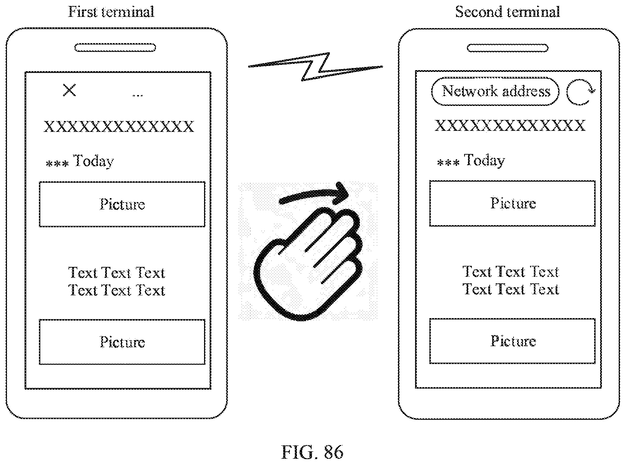

FIG. 86 is a schematic diagram of an application scenario according to an embodiment of this application. As shown in FIG. 86, it is assumed that both a first terminal and a second terminal are smartphones, and the first terminal starts an official account article with a link in an application A (where link may be an object). A preset operation set for this type of object may be touching a large area and then sliding towards one side. When detecting the operation of touching a large area of a currently displayed page and then sliding to one side, the first terminal may determine to perform cross-device transmission for an official account article that is opened in the application A and that has a link. For example, as shown in FIG. 86, when the user touches the screen by using an entire palm or a majority of the palm and slides rightward, a dragstart event is triggered. The first terminal may send a determining request to the second terminal, and determine that a request table carries an extended data type field. A data type is Weblinks, and a label field is empty. The second terminal receives the determining request. The second terminal is a smartphone, and a browser is locally installed. Therefore, a determining result may be transmitted to the second terminal. The second terminal may send the determining result to the first terminal. The first terminal displays the determining result on a display. After the user sees the determining result, if a drag gesture is released, that is, the first terminal detects a drop operation, the user may send the link and the extended data type field to the second terminal. The second terminal identifies, based on the extended data type, that the data type of the object is "Weblinks" and the label field is empty. Therefore, the object is opened in a default manner, as shown in FIG. 86, and a link is opened in a browser.

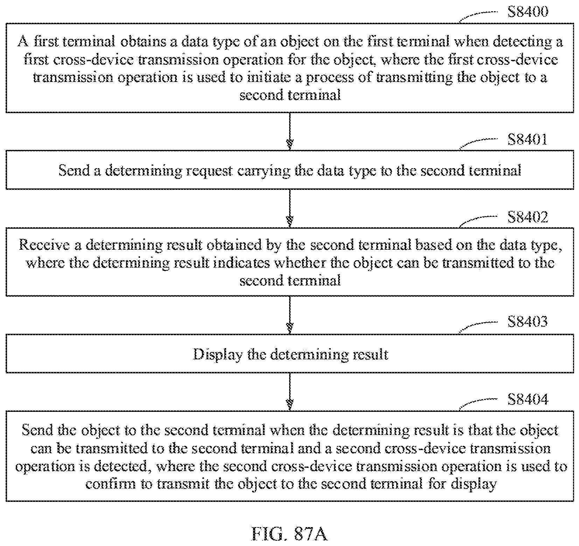

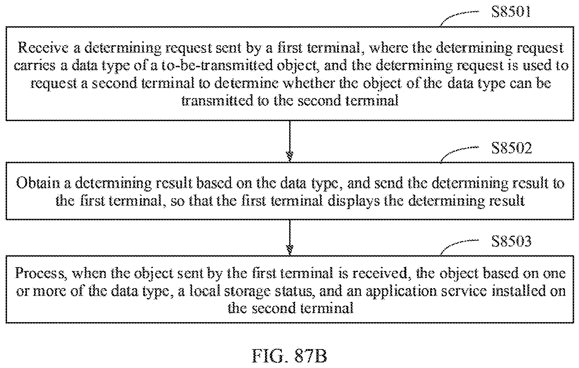

FIG. 87A and FIG. 87B are respectively flowcharts of a data transmission method according to an embodiment of this application. The transmission method shown in FIG. 87A may be applied to the first terminal. As shown in FIG. 87A, the transmission method in this implementation may include the following steps.

Step S8400: The first terminal obtains a data type of an object on the first terminal when detecting a first cross-device transmission operation for the object, where the first cross-device transmission operation is used to initiate a process of transmitting the object to the second terminal.

Step S8401: Send, to the second terminal, a determining request carrying the data type.

Step S8402: Receive a determining result obtained by the second terminal based on the data type, where the determining result indicates whether the object can be transmitted to the second terminal.

Step S8403: Display the determining result.

Step S8404: Send the object to the second terminal when the determining result is that the object can be transmitted to the second terminal and a second cross-device transmission operation is detected, where the second cross-device transmission operation is used to confirm to transmit the object to the second terminal for display.

For Steps S8400 to S8403, refer to descriptions of Steps S8200 to S8203 in the implementation part corresponding to FIG. 82A. Details are not described again.

For Step S8404, the second cross-device transmission operation corresponds to the first cross-device transmission operation. For example, if the first cross-device transmission operation is a drag operation, the second cross-device transmission operation may be a drag release operation. A non-touchscreen device is used as an example. If the first cross-device transmission operation is clicking a left mouse button by a finger without release and dragging, the second cross-device transmission operation may be releasing the left mouse button. Alternatively, a touchscreen device is used as an example. If the first cross-device transmission operation is pressing an object by a finger or a stylus and dragging the object, the second cross-device transmission operation may be leaving a touchscreen by the finger or the stylus.

Sending the object to the second terminal may refer to sending one or more of data corresponding to the object, a data type, indication information of a processing manner for the object, and the like to the second terminal. The second terminal may process the data based on the processing manner. In a possible implementation, as described above, the indication information of the processing manner for the object may also be carried in the dragstart event.

The transmission method shown in FIG. 87B may be applied to the second terminal. As shown in FIG. 87B, the transmission method in this implementation may include the following steps.

Step S8501: Receive a determining request sent by the first terminal, where the determining request carries the data type of a to-be-moved object, and the determining request is used to request the second terminal to determine whether the object of the data type can be transmitted to the second terminal.

Step S8502: Obtain a determining result based on the data type, and send the determining result to the first terminal, so that the first terminal displays the determining result.

Step S8503: Process, when the object sent by the first terminal is received, the object based on one or more of the data type, a local storage status, and an application service installed on the second terminal.

For Steps S8501 to S8502, refer to descriptions of Steps S8301 to S8302 in the implementation corresponding to FIG. 82B. Details are not described again.

For Step S8503, the local storage status is used as an example. When the local storage status is having no storage capability, the second terminal may open the object based on the application service installed on the second terminal. When the local storage status is having the storage capability, the second terminal may locally store the object.

In a possible implementation, the local storage status of the second terminal is having no storage capability, and the second terminal may select, based on the data type of the object, the application service installed on the second terminal to open the object. Alternatively, the second terminal may display a selectable option of the application service installed on the second terminal, and open the object based on the application service selected by the user.

In a possible implementation, the local storage status of the second terminal is having a storage capability, and in addition to locally store the object, the second terminal may further process the object based on an operation specified by the first terminal. As described above, when sending the object to the second terminal, the first terminal also sends the indication information of the processing manner for the object Therefore, the second terminal may process the object based on the processing manner. If the first terminal does not specify the processing manner of the object, the second terminal may select, based on the data type of the object, an installed application service to open the object, or, as described above, open the object based on the application service selected by the user.

It should be noted that the foregoing are merely examples of several processing manners for the object shown in this application, and this application is not limited in any manner.

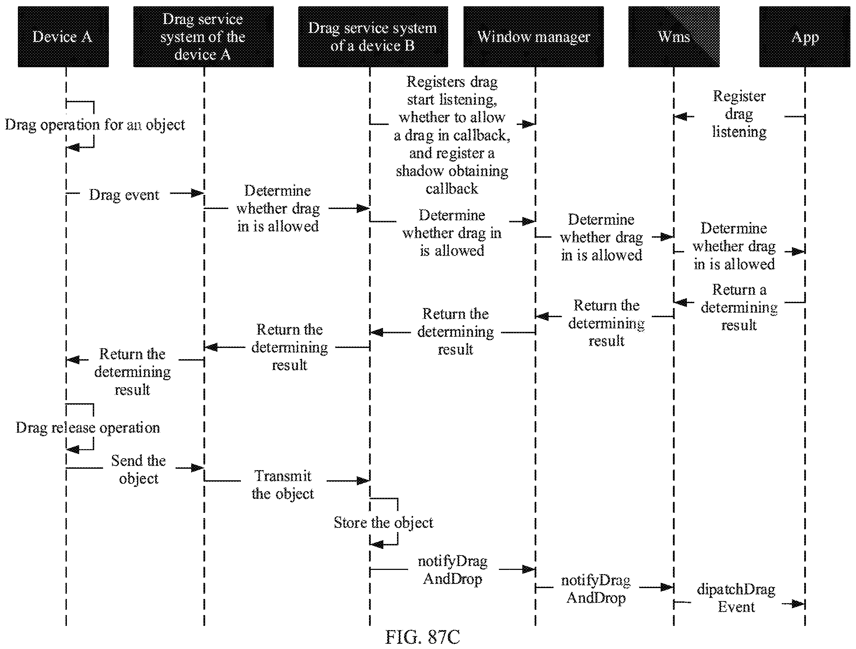

FIG. 87C is a flowchart of interaction in an application scenario according to an embodiment of this application. As shown in FIG. 87C, a device A is, for example, the first terminal, and a device B is, for example, the second terminal. The device A (A framework layer) detects a drag operation for a local object. The framework layer of the device A generates a dragstart event to wake up a drag service system of the device A. The drag service system of the device A may generate a determining request based on a data type of an object specified by the dragstart event. The determining request may be a request for determining whether drag in is allowed. The drag service system of the device A sends the determining request to a drag service system of the device B. The drag service system of the device B sends the determining request to a WindowManager on the device B, and then the WindowManager sends the determining request to a WmS. The WmS may send the determining request to a corresponding application service (app), and the application service obtains a determining result in response to the determining request, and returns the determining result to the device A step by step. The device A may display the determining result. If the determining result is that drag in is allowed, the framework layer of the device A detects a drag release operation, and may send the object to the drag service system of the device A. The drag service system of the device A transmits the object to the drag service system of the device B. After receiving the object, the drag service system of the device B may save the object, and deliver the object to the framework layer and the application service layer by using a notifyDragAndDrop message, to process the object.

According to the data transmission method in the foregoing implementation, the user operation can be simplified. Not only a display location of an object is changed, copied, transmitted, and the like through simple actions such as drag, but also corresponding processing may be directly performed at a receive end based on a data type of the object, for example, in addition to storage, opening the object by selecting the application service, and opening the object by using a currently opened application service. The user does not need to perform a further operation at the receive end, to greatly simplify the user operation.

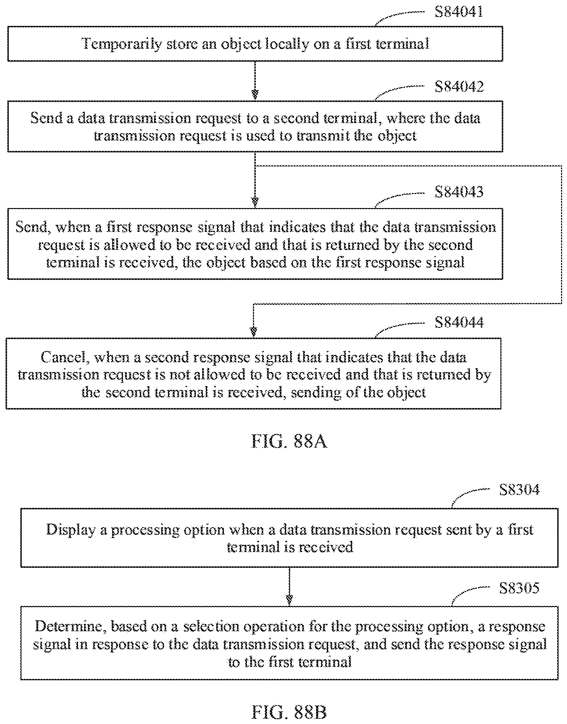

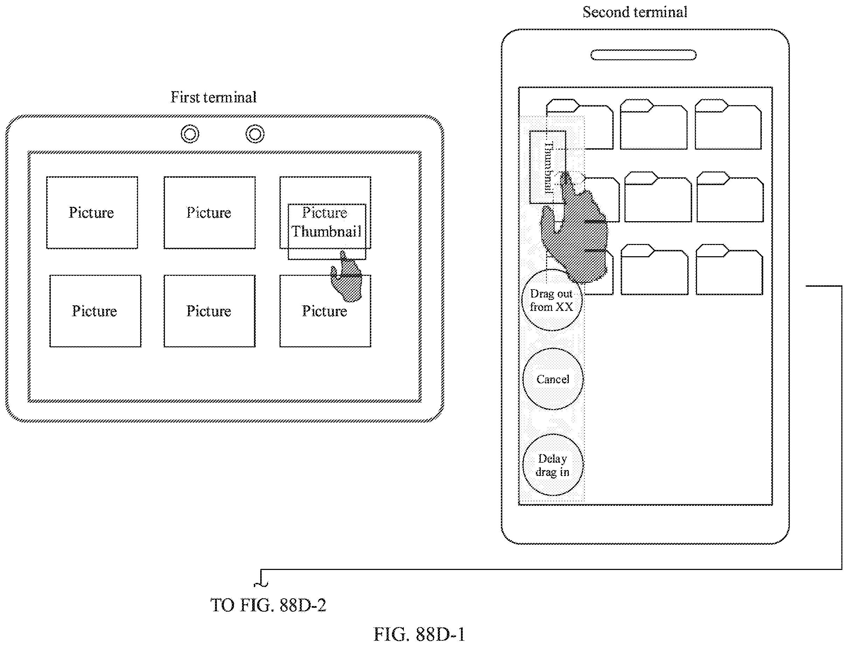

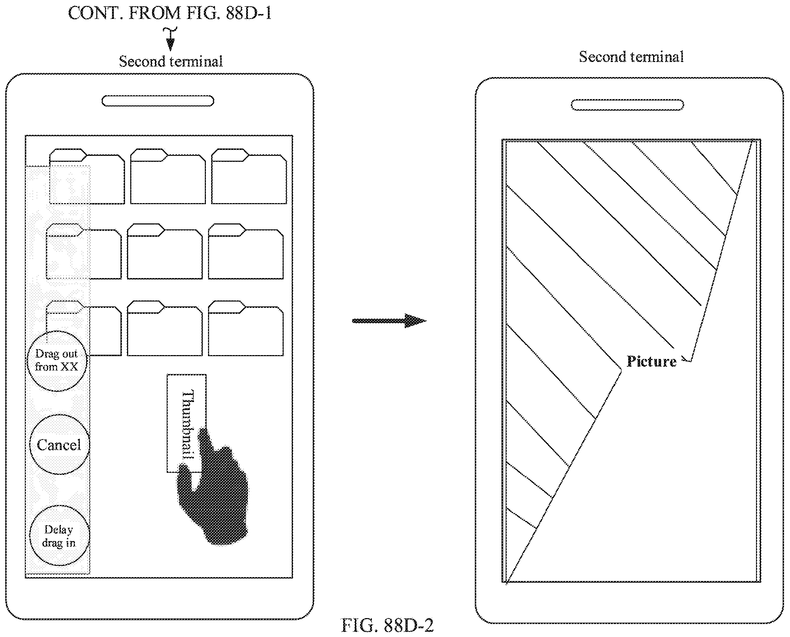

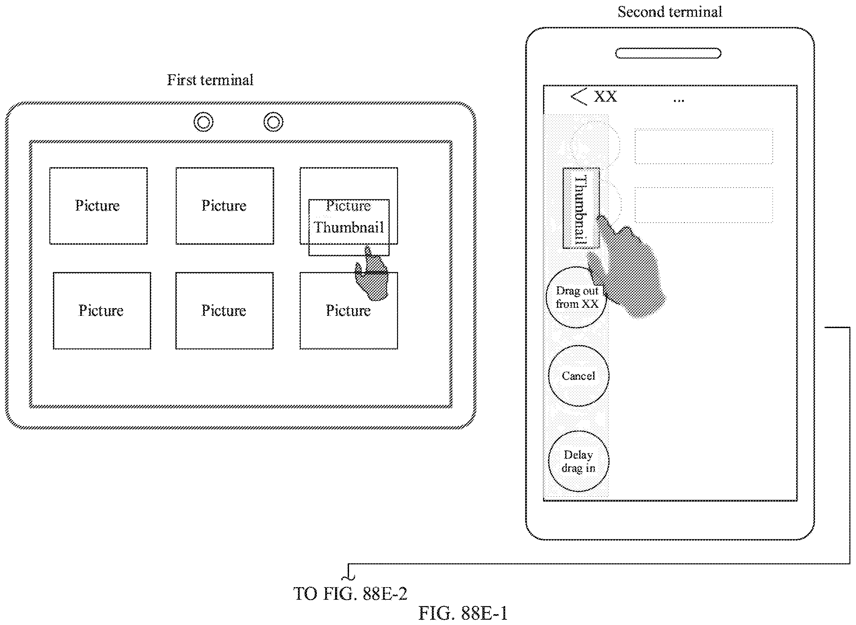

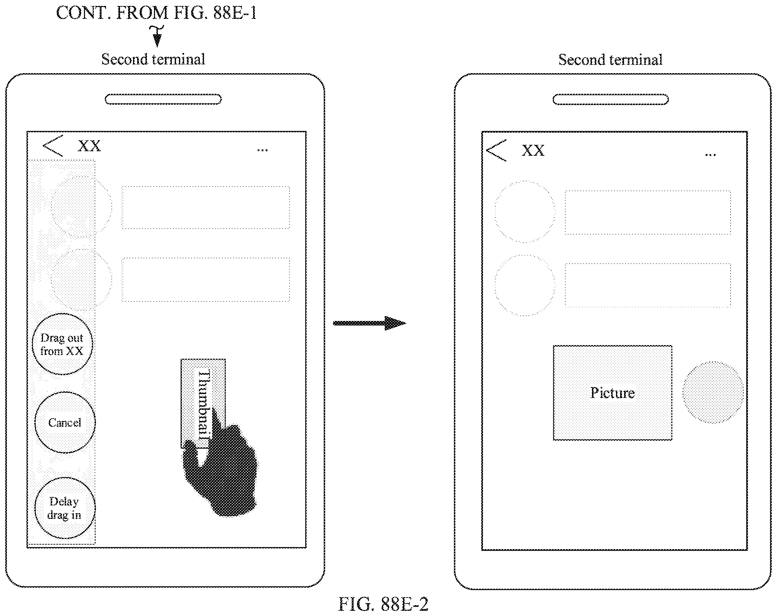

FIG. 88A is a flowchart of a data transmission method according to an embodiment of this application. FIG. 88A is a flowchart of an example of a process included in the step "send the object to the second terminal" in Step S8404. As shown in FIG. 88A, the step "send the object to the second terminal" may include the following steps.

Step S84041: Temporarily store the object locally on the first terminal.

Step S84042: Send a data transmission request to the second terminal, where the data transmission request is used to transmit the object.

Step S84043: Send, when a first response signal that indicates that the data transmission request is accepted and that is returned by the second terminal is received, the object based on the first response signal.

Step S84044: Cancel, when a second response signal that indicates that the data transmission request is not accepted and that is returned by the second terminal is received, sending of the object.

FIG. 88B is a flowchart of a data transmission method according to an embodiment of this application. The transmission method in FIG. 88B may be applied to the second terminal, and the transmission method in this implementation may include the following steps.

Step S8304: Display a processing option when the data transmission request sent by the first terminal is received.

Step S8305: Determine, based on a selection operation for the processing option, a response signal in response to the data transmission request, and send the response signal to the first terminal.

In other words, when the determining result is that the object can be transmitted to the second terminal and the second cross-device transmission operation is detected, the first terminal may first temporarily store the object locally on the first terminal, send the data transmission request to the second terminal, and process the object based on the response signal returned by the second terminal for the data transmission request.

The second terminal displays the processing option when the data transmission request sent by the first terminal is received. The processing option may be a processing option for an object. For example, the processing option may be a plurality of selectable controls displayed in a control form, or may be prompt information of different selectable gestures.

In an example, the second terminal displays the plurality of selectable controls in the control form, for example, "cancel", "delay send", and "receive". In another example, the second terminal displays the processing option by using the prompt information of the different selectable gestures. For example, a gesture of sliding leftward indicating cancel sending, a gesture of sliding rightward indicating receive, and a gesture of sliding up or down indicating delay send are displayed on the display.

In Step S8305, the response signal in response to the data transmission request may include a first response signal and a second response signal. The first response signal may be a signal indicating that the data transmission request is accepted. For example, if the user selects to receive or delay send, or the user slides rightward or upward, it indicates that the second terminal allows to send the object corresponding to the data transmission request In this case, the second terminal determines that the response signal in response to the data transmission request is the first response signal, and sends the first response signal to the first terminal. The second response signal may be a signal indicating that the data transmission request is not accepted, that is, the second terminal does not allow the first terminal to send the object corresponding to the data transmission request. For example, if the user selects to cancel, the user slides leftward, or the like, the second terminal may determine, based on the selection operation of the user for the processing option, that the response signal is in response to the data transmission request is the second response signal, and send the second response signal to the first terminal.

In Step S84043, when receiving the first response signal, the first terminal sends the object based on the first response signal For example, when the first response signal is received, the object may be directly sent or the sending of the object may be delayed. Delay duration for delayed sending may be preset by the first terminal, or may be specified by using the first response signal fed back by the second terminal. For example, when displaying the processing option, for a delay send option, the second terminal may further provide the user with an option of selecting the delay duration, or provide an input box of the delay duration, and collect, by using the input box, delay duration entered by the user. The second terminal may generate the first response signal based on the delay duration selected or input by the user, and send the first response signal to the first terminal. The first terminal may delay the sending of the object based on the delay duration carried in the first response signal.

In Step S84044, when receiving the second response signal, the first terminal cancels the sending of the object After the sending of the object is canceled, the object may be stored (temporarily stored) in the foreground of the first terminal for a specific period of time. Duration of storage time may be preset by the first terminal, or may be adjusted in real time based on a volume of data stored in the foreground. For example, when the amount of stored data exceeds a set threshold, earliest stored data may be deleted.

In a possible implementation, after the canceling the sending of the object, the method may further include: when a call-out instruction for the temporarily stored object is detected, calling the temporarily stored object, and sending the data transmission request to the second terminal.

This step may be performed as long as most objects are temporarily stored locally on the first terminal. That after the canceling the sending of the object is merely an example, and a specific scenario is not limited thereto.

In other words, after the sending of the object is canceled, if the user wants to continue to send an object, the temporarily stored object may be invoked by using a call-out instruction. The call-out instruction may be detected by the first terminal when the first terminal detects a call-out operation of the user. The call-out operation may be a preset operation, for example, sliding along one side of the screen to the middle. The first terminal may further resend a data transmission request to the second terminal. For a subsequent process, refer to the foregoing description.

According to the data transmission method in the foregoing implementation, a selectable operation for a dragged-in object may be displayed on a display of a receive end device, so that the user adjusts a transmission process or a processing manner based on an actual requirement, so that the second terminal can process the object based on the actual requirement.

In a possible implementation, the user may also temporarily store a plurality of objects in the foreground of the first terminal by using the foregoing process, for example, send the 1^{st} object to the second terminal, and then send the 2^{nd} object to the second terminal. Both the first object and the second object are temporarily stored in the foreground of the first terminal In this case, if the second terminal continuously receives a plurality of data transmission requests, a provided processing option may be different from a processing option provided when the second terminal receives only one data transmission request For example, "all receive" and "all delay" may be provided. The second terminal may further display thumbnails of the plurality of objects. A select control is displayed near the thumbnail of each object for the user to select The user may select an object to be received, and then select "receive", "delay receive", "cancel", or the like. The second terminal may process the object based on a detected selection operation.

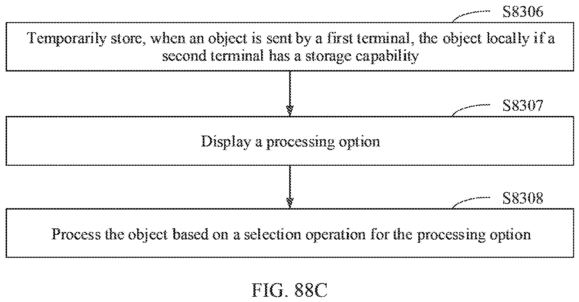

FIG. 88C is a flowchart of a data transmission method according to an embodiment of this application. The transmission method in FIG. 88C may be applied to the second terminal, and the transmission method in this implementation may include the following steps.

Step S8306: Temporarily store, when the object sent by the first terminal is received, the object locally if the second terminal has a storage capability.

**Step S8307: Display a** processing option.

Step S8308: Process the object based on a selection operation for the processing option.

**In other** words, in Step S8404, after the first terminal sends the object to the second terminal, when receiving the object, the second terminal may first determine whether the second terminal has the storage capability locally. If the second terminal has the storage capability locally, the second terminal may temporarily store the object locally, for example, temporarily store the object in the foreground. Then, the processing option is displayed. For the displayed processing option and a process of processing the object based on the selection operation for the processing option, refer to the foregoing descriptions of Steps S8304 to S8305. Details are not described again.

In a possible implementation, after the object is temporarily stored locally, if the second terminal detects a drag operation for the temporarily stored object, the second terminal may determine whether a location where the drag operation stays is a drag-in-allowable location, generate a determining result, and display the determining result. For example, the second terminal may determine, based on coordinates of the location where the drag operation stays on a current display interface and/or a data type of the object, whether the location is the drag-in-allowable location.

In an example, if the current display interface of the second terminal is a desktop or a folder, and if the drag operation stays at a blank location on the desktop or the folder, it is determined that the location is the drag-in-allowable location. If the drag operation is released, the second terminal may directly store the object locally, for example, store the object in a system disk or the folder, or may select, based on the data type of the object, an application service to open the object, or as described above, open the object based on an application service selected by the user.

In another example, if the drag operation stays on a shortcut icon of the application service, the second terminal may determine, based on the data type of the object and the application service, whether the location is the drag-in-allowable location. For example, if the application service can open an object of the data type, it may be determined that the location is the drag-in-allowable location. If the drag operation is released, the second terminal may open the object by using the application service. If the application service cannot open the object of the data type, it may be determined that the location is not the drag-in-allowable location. If the drag operation is released, the object may be stored locally, and an application service installed on the second terminal may be selected based on the data type of the object to open the object, or as described above, open the object based on the application service selected by the user.

In another example, if the second terminal currently opens the application service, the second terminal may determine, based on the location at which the drag operation stays on the current display interface of the application service and the data type of the object, whether the location is the drag-in-allowable location.

In a possible implementation, the application service of the first terminal and the application service of the second terminal may register drag listening at the framework layers in advance, for example, register drag listening with the WmS at the framework layers. In this way, when detecting a drag event or receiving a drag event sent by another terminal, the framework layers of the first terminal and the second terminal may send the drag event to a corresponding application service, and the application service may determine, based on the drag event, whether an object can be dragged in.

As shown in FIG. 81, the framework layer of the second terminal may generate a DRAG_LOCATION event based on the captured coordinates of the location and the data type of the object, and send the DRAG_LOCATION event to a corresponding application service, for example, the application service opened by the second terminal The application service may determine, based on the coordinates and the data type, whether an object of the foregoing data type can be dragged to a location corresponding to the coordinates. If the object of the foregoing data type can be dragged to the location, a determining result is displayed on the current display interface of the second terminal. For a specific display manner, refer to an example in FIG. 84A or FIG. 84B.

FIG. 88D-1, FIG. 88D-2, FIG. 88E-1, and FIG. 88E-2 are respectively schematic diagrams of a display interface of a terminal according to an embodiment of this application. As shown in FIG. 88D-1 and FIG. 88D-2, when detecting the second cross-device transmission operation, the first terminal may send the data transmission request to the second terminal after temporarily storing the object locally, or may directly send the object to the second terminal. The second terminal may display a processing option. The second terminal (for example, a smartphone) displays a desktop or an opened folder. The user may select a processing manner (for example, cancel or delay) on the second terminal, or may continue to drag an object. If the second terminal detects that the object is dragged to a blank location, the second terminal may directly store the object locally, for example, store the object in a system disk or a folder, or may select, based on a data type of the object, an application service to open the object, or as described above, open the object based on an application service selected by the user. The fourth display in FIG. 88D-1 and FIG. 88D-2 shows a scenario in which the object (picture) is opened.

As shown in FIG. 88E-1 and FIG. 88E-2, the second terminal displays a scenario in which the application service is opened. If capturing that a drag operation of the user stays at a location on a current display interface of the application service, the second terminal may determine, based on coordinates of the location and a data type of the object, whether the location is a drag-in-allowable location. As shown in FIG. 88E-1 and FIG. 88E-2, if a drag release operation is detected, and a location at which the drag operation stays before release allows the object to be dragged in, the second terminal may open the object at the location. As shown on the fourth display in FIG. 88E-1 and FIG. 88E-2, the object is opened on a dialog interface of an instant messaging application service.

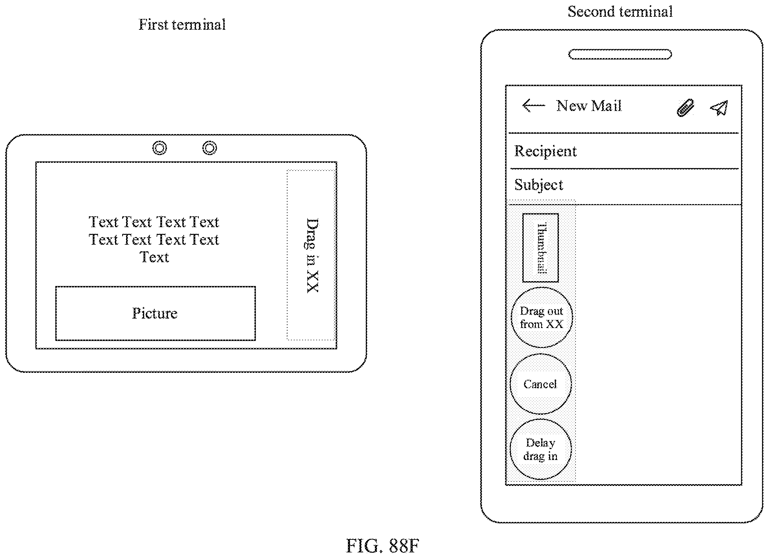

FIG. 88F is a schematic diagram of a specific application scenario according to an embodiment of this application. As shown in FIG. 88F, the second terminal opens an email service based on an operation of the user and creates a new email. After receiving a data transmission request sent by the first terminal or temporarily storing an object sent by the first terminal locally, the second terminal displays a processing option on a display interface, including "cancel", "drag from XX", a thumbnail of the object, and the like. When the user drags the object (for example, the thumbnail of the object) on the display interface of the second terminal, whether an object of the data type is allowed to be dragged to the location is displayed in real time based on a location where the drag operation stays on the created new email and the data type of the object.

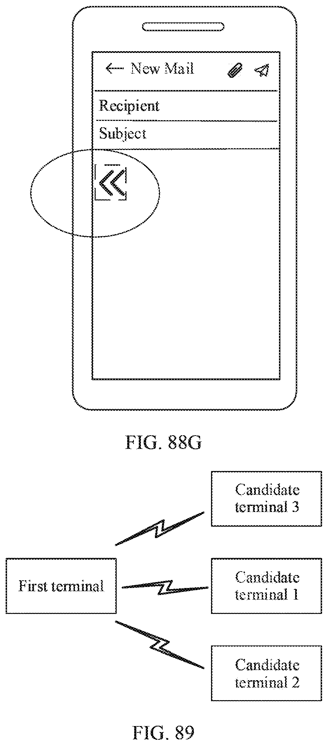

If the user selects to cancel the drag, the object is temporarily stored in the foreground of the second terminal or temporarily stored in the foreground of the first terminal. For example, the object is temporarily stored in the foreground of the second terminal. After detecting an operation of canceling the drag, the second terminal may still temporarily store the object in the foreground, and the second terminal may collapse the processing option, as shown in FIG. 88G. If the user wants to process the object again, the user may pull out the processing option in a sliding manner. The second terminal processes the object based on a selection operation for the processing option. According to the data transmission method in the foregoing implementation, a selectable operation for the dragged-in object may be displayed on the display of the receive end device, so that the second terminal processes the object based on the actual requirement

In a possible implementation, the first terminal is connected to at least two candidate terminals. The connection herein may include a wired connection and/or a wireless connection. This is not limited in this application. FIG. 89 is a schematic diagram of an application scenario according to an embodiment of this application. As shown in FIG. 89, the first terminal is connected to three candidate terminals (such as a candidate terminal 1, a candidate terminal 2, and a candidate terminal 3) in a wireless manner. in this implementation, the data transmission method in this application may further include: determining the second terminal from at least two candidate terminals.

In a possible implementation, when detecting a first cross-device transmission operation for a local object of the first terminal, the first terminal determines, from the at least two candidate terminals based on a stay location of the first cross-device transmission operation, the second terminal corresponding to the first cross-device transmission operation.

In a possible implementation, terminals corresponding to different locations on the display of the first terminal may be preset Dragging to a corresponding location may indicate that the user needs to drag the object to the terminal corresponding to the location. FIG. 83 is used as an example. For the device 2, during pairing, it may be set that a left region of a display of the device 2 corresponds to the device 1, and a right region of the display of the device 2 corresponds to the device 2. The left region or the right region is merely an example of this application, and this application is not limited thereto. For example, the left region or the right region may alternatively be an upper region or a lower region. A size of each region may be set based on an actual situation. For example, if corresponding terminals are set only for the left region and the right region, 1/3 of the left part of the display may be set as the left region, and 1/3 of the right part may be set as the right region.

In a possible implementation, the first terminal may also display information about at least two candidate terminals on the display when detecting the first cross-device transmission operation for the local object of the first terminal. For example, the information may be identification information of the second terminal, and a display form may be a manner of displaying "an icon and/or a text" at a fixed location on the display. The icon may include an icon representing a candidate terminal, an icon of the candidate terminal, an icon of an application service installed on the candidate terminal, and the like. The text may be identification information of the candidate terminal, an option of a processing manner for an object, or the like. It should be noted that for a specific implementation of displaying the information about the candidate terminal, refer to specific descriptions of content related to the recommended device list in the embodiment shown in FIG. 4. Details are not described herein again.

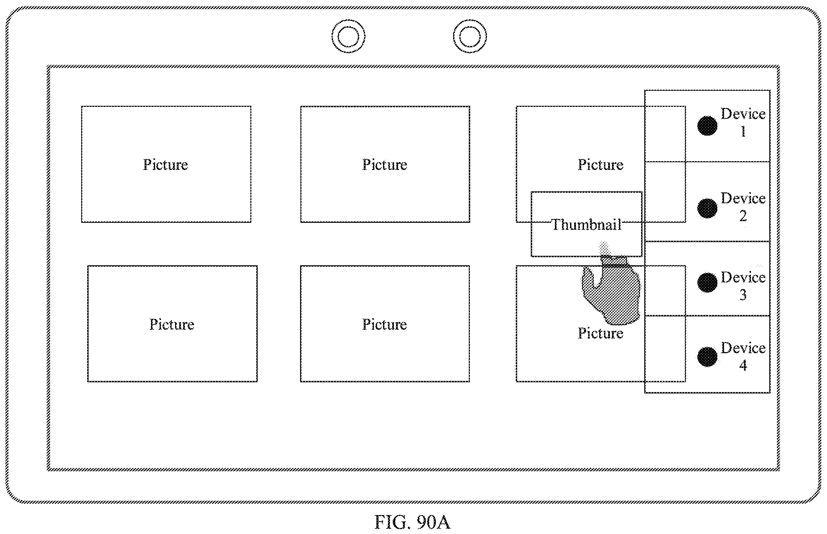

FIG. 90A is a schematic diagram of a display interface of a first terminal according to an embodiment of this application. FIG. 90A shows an example in which the first terminal displays information about more than two candidate terminals. As shown in FIG. 90A, when detecting the first cross-device transmission operation for the local object of the first terminal, the first terminal may also display, on the right edge of the display, a drag-in-allowable drawer (which is an example of the icon representing the candidate terminal). Each drawer may correspond to one candidate terminal, for example, a device 1 to a device 4. A device identifier of a corresponding candidate terminal may be displayed on the drawer. The drag-in-allowable drawer may be displayed at an edge location of the first terminal. FIG. 90A is merely an example, and does not limit this application in any manner.

In a possible implementation, the first cross-device transmission operation may refer to a process from initiating the operation to staying the operation. When detecting the initiating operation, the first terminal may display the drag-in-allowable drawer on the right edge of the screen, or when detecting that the operation stays and stays at the edge of the screen, the first terminal may display the drag-in-allowable drawer on the edge at which the first cross-device transmission operation stays and that is of the screen. A specific process in which the drag-in-allowable drawer is displayed is not limited in this application.

In a possible implementation, that the first terminal determines, from the at least two candidate terminals based on a stay location of the first cross-device transmission operation, the second terminal corresponding to the first cross-device transmission operation may include: determining, based on a relationship between the stay location of the first cross-device transmission operation and display locations of the information about the at least two candidate terminals, the second terminal corresponding to the first cross-device transmission operation.

In a moving process of the first cross-device transmission operation, a thumbnail corresponding to an object may be generated, and the thumbnail may move as a finger or a mouse moves, as shown in FIG. 90A, with a small icon of the finger. Therefore, the first terminal may determine, based on a relationship between a stay location of the thumbnail of the object and the display locations of the information about the at least two candidate terminals when the first cross-device transmission operation stays, the second terminal corresponding to the first cross-device transmission operation. The information about the candidate terminal may be information such as an ID of the drawer and the device described above.

**]** The relationship between the stay location of the thumbnail of the object and the display locations of the information about the at least two candidate terminals when the first cross-device transmission operation stays may be that the stay location of the thumbnail of the object does not overlap the display locations of the information about the at least two candidate terminals. Alternatively, the stay location of the thumbnail of the object at least partially overlaps a display location of information about one of the candidate terminals. For example, the stay location of the thumbnail of the object is completely located at the display location of the information about one of the candidate terminals, or partially overlaps the display location of the information about one of the candidate terminals. Alternatively, the stay location of the thumbnail of the object overlaps display locations of information about two or more of the candidate terminals.

When the stay location of the thumbnail of the object does not overlap the display locations of the information about the at least two candidate terminals, the first terminal may determine that no second terminal is selected currently, that is, no receive end device is selected, as shown in FIG. 90A.

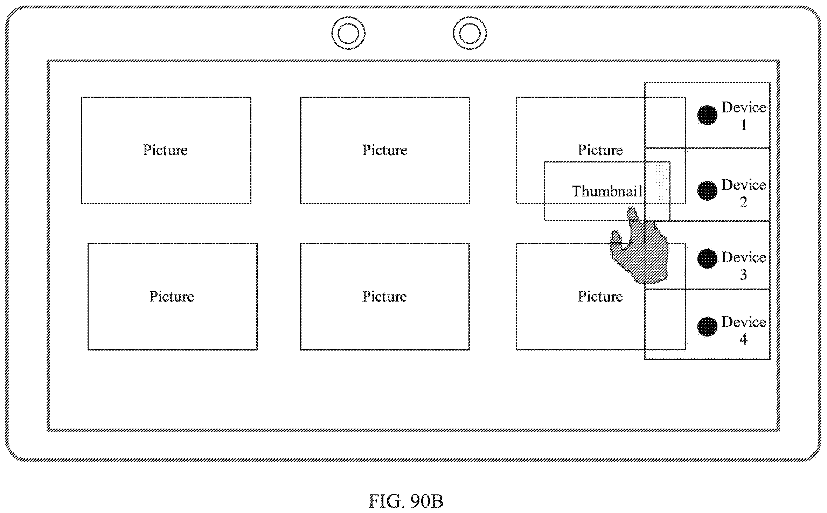

FIG. 90B is a schematic diagram of a display interface of a first terminal according to an embodiment of this application. FIG. 90B shows an example of a case in which a stay location of a thumbnail of an object at least partially overlaps a display location of information about one of candidate terminals (a device 2). In FIG. 90B, the thumbnail partially overlaps information of the second candidate terminal displayed on the right edge, and the first terminal may determine that the candidate terminal is the second terminal.

When the stay location of the thumbnail of the object overlaps the display locations of the information about the two or more candidate terminals, the first terminal may determine, as the second terminal, a candidate terminal of which the display location of the information overlaps the stay location of the thumbnail of the object to the maximum. That the first terminal determines that the candidate terminal that overlaps most is the second terminal is merely an example of this application, and this application is not limited thereto. Alternatively, the first terminal may prompt the user to continue moving until the second terminal can be determined.

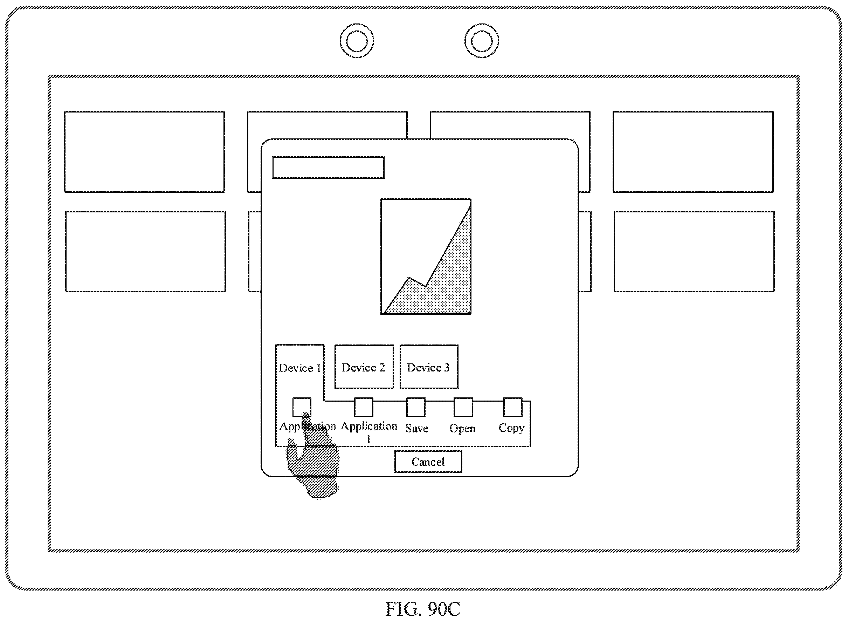

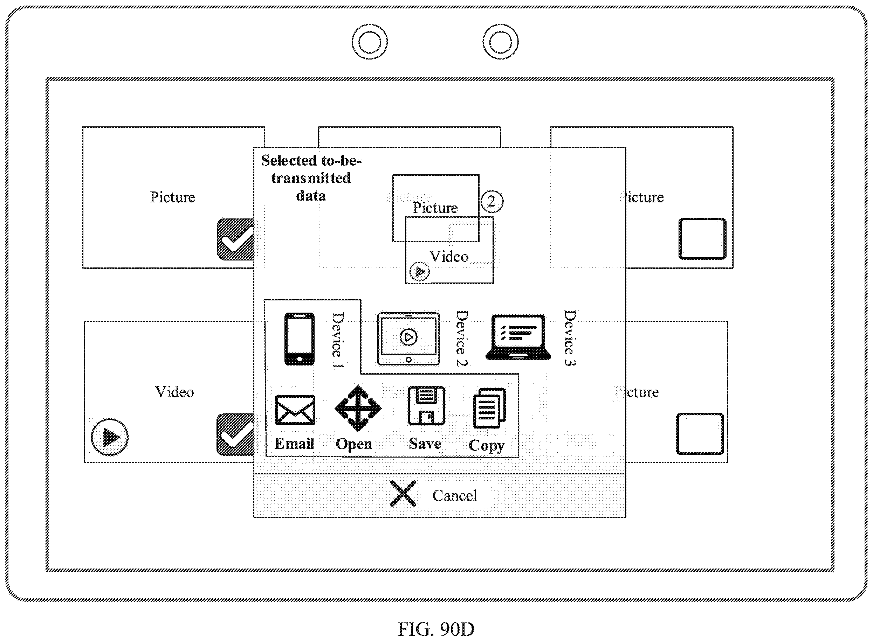

FIG. 90C is a schematic diagram of a display interface of a first terminal according to an embodiment of this application. FIG. 90D is a schematic diagram of an application scenario of a display interface of a first terminal according to an embodiment of this application.

In a possible implementation, the first terminal may determine, based on a detected triggering instruction for the information about the at least two candidate terminals, the second terminal and a manner of processing the object by the second terminal. In this implementation, the sending the object to the second terminal may include: sending the object and indication information to the second terminal, where the indication information is used to indicate the second terminal to process the object in the processing manner. After receiving the object and the indication information, the second terminal may process the object based on the processing manner.

FIG. 90C shows an example in which the first terminal displays information about more than two candidate terminals. The first terminal may determine the second terminal based on a selection operation. The selection operation may be that the user taps an icon of a candidate terminal by using a finger or a stylus, or clicks an icon of a candidate terminal by using a mouse. After the second terminal is determined based on the selection operation, a selectable manner of processing the object by the second terminal may be displayed. As shown in a small window in the middle of FIG. 90C, a selected object is displayed in the upper part of the small window, and a quantity of the selected object may be further displayed, that is, a plurality of objects may be selected. The middle of the small window displays information about the candidate terminals in a form of a device icon and a text An application (for example, an application 1 or an application Z) installed on a selected candidate terminal (for example, the device 1) and an option (for example, save, open, or copy) of a processing manner that can be performed on the object are further displayed the lower part of the small window. The first terminal may determine, based on the selection operation, the manner of processing the object by the second terminal. In this way, when sending the object to the second terminal, the first terminal may further send the indication information to indicate the second terminal to process the object in the foregoing processing manner.

As shown in FIG. 90C or FIG. 90D, the user selects, in the small window, the second terminal, an application service installed on the second terminal, and a manner (save, open, or the like) of processing the object by the second terminal. In this way, the first terminal may determine the second terminal and a manner of processing the object by the second terminal.

When only one candidate terminal serves as the second terminal, an option of a manner of processing the object by the second terminal may also be displayed on the first terminal. The manner of processing the object by the second terminal may be determined on the first terminal in a manner such as a selection operation for the option.

According to the data transmission method in the foregoing implementation, interaction between a plurality of terminals can be implemented, and the plurality of terminals may be of different types, so that it is more convenient for a user to share data between the plurality of different devices.

For the example of displaying the drawer shown in FIG. 90A and FIG. 90B, it should be noted that, if the first terminal sends the object to the second terminal, temporarily storing the object locally may be temporarily storing the object and the drawer (namely, the candidate terminal) correspondingly. For example, an icon of the drawer is associated with a cache space. When detecting that the user performs a drag release action on the drawer, the first terminal may store, in the associated cache space, an object corresponding to the drag release action.

In a possible implementation, after temporarily storing the object, as described above, the first terminal may further display, for the user to select, an option of a manner of processing the object by the second terminal. The manner of processing the object by the second terminal may be determined on the first terminal in a manner such as a selection operation for the option. Then, the data transmission request is sent to the second terminal, and the data transmission request may also carry a processing manner. In this manner, a manner of processing the object can be selected more flexibly.

The first terminal sends the data transmission request to the second terminal, and the second terminal returns a second response signal (examples shown in FIG. 88A and FIG. 88B). When receiving the second response signal, the first terminal cancels the sending of the object, or may collapse the drawer in a manner similar to the manner in FIG. 88G, the object is still temporarily stored in the cache space. If the user wants to send the object again, the user may pull out the drawer in a sliding manner, and drag the object again for transmission.

In a possible implementation, that the first terminal determines, from the at least two candidate terminals based on a stay location of the first cross-device transmission operation, the second terminal corresponding to the first cross-device transmission operation may further include: determining, based on a relationship between the stay location of the first cross-device transmission operation and a location of an edge of the first terminal, the second terminal corresponding to the first cross-device transmission operation.

In a possible implementation, based on a location relationship between the first terminal and a connected candidate terminal, correspondences between different edges of the first terminal and candidate terminals may be preset. In this way, the second terminal corresponding to the first cross-device transmission operation may be determined based on the location relationship between the stay location of the first cross-device transmission operation and the edge of the first terminal.

Alternatively, in another possible implementation, a location sensor may be installed in the terminal in this application, and may sense a location relationship with another terminal. When the first terminal captures that the first cross-device transmission operation stays at the edge of the first terminal, the sensor may be enabled to sense a candidate terminal placed at the edge, and the candidate terminal placed at the edge is used as the second terminal.

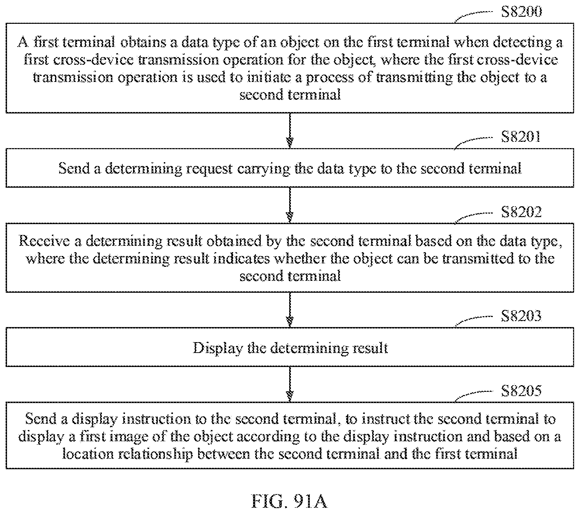

FIG. 91A is a flowchart of a data transmission method according to an embodiment of this application. The method shown in FIG. 91A may be applied to the first terminal. Based on Steps S8200 to S8203, the transmission method in this implementation may further include the following steps.

Step S8205: Send a display instruction to the second terminal, to instruct the second terminal to display a first image of the object according to the display instruction and based on a location relationship between the second terminal and the first terminal.

A second image that is of the object and that is displayed on the first terminal and the first image of the object displayed on the second terminal can be spliced into a complete image of the object.

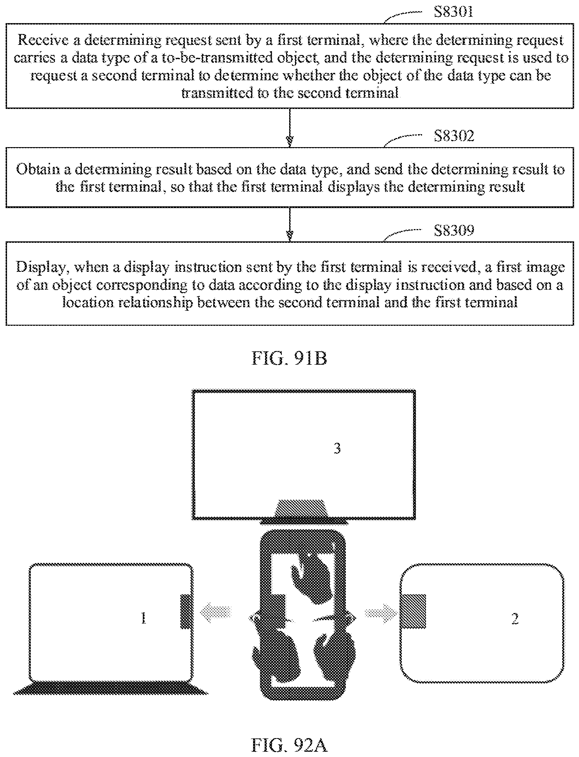

FIG. 91B is a flowchart of a data transmission method according to an embodiment of this application. The method shown in FIG. 91B may be applied to the second terminal. Based on Steps S8301 to S8302 shown in FIG. 82B, the transmission method in this implementation may further include the following steps.

Step S8309: Display, when the display instruction sent by the first terminal is received, a first image of an object corresponding to the data according to the display instruction and based on the location relationship between the second terminal and the first terminal.

A second image that is of the object and that is displayed on the first terminal and the first image of the object displayed on the second terminal can be spliced into a complete image of the object.

The first image and the second image may refer to a part of a thumbnail of the object, and the complete image of the object may refer to a complete thumbnail of the object. In other words, in this implementation, a partial image in a thumbnail corresponding to an object may be displayed according to the location relationship between the first terminal and the second terminal. For example, the second terminal is on the right side of the first terminal. In this case, after determining the second terminal, the first terminal may send the display instruction to the second terminal, where the display instruction may carry the second image of the object currently displayed by the first terminal. In this way, the second terminal may display, according to the location relationship between the second terminal and the first terminal, the first image on the display of the second terminal obtained after the second image is removed from the complete image of the object

In a possible implementation, the displaying the first image according to the location relationship between the second terminal and the first terminal may mean that the first image is displayed on a side that is of the display of the second terminal and that is close to the first terminal. For example, in the foregoing example, if the second terminal is on the right side of the first terminal, the first image may be displayed on the left side of the display of the second terminal. For a specific implementation, refer to the specific descriptions of the corresponding content in the embodiments shown in FIG. 38 to FIG. 44B. Details are not described herein again.

The side that is of the display of the second terminal and that is close to the first terminal may be preset according to an initial location relationship between the second terminal and the first terminal, or a location relationship between the second terminal and the first terminal sensed in real time. For example, the location relationship between the second terminal and the first terminal is preset For example, if the second terminal is located on the right side of the first terminal, when the second terminal receives the display instruction, the second terminal may display the first image on the left side even if an actual location of the second terminal is not on the right side of the first terminal. For another example, as described above, the location sensor may be installed on both the first terminal and the second terminal, and the second terminal may sense the location relationship with the first terminal in real time. When receiving the display instruction, if the second terminal senses that the first terminal is located on the left side of the second terminal, the first image may be displayed on the left side of the display.

After the first terminal is connected to one second terminal, or the second terminal is determined from at least two candidate terminals, the first terminal may send the display instruction to the second terminal. The display instruction may carry the second image of the object displayed by the first terminal In this way, the second terminal may display, according to the display instruction and the location relationship between the second terminal and the first terminal, the first image on the display of the second terminal obtained after the second image is removed from the complete image of the object.

In a possible implementation, the "send the object to the second terminal" in Step S8204 may further include: if it is detected that an area of a second image of the object displayed on a display meets a send condition, sending the object to the second terminal.

The send condition may mean that the object may be sent when a relationship between the area of the second image and an area of the complete image meets a specific ratio. If the relationship between the area of the second image and the area of the complete image does not meet the specific ratio, the object is not sent to the second terminal even when the second cross-device transmission operation is detected. For example, if a ratio of the area of the second image to the area of the complete image is less than a ratio threshold, the object is sent to the second terminal when the second cross-device transmission operation is detected. If the ratio of the area of the second image to the area of the complete image is not less than the ratio threshold, the object is not sent to the second terminal even when the second cross-device transmission operation is detected. The ratio threshold may be preset, for example, may be 50%.

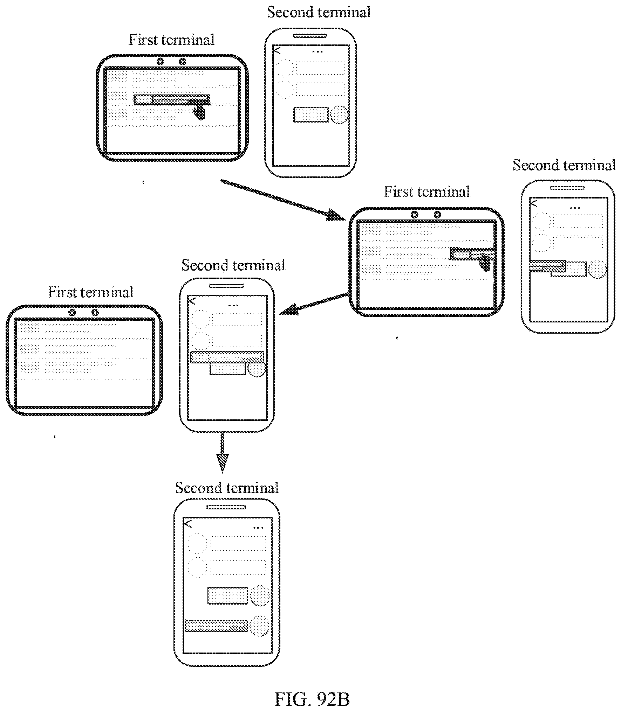

FIG. 92A is a schematic diagram of an application scenario according to an embodiment of this application. FIG. 92B is a schematic diagram of cross-screen display according to an embodiment of this application. As shown in FIG. 92A, locations of different edges of the first terminal may correspond to candidate terminals, a location of the left edge of the first terminal corresponds to a candidate terminal 1, a location of the right edge of the first terminal corresponds to a candidate terminal 2, and a location of the upper edge of the first terminal corresponds to a candidate terminal 3. In this way, according to the foregoing description, the second terminal corresponding to the first cross-device transmission operation may be determined according to the location relationship between the stay location of the first cross-device transmission operation and the edge of the first terminal. The first terminal may identify a relative location between the candidate terminal and the first terminal by using a positioning technology, for example, Bluetooth, UWB, an ultrasonic wave, or location measurement, to obtain correspondences between the different edges and the candidate terminals. It should be noted that, for a specific implementation of identifying the device location by using location measurement, refer to specific descriptions of corresponding content in the embodiments shown in FIG. 38 to FIG. 44B. Details are not described herein again.

As shown in FIG. 92A, if the stay location of the first cross-device transmission operation is the right edge of the first terminal, the candidate terminal 2 may be the second terminal. In this case, the first terminal may send a display instruction to the second terminal. The display instruction may carry the second image of the object displayed by the first terminal. In this way, the second terminal may display, according to the display instruction and the location relationship between the second terminal and the first terminal, the first image on the display of the second terminal obtained after the second image is removed from the complete image of the object As shown in FIG. 92A, the first image is displayed on the left edge of the candidate terminal 2. If the first terminal detects a drag release action, an area of the second image displayed on the first terminal is less than a half of an area of the complete image, that is, a ratio of the area of the second image to the area of the complete image is less than a ratio threshold. Therefore, the first terminal may send the object to the second terminal. For a specific process of sending the object to the second terminal, refer to the foregoing part described in Step S8404 and the embodiments shown in FIG. 88A to FIG. 88C. Details are not described again in this application.

In a specific application scenario shown in FIG. 92B, the second terminal currently opens an application service. In an example shown in FIG. 92B, the second terminal opens a chat window of an instant messaging application. When detecting that the first cross-device transmission operation stays at the right edge of the display of the first terminal, the first terminal may send a display instruction to the second terminal, and the second terminal displays the second image of the object on the left edge of the display.

In a possible implementation, the display instruction sent by the first terminal may further carry a data type of the object, the second terminal may determine, based on information such as the data type, a currently opened application service, an application service installed on the second terminal, and a local storage status of the second terminal, whether the object can be received, and feed back a determining result to the first terminal in real time.

When the first terminal detects the second cross-device transmission operation, if the ratio of the second image of the object displayed on the first terminal to the complete image is less than the ratio threshold, and a determining result is that the object can be transmitted to the second terminal, the first terminal may send the object to the second terminal. After the second terminal receives the object, if the currently opened application service can open the object, the second terminal may directly open the object in the currently opened application service. As shown in FIG. 92B, the second terminal may open the object (for example, a picture) in the instant messaging application. Based on a further operation of the user, the second terminal may select to send the picture or store the picture locally. If the currently opened application service cannot open the object, the second terminal may select, based on the data type of the object, an application service to open the object The second terminal may further store an object.

According to the data transmission method in the foregoing implementation, a drag interaction process is presented in a concise and intuitive manner, which helps the user determine a drag occasion, avoids repeated operations, and simplifies user operations.

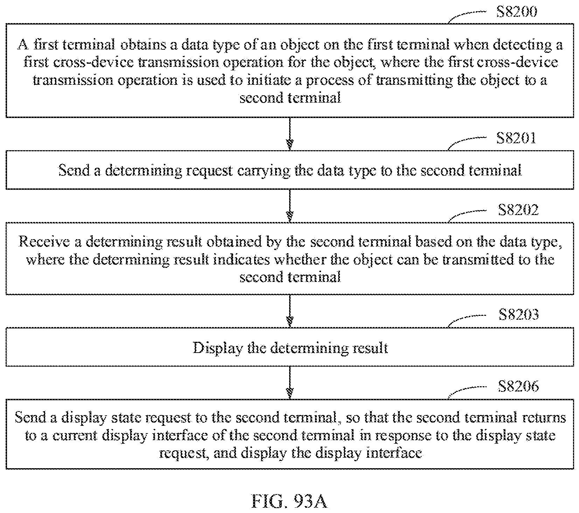

FIG. 93A is a flowchart of a data transmission method according to an embodiment of this application The transmission method shown in FIG. 93A may be applied to the first terminal. In addition to Steps S8200 to S8203, the transmission method in this implementation may further include the following steps.

Step S8206: Send a display state request to the second terminal, so that the second terminal returns a current display interface of the second terminal in response to the display state request, and displays the display interface.

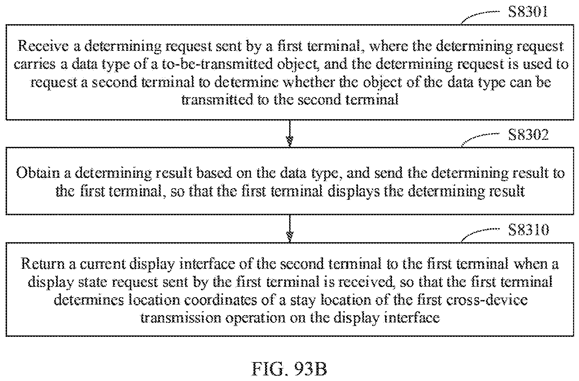

FIG. 93B is a flowchart of a data transmission method according to an embodiment of this application. The transmission method shown in FIG. 93B may be applied to the second terminal. In addition to Steps S8301 to S8302, the transmission method in this implementation may further include the following steps.

Step S8310: Return a current display interface of the second terminal to the first terminal when a display state request sent by the first terminal is received, so that the first terminal determines location coordinates of a stay location of the first cross-device transmission operation on the display interface.

The first cross-device transmission operation is an operation used by the first terminal to initiate a process of transmitting the object to the second terminal.

The display state request is used to request the second terminal to return the current display interface of the second terminal. When receiving the display state request, the second terminal may take a screenshot of the current display interface to obtain a screenshot image, and return the screenshot image to the first terminal. or directly project the screenshot image to the display interface of the first terminal. A specific manner of returning to the current display interface of the second terminal is not limited in this application.

The transmission method in this implementation may be combined with the examples shown in FIG. 82A and FIG. 82B, or may be combined with the examples shown in FIG. 90A and FIG. 90B. In other words, after the first terminal is connected to one second terminal, or the second terminal is determined from at least two candidate terminals, the first terminal may send the display state request to the second terminal.

After receiving the current display interface of the second terminal returned by the second terminal, the second terminal may continue to listen to the first cross-device transmission operation. In a possible implementation. Step S8201 may include: Sending a determining request to the second terminal, where the determining request includes the data type and coordinates, on the display interface, of a location where the first cross-device transmission operation stays. In other words, the determining request received by the second terminal may carry the coordinates, on the display interface, of the location where the first cross-device transmission operation stays. The obtaining a determining result according to the data type in Step S8302 may include: obtaining the determining result based on the data type and the coordinates.

For example, if the application service registers drag monitoring, the second terminal may send, to the application service, the determining request sent by the first terminal, and the service determines, based on the data type and the location of the coordinates, whether the object can be transmitted to the second terminal. The second terminal may send the determining result obtained according to the data type and the coordinates to the first terminal. Step S8202 may include: receiving, from the second terminal, the determining result obtained by the second terminal based on the data type and the coordinates. For a manner of displaying the determining result, refer to the foregoing implementations. Details are not described again.

In a possible implementation, the second terminal may further obtain a determining result based on a local storage status. When the local storage status is having a storage capability, the determining result obtained by the second terminal is that the object can be moved to the second terminal. If the local storage status is having no storage capability, the determining result may be obtained based on the foregoing data type and the location coordinates.

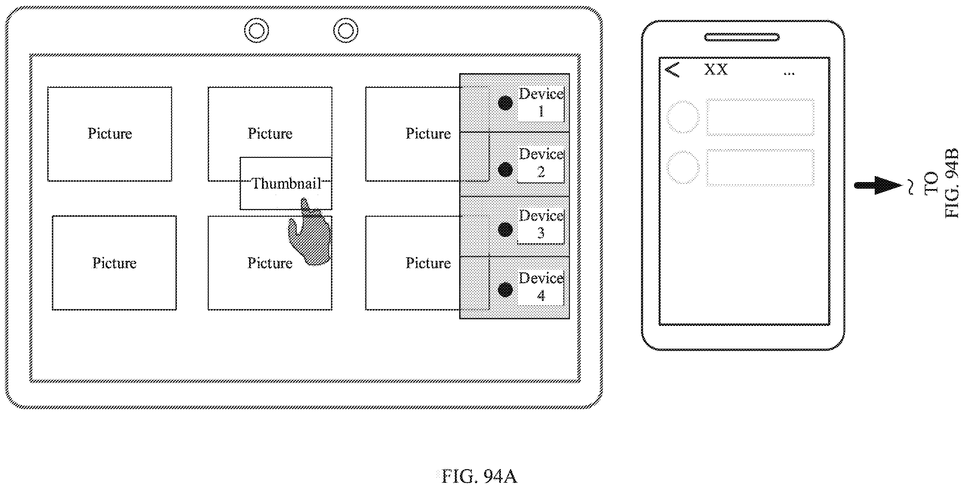

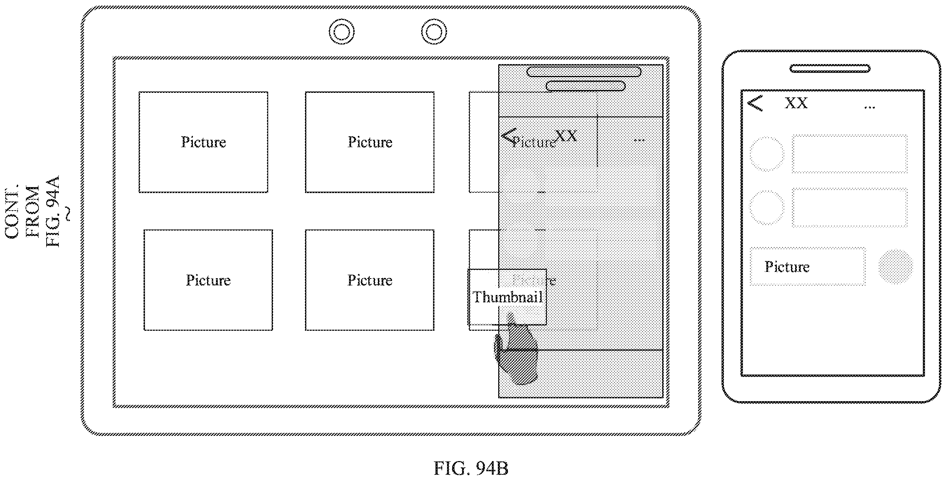

FIG. 94A and FIG. 94B is a schematic diagram of an application scenario according to an embodiment of this application. As shown in FIG. 94A and FIG. 94B, the transmission method in this application is described with reference to FIG. 93A, FIG. 93B, and FIG. 90B. As shown in FIG. 90B, a stay location of a thumbnail of an object partially overlaps a display location of information about one of the candidate terminals, and the candidate terminal is selected as the second terminal. The first terminal may send a display state request to the second terminal. When receiving the display state request, the second terminal may take a screenshot of a current display interface to obtain a screenshot image, and return the screenshot image to the first terminal. The first terminal displays the screenshot image of the second terminal on a display.

The first terminal continues to listen to a first cross-device transmission operation, and sends a determining request to the second terminal. The determining request carries a data type of the object and coordinates of a location where the first cross-device transmission operation stays in the screenshot image of the display interface of the second terminal. For example, in FIG. 94A and FIG. 94B, a finger drags the thumbnail of the object on the first terminal to stay in a message input box or a dialog content display box of a dialog interface of an instant message application in the screenshot image of the second terminal. The first terminal may obtain coordinates of the stay location, and add the coordinates to the determining request, send a determining request to the second terminal. The second terminal receives the determining request, and the second terminal may obtain a determining result based on the data type and the coordinates. For example, the drag service system of the second terminal receives a determining request, and delivers the determining request to the framework layer. The framework layer generates a DRAG_LOCATION event, and sends the DRAG_LOCATION event to an application service. The application service may determine, based on the coordinates and the data type, whether the object can be dragged in, and returns a determining result to the first terminal step by step (an example of returning the determining result is shown in FIG. 87C). The determining result is displayed on the current display interface of the first terminal. For a specific display manner, refer to the example in FIG. 84A or FIG. 84B.

If the object in this implementation is a picture or a segment of text, the picture is allowed to be dragged to the dialog box of the instant message application, or the text is allowed to be dragged to the input box, the determining result is displayed on the display interface of the first terminal. The user releases the drag operation. When detecting the drag release operation, the first terminal may send the object to the second terminal, and the second terminal may directly open the object at a corresponding location. For example, as shown in FIG. 94A and FIG. 94B, the second terminal displays the object (for example, the picture) in the dialog box.

According to the data transmission method in the foregoing implementation, an object can be directly dragged to a target location. Compared with a process in which an operation of dragging the object to the target location is further needed to be performed at a receive end in a related technology, a user operation can be simplified. A determining result is displayed in real time in a dragging process, to avoid repeated operations, and improve operation efficiency.

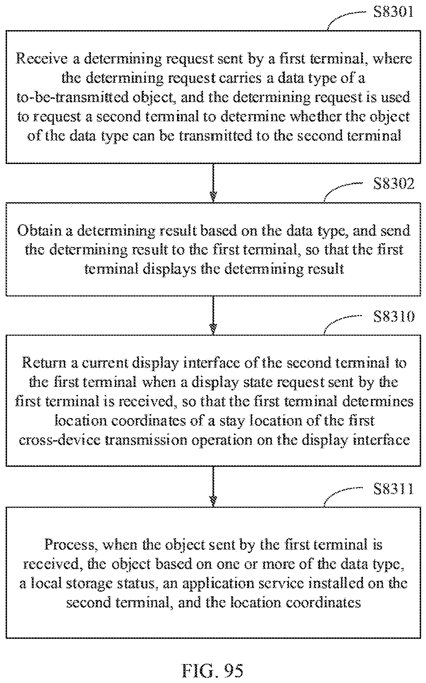

Based on the implementations in FIG. 93A and FIG. 93B, FIG. 95 is a flowchart of a data transmission method according to an embodiment of this application. The method shown in FIG. 95 may be applied to the second terminal. As shown in FIG. 95, the method may further include the following steps. Step S8311: Process, when the object sent by the first terminal is received, the object based on one or more of the data type, a local storage status, an application service installed on the second terminal, and the location coordinates.

In a possible implementation. Step S8311 may include: opening, based on the application service installed on the second terminal, the object when the local storage status is having no storage capability, or locally storing the object when the local storage status is having the storage capability.

In a possible implementation, that locally storing the object when the local storage status is having the storage capability may include: when the local storage status is having the storage capability, and the location of the location coordinates on the display interface does not allow insertion of the data type, locally storing the object, and selecting an application based on the data type to open the object. When the local storage status is having the storage capability, and the location of the location coordinates on the display interface allows insertion of the data type, locally storing the object, and opening the object on the display interface based on the location coordinates.

For a specific process of opening the object based on the application service installed on the second terminal, refer to the foregoing description. Whether the location of the location coordinates on the display interface allows the insertion of the foregoing data type may be determined based on whether the location registers drag listening of the data type. For a specific process, refer to the foregoing description.

According to the data transmission method in the foregoing implementation, the object can be directly dragged to the target location. Compared with that in a process in which an operation of dragging the object to the target location is further needed to be performed at a receive end in a related technology, the user operation can be simplified. The receive end may process the object based on local information, to simplify the user operation.

As described in the foregoing embodiment, in a scenario of cooperatively using a plurality of terminals, to improve convenience of cooperative use of the plurality of terminals, the user may connect the plurality of terminals for cooperative use. For example, the user has a PC and a mobile phone. The user may connect the PC and the mobile phone for cooperative office in a wireless or wired manner. For example, in a scenario of collaborative office between the PC and the mobile phone, multi-screen collaboration implements projection and display, to and on a display of the PC by using mirror projection, of an interface displayed by the mobile phone. For another example, refer to the descriptions in the foregoing embodiment. The user may drag, to the PC in a drag manner, the interface or a UI element on the interface displayed by the mobile phone in a cross-device manner, to continue presentation on the PC. Then, the user may implement an operation for the mobile phone at the PC end. For example, the user may use a mouse of the PC to perform a mouse operation, for example, a mouse click or mouse movement, on an interface projected on or a presented UI element presented on the PC, to implement an operation of displaying an actual interface on the mobile phone. The user may alternatively directly operate the mobile phone by using a touchscreen of the mobile phone.

However, in the foregoing solution, the display interface or the UI element on the interface of the mobile phone is always displayed on the display of the PC. In other words, when collaborative office between the plurality of terminals such as the PC and the mobile phone is implemented, the display interface or the UI element on the interface of the mobile phone is always projected and displayed on the display of the PC. Even if the user directly operates the mobile phone by using the touchscreen of the mobile phone, the display interface of the mobile phone is projected to the display of the PC. However, when the user directly operates the mobile phone by using the touchscreen of the mobile phone, a focus or attention is on the mobile phone, and it is meaningless for the display of the PC to continue to display interface content of the mobile phone, and user privacy may be disclosed**.**

Based on this, some other embodiments of this application further provide a display method. The method may be applied to a scenario in which a plurality of terminals are used cooperatively. In this scenario, on a premise that projection is not started, by using a keyboard and mouse sharing technology, an input device (for example, a mouse, a touchpad, or a keyboard) of a terminal (for example, referred to as a first terminal) may be used to control another terminal (for example, referred to as a second terminal). An input device of the second terminal may also be used. By using the method provided in this embodiment, when a user controls the second terminal by using the input device of the first terminal, the second terminal may project a corresponding interface to the first terminal for display. When the user controls the second terminal by using the input device of the second terminal, the second terminal displays a corresponding interface, and does not project the corresponding interface to the first terminal for display. In this way, the user may freely control display of an interface of the second terminal on different devices based on an actual requirement of the user. This not only protects user privacy, but also avoids the user from diverting attention, thereby improving user experience.

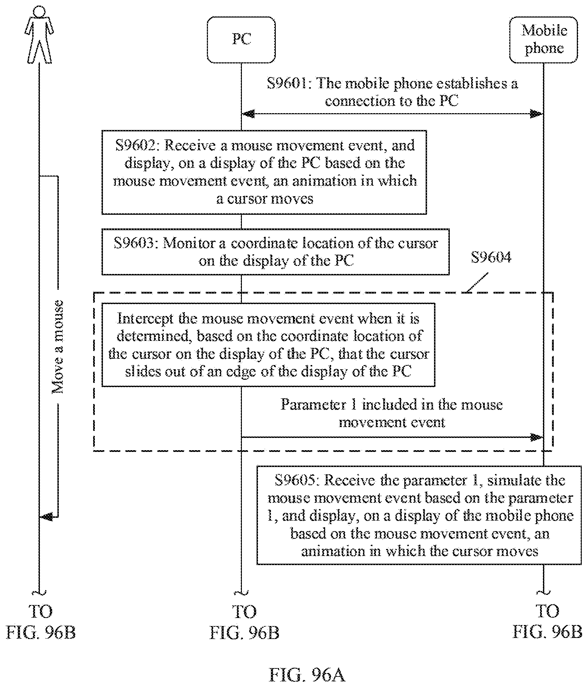

Refer to FIG. 96A to FIG. 103(b), the following specifically describes a process of displaying an interface on a corresponding device based on different input devices used for an input operation of the user.

This embodiment may be applied to the system architecture shown in FIG. 58. It may be understood that the first terminal and the second terminal are separately connected to an input device or include an input device. The input device of the first terminal may be a mouse, a touchpad, a keyboard, or the like. The input device of the second terminal may be a touchscreen. When the input device of the second terminal is a touchscreen, the touchscreen is also a display device or a display of the second terminal.

In this embodiment, after establishing a connection in a wired or wireless manner, the first terminal and the second terminal may be cooperatively used together. For example, after the first terminal is connected to the second terminal, by using a keyboard and mouse sharing technology, the user may control both the first terminal and the second terminal by using one input device, for example, the input device of the first terminal. In other words, the user may not only control the first terminal by using the input device of the first terminal, but also share the input device of the first terminal with the second terminal, so that the user controls the second terminal. In addition, the user may alternatively control the second terminal by using the input device of the second terminal.

For example, in this embodiment, when the user controls the second terminal by using the input device of the first terminal, the second terminal may project the corresponding interface to the display of the first terminal for display. When the user controls the second terminal by using the input device of the second terminal, a corresponding interface is displayed on the touchscreen (or referred to as the display) of the second terminal, and the corresponding interface is not projected to the display of the first terminal.

For example, one or more applications are installed on the second terminal. The second terminal may display an icon of a corresponding application on the touchscreen of the second terminal. In this embodiment, after the first terminal establishes the connection to the second terminal, by using the keyboard and mouse sharing technology, the user may use the input device of the first terminal to perform an operation, for example, a tap operation, on the icon of the application displayed on the touchscreen of the second terminal. In response to the tap operation, the second terminal may project an interface of the application to the display of the first terminal for display. The user may alternatively perform, by using the input device of the second terminal, an operation on the icon of the application. displayed on the touchscreen of the second terminal, for example, the user performs a tap operation on the icon of the application by using a finger. In response to the tap operation, the second terminal displays an interface of the application on the touchscreen of the second terminal, and the interface of the application is not projected to the display of the first terminal.

For another example, in this embodiment, after the user uses the input device of the first terminal to perform an operation, for example, a tap operation, on an input box displayed on the touchscreen of the second terminal, the virtual keyboard is not displayed on the touchscreen of the second terminal, and the user uses the keyboard (for example, a physical keyboard) of the first terminal, enter a character in the text box. After the user performs, by using the input device of the second terminal, an operation, for example, a tap operation, on an input box displayed on the touchscreen of the second terminal, the second terminal may display a virtual keyboard on the touchscreen of the second terminal, and the user may input a character in the input box by using the virtual keyboard.

With reference to FIG. 58 and FIG. 59, in this embodiment of this application, software architectures of the first terminal and the second terminal are described by still using the example in which the software system of the first terminal is the Windows system and the software system of the second terminal is the Android system. The software architecture in this embodiment is similar to the software architecture shown in FIG. 59, and a difference lies in that, in the software architecture in this embodiment, an application layer of the first terminal may include a projection service module and a keyboard and mouse module. An application layer of the second terminal may include a projection service module and a launcher.

On the basis of the software architecture, in a scenario in which a plurality of terminals are collaboratively used, a user may control the plurality of terminals by using a same input device, thereby improving usage efficiency. With reference to FIG. 58, for example, a plurality of terminals include a first terminal and a second terminal, an input device of the first terminal is a mouse, and an input device of the second terminal is a touchscreen. After the first terminal establishes a connection to the second terminal, a user may control the first terminal and the second terminal by using the mouse of the first terminal based on a keyboard and mouse sharing technology. The user may alternatively control the second terminal by using the touchscreen of the second terminal. In this embodiment, when the user controls the second terminal by using the mouse of the first terminal, the second terminal may project a corresponding interface to the first terminal for display. When the user controls the second terminal by using the touchscreen of the second terminal, the second terminal displays the corresponding interface, and does not project the corresponding interface to the first terminal.

With reference to FIG. 58 and a corresponding software architecture, a method provided in an embodiment is described in detail below with reference to the accompanying drawings by using an example in which the first terminal is a PC, the second terminal is a mobile phone, the input device of the first terminal is a mouse, and the input device of the second terminal is a touchscreen. It should be noted that, in embodiments of this application, the first terminal and the second terminal are merely intended to distinguish between two different devices. In some embodiments, nouns "first terminal" and "second terminal" used to describe different devices may also be interchanged. For example, in this embodiment, the first terminal may also be referred to as a second terminal (for example, a PC), and the second terminal may also be referred to as a first terminal (for example, a mobile phone). This is not specifically limited in this embodiment.

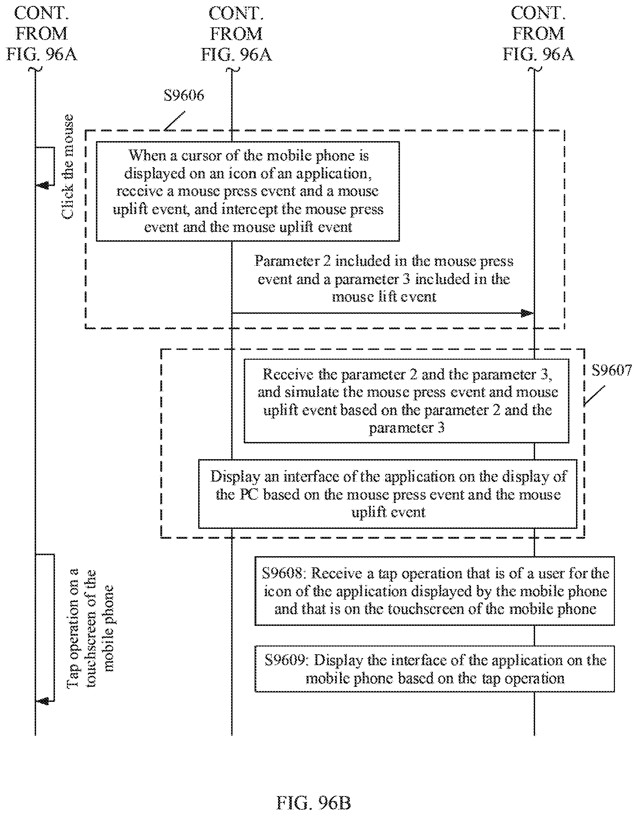

FIG. 96A and FIG. 96B are a schematic flowchart of the display method according to this embodiment of this application. As shown in FIG. 96A and FIG. 96B, the method may include the following S9601 to S9609.

S9601: The mobile phone establishes a connection to the PC.

After successfully establishing the connection, the mobile phone and the PC may be collaboratively used. In this embodiment, a user may use the input device of the PC to control the PC, and the PC may also share the input device of the PC with the mobile phone for the user to control the mobile phone.

For example, after the mobile phone is connected to the PC, the PC may enable a keyboard and mouse sharing mode. After enabling the keyboard and mouse sharing mode, the PC may enable input (input) listening and mount a hook (HOOK). Input listening may be used to listen to relative displacement and a coordinate location of a cursor. Input listening may also be used to listen to a keyboard event. The mounted hook may be used to intercept a corresponding input event (or shield a corresponding input event) after a mouse shuttle starts. The mounted hook may also be used to capture a parameter in the intercepted input event after the mouse shuttle starts. The PC may further notify the mobile phone to create a virtual input device. The virtual input device has a same function as that of a conventional input device, for example, a mouse, a touchpad, or a keyboard, and may be used by the mobile phone to simulate a corresponding input event

After the keyboard and mouse sharing mode of the PC is enabled, the PC has established the connection to the mobile phone, and the virtual input device of the mobile phone is created, it may be considered that the PC shares the input device of the PC with the mobile phone, and the user may control the mobile phone by using the input device of the PC. For example, the PC may listen to the relative displacement and the coordinate location of the cursor by using input listening, and determine, based on data that is listened to, whether a mouse shuttle condition is met. After it is determined that the mouse shuttle condition is met, the mounted hook intercepts a mouse event, captures a parameter in the mouse event, and sends the captured parameter to another terminal that is connected to the PC and that creates a virtual input device, so that the terminal simulates, by using the created virtual input device, the corresponding input event, for example, a mouse event, to respond to the event. That is, the another terminal that is connected to the PC and that creates the virtual input device responds to an operation for the mouse.

It should be noted that specific descriptions of S9601 are similar to the descriptions of the corresponding content in S6001 in the embodiment shown in FIG. 60A and FIG. 60B. Details are not described herein again. In addition, in the foregoing embodiment, an example in which the PC establishes the connection to the mobile phone, and then the PC enables the keyboard and mouse sharing mode is used for description. For another example, in some other embodiments, the PC may also first start the keyboard and mouse sharing mode. For example, the keyboard and mouse sharing mode may be manually enabled by the user, or may be automatically enabled by the PC. The keyboard and mouse sharing mode is enabled on the PC, and then the PC establishes the connection to the mobile phone. An implementation of establishing the connection to the mobile phone by the PC is the same as implementation described in the foregoing embodiment. Details are not described herein again. After the mobile phone establishes the connection to the PC, the mobile phone may create the virtual input device automatically or based on a notification message from the PC or based on selection of the user.

In addition, in the foregoing embodiment, an example in which the user may control the mobile phone by using the input device of the PC only after the cursor displayed on a display of the PC slides over an edge of the display of the PC is used for description. In some other embodiments, the PC has established the connection to the mobile phone, the keyboard mouse sharing mode of the PC is enabled, the mobile phone creates the virtual input device, and then the user may control the mobile phone by using the input device of the PC, that is, after connection is established between the PC and the mobile phone, the keyboard and mouse sharing mode of the PC is enabled and the mobile phone creates the virtual input device, if the user operates the input device of the PC, for example, the mouse, the PC may intercept a corresponding input event, capture an operation parameter in the input event, and send the operation parameter to the mobile phone, so as to control the mobile phone by using the input device of the PC. In the following embodiment, an example in which the user may control the mobile phone by using the input device of the PC after the cursor displayed on the display of the PC slides over the edge of the display of the PC is used for description.

It may be understood that, when the PC shares the input device of the PC with the mobile phone, the user may control the mobile phone by using the input device of the PC, and may control the mobile phone by using the input device of the mobile phone. In this embodiment, different input devices that control the mobile phone may correspond to different corresponding interfaces displayed on the terminal.

For example, the user controls the mobile phone by using the input device of the PC. The method may include the following S9602 to S9607.

S9602: The PC receives the mouse movement event, and displays an animation of cursor movement on the display of the PC based on the mouse movement event.

S9603: The PC monitors the coordinate location of the cursor on the display of the PC.

S9604: When determining, based on the coordinate location of the cursor on the display of the PC, that the cursor slides out of the edge of the display of the PC, the PC intercepts the mouse movement event, and sends a parameter 1 included in the mouse movement event to the mobile phone.

S9605: The mobile phone receives the parameter 1, simulates the mouse movement event based on the parameter 1, and displays the animation of cursor movement on a display of the mobile phone based on the mouse movement event

In this embodiment, after the keyboard and mouse sharing mode is enabled, when the user wants to control, by using the mouse, the another terminal that is connected to the PC and that creates the virtual input device, for example, when the user wants to operate a current display interface of the mobile phone, the user may continuously move the mouse in a same direction, so that the cursor displayed on the display of the PC slides over (or slides out of) the edge of the display of the PC, that is, the mouse shuttle condition is triggered.

After it is determined that the cursor slides out of the edge of the display of the PC, that is, the mouse shuttle condition is triggered, the user may perform an operation on the another terminal by using the input device of the PC. For example, after the cursor slides out of the edge of the display of the PC, if the user continues to operate the input device of the PC, for example, the mouse, the PC may send, to the another terminal that creates the virtual input device, data about the operation that is input by the user by using the input device of the PC, or, shuttle the mouse to the terminal. For example, after the cursor slides out of the edge of the display of the PC, the user inputs an operation by using the input device of the PC, and the PC may intercept the input event corresponding to the operation, such as a mouse movement event, a mouse press event, or a mouse uplift event, and transmit the parameter included in the intercepted input event to the another terminal that is connected to the PC and that creates the virtual input device, so that the terminal responds to the operation for the input device of the PC, for example, the mouse.

For example, after the cursor slides out of the edge of the display of the PC, the user continues to move the mouse. In this case, the PC may intercept the mouse movement event corresponding to the operation, and send the parameter 1 included in the mouse movement event to the another terminal, for example, the mobile phone, that creates the virtual input device. After receiving the parameter 1, the mobile phone may simulate the mouse movement event based on the parameter 1, and display the animation of the cursor movement on the display of the mobile phone based on the mouse movement event

It should be noted that specific descriptions of S9602 to S9605 are similar to the descriptions of the corresponding content in S6002 to S6005 in the embodiment shown in FIG. 60A and FIG. 61 to FIG. 63. Details are not described herein again.

In addition, in this embodiment, after it is determined that the mouse shuttle starts, the PC may further send, to the mobile phone through the established connection, shuttle state information used to indicate that the mouse shuttle starts. In other words, the shuttle state information is used to indicate the mobile phone to start to accept input from the input device of the PC. After receiving the information, the mobile phone may simulate a cursor, and display the cursor on the display of the mobile phone. For example, after receiving the information, the mobile phone may create the cursor, and deliver the cursor to a launcher of the mobile phone to display the cursor. After determining that the mouse shuttle starts, the PC may also hide the cursor displayed on the display of the PC. This gives the user a visual effect of the cursor shuttle from the PC to the mobile phone.

A location at which the mobile phone displays the cursor may be predefined, for example, may be any location on the display of the mobile phone. The location at which the mobile phone displays the cursor may also correspond to a location at which the cursor slides out on the PC. For example, if the cursor slides out of the right edge of the display of the PC, the cursor is displayed on the left edge of the display of mobile phone. For another example, if the cursor slides out from a center location of the right edge of the display of the PC, the cursor is displayed in a center location of the left edge of the display of the mobile phone. In an example, after the cursor slides out of the display of the PC, the PC may send, to the mobile phone, a coordinate location of the cursor on the display of the PC when the cursor slides out of the display of the PC. The mobile phone may determine, based on the coordinate location and resolution (for example, A×B) of the PC, an edge from which the cursor slides out of the display of the PC. For example, when the cursor slides out of the display of the PC, coordinates are (xl, y1), where y1 is equal to A, the mobile phone may determine that the cursor slides out of the right edge of the display of the PC. The mobile phone may further determine, based on x1 and resolution (for example, a height B) of the PC, a proportion of the location at which the cursor slides out of the display of the PC to a height of the mobile phone. Based on the proportion and resolution of the mobile phone, a specific location at which the cursor is displayed on the right edge may be determined. The resolution of the PC may be sent by the PC to the mobile phone in a process of establishing the connection to the mobile phone or after the connection is established successfully.

As described above, the purpose of triggering the cursor to shuttle from the PC to the mobile phone is to control the mobile phone. Therefore, after the user shuttles, by using moving the mouse, the cursor from the display of the PC to the display of the mobile phone, the user may continue to move the mouse, that is, the user inputs, by using the mouse of the PC, an operation of moving the cursor on the mobile phone. In a process in which the user continues to move the mouse of the PC, the mobile phone receives a corresponding parameter, for example, the parameter 1 included in the mouse movement event After receiving the parameter 1, the mobile phone may simulate a movement event, for example, the mouse movement event, based on an operation parameter included in the parameter 1. In response to the mouse movement event, the mobile phone may draw the animation of the cursor movement and display the animation on the display of the mobile phone until the cursor moves to a location, that the user wants to operate, on the display of the mobile phone. For example, the mobile phone currently displays a first interface, and the first interface includes one or more of content. The content on the first interface may be an element displayed on the first interface. The content may be an element that can be operated by the user, for example, a control. For example, content that the user wants to operate is a control. The user may continue to move the mouse of the PC, so that the cursor on the mobile phone moves to a location of the control.

In addition, in this embodiment, before the user controls the mobile phone by using the mouse of the PC, a display interface on the mobile phone may have been projected to the display of the PC, or may not be projected to the PC, and is displayed only on the mobile phone. It may be understood that, after the mouse shuttles to the mobile phone, the operation performed by the user by using the mouse of the PC may be used only to move the cursor on the mobile phone, and does not cause a change on the display interface of the mobile phone. For example, still with reference to the foregoing example, after the mouse shuttles to the mobile phone, the user continues to move the mouse, and the mobile phone may simulate the mouse movement event. In response to the obtained mouse movement event through simulation, the mobile phone may display the movement animation of the cursor, and the display interface of the mobile phone does not change. When the display interface of the mobile phone does not change in response to the input event, the mobile phone may continue to maintain a current display policy. For example, if the mobile phone projects the interface to the PC before the user controls the mobile phone by using the mouse of the PC, the mobile phone may continue to project the interface to the PC. For another example, if the mobile phone does not project the interface to the PC before the user controls the mobile phone by using the mouse of the PC, the mobile phone may continue to display the interface only on the mobile phone.

The following uses an example in which the mobile phone does not project the interface to the PC before the user controls the mobile phone by using the mouse of the PC for description.

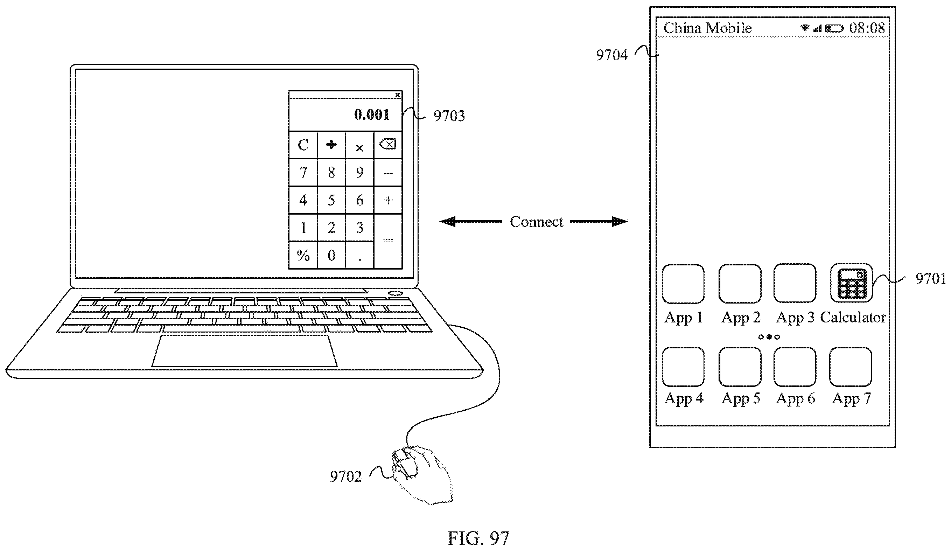

For example, the user wants to open an application on the mobile phone. For example, the first interface is a desktop, and the content that the user wants to operate is an icon of the application on the desktop. Generally, for applications installed on the mobile phone, the mobile phone may display icons of these applications on the desktop (or referred to as a home screen (home screen)) of the mobile phone. After the user shuttles, by moving the mouse, the cursor from the display of the PC to the display of the mobile phone, the user may continue to move the mouse until the cursor moves to a location of the icon that is of the application that the user wants to open and that is displayed on the display of the mobile phone. For example, with reference to FIG. 97, the cursor moves to a location of an icon 9701 of a calculator. In addition, the display interface of the mobile phone does not change in a process of moving the cursor. As described above, the mobile phone may determine to continue to maintain the current display policy, that is, continue to display the current interface and the animation of the cursor movement on the mobile phone, and do not project content on the interface of the mobile phone to the PC for display.

After the cursor moves to a location to be operated, that is, the cursor moves to a location of content to be operated on in the first interface, for example, the location of the icon of the application that the user wants to open, the user may input a corresponding operation by using the input device of the PC, where the operation may be referred to as a first operation. For example, the first operation may be a click operation, so that the mobile phone may start the application based on the first operation. It may be understood that, after the user performs the first operation by using the input device of the PC, the PC (for example, a keyboard and mouse module of the PC) may receive a corresponding input event, for example, referred to as a first input event. The first operation may include one operation, or may include a plurality of operations. If the first operation includes one operation, the first input event includes one input event If the first operation includes a plurality of operations, the first input event includes a corresponding quantity of input events. For example, the input device of the PC is the mouse, and the first operation is the click operation. When the user inputs the click operation by using the mouse, the click operation may include two operations: a press operation and an uplift operation, and the corresponding first input event includes a press event and an uplift event In an example, the press operation may be a mouse press operation, the uplift operation may be a mouse uplift operation, the press event may be a mouse press event, and the uplift event may be a mouse uplift event. On the basis of this, a process in which the user opens the application on the mobile phone by using the mouse of the PC may include the following S9606 and S9607.

S9606: When the cursor on the mobile phone is displayed on the icon of the application, the PC receives the mouse press event and the mouse uplift event, and intercepts the mouse press event and the mouse uplift event, and sends a parameter 2 included in the mouse press event and a parameter 3 included in the mouse uplift event to the mobile phone.

A sixth operation parameter in this embodiment of this application may include the parameter 2 and the parameter 3.

S9607: The mobile phone receives the parameter 2 and the parameter 3, simulates the mouse press event and the mouse uplift event based on the parameter 2 and the parameter 3, and displays an interface of the application on the display of the PC based on the mouse press event and the mouse uplift event.

The interface of the application may be a second interface in this embodiment of this application.

With reference to the description of S9605, for example, the user wants to open the application (for example, the calculator), and the operation of opening the application is the click operation for the icon of the application displayed on the desktop of the mobile phone, that is, the first operation is the click operation. When the user moves, by moving the mouse of the PC, the cursor on the mobile phone to the location of the icon of the calculator, the user may perform the press operation on the mouse (for example, a left mouse button), and then uplift fingers. The keyboard and mouse module of the PC may receive the press event (for example, the mouse press event) and the uplift event (for example, the mouse uplift event). Because the mouse shuttle has started, the keyboard and mouse module of the PC may intercept (or shield) the mouse press event and the mouse uplift event by using the hook, so that the mouse press event and the mouse lift event are not sent to a Windows system of the PC. In this way, the PC does not respond the received mouse press event and mouse uplift event The keyboard and mouse module of the PC may further capture, by using the hook, a parameter in the mouse press event, for example, the parameter is referred to as the parameter 2; and capture a parameter in the mouse uplift event, for example, the parameter is referred to as the parameter 3. The PC may further send the parameter 2 captured in the mouse press event and the parameter 3 captured in the mouse uplift event to the mobile phone through the established connection.

In an example, the parameter 2 may include an operation parameter 2, and the parameter 3 may include an operation parameter 3. The operation parameter 2 may include a mouse button flag bit used to indicate that the user presses the mouse, coordinate information (where a value is empty), scroll wheel information (where a value is empty), and button location information used to indicate that the user performs an operation on the left mouse button. The operation parameter 3 may include a mouse button flag bit used to indicate that the user uplifts the mouse, coordinate information (where a value is empty), scroll wheel information (where a value is empty), and button location information used to indicate that the user performs an operation on the left mouse button.

The mobile phone may receive the parameter 2 and the parameter 3. Then, the mobile phone may convert, based on a preset mapping relationship, a button bit code of the operation parameter 2 in the received parameter 2 into button bit code that can be identified by the mobile phone. After converting a button bit code of the operation parameter 3 in the received parameter 3 into a button bit code that can be recognized by the mobile phone, the mobile phone simulates a press event, for example, the mouse press event, by using the created virtual input device based on the operation parameter 2 after the button bit code is converted, and simulates an uplift event, for example, the mouse uplift event, by using the created virtual input device based on the operation parameter 3 after the button bit code is converted. The mobile phone may determine, based on the mouse press event, the mouse uplift event, and a current display location of the cursor, that the user performs the click operation on the icon of the calculator on the desktop. For example, after the keyboard and mouse shuttle starts (for example, the mobile phone receives, from the PC, the shuttle state information used to indicate that the mouse starts to shuttle, where the shuttle state information may be first shuttle state information in this embodiment of this application), the mobile phone may register a listener at the coordinate location of the cursor. The mobile phone may monitor the coordinate location of the cursor on the display of the mobile phone in real time by using the listener. That is, the mobile phone may determine the current coordinate location of the cursor by using the listener.

After the mobile phone determines that the user clicks the icon of the calculator, the mobile phone may determine that the display interface of the mobile phone changes. Then, the mobile phone may first determine whether an intent of inputting the operation by the user is to display a corresponding interface, for example, the interface of the application, on the mobile phone, or to display the interface of the application on the PC. If the mobile phone determines that the operation intent of the user is to display the interface of the application on the PC, the interface of the application may be displayed on the display of the PC. If the mobile phone determines that the operation intent of the user is to display the interface of the application on the mobile phone, the interface of the application is displayed on the mobile phone, and the interface of the application is not projected to the display of the PC.

For example, the mobile phone may determine the operation intent of the user based on an input device that inputs the click operation. If the input device (or an input source) that inputs the click operation is the mouse of the PC, it may be determined that the operation intent of the user is to display the corresponding interface on the PC. If the input device that inputs the tap operation is a touchscreen of the mobile phone, it may be determined that the operation intent of the user is to display the corresponding interface on the mobile phone. For example, the mobile phone may determine, based on the mouse press event and the mouse uplift event in S9607, whether the input source that inputs the click operation is the mouse of the PC or the touchscreen of the mobile phone.

The mobile phone may determine, in the following manner, the input source that inputs the click operation.

Manner 1: The mobile phone may determine, based on an input device identifier (identify, ID) included in the input event, the input source that inputs the corresponding operation.

Generally, in addition to an operation parameter used to trigger a terminal to perform a corresponding operation, an input event may further include an input device ID, where the input device ID is used to identify an input source that inputs the corresponding operation. The input event obtained by the mobile phone through simulation by using the created virtual input device is no exception, and also includes an input device ID. Therefore, the mobile phone may determine, based on the input device ID included in the input event, the input source that inputs the corresponding operation.

For example, the mouse press event and the mouse uplift event in S9607 each may include an input device ID. Because the mouse press event and the mouse uplift event are obtained by the mobile phone through simulation by using the created virtual input device, the input device ID is an ID of the virtual input device. The ID of the virtual input device may be generated when the mobile phone creates the virtual input device and stored in the mobile phone. On basis of this, after the mobile phone obtains the mouse press event and the mouse uplift event through simulation, the mobile phone may obtain the input device ID in the mouse press event and the mouse uplift event The mobile phone may determine that the input device ID is the ID of the virtual input device. The virtual input device is used by the mobile phone to simulate a corresponding input event after the user inputs an operation by using the input device of the PC. Therefore, when the mobile phone determines that the input device ID included in the input event is the ID of the virtual input device, the mobile phone may determine the input device that inputs the corresponding input operation, namely, the click operation, is the mouse of the PC.

Manner 2: The mobile phone may determine, based on an input mode included in the input event, the input source that inputs the corresponding operation.

An input event may further include an input mode, where the input mode is used to indicate a type of a device that inputs a corresponding operation, for example, a mouse, a touchscreen, or a touchpad. The input event obtained by the mobile phone through simulation by using the created virtual input device is no exception, and also includes an input mode. Therefore, the mobile phone may determine, based on the input mode included in the input event, the input source that inputs the corresponding operation.

For example, the mouse press event and the mouse uplift event in S9607 each may include an input mode. The mouse press event and the mouse uplift event are mouse events obtained by the mobile phone through simulation. Therefore, the input mode is used to indicate that a device that inputs the corresponding operation is the mouse. On basis of this, after the mobile phone obtains the mouse press event and the mouse uplift event through simulation, the mobile phone may obtain the input mode in the mouse press event and the mouse uplift event. Based on the input mode, the mobile phone may determine the input source that inputs the corresponding operation, namely, the click operation, is the mouse.

When the mobile phone determines that the input source that inputs the corresponding operation is the mouse, it may be understood that the mouse may be directly connected to the mobile phone, or may be another device, for example, the mouse shared by the PC with the mobile phone. Therefore, further, the mobile phone may further determine whether the mouse is currently in a mouse shuttle state, that is, determine whether the mouse is the mouse shared by the PC with the mobile phone. When the mobile phone determines that the mouse is currently in the mouse shuttle state, it indicates that the user inputs the click operation by using the mouse of the PC. In this case, the mobile phone may determine the input source that inputs the corresponding operation, namely, the click operation, is the mouse of the PC.

In Manner 1 or Manner 2, the mobile phone may determine the input source that inputs the foregoing click operation is the mouse of the PC, and it indicates that the operation intent of the user is to display the corresponding interface on the PC. In response to the mouse press event and the mouse uplift event, the mobile phone may display the corresponding interface, namely, the application interface of the icon clicked by the user, on the display of the PC. For example, with reference to the foregoing example, as shown in FIG. 97, after the cursor on the mobile phone moves to the icon 9701 of the calculator, the user performs the click operation on the icon 9701 of the calculator by using a mouse 9702 of the PC, for example, press a left button of the mouse 9702 of the PC and uplift fingers. In this case, as a response, the mobile phone may display an interface of the calculator on the display of the PC. As shown in FIG. 97, the PC displays the interface 9703 of the calculator. For the mobile phone, after the user performs the click operation on the icon 9701 of the calculator by using the mouse of the PC, the interface displayed by the mobile phone may not be changed. As shown in FIG. 97, a desktop 9704 is still displayed. The mobile phone may also display the interface 9703 of the calculator, which is not shown in the figure.

With reference to the foregoing software architecture, in an example, a specific implementation in which the mobile phone displays the interface of the calculator on the display of the PC may be as follows: After determining that the user inputs the click operation by using the mouse, the mobile phone may start a projection service. Then, the mobile phone, for example, a projection service module in the mobile phone, may obtain data corresponding to the interface of the calculator, and send the data to the PC. After receiving the data, the PC may display the interface of the calculator on the display of the PC based on the data. For example, the projection service module in the mobile phone may obtain the data corresponding to the interface of the calculator by using a display manager (for example, the display manager is a module at a framework layer of the mobile phone) of the mobile phone, for example, screen recording data, and send the data to the PC, so that the interface of the calculator can be displayed on the display of the PC.

In some embodiments, a DMP may be used to implement display of an interface of the mobile phone on the display of the PC. In some other embodiments, a wireless projection (Minicast) may also be used to implement display of an interface of the mobile phone on the display of the PC. Alternatively, the mobile phone may extract an instruction from an interface that needs to be drawn in response to the operation, for example, the interface of the calculator to obtain an instruction stream, obtain layer information of the interface, and then send the instruction stream, the layer information, and the like to the PC for the PC to restore the interface that needs to be drawn in response to the operation, thereby implementing display of the interface of the mobile phone on the PC. For a specific implementation, refer to the specific descriptions in the foregoing embodiments. Details are not described herein again.

For example, the user controls the mobile phone by using the input device of the mobile phone. The method may include the following S9608 and S9609.

S9608: The mobile phone receives a tap operation that is of the user for the icon of an application displayed by the mobile phone and that is on the touchscreen of the mobile phone.

S9609: The mobile phone displays the interface of the application on the mobile phone based on the tap operation.

When the user wants to control the mobile phone by using the input device of the mobile phone, for example, the touchscreen, the user may perform a touch control operation at a corresponding location on the touchscreen by using a finger. For example, the user wants to open an application (for example, a calculator). For example, the first interface is the desktop, content that the user wants to operate is the icon of the application on the desktop, and an operation of opening the application is the tap operation for the icon of the application displayed on the desktop of the mobile phone, that is, the first operation is the tap operation. The user may perform, by using the finger, the tap operation on the icon of the calculator displayed on the desktop of the mobile phone. Then, the mobile phone may receive a corresponding input event (where the input event may be a second input event in this embodiment of this application). The mobile phone may determine, based on the input event and the operation location of the user, that the user performs the tap operation on the icon of the calculator on the desktop.

As described in S9606 and S9607, when the mobile phone determines that the user performs the tap operation on the icon of the calculator, the mobile phone may determine that the display interface of the mobile phone changes. Then, the mobile phone may first determine whether an intent of inputting the operation by the user is to display a corresponding interface, for example, the interface of the application, on the mobile phone, or to display the interface of the application on the PC. The mobile phone may determine the operation intent of the user based on the input device (or an input source) that inputs the tap operation. The input source that inputs the tap operation may be implemented in Manner 1 or Manner 2 in S9607.

For example, after the user performs the tap operation at the location of the icon of the calculator on the touchscreen of the mobile phone, the mobile phone may receive the corresponding input event, where the input event includes an input device ID, and the input device ID is used to identify that the input source that inputs the tap operation is the touchscreen of the mobile phone. Therefore, the mobile phone may determine, based on the input device ID in the input event, that the input source that inputs the tap operation is the touchscreen of the mobile phone. For another example, after the user performs the tap operation at the location of the icon of the calculator on the touchscreen of the mobile phone, the mobile phone may receive the corresponding input event, where the input event includes an input mode, and the input mode is used to indicate that the input source that inputs the tap operation is the touchscreen of the mobile phone. Therefore, the mobile phone may determine, based on the input mode in the input event, that the input source that inputs the tap operation is the touchscreen of the mobile phone.

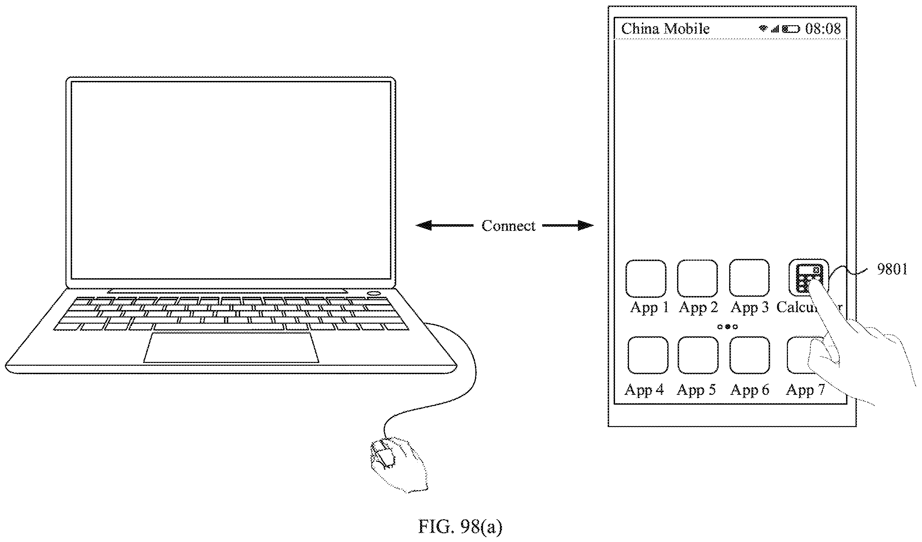

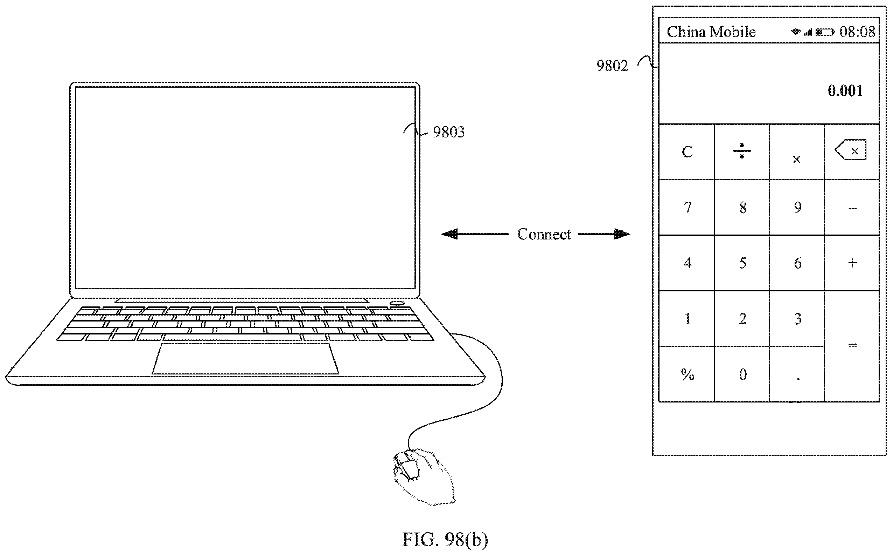

In Manner 1 or Manner 2, the mobile phone may determine that the input source that inputs the foregoing tap operation is the touchscreen of the mobile phone, and it indicates that the user wants to display the interface of the calculator on the mobile phone. In this case, in response to the input event, the mobile phone may display the interface of the calculator on the mobile phone, but does not display the interface of the calculator on the display of the PC. For example, as shown in FIG. 98(a), when the mobile phone establishes the connection to the PC, and the mobile phone creates the virtual input device, the user performs, by using fingers, the touch control operation, for example, the click operation, on the icon 9801 of the calculator displayed on the desktop of the mobile phone. As shown in FIG. 98(b), as a response, the mobile phone may display the interface 9802 of the calculator on the mobile phone, but does not project the interface 9802 of the calculator to the display 9803 of the PC for display.

In the foregoing example, an example in which the user performs, by using the input device of the PC or the input device of the mobile phone, the operation on the icon of the application displayed on the mobile phone is used for description. In some other embodiments, the user may also perform an operation on other content (for example, content on the first interface in embodiments of this application) displayed on the mobile phone by using the input device of the PC or the input device of the mobile phone. After the user performs the operation on the content displayed on the mobile phone, if the display interface of the mobile phone changes, the mobile phone may determine, based on an input device ID or an input mode included in an input event corresponding to the operation, whether an input source that inputs the operation is the touchscreen of the mobile phone or the mouse of a PC. Therefore, whether an operation intent of the user is to display a corresponding interface (for example, the second interface in embodiments of this application) on the PC or display a corresponding interface (for example, the second interface in embodiments of this application) on the mobile phone is determined. If the input source that inputs the operation is the mouse of the PC, the mobile phone may display the corresponding interface on the display of the PC. If the input source that inputs the operation is the touchscreen of the mobile phone, the mobile phone may display the corresponding interface on the mobile phone, but does not project the interface to the display of the PC.

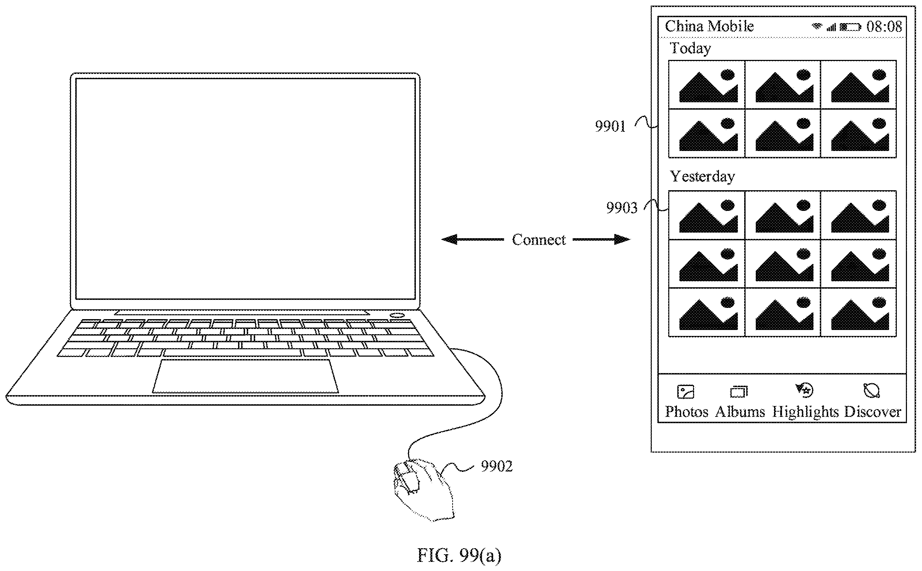

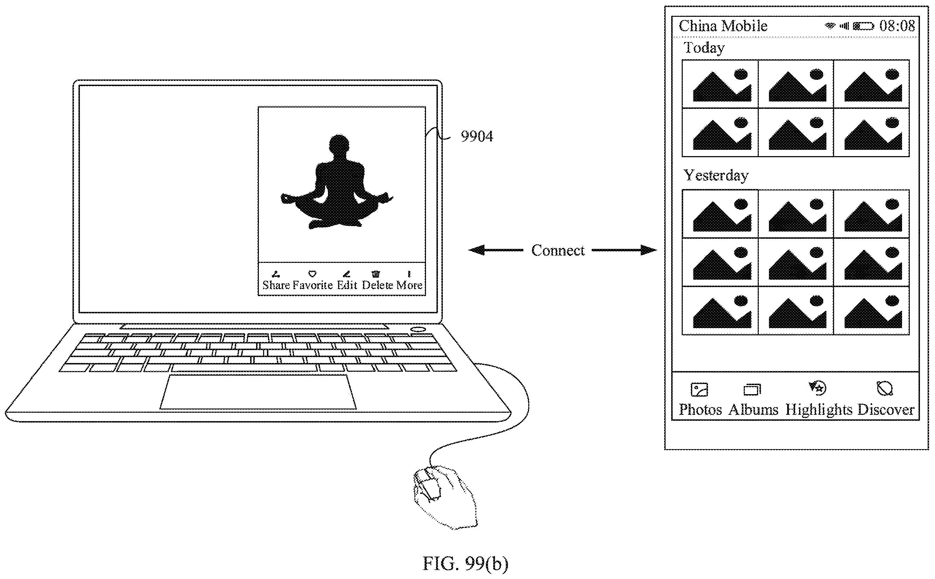

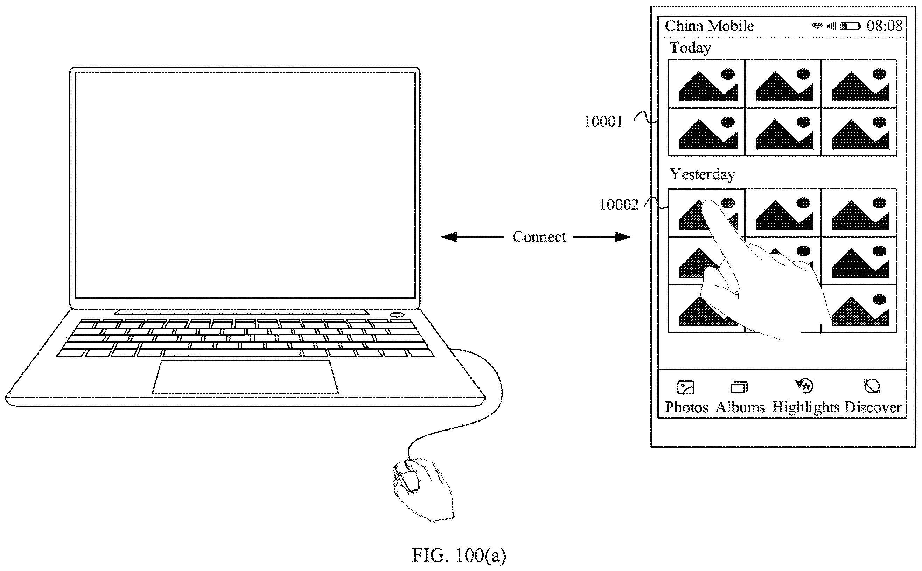

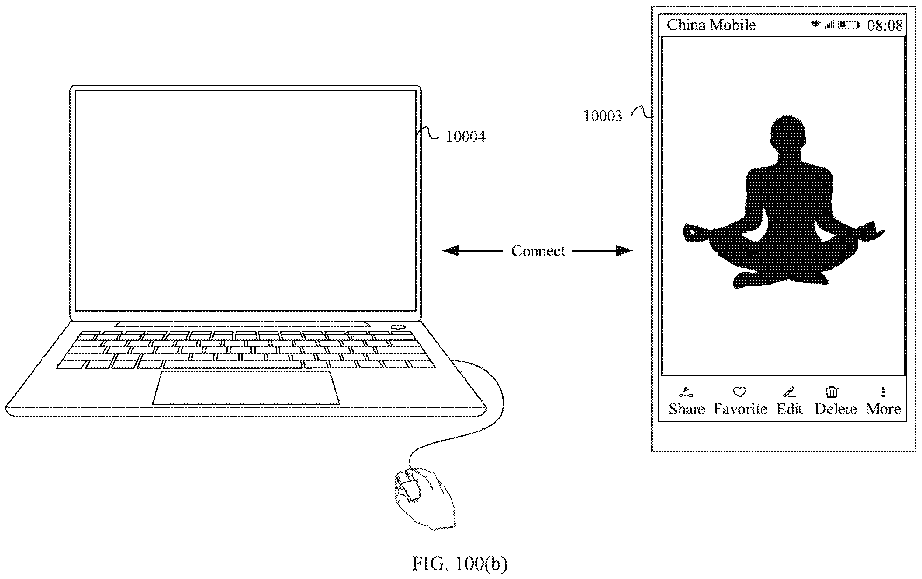

For example, as shown in FIG. 99(a), the mobile phone currently displays a home page 9901 of a gallery. The home page 9901 of the gallery includes thumbnails of a plurality of pictures including a thumbnail 9903 of a picture 1. When the user wants to display the picture 1 on the PC, the user may move the mouse 9902 of the PC, so that the mouse of the PC shuttles to the mobile phone. Then, the user may continue to move the mouse of the PC, so that the cursor on the mobile phone moves to a location of the thumbnail 9903 of the picture 1. The user may perform a click operation by using the mouse 9902 of the PC. The mobile phone may obtain an input event corresponding to the click operation. The mobile phone may determine, based on an input device ID or an input mode included in the input event, that the input source that inputs the click operation is the mouse of the PC. In this way, in response to the click operation, the mobile phone may display, on the display of the PC, a details interface including the picture 1. As shown in FIG. 99(b), the details interface of the picture 1 displayed on the PC is shown in 9904. For another example, as shown in FIG. 100(a), the mobile phone currently displays a home page 10001 of a gallery. The home page 10001 of the gallery includes thumbnails of a plurality of pictures including a thumbnail 10002 of a picture 1. When the user wants to display the picture 1 on the mobile phone, the user may perform a tap operation at a location of the thumbnail 10002 of the picture 1 on the touchscreen of the mobile phone. Then, the mobile phone may obtain a corresponding input event, and the mobile phone may determine, based on an input device ID or an input mode included in the input event, that an input source that inputs the tap operation is the touchscreen of the mobile phone. Therefore, as shown in FIG. 100(b), in response to the tap operation, the mobile phone may display a details interface 10003 of the picture 1 on the mobile phone, but does not project the details interface 10003 to the display 10004 of the PC for display. A specific implementation is similar to an implementation in which the user performs, by using the input device of the PC or the input device of the mobile phone, the operation on the icon of the application displayed on the mobile phone. Details are not described herein again.

In addition, it should be noted that, in the foregoing example, an example in which the interface of the mobile phone is not projected to the PC for display before the user performs the touch control operation on the touchscreen of the mobile phone is used for description. In some other embodiments, if the mobile phone has projected the interface of the mobile phone to the display of the PC (for example, the interface of the mobile phone or a UI element in the interface is projected to the display of the PC in a wireless projection scenario or a cross-device drag scenario) before the user performs the touch control operation on the touchscreen of the mobile phone, after the mobile phone receives the touch control operation of the user on the touchscreen of the mobile phone, the mobile phone may display the corresponding interface on the mobile phone, and stop projection the interface of the mobile phone to the display of the PC for display.

In some embodiments, after S9602 to S9607, if the user wants to control the PC by using the input device of the PC, for example, the mouse, the user may move the mouse, so that the cursor displayed on the mobile phone slides out of an edge of the display of the mobile phone. After the cursor on the mobile phone slides out of the edge of the display of the mobile phone, the keyboard and mouse shuttle ends. After the keyboard and mouse shuttle ends, the user may control the PC by using the mouse of the PC.

For example, when the mobile phone determines that the cursor on the mobile phone slides out of the edge of the display of the mobile phone, it indicates that the user wants to control another device by using the mouse. As described in S9604, if the mobile phone establishes the connection to only one device of the PC, it indicates that the user wants to control the PC by using the mouse. If the mobile phone establishes connections to a plurality of devices, the mobile phone may display a list option, where the list option includes identifiers of all the devices connected to the mobile phone, for the user to select a device that the user wants to control by using the mouse. If the user selects an identifier of the PC, it indicates that the user wants to control the PC by using the mouse. Alternatively, a shuttle relationship may be pre-configured on the mobile phone, and is used to determine a device to which the mouse shuttles, that is, determine which device responds to the operation of the mouse. Specific descriptions of configuration and application of the shuttle relationship are similar to descriptions of corresponding content in the foregoing embodiment. Details are not described herein again. After the mobile phone determines that the user wants to control the PC by using the mouse, the mobile phone may send, to the PC, shuttle state information used to indicate that the keyboard and mouse shuttle ends. After receiving the shuttle state information, the PC may determine that the mouse shuttle ends. Then, the PC may uninstall the hook (or close the hook), that is, cancel interception of an input event, for example, a mouse event Then, when the user performs an operation by using the input device of the PC, the keyboard and mouse module of the PC does not intercept a received input event, but sends the received input event to the Windows system of the PC, so that the Windows system of the PC responds to the input event, that is, the user can control the PC by using the mouse of the PC. The keyboard and mouse module of the PC may also enable the cursor to redisplay on the display of the PC.

In an example, a specific implementation in which the mobile phone determines that the cursor on the mobile phone slides out of the edge of the display of the mobile phone may be as follows: After the cursor is displayed on the mobile phone, the mobile phone may monitor the real-time coordinate location of the cursor on the display of the mobile phone (for example, the real-time coordinate location of the cursor may be obtained by using the registered listener). The mobile phone may determine the coordinate location of the cursor on the display of the mobile phone based on an initial location and relative displacement of the cursor, so as to determine whether the cursor slides out of the edge of the display of the mobile phone. The initial location of the cursor may be a coordinate location of the cursor on the display of the mobile phone when the mouse starts to move, or in other words, a coordinate location of the cursor on the display of the mobile phone before the mouse starts to move. The initial location of the cursor may specifically indicate a coordinate location in a coordinate system in which the upper left corner of the display of the mobile phone is a coordinate origin, an X-axis points from the upper left corner to the right edge of the display of the mobile phone, and a Y-axis points from the upper left corner to the lower edge of the display of the mobile phone. A specific implementation in which the mobile phone determines that the cursor slides out of the edge of the display of the mobile phone is similar to a specific implementation in which the PC determines that the cursor slides out of the edge of the display of the PC. Details are not described herein again.

The foregoing method is used in a scenario in which the mobile phone and the PC are collaboratively used. When the user controls the mobile phone by using the input device of the PC, the mobile phone may project the corresponding interface to the PC for display. When the user controls the mobile phone by using the input device of the mobile phone, the corresponding interface is displayed on the mobile phone, and the corresponding interface is not projected to the PC for display. In this way, the user can freely control, according to an actual requirement of the user, the interface of the second terminal to display on different devices. This not only protects user privacy, but also avoids the user from diverting attention, thereby improving user experience.

In the foregoing embodiment, an example in which after the user performs the operation on the display content of the mobile phone by using the input device of the PC or the input device of the mobile phone, the mobile phone chooses, based on different input device IDs or input mode included in a corresponding input event, to display the corresponding interface on different devices is used for description. It may be understood that, in the keyboard and mouse sharing mode, the PC may not only share the mouse of the PC with the another terminal, for example, the mobile phone, but also share a keyboard of the PC with the mobile phone. However, in a related technology, in the keyboard and mouse sharing mode, regardless of whether the user performs an operation in an input box displayed on the mobile phone by using the input device of the mobile phone or performs an operation in an input box displayed on the mobile phone by using the mouse of the PC, the mobile phone does not display a virtual keyboard on the mobile phone, but uses the keyboard, for example, a physical keyboard, of the PC by default to implement input. However, when the user performs the operation in the input box by using the input device of the mobile phone, for example, the touchscreen, a focus should be on the mobile phone. In this case, if the physical keyboard of the PC is still used to implement input, attention needs to be frequently switched between the two devices. This reduces efficiency of collaboratively using the plurality of terminals.

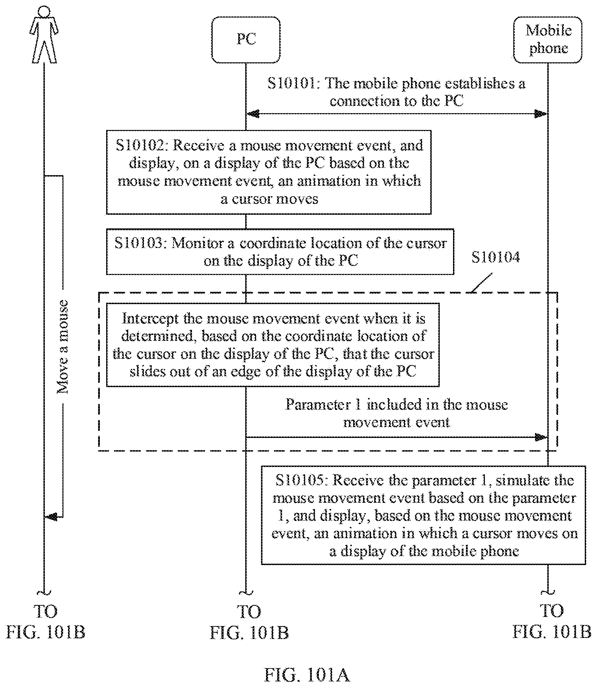

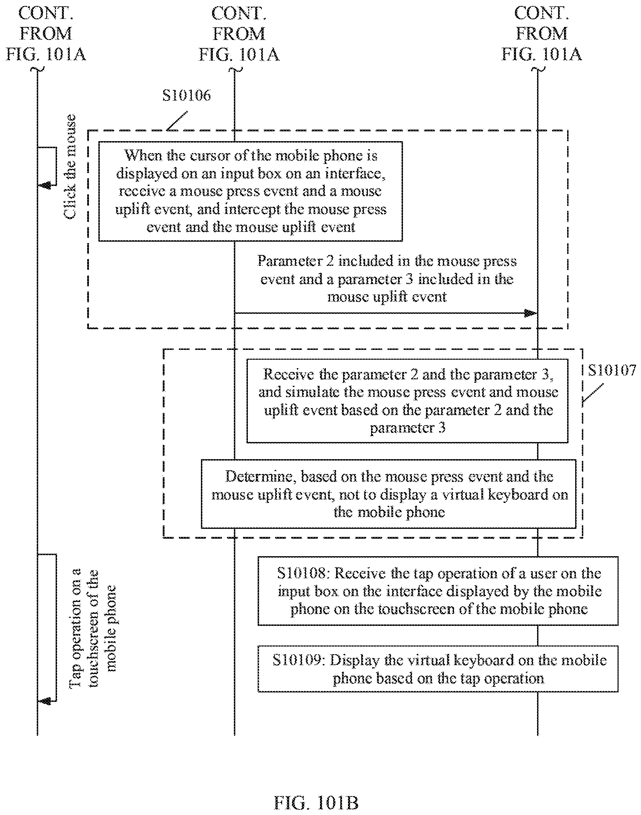

To resolve this problem, refer to FIG. 101A and FIG. 101B. This embodiment further provides a display method. FIG. 101A and FIG. 101B are a schematic flowchart of another display method according to this embodiment of this application. As shown in FIG. 101A and FIG. 101B, the method may include the following S10101 to S10109.

S10101: The mobile phone establishes a connection to the PC.

S10102: The PC receives a mouse movement event, and displays an animation of cursor movement on a display of the PC based on the mouse movement event.

S10103: The PC monitors a coordinate location of the cursor on the display of the PC.

S10104: When determining, based on the coordinate location of the cursor on the display of the PC, that the cursor slides out of an edge of the display of the PC, the PC intercepts the mouse movement event, and sends a parameter 1 included in the mouse movement event to the mobile phone.

S10105: The mobile phone receives the parameter 1, simulates the mouse movement event based on the parameter 1, and displays the animation of cursor movement on a display of the mobile phone based on the mouse movement event.

S10106: When the cursor on the mobile phone is displayed in the input box of the interface, the PC receives a mouse press event and a mouse uplift event, intercepts the mouse press event and the mouse uplift event, and sends a parameter 2 included in the mouse press event and a parameter 3 included in the mouse lift event to the mobile phone.

S10107: The mobile phone receives the parameter 2 and the parameter 3, simulates the mouse press event and the mouse uplift event based on the parameter 2 and the parameter 3, and determines, based on the mouse press event and the mouse uplift event, not to display the virtual keyboard on the mobile phone.

S10108: The mobile phone receives a tap operation of the user for the input box of the interface displayed by the mobile phone on the touchscreen of the mobile phone.

S10109: The mobile phone displays the virtual keyboard on the mobile phone based on the tap operation.

With reference to the foregoing steps, it may be understood that, in this embodiment, after receiving the operation of the user for the input box displayed on the mobile phone, the mobile phone may determine, based on the input device ID or the input mode included in the input event corresponding to the operation, whether an input source that inputs the operation is the input device of the mobile phone or the input device of the PC, so as to determine whether to display the virtual keyboard on the mobile phone. If the input source that inputs the operation is the input device of the PC, for example, the mouse, the mobile phone may not display the virtual keyboard on the mobile phone, and the user may implement input by using the keyboard of the PC. If the input source that inputs the operation is the input device of the mobile phone, for example, the touchscreen, the mobile phone may display the virtual keyboard on the mobile phone, and the user may implement input by using the virtual keyboard, It should be noted that specific descriptions of S10101 to S10109 are similar to descriptions of corresponding steps in S9601 to S9609 in the foregoing embodiment. Details are not described herein again.

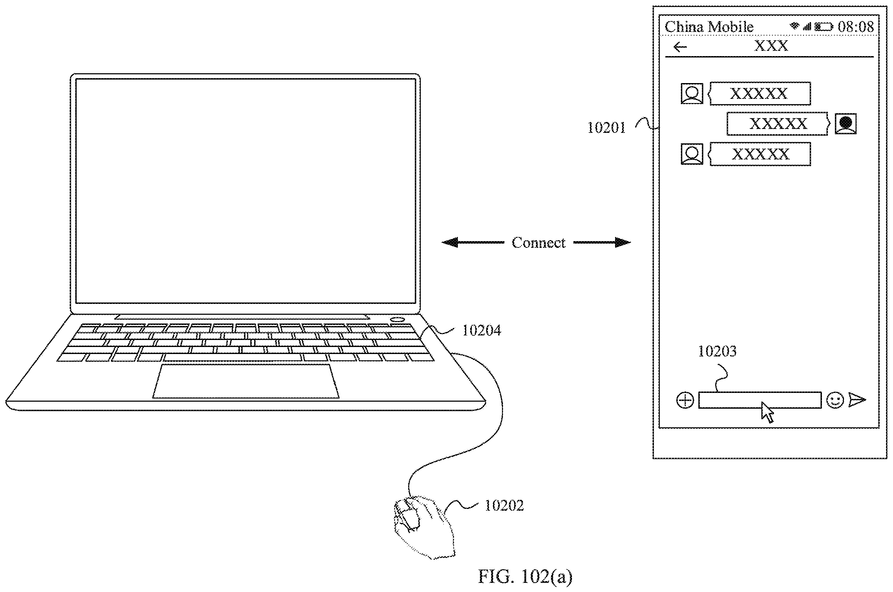

For example, as shown in FIG. 102(a), the mobile phone currently displays a chat interface 10201. The chat interface 10201 includes an input box 10203. When the user wants to enter a character in the input box 10203 by using the keyboard of the PC, the user may move a mouse 10202 of the PC, so that the mouse of the PC shuttles to the mobile phone. Then, the user may continue to move the mouse of the PC, so that the cursor on the mobile phone moves to a location of the input box 10203. The user may perform a click operation by using the mouse 10202 of the PC. The mobile phone may obtain an input event corresponding to the click operation. The mobile phone may determine, based on an input device ID or an input mode included in the input event, that an input source that inputs the click operation is the mouse of the PC. In this way, the mobile phone may determine not to display the virtual keyboard on the mobile phone, and the user may input the character in the input box 10203 by using a keyboard 10204 of the PC. A specific implementation in which the user implements input in the input box 10203 by using the keyboard 10204 of the PC may be as follows: After the user operates the keyboard 10204 of the PC, the PC (for example, the keyboard and mouse module of the PC) may receive a corresponding input event, for example, a keyboard event, the keyboard event includes an operation parameter of a specific operation performed by the user on the keyboard 10204. The keyboard and mouse module of the PC may intercept the keyboard event (for example, perform interception by using the mounted hook). As a result, the keyboard event is not sent to the Windows system of the PC, and the PC does not respond to the keyboard event. The keyboard and mouse module of the PC may also capture the operation parameter in the keyboard event. Then, the PC may send the operation parameter to the mobile phone. After receiving the operation parameter, the mobile phone may simulate (for example, perform simulation by using a created virtual input device) the corresponding keyboard event based on the operation parameter. In response to the keyboard event, the mobile phone may display the corresponding character in the input box 10203, to implement input

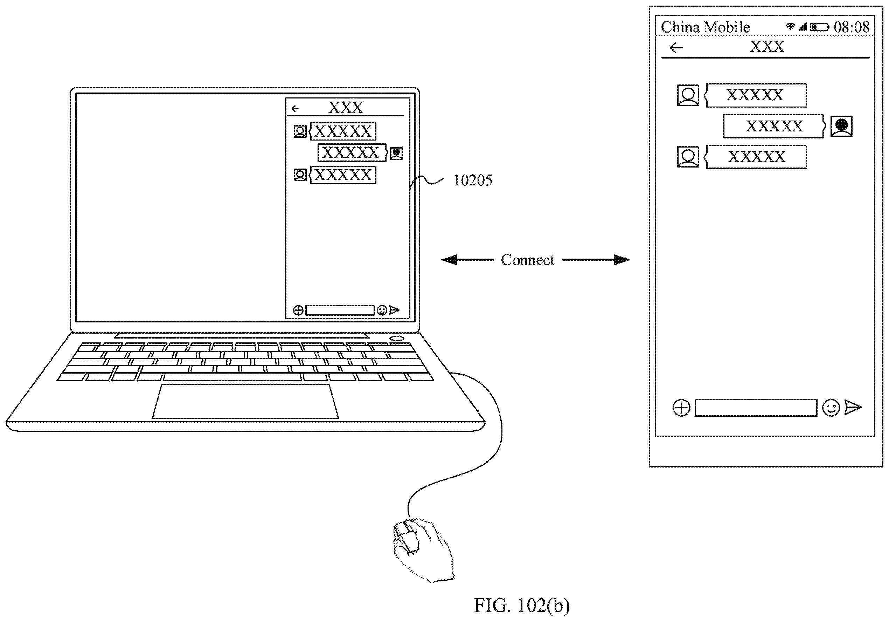

Optionally, the mobile phone may display the chat interface 10201 on the display of the PC, as shown in FIG. 102(b). The chat interface displayed on the PC is shown in 10205. When the PC displays the chat interface 10205, the user still enters the character by using the keyboard 10204 of the PC, and an input result may be synchronously displayed on the PC (for example, the PC updates the projection interface, so that the input result can be synchronously displayed on the PC).

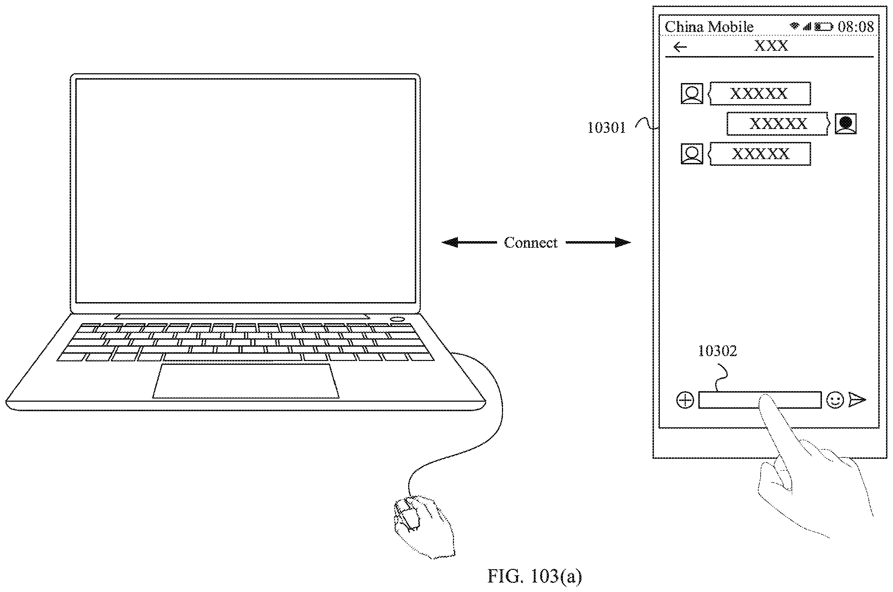

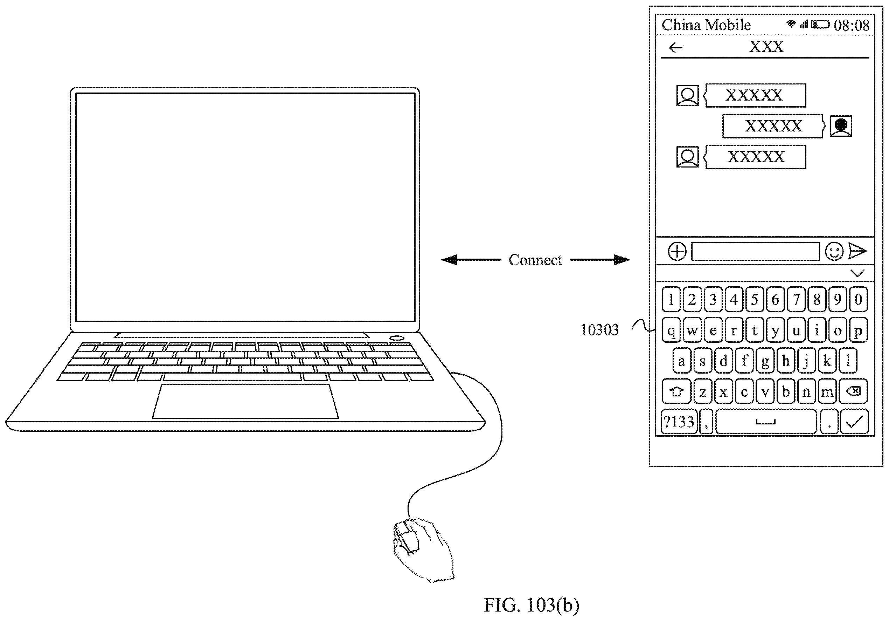

For another example, as shown in FIG. 103(a), the mobile phone currently displays a chat interface 10301. The chat interface 10301 includes an input box 10302. When the user wants to enter a character in the input box 10302 by using the virtual keyboard of the mobile phone, the user may perform a tap operation at a location of the input box 10302 on the touchscreen of the mobile phone. Then, the mobile phone may obtain a corresponding input event, and the mobile phone may determine, based on an input device ID or an input mode included in the input event, that an input source that inputs the tap operation is the touchscreen of the mobile phone. Therefore, as shown in FIG. 103(b), in response to the tap operation, the mobile phone may display the virtual keyboard 10303 on the mobile phone, and the user may enter the character in the input box 10302 by using the virtual keyboard 10303.

The foregoing method is used in the scenario in which the mobile phone and the PC are collaboratively used. When the user performs the operation in the input box of the mobile phone by using the input device of the PC, the mobile phone may not display the virtual keyboard of the mobile phone, and the user may implement input by using the keyboard of the PC. When the user performs the operation in the input box by using the input device of the mobile phone, the virtual keyboard is displayed on the mobile phone, and the user may implement input by using the virtual keyboard. In this way, the user does not need to frequently switch attention between the two devices, thereby improving efficiency of collaboratively using the plurality of terminals.

As described in the foregoing embodiment, in the scenario in which the plurality of terminals are collaboratively used, one terminal may project an interface displayed on the terminal to another terminal for display. For example, in a scenario of collaborative office between the PC and the mobile phone, multi-screen collaboration implements projection and display of a display interface of the mobile phone on the display of the PC through mirror projection. For another example, in cross-device drag, a DMP may be used to project an interface displayed on the mobile phone to the display of the PC for display. In this embodiment, a terminal that projects a display interface of the terminal may be referred to as a projection source end, and a terminal that receives projection of the projection source end and displays the display interface of the projection source end is referred to as a projection destination end. The interface that is projected by the projection source end and that is displayed on the projection destination end is referred to as a projection interface, and a window that is used by the projection target end to display the projection interface is referred to as a projection window.

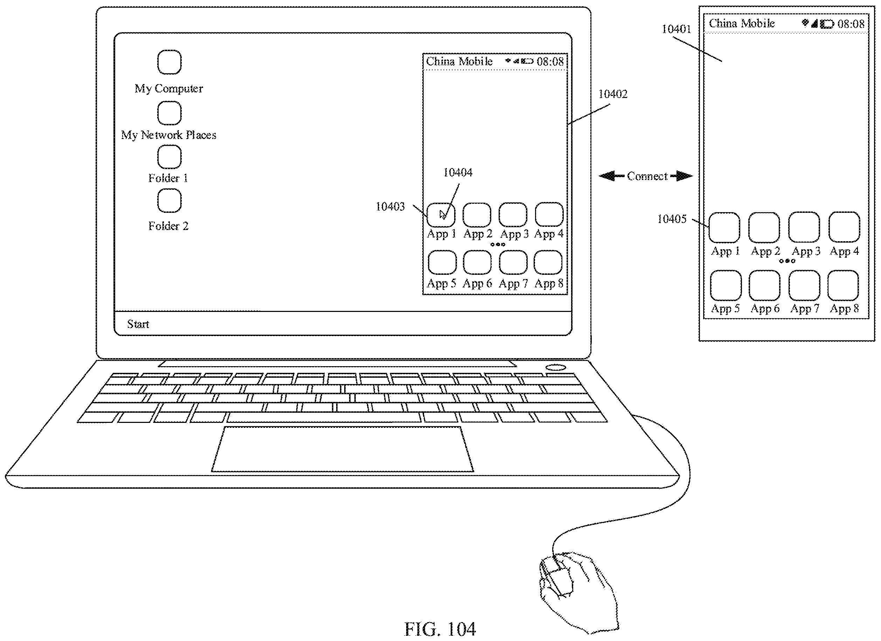

For example, multi-screen collaboration implements projection and display of a display interface from one terminal to another terminal. With reference to FIG. 104, for example, the projection source end is the mobile phone and the projection destination end is the PC. The mobile phone may project the interface (for example, a desktop 10401) displayed on the display of the mobile phone to the display of the PC. The PC may display, on the display of the PC, the interface projected by the mobile phone. For example, the PC displays a projection interface 10402 in a projection window. Then, the user may perform an operation on the projection interface by using the input device of the projection destination end, so as to implement an operation for the actual interface of the projection source end. For example, still with reference to FIG. 104, the input device is the mouse. The user may perform a mouse operation, for example, a mouse click or mouse movement on the projection interface 10402 by using the mouse of the PC. After receiving the corresponding mouse operation, the PC may convert, based on a size ratio relationship between the projection interface 10402 and an original interface (for example, a desktop 10401) projected by the mobile phone, coordinates when the user performs the mouse operation in the projection interface 10402 into coordinates in the original interface of the mobile phone. The PC sends the converted coordinates and an operation type (for example, movement or click) to the mobile phone, so that the mobile phone can generate a corresponding touch event to perform simulation and operation on the actual operation interface (for example, the desktop 10401), and project the operated interface to the PC.

In addition, generally, for content, for example, a control, included in an original interface displayed on the PC, when the user operates the mouse to move the cursor to the control, in order to enable the user to visually know whether a next operation is performed on the control, the control and/or the cursor have/has corresponding visual feedback. For example, the control presents a highlighted background, or the cursor changes from a normal selection style to a text selection style. However, in the foregoing scenario, when the user operates the input device, for example, the mouse, of the projection destination end (for example, the PC) to move the cursor to the control on the projection interface, the projection destination end generally does not have visual feedback. For example, the control on the projection interface does not present the highlighted background, and the cursor style docs not change accordingly. For example, still with reference to FIG. 104, when the user operates the mouse of the PC to move the cursor to an icon 10403 of an application (application, App) 1 in the projection interface 10402, the icon 10403 does not have visual feedback (for example, does not present the highlighted background). The cursor 10404 is always in the normal selection style and does not change. This is not very friendly to the user, and the user cannot visually know whether the next operation can be performed on an icon 10405 that corresponds to the icon 10403 and that is displayed on the mobile phone.

On basis of this, some other embodiments of this application further provide an interface display method. The method may be applied to a scenario in which, when a plurality of terminals are collaboratively used, a projection source end projects an interface displayed on a display of the projection source end to a display of a projection destination end for display. According to the method provided in this embodiment, when a user operates an input device, for example, a mouse or a touchpad, of the projection destination end to move a cursor to content on a projection interface, the content and/or the cursor on the projection interface perform/performs corresponding visual feedback, for example, the content on the projected screen presents a highlighted background, and a cursor style changes accordingly. In this way, the user can visually determine whether a next operation can be performed on content that corresponds to the content in the projection interface and that is displayed on the projection source end, thereby improving use experience.

It should be noted that the cursor in this embodiment may also be referred to as a mouse pointer. The cursor may be an image, which may be dynamic or static, and the cursor style may also be different in different cases. The content in this embodiment may be an operable element displayed in the interface, for example, a control, or may be an inoperable element displayed in the interface. An element may include one or more of the following content a character, a button, an icon, and the like.

Refer to FIG. 104 to FIG. 113. The following specifically describes a process of displaying an interface on a corresponding device based on different input devices used by the user to perform an input operation.

This embodiment can be applied to the system architecture shown in FIG. 58. It may be understood that a first terminal may be connected to the input device or include the input device. The input device of the first terminal may be the mouse, the touchpad, or the like.

In this embodiment, after the first terminal is connected to a second terminal, the projection source end in the first terminal and the second terminal may project the interface displayed on the display of the projection source end to the display of the projection destination end for display. For example, the first terminal 201 is used as the projection destination end, and the second terminal is used as the projection source end. After wireless projection is enabled, or the user drags an application window of the second terminal to the first terminal in a cross-device manner, the second terminal may project the interface displayed on the display of the second terminal to the display of the first terminal for display. Then, the user may perform, by using the input device of the first terminal, the operation on the projection interface displayed on the display of the first terminal, so as to perform the operation on the actual interface displayed on the second terminal.

In this embodiment of this application, in a process in which the user performs the operation on the projection interface displayed on the display of the first terminal, when the user operates the input device, for example, the mouse or the touchpad, of the first terminal to move the cursor on the display of the first terminal to content, for example, the control, of the projection interface, the first terminal may enable, based on a keyboard and mouse sharing technology, the control and/or the cursor in the projection interface to perform corresponding visual feedback. For example, the control in the projection interface presents the highlighted background, and the cursor style changes correspondingly, so that the user can visually know whether the next operation can be performed on the control that corresponds to the control in the projection interface and that is displayed on the second terminal.

With reference to FIG. 58 and FIG. 59, in this embodiment of this application, software structures of the first terminal and the second terminal are described by still using an example in which the software system of the first terminal is the Windows system and the software system of the second terminal is the Android system. The software architecture in this embodiment is similar to the software architecture shown in FIG. 59, and a difference lies in that, in the software architecture in this embodiment, an application layer of the first terminal may include a projection service module. An application layer of the second terminal may include a projection service module.

On the basis of the foregoing software architecture, for example, the first terminal is used as the projection destination end and the second terminal is used as the projection source end. After the second terminal projects the interface displayed on the display of the second terminal to the display of the first terminal for display, if the user operates the input device, for example, the mouse or the touchpad, of the first terminal to move the cursor on the display of the first terminal to the content, for example, the control, of the projection interface, when a control that corresponds to the control and that is displayed on the second terminal can be operated, the first terminal may enable, based on the keyboard and mouse sharing technology, the control and/or the cursor on the projection interface to perform the corresponding visual feedback. For example, the control presents the highlighted background, and the cursor style changes correspondingly. In this way, the user can visually know whether the next operation can be performed on the control that corresponds to the control in the projection interface and that is displayed on the second terminal. A keyboard and mouse sharing technology may be a technology of controlling another terminal by using an input device (for example, a mouse or a touchpad) of a terminal.

With reference to FIG. 58 and the corresponding software architecture, the interface display method provided in embodiments of this application is described below in detail with reference to the accompanying drawings by using an example in which the first terminal is the PC, the second terminal is the mobile phone, and the input device of the first terminal is the mouse. It should be noted that, in embodiments of this application, the first terminal and the second terminal are merely intended to distinguish between two different devices. In some embodiments, nouns "first terminal" and "second terminal" used to describe different devices may also be interchanged. For example, in this embodiment, the first terminal may also be referred to as a second terminal (for example, a PC), and the second terminal may also be referred to as a first terminal (for example, a mobile phone). This is not specifically limited in this embodiment.

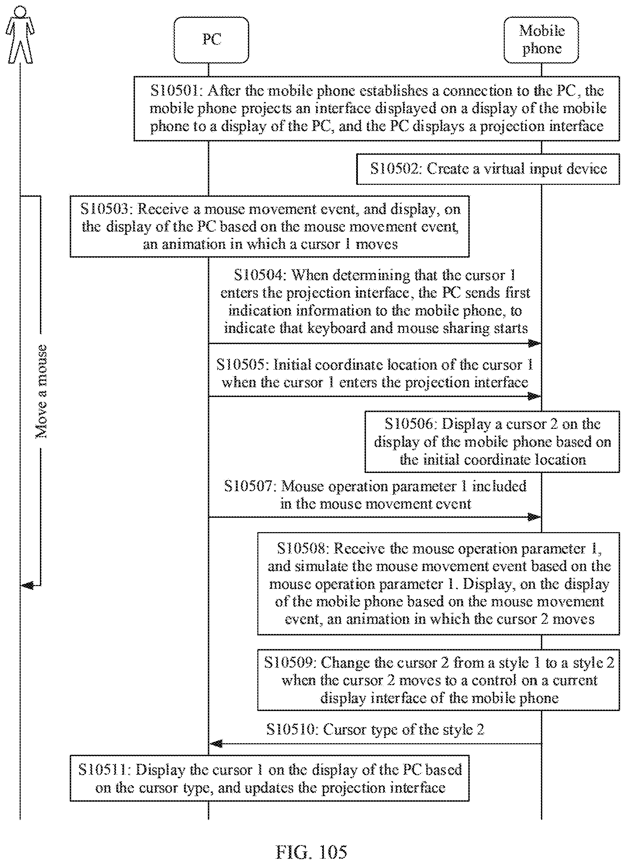

FIG. 105 is a schematic flowchart of an interface display method according to this embodiment of this application. As shown in FIG. 105, the method may include the following S10501 to S10511.

S10501: After the mobile phone establishes a connection to the PC, the mobile phone projects an interface displayed on a display of the mobile phone to a display of the PC, and the PC displays a projection interface.

When a user wants to implement collaborative office between a plurality of terminals through multi-screen collaboration, after a connection between the plurality of terminals is established, a terminal used as a projection source end may project an interface displayed on a display of the terminal to a display of a terminal used as a projection destination end for display. For example, in a wireless projection scenario, the mobile phone is used as the projection source end, and the PC is used as the projection destination end. The mobile phone is connected to the PC. Then, the mobile phone may project the interface displayed on the display of the mobile phone to the display of the PC for display. The PC may display the projection interface on the display of the PC. For another example, in a cross-device drag scenario, the mobile phone is used as the projection source end and the PC is used as the projection destination end. The mobile phone is connected to the PC. Then, after the user drags an application window displayed on the mobile phone to the PC in a cross-device manner, the mobile phone may project the currently displayed application interface to the display of the PC for display. The PC may display the projection interface on the display of the PC.

For specific descriptions of establishing the connection to the PC by the mobile phone, refer to the specific descriptions of the corresponding content in the embodiments shown in FIG. 29 and FIG. 47. Details are not described herein again.

For example, in this embodiment, the mobile phone is connected to the PC in a wireless manner. In a scenario in which the user implements collaborative office between the mobile phone and the PC through multi-screen collaboration, the user may manually enable a projection service function of the PC. The projection service function of the PC may be alternatively automatically enabled. For example, the function is automatically enabled when the PC is started. After the projection service function of the PC is enabled, the projection service module at the application layer of the PC may start to perform network listening, to listen to whether a terminal is connected to the PC. When the user wants to project the display interface of the mobile phone to the PC and implements collaborative office by using the mobile phone and the PC, the user may turn on an NFC switch of the mobile phone, and touch an NFC tag of the PC by using the mobile phone. The mobile phone may read an IP address of the PC stored in the NFC tag. Then, the mobile phone and the PC separately display confirmation interfaces, to ask the user whether to confirm projecting the display interface of the mobile phone to the PC for display. After the user selects "OK" on the confirmation interface, the PC, for example, the projection service module of the PC, may send a projection notification message to the mobile phone (for example, the projection service module in the mobile phone). After receiving the projection notification message, the mobile phone may establish the connection to the PC according to the obtained IP address of the PC. After the connection is successfully established, the mobile phone used as the projection source end may project the interface displayed on the display of the mobile phone to the display of the PC used as the projection destination end. In the cross-device drag scenario, when the mobile phone is connected to the PC, the user drags the currently displayed application interface of the mobile phone to the PC in a drag manner, and after releasing the dragging, the mobile phone may project the application interface to the display of the PC (where for a specific implementation, refer to the specific descriptions of the corresponding content in the embodiment shown in FIG. 4 and the embodiment shown in FIG. 67A and FIG. 67B. Details are not described herein again).

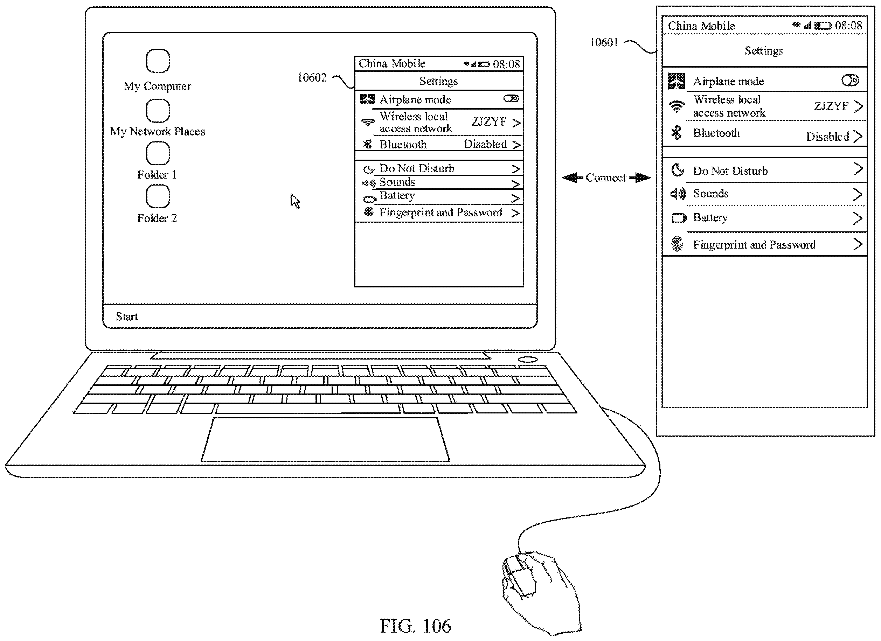

Then, the PC displays the projection interface (where the projection interface may be the application interface in this embodiment of this application). Content displayed on the projection interface is the same as interface content displayed on the display of the mobile phone, or content on the projection interface is a mirror of interface content displayed on the display of the mobile phone. For example, as shown in FIG. 106, a setting interface 10601 is currently displayed on the display of the mobile phone. The mobile phone projects the setting interface 10601 to the display of the PC. The PC displays a projection interface 10602. It can be seen that content on the projection interface 10602 is the same as content in the setting interface 10601.

A window used by the PC to display the projection interface may be referred to as a projection window. For example, with reference to the foregoing software architecture, before the mobile phone projects the interface displayed on the display of the mobile phone to the display of the PC, the projection service module at the application layer of the PC may display the projection window. For example, the projection service module of the PC may display the projection window after the projection service function of the PC is enabled, or after the projection service function of the PC is enabled and the connection to the another terminal (for example, the mobile phone) is successfully established. The PC may display the projection window on the entire display of the PC. That is, the projection window occupies the entire display of the PC. The PC may also display the projection window in a part of a region of the display of the PC. That is, the projection interface in the projection window is only a part of an interface on the display of the PC. This is not specifically limited in this embodiment.

In this embodiment, a specific implementation in which the mobile phone projects the interface displayed on the display of the mobile phone to the display of the PC for display may be as follows: The mobile phone, for example, the projection service module in the mobile phone, may obtain data corresponding to the current display interface of the mobile phone, and send the data to the PC. After receiving the data, the PC may display the projection interface in the projection window on the display of the PC based on the data. For example, the projection service module in the mobile phone may obtain, by using a display manager (for example, the display manager is a module at the framework layer of the mobile phone) of the mobile phone, the data corresponding to the current display interface of the mobile phone, for example, screen recording data, and send the data to the PC, so as to project the display interface of the mobile phone to the display of the PC for display. In some embodiments, the DMP may be used to project the display interface of the mobile phone to the display of the PC for display. In some other embodiments, wireless projection (Miracast) may also be used to project the display interface of the mobile phone to the display of the PC for display. For a specific implementation, refer to the specific descriptions of the corresponding content in other embodiments of this application. Details are not described herein again.

S10502: The mobile phone creates a virtual input device.

In this embodiment, the mobile phone used as the projection source end may further create the virtual input device, so that when performing, by using the projection destination end, for example, an input device (for example, a mouse) of the PC, an operation on the projection interface displayed on the PC, the user can simulate a corresponding input event on the mobile phone end. The mobile phone correspondingly responds to the obtained input event through simulation, so that the input device of the PC can control the mobile phone. In other words, the user cannot only control the projection destination end, but also control the projection source end by using the input device of the projection destination end. This implements keyboard and mouse sharing between the projection destination end and the projection source end. For a specific implementation, refer to the specific descriptions of the corresponding content in the embodiment shown in FIG. 60A and FIG. 60B. Details are not described herein again.

In this embodiment, because the mouse is the input device of the PC, after a keyboard and mouse sharing mode is enabled on the PC, and the another terminal, for example, the mobile phone, creates the virtual input device, generally, the PC temporarily responds to an operation of the mouse, in other words, the user can temporarily control the PC by using the mouse. In this embodiment, after the keyboard and mouse sharing mode is enabled, after determining that a mouse shuttle condition is met, the PC may trigger the another terminal that establishes the connection to the PC and that creates the virtual input device, for example, the mobile phone, to respond to the mouse operation, that is, trigger keyboard and mouse sharing between the PC and the mobile phone.

For example, the mouse shuttle condition may be that a cursor, for example, a cursor 1, displayed on the display of the PC, slides to the projection interface displayed on the display of the PC. For example, the input device is the mouse. The user may move the mouse, so that the cursor 1 displayed on the display of the PC slides to the projection interface displayed on the display of the PC, to trigger keyboard and mouse sharing between the PC and the mobile phone. For example, the method further includes the following S10503 and S10504.

S10503: The PC receives a mouse movement event, and displays an animation of movement of the cursor 1 on the display of the PC based on the mouse movement event.

The cursor 1 may be a second cursor in this embodiment of this application.

S10504: When determining that the cursor 1 enters the projection interface, the PC sends first indication information to the mobile phone, to indicate that keyboard and mouse sharing starts.

When the user wants to perform the operation on the projection interface of the projection destination end, to implement an operation for an actual interface of the projection source end, the user may operate the input device of the projection destination end, for example, input a first operation, so that the cursor displayed on the projection destination end moves to the projection interface. In this embodiment, after the cursor displayed on the projection destination end enters the projection interface, the projection destination end and the projection source end may start keyboard and mouse sharing.

For example, the input device is the mouse, the projection destination end is the PC, and the projection source end is the mobile phone. The user may move the mouse of the PC, so that the cursor 1 moves on the display of the PC. In a process in which the cursor 1 moves on the display of the PC, the PC may determine whether the cursor 1 enters the projection interface displayed on the display of the PC. For example, as described above, the projection interface is displayed in the projection window of the PC, and the projection window may be used to monitor whether the cursor 1 enters the projection interface. For example, when the cursor 1 enters the projection interface, the projection window may detect the corresponding event, where the event is used to indicate the cursor 1 to enter the projection window, and the PC may determine, based on the event, that the cursor 1 enters the projection interface. When it is determined that the cursor 1 enters the projection interface displayed on the display of the PC, the PC may determine that the mouse shuttle condition is met, and then may start keyboard and mouse sharing with the mobile phone. In addition, after determining that the mouse shuttle starts, the PC may further send the first indication information to the mobile phone, to indicate, to the mobile phone, that keyboard and mouse sharing starts.

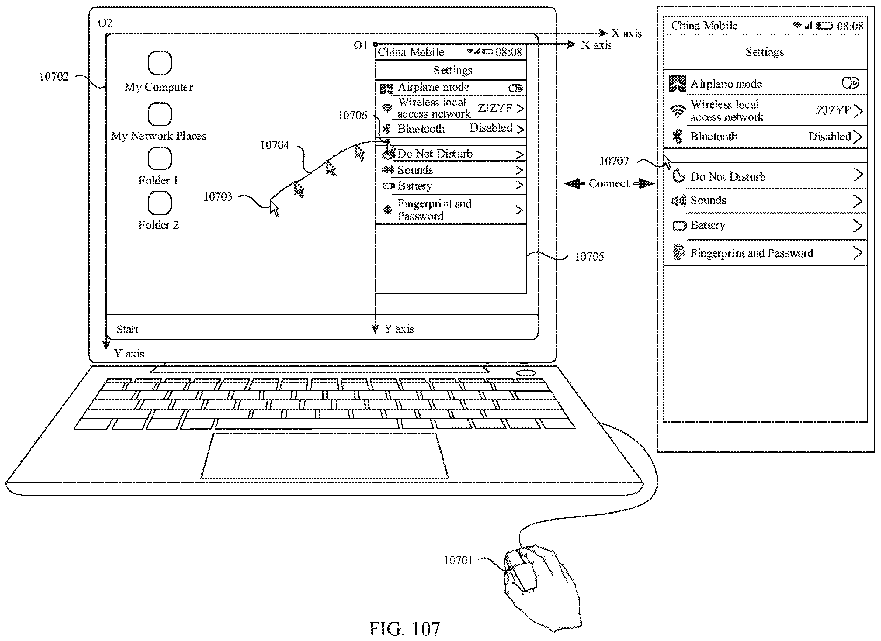

For example, with reference to FIG. 106, in a process in which the user inputs a movement operation by using the input device of the PC, for example, the user moves the mouse, the PC may receive a corresponding input event, for example, a movement event, where the movement event may be referred to as a mouse movement event. Based on the received mouse movement event, the windows system of the PC may draw an animation of movement of the cursor 1 and display the animation on the display of the PC. As shown in FIG. 107, as a mouse 10701 moves, the PC correspondingly displays, on a display 10702 of the PC, an animation indicating that a cursor 10703 moves. A movement track of the cursor 10703 shown in FIG. 107 is shown as a track 10704. In a process in which the cursor 10703 moves on the display 10702 of the PC, the projection service module at the application layer of the PC may determine, by using the projection window, whether the cursor 10703 enters a projection interface 10705. For example, when the cursor 10703 enters the projection interface 10705, the projection window may detect the event used to indicate the cursor 10703 to enter the projection window. After detecting the event, the projection window may send a notification to the projection service module at the application layer of the PC, to notify the projection service module of the PC that the cursor has entered the projection interface 10705. After the projection service module of the PC determines that the cursor 10703 enters the projection interface, it may be determined that the mouse shuttle condition is met. Then, the PC and the mobile phone may start keyboard and mouse sharing. The projection service module of the PC may further send, to the mobile phone (for example, the projection service module in the mobile phone), indication information used to indicate that keyboard and mouse sharing starts. After receiving the indication information, the mobile phone may prepare for receiving an input event from the PC, for example, a mouse event It should be noted that, in the foregoing example, an example in which communication between the PC and the mobile phone is performed by using the projection service module included in each of the PC and the mobile phone is used for description. In other words, the projection service module has a function of communicating with another terminal. In some other embodiments, the projection service module may not have the function of communicating with another terminal. In this embodiment, communication between the PC and the mobile phone may be implemented by using another module. For example, the PC and the mobile phone may further include a transmission management module, and communication between the PC and the mobile phone may be implemented by using the module. This is not specifically limited in this embodiment. For ease of description, in the following embodiment, an example in which communication between the PC and the mobile phone is implemented by using the projection service module is used for description.

In addition, when the user performs the operation on the projection interface by using the input device at the projection destination end, the projection source end can accurately positions content, for example, a control, that corresponds to an operation location of the user on the projection interface and that is at the projection source end. For this, in this embodiment, a cursor may be displayed at the projection source end, for example, the cursor is referred to as a cursor 2, and the cursor 2 may be moved with the operation of the user for the input device at the projection destination end. For example, the method further includes the following S10505 to S10508.

S10505: The PC sends, to the mobile phone, an initial coordinate location of the cursor 1 when the cursor 1 enters the projection interface.

The initial coordinate location is a coordinate location of an entry point relative to an origin in the projection interface (or the projection window) (where the origin may be a corner (for example, referred to as a first corner) of the projection interface, for example, an origin O1 shown in FIG. 107) when the cursor 1 enters the projection interface.

S10506: The mobile phone displays the cursor 2 on the display of the mobile phone based on the initial coordinate location.

The cursor 2 is an invisible cursor, and transparency of the cursor 2 is greater than a threshold. For example, transparency of the cursor 2 is very high, or the cursor 2 is totally transparent. The cursor 2 may be a first cursor in this embodiment of this application.

After determining that the mouse shuttle starts, the PC used as the projection destination end may obtain the coordinate location of the entry point relative to the origin in the projection interface when the cursor 1 enters the projection interface (that is, obtain the foregoing initial coordinate location), and send the initial coordinate location to the mobile phone used as the projection source end.

In an example, after the cursor 1 enters the projection interface, the PC may obtain a coordinate location of the entry point in a display coordinate system of the PC when the cursor 1 enters the projection interface, for example, referred to as a coordinate location 1. The PC may determine the initial coordinate location based on the coordinate location 1 and a coordinate location, for example, referred to as a coordinate location 2, of the upper left corner of the projection interface in the display coordinate system of the PC.

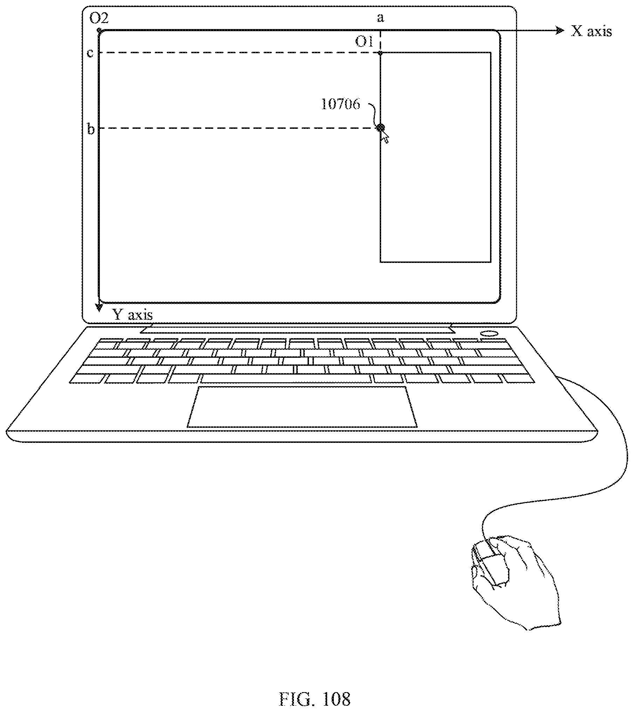

For example, refer to FIG. 108. The display coordinate system of the PC may be a coordinate system in which the upper left corner of the PC is a coordinate origin (a location 02 shown in FIG. 108), and an X-axis points from the coordinate origin 02 to the right edge of the display of the PC, a Y-axis points from the coordinate origin 02 to the lower edge of the display of the PC. With reference to FIG. 107, the entry point when the cursor 1 enters the projection interface is shown as an entry point 10706 in FIG. 107. After determining that the cursor 1 enters the projection interface, the PC may obtain the coordinate location 1 of the entry point 10706 in the display coordinate system of the PC. For example, the obtained coordinate location 1 is (a, b). When displaying the projection interface, the PC knows a location of the projection window used to display the projection interface in the display coordinate system of the PC, where the location of the projection window is a location of the projection interface. In this case, the PC knows the coordinate location of the upper left corner of the projection interface in the display coordinate system of the PC. For example, the PC knows the coordinate location 2, and the coordinate location 2 is (a, c). The PC may determine, based on the coordinate location 1 and the coordinate location 2, the coordinate location of the entry point 10706 relative to the coordinate origin O1, that is, determine the initial coordinate location. For example, the initial coordinate location determined by the PC is (0, b-c).

After receiving the initial coordinate location, the mobile phone may determine, based on the initial coordinate location, a start location at which the cursor 2 appears on the mobile phone. The mobile phone may display the cursor 2 at the start location.

It may be understood that a window used to display the projection interface is the projection window, and a size of the projection interface is determined by a size of the projection window. For example, the size of the projection interface is the same as the size of the projection window. The size of the projection window may be predefined, and resolution of the projection window may be the same as or different from resolution of the mobile phone. For example, if the size of the projection window is different from the resolution of the mobile phone, content in the projection interface in the projection window is the same as content in the interface projected by the mobile phone, but the projection interface is an interface obtained after stretching and/or compression processing is performed on the interface projected by the mobile phone.

When the size of the projection window is different from the resolution of the mobile phone, to enable the start location of the cursor 2 displayed on the mobile phone to be consistent with the location at which the cursor 1 enters the projection interface, the mobile phone may obtain, through calculation based on the resolution of the mobile phone and the size of the projection interface by using the initial coordinate location as a basis, the start location of cursor 2 appeared on the mobile phone. That is, after receiving the initial coordinate location from the PC, the mobile phone may determine, based on the resolution of the mobile phone, the size of the projection interface (or the size of the projection window), and the initial coordinate location, the start location at which the cursor 2 appears on the mobile phone. The start location is a coordinate location of the cursor 2 relative to the origin of the display of the mobile phone (where the origin may be the corner (for example, referred to as the first corner) of the display of the mobile phone).

The size of the projection window may be sent by the PC to the mobile phone in the process of establishing the connection to the mobile phone by the PC, or after the connection is successfully established.

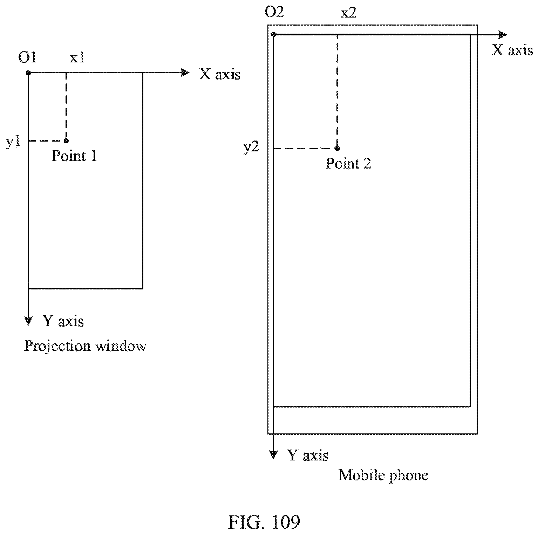

For example, as shown in FIG. 109, it is assumed that when the cursor 1 is displayed at a location shown by a point 1 on the projection interface, a corresponding location at which the cursor 2 should be displayed on the display of the mobile phone is a location shown by a point 2. For example, the size of the projection window is A1×B1, the resolution of the mobile phone is A2xB2, coordinates of the point 1 in a coordinate system 1 are (x1, y1), and coordinates of point 2 in a coordinate system 2 are (x2, y2). The coordinate system 1 is the coordinate system in which the upper left corner of the projection window is the coordinate origin (for example, O1 in FIG. 109), the X-axis points from the coordinate origin O1 to the right edge of the projection window, and the Y-axis points from the coordinate origin O1 to the lower edge of the projection window. The coordinate system 2 is the coordinate system in which the upper left corner of the display of the mobile phone is the coordinate origin (for example, 02 in FIG. 109), the X-axis points from the coordinate origin 02 to the right edge of the display of the mobile phone, and the Y-axis points from the coordinate origin 02 to the lower edge of the display of the mobile phone. The mobile phone may determine a conversion relationship between the coordinate location of the cursor 1 in the coordinate system 1 and the coordinate location of the cursor 2 in the coordinate system 2 based on the size of the projection window and the resolution of the mobile phone. For example, the coordinate location of the cursor 1 on the X axis in the coordinate system 1 and the coordinate location of the cursor 2 on the X axis in the coordinate system 2 should meet x1/A1=x2/A2. Therefore, when the coordinate location of the cursor 1 on the X axis in the coordinate system 1 is known, the coordinate location of the cursor 2 on the X axis in the coordinate system 2 is x2=(A2/A1)×x1, where the formula may be referred to as a conversion relationship 1, and A2/A1 may be referred to as a conversion ratio value 1. Similarly, the coordinate location of the cursor 1 on the Y axis in the coordinate system 1 and the coordinate location of the cursor 2 on the Y axis in the coordinate system 2 should meet y1/B1=y2/B2. Therefore, when the coordinate location of the cursor 1 on the Y axis in the coordinate system 1 is known, the coordinate location of the cursor 2 on the Y axis in the coordinate system 2 is y2=(B2/B1)×y1, where the formula may be referred to as a conversion relationship 2, and B2/B1 may be referred to as a conversion ratio value 2. For example, if the resolution of the mobile phone is 2340×1080 and the size of the projection window is 111070×540, the conversion ratio 1 is 2, and the conversion ratio 2 is 2.

In a possible implementation, after receiving the initial coordinate location from the PC, the mobile phone may determine, based on the foregoing conversion relationship (for example, the conversion relationship 1 and/or the conversion relationship 2), the start location at which the cursor 2 appears on the mobile phone. In another possible implementation, the mobile phone may predetermine the conversion ratio value 1 and the conversion ratio value 2. After the initial coordinate location is received, the start location at which the cursor 2 appears on the mobile phone may be determined based on the predetermined conversion ratio value 1 and/or conversion ratio value 2. For example, with reference to the example shown in FIG. 108, if the initial coordinate location is (0, b-c), the mobile phone determines that the start location at which the cursor 2 appears on the mobile phone is (0, (B2/B1)×(b-c)). The mobile phone may display the cursor 2 on the display of the mobile phone based on the determined start location. For example, with reference to FIG. 107, the cursor 2 displayed by the mobile phone on the display of the mobile phone is shown by 10707 in FIG. 107. It can be seen that the start location of the cursor 2 displayed on the mobile phone is the same as the location of the entry point when the cursor 1 on the PC enters the projection interface.

The cursor 2 displayed by the mobile phone may be an invisible cursor whose transparency is greater than the threshold. For example, the transparency of the cursor 2 is very high, or the cursor 2 is totally transparent. In other words, the cursor 2 is invisible to the user. Alternatively, the cursor 2 may be a visible cursor, and is visible to the user. This is not limited in this embodiment. For ease of description, in the accompanying drawings of embodiments of this application, an example in which the cursor 2 is visible to the user is used.

In addition, in the foregoing embodiment, an example in which the projection destination end obtains the initial coordinate location and sends the initial coordinate location to the projection source end, and the projection source end determines, based on the initial coordinate location, the start location at which the cursor 2 appears at the projection source end is used for description. In some other embodiments, after obtaining the initial coordinate location, the projection destination end may also determine, based on the initial coordinate location, the start location at which the cursor 2 appears at the projection source end, and then send the start location to the projection source end, so that the projection source end displays the cursor 2. A specific determining process is the same as a determining process in which the projection source end determines the start location at which the cursor 2 appears. Details are not described herein again. The resolution of the device at the projection source end may be sent to the projection destination end in a process of establishing the connection to the projection destination end, or after the connection is successfully established. When the size of the projection window is the same as the resolution of the mobile phone, without conversion processing, the mobile phone may directly display the cursor 2 on the mobile phone based on the initial coordinate location.

S10507: The PC sends the mouse operation parameter 1 included in the mouse movement event to the mobile phone.

S10508: The mobile phone receives the mouse operation parameter 1, and simulates the mouse movement event based on the mouse operation parameter 1. The mobile phone displays, on the display of the mobile phone based on the mouse movement event, the animation indicating that the cursor 2 moves.

After the cursor 1 enters the projection interface, the user may continue to operate the input device at the projection destination end, so that the cursor 1 moves to a desired location on the projection interface. After the cursor 1 enters the projection interface, keyboard and mouse sharing has started. After keyboard and mouse sharing starts, the projection destination end may not respond to the input event received after the user operates the input device, but send the operation parameter in the input event to the projection source end shared by the keyboard and mouse, so that the projection source end responds to the input event.

When the input device is the mouse, the input event may include a mouse movement event, a mouse press event, a mouse uplift event, and the like. It should be specially noted that, when the cursor 2 displayed on the mobile phone is the invisible cursor, the projection interface projected by the mobile phone to the PC does not include a cursor, and the cursor 1 is displayed on the PC. Therefore, to enable the cursor, for example, the cursor 1, to move, when the user moves the mouse, as the mouse moves, after keyboard and mouse sharing starts, that the projection destination end does not respond to the input event received after the user operates the input device may be specifically as follows: The projection target end does not respond to another mouse event other than the mouse movement event, for example, a mouse press event and a mouse lift event, but responds to the mouse movement event, so that the cursor 1 may move on the display of the PC accordingly after the user moves the mouse.

In an example implementation, the projection destination end, for example, the PC, may mount a hook (HOOK) after a keyboard and mouse sharing mode is enabled. The mounted hook may be used to intercept (or shield) the another input event other than the mouse movement event after keyboard and mouse sharing starts. After keyboard and mouse sharing starts, the mounted hook may be used to obtain (or capture) operation parameters included in a corresponding input event (which include the mouse movement event and the another input event). For example, if the input device is the mouse, the input event may be the mouse event That is, after the cursor enters the projection interface, keyboard and mouse sharing starts, and then the PC may intercept the another input event other than the mouse movement event by using the mounted hook. The PC may further capture, by using the mounted hook, the operation parameter in the received mouse event, for example, referred to as the mouse operation parameter, and send the captured operation parameter to the projection source end that creates the virtual input device, so that the projection source end may simulate the corresponding input event, for example, the mouse event, by using the created virtual input device, to respond to the input event. In this way, for the mouse movement event, not only the projection destination end may respond to the operation input by the input device, but also the projection source end may respond to the operation input by the input device. For the another input event other than the mouse movement event, because the mounted book intercepts the input event, the projection target end does not respond to the input event. Instead, the projection source end responds to, based on an operation parameter sent by the projection destination end, an operation input by the input device.

The mouse operation parameter may include a mouse button flag bit (used to indicate which operation of press, uplift, movement, or scrolling wheel scrolling is performed by the user), coordinate information (used to indicate an X coordinate and a Y coordinate of a cursor moved when the user moves the mouse), scroll wheel information (used to indicate an X-axis distance and a Y-axis distance of scrolling of the scroll wheel when the user operates the scroll wheel of the mouse), and button location information (used to indicate which button of a left button, a middle button, or a right button of the mouse is operated by the user). In an example, after keyboard and mouse sharing starts, the mounted hook may determine, based on the mouse button flag bit in the mouse operation parameter, whether the input event is the mouse movement event, If the input event is the mouse movement event, interception is not performed. If the input event is not the mouse movement event, interception is performed.

Certainly, another manner (for example, registering RAWINPUT in the PC) may also be used to intercept the input event and capture the operation parameter in the input event. Alternatively, different manners may also be separately used to intercept the input event and capture the operation parameter in the input event. For example, the input device is the mouse. After enabling the keyboard and mouse sharing mode, the PC may mount the hook and register RAWINPUT. After keyboard and mouse sharing starts, the mounted hook may be used to intercept the another mouse event other than the mouse movement event, and registered RAWINPUT may be used to capture the parameter in the mouse event A specific implementation of intercepting the mouse event and capturing the parameter in the mouse event is not limited herein in this embodiment. For ease of description, the following embodiments are described by using an example the hook is mounted to intercept the input event and capture the operation parameter in the input event.

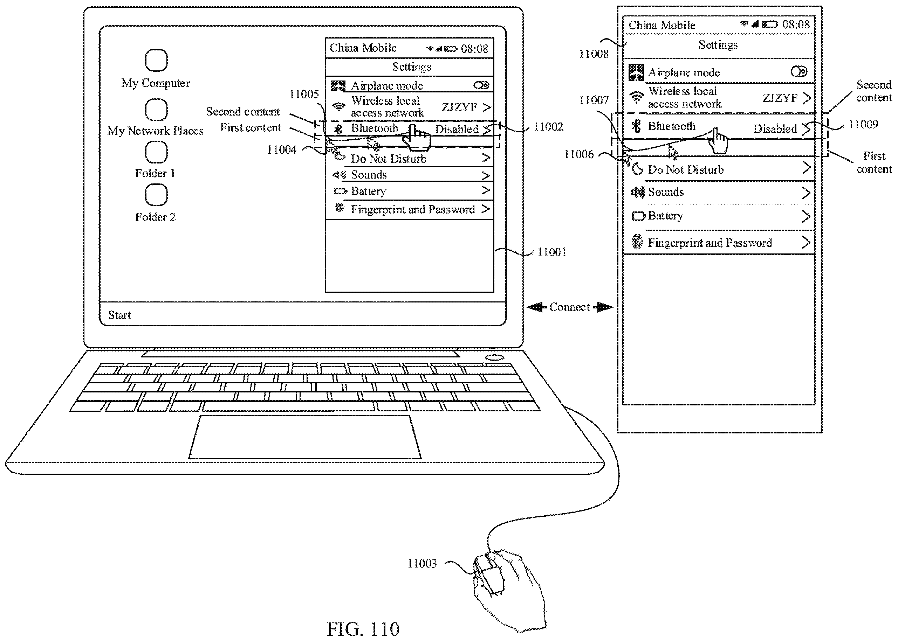

For example, with reference to FIG. 107, the input device is the mouse. For example, the user wants to open a Bluetooth setting interface of the mobile phone. As shown in FIG. 110, after the user moves the mouse of the PC to enable the cursor 1 to enter a projection interface 11001, the user continues to move the mouse, so that the cursor 1 moves to a location of a Bluetooth option 11002 on the projection interface 11001. After the cursor 1 enters the projection interface 11001, keyboard and mouse sharing has started. After keyboard and mouse sharing starts, the mounted hook may intercept the another mouse event other than the mouse movement event Therefore, after the user continues to move the mouse, the PC may receive a corresponding input event, for example, a mouse movement event, and the mounted hook does not intercept the mouse movement event. The event is transmitted to the Windows system of the PC. Based on the received mouse movement event, the windows system of the PC may continue to draw an animation of movement of the cursor 1 and display the animation on the display of the PC. As shown in FIG. 110, as a mouse 11003 moves, the PC correspondingly displays, on the display of the PC, the animation of movement of the cursor 11004. As shown in FIG. 110, a movement track of the cursor 11004 is shown in a track 11005. It may be seen that, the cursor 11004 moves to a location of the Bluetooth option 11002 on the projection interface 11001. After the cursor 11004 enters the projection interface and before the cursor 11004 moves to the Bluetooth option 11002, it may be considered that the cursor 11004 is displayed on an element on the projection interface. The element may be first content in this embodiment It may be seen that on the first content, a cursor style of the cursor 11004 is a style 1, namely, the normal selection style.

In addition, after keyboard and mouse sharing starts, the mounted hook may capture the operation parameter in the input event Therefore, in a process in which the user continues to move the mouse, the PC, for example, the projection service module at the application layer of the PC may capture, by using the mounted book, the operation parameter in the received mouse movement event, for example, referred to as the mouse operation parameter 1, and send the mouse operation parameter 1 to the mobile phone at the projection source end. In an example, the mouse operation parameter 1 may be a mouse button flag bit used to indicate that the user moves the mouse, coordinate information used to indicate an X coordinate and a Y coordinate of the moved cursor (for example, the cursor 1), scroll wheel information (where a value is empty), and button location information (where a value is empty). The coordinate information indicates relative displacement of the cursor 1 relative to the location of the cursor 1 when the cursor 1 enters the projection interface in the mouse movement process.

After receiving the mouse operation parameter 1, the mobile phone may simulate, based on the mouse operation parameter 1, the corresponding input event by using the created virtual input device, for example, the mouse movement event, so that the cursor 2 on the mobile phone may also move to the location of the Bluetooth option on the actual interface displayed by the mobile phone.

As described in S10506, the size of the projection window may be different from the resolution of the mobile phone. Therefore, after the user moves the mouse of the PC, to enable the cursor 2 to move to the location of the Bluetooth option on the actual interface, the mobile phone may obtain, through calculation based on the resolution of the mobile phone and the size of the projection interface by using the coordinate information in the mouse operation parameter 1 as a basis, relative displacement of the cursor 2 on the mobile phone relative to the start location.

For example, similar to the descriptions in FIG. 109, the size of the projection window is A1×B1, and the resolution of the mobile phone is A2xB2. For example, after the user continues to move the mouse, the relative displacement of the cursor 1 in the coordinate system 1 relative to the entry point is (X3, Y3), and the relative displacement of the cursor 2 relative to the start location in the coordinate system 2 is (X4, Y4). The mobile phone may determine, based on the size of the projection window and the resolution of the mobile phone, a conversion relationship between the relative displacement of the cursor 1 in the coordinate system 1 relative to the entry point and the relative displacement of the cursor 2 in the coordinate system 2 relative to the start location after the mouse moves. For example, the relative displacement of the cursor 1 on the X axis in the coordinate system 1 and the relative displacement of the cursor 2 on the X axis in the coordinate system 2 should meet X3/A1=X4/A2. Therefore, when the relative displacement of the cursor 1 on the X axis in the coordinate system 1 is known, the relative displacement of the cursor 2 on the X axis in the coordinate system 2 is X4=(A2/A1)×X3, where the formula may be referred to as a conversion relationship 3, and A2/A1 may be referred to as a conversion ratio value 1. Similarly, the relative location of the cursor 1 on the Y axis in the coordinate system 1 and the relative displacement of the cursor 2 on the Y axis in the coordinate system 2 should meet Y3/B1=Y4/B2. Therefore, when the relative displacement of the cursor I on the Y axis in the coordinate system 1 is known, the relative displacement of the cursor 2 on the Y axis in the coordinate system 2 is Y4=(B2/B1)×Y3, where the formula may be referred to as a conversion relationship 4, and B2/B1 may be referred to as a conversion ratio value 2. For example, if the resolution of the mobile phone is 2340×1080 and the size of the projection window is 111070×540, the conversion ratio 1 is 2, and the conversion ratio 2 is 2. That is, the movement distances of cursor 1 on the X axis and Y axis in the projection window are calculated as twice the original values on the mobile phone. The relative displacement (X3, Y3) of the cursor I in the coordinate system 1 relative to the entry point may be determined based on the coordinate information in the mouse operation parameter 1.

In a possible implementation, after receiving the mouse operation parameter 1 from the PC, the mobile phone (for example, the projection service module at the application layer of the mobile phone) may determine, based on the coordinate information in the mouse operation parameter I and the foregoing conversion relationship (for example, the conversion relationship 3 and/or the conversion relationship 4), the relative displacement of the cursor 2 on the mobile phone relative to the start location. Alternatively, the mobile phone may predetermine the conversion ratio value 1 and the conversion ratio value 2. After receiving the mouse operation parameter I from the PC, the mobile phone may determine, based on the predetermined conversion ratio value 1 and/or conversion ratio value 2 and the coordinate information in the mouse operation parameter 1, the relative displacement of the cursor 2 on the mobile phone relative to the start location. Based on the determined relative displacement and other parameters (for example, the mouse button flag bit, the scroll wheel information, and the button location information) in the mouse operation parameter 1, the mobile phone (for example, the framework layer of the mobile phone) may simulate the corresponding input event, for example, the mouse movement event, by using the created virtual input device. Based on the mouse movement event, the framework layer of the mobile phone may draw the animation of movement of the cursor 2 and display the animation on the display of the mobile phone. Still refer to FIG. 110. As the mouse 11003 moves, the mobile phone may correspondingly display, on the display of the mobile phone, the animation of movement of the cursor 11006. As shown in FIG. 110, a movement track of the cursor 11006 is shown in a track 11007. It may be seen that, because the coordinate information indicates coordinates obtained conversion, the cursor 11006 moves to the location of the Bluetooth option 11009 on the actual interface 11008. In this way, the user operates the mouse of the PC to move the cursor 1 on the display of the PC to the desired location on the projection interface, and move the cursor 2 on the display of the mobile phone to the corresponding location.

It may be understood that, as described in S10506, when the cursor 2 displayed by the mobile phone is the invisible cursor, when the user moves the mouse of the PC to move the cursors on both the mobile phone and the PC, the animation of movement of the cursor 2 on the mobile phone may be invisible to the user. FIG. 110 shows only the animation of movement of the cursor 2 for ease of understanding.

In addition, it should be noted that, because the operating systems of the PC and the mobile phone are different, button values in mouse operation parameters in mouse events corresponding to the PC and the mobile phone are different. Therefore, after receiving the mouse operation parameter 1, the mobile phone may convert, based on a preset mapping relationship, a button bit code of the received mouse operation parameter 1 into a button bit code that can be identified by the mobile phone. Then, the mobile phone may simulate, by using the created virtual input device based on the mouse operation parameter 1 obtained after the button bit code is converted, the input event that can be identified by the mobile phone, for example, the mouse movement event, to correspondingly respond.

S10509: When the cursor 2 moves to a control on the current display interface of the mobile phone, the mobile phone changes the cursor 2 from a style 1 to a style 2.

S10510: The mobile phone sends a cursor type in the style 2 to the PC.

S10511: The PC displays the cursor 1 on the display of the PC based on the cursor type, and updates the projection interface.

Generally, for content, for example, the control, on the display interface, to enable the user to visually know whether the user may perform a next operation, when the user operates the input device, for example, the mouse. to move the cursor to the control, the control and/or cursor will have corresponding visual feedback if the next operation can be performed on the control. In this embodiment, when the cursor 1 moves to a location of the control on the projection interface, if the control corresponding to a control on the mobile phone is the control on which the next operation can be performed, corresponding visual feedback is performed on the control and/or the cursor 1 on the projection interface. For example, the control presents the highlighted background. For another example, the style of the cursor 1 changes.

As described in S10507 and S10508, when the user operates the mouse of the PC to move the cursor 1 to the control on the projection interface, the cursor 2 on the display of the mobile phone also moves to a location of the corresponding control on the display interface of the mobile phone. For the mobile phone, when the cursor 2 moves to the location of the control on the display interface, if the next operation can be performed on the control, a cursor style of the cursor 2 changes. For example, the cursor style of the cursor 2 changes from the style 1 to the style 2. For example, if the cursor 2 moves from one piece of content (for example, the content may be first content in this embodiment) to another piece of content (for example, the content may be second content in this embodiment) on the interface, the cursor style of the cursor 2 is changed from the style 1 to the style 2.

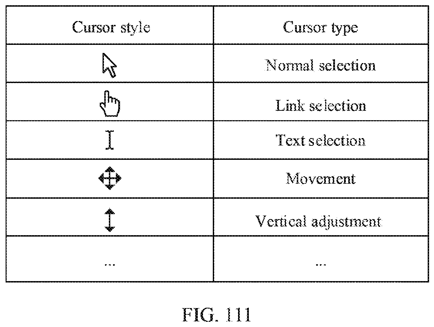

It may be understood that the cursor has a plurality of cursor styles, and different cursor styles have different cursor types. FIG. 111 is a schematic diagram of a cursor style and a cursor type corresponding to the cursor style according to this embodiment. The cursor styles may include a normal selection style, a link selection style, a text selection style, a movement style, a vertical adjustment style, and the like. The corresponding cursor types include normal selection, link selection, text selection, movement, and vertical adjustment When the cursor is located on different controls, cursor styles of the cursor may be different or the same. A specific correspondence between a control and a cursor style may be predefined by a third-party application developer or a device manufacturer and stored in the mobile phone, provided that the cursor style changes when the cursor moves to the control. When the cursor 2 moves to the location of the control on the display interface, if the next operation can be performed on the control, the mobile phone may change the cursor style of the cursor 2 based on the pre-stored correspondence. For example, still with reference to the example shown in FIG. 110, the cursor 2, namely, the cursor 11006, moves to the location of the Bluetooth option 11009 on the actual interface 11008, that is, the cursor 11006 moves from a location of the first content displayed on the actual interface 11008 to the second content, namely, the location of the Bluetooth option 11009. The first content is an element that is displayed on the interface and that cannot be operated. For example, it is predefined that the cursor style is the normal selection style when the cursor 2 is at the location that cannot be operated on the mobile phone, and it is predefined that the cursor style is the link selection style when the cursor 2 is on the Bluetooth option 11009. When the cursor 2 moves from the location of the first content to the location of the Bluetooth option 11009 on the actual interface 11008, the cursor style of the cursor 2 changes from the normal selection style to the link selection style.

After the cursor style of the cursor 2 on the mobile phone is changed, the mobile phone may send a cursor type corresponding to the changed cursor style to the PC. For example, after the mobile phone displays the cursor 2, a cursor style listener may be registered at the framework layer of the mobile phone. In this way, after the cursor style of the cursor 2 changes, the cursor style listener may listen to an event indicating that the cursor style changes. The framework layer of the mobile phone may obtain the cursor type corresponding to the changed cursor style, for example, the style 2, and send the cursor type to the PC by using the projection service module at the application layer of the mobile phone.

After receiving the cursor type corresponding to the style 2, the projection service module of the PC, for example, at the application layer of the PC, may display the cursor 1 on the display of the PC based on the cursor type. For example, still with reference to the example shown in FIG. 110, the cursor 1, namely, the cursor 11004, is changed from the normal selection style at the first content on the projection interface to the link selection style. This presents the user with a visual effect that the cursor style changes when the cursor 1 moves to the location of the control in the projection interface.

In addition, when the cursor 2 moves to the location of the corresponding content on the display interface of the mobile phone, the content may have corresponding visual feedback. For example, a display manner of the first content may be changed from a first manner to a second manner, and a display manner of the second content may be changed from a third manner to a fourth manner. Display manners of different content before the change may be the same or may be different. The display manners of different content after the change may be the same or different. For example, the content is the control, the first manner is the same as the third manner, and the highlighted background is not presented. The second manner is the same as the fourth manner, and the highlighted background is presented. In this way, when the cursor 2 moves to the location of the corresponding control on the display interface of the mobile phone, the control changes from the style of not presenting the highlighted background to the style of presenting the highlighted background. It may be understood that, during multi-screen collaboration, the mobile phone projects, in real time, the interface displayed on the display of the mobile phone to the display of the PC. Therefore, after the control presents the highlighted background, the change is also projected to the display of the PC. This presents an effect of visual feedback from the control to the user when the cursor 1 moves to the location of the control on the projection interface.

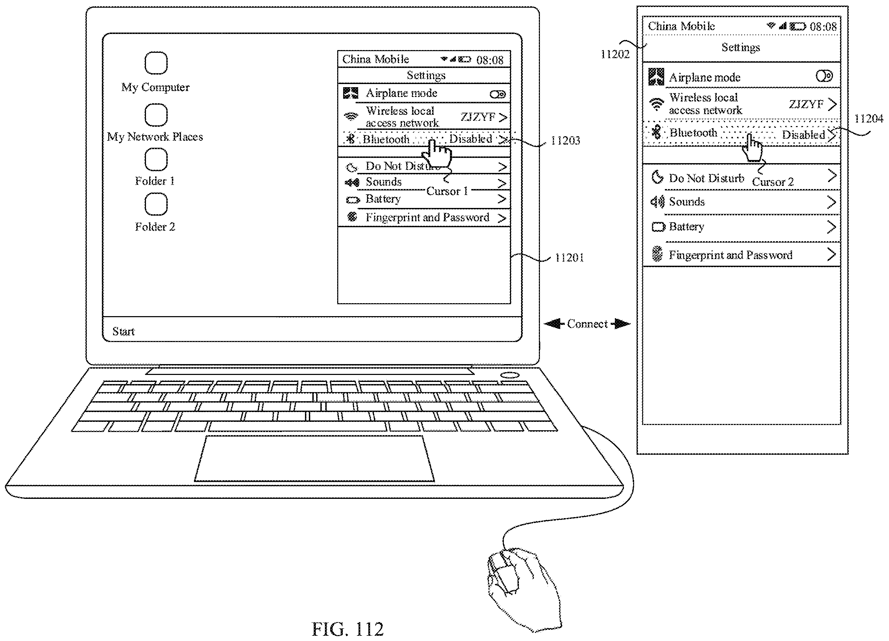

For example, with reference to FIG. 110, both the Bluetooth option and the cursor 2 have visual feedback when the cursor 2 moves to the location of the Bluetooth option on the display interface of the mobile phone. As shown in FIG. 112, when the user moves the mouse of the PC to move the cursor 1 to the location of a Bluetooth option 11203 on a projection interface 11201, the Bluetooth option 11203 on the projection interface of the PC presents the highlighted background, and the cursor 1 changes from the normal selection style to the link selection style. In addition, the cursor 2 on the mobile phone also moves to the location of a Bluetooth option 11204 on an actual interface 11202, the Bluetooth option 11204 on the actual interface 11202 of the mobile phone presents the highlighted background, and the cursor 2 changes from the normal selection style to the link selection style. It should be noted that the cursor 2 may be invisible to the user.

Then, still with reference to FIG. 112, if the user wants to set Bluetooth of the mobile phone, the user may use the input device of the PC, for example, the mouse of the PC, to input a press operation. For example, the user may press a left button of the mouse. The PC may receive a corresponding input event, for example, a mouse press event. The mouse press event is received after keyboard and mouse sharing is enabled. Therefore, the mounted hook intercepts the mouse press event, so that the Windows system of the PC does not respond to the event. In addition, the PC (for example, the projection service module at the application layer of the PC) may obtain an operation parameter in the mouse press event, for example, referred to as a mouse operation parameter 2 (for example, capture the mouse operation parameter 2 by using the mounted hook), and send the mouse operation parameter 2 to the mobile phone. The mouse operation parameter 2 may include a mouse button flag bit used to indicate that the user presses the mouse, coordinate information (where a value is empty), scroll wheel information (where a value is empty), and button location information used to indicate that the user performs the operation on a left button of the mouse. It should be noted that, only when the value of the coordinate information in the mouse operation parameter is not empty, the mobile phone needs to perform conversion processing (for example, the specific description of the corresponding content in S10S08) on the coordinate information before simulating the corresponding input event If the value of the coordinate information in the mouse operation parameter is empty, conversion processing does not need to be performed, and the corresponding input event may be obtained through simulation based on the received mouse operation parameter.

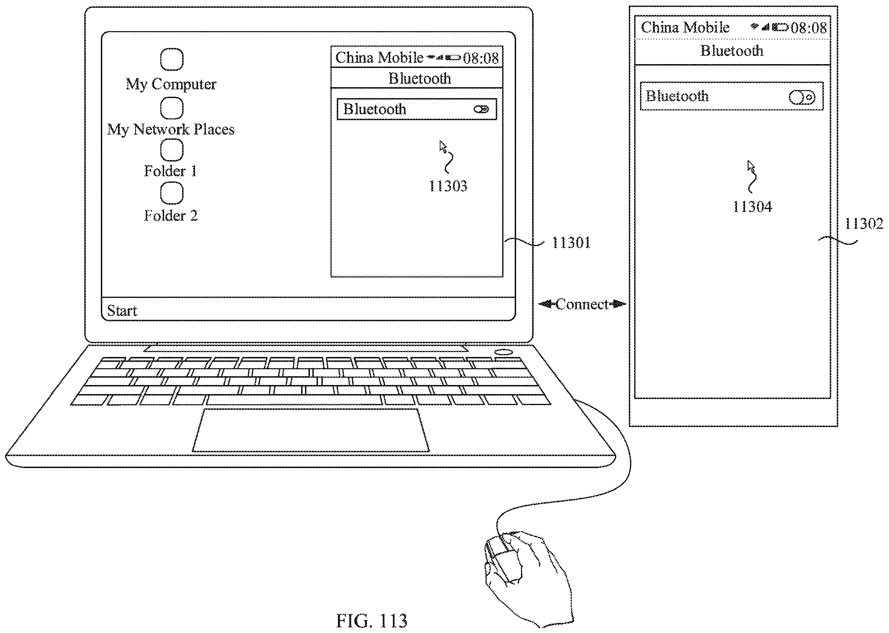

After the mobile phone (for example, the projection service module at the application layer of the mobile phone) receives the mouse operation parameter 2, the framework layer of the mobile phone may convert, based on a preset mapping relationship, a button bit code of the received mouse operation parameter 2 into a button bit code that can be identified by the mobile phone, and simulate, by using the created virtual input device based on the mouse operation parameter 2 after the button bit code is converted, the input event that may be identified by the mobile phone, for example, the mouse press event The mobile phone may correspondingly respond based on the mouse press event, for example, display a second interface. As shown in FIG. 113, the mobile phone displays a Bluetooth setting interface 11302. The mobile phone projects the Bluetooth setting interface 11302 displayed on the display of the mobile phone to the display of the PC, and the PC displays a projection interface 11301. In addition, it may be understood that, after the display interface of the mobile phone changes, the control at the location of the cursor 2 also changes. The mobile phone may monitor the style of the cursor 2 in real time by using the cursor style monitor. If it is determined that the style of the cursor 2 changes, the mobile phone sends the cursor type corresponding to the changed cursor style to the PC, so that the PC may change the cursor style of cursor 1. For example, with reference to FIG. 113, after the mobile phone displays the Bluetooth setting interface 11302, if there is no control at a location of a cursor 11304, the cursor 11304 changes from the link selection style to the normal selection style. The mobile phone may send a cursor type corresponding to the normal selection style to the PC, so that the PC displays a cursor 11303 in the normal selection style in the projection window.

After the operation of the user for the projection interface is completed, the user may operate the input device of the PC, for example, move the mouse of the PC, to move the cursor 1 out of the projection interface. Similarly, the projection window used to display the projection interface may be used to monitor whether the cursor 1 moves out of the projection interface. For example, when the cursor 1 moves out of the projection interface, the projection window may detect a corresponding event, where the event is used to indicate that the cursor 1 moves out of the projection window, and the PC may determine, based on the event, that the cursor 1 moves out of the projection interface. After the cursor 1 moves out of the projection interface, the PC may determine that keyboard and mouse sharing between the PC and the mobile phone stops. The PC may send second indication information to the mobile phone, so as to indicate, to the mobile phone, that keyboard and mouse sharing stops. The PC may also uninstall the hook (or close the hook), that is, cancel interception of an input event, for example, a mouse event, and capture of an operation parameter in the input event. Then, if the user performs an operation on the input device of the PC, the PC does not intercept a received input event, but sends the received input event to the Windows system of the PC, so that the Windows system of the PC responds to the input event, that is, the user may control the PC by using the mouse of the PC. In addition, it may be understood that, when the user moves the mouse of the PC, so that the cursor 1 moves out of the projection interface, the invisible cursor 2 on the mobile phone also moves to an edge of the display of the mobile phone. In this embodiment, after receiving the second indication information, the mobile phone may resume display of the cursor 2, that is, set the cursor 2 to be visible. This can ensure that the cursor can be normally displayed on the display of the mobile phone after the mobile phone is directly connected to the mouse. The foregoing uses an example in which the PC determines whether to stop keyboard and mouse sharing. In some other embodiments, the mobile phone may also determine whether to stop keyboard and mouse sharing for description. As described in the foregoing embodiment, after the user moves the mouse of the PC, not only the cursor 1 on the display of the PC may move accordingly, but also the cursor 2 on the display of the mobile phone may move accordingly. Therefore, in a movement process of the cursor 2, the mobile phone may monitor whether the cursor 2 moves out of the edge of the display of the mobile phone. After determining that the cursor 2 moves out of the edge of the display of the mobile phone, the mobile phone may determine that keyboard and mouse sharing between the mobile phone and the PC stops. The mobile phone may send the second indication information to the PC, so as to indicate, to the PC, that keyboard and mouse sharing stops. After receiving the second indication information, the PC may uninstall the hook. The mobile phone may also resume display of the cursor 2 after determining that the cursor 2 moves out of the edge of the display of the mobile phone.

It should be noted that, in the foregoing embodiment, an example in which, when the cursor 1 enters the projection interface (for example, when the cursor 1 is at the entry point), the cursor style of the cursor 2 displayed at the start location on the mobile phone does not change, that is, the cursor style is still the normal selection style, is used for description. In some other embodiments, if the style of the corresponding cursor 2 on the mobile phone changes when the cursor 1 enters the projection interface, for example, changes from the normal selection style to the link selection style, the mobile phone may send the changed cursor type to the PC, so that the PC changes the cursor style of cursor 1 at the entry point accordingly.

In the foregoing embodiment, an example in which, after keyboard and mouse sharing starts, the mobile phone displays the invisible cursor 2, and the style of the cursor 2 changes, the changed cursor type is sent to the PC, so that the PC changes the style of the cursor 1 correspondingly, to give visual feedback of the cursor in the projection interface of the PC is used for description. In some other embodiments, after keyboard and mouse sharing starts, the PC may hide the cursor, for example, the cursor 1, on the display of the PC, and the mobile phone displays the visible cursor 2. In this way, when the cursor 2 on the mobile phone moves to the control on which the next operation may be performed, the style of the cursor 2 may change correspondingly, and/or the control may perform visual feedback. Because the interface on the mobile phone is projected to the display of the PC in real time for display, when the style of the cursor 2 changes and/or the control performs visual feedback, corresponding content projected to the projection interface of the display of the PC also changes accordingly. This can also give a corresponding visual feedback effect for the user by using the control and/or the cursor on the projection interface. A specific implementation is similar to that in the descriptions in the foregoing embodiment. The difference lies in that, after the cursor 1 slides to the projection window, the cursor 1 on the PC is hidden, and the visible cursor 2 is displayed on the mobile phone; and the mounted hook intercepts all input events after keyboard and mouse sharing starts. Other descriptions are the same as the descriptions in the foregoing embodiment. Details are not described herein again.

In addition, in the foregoing embodiment, an example in which the input device is the mouse is used for description. In this embodiment, the input device may also be a touchpad. When the input device is the touchpad, the user may input a press operation by using a button (a left button or a right button) of the touchpad, and input a movement operation by sliding a finger on the touchpad. A specific implementation of inputting an operation by the user by using the touchpad to implement the method in this embodiment is similar to a specific implementation of inputting an operation by using the mouse to implement the method in this embodiment. Details are not described herein again.

According to the technical solution provided in this embodiment, when the user operates the input device, for example, the mouse or the touchpad, at the projection destination end to move the cursor to the control on the projection interface, the control and/or the cursor on the projection interface perform/performs corresponding visual feedback. For example, the control on the projection interface presents the highlighted background, and the cursor style changes accordingly. In this way, the user may visually determine whether the next operation may be performed on the control that corresponds to the control in the projection interface and that is displayed at the projection source end, thereby improving use experience.

**It** may be understood that a process of dragging an object in a cross-device manner is described in the foregoing embodiment As described in the foregoing embodiment drag may include cross-device drag and local drag. Some other embodiments of this application further provide an object drag method. In the method, after the user drags an object, for example, an application window, to a specified region, or performs local drag, a terminal may determine that a trigger condition of a dynamic small window is met. Then, the terminal may extract a key element in the application window, and display the key clement in the dynamic small window on a screen of the terminal. The dynamic small window supports page-level, application-level, and system-level presentation, that is, regardless of whether the user switches a page or exits an application, the dynamic small window may continue to be displayed on the screen of the terminal. In addition, content presented in the dynamic small window is the key element recommended by a system or customized by a third-party application. This does not affect user experience due to display of excessive content, and meets a processing requirement of the user.

It may be understood that, the user currently browses news, watches a video, performs online shopping, and the like on a mobile phone. However, in a process in which the user uses the mobile phone, if key information, for example, a video and navigation information on a current interface, is moved out of the screen of the mobile phone, the user cannot continue to view the information.

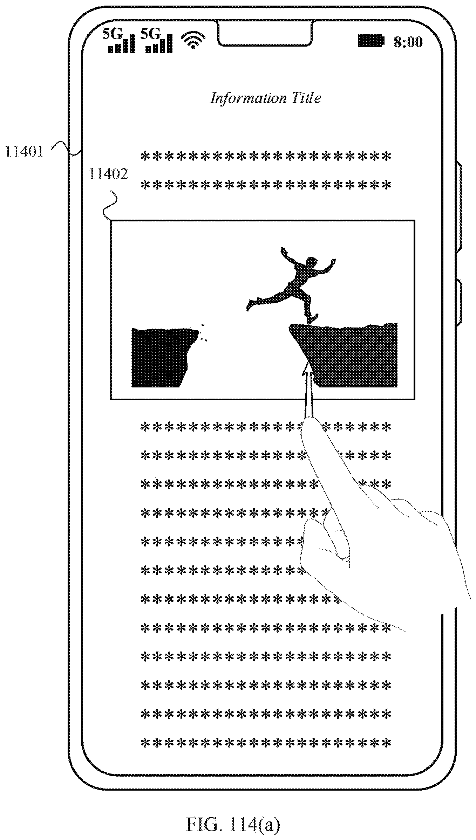

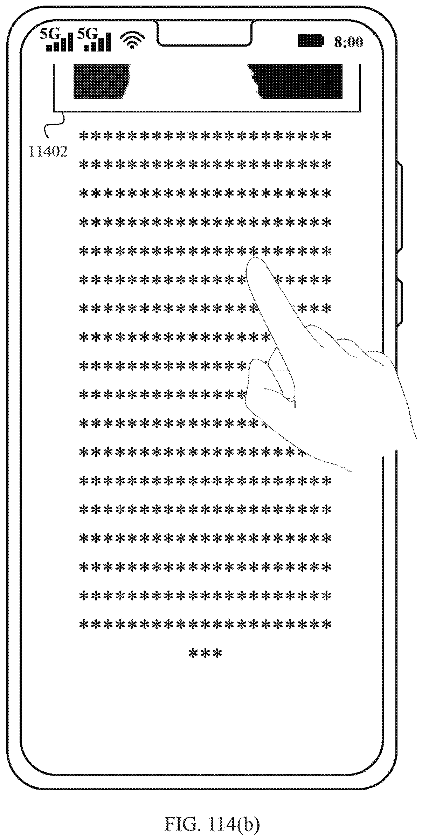

For example, with reference to FIG. 114(a) and FIG. 114(b), the user browses information in an official account of a Weibo^{®}, Toutiao^{®}, or WeChat^{®} on the mobile phone. For example, as shown in FIG. 114(a), the user is currently on a browse interface 11401, and the interface 11401 includes a video element 11402. After the user opens the interface 11401 or performs a tap operation on a play key of the video element 11402, the mobile phone may start to play a corresponding video. After the video element 11402 is removed from the screen of the mobile phone, the user cannot continue to watch the video. As shown in FIG. 114(a), the user performs an upward slide operation on the screen of the mobile phone. As shown in FIG. 114(b), as a finger of the user moves, the video element 11402 may be moved out of the screen of mobile phone. After the video element 11402 is moved out of the screen of the mobile phone, the video in the video element 11402 stops playing and is no longer displayed.

In the conventional technology, a floating small window function is provided to resolve the foregoing problem.

In a related technology 1, a third-party application developer may customize the floating small window function. The related technology 1 includes the following Technology 1 to Technology 3.

Technology 1: The third-party application developer may customize the page-level or application-level floating small window function for an application.

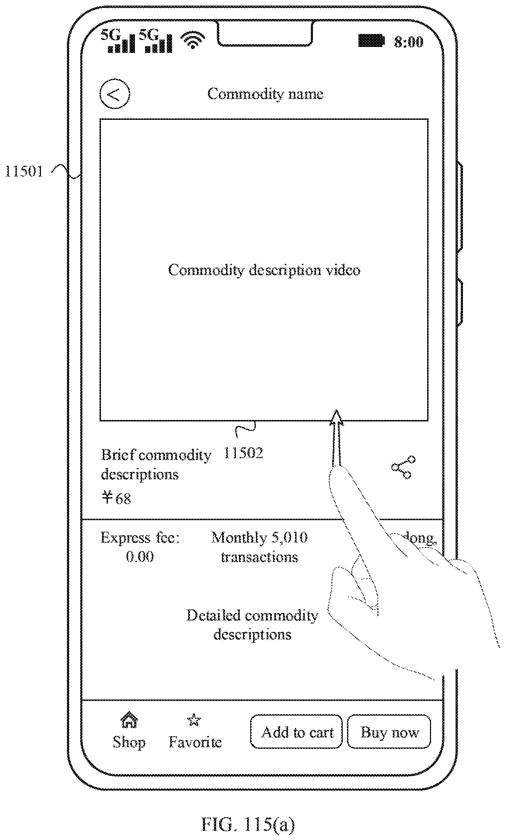

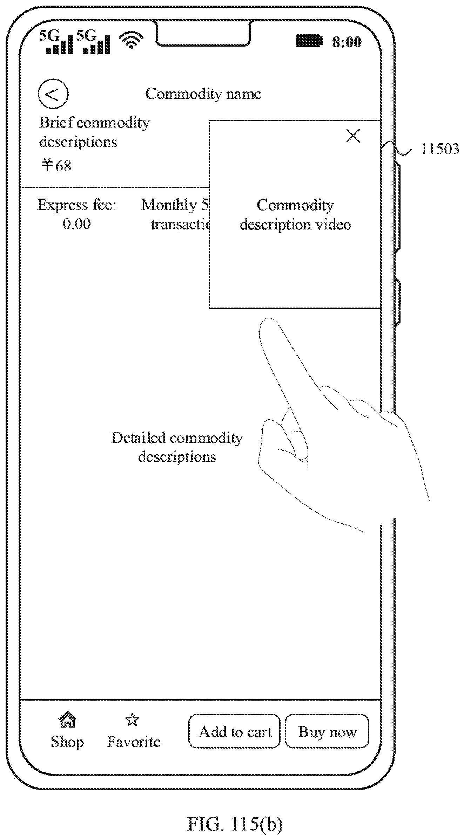

For example, with reference to FIG. 115(a) and FIG. 115(b), the page-level floating small window function is customized in Taobao^{®}. As shown in FIG. 115(a), the user currently browses a details page 11501 of a commodity, and the details page 11501 includes a video element 11502. The user taps a play key of the video element 11502, and the mobile phone may start to play an introduction video of the commodity. As shown in FIG. 115(a), the user slides a finger upward on the screen of the mobile phone. As the finger of the user moves, the video element 11502 may be moved out of the screen of the mobile phone. After the video element 11502 is moved out of the screen of the mobile phone, as shown in FIG. 115(b), the mobile phone may display a floating window small 11503, and continue to play the introduction video of the commodity in the floating small window 11503. However, after the user switches a page, for example, returns to a previous page or jumps to a details page of another commodity, the floating small window is no longer displayed, and the video stops playing.

For another example, the application-level floating small window function is customized in YouTube^{®}. When the user watches a video on YouTube^{®}, if the user switches between pages on YouTube^{®}, the video is moved to a floating small window for continuing playing. However, after the user exits YouTube^{®}, the floating small window is not displayed and the video stops playing.

Technology 2: The third-party application developer may customize the system-level floating small window function for an application.

For example, a picture-in-picture function is customized in video applications such as Youku^{®}, Tencent^{®}, iQIYI^{®}, and Bilibili^{®}. When playing a video by using these video applications, the user may input a corresponding operation to trigger the video to be moved from a video component of a page to a picture-in-picture (where a picture-in-picture may also be considered as a floating small window) for playing. Then, after the user switches the page or exits the video applications, the video may still be played in a picture-in-picture for the user to watch. However, applications and application types (which are mainly video applications) that supports a picture-in-picture, or the system-level floating small window are limited.

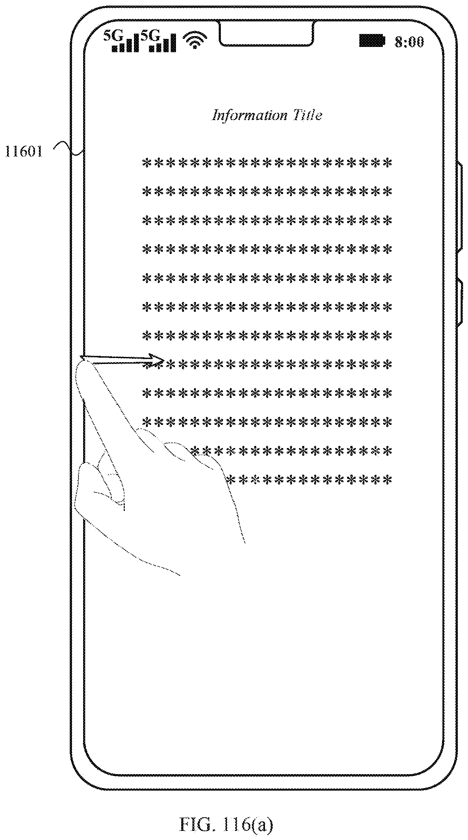

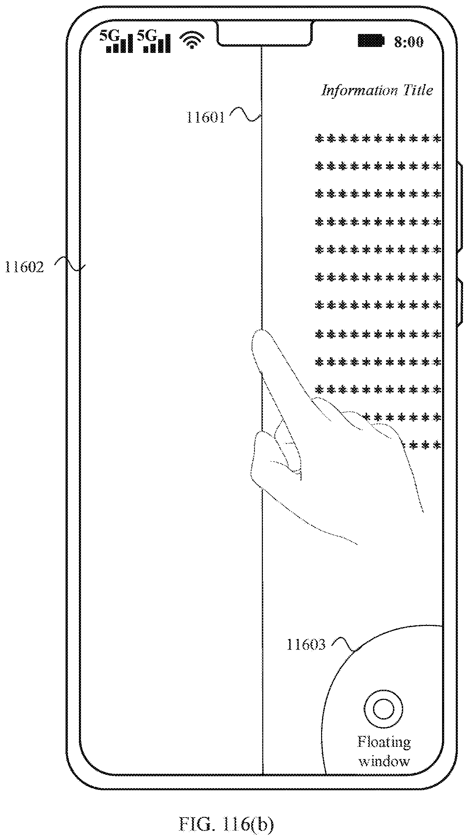

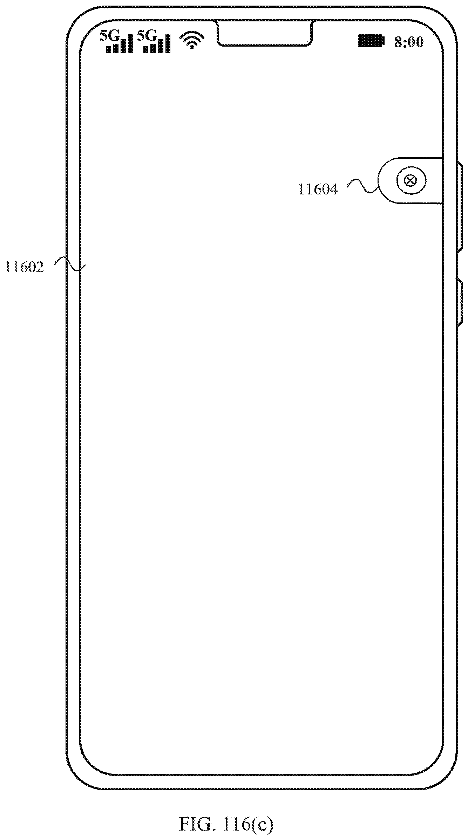

Technology 3: A WeChat^{®} developer defines the floating window function for WeChat^{®}. The floating window is an entry for temporary storage of an applet or an article link. For example, with reference to FIG. 116(a) to FIG. 116(c), as shown in FIG. 116(a), the user browses an information page 11601 of an official account of WeChat^{®}. The user may perform a slide operation from the left side to the right side of the screen of the mobile phone to trigger the mobile phone to return to a previous-level page of the information page 11601. As shown in FIG. 116(b), as a finger of the user slides, the mobile phone may display a partial region of the information page 11601 and a partial region 11602 of the upper-level page of the information page 11601. In response to the slide operation of the user, the mobile phone may further display a floating window indication region 11603 in the lower right corner of the screen of the mobile phone. After the user slides the finger to the floating window indication region 11603, as shown in FIG. 116(c), the mobile phone may display a floating window 11604, where the floating window 11604 is a link entry of the information page 11601. Then, when the user switches between pages in WeChat^{®}, the floating window 11604 is always displayed. After the user exits WeChat^{®}, the floating window 11604 is not displayed. As described above, the floating window 11604 is the entry for temporary storage of the link, and corresponding information, for example, the information page 11601 is displayed on the mobile phone only after the user taps the floating window 11604.

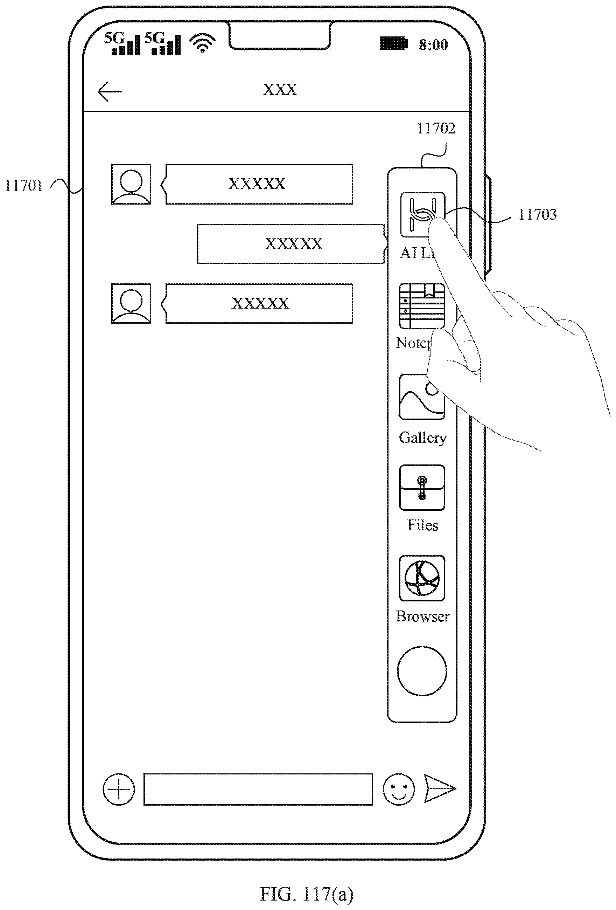

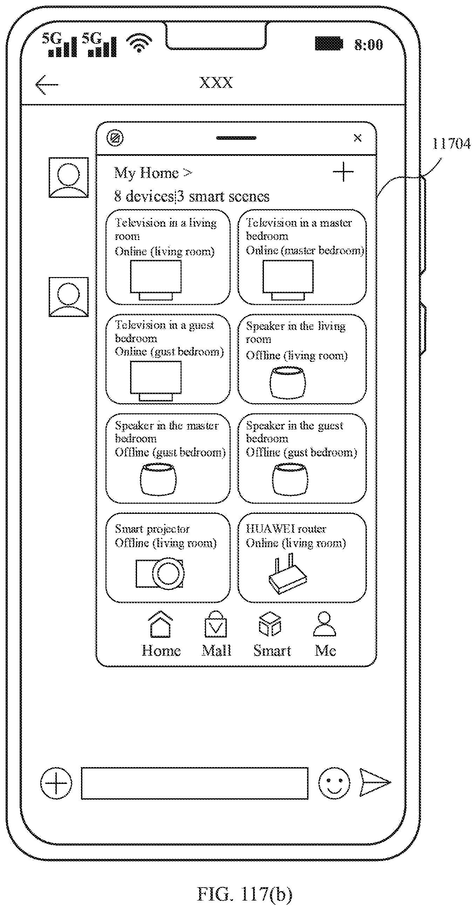

In a related technology 2, Huawei customizes a freeform (freeform) small window function. The freeform small window may be considered as a system-level floating small window. This function enables an entire application window to be displayed in a freeform small window. Regardless of whether the user switches a page or opens another application or desktop, the freeform small window is always displayed on top. For example, with reference to FIG. 117(a) and FIG. 117(b), as shown in FIG. 117(a), the mobile phone displays a chat interface 11701. The user may perform, on the screen of the mobile phone, a leftward slide operation starting from the right edge of the screen. In response to the slide operation, the mobile phone may display a dock bar 11702. The dock bar 11702 includes icons of one or more applications, for example, includes an icon 11703 of AI Life. After the user performs an operation, for example, a tap operation, on the icon 11703 of AI Life in the dock bar 11702, as shown in FIG. 117(b), the mobile phone may display an interface of AI Life in a freeform small window 11704. Then, when the user switches a page in the chat application, or opens another application, the interface of AI Life may be displayed on top in the freeform small window on the screen of the mobile phone. However, the freeform small window includes all content in the application window, and there is a lot of redundant information, which affects obtaining of key information and use experience.

It can be learned that in the related technology, the floating small window function is mainly concentrated in a single application or a page, or the supported applications and application types are limited. Although the freeform small window is a system-level global small window, the freeform small window includes the content of the entire application window. The displayed content is excessively many and excessively crowded, which affects final user experience.

An embodiment of this application provides an object drag method, or referred to as a window display method (collectively referred to as a window display method below), and the window may be referred to as a dynamic small window (live window). After a trigger condition of the dynamic small window is met, for example, an operation (or local drag) of dragging an application window to a specified region by a user is received, a terminal may extract a display interface of the terminal, namely, a key element in the application window, and display the key element in the dynamic small window on a screen of the terminal.

It should be noted that the dynamic small window in this embodiment may also be referred to as a floating small window or a local small window. This is not limited in this embodiment.

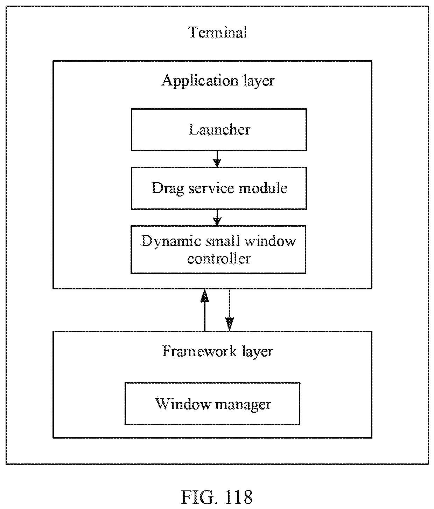

A display process of the dynamic small window is specifically described below with reference to FIG. 118 to FIG. 140(b).

With reference to FIG. 3, a software structure of the terminal is described in this embodiment of this application by using an example in which a software system of the terminal (where the terminal may be the first terminal in FIG. 3) is the Android system. FIG. 118 is a schematic composition diagram of the software architecture of the still another terminal according to this embodiment of this application.

In some embodiments, as shown in FIG. 118, in addition to a drag service module and a launcher, an application layer of the terminal may further include a dynamic small window controller (live window controller). The dynamic small window controller may also be referred to as a dynamic small window manager. This is not specifically limited herein in this embodiment. A framework layer may include a window manager (window manager, WM) and the like.

In this embodiment of this application, on the basis of the foregoing software architecture, when the terminal currently displays an interface of an application, for example, referred to as an interface 1, after the trigger condition of the dynamic small window is met, for example, after the operation used by the user to trigger display of the dynamic small window is received, or content in a page changes, or another application is jumped to, the terminal can extract key elements in the interface 1 displayed by the terminal, and add these key elements to the dynamic small window on the screen of the terminal for the user to continue browsing.

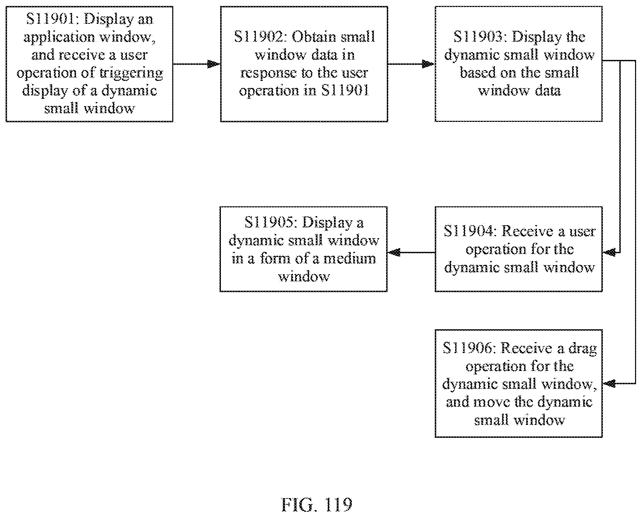

The operation of triggering the display of the dynamic small window by the user may be a drag operation of dragging an application window to a specified region, or may be another operation. With reference to FIG. 118, the following describes in detail the window display method provided in this embodiment of this application with reference to the accompanying drawings by using an example in which the terminal is a mobile phone. FIG. 119 is a schematic flowchart of a window display method according to an embodiment of this application. As shown in FIG. 119, the method may include the following steps.

S11901: A mobile phone displays an application window, and receives a user operation of triggering display of a dynamic small window.

The window is a most important part of a user interface (user interface, UI), is a rectangular region corresponding to an application on a display, and is a visual interface between a user and an application that generates the window. Generally, after the mobile phone receives an operation performed by the user to start the application, the application may create and display a window in a form of a full-screen large window. The window may be referred to as an application window. When the user operates a control of an interface in the application window, the application may respond accordingly.

A dynamic small window (live window) in this embodiment may be referred to as a window that is on the display and that is used to present a key element of the application, and is displayed on a large window of the display in a form of a small window in a floating manner. When content on the display changes. for example, when the application window is switched or an interface in a same application window is switched, the dynamic small window may continue to be displayed. The dynamic small window in this embodiment may also be referred to as a floating small window, a local small window, or the like. In addition, the foregoing application may be any one of applications installed on the mobile phone. The application may be a system application or a third-party application. This is not specifically limited in this embodiment.

In this embodiment, when the mobile phone displays an application window, the user may perform a corresponding user operation, to trigger the mobile phone to display, on the display of the mobile phone in a form of a dynamic small window, a key element included in the interface in the application window. The user operation may include one or more operations.

In a possible implementation, the user operation may include an operation of triggering display of a multi-task interface (where the operation may be the third operation in embodiments of this application) and an operation of dragging an application window on the multi-task interface to a specified region (or referred to as a drag operation. It may be understood that the drag operation is different from the cross-device drag operation in the foregoing embodiment, for example, may be referred to as a local drag operation). Alternatively, the user operation may include an operation of triggering display of a multi-task interface and an operation (for example, a tap operation) on a small-window button corresponding to an application window on the multi-task interface.

The operation of triggering the display of the multi-task interface may be a screen touch gesture operation, or may be an air gesture operation. For example, the screen touch gesture operation may be a slide operation on the display of the mobile phone, for example, a slide operation that starts from the lower edge of the display of the mobile phone and that points to the upper edge of the display of the mobile phone, and a finger or a stylus is not lifted temporarily after sliding. The air gesture operation may be a static air gesture operation or a dynamic air gesture operation. The static air gesture operation refers to a hand posture at a moment, for example, finger bending or folding, for example, an OK gesture, a V gesture, or a five-finger stretching gesture. The dynamic air gesture operation refers to a hand motion situation in a period of time, including a motion direction, a speed, a hand posture change, and the like, for example, a sweep gesture, a pan gesture, a fisting gesture, and a press gesture. The air gesture operation of triggering the display of the multi-task interface may be the foregoing static air gesture operation or the dynamic air gesture operation.

The operation of dragging the application window on the multi-task interface to the specified region may be the screen touch gesture operation. For example, the screen touch gesture operation may be an operation of pressing and moving the application window on the multi-task interface. The operation of dragging the application window on the multi-task interface to the specified region may also be the air gesture operation. For example, the air gesture operation may be a press gesture and a pan gesture on the application window on the multi-task interface. For another example, the air gesture operation may be a fisting gesture and a pan gesture that are performed on the application window on the multi-task interface. For another example, the air gesture operation may be the foregoing static air gesture operation and a pan gesture that are performed on the application window on the multi-task interface.

In another possible implementation, the user operation may include an operation of triggering drag of the application window and an operation of dragging a dragged application window to a specified region (or referred to as a drag operation. It may be understood that the drag operation is different from the cross-device drag operation in the foregoing embodiment, for example, may be referred to as a local drag operation).

The operation of triggering the drag of the application window may be a screen touch gesture operation. For example, the screen touch gesture operation of triggering the drag of the application window may be any one of the following predetermined gesture operations: a slide operation on the display (for example, a slide operation that starts from the lower edge of the mobile phone and that points to the upper edge of the mobile phone) when the mobile phone displays the application window, a gesture operation for title bar of the application window (such as a touch and hold operation and a double-tap operation), a gesture operation for the application window (such as a single-finger touch and hold operation, a single-finger double-tap operation, and a multi-finger touch and hold operation), and a 3D touch (3D touch) operation on the application window, a palm operation (for example, a palm touch and hold operation or a palm single-tap operation) on the application window. The operation of triggering the drag of the first window may alternatively be the foregoing air gesture operation.

The operation of dragging the dragged application window to the specified region may be a screen touch gesture operation, or may be an air gesture operation. The operation of dragging the dragged application window to the specified region is similar to the foregoing operation of dragging the application window on the multi-task interface to the specified region, and details are not described herein again.

The specified region in the foregoing implementation may be a region that is at a predetermined distance from an edge of the display and that is on the display of the mobile phone. The predetermined distance may be predefined, or a setting interface may be provided for the user to set the predetermined distance. Tbis is not limited herein in this embodiment For example, the specified region may be a region that is 1/3 or 1/2 away from the upper edge of the display and that is on the display of the mobile phone.

For example, with reference to FIG. 118, in the foregoing implementation, in the multi-task interface or when the application window is dragged, the user may drag (or drag) the application window by performing a corresponding operation. In a process in which the application window is dragged, the mobile phone, for example, the launcher at the application layer of the mobile phone, may perform drag listening, to determine whether the application window is dragged to the specified region. In this embodiment, the specified region may also be referred to as a dock (dock) region.

In some embodiments, a transparent view (view) control may be set in the specified region. When the application window is dragged to the specified region, the view control that is set in the specified region may monitor drag in of the application window. In other words, when the view control monitors the drag in of the application window, the mobile phone (for example, the launcher at the application layer of the mobile phone) may determine that the application window is dragged to the specified region.

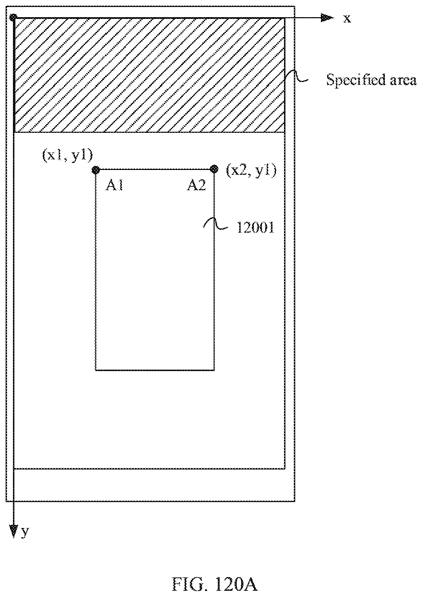

In some other embodiments, the mobile phone (for example, the launcher at the application layer of the mobile phone) may determine, by determining a distance between the application window and an edge of the display, whether the application window is dragged to the specified region. For example, the specified region is a region that is 1/3 away from the upper edge of the display. When determining that a distance between the upper left corner or upper right corner of the application window and the upper edge of the display is less than a predetermined distance, for example, the predetermined distance is 1/3×L (where L is a length of the display of the mobile phone), the launcher at the application layer of the mobile phone may determine that the application window is dragged to the specified region. For example, FIG. 120A is a schematic diagram of a display coordinate system according to an embodiment As shown in FIG. 120A, a coordinate origin of the display coordinate system is the upper left corner of the display of the mobile phone, an x axis points from the coordinate origin to the right edge of the display of the mobile phone, and a y axis points from the coordinate origin to the tower edge of the display of the mobile phone. Coordinates of the upper edge of the display on the y axis in the display coordinate system are 0. In a process in which the application window, for example, the application window 12001 shown in FIG. 120A is dragged by the user on the display of the mobile phone, the mobile phone may monitor coordinates of the upper left corner and the upper right corner of the application window 12001 in real time, for example, A1 and A2 shown in FIG. 120A in the display coordinate system. For example, coordinates of the upper left corner A1 in the display coordinate system are (x1, y1), and coordinates of the upper right corner A2 in the display coordinate system are (x2, y1). Based on the coordinates of the two corners of the application window 12001 and the coordinates of the upper edge of the display of the mobile phone, when determining that a distance between a corner of the two corners and the upper edge of the display is less than 1/3×L, the mobile phone may determine that the application window 12001 is dragged to a specified region. If the mobile phone determines, based on coordinates y1 of the upper left corner A1 or the upper right corner A2 on the y axis, that a distance (for example, yl) between the upper left corner A1 or the upper right corner A2 and the upper edge of the display is less than 1/3×L, the mobile phone may determine that the application window 12001 is dragged to the specified region.

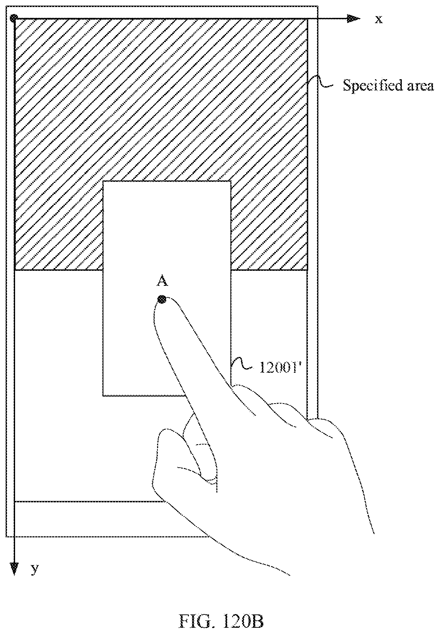

In some other embodiments, the mobile phone (for example, the launcher at the application layer of the mobile phone) may determine, by determining a distance between a press point of a finger and an edge of the display in a process in which the user presses and drags the application window, whether the application window is dragged to the specified region. For example, the specified region is a region that is 1/2 away from the upper edge of the display. The launcher at the application layer of the mobile phone may determine, when it is determined that the distance between the press point of the finger of the user and the upper edge of the display is less than the predetermined distance, for example, the predetermined distance is 1/2×L (where L is the length of the display of the mobile phone) and the finger continues to slide in the same direction, that the application window is dragged to the specified region. For example, FIG. 120B is a schematic diagram of a display coordinate system according to an embodiment As shown in FIG. 120B, a coordinate origin of the display coordinate system is the upper left corner of the display of the mobile phone, an x axis points from the coordinate origin to the right edge of the display of the mobile phone, and a y axis points from the coordinate origin to the lower edge of the display of the mobile phone. In a process in which the application window, for example, the application window 12001' shown in FIG. 120B is dragged by the user on the display of the mobile phone, the mobile phone may monitor coordinates of the press point of the finger of the user in real time, for example, a point A in the display coordinate system. Based on the coordinates of the press point of the finger of the user, namely, the point A in the display coordinate system, when determining that a distance between the finger of the user and the upper edge of the display is less than 1/2×L and the finger continues to slide in the same direction, the mobile phone may determine that the application window 12001' is dragged to a specified region.

After the mobile phone determines that the application window is dragged to the specified region, it indicates that the user wants to use a dynamic small window function of the mobile phone, and the following S11902 may be performed.

In still another possible implementation, the user operation may be an operation of switching to another page in the application window. The operation may be a screen touch gesture operation, or may be an air gesture operation. For example, the touch gesture operation may be a slide operation on the display of the mobile phone, for example, a slide operation that starts from the left edge of the display of the mobile phone and that points to the right edge of the display of the mobile phone. Alternatively, the screen touch gesture operation may be a tap operation for a button for returning to a previous page from a current page of the application window. The air gesture operation may be the static air gesture operation or the dynamic air gesture operation in the foregoing implementation.

Alternatively, the user operation may be a slide operation on the current page of the application window. The slide operation may be a screen touch gesture operation, for example, specifically a slide operation from bottom to top or from top to bottom on the display of the mobile phone. The slide operation may trigger the current page of the application window to slide down or slide up. Alternatively, the user operation may be a slide operation that starts from the right edge of the display of the mobile phone and that points to the left edge of the display of the mobile phone in the application window.

In still another possible implementation, the user operation may be an operation of switching a currently started application of the mobile phone to a background. The operation may be a screen touch gesture operation, or may be an air gesture operation. For example, the touch gesture operation may be a slide operation on the display of the mobile phone, for example, a slide operation that starts from the lower edge of the display of the mobile phone and that points to the upper edge of the display of the mobile phone. The air gesture operation may be the static air gesture operation or the dynamic air gesture operation in the foregoing implementation.

In still another possible implementation, when the mobile phone displays the application window, if the mobile phone receives a notification message of another application, the user operation may be a selection operation for the notification message. The selection operation may be a screen touch gesture operation, for example, a tap operation for the notification message.

In still another possible implementation, the application window may be displayed on the display of the mobile phone in a form of a full-screen floating window (for example, a small freeform window). When the mobile phone displays the full-screen floating window, for example, the small freeform window, the user may perform a corresponding user operation, to trigger the mobile phone to display, on the display of the mobile phone in a form of a dynamic small window, a key element included in an application window in the small freeform window. The user operation may include one or more operations. For example, the user operation may include an operation of dragging the small freeform window to a specified region. The operation may be a screen touch gesture operation, or may be an air gesture operation. It should be noted that the operation of dragging the small freeform window to the specified region is similar to the foregoing operation of dragging the application window on the multi-task interface to the specified region, and details are not described herein again. In addition, the explanation of the specified region and the implementation of determining whether the small freeform window is dragged to the specified region are similar to the explanation of the specified region and the description of determining whether the application window is dragged to the specified region in the foregoing embodiment, and details are not described herein again. Alternatively, the user operation may be an operation (for example, a tap operation) on a small window button in the small freeform window. The small window button is used to trigger display, on the display of the mobile phone in a form of a dynamic small window, of a key element included in an application window in the small freeform window. For a specific implementation of triggering the mobile phone to display the application window in a form of a small freeform window, refer to the implementation of the example shown in FIG. 117(a) and FIG. 117(b).

It should be noted that the foregoing screen touch gesture operation may be performed by the user with a hand, or may be performed by the user by using a stylus. This is not limited herein in this embodiment In addition, the press described in this embodiment may also be described as press and hold, and refers to an operation of pressing by the user without lifting the finger (or pressing a screen by the user with the stylus without lifting the stylus).

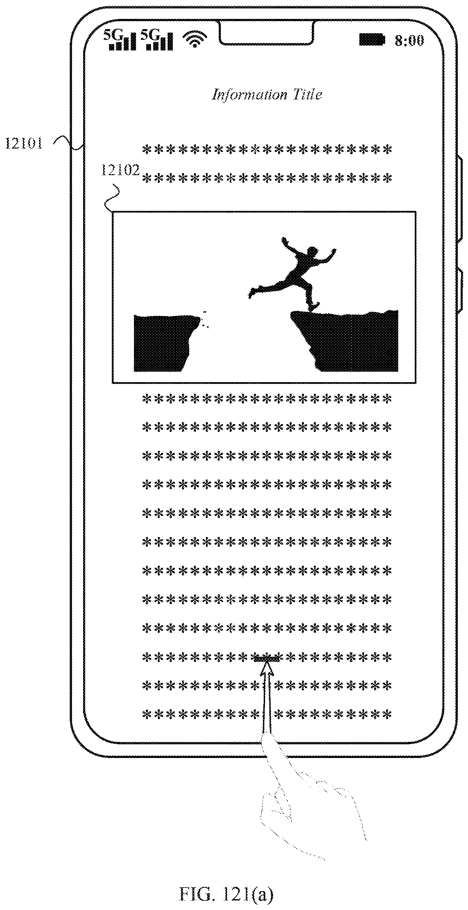

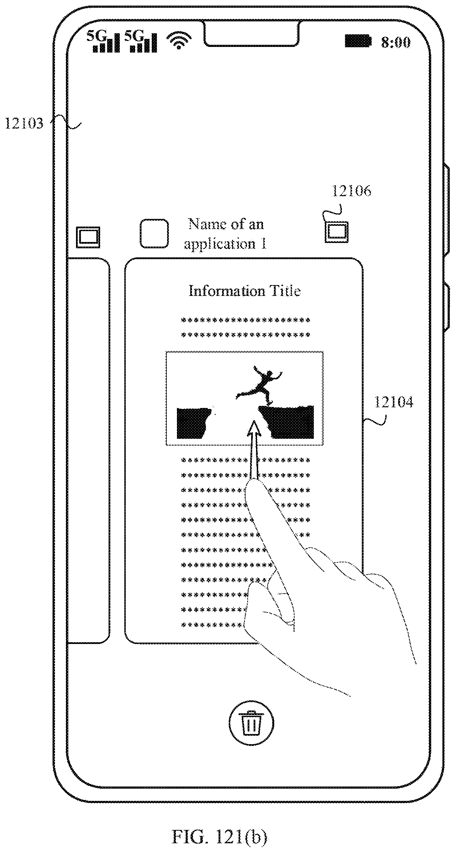

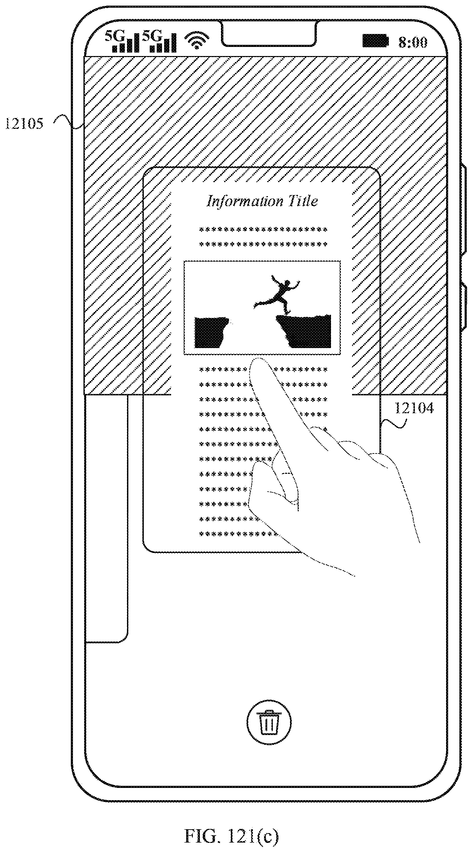

For example, with reference to FIG. 121(a) to FIG. 121(c), the application window is a window of an application 1, and the user operation in S11901 includes the operation of triggering the display of the multi-task interface and the operation of dragging the application window on the multi-task interface to the specified region. As shown in FIG. 121(a), an application window 12101 of the application 1 is displayed on the display of the mobile phone. The application window 12101 includes an information details page, and the information details page includes a video element 12102. When the user wants to display a key element in the application window 12101 in a form of a dynamic small window, the user may perform the operation of triggering the display of the multi-task interface, for example, perform a slide operation that starts from the lower edge of the display of the mobile phone and that points to the upper edge of the display of the mobile phone, and temporarily do not lift a finger after sliding. As shown in FIG. 121(b), in response to the operation, the mobile phone displays a multi-task interface 12103. The multi-task interface 12103 includes application windows (or application window thumbnails) of all applications running on the background in the mobile phone, for example, includes an application window thumbnail 12104 of the foregoing application 1. Then, the user presses the application window thumbnail 12104 and moves the finger, so that the application window thumbnail 12104 may be dragged to a specified region on the display of the mobile phone. For example, the finger press point moves to a region 1/2 away from the upper edge of the display, and the finger continues to slide upward. For example, as shown in FIG. 121(c), the user may use the finger to perform a press operation on the application window thumbnail 12104, and move the finger upward. As the finger of the user moves, the mobile phone may draw an animation in which the application window thumbnail 12104 moves with the finger of the user, and display the animation on the display of the mobile phone. After the mobile phone determines that the application window thumbnail 12104 is dragged to a specified region 12105, it indicates that the user wants to use the dynamic small window function of the mobile phone, and the following S11902 to S11903 may be performed. Alternatively, as shown in FIG. 121(b), the mobile phone displays a multi-task interface 12103. If the application window supports the dynamic small window function, the multi-task interface 12103 may further include a small window button corresponding to the application window. For example, the application window 12101 of the application 1 supports the dynamic small window function. As shown in FIG. 121(b), the multi-task interface 12103 further includes a button 12106 corresponding to the application window thumbnail 12104 of the application 1. If the mobile phone receives an operation of the user for the button 12106, for example, a tap operation, it indicates that the user wants to use the dynamic small window function of the mobile phone, and the following S11902 to S11903 may be performed.

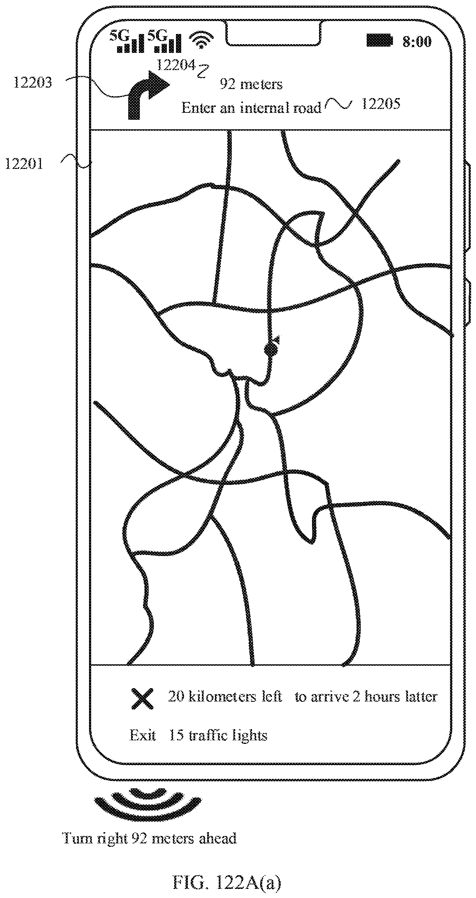

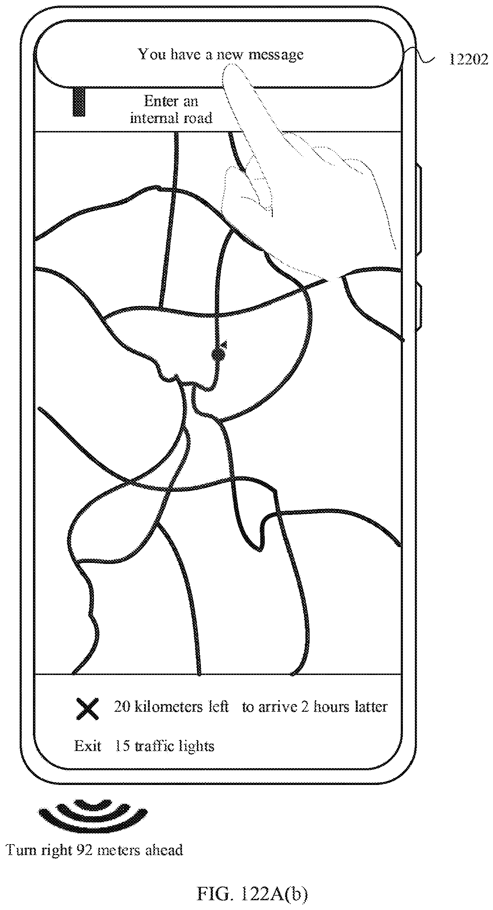

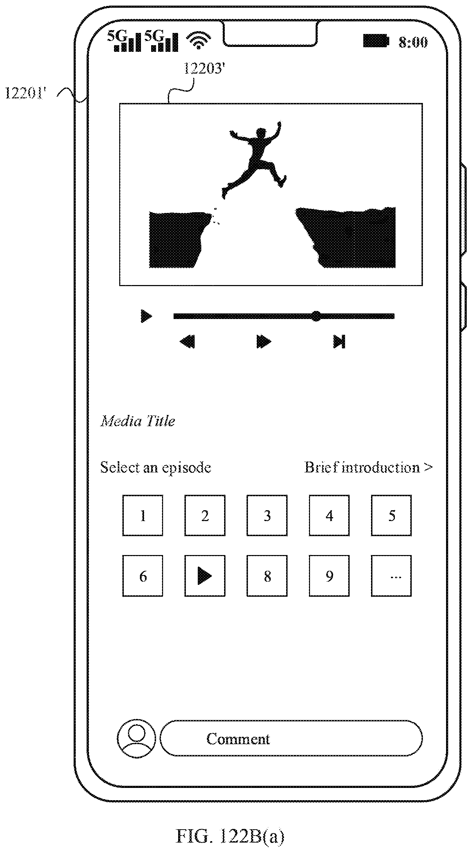

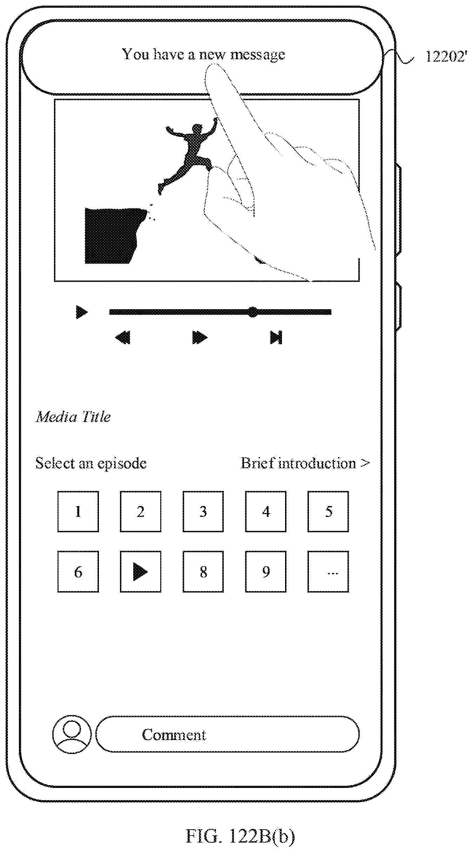

For another example, with reference to FIG. 122A(a) and FIG. 122A(b), the application window is an application window of a navigation application and the user operation in S11901 is a selection operation for a notification message. As shown in FIG. 122A(a), an application window 12201 of the navigation application is displayed on the display of the mobile phone. The application window 12201 includes a navigation details page. In a process in which the user uses the navigation application for navigation, the mobile phone receives the notification message. As shown in FIG. 122A(b), the mobile phone displays prompt information 12202 of the notification message. When the user wants to view the notification message, the user may perform a tap operation on the prompt information 12202. It may be understood that, after the user performs the tap operation on the prompt information 12202, the mobile phone displays a details interface corresponding to the prompt information 12202. Therefore, after receiving the tap operation, the mobile phone may further perform the following S11902 to S11903, to trigger the mobile phone to display a key element of the navigation details page in the application window 12201 on the display of the mobile phone in a form of a dynamic small window for the user to continue to view. With reference to FIG. 122B(a) and FIG. 122B(b), an example in which the application window is an application window of a video application and the user operation in S11901 is a selection operation for a notification message is used. As shown in FIG. 122B(a), an application window 12201' of the video application is displayed on the display of the mobile phone. The application window 12201' includes a video details page. The mobile phone receives the notification message. As shown in FIG. 122B(b), the mobile phone displays prompt information 12202' of the notification message. When the user wants to view the notification message, the user may perform a tap operation on the prompt information 12202'. It may be understood that, after the user performs the tap operation on the prompt information 12202', the mobile phone displays a details interface corresponding to the prompt information 12202'. Therefore, after receiving the tap operation, the mobile phone may further perform the following S11902 to S11903, to trigger the mobile phone to display a key element of the video details page in the application window 12201' on the display of the mobile phone in a form of a dynamic small window for the user to continue to view.

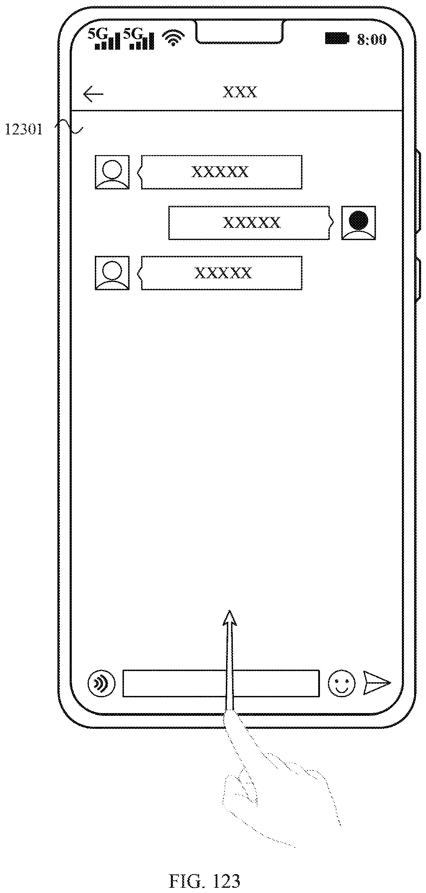

For another example, with reference to FIG. 123, the application window is an application window of an instant messaging application and the user operation in S11901 is an operation of switching the instant messaging application of the mobile phone to a background. As shown in FIG. 123, an application window 12301 of the instant messaging application is displayed on the display of the mobile phone. The application window 12301 includes a chat details page. When the user wants to display a key element in the application window 12301 in a form of a dynamic small window, the user may perform the operation of switching the instant messaging application to the background, for example, perform a slide operation that starts from the lower edge of the display of the mobile phone and that points to the upper edge of the display of the mobile phone. After receiving the operation, the mobile phone may perform the following S11902 to S11903.

S11902: The mobile phone obtains small window data in response to the user operation in S11901.

After the mobile phone receives the user operation in S11901, it indicates that the user wants to display a key element of an interface in a currently displayed application window of the mobile phone in a form of a dynamic small window. The mobile phone may obtain the small window data.

The small window data may include an identifier of an application. The small window data may further include an identifier of an interface in an application window, and/or an interface of an application in an application window, for example, may be a screenshot of the application window (or a screenshot of the interface of the application in the application window). The identifier of the application may be a package name of the application. The identifier of the interface may be an activity (Activity) name of the interface.

For example, with reference to FIG. 118, the small window data includes the package name of the application, the identifier of the interface in the application window, and the interface of the application in the application window. After the user operation in S11901 is received, the small window data may be obtained by the drag service module at the application layer of the mobile phone. For example, the user operation is the operation of triggering the display of the multi-task interface and the operation of dragging the application window on the multi-task interface to the specified region. After the mobile phone receives the operation of dragging the application window on the multi-task interface by the user, the mobile phone, for example, the launcher at the application layer of the mobile phone, may initiate drag for the application window. In a process in which the application window is dragged, the launcher at the application layer of the mobile phone may perform drag listening. After determining that the application window is dragged to the specified region, the launcher at the application layer of the mobile phone may obtain the package name of the application and the identifier of the interface in the application window from a slack of activity of the mobile phone, the interface of the application in the application window may be found based on the package name of the application, for example, may be the screenshot of the application window, to obtain the small window data. Then, the launcher at the application layer of the mobile phone may send the obtained small window data to the drag service module at the application layer of the mobile phone. The drag service module at the application layer of the mobile phone may obtain the small window data.

It should be noted that, when the user operation in S11901 is the operation of triggering the drag of the application window and the operation of dragging the dragged application window to the specified region, or the user operation is the operation of switching the currently started application of the mobile phone to the background, or the user operation is the selection operation for the notification message, a specific implementation of obtaining the small window data by the mobile phone is similar to the specific implementation of obtaining the small window data by the mobile phone when the user operation is the operation of triggering the display of the multi-task interface and the operation of dragging the application window on the multi-task interface to the specified region. Details are not described herein again. When the user operation is the operation of switching to another page in the application window or the slide operation on the current page of the application window, a specific implementation in which the mobile phone obtains the small window data may be as follows: after receiving the user operation, the application of the application window may obtain the small window data, and then send the obtained small window data to the drag service module at the application layer of the mobile phone.

In addition, in some embodiments, when the user operation in S11901 includes a drag operation for the application window, an intent of the user to drag the application window may be triggering generation of a dynamic small window, or may be triggering cross-device drag. With reference to the foregoing description, it may be learned that the small window data is reported by the launcher at the application layer of the mobile phone to the drag service module at the application layer, and is processed by the drag service module. To enable the drag service module to distinguish whether the user operation is used to trigger display of the dynamic small window or trigger the cross-device drag, the small window data may further include an object type. The object type is different from an object type in data obtained by the drag service module during the cross-device drag, and the object type may be used to indicate to trigger the display of the dynamic small window. For example, the object type may be a dynamic window (livewindow). In an example, to unify a structure of the small window data, in this embodiment, for the user operation in various implementations in S11901, after the user wants to trigger the display of the dynamic small window and performs a corresponding user operation, the small window data obtained by the drag service module at the application layer of the mobile phone may include the object type.

Still with reference to FIG. 118, after obtaining the small window data, the drag service module at the application layer of the mobile phone may determine whether the object type in the small window data is a livewindow, to determine whether to trigger the display of the dynamic small window. After determining that the object type in the small window data is the livewindow, the drag service module at the application layer of the mobile phone may transmit the small window data to the dynamic small window controller at the application layer of the mobile phone. In some other embodiments, the software architecture shown in FIG. 118 may not include the drag service module. In this embodiment, after the user operation in S11901 is received, the small window data may be obtained by the launcher or an application at the application layer of the mobile phone, the small window data is directly transmitted to the dynamic small window controller at the application layer of the mobile phone.

In the foregoing embodiment, an example in which the mobile phone obtains the small window data after receiving the user operation in S11901 is used for description. In some other embodiments, after receiving the user operation in S11901, the mobile phone may first determine whether a currently displayed application window supports the display of the dynamic small window. If the display of the dynamic small window is supported, S11902 is performed. If the display of the dynamic small window is not supported, the mobile phone may not perform S11902, and the mobile phone may display prompt information to notify the user that the application window does not support the display of the dynamic small window.

In some implementations, a specific implementation of determining whether the application window supports the display of the dynamic small window may be as follows: The mobile phone may store a whitelist, and the whitelist includes an identifier of an application that supports the display of the dynamic small window. After receiving the user operation in S11901, the mobile phone may determine whether the identifier of the application corresponding to the application window is included in the whitelist When the identifier of the application is included in the whitelist, the mobile phone may determine that the application window supports the display of the dynamic small window. If the identifier of the application is not included in the whitelist, the mobile phone may determine that the application window does not support the display of the dynamic small window. In some other implementations, a specific implementation of determining whether the application window supports the display of the dynamic small window may be as follows: After receiving the user operation in S11901, the mobile phone may determine whether the interface of the application in the application window includes a video component If the interface of the application in the application window includes the video component, it may be determined that the application window supports the display of the dynamic small window. If the interface of the application in the application window does not include the video component, it may be determined that the application window does not support the display of the dynamic small window. In some other implementations, a specific implementation of determining whether the application window supports the display of the dynamic small window may be as follows: The mobile phone prestores an application type that supports the display of the dynamic small window. After receiving the user operation in S11901, the mobile phone may determine whether a type of an application corresponding to the application window is the application type that supports the display of the dynamic small window. When the type of the application is the application type that supports the display of the dynamic small window, the mobile phone may determine that the application window supports the display of the dynamic small window. If the type of the application is not the application type that supports the display of the dynamic small window, the mobile phone may determine that the application window does not support the display of the dynamic small window.

S11903: The mobile phone displays the dynamic small window based on the small window data.

After obtaining the small window data, the mobile phone may display the dynamic small window on the display of the mobile phone based on the small window data. The dynamic small window may include one or more types of the following elements: a presentation element and a manipulation element The presentation element may include one or more of the following: a picture, a video, a text, an icon, and a banner (banner). The manipulation element may include one or more of the following: a button, a progress slider, and a toolbar. In other words, the dynamic small window may include one or more of the following elements: a picture, a video, a text, an icon, a banner, a button, a progress slider, a toolbar, and the like.

For example, the elements included in the dynamic small window may be some elements of an interface in an application window displayed by the mobile phone before the user operation in S11901 is received. For ease of description, the element included in the dynamic small window may be referred to as a small window element.

In an example, the mobile phone may extract, based on the identifier of the application included in the small window data, the small window element from an application window corresponding to the identifier. Alternatively, the mobile phone may extract the small window element from an interface of a corresponding application window based on the identifier of the application and the identifier of the interface that are included in the small window data. A second identifier in this embodiment of this application may be the identifier of the application, or the second identifier may include the identifier of the application and the identifier of the interface.

In a possible implementation, the small window element may be predefined. In other words, which elements are small window elements may be predefined. Small window elements corresponding to different applications may be the same or may be different Small window elements corresponding to different interfaces of a same application may be the same or may be different

For example, an application developer may predefine which elements in an application are the small window elements, and store a corresponding configuration file in the mobile phone. For example, the small window elements corresponding to the different applications are different, and an identifier of the application and a configuration file may be correspondingly stored in the mobile phone. The identifier of the application may be a package name of the application. As shown in Table 10, a configuration file I and a package name 1 of an application 1 are correspondingly stored, a configuration file 2 and a package name 2 of an application 2 are correspondingly stored, and the like.

**Table 10**

| Identifier of an application | Configuration file |
|---|---|
| Package name 1 | Configuration file 1 |
| Package name 2 | Configuration file 2 |
| ... | ... |

For another example, the developer may predefine which elements in different interfaces of an application are the small window elements, and configure a corresponding configuration file in the mobile phone. For example, the small window elements corresponding to the different interfaces of the same application are different, and an identifier of the application, an identifier of the interface, and a configuration file may be correspondingly stored in the mobile phone. The identifier of the application may be a package name of the application. The identifier of the interface may be an activity (Activity) name of the interface. As shown in Table 11, a configuration file a, a package name a of an application a, and an identifier (for example, an activity name 1) of an interface 1 are correspondingly stored. A configuration file b, the package name a of the application a, and an identifier (for example, an activity name 2) of an interface 2 are correspondingly stored. A configuration file c, a package name b of an application b, and an identifier (for example, an activity name 3) of an interface 3 are correspondingly stored. A configuration file d, the package name b of the application b, and an identifier (for example, an activity name 4) of an interface 4 are correspondingly stored. A configuration file e, the package name b of the application b, and an identifier (for example, an activity name 5) of an interface 5 are correspondingly stored, and the like.

**Table 11**

| Identifier of an application | Identifier of an interface | Configuration file |
|---|---|---|
| Package name a | Activity name 1 | Configuration file a |
| | Activity name 2 | Configuration file b |
| Package name b | Activity name 3 | Configuration file c |
| | Activity name 4 | Configuration file d |
| | Activity name 5 | Configuration file e |
| ... | ... | ... |

The configuration file may include an identifier of an element that needs to be displayed in a dynamic small window. The identifier of the element may include one or more of an ID (for example, a view ID) of the element, a class name (for example, a view class) of the element, a ranking sequence number (for example, a view index), and the like. In addition, it may be learned from the description of S11902 that the small window data includes an identifier of an application, and an application indicated by the identifier of the application corresponds to an application window displayed by the mobile phone before the user performs the user operation in S11901. In this way, based on Table 10 (or Table 11), the mobile phone may first search for a corresponding configuration file based on the identifier of the application (or the identifier of the application and the identifier of the interface in the application window) included in the small window data. Then, the mobile phone may extract the small window element from the interface of the application window based on an identifier of an element included in the found configuration file.

For example, the configuration file and the identifier of the application are correspondingly stored in the mobile phone. With reference to the description in FIG. 118 and S11902, a specific implementation in which the mobile phone searches for the corresponding configuration file based on the identifier of the application included in the small window data, and extracts the small window element from the interface of the application window based on the identifier of the element in the configuration file may be as follows: After receiving the small window data from the drag service module at the application layer of the mobile phone, the dynamic small window controller at the application layer of the mobile phone may search for the corresponding configuration file based on the identifier of the application included in the small window data. The dynamic small window controller of the mobile phone may further start a virtual display (VirtualDisplay, or referred to as a virtual screen). For example, the dynamic small window controller of the mobile phone sends, to a display manager of the mobile phone, a request for creating a VirtualDisplay. After completing creation of the VirtualDisplay, the display manager of the mobile phone may return an identifier (identify, ID) of the created VirtuaIDisplay to the dynamic small window controller of the mobile phone. Then, the dynamic small window controller of the mobile phone may transmit the ID of the VirtualDisplay and the package name of the application in the small window data to the window manager at the framework layer of the mobile phone. The window manager of the mobile phone may move, to the VirtualDisplay for drawing based on the ID of the VirtualDisplay and the package name of the application, an application window of the application indicated by the package name. For example, the window manager of the mobile phone may search for, based on the package name, a stack identifier (stackId) of the application indicated by the package name, and then move, based on the stackld and the ID of the VirtualDisplay, a corresponding stack to the virtual display for drawing. Then, the dynamic small window controller of the mobile phone may extract, based on the identifier of the element included in the found configuration file, the small window element from an application window drawn on the VirtualDisplay.

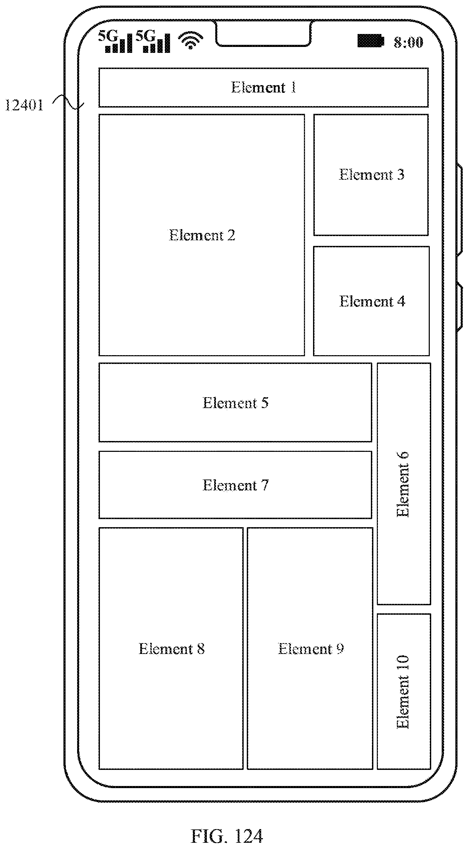

For example, with reference to FIG. 124, before the user performs the user operation in S11901, in an application window 12401 displayed by the mobile phone, the application developer predefines an element 3, an element 4 and an element 5 in the application window 12401 are small window elements, and corresponding configuration files are stored in the mobile phone. Small window data includes a package name of an application corresponding to the application window 12401. After receiving the small window data, the dynamic small window controller of the mobile phone may search for a corresponding configuration file based on the package name of the application included in the small window data. The configuration file includes an identifier of the element 3, an identifier of the element 4, and an identifier of the element 5. The dynamic small window controller of the mobile phone may further start a VirtualDisplay, and transmit an ID of the VirtualDisplay and the package name of the application in the small window data to the window manager of the mobile phone. Based on the ID of the VirtualDisplay and the package name of the application, the window manager of the mobile phone may draw the application window 12401 on the VirtualDisplay. The application window 12401 drawn on the VirtualDisplay includes an element 1, an element 2,..., and an element 10. The dynamic small window controller of the mobile phone may extract, based on the identifier of the element 3, the identifier of the element 4, and the identifier of the element 5 that are included in the found configuration file, the element 3, the element 4, and the element 5 from the application window 12401 drawn on the VirtualDisplay. The extracted element 3, the element 4, and the element 5 are displayed on the display of the mobile phone in a form of a dynamic small window.

In another possible implementation, the small window element may be recommended by a system. In other words, the system recommends which elements are small window elements. Small window elements corresponding to different types of applications may be the same or may be different. For example, the small window elements corresponding to the different types of the applications are different Recommendation models corresponding to the different types of the applications may be pre-stored in the mobile phone. An application type may include one or more of the following types: a music type, a video type, a navigation type, an e-commerce type, an instant messaging (instant messaging, IM) type, and the like. As shown in Table 12, a recommendation model 1 corresponds to the music type, a recommendation model 2 corresponds to the video type, a recommendation model 3 corresponds to the navigation type, a recommendation model 4 corresponds to the e-commerce type, a recommendation model 5 corresponds to the instant messaging type, and the like.

**Table 12**

| Application type | Recommendation model |
|---|---|
| Music type | Recommendation model 1 |
| Video type | Recommendation model 2 |
| Navigation type | Recommendation model 3 |
| E-commerce type | Recommendation model 4 |
| Instant messaging type | Recommendation model 5 |
| ... | ... |

Based on Table 12, the mobile phone may first determine a type of an application based on an identifier of the application included in small window data, and then, search for a recommendation model corresponding to the type of the application. Then, the mobile phone may extract a small window element from an interface of an application window based on the found recommendation model

It may be understood that the mobile phone may extract one or more small window elements from the interface of the application window based on a configuration file or the recommendation model. Then, the mobile phone may display the extracted one or more small window elements on the display of the mobile phone in a form of a dynamic small window.

For example, the mobile phone may display each small window element in the dynamic small window based on a pre-configured layout file. The layout file includes a configuration of a drawing region of each small window element (for example, configurations such as an identifier, a location. and a style of the element). The drawing regions of the small window elements do not overlap or partially overlap. In addition, the drawing region of each small window element in the layout file may not correspond to a region of the corresponding small window element in an original interface, that is, a re-layout of the small window element may be implemented by using the layout file.

The layout file may be defined by the application developer, that is, a layout of the small window element is customized by the application developer. Corresponding to the foregoing description of extracting the small window element, when small window elements corresponding to different applications are the same, layout files corresponding to the different applications may be the same or may be different. When the small window elements corresponding to the different applications are different, the layout files corresponding to the different applications are different. When the layout files corresponding to the different applications are different, an identifier (for example, a package name) of the application and a layout file may be correspondingly stored in the mobile phone. When different interfaces of a same application correspond to different small window elements, the different interfaces may also correspond to different layout files. When different interfaces of a same application correspond to different layout files, an identifier of the application, an identifier of the interface, and a layout file may be correspondingly stored in the mobile phone.

Alternatively, the foregoing layout file may not need to be defined by the application developer, and is defined by a system developer. To be specific, the layout of the small window element is recommended by the system. Corresponding to the foregoing description of extracting the small window element, when small window elements corresponding to different types of applications are the same, layout files corresponding to the different types of applications may be the same or may be different. When the small window elements corresponding to the different types of applications are different, the layout files corresponding to the different types of applications are different. When the layout files corresponding to the different types of applications are different, a type of the application and a layout file may be correspondingly stored in the mobile phone.

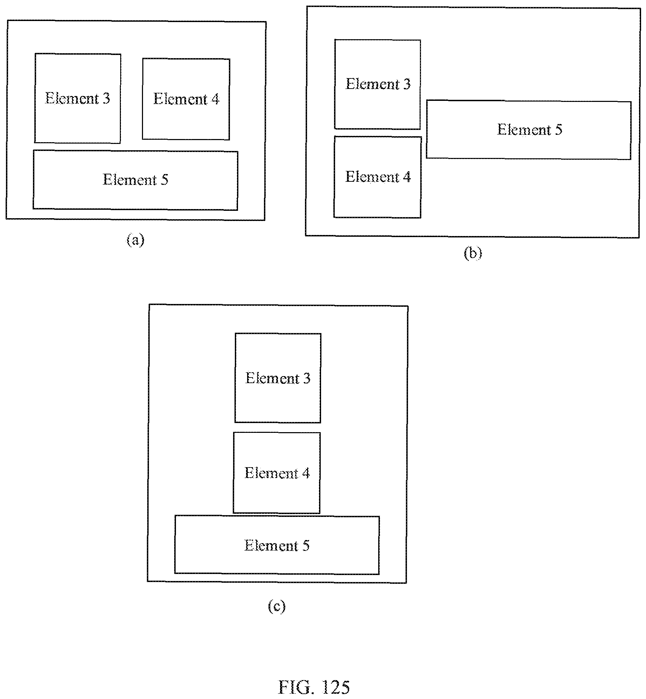

Based on the foregoing description, the mobile phone may obtain a corresponding layout file based on an identifier of an application corresponding to the application window (or an identifier of an application and an identifier of an interface, or a type of an application), to implement a layout of extracted small window elements in the dynamic small window. For example, the layout file and the identifier of the application are correspondingly stored in the mobile phone. With reference to FIG. 118 and the foregoing description of extracting the small window element, the dynamic small window controller at the application layer of the mobile phone may search for the corresponding layout file based on the identifier of the application in the small window data, and perform layout on the extracted small window element based on the found layout file. For example, with reference to the example shown in FIG. 124, a result obtained after the dynamic small window controller of the mobile phone performs re-layout on the extracted element 3, the element 4, and the clement 5 based on the found layout file may be shown in (a) in FIG. 125.

It should be noted that, in this embodiment, there may be one or more layout files corresponding to a same application (or a same interface of an application, or applications of a same type), which is not specifically limited in this embodiment For example, different applications correspond to different layout files. It may be understood that for a same small window element, display effects obtained after the mobile phone performs re-layout based on different layout files are different. For example, with reference to FIG. 124 and FIG. 125, there are three layout files corresponding to the application. After the mobile phone extracts the element 3, the element 4, and the element 5, results obtained after re-layout is performed by using the three different layout files may be respectively shown in (a) in FIG. 125, (b) in FIG. 125, and (c) in FIG. 125. When there are a plurality of layout files corresponding to a same application (or a same interface of an application, or applications of a same type), the mobile phone may select any layout file from the plurality of layout files, and performs re-layout on the extracted small window element Alternatively, the system developer may provide a plurality of layout files, and the application developer selects one layout file from the plurality of layout files. In this way, the mobile phone may select a corresponding layout file from the plurality of layout files based on a designation of the application developer, and performs re-layout on the extracted small window element. In addition, in this embodiment, that the mobile phone performs re-layout on the extracted small window elements based on the layout file may be implemented by invoking a layout capability provided by the system. For example, the system may provide one or more layout capabilities such as a secondary layout capability (which may also be referred to as an RIO capability), a DUP capability, and a recommended layout capability. After extracting the small window element, based on the corresponding layout file, the mobile phone may invoke the layout capability provided by the system to perform re-layout on the small window element The DUP capability may also be used to extract the small window element. For example, the mobile phone may invoke, based on a corresponding configuration file (which may be referred to as a DUP configuration file), the DUP capability of the system to extract the small window element Similarly, there may also be one or more configuration files (or recommendation models) corresponding to a same application (or a same interface of an application, or applications of a same type). For a same application (or a same interface of an application, or applications of a same type), small window elements extracted by the mobile phone based on different configuration files (or recommendation models) are different When there are a plurality of configuration files (or recommendation models) corresponding to the same application (or the same interface of the application, or the applications of the same type), the mobile phone may select any one of the plurality of configuration files (or recommendation models), to extract the small window element. Alternatively, the system developer may provide a plurality of configuration files (or recommendation models), and the application developer selects one configuration file (or recommendation model) from the plurality of configuration files (or recommendation models), to extract the small window element

It should be noted that, for any application, when a small window element in a dynamic small window includes only one or more predetermined elements, for example, the small window element includes only a video element, the foregoing configuration file/recommendation model may not be stored (or not required) in this embodiment, alternatively, the foregoing layout file may not be stored. In this case, after obtaining the small window data, the mobile phone may directly identify a predetermined element in an application window, for example, a video element, and then perform re-layout based on a default layout manner. In other words, the small window element is predetermined, and the layout is also predetermined.

After re-layout is performed on the obtained small window element, the mobile phone may display, on the display of the mobile phone in a form of a dynamic small window, a small window element obtained after re-layout.

As described in the foregoing embodiment, the dynamic small window is a small window displayed on the display in a floating manner. It may be understood that the display of the mobile phone may be horizontally or vertically divided into a plurality of grids, for example, four grids, eight grids, or 12 grids. In this embodiment, a size of the small window or the dynamic small window may be set based on the grids into which the display of the mobile phone is divided. For example, the system developer or the application developer can set the size of the dynamic small window based on grids as required.

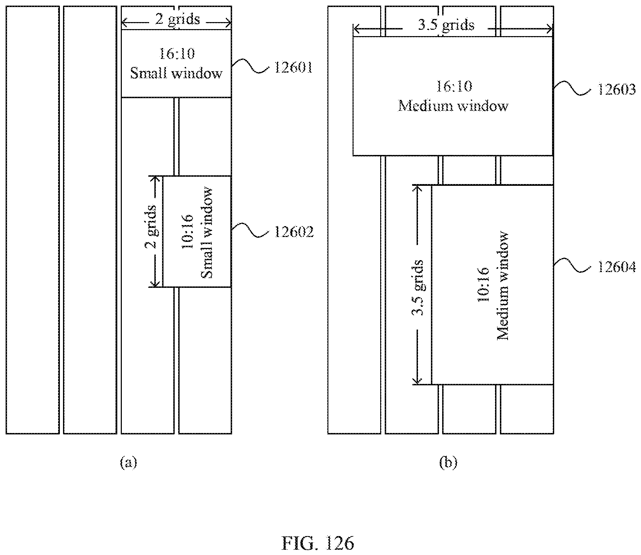

For example, with reference to FIG. 126 to FIG. 128, an example in which an aspect ratio of a horizontal dynamic small window is 16:10 and an aspect ratio of a vertical dynamic small window is 10:16 is used, display effects of the horizontal dynamic small window and the vertical dynamic small window when the display of the mobile phone is vertically divided into four grids, eight grids, and 12 grids are respectively shown.

With reference to FIG. 126, as shown in (a) in FIG. 126, for a horizontal dynamic small window, the system developer or the application developer may set a width of the dynamic small window to two grids. Based on the aspect ratio 16:10 of the horizontal dynamic small window, the mobile phone may display, on the display of the mobile phone, a dynamic small window 12601 with a width of two grids based on the four grids obtained by dividing the display of the mobile phone. For a vertical dynamic small window, the system developer or the application developer can set a height of the dynamic small window to two grids. Based on the aspect ratio 10:16 of the vertical dynamic small window, the mobile phone may display, on the display of the mobile phone, a dynamic small window 12602 with a height of two grids based on the four grids obtained by dividing the display of the mobile phone.

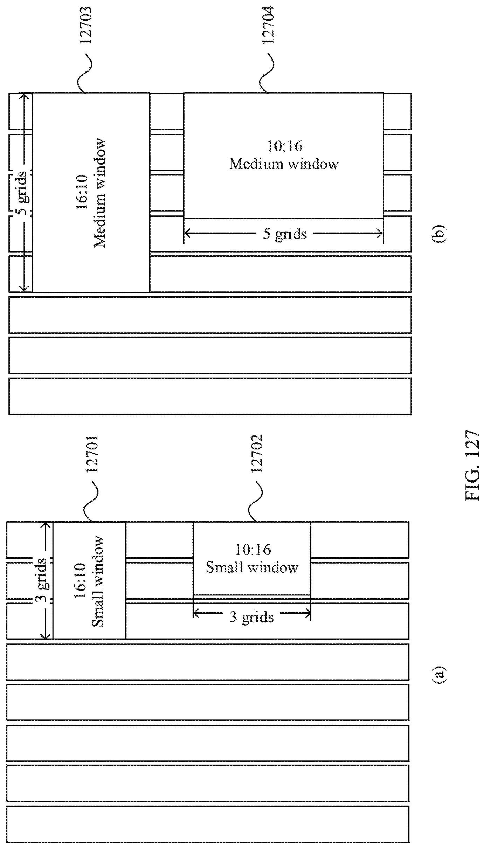

Similarly, with reference to FIG. 127, as shown in (a) in FIG. 127, for a horizontal dynamic small window, the system developer or the application developer may set a width of the dynamic small window to three grids. Based on the aspect ratio 16:10 of the horizontal dynamic small window, the mobile phone may display, on the display of the mobile phone, a dynamic small window 12701 with a width of three grids based on the eight grids obtained by dividing the display of the mobile phone. For a vertical dynamic small window, the system developer or the application developer may set a height of the dynamic small window to three grids. Based on the aspect ratio 10:16 of the vertical dynamic small window, the mobile phone may display, on the display of the mobile phone, a dynamic small window 12702 with a height of three grids based on the eight grids obtained by dividing the display of the mobile phone.

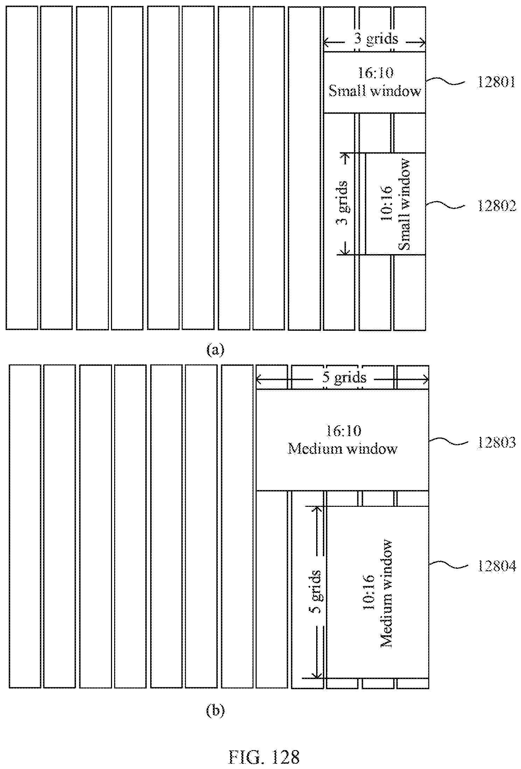

With reference to FIG. 128, as shown in (a) in FIG. 128, for a horizontal dynamic small window, the system developer or the application developer may set a width of the dynamic small window to three grids. Based on the aspect ratio 16:10 of the horizontal dynamic small window, the mobile phone may display, on the display of the mobile phone, a dynamic small window 12801 with a width of three grids based on the 12 grids obtained by dividing the display of the mobile phone. For a vertical dynamic small window, the system developer or the application developer can set a height of the dynamic small window to three grids. Based on the aspect ratio 10:16 of the vertical dynamic small window, the mobile phone may display, on the display of the mobile phone, a dynamic small window 12802 with a height of three grids based on the 12 grids obtained by dividing the display of the mobile phone.

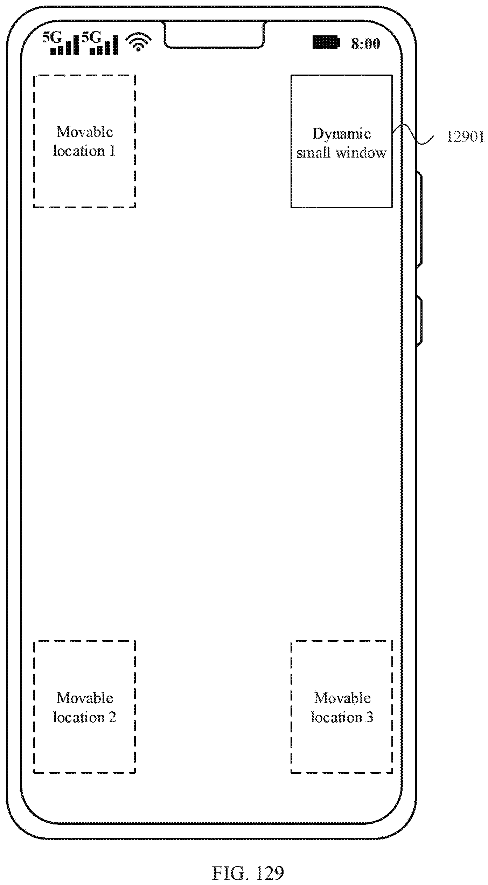

In addition, in this embodiment, a display location of the dynamic small window on the display may be any location on the display. In an example, the display location of the dynamic small window may be predefined (or set by a system). For example, as shown in FIG. 129, the display location of the dynamic small window may be predefined as a location that is away from the right edge of the display at a predetermined distance 1 and away from the upper edge of the display at a predetermined distance 2. The predetermined distance 1 and the predetermined distance 2 may also be predefined. For example, the predetermined distance 1 is one N^{th} of the width of the display of the mobile phone, and the predetermined distance 2 is one M^{th} of the length of the display of the mobile phone. In this way, the mobile phone may display a dynamic small window 12901 on the display of the mobile phone based on the predefined display location and the size. A display effect is shown in FIG. 129, that is, the dynamic small window 12901 may be automatically adsorbed to an edge of the display of the mobile phone.

In the foregoing description, for the horizontal dynamic small window and the vertical dynamic small window, the mobile phone may automatically recommend, based on a size of a region constituted by all small window elements after the layout is completed, whether to display the horizontal dynamic small window or the vertical dynamic small window. For example, if the size (for example, the aspect ratio) of the region constituted by all the small window elements after the layout is completed is greater than or equal to 1:1, the mobile phone may recommend the horizontal dynamic small window to display the small window elements obtained after the re-layout. If the size (for example, the aspect ratio) of the region constituted by all the small window elements after the layout is completed is less than 1:1, the mobile phone may recommend the vertical dynamic small window to display the small window elements obtained after the re-layout For example, the small window element includes only the video element. If a size (for example, an aspect ratio) of the video element is greater than or equal to 1:1, the mobile phone may recommend the horizontal dynamic small window to display the video element If a size (for example, an aspect ratio) of the video element is less than 1:1, the mobile phone may recommend the vertical dynamic small window to display the video element In addition, for a scenario in which the small window element is the video element, in view of a fact that most sizes of videos in the video element are 16:9 or 16: 10, however, there are some videos of other sizes, to keep sizes of the dynamic small windows consistent, it may be considered that the video is partially cropped, to ensure that there is no black border in a video played in the dynamic small window. For example, when a video size (for example, an aspect ratio) is greater than or equal to 1:1 and less than or equal to 16:10, a video width may be consistent with the width of the dynamic small window, and the video is cropped up and down. When the video size (for example, the aspect ratio) is greater than 16:10, a video height may be consistent with the height of the dynamic small window, and the video is cropped leftward and rightward. When the video size (for example, the aspect ratio) is greater than or equal to 10:16 and less than 1:1, the video height may be consistent with the height of the dynamic small window, and the video is cropped leftward and rightward. When the video size (for example, the aspect ratio) is less than 10:16, the video width may be consistent with the width of the dynamic small window, and the video is cropped up and down.

It should be noted that, in the foregoing example, the horizontal dynamic small window may be a dynamic small window with a high aspect ratio, and the vertical dynamic small window may be a dynamic small window with a low aspect ratio. In addition, in this embodiment, the foregoing description is provided by using an example in which the aspect ratio of the horizontal dynamic small window is 16:10. The aspect ratio of the horizontal dynamic small window may also be another ratio, for example, 16:9 or 4:3. Similarly. the aspect ratio of the vertical dynamic small window may also be another ratio, for example, 9:16 or 3:4. In this embodiment, the aspect ratios of the horizontal dynamic small window and the vertical dynamic small window are not specifically limited.

The following describes the foregoing S11902 to S11903 by using the examples shown in FIG. 118 and shown in FIG. 121(a) to FIG. 123.

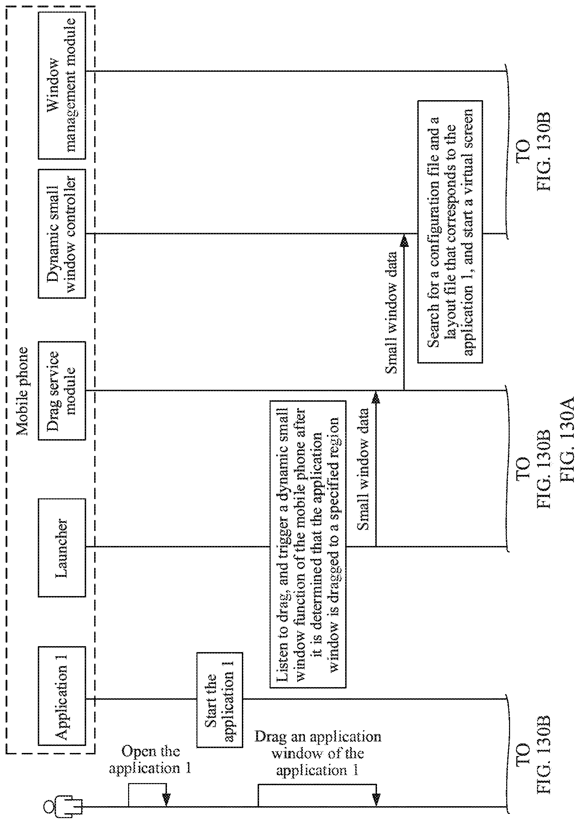

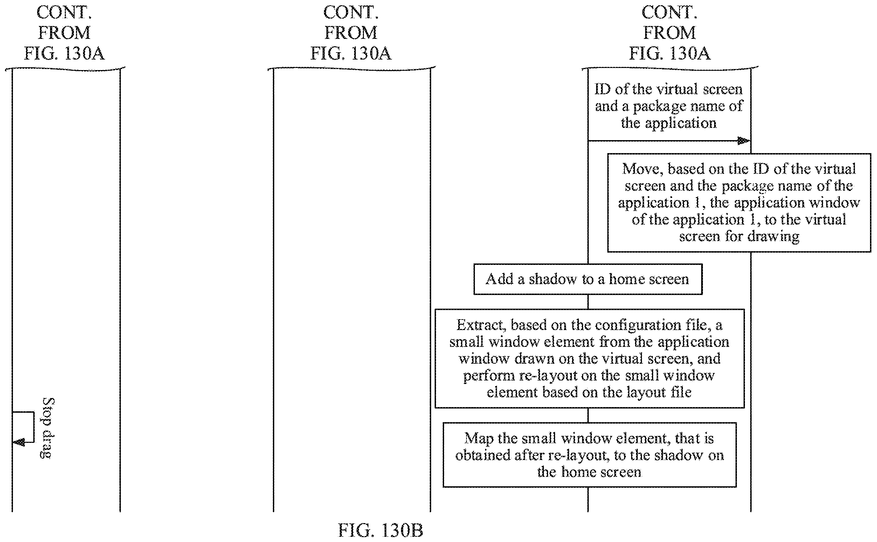

For example, with reference to the examples shown in FIG. 118 and FIG. 121(a) to FIG. 121(c), a developer of the application 1 predefines a video element in the application 1 as a small window element, the corresponding configuration file and the package name of the application 1 are correspondingly stored in the mobile phone, a configuration of a drawing region of the video element is predefined, and a corresponding layout file and the package name of the application 1 are also stored in the mobile phone. As shown in FIG. 130A and FIG. 130B, after the user opens an application 1, the mobile phone may start the application 1, and display an application window of the application 1 on the display. The user drags the application window of the application 1. As shown in FIG. 121(a) to FIG. 121(c), the user presses the application window thumbnail 12104 of the application 1 on the multi-task interface and moves the finger, to trigger a small window drag service. In a process in which the application window is dragged, the launcher at the application layer of the mobile phone may perform drag listening, to determine whether the application window is dragged to a specified region. After it is determined that the mobile phone is dragged to the specified region, a dynamic small window function of the mobile phone may be triggered, that is, the following process is performed.

The launcher of the mobile phone obtains small window data, and sends the small window data to the drag service module at the application layer of the mobile phone. For example, the launcher carries the small window data in a drag event (DragEvent) and sends the drag event to the drag service module. The small window data includes an identifier (for example, a package name) of the application 1, an object type (specifically, livewindow), and an interface (for example, which may be the application window thumbnail 12104 in FIG. 121(a) to FIG. 121(c)) of the application in the application window.

The drag service module of the mobile phone may determine, based on the object type (livewindow) in the small window data, that a user operation of dragging the application window is used to trigger the display of the dynamic small window. Then, the drag service module of the mobile phone may send the small window data to the dynamic small window controller at the application layer of the mobile phone, so that the dynamic small window controller performs processing logic of a dynamic small window service.

For example, the dynamic small window controller of the mobile phone may search for, based on the package name of the application 1 included in the small window data, a configuration file corresponding to the application 1. The configuration file includes an identifier of an element that is in the application I and that needs to be displayed in the dynamic small window, for example, includes an identifier of a video element. The dynamic small window controller of the mobile phone may further search for, based on the package name of the application 1 included in the small window data, a layout file corresponding to the application 1. The layout file includes configurations such as an identifier and a location of a video element

The dynamic small window controller of the mobile phone may further start a virtual screen, and transfer an ID of the virtual screen and the package name of the application 1 in the small window data to the window manager at the framework layer of the mobile phone. The window manager of the mobile phone may move, based on the ID of the virtual display and the package name of the application 1, the application window of the application 1 indicated by the package name 1 to the virtual display for drawing. The dynamic small window controller of the mobile phone may further generate a small window shadow (shadow), and add the shadow to a home screen of the mobile phone. The shadow is generated based on the interface of the application in the small window data, for example, the application window thumbnail 12104 in FIG. 121(a) to FIG. 121(c).

Then, the dynamic small window controller of the mobile phone may extract, based on the identifier of the video element included in the found configuration file, a small window element from an application window drawn on the virtual screen. For example, the small window element is the video element 12102 in FIG. 121(a) to FIG. 121(c). For example, the dynamic small window controller of the mobile phone may determine a layer name (layer name) and a display name (display name) of the video element 12102 in the application window based on the identifier of the video element, and extract, based on the layer name and the display name, the video element 12102 from the application window drawn on the virtual screen. After extracting the small window element, for example, the video element 12102, the dynamic small window controller of the mobile phone may perform re-layout on the extracted small window element based on the found layout file.

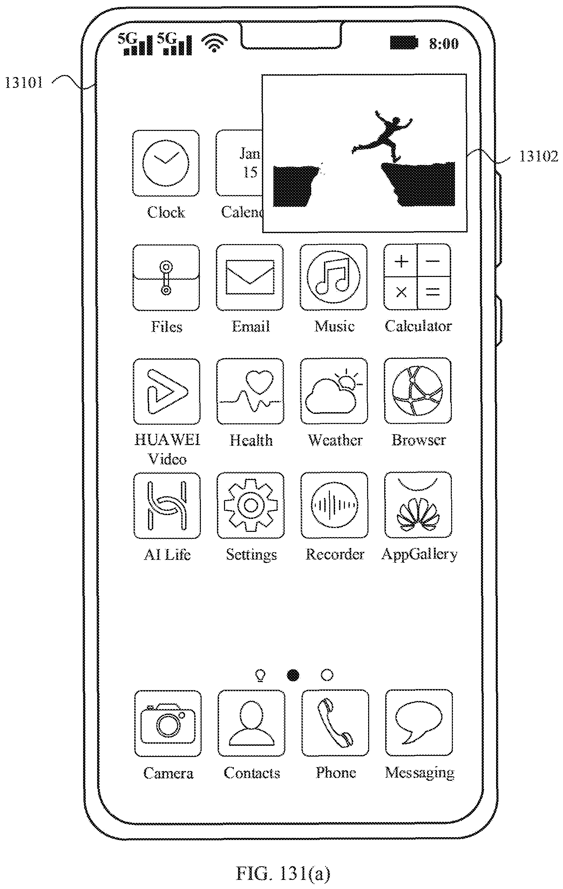

After the layout is completed, the dynamic small window controller of the mobile phone maps a small window element obtained after the re-layout to the shadow of the home screen. In this way, after the user stops dragging the application window, for example, releases the finger in the example shown in FIG. 121(c), as shown in FIG. 131(a), the mobile phone may display a desktop 13101, and display a dynamic small window 13102 on the desktop 13101. For example, the dynamic small window 13102 includes a video element. In the video element, a video in the video element 12102 shown in FIG. 121(a) may continue to be played for the user to continue to view. Then, the user switches a subscreen on the desktop, or opens another application in the mobile phone, and the dynamic small window 13102 may continue to be displayed on the display of the mobile phone in a floating manner. The subscreen refers to a page into which the desktop is divided.

It should be noted that the examples shown in FIG. 121(a) to FIG. 121(c) and FIG. 130A to FIG. 131(b) are described by using an example in which a video on the information details page is displayed on the display of the mobile phone in a form of a dynamic small window. It may be understood that the information details page is a hypertext markup language (hypertext markup language, HTML) web page. To be specific, for a video on the HTML web page (for example, information in a WeChat^{®} official account or information in a Toutiao^{®}), the user may trigger, by performing the user operation in S11901, the mobile phone to display the video in a form of a dynamic small window. It may be said that a video source in the dynamic small window comes from the HTML web page. In this embodiment, the video source in the dynamic small window may be alternatively another source, for example, a plan view (surfaceView), for example, a surfaceView in a third-party application, for example, Youku^{®}, Tencent^{®}, or iQIYI^{®} (where an example is shown in FIG. 122B(a) and FIG. 122B(b)), and for another example, a structure view (textureView), for example, a textureView in a third-party application, for example, Weibo^{®} or TikTok^{®}. To be specific, for any interface including a video element (for example, a surfaceView or a textureView), as long as the user performs the operation of triggering the display of the dynamic small window, the video element may be extracted from the corresponding interface by using the method in this embodiment, to continue to play a video in the video element in the dynamic small window. A specific implementation thereof is similar to the implementation in the example shown in FIG. 130A and FIG. 130B, and details are not described herein again. In the embodiment shown in FIG. 130Aand FIG. 130B, the small window element may be recommended by the system, and the layout of the small window element may also be recommended by the system. This is not specifically limited in this embodiment

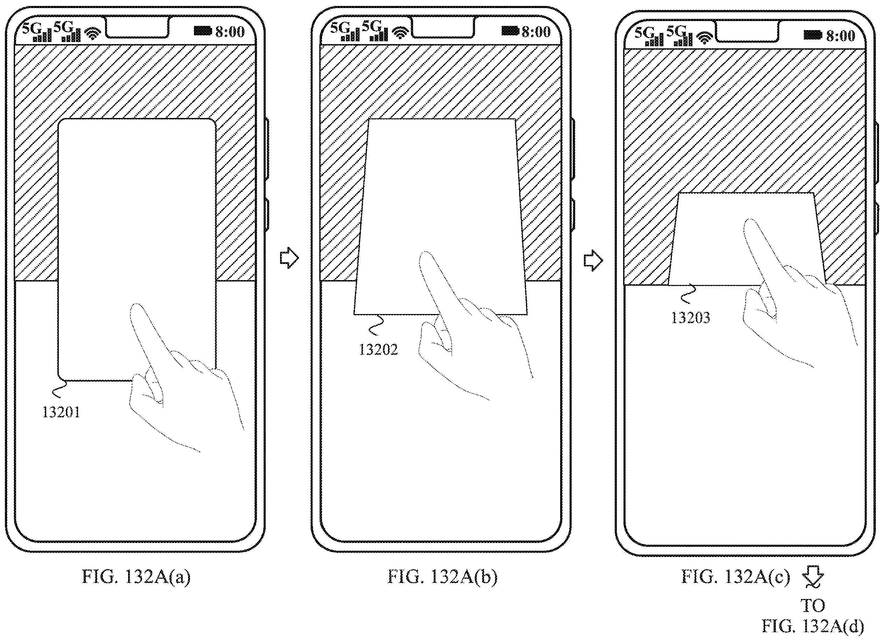

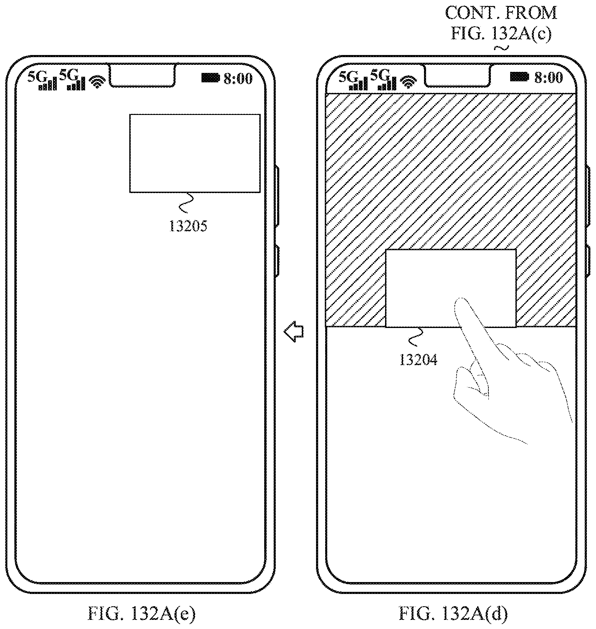

In a scenario in which the user drags the application window to trigger the display of the dynamic small window, this embodiment provides a display animation effect of the dynamic small window. For example, with reference to FIG. 132A(a) to FIG. 132A(e), as shown in FIG. 132A(a), the user presses an application window 13201 and moves a finger. As the finger of the user moves, the application window 13201 may be flipped inside (or outside) the display of the mobile phone, and updated and displayed on the display of the mobile phone. An updated application window is shown as 13202 in FIG. 132A(b) and 13203 in FIG. 132A(c). In addition, as the finger of the user moves, transparency of the application window gradually changes from 0 to 100, that is, from opaque to transparent For example, transparency of the application window 13201 is 0. As the finger of the user moves, the transparency gradually increases until transparency of the updated application window is 100. In this way, a visual effect that the application window 13201 becomes smaller with flipping until the application window 13201 disappears is provided for the user. In addition, as described in the foregoing embodiment, the mobile phone maps the shadow to the home screen, so that the shadow is displayed on the display of the mobile phone. For example, in this example, the shadow may be a picture of a region (for example, the region in which the video element is located in FIG. 121(a) to FIG. 121(c)) in which a small window element in a cropped application window is located. In cooperation with an animation effect of the foregoing application window, as the finger of the user moves, transparency of the shadow displayed on the display of the mobile phone gradually changes from 100 to 0, that is, from transparent to opaque, to provide a visual effect for the user that the shadow starts from zero and gradually becomes clear. The two animation effects cooperate. After the transparency of the application window is 100 and the transparency of the shadow changes to 0, a display effect may be shown in FIG. 132A(d), and the mobile phone displays a shadow 13204. Because content in a finally displayed dynamic small window is the same as content in the shadow 13204, an effect that the application window gradually changes to the dynamic small window by using the foregoing animation effect may be provided for the user. Finally, after the user releases the finger, as shown in FIG. 132A(e), the mobile phone may display a dynamic small window 13205 on the display of the mobile phone. In the foregoing example, an example in which the application window is flipped is used for description. Alternatively, the application window may be cropped as the finger of the user moves. For example, the application window may be cropped from the lower edge of the application window to the upper edge of the application window. For another example, the region in which the small window element is located may be cropped. In this way, cooperation of a change of the transparency of the application window with a change of the transparency of the shadow may present an animation effect of gradually changing from the application window to the dynamic small window to the user. In addition, after the effect shown in FIG. 132A(d) is presented, if the user does not release the finger, but slides the finger in a direction pointing to the lower edge of the display, the application window may be redisplayed in full screen. Certainly, the content in the shadow may also be different from the content in the dynamic small window.

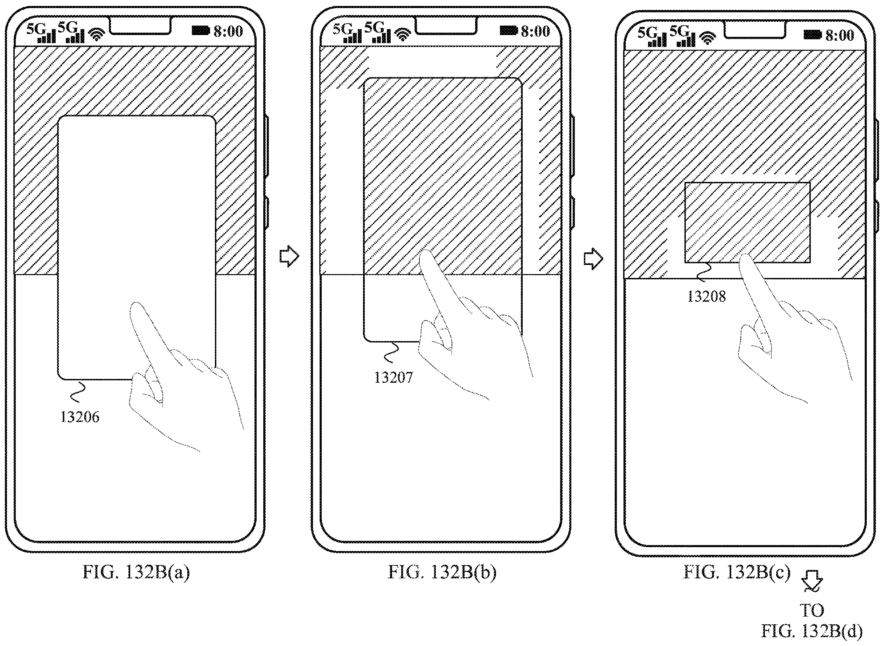

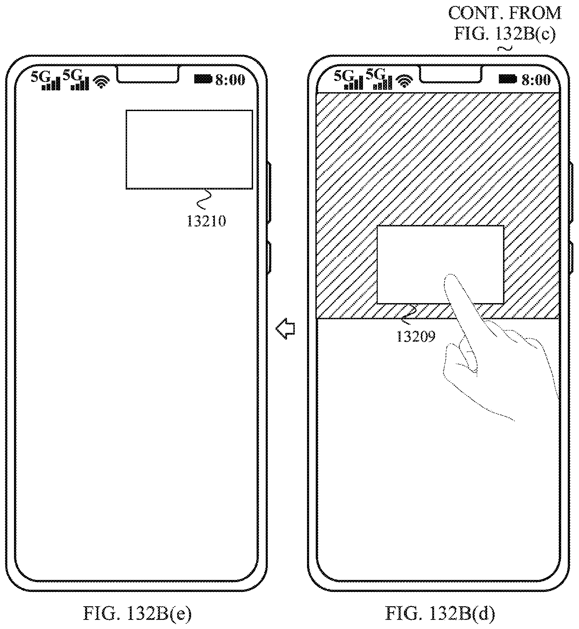

For example, with reference to FIG. 132B(a) to FIG. 132B(e), an effect that the application window fades out and the dynamic small window fades in may present an animation effect of gradually switching from the application window to the dynamic small window As shown in FIG. 132B(a), the user presses an application window 13206 and moves the finger. As the finger of the user moves, transparency of the application window 13206 gradually changes from 0 to 100, that is, from opaque to transparent. For example, the transparency of the application window 13206 shown in FIG. 132B(a) is 0. As the finger of the user moves, the transparency of the application window 13206 increases. For example, in a finger movement process, the application window 13206 changes to an application window 13207 shown in FIG. 132B(b), until the transparency changes to 100. In addition, as the finger of the user moves, transparency of the shadow that is mapped to the home screen by the mobile phone gradually changes from 100 to 0, that is, from transparent to opaque. For example, the transparency of the shadow at the beginning is 100. In a process in which the finger of the user moves, the transparency of the shadow decreases For example, the mobile phone displays a shadow 13208 shown in FIG. 132B(c). The finger of the user continues to move, and the transparency of the shadow changes to 0. For example, the mobile phone displays a shadow 13209 shown in FIG. 132B(d). In this way, the two animation effects cooperate to present an effect of fade-out of the application window and fade-in of the dynamic small window to the user, that is, an effect of gradually changing from the application window to the dynamic small window by using the foregoing animation effect to the user. Finally, after the user releases the finger, as shown in FIG. 132B(e), the mobile phone may display a dynamic small window 13210 on the display of the mobile phone. This animation effect is visually simple.

For another example, for a navigation application, a small window element may be recommended by the system, and a layout of the small window element may also be recommended by the system. For example, with reference to the examples shown in FIG. 118 and FIG. 122A(a) and FIG. 122A(b), a recommendation model and an application type of the navigation application are correspondingly stored in the mobile phone, and a layout file and the application type are also correspondingly stored in the mobile phone. After the user opens the navigation application, the mobile phone may start the navigation application, and display an application window of the navigation application on the display. Then, the user may perform navigation by using the navigation application. In a process of using the navigation application to perform navigation, if the mobile phone receives a notification message, after the user performs a tap operation on the notification message, a dynamic small window function of the mobile phone may be triggered, that is, the following process is performed.

The navigation application of the mobile phone obtains small window data, and sends the small window data to the drag service module at the application layer of the mobile phone. The small window data includes an identifier (for example, a package name) of the navigation application, an object type (specifically, livewindow), and an interface (for example, which may be a screenshot of the application window 12201 in FIG. 122A(a) and FIG. 122A(b)) of the application in the application window.

The drag service module of the mobile phone may determine, based on the object type (livewindow) in the small window data, that the user operation of tapping the notification message is used to trigger the display of the dynamic small window. Then, the drag service module of the mobile phone may send the small window data to the dynamic small window controller at the application layer of the mobile phone, so that the dynamic small window controller performs processing logic of a dynamic small window service.

For example, the dynamic small window controller of the mobile phone may determine, based on the package name of the navigation application included in the small window data, that the application type of the application is the navigation type, and may search for, based on this, a recommendation model corresponding to the navigation type application. The recommendation module is used to identify elements in the navigation application, for example, a navigation direction, a distance, and a road indication, as small window elements. The dynamic small window controller of the mobile phone may further search for, based on the determined application type, a layout file corresponding to the navigation application. The layout file includes a layout configuration of the small window element of the navigation application.

The dynamic small window controller of the mobile phone may further start a virtual screen, and transfer an ID of the virtual screen and the package name of the navigation application in the small window data to the window manager at the framework layer of the mobile phone. The window manager of the mobile phone may move, based on the ID of the virtual display and the package name of the navigation application, the application window of the navigation application to the virtual display for drawing. The dynamic small window controller of the mobile phone may further generate a small window shadow, and add the shadow to the home screen of the mobile phone. The shadow is generated based on the interface of the application in the small window data, for example, the screenshot of the application window 12201 in FIG. 122A(a) and FIG. 122A(b).

Then, the dynamic small window controller of the mobile phone may extract, based on the recommendation model, the small window element from the application window drawn on the virtual screen. For example, the small window element is a navigation direction 12203, a distance 12204, and a road indication 12205 in FIG. 122A(a) and FIG. 122A(b). After the navigation direction 12203, the distance 12204, and the road indication 12205 are extracted, the dynamic small window controller of the mobile phone may perform re-layout on the extracted small window element based on the found layout file.

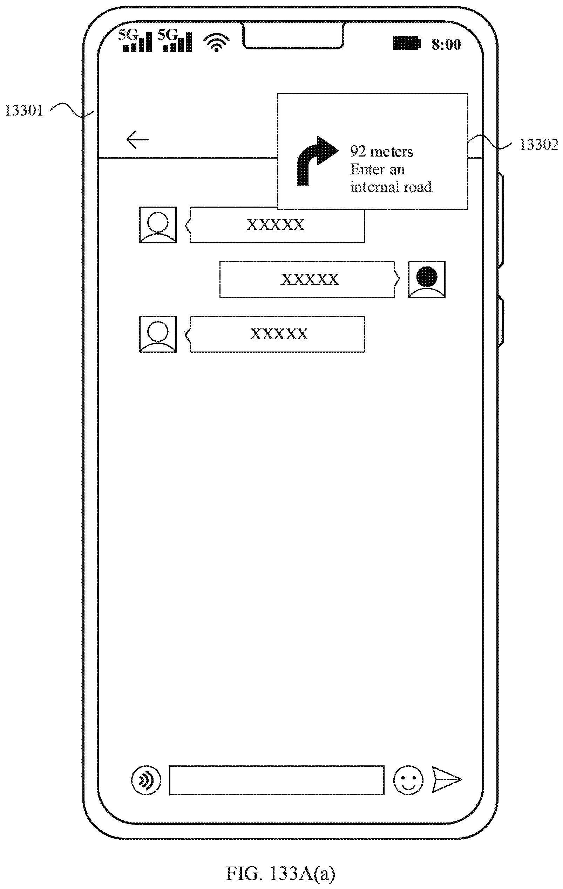

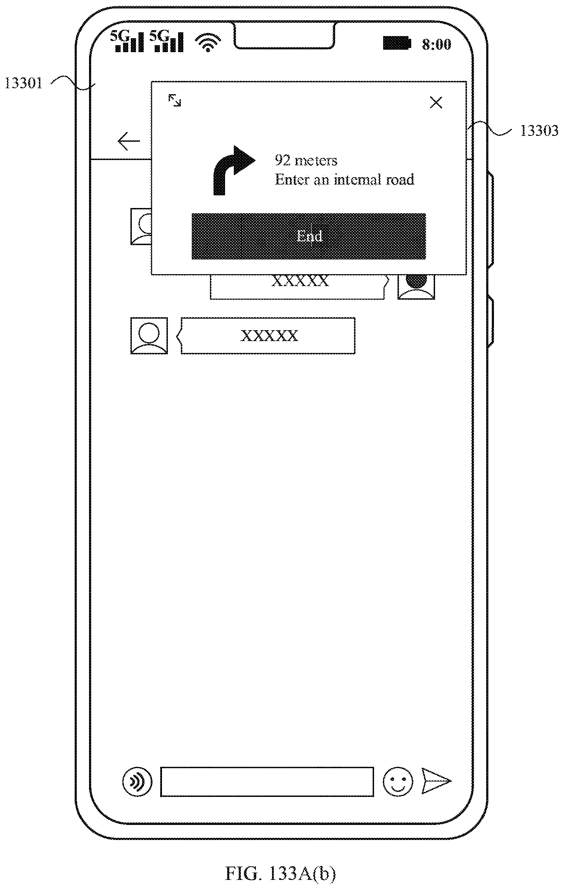

After the layout is completed, the dynamic small window controller of the mobile phone maps a navigation direction, a distance, and a road indication obtained after the re-layout to the shadow of the home screen. In addition, it may be understood that after the user taps the notification message, the mobile phone may further display a details interface of the notification message in response to the operation. In this way, after the user taps the notification message, for example, releases the finger in the example shown in FIG. 122A(b), as shown in FIG. 133A(a), the mobile phone may display a details interface 13301 corresponding to the notification message, and display a dynamic small window 13302 on the details interface 13301. For example, the dynamic small window 13302 includes a navigation direction, a distance, and a road indication, so that the user continues to view navigation information. Then, the user switches to the desktop and opens another application in the mobile phone, and the dynamic small window 13302 may continue to be displayed on the display of the mobile phone in a floating manner. It may be seen that, in the navigation process, if the application window of the navigation application returns from a foreground to the background, a key element in the application window of the navigation application may be displayed on the display of the mobile phone in a form of a dynamic small window, so that the user continues to view the navigation information.

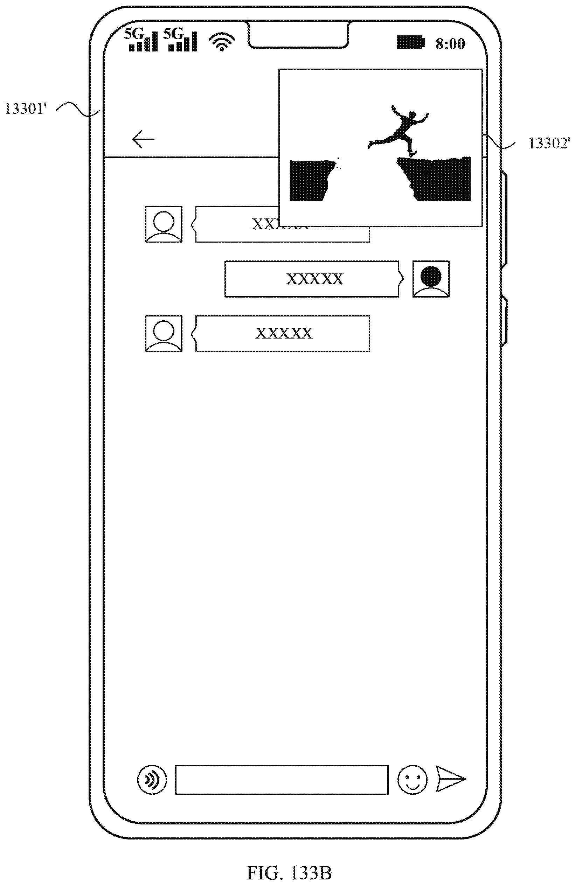

It should be noted that, for the navigation application, the small window element displayed in the dynamic small window may include the navigation direction, the distance, and the road indication. In some other embodiments, the dynamic small window may not include these elements, or may include one or more elements of the navigation direction, the distance, and the road indication, or may include another element of the navigation application, for example, may include a "navigation end" button. This is not specifically limited in this embodiment. In addition, in the foregoing embodiment, an example in which the small window element of the navigation application is recommended by the system is used for description. In some other embodiments, the small window element of the navigation application may also be defined by the application developer. For example, an example in which the DUP capability provided by the system is invoked to extract the small window element is used, if a corresponding DUP configuration file (where the DUP configuration file includes a DUP ID of the small window element) is pre-configured in the mobile phone, the dynamic small window controller of the mobile phone may extract, based on the pre-configured DUP configuration file, an instruction for an element with a specified DUP ID from the application window drawn on the virtual screen. Then, after re-layout is performed on the extracted element based on the found layout file, an element obtained after the re-layout is mapped to the shadow of the home screen, to implement display of a specified small window element in the dynamic small window. Similarly, with reference to FIG. 122B(a) and FIG. 122B(b), as shown in FIG. 133B, after the mobile phone receives the tap operation of the user for the notification message, the mobile phone may display a details interface 13301' corresponding to the notification message, and display a dynamic small window 13302' on the details interface 13301'. For example, the dynamic small window 13302' includes a video element In the video element, a video in the video element 12203' shown in FIG. 122B(a) may continue to be played for the user to continue to view. Then, the user switches to the desktop and opens another application in the mobile phone, and the dynamic small window 13302' may continue to be displayed on the display of the mobile phone in a floating manner

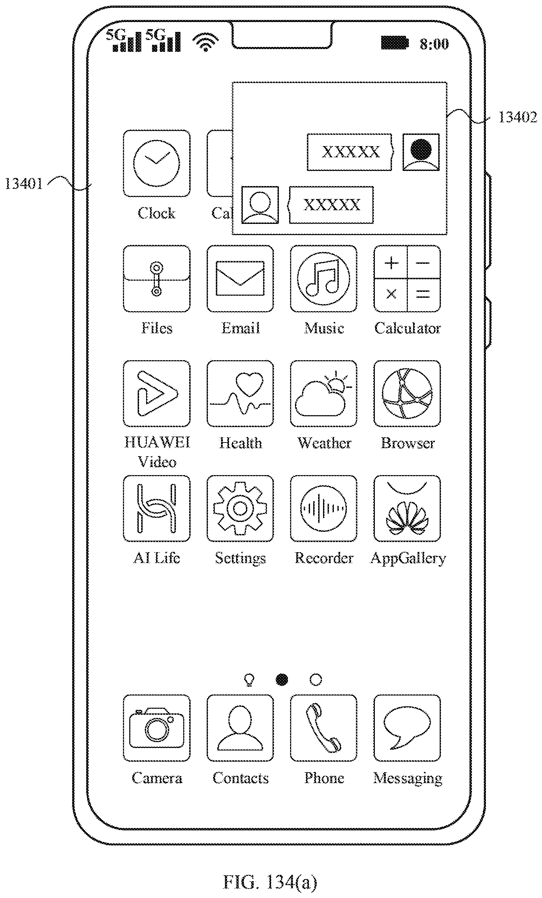

For another example, for a list (list) application interface such as instant messaging, notes, and information, a small window element may be recommended by the system The small window element may be latest N (for example, two or three) messages or pieces of information. In an example, the latest N messages (or pieces of information) may be identified based on a time point of the message (or information). For example, N messages whose time point is closest to a current moment are the latest N messages. Alternatively, the latest N messages (or pieces of information) may also be identified based on a display location of a message (or piece of information) on an interface. For example, N messages starting from the bottom of the interface are the latest N messages. A layout of the small window element may also be recommended by the system. With reference to the examples shown in FIG. 118 and FIG. 123, after the user opens the instant messaging application, the mobile phone may start the instant messaging application, and display the application window of the instant messaging application on the display. For example, the application window includes the chat details page, and the chat details page includes three messages. The user may perform an operation of switching the instant messaging application to the background, for example, perform a slide operation that starts from the lower edge of the display of the mobile phone and that points to the upper edge of the display of the mobile phone. After receiving the operation of switching the application to the background, the mobile phone may trigger the dynamic small window function of the mobile phone. For a specific implementation, refer to the implementation of displaying the dynamic small window corresponding to the navigation application. In this way, in response to the operation of the user, the dynamic small window controller of the mobile phone may extract the small window element, for example, two latest messages on the chat details page, perform re-layout, and display a small window element obtained after the re-layout on the display of the mobile phone in a form of a dynamic small window. For example, in the example shown in FIG. 123, the user performs an upward slide operation starting from the lower edge of the display. After the finger leaves the display of the mobile phone, as shown in FIG. 134(a), the mobile phone may display a desktop 13401, and display a dynamic small window 13402 on the desktop 13401. For example, the dynamic small window 13402 includes two latest messages on the chat details page for the user to continue to view. Then, the user switches a subscreen on the desktop, or opens another application in the mobile phone, and the dynamic small window 13402 may continue to be displayed on the display of the mobile phone in a floating manner.

After the mobile phone displays the dynamic small window on the display of the mobile phone, the method may further include the following S11904 to S11906.

S11904: The mobile phone receives a user operation for the dynamic small window.

S11905: The mobile phone displays a dynamic small window in a form of a medium window.

As described in the foregoing embodiment, after the mobile phone receives the user operation in S11901, the mobile phone may display the dynamic small window on the display of the mobile phone. The dynamic small window is a small window displayed on the display in a floating manner. A dynamic small window in a form of a small window may be the first window in embodiments of this application. In this embodiment, the dynamic small window in the form of the small window may be used by the user to continue to browse key information in an application window that is not displayed on the display. For example, with reference to FIG. 131(a), the user may continue to browse the video on the information details page. For another example, with reference to FIG. 133A(a), the user may continue to browse the navigation information in the navigation application. For another example, with reference to FIG. 133B, the user may continue the video on the video details page. For another example, with reference to FIG. 134(a), the user may continue the message in the instant messaging application.

In this embodiment, the dynamic small window in the form of the small window supports the following user operation. For example, the user operation in S11904 may be an operation 1, and the operation 1 is used to trigger the dynamic small window to change from the form of the small window to the form of the medium window. The operation 1 may be the fourth operation in embodiments of this application. In an example, the operation 1 may be a screen touch gesture operation, for example, a single-tap operation or a double-tap operation for the dynamic small window in the form of the small window. In other words, after the user performs the operation 1 on the dynamic small window in the form of the small window, the dynamic small window changes from the form of the small window to the form of the medium window and is displayed on the display. It should be noted that the dynamic small window in the form of the medium window is also displayed on the display in a floating manner, and after the user switches a page, exits an application, or opens another application, the dynamic small window may continue to be displayed on the display of the mobile phone.

Small window elements included in the dynamic small window in the form of the medium window may be different from small window elements included in the dynamic small window in the form of the small window. In an example, the dynamic small window in the form of the medium window includes more small window elements than the dynamic small window in the form of the small window. For example, the dynamic small window in the form of the small window includes only an element that can be browsed by the user, and the dynamic small window in the form of the medium window includes the element that can be browsed by the user (which is the same as the element in the dynamic small window in the form of the small window) and an element that can be operated by the user. In some embodiments, similar to the specific implementation of displaying the dynamic small window in the form of the small window, the dynamic small window in the form of the medium window may also be displayed on the display of the mobile phone after the mobile phone extracts a small window element from a corresponding application window and performs re-layout. A small window element in the dynamic small window in the form of the medium window and a layout manner may also be recommended by the system or defined by the application developer. A configuration file or a recommendation model used to extract the small window element and a layout file used to perform re-layout on the small window element may also be pre-stored in the mobile phone. A specific implementation is similar to the specific implementation of corresponding content in the dynamic small window in the form of the small window, and details are not described herein again. The dynamic small window in the form of the medium window may be the second window in embodiments of this application.

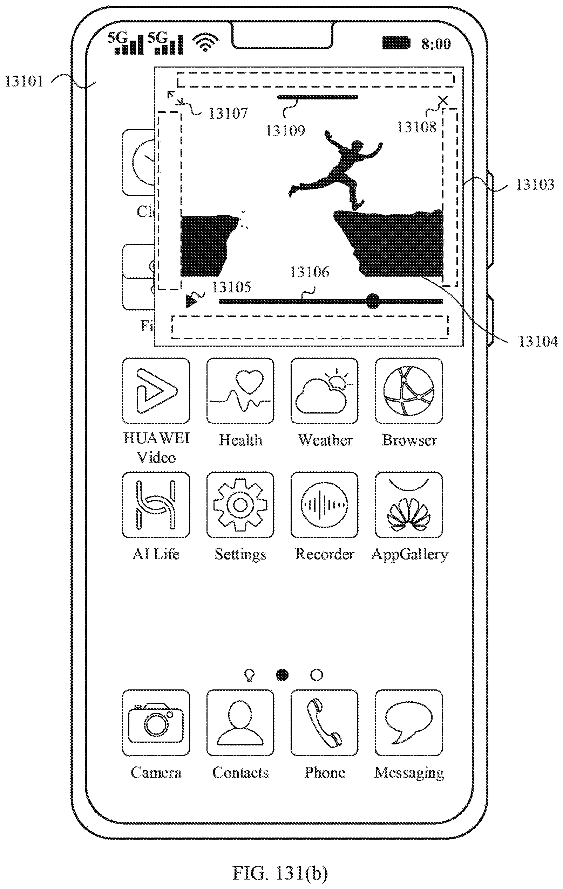

For example, with reference to FIG. 131(a) and FIG. 131(b), the foregoing operation 1 is a tap operation for the dynamic small window in the form of the small window, the small window element in the dynamic small window in the form of the medium window and the layout manner are defined by the application developer, the corresponding configuration file and the layout file are stored in the mobile phone, and the application developer defines a video element, a play/pause button, and a progress bar in the application as the small window element in the dynamic small window in the form of the medium window As shown in FIG. 131(a), the mobile phone displays the dynamic small window 13102 in a form of a small window on the desktop 13101. The mobile phone receives a tap operation of the user for the dynamic small window 13102 in the form of the small window. In response to the tap operation, the mobile phone searches for a configuration file and a layout file that correspond to a dynamic small window in a form of a medium window of the application. The configuration file includes an identifier of an element that needs to be displayed in the dynamic small window in the form of the medium window and that is of the application, for example, an identifier of the video element, an identifier of the play/pause button, and an identifier of the progress bar. The layout file includes configurations such as the identifier and a location of the video element, the identifier and a location of the play/pause button, and the identifier and a location of the progress bar. The mobile phone extracts, from the application window drawn on the virtual screen based on the found configuration file, a small window element that needs to be displayed in the dynamic small window in the form of the medium window. For example, the small window clement is the video element, the play/pause button, and the progress bar. Re-layout is performed on the video element, the play/pause button, and the progress bar based on the found layout file. After the layout is complete, the mobile phone maps a small window element obtained after the re-layout to the shadow of the home screen. In this way, as shown in FIG. 131(b), the mobile phone may display a dynamic small window 13103 in a form of a medium window on the desktop 13101. The dynamic small window 13103 in the form of the medium window includes a video component 13104, a play/pause button 13105, and a progress bar 13106.

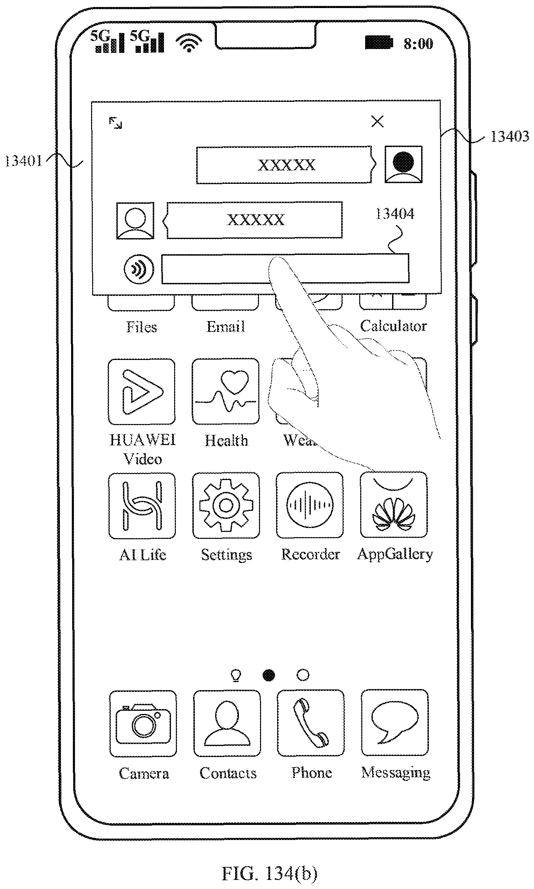

Similarly, with reference to FIG. 133A(a) and FIG. 133A(b), as shown in FIG. 133A(a), the mobile phone displays the dynamic small window 13302 in a form of a small window on the details interface 13301 corresponding to the notification message. After receiving an operation 1 of the user for the dynamic small window 13302 in the form of the small window, for example, a tap operation, the mobile phone may search for a configuration file and a layout file that correspond to a dynamic small window in a form of a medium window of the application. Then, the mobile phone extracts, based on the configuration file, a small window element that needs to be displayed in the dynamic small window in the form of the medium window, performs re-layout on the small window element, and then maps a small window element obtained after the re-layout to the shadow of the home screen. In this way, as shown in FIG. 133A(b), the mobile phone may display a dynamic small window 13303 in a form of a medium window on the details interface 13301 corresponding to the notification message. The dynamic small window 13303 in the form of the medium window includes a navigation direction, a distance, a road indication, and a navigation end button. With reference to FIG. 134(a) to FIG. 134(c), as shown in FIG. 134(a), the mobile phone displays the dynamic small window 13402 in a form of a small window on the desktop 13401. After the mobile phone receives an operation 1 of the user for the dynamic small window 13402 in the form of the small window, for example, a tap operation, as shown in FIG. 134(b), the mobile phone may display a dynamic small window 13403 in a form of a medium window on the desktop 13401. The dynamic small window 13403 in the form of the medium window includes two latest messages on the chat details page, a voice button, and an input box 13404.

It should be noted that, similar to the description of the layout file in the corresponding description of the dynamic small window in the form of the small window, there may be one or more layout files of the dynamic small window in the form of the medium window corresponding to a same application (or a same interface of an application, or applications of a same type). Similarly, there may also be one or more configuration files (or recommendation models) corresponding to the dynamic small window in the form of the medium window. It may be understood that, for different configuration files (or recommendation models), the mobile phone may extract different small window elements displayed in the dynamic small window in the form of the medium window. For a same small window element, display effects obtained after the mobile phone performs re-layout based on different layout files are also different.

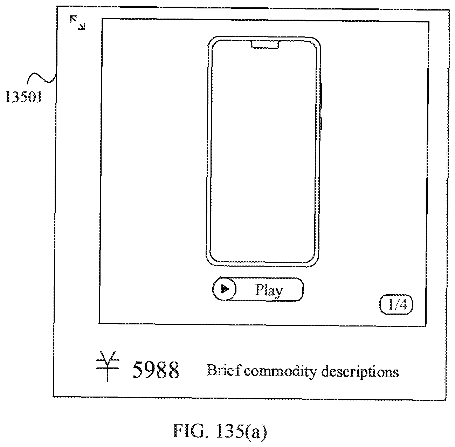

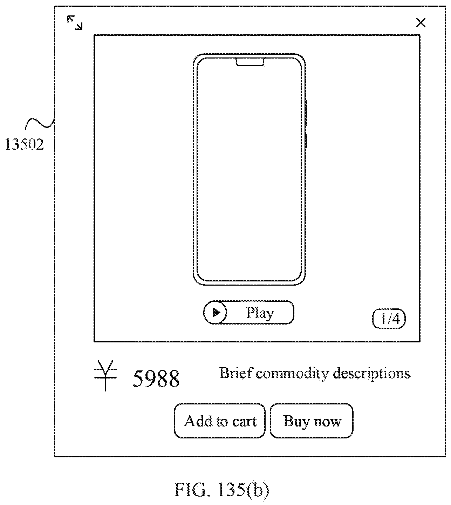

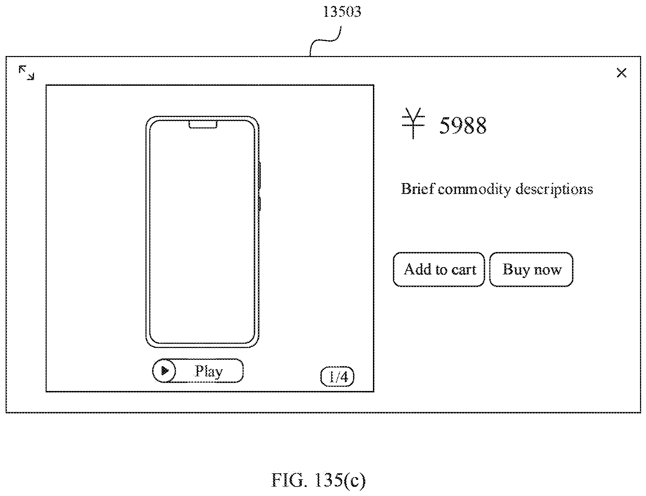

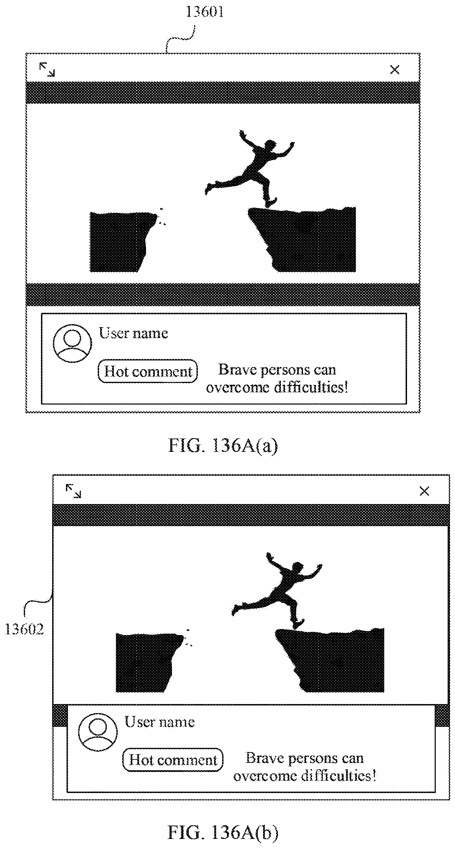

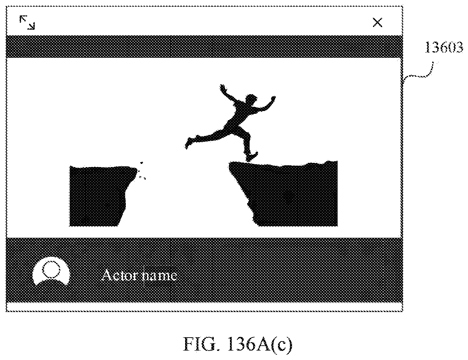

For example, with reference to FIG. 135(a) to FIG. 135(c), in a shopping application, configuration files corresponding to a dynamic small window in a form of a medium window include a configuration file a1 and a configuration file a2, and corresponding layout files are respectively a layout file b1 and a layout file b2. The configuration file a1 includes an identifier of a commodity preview, an identifier of commodity price, and an identifier of brief commodity descriptions. The configuration file a2 includes an identifier of a commodity preview, an identifier of commodity price, an identifier of brief commodity descriptions, an identifier of an "Add to cart" button, and an identifier of a "Buy now" button. As shown in FIG. 135(a), the mobile phone may display a dynamic small window 13501 in a form of a medium window based on the configuration file a1 and the layout file b1. As shown in FIG. 135(b), the mobile phone may display a dynamic small window 13502 in a form of a medium window based on the configuration file a2 and the layout file b2. For another example, a same small window element, for example, includes a commodity preview, commodity price, brief commodity descriptions, an "Add to cart" button, and a "Buy now" button. The mobile phone includes two different layout files, for example, the layout file b2 and a layout file b3. As shown in FIG. 135(c), the mobile phone may display, based on the layout file b3, a dynamic small window 13503 in a form of a medium window. It may be seen that a layout manner is different from a layout manner of the dynamic small window 13502 shown in FIG. 135(b). For another example, with reference to FIG. 136A(a) to FIG. 136A(c), in a video application, there are two configuration files corresponding to a dynamic small window in a form of a medium window. As shown in FIG. 136A(a), the mobile phone may display a dynamic small window 13601 in a form of a medium window based on one configuration file and a corresponding layout file. As shown in FIG. 136A(c), the mobile phone may display a dynamic small window 13603 in a form of a medium window based on the other configuration file and a corresponding layout file. For another example, for a same small window element, the mobile phone includes two different layout files. In this case, the mobile phone may display, based on the different layout files, the dynamic small window 13601 in the form of the medium window shown in FIG. 136A(a), and a dynamic small window 13602 shown in FIG. 136A(b), it may be seen that a layout manner of the dynamic small window 13601 is different from a layout manner of the dynamic small window 13602.

It should be noted that, when there are a plurality of layout files that correspond to a same application (or a same interface of an application, or applications of a same type) and that are of the dynamic small window in the form of the medium window, the mobile phone may select any layout file from the plurality of layout files, and performs re-layout on the extracted small window element. Alternatively, the system developer may provide a plurality of layout files, and the application developer selects one layout file from the plurality of layout files. In this way, the mobile phone may select a corresponding layout file from the plurality of layout files based on a designation of the application developer, and performs re-layout on the extracted small window element Similarly, when there are a plurality of configuration files (or recommendation models) corresponding to the dynamic small window in the form of the medium window, the mobile phone may select any one of the plurality of configuration files (or recommendation models), or select a corresponding configuration file (or recommendation model) based on a designation of the application developer, to extract the small window element.

In addition, in some embodiments, in addition to the small window element, the dynamic small window in the form of the medium window may further include a close button and a scale-up button. The close button is used to close the dynamic small window, and the scale-up button is used to scale up the dynamic small window, that is, display an application window in a form of a full-screen large window. For example, with reference to FIG. 131(a) and FIG. 131(b), as shown in FIG. 131(b), in addition to the small window element, the dynamic small window 13103 in the form of the medium window may further include a close button 13108 and a scale-up button 13107. After the mobile phone receives an operation of the user for the close button 13108, for example, a tap operation, the mobile phone may close the dynamic small window 13103, and display only the desktop 13101. After the mobile phone receives an operation of the user for the scale-up button 13107, for example, a tap operation, the mobile phone may display an application window of a corresponding application, for example, the application window 12101 shown in FIG. 121(a). The dynamic small window in the form of the medium window may further include a move button. The user presses and moves a finger at the move button, to drag the dynamic small window in the form of the medium window. For example, with reference to FIG. 131(a) and FIG. 131(b), as shown in FIG. 131(b), the dynamic small window 13103 in the form of the medium window may further include a move button 13109. After the mobile phone receives an operation of pressing the move button 13109 and moving the finger by the user, the mobile phone moves the dynamic small window 13103 on the display of the mobile phone.

In some embodiments, after the user performs the foregoing operation 1 on the dynamic small window in the form of the small window, to enable the mobile phone to display the dynamic small window in the form of the medium window on the display, if the user does not operate the mobile phone for X seconds (s), for example, 3 seconds, the mobile phone may automatically switch the dynamic small window in the form of the medium window to the dynamic small window in the form of the small window for displaying. For example, with reference to FIG. 131(a) and FIG. 131(b), as shown in FIG. 131(b), after the mobile phone displays the dynamic small window 13103 in the form of the medium window, if the user does not operate the mobile phone for 3s, the mobile phone may display the dynamic small window 13102 in the form of the small window as shown in FIG. 131(a). Alternatively, after the mobile phone displays the dynamic small window in the form of the medium window on the display, if the mobile phone receives an operation of the user for a blank region on the display of the mobile phone, namely, a region in which no interface element is displayed, for example, a tap operation, the mobile phone may also switch the dynamic small window in the form of the medium window to the dynamic small window in the form of the small window for displaying. Alternatively, after the mobile phone displays the dynamic small window in the form of the medium window on the display, if the mobile phone receives an operation of the user for an edge region (where there is no operable element, for example, a dashed-line box region shown in FIG. 131(b)) of the dynamic small window in the form of the medium window, for example, for a tap operation or a double-tap operation, the mobile phone may also switch the dynamic small window in the form of the medium window to the dynamic small window in the form of the small window for displaying.

In addition, with reference to the foregoing description of FIG. 126 to FIG. 128, it may be learned that in this embodiment, a size of a dynamic small window in a form of a small window may be set based on the grid into which the display is divided. Similarly, a size of a dynamic small window in a form of a medium window may also be set based on the grid into which the display is divided. For example, the size may be set by the system developer or the application developer. For example, still with reference to FIG. 126 to FIG. 128, the example in which the aspect ratio of the horizontal dynamic small window is 16:10 and the aspect ratio of the vertical dynamic small window is 10:16 is used, FIG. 126 to FIG. 128 respectively show display effects of the horizontal dynamic small window in a form of a medium window and a vertical dynamic small window in a form of a medium window when the display of the mobile phone is vertically divided into four grids, eight grids, and 12 grids.

It may be seen that, with reference to FIG. 126, as shown in (b) in FIG. 126, for the horizontal dynamic small window in the form of the medium window, the system developer or the application developer may set a width of the dynamic small window in the form of the medium window to 3.5 grids. Based on the aspect ratio 16:10 of the horizontal dynamic small window, the mobile phone may display, on the display of the mobile phone, a dynamic small window 12603 that is in the form of the medium window and that has a width of 3.5 grids based on the four grids obtained by dividing the display of the mobile phone. For the vertical dynamic small window in the form of the medium window, the system developer or the application developer can set a height of the dynamic small window in the form of the medium window to 3.5 grids. Based on the aspect ratio 10:16 of the vertical dynamic small window, the mobile phone may display, on the display of the mobile phone, a dynamic small window 12604 that is in the form of the medium window and that has a height of 3.5 grids based on the four grids obtained by dividing the display of the mobile phone.

Similarly, with reference to FIG. 127, as shown in (b) in FIG. 127, for the horizontal dynamic small window in the form of the medium window, the system developer or the application developer may set a width of the dynamic small window in the form of the medium window to 5 grids. Based on the aspect ratio 16:10 of the horizontal dynamic small window, the mobile phone may display, on the display of the mobile phone, a dynamic small window 12703 that is in the form of the medium window and that has a width of 5 grids based on the eight grids obtained by dividing the display of the mobile phone. For the vertical dynamic small window in the form of the medium window, the system developer or the application developer can set a height of the dynamic small window in the form of the medium window to 5 grids. Based on the aspect ratio 10:16 of the vertical dynamic small window, the mobile phone may display, on the display of the mobile phone, a dynamic small window 12704 that is in the form of the medium window and that has a height of 5 grids based on the eight grids obtained by dividing the display of the mobile phone.

With reference to FIG. 128, as shown in (b) in FIG. 128, for the horizontal dynamic small window in the form of the medium window, the system developer or the application developer may set a width of the dynamic small window in the form of the medium window to 5 grids. Based on the aspect ratio 16:10 of the horizontal dynamic small window, the mobile phone may display, on the display of the mobile phone, a dynamic small window 12803 that is in the form of the medium window and that has a width of 5 grids based on the 12 grids obtained by dividing the display of the mobile phone. For the vertical dynamic small window in the form of the medium window, the system developer or the application developer can set a height of the dynamic small window in the form of the medium window to 5 grids. Based on the aspect ratio 10:16 of the vertical dynamic small window, the mobile phone may display, on the display of the mobile phone, a dynamic small window 12804 that is in the form of the medium window and that has a height of three grids based on the 12 grids obtained by dividing the display of the mobile phone.

In addition, in this embodiment, a display location of the dynamic small window in the form of the medium window on the display may also be any location on the display. In an example, the display location of the dynamic small window in the form of the medium window may be predefined. For example, the display location of the dynamic small window in the form of the medium window may be predefined as a location that is away from the right edge of the display at a predetermined distance 3 and away from the upper edge of the display at a predetermined distance 4. The predetermined distance 3 and the predetermined distance 4 may also be predefined. In this way, the mobile phone may display the dynamic small window in the form of the medium window on the display of the mobile phone based on the predefined display location and the size. For example, based on the predetermined display location, the dynamic small window in the form of the medium window may be automatically adsorbed to the edge of the display of the mobile phone, which is similar to the display effect of the dynamic small window 12901 in the form of the small window in FIG. 129.

As described in the foregoing embodiment, the dynamic small window in the form of the medium window may include an element that can be operated by the user, for example, the play/pause button 13105 and the progress bar 13106 shown in FIG. 131(b), for another example, the navigation end button shown in FIG. 133A(b), and for another example, the voice button and the input box 13404 shown in FIG. 134(b). In this embodiment, the user may perform an operation on an operable element in the dynamic small window in the form of the medium window, and the mobile phone may correspondingly respond based on the operation of the user.

In an example, a specific implementation in which the mobile phone correspondingly responds based on an operation of the user for the element in the dynamic small window in the form of the medium window in may be as follows: After the mobile phone receives a corresponding user operation, for example, the foregoing operation 1, extracts, from the application window on the virtual screen, the small window element that needs to be displayed in the dynamic small window in the form of the medium window, and performs re-layout on the small window element, a correspondence between a layout location of the small window element in the dynamic small window in the form of the medium window and a location of a corresponding element in an original application window may be recorded. In this way, after receiving an operation of the user for a small window element in the dynamic small window in the form of the medium window, the mobile phone may determine, based on a recorded correspondence, a corresponding location of the small window element in an original application window, and injects the operation of the user to an element at the location in the original application window. Then, the mobile phone may correspondingly respond. In addition, the mobile phone may further update, based on a response result, a status of a corresponding small window element in the dynamic small window in the form of the medium window.

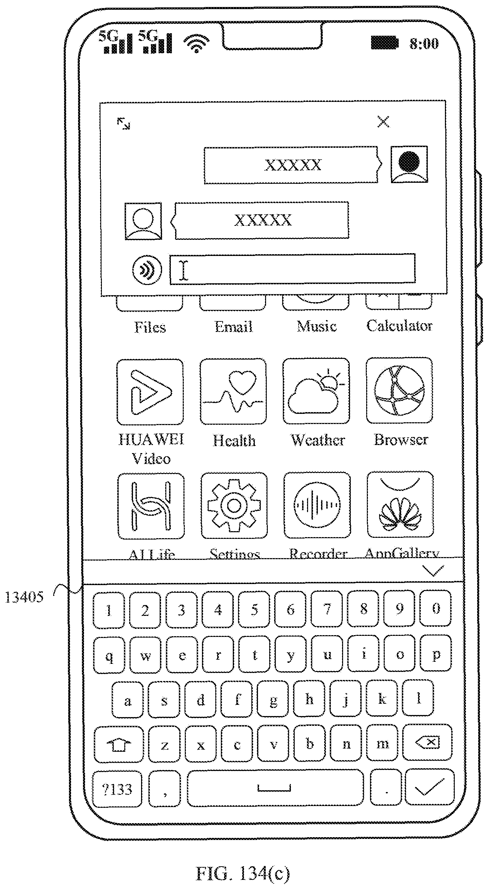

For example, still with reference to FIG. 131(a) and FIG. 131(b), after the play/pause button 13105 is extracted from the application window on the virtual screen and re-layout is performed on the play/pause button 13105, a correspondence between a layout location of the play/pause button 13105 in the dynamic small window and a location of a corresponding play/pause button in an original application window is recorded. As shown in FIG. 131(b), the mobile phone receives an operation of the user for the play/pause button 13105, for example, a tap operation. The mobile phone determines, based on the recorded correspondence, a corresponding location of the play/pause button 13105 in the original application window, and injects the tap operation of the user to an element corresponding to the location, namely, the play/pause button of the application window. In this way, the mobile phone may pause playing of a video in a video element, and update a status of a corresponding video element in the dynamic small window in the form of the medium window, that is, pause playing of the video. For another example, still with reference to FIG. 134(a) to FIG. 134(c), after the input box 13404 is extracted from the application window on the virtual screen and re-layout is performed on the input box 13404, a correspondence between a layout location of the input box 13404 in the dynamic small window and a location of a corresponding input box in an original application window is recorded. As shown in FIG. 134(b), the mobile phone receives an operation of the user for the input box 13404, for example, a tap operation. The mobile phone determines, based on the recorded correspondence, a corresponding location of the input box 13404 in the original application window, and injects the tap operation of the user to an clement corresponding to the location, namely, the input box of the application window. In this way, as shown in FIG. 134(c), the mobile phone may display an input method interface 13405 on the display of the mobile phone. The mobile phone may further update a status of the input box in the dynamic small window in the form of the medium window, for example, display a cursor in the input box. Then, the user may perform an operation on the input method interface 13405, to implement input in the dynamic small window in the form of the medium window.

In the foregoing example, an example in which the operable element in the dynamic small window in the form of the medium window is operated to implement corresponding control is used for description. In some other embodiments, for a scenario in which a video is played in a dynamic small window in a form of a medium window, this embodiment may also support in performing a corresponding gesture operation in the dynamic small window, to implement control on the played video. For example, when the user slides a finger in the dynamic small window from bottom to top, the mobile phone may increase volume of the video played in the dynamic small window. When the user slides a finger in the dynamic small window from top to bottom, the mobile phone may decrease volume of the video played in the dynamic small window. When the user slides a finger in the dynamic small window from left to right, the mobile phone may perform a fast forward operation on the video played in the dynamic small window. When the user slides a finger in the dynamic small window from right to left, the mobile phone may perform a rewind operation on the video played in the dynamic small window. Specifically, after receiving a corresponding gesture operation, the mobile phone may inject the gesture operation to a video element in an original application window, so that the mobile phone correspondingly responds based on the injected gesture operation, and updates and displays a response result in the dynamic small window in the form of the medium window.

in some embodiments, in the foregoing example, an example in which after the operation 1 is performed on the dynamic small window in the form of the small window, the mobile phone changes the dynamic small window in the form of the small window to the dynamic small window in the form of the medium window for displaying is used for description. In some other embodiments, after the mobile phone receives an operation 2 of the user for the dynamic small window in the form of the small window, the mobile phone may further display a close button and a scale-up button on the dynamic small window in the form of the small window. Functions of the close button and the scale-up button are the same as functions of the close button and the scale-up button in the dynamic small window in the form of the medium window. The close button is used to close the dynamic small window, and the scale-up button is used to scale up the dynamic small window, that is, the application window is displayed in a form of a full-screen large window. It should be noted that the operation 2 is specifically an operation different from the operation 1. For example, the operation 1 is a tap operation, and the operation 2 may be a double-tap operation. For another example, the operation 1 is a double-tap operation, and the operation 2 is a tap operation. Specific implementation forms of the operation 1 and the operation 2 are not specifically limited herein in this embodiment

It should be noted that, in the foregoing embodiment, an example in which the dynamic small window in the form of the medium window and the dynamic small window in the form of the small window include different small window elements is used for description. In some other embodiments, the dynamic small window in the form of the medium window and the dynamic small window in the form of the small window may include a same small window element. A difference lies in that the dynamic small window in the form of the medium window further includes one or more of the close button, the scale-up button, and the move button. In addition, in a scenario in which the small window element in the dynamic small window in the form of the medium window is the same as or different from the small window element in the dynamic small window in the form of the small window, within preset duration after the user triggers switching from the dynamic small window displayed in the form of the small window to the dynamic small window in the form of the medium window, one or more of the close button, the scale-up button, and the move button are displayed. After preset duration, these buttons may be hidden, and only a corresponding small window element is displayed in a dynamic small window in the form of the medium window.

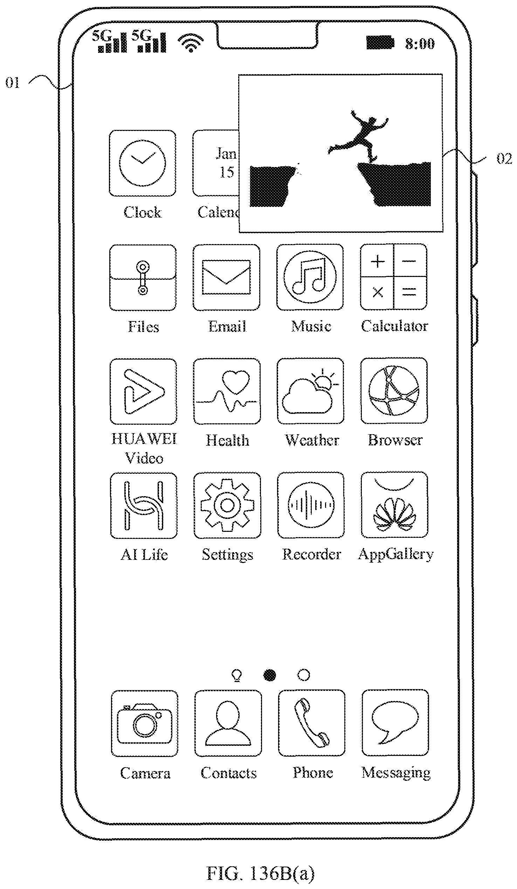

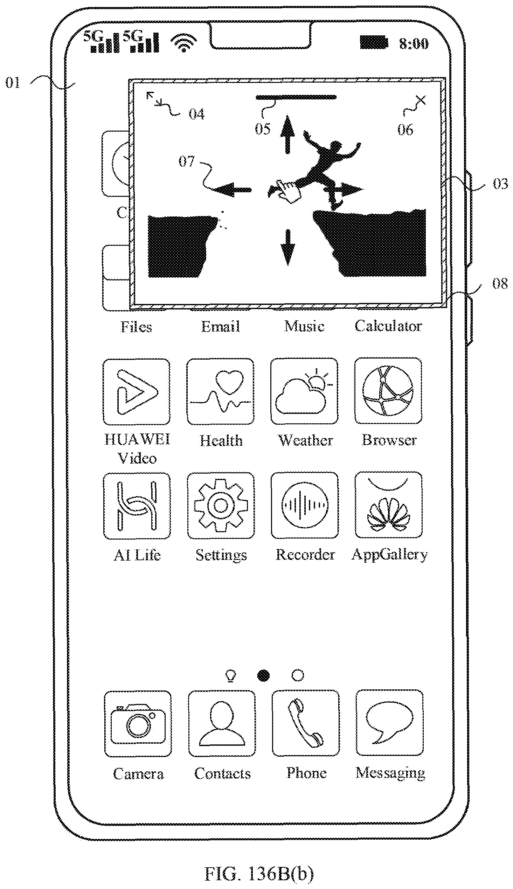

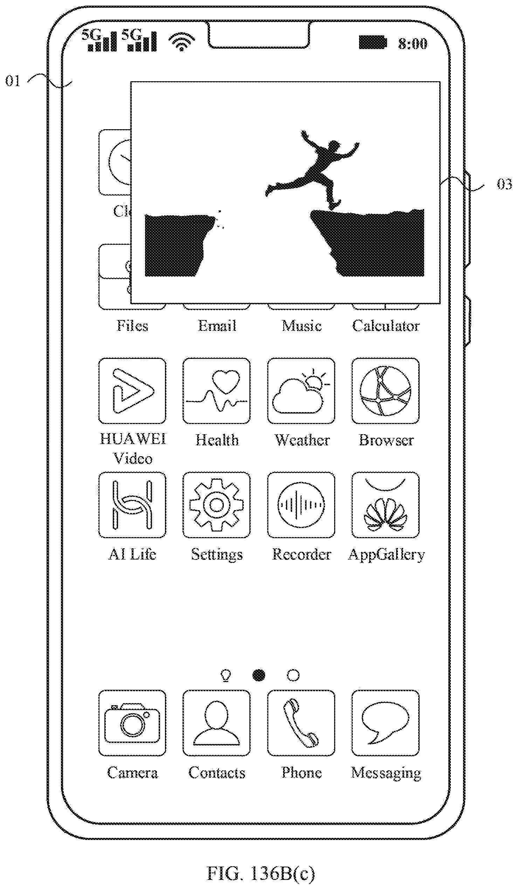

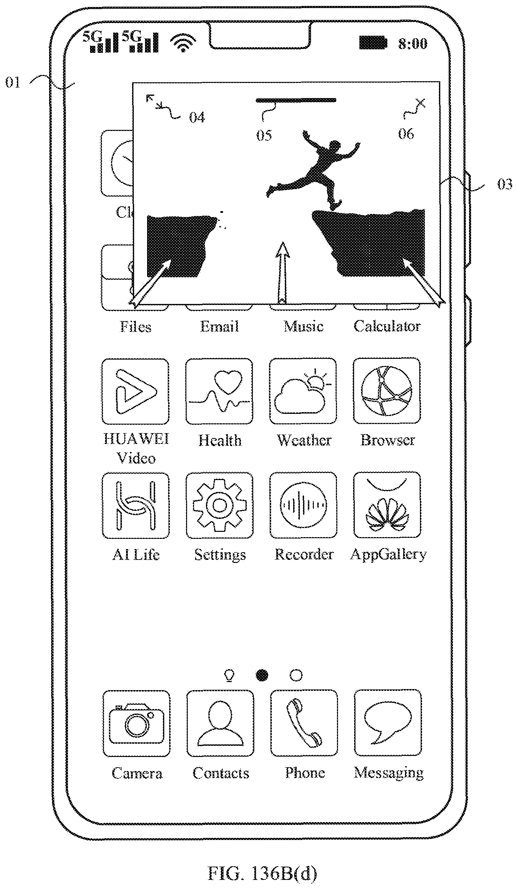

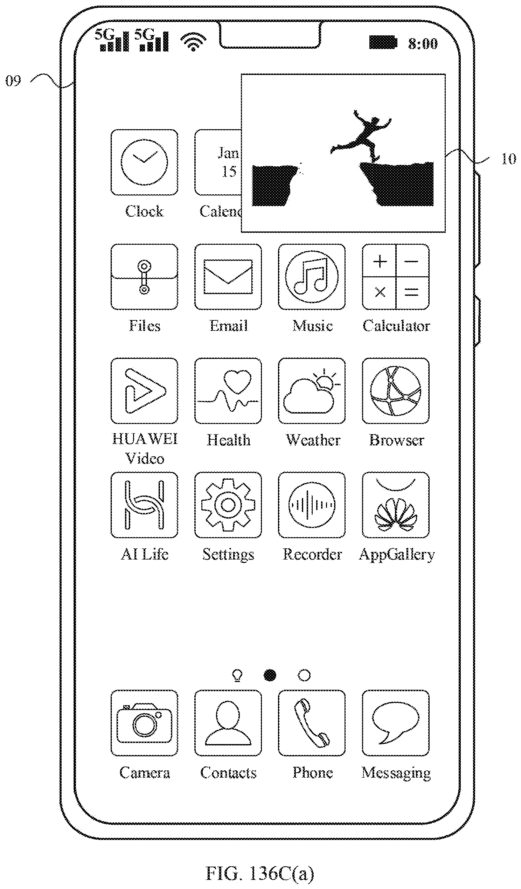

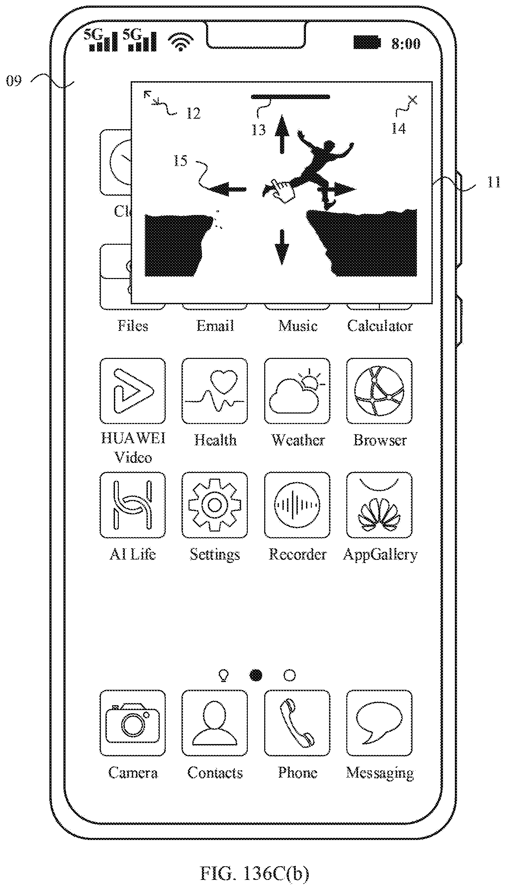

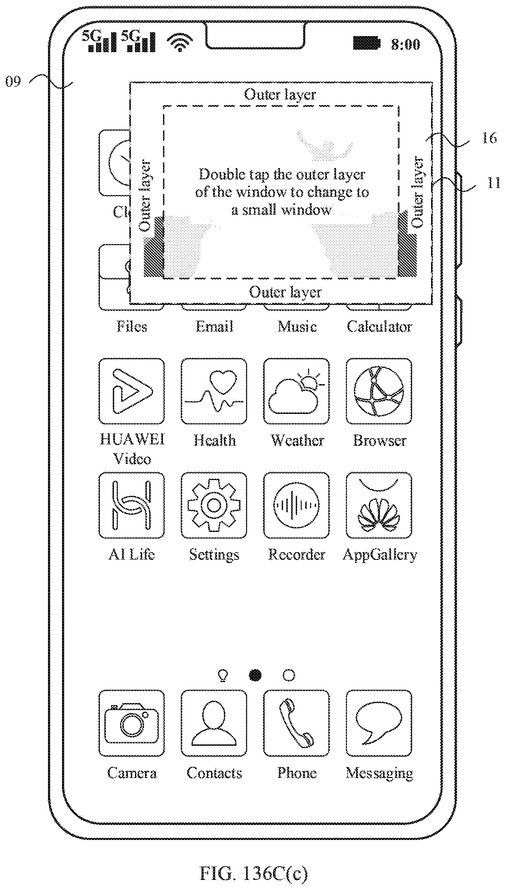

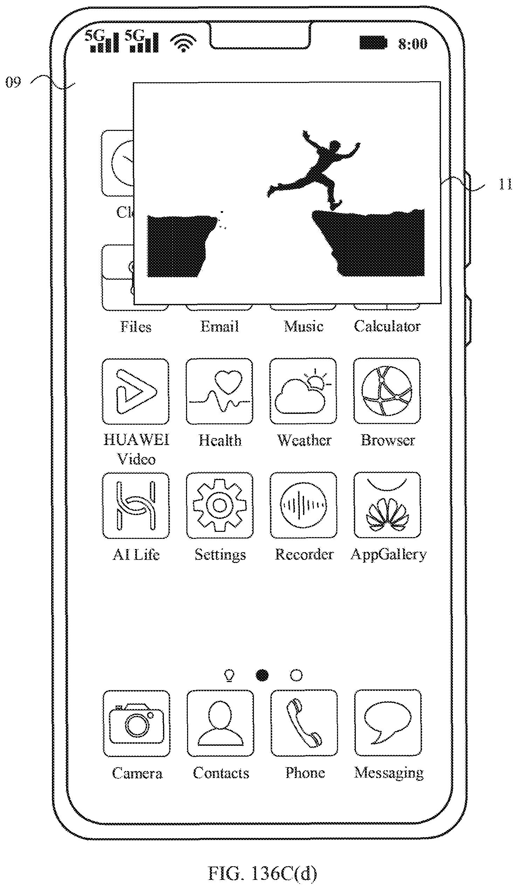

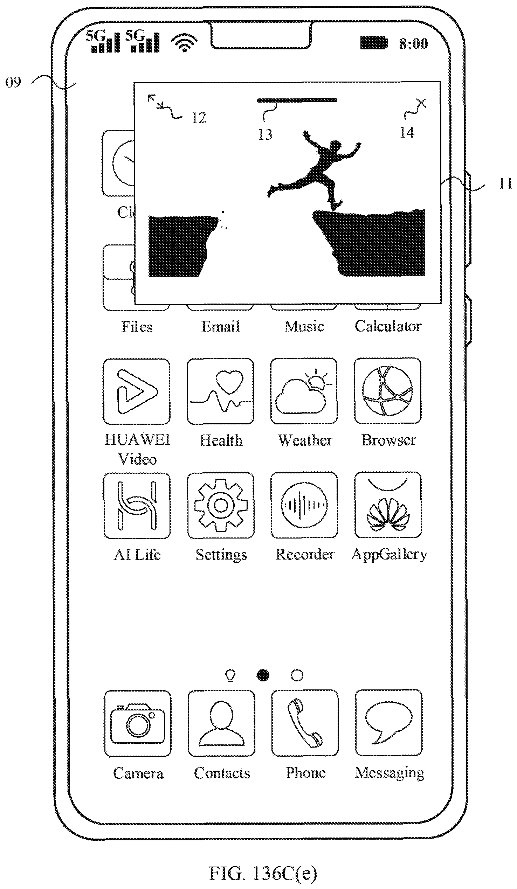

For ease of understanding, with reference to FIG. 136B(a) to FIG. 136B(d) and FIG. 136C(a) to FIG. 136C(e), an example in which a small window element in a dynamic small window in a form of a medium window is the same as a small window element in a dynamic small window in a form of a small window is used below to describe a process in which the dynamic small window in the form of the small window changes to the dynamic small window in the form of the medium window.

With reference to FIG. 136B(a) to FIG. 136B(d), a dynamic small window in a form of a small window is tapped, and the mobile phone displays a dynamic small window in a form of a medium window. As shown in FIG. 136B(a), the mobile phone displays a desktop 01, and displays a dynamic small window 02 in a form of a small window on the desktop 01. The mobile phone receives a tap operation of the user for the dynamic small window in the form of the small window. In response to the tap operation, as shown in FIG. 136B(b), the mobile phone displays a dynamic small window 03 in a form of a medium window on the desktop 01. The dynamic small window 03 in the form of the medium window includes a close button 06, a scale-up button 04, and a move button 05. The dynamic small window 03 in the form of the medium window further includes an operation prompt 07, used to prompt the user that an upward slide operation, a downward slide operation, a leftward slide operation, and a rightward slide operation may be performed on the dynamic small window 03, to implement an operation for the dynamic small window 03. For example, a video is played in the dynamic small window 03. When the user slides a finger upward in the dynamic small window 03, the mobile phone may increase volume of the video played in the dynamic small window 03. When the user slides a finger downward in the dynamic small window 03, the mobile phone may decrease volume of the video played in the dynamic small window 03. When the user slides a finger rightward in the dynamic small window 03, the mobile phone may perform a fast forward operation on the video played in the dynamic small window 03. When the user slides a finger leftward in the dynamic small window 03, the mobile phone may perform a rewind operation on the video played in the dynamic small window 03. The mobile phone may further display prompt information 08 around the dynamic small window 03 in the form of the medium window, for example, display a color (for example, blue) stroke on an outer circle of the dynamic small window 03. Then, if the user does not perform any operation after preset duration, for example, 3s, the close button 06, the scale-up button 04, and the move button 05 disappear and are no longer displayed on the dynamic small window 03 in the form of the medium window, and the operation prompt 07 and the prompt information 08 are no longer displayed. As shown in FIG. 136B(c), the mobile phone plays only the video in the dynamic small window 03 in the form of the medium window. After the mobile phone plays only the video in the dynamic small window 03 in the form of the medium window, if the user performs a tap operation on the dynamic small window 03 in the form of the medium window, as shown in FIG. 136B(d), the mobile phone may redisplay the close button 06, the scale-up button 04, and the move button 05 on the dynamic small window 03 in the form of the medium window on the desktop 01, and may further redisplay the prompt information 08 around the dynamic small window 03 in the form of the medium window. When the mobile phone displays the dynamic small window 03 shown in FIG. 136B(d), ifno user operation is received within preset duration, for example, 3s, only the video may be played in the dynamic small window 03 in the form of the medium window, as shown in FIG. 136B(c). When the mobile phone displays the dynamic small window 03 shown in FIG. 136B(d), if the mobile phone receives an operation (the operation may be the fifth operation in embodiments of this application) from the lower left corner, the lower right corner, or a bottom edge of the dynamic small window 03 in the form of the medium window to interior of the dynamic small window 03 from the user, as shown in FIG. 136B(a), the mobile phone may redisplay the dynamic small window 02 in the form of the small window. It should be noted that the dynamic small window in the form of the medium window includes the operation prompt 07, and the operation prompt 07 may be displayed only when the dynamic small window in the form of the medium window is displayed for the first time, and is not displayed when the dynamic small window in the form of the medium window is not displayed for the first time.

With reference to FIG. 136C(a) to FIG. 136C(e), a dynamic small window in a form of a small window is double tapped, and the mobile phone displays a dynamic small window in a form of a medium window As shown in FIG. 136C(a), the mobile phone displays a desktop 09, and displays a dynamic small window 10 in a form of a small window on the desktop 09. The mobile phone receives a double-tap operation of the user for the dynamic small window in the form of the small window. In response to the double-tap operation, as shown in FIG. 136C(b), the mobile phone displays a dynamic small window 11 in a form of a medium window on the desktop 09. The dynamic small window 11 in the form of the medium window includes a close button 14, a scale-up button 12, and a move button 13. The dynamic small window 11 in the form of the medium window further includes an operation prompt 15, used to prompt the user that an upward slide operation, a downward slide operation, a leftward slide operation, and a rightward slide operation may be performed on the dynamic small window 11, to implement an operation for the dynamic small window 11. Then, if the user does not perform any operation after preset duration, for example, 3s, the close button 14, the scale-up button 12, and the move button 13 disappear and are no longer displayed on the dynamic small window 11 in the form of the medium window, and the operation prompt 15 is no longer displayed. As shown in FIG. 136C(c), the mobile phone displays an operation prompt 16 on the dynamic small window 11 in the form of the medium window. The operation prompt 16 is used to prompt the user to double tap an outer layer of the dynamic small window 11, may trigger the mobile phone to display the dynamic small window in the form of the small window, and shows a region in which the outer layer is located. After the mobile phone displays the dynamic small window 11 in the form of the medium window shown in FIG. 136C(c), if the user does not perform any operation after preset duration, for example, 3s, as shown in FIG. 136C(d), the mobile phone plays only a video in the dynamic small window 11 in the form of the medium window After the mobile phone plays only the video in the dynamic small window 11 in the form of the medium window, if the user performs a tap operation on the dynamic small window 11 in the form of the medium window, as shown in FIG. 136C(e), the mobile phone may redisplay the close button 14, the scale-up button 12, and the move button 13 on the dynamic small window 11 in the form of the medium window on the desktop 09. When the mobile phone displays the dynamic small window 11 shown in FIG. 136C(c), if no user operation is received within preset duration, for example, 3s, only the video may be played in the dynamic small window 11 in the form of the medium window, as shown in FIG. 136C(d). When the mobile phone displays the dynamic small window 11 shown in FIG. 136C(e) or FIG. 136C(d), if the mobile phone receives the double-tap operation (where the operation may be the fifth operation in embodiments of this application) of the user for the outer layer of the dynamic small window 11 in the form of the medium window, as shown in FIG. 136C(a), the mobile phone may redisplay the dynamic small window 10 in the form of the small window. It should be noted that the dynamic small window in the form of the medium window includes the operation prompt 15 and the operation prompt 16. The operation prompt 15 and the operation prompt 16 may be displayed only when the dynamic small window in the form of the medium window is displayed for the first time, and are not displayed when the dynamic small window in the form of the medium window is not displayed for the first time.

S11906: The mobile phone receives a user operation of dragging the dynamic small window, and moves the dynamic small window.

After the mobile phone displays the dynamic small window in the form of the small window or the dynamic small window in the form of the medium window, and after receiving the user operation of dragging the dynamic small window by the user, the mobile phone may display, on the display of the mobile phone, an animation in which the dynamic small window moves. The user operation of dragging the dynamic small window may be a screen touch gesture operation. For example, the screen touch gesture operation may be an operation of pressing and moving the dynamic small window. To be specific, the user presses the dynamic small window and moves the finger, and may drag the dynamic small window on the display of the mobile phone.

in some embodiments, after the user presses the dynamic small window and moves the finger, to move the dynamic small window on the display, if the user releases the finger, the mobile phone may automatically adsorb and display the dynamic small window on the edge of the display based on a location of the dynamic small window on the display after the user releases the finger. For example, with reference to FIG. 129, the dynamic small window is a dynamic small window in a form of a small window, and the user operation of dragging the dynamic small window is an operation of pressing and moving the dynamic small window. As shown in FIG. 129, after the user performs the user operation in S11901, the mobile phone may display the dynamic small window 12901 in the upper right corner of the display of the mobile phone. Then, after the mobile phone receives the operation of pressing and moving the dynamic small window 12901 by the user, the mobile phone may display a moving animation of the dynamic small window on the display of the mobile phone. After the dynamic small window is dragged, if the user releases the finger in a range close to a movable location 1 shown in FIG. 129, the mobile phone may automatically adsorb and display the dynamic small window 12901 at a location shown in the movable location 1. Similarly, if the user releases the finger in a range close to a movable location 2 shown in FIG. 129, the mobile phone may automatically adsorb and display the dynamic small window 12901 at a location shown in the movable location 2. If the user releases the finger in a range close to a movable location 3 shown in FIG. 129, the mobile phone may automatically adsorb and display the dynamic small window 12901 at a location shown in the movable location 3. Similarly, the dynamic small window in the form of the medium window may also move on the display of the mobile phone in response to the drag operation of the user. For example, the user may press and move the finger at a move button of the dynamic small window in the form of the medium window, for example, the move button 13109 shown in FIG. 131(b), to trigger movement of the dynamic small window in the form of the medium window on the display of the mobile phone. After the user releases the finger, the mobile phone may also adsorb the dynamic small window in the form of the medium window to the edge of the display based on a location of the dynamic small window in the form of the medium window on the display when the user releases the finger.

In some other embodiments, after the mobile phone displays a dynamic small window (for example, a dynamic small window in a form of a small window or a dynamic small window in a form of a medium window), the user may trigger, by performing a corresponding operation, the mobile phone to display a multi-task interface or a split-screen interface. On the multi-task interface or the split-screen interface, after the user presses the dynamic small window and moves the finger, to enable the dynamic small window to move on the display, if the user stops moving the finger on an application window (the application window may be the application window of the second application in embodiments of this application) on the multi-task interface or the split-screen interface, when the dynamic small window hovers over the application window, the mobile phone may scale up the application window and display a scaled-up application window on the display of the mobile phone.

Further, if the displayed application window is a window of an application such as a memo, a document editor, a file manager, or an instant messaging application, the mobile phone may further display a prompt to prompt the user whether to insert the dynamic small window into the application window. If an operation of selecting insertion by the user (for example, the operation may be the drag release operation in embodiments of this application) is received, the dynamic small window may be converted into a resource file (for example, a picture, a video, or a link), and then inserted into the application window. After the dynamic small window is converted into the resource file and inserted into the application window, the dynamic small window may continue to be displayed on the display of the mobile phone in a floating manner, or may be automatically closed. If an operation of selecting no insertion by the user is received, the dynamic small window may continue to be displayed on the display of the mobile phone in a floating manner. If the displayed application window is not the window of the foregoing application, after the user releases the finger, the dynamic small window may continue to be displayed on the display of the mobile phone in a floating manner.

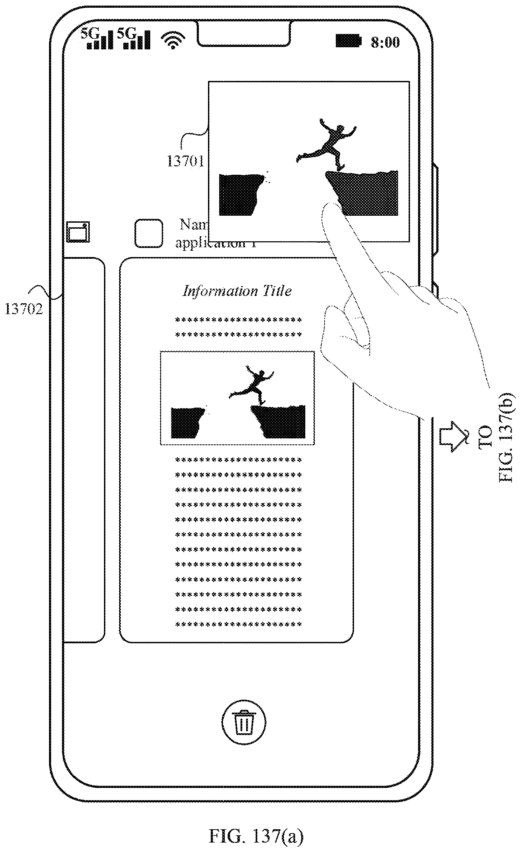

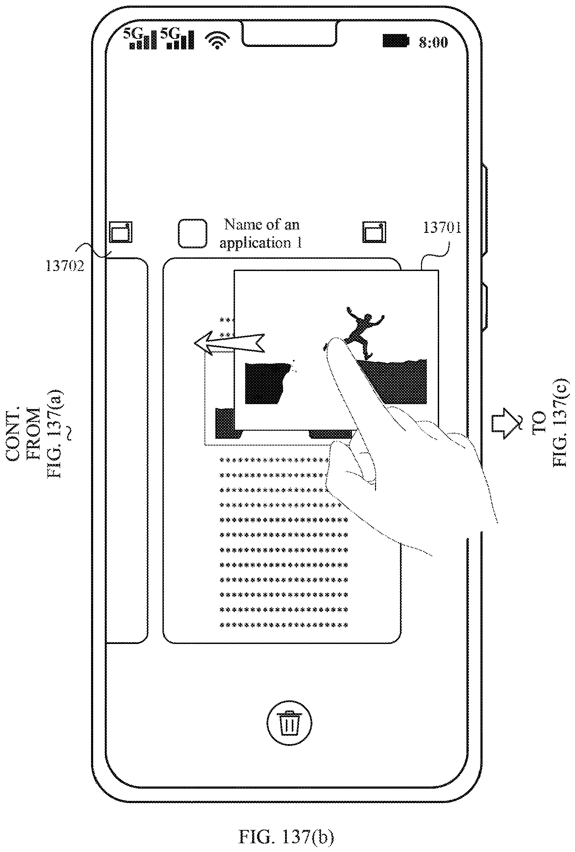

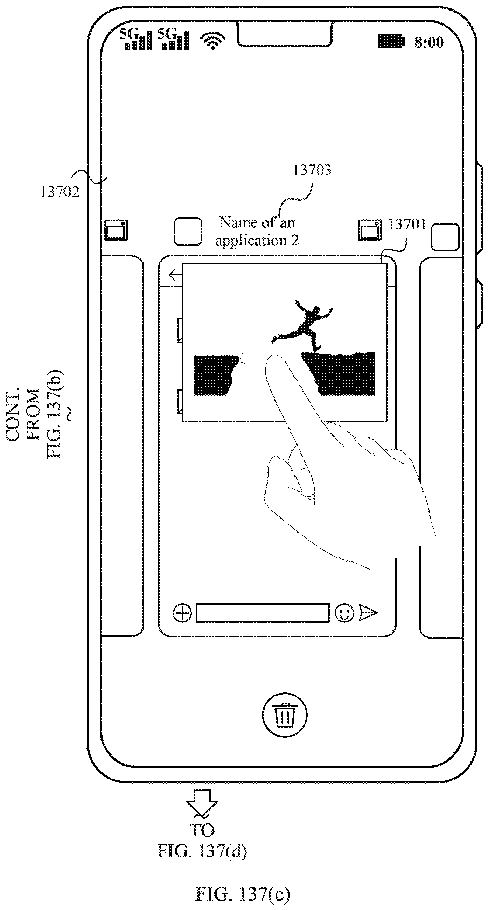

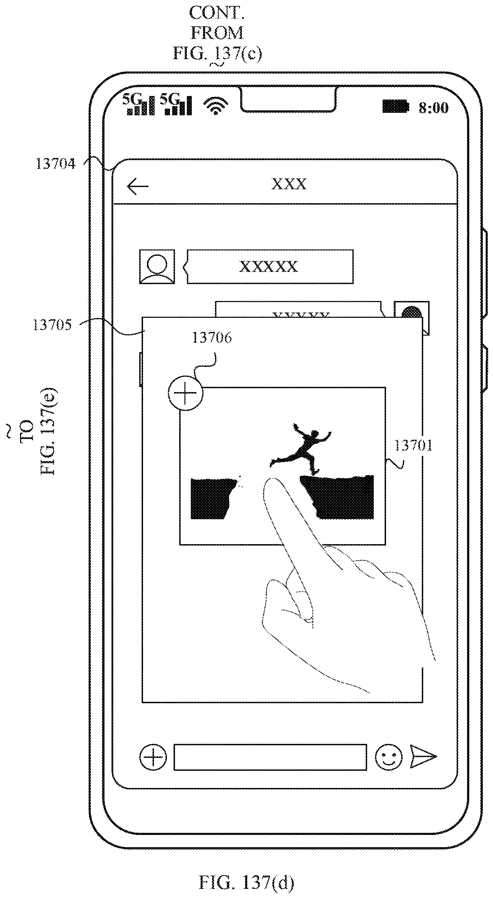

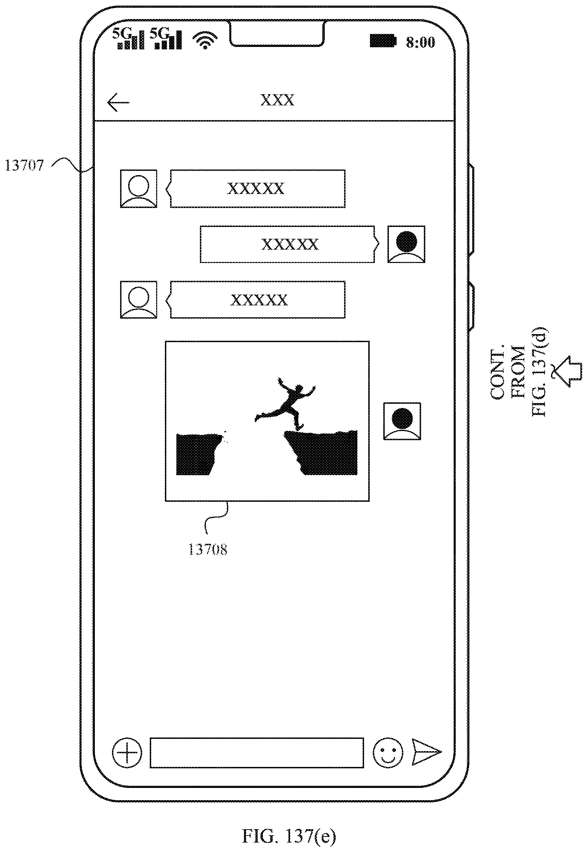

For example, with reference to FIG. 137(a) to FIG. 137(e), the dynamic small window is a dynamic small window in a form of a small window. As shown in FIG. 137(a), a dynamic small window 13701 is displayed on the display of the mobile phone. The user performs a corresponding operation, for example, a slide operation that starts from the lower edge of the display of the mobile phone and that points to the upper edge of the display of the mobile phone, and does not lift a finger or a stylus temporarily after sliding, to trigger the mobile phone to display a multi-task interface 13702 on the display of the mobile phone. The mobile phone receives an operation of pressing the dynamic small window 13701 and moving a finger by the user. In response to the operation, the mobile phone may display an animation in which the dynamic small window 13701 moves with the finger of the user After the dynamic small window 13701 moves to a location of an application window thumbnail on the multi-task interface 13702, if the user continues to move the finger to make the dynamic small window 13701 continue to move, the mobile phone may switch, as the dynamic small window 13701 moves, the application window thumbnail on the multi-task interface 13702 displayed on the display of the mobile phone. As shown in FIG. 137(b), when the dynamic small window 13701 moves to the location of the application window thumbnail on the multi-task interface 13702, the finger of the user slides leftward. As the finger of the user slides, as shown in FIG. 137(c), the mobile phone switches an application window thumbnail that is of an application 1 and that is displayed on the multi-task interface 13702 to an application window thumbnail 13703 of an application 2. If the user stops moving the finger at this time, to hover the dynamic small window 13701 over the application window thumbnail 13703 of the application 2, as shown in FIG. 137(d), the mobile phone may display an application window 13704 of the application 2. In FIG. 137(d), the application window 13704 of the application 2 is scaled up but not displayed in full screen. In some other embodiments, the application window 13704 of the application 2 may also be displayed in full screen.

Further, an example in which the application window 13704 is an application window of an instant messaging application is used. As shown in FIG. 137(d), the mobile phone may further display a prompt region 13705, to prompt the user whether to insert the dynamic small window 13701 into the application window 13704. If an operation that the user selects insertion, for example, drags the dynamic small window 13701 to the prompt region 13705 and lifts a finger is received, the mobile phone may convert the dynamic small window 13701 into a resource file, and then insert the resource file into the application window. As shown in FIG. 137(c), after the user lifts the finger, the mobile phone displays an application window 13707 in full screen, converts the dynamic small window 13701 into a resource file, and sends the resource file. The mobile phone may further display a sent message prompt 13708. In addition, after the dynamic small window 13701 is converted into the resource file and inserted into the application window, the dynamic small window 13701 is automatically closed and is no longer displayed on the display of the mobile phone. After the dynamic small window 13701 is dragged to the prompt region 13705, the mobile phone may further display a releasable prompt on the dynamic small window 13701 (for example, the upper left corner), for example, a plus sign 13706, to prompt the user that after the user releases the finger, the dynamic small window 13701 is triggered to be converted into the resource file and inserted into the application window. After the dynamic small window 13701 is dragged out of the prompt region 13705, a releasable message is prompted. In this case, if the user lifts the finger, the dynamic small window 13701 is automatically adsorbed to an edge of the display of the mobile phone.

**Similarly,** in a scenario in which the mobile phone displays a dynamic small window (for example, a dynamic small window in a form of a small window or a dynamic small window in a form of a medium window) on the desktop, after the user presses the dynamic small window and moves a finger, to move the dynamic small window on the display, if the user stops moving the finger on an icon of an application on the desktop, to hover the dynamic small window over the icon of the application, the mobile phone may start the application, and display a corresponding application window. If the displayed application window is the window of the application such as the memo, the document editor, the file manager, or the instant messaging application, the user may also choose to convert the dynamic small window into the resource file and insert the resource file into the application window

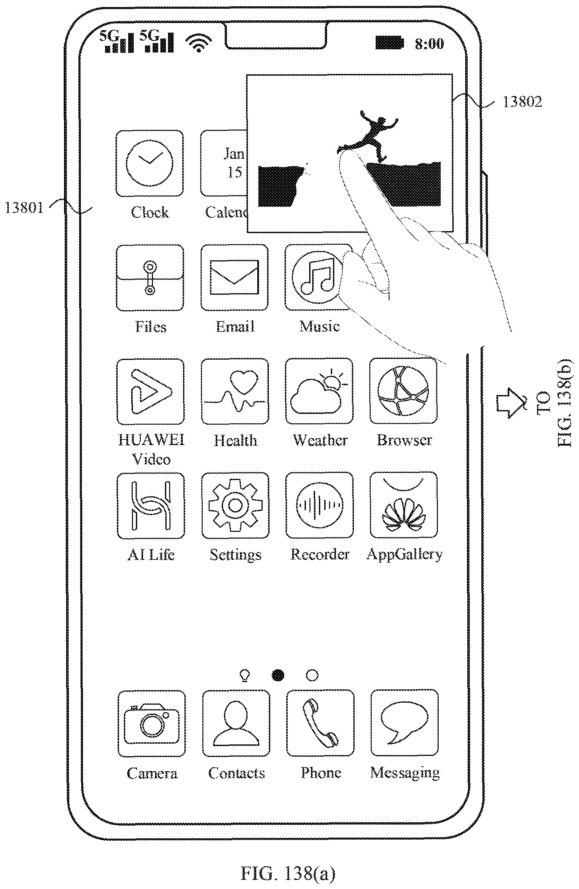

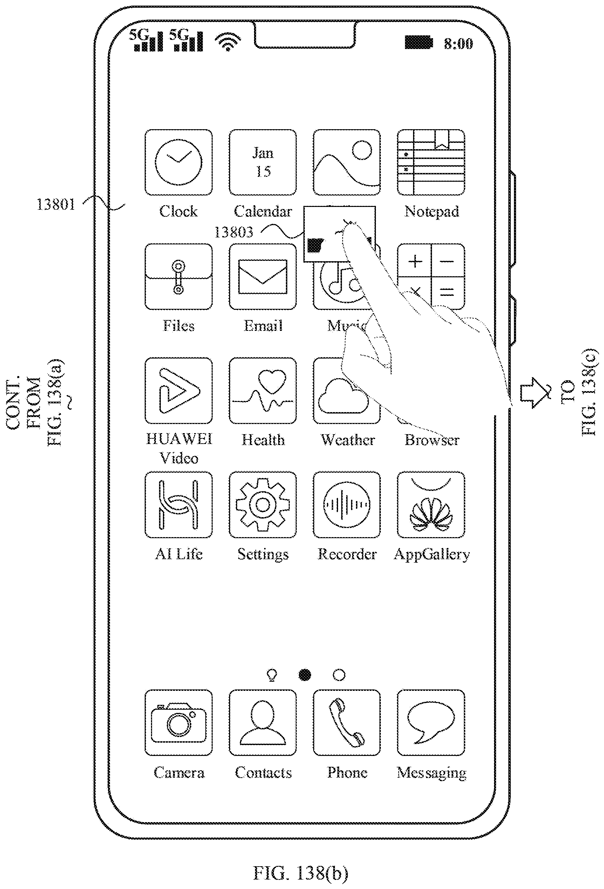

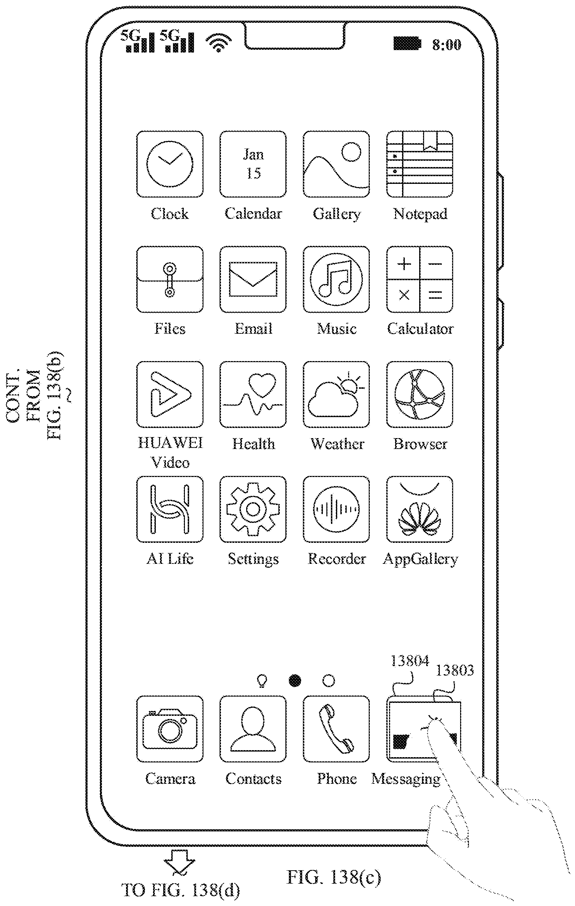

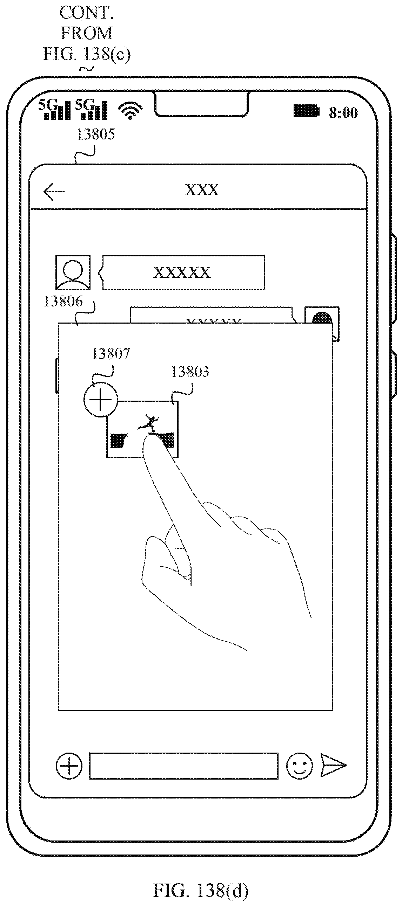

For example, with reference to FIG. 138(a) to FIG. 138(d), the dynamic small window is a dynamic small window in a form of a small window As shown in FIG. 138(a), a desktop 13801 is displayed on the display of the mobile phone, and a dynamic small window 13802 is displayed on the desktop 13801. The mobile phone receives an operation of pressing the dynamic small window 13802 and moving a finger by the user. As shown in FIG. 138(b), in response to the operation, the mobile phone may display a scaled-down dynamic small window 13803, and display an animation in which the dynamic small window 13803 moves. As shown in FIG. 138(c), when the dynamic small window 13803 moves to an icon of an application on the desktop, for example, a location of an icon 13804 of Messages, if the user stops moving the finger, to hover the dynamic small window 13803 over the icon 13804 of Messages, as shown in FIG. 138(d), the mobile phone may display an application window 13805 of the information. Further, as shown in FIG. 138(d), the mobile phone may further display a prompt region 13806, to prompt the user whether to insert the dynamic small window 13803 into the application window 13805. If an operation that the user drags the dynamic small window 13803 to the prompt region 13806 and lifts the finger is received, the mobile phone may convert the dynamic small window 13803 into a resource file, and then insert the resource file into the application window. In addition, after the dynamic small window 13803 is dragged to the prompt region 13806, the mobile phone may further display a releasable prompt on the dynamic small window 13803 (for example, the upper left corner), for example, a plus sign 13807, to prompt the user that after the user releases the finger, the dynamic small window 13803 is triggered to be converted into the resource file and inserted into the application window If the user does not want to insert the dynamic small window 13803 into the application window 13805, the user may drag the dynamic small window 13803 to another region outside the prompt region 13806 and lift the finger, and the mobile phone may respond to the operation of the user, to scale up the scaled-down dynamic small window 13803 and then redisplay the dynamic small window 13803 on the display, as shown in FIG. 138(a). For other descriptions, refer to descriptions of corresponding content in FIG. 137(a) to FIG. 137(e). Details are not described herein again. The foregoing is described by using an example in which an application corresponding to the application window 13805 supports insertion. In some other embodiments, for an application that does not support insertion, when the user drags a scaled-down dynamic small window to an icon of the application and hovers, the mobile phone may display prompt information that insertion is not supported. Then, if the user lifts the finger, the mobile phone may scale up the scaled-down dynamic small window and redisplay the dynamic small window on the display again, as shown in FIG. 138(a).

In some other embodiments, when the mobile phone establishes a connection to another terminal (where the another terminal may be the second terminal in embodiments of this application), the user may further drag a dynamic small window (for example, a dynamic small window in a form of a small window or a dynamic small window in a form of a medium window), to drag the dynamic small window to another terminal connected to the mobile phone in a cross-device manner. For example, after receiving an operation of pressing and moving the dynamic small window by the user, the mobile phone may perform drag monitoring to determine whether to trigger cross-device drag. For example, after determining that the dynamic small window is dragged to a cross-device drag sensing region, the mobile phone may determine to trigger the cross-device drag. After determining to trigger the cross-device drag, the mobile phone may send data of the dynamic small window to a target device of the cross-device drag, so that the target device performs drag connection. After receiving a drag release user operation, the target device may display the dynamic small window (for example, the dynamic small window in the form of the small window or the dynamic small window in the form of the medium window) on a display of the target device, to achieve an effect of dragging the dynamic small window to another device in a cross-device manner. Alternatively, after receiving the drag release user operation, the target device may display the dynamic small window in full screen on the display of the target device.

In addition, after the mobile phone displays the dynamic small window (for example, the dynamic small window in the form of the small window or the dynamic small window in the form of the medium window), if an operation that the user presses the dynamic small window and quickly slides towards a direction pointing to the upper edge of the display of the mobile phone is received, the mobile phone may close the dynamic small window, does not continue to display the dynamic small window on the screen of the mobile phone. It may be understood that the solutions for closing the dynamic small window described in the foregoing embodiments are all triggered by the user. In some other embodiments, the dynamic small window may also be automatically dosed, for example, playing of the video in the dynamic small window ends, or navigation ends.

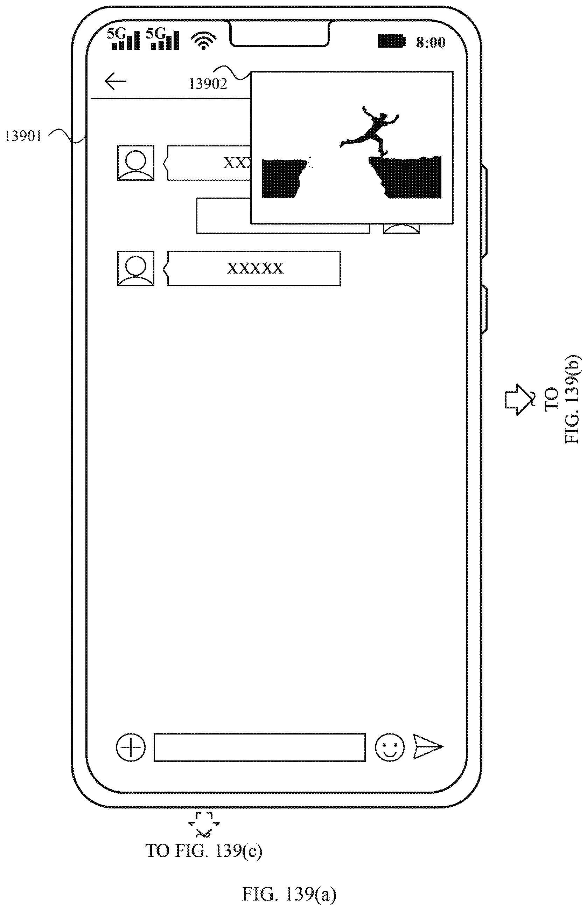

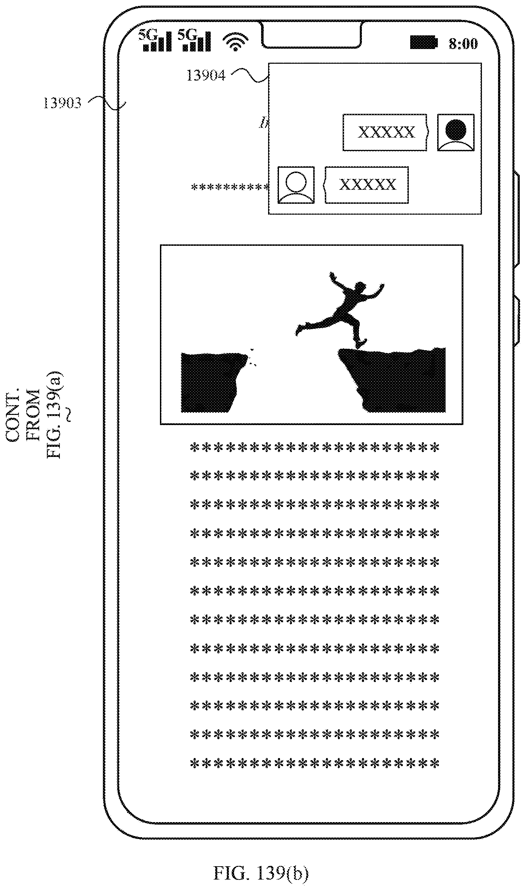

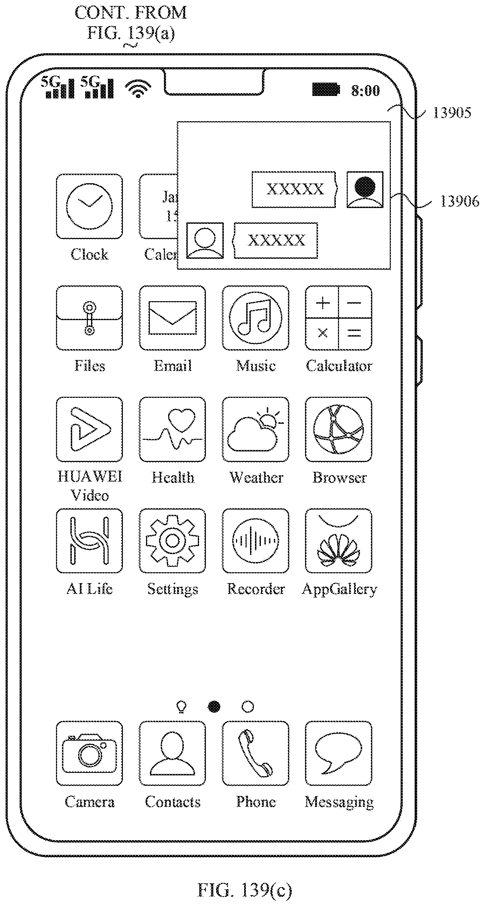

In some other embodiments, in a scenario in which the mobile phone displays a dynamic small window (for example, a dynamic small window in a form of a small window or a dynamic small window in a form of a medium window) on an application window of another application, the user may trigger, by performing a corresponding operation, the mobile phone to replace the dynamic small window. For example, with reference to FIG. 139(a) to FIG. 139(c), as shown in FIG. 139(a), the mobile phone displays a chat details page 13901 of an instant messaging application, and a dynamic small window 13902 of an application 1 is displayed on the chat details page 13901. For example, the mobile phone receives a two-finger pinch operation of putting one finger on the chat details page 13901 and the other finger on the dynamic small window 13902 by the use. In response to the operation, as shown in FIG. 139(b), the mobile phone displays an application window 13903 of the application 1 (where the application window 13903 includes information details), and displays a dynamic small window 13904 of the instant messaging application on the application window 13903. For another example, the mobile phone receives an operation of switching the instant messaging application to a background by the user, for example, a slide operation that starts from the lower edge of the display of the mobile phone and that points to the upper edge of the display of the mobile phone. In response to the operation, the mobile phone closes (or does not display) the dynamic small window 13902. In addition, as shown in FIG. 139(c), the mobile phone displays a desktop 13905, and displays a dynamic small window 13906 of the instant messaging application on the desktop 13905. For a specific implementation of displaying the dynamic small window of the instant messaging application by the mobile phone, refer to specific description of corresponding content in the foregoing embodiment. Details are not described herein again.

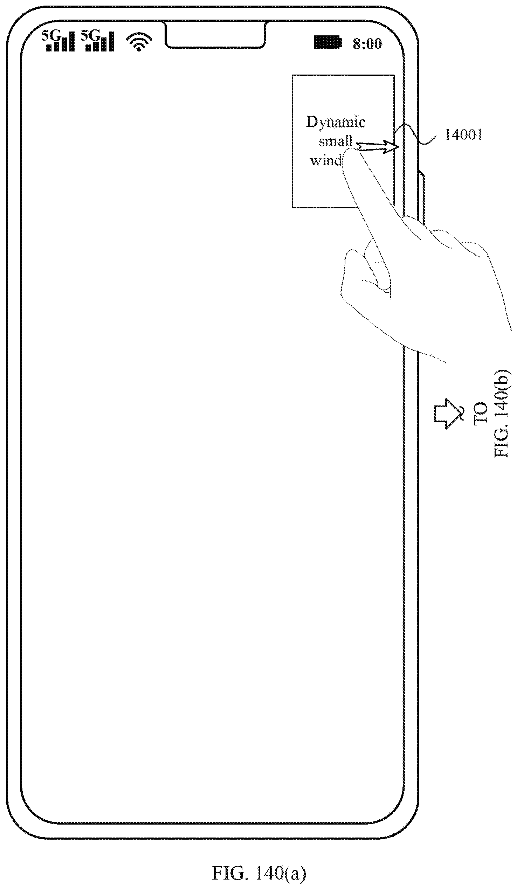

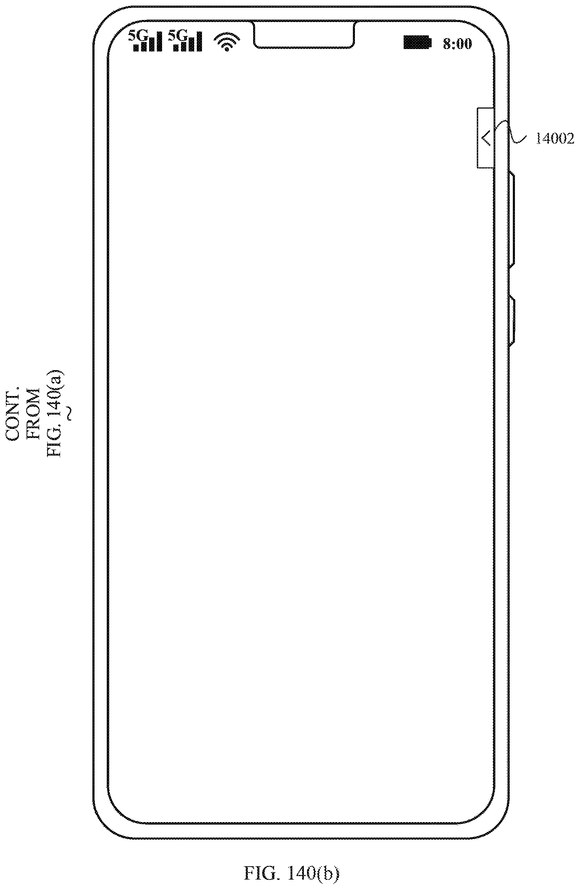

In the foregoing embodiment, a background color of the dynamic small window is shown by using a light-color background, for example, white. In some other embodiments, the background color of the dynamic small window may also be a dark-color background (for example, black), or may be a transparent background, this is not limited in this embodiment. In addition, the dynamic small window in the form of the small window may also be automatically collapsed and hidden on the mobile phone, and is redisplayed on the display of the mobile phone after an operation of the user is received. In an example, after the dynamic small window in the form of the small window is displayed, if the mobile phone receives a drag operation of dragging the dynamic small window out of the edge of the display of the mobile phone by the user, the mobile phone hides the dynamic small window. For example, with reference to FIG. 140(a) and FIG. 140(b), a dynamic small window in a form of a small window is adsorbed to the upper right corner of a display of a mobile phone. As shown in FIG. 140(a), the mobile phone displays a dynamic small window 14001 on the upper right corner of the display of the mobile phone. When the mobile phone receives an operation of dragging the dynamic small window 14001 towards the right edge of the display of the mobile phone (for example, pressing the dynamic small window 14001 and moving a finger), the mobile phone hides the dynamic small window 14001. As shown in FIG. 140(b), the mobile phone may further display a call-out button 14002 at a corresponding location (for example, a location at which the dynamic small window 14001 is dragged out of the display) on the display of the mobile phone. If the mobile phone receives an operation of the user for the button 14002, for example, a tap operation, the mobile phone may redisplay the dynamic small window 14001 on the display of the mobile phone. Similarly, after the dynamic small window in the form of the medium window is displayed, if the mobile phone receives a drag operation of dragging the dynamic small window out of the edge of the display of the mobile phone by the user, the mobile phone hides the dynamic small window in the form of the medium window. The mobile phone may further display a call-out button. If an operation of the user for the call-out button is received, the dynamic small window is redisplayed. It may be understood that, if a dynamic small window in a form of a small window is hidden, after an operation for the call-out button is received, the dynamic small window in the small window form is also redisplayed. If a dynamic small window in a form of a medium window is hidden, after an operation for the call-out button is received, the dynamic small window in the form of the medium window is also redisplayed.

By using the technical solution provided in this embodiment, when a trigger condition of a dynamic small window is met, for example, after a local drag operation of a user for an object is received, a terminal may extract a key element from a display interface of the terminal, and display the key element on a screen of the terminal in a form of a dynamic small window. Key content in an application window is displayed by using limited small-window display resources. In addition, this not only cannot display excessive content to affect user experience, but also can meet a processing requirement of the user, for example, can help the user obtain and quickly process multi-task information by using the dynamic small window. In addition, after the trigger condition of the dynamic small window is met, for example, actively triggered by the user or automatically triggered by the system, the dynamic small window may be displayed, so that the user wakes up the dynamic small window on any interface, to meet a processing requirement of the small window during multi-task processing. Features, such as in-application or system triggering support, flexible display, and simple operation are achieved.

The dynamic small window supports page-level, application-level, and system-level presentation. In addition, content and a layout effect presented in the dynamic small window support automatic recommendation by the system based on different application types or customization by a third-party application developer, so that the user can more flexibly complete multi-task processing, and requirements on flexible display and layout of the dynamic small window can be met A system-level small window gesture (for example, sliding up an application window on the multi-task interface) supports an up-sliding gesture animation effect of a natural process, for example, the application window is turned to a dynamic small window (namely, a rotation mode). In addition, an animation effect of fade-in and fade-out of the application window and the dynamic small window may be further used, thereby improving user experience.

Currently, an application may be installed in a terminal such as a mobile phone, to improve a function of the mobile phone and provide better use experience for a user. However, there are often the following scenarios during daily use of the mobile phone. For example, if a user 1 wants to share a picture of a currently browsed commodity with a user 2 when using a shopping application of a mobile phone, the user 1 needs to first save the picture of the commodity to a gallery application of the mobile phone, then open an instant messaging application of the mobile phone to find the user 2, open a chat interface with the user 2, then open the gallery application by using a quick entry on the chat interface, select the saved picture of the commodity, and finally tap Send, so that the picture of the commodity can be shared to the user 2 by using the instant messaging application. Interaction is very troublesome. For another example, if content such as a phone number shared by a friend is shared by using a picture, the content cannot be directly copied. If the content is copied after recognition by using (optical character recognition, OCR), OCR recognition is inaccurate, and the user can only switch back and forth between a typing interface and a picture interface on the mobile phone. If a network address of a website is sent to a friend, after the network address is copied, copied content is saved only on a clipboard and is invisible to a user. In addition, a plurality of applications need to be switched to share the content with the friend, resulting in poor experience. After buying a commodity, whether the commodity is delivered, and information such as logistics about the commodity can only be viewed by a plurality of operation steps. The interaction process is long. These scenarios all reflect that when a user daily uses a terminal such as a mobile phone, if the user needs to view or share information across applications, a problem of a complex interaction process, a large quantity of operation steps, and poor man-machine interaction performance occurs.

The current technology provides some solutions to resolve the foregoing problem.

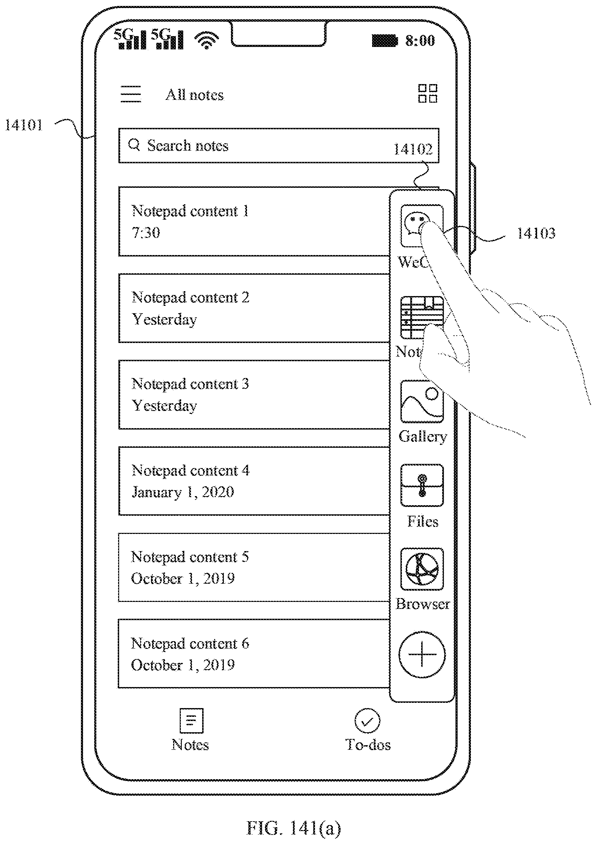

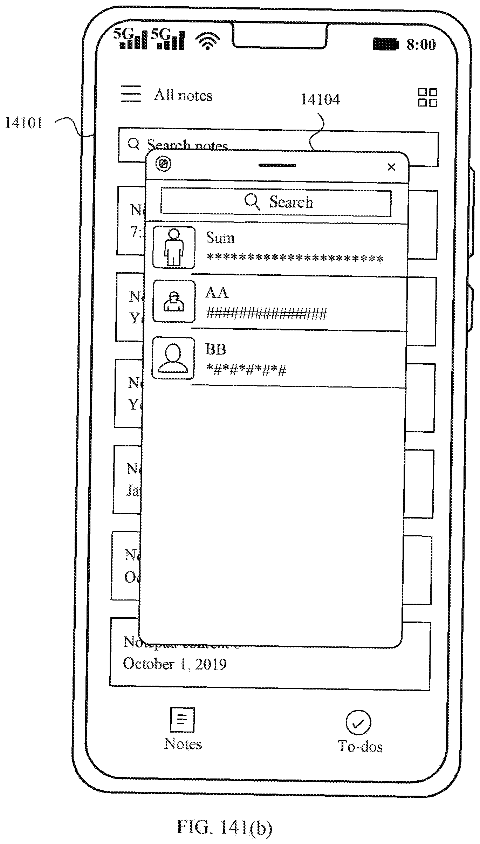

Related technology 1: HUAWEI customizes a dock (dock) bar function. A user may trigger, by performing a slide operation from the left edge or the right edge of a screen of a mobile phone to a middle region of the screen of the mobile phone, the mobile phone to display a dock bar. A display location of the dock bar on the screen of the mobile phone cannot be moved, and the dock bar is closed when the user taps another region outside the dock bar. The dock bar includes icons of one or more applications, and provides a quick entry for the user, so that a corresponding application can be quickly opened, thereby simplifying an interaction process when the user uses a plurality of applications, and improving usage efficiency. For example, with reference to FIG. 141(a) and FIG. 141(b), as shown in FIG. 141(a), the mobile phone displays a memo interface 14101. If the user wants to share content in a memo with a friend through WeChat^{™}, the user may perform, on the screen of the mobile phone, a slide operation starting from the right edge of the screen to the middle region of the screen of the mobile phone. In response to the slide operation, the mobile phone may display a dock bar 14102. The dock bar 14102 includes icons of one or more applications, for example, includes an icon 14103 of WeChat^{™}. After the user performs an operation on the icon 14103 of WeChat^{™} in the dock bar 14102, for example, a tap operation, as shown in FIG. 141(b), the mobile phone may display an interface of WeChat^{™} interface in a form of a freeform (freeform) small window 14104 (or referred to as a floating window). Then, the user selects a friend on the interface of WeChat^{™}, to share, by using the WeChat^{™}, content that needs to be shared. However, the dock bar provides only a quick entry for opening an application, the user still needs to perform complex steps to share the content with the friend, and man-machine interaction performance is still not improved better.

Related technology 2: WeChat^{™} defines a floating window (or referred to as a favorites bar) function. The floating window is an entry for temporary storage of an applet or an article link. For example, with reference to FIG. 116(a) to FIG. 116(c), as shown in FIG. 116(a), the user browses the information page 11601 of the official account of WeChat^{™}. The user may perform a slide operation from the left side to the right side of the screen of the mobile phone, to trigger the mobile phone to return to a previous-level page of the information page 11601. As shown in FIG. 116(b), as the finger of the user slides, the mobile phone may display a partial region of the information page 11601 and a partial region 11602 of the previous-level page of the information page 11601. In response to the slide operation of the user, the mobile phone may further display a floating window indication region 11603 in the lower right corner of the screen of the mobile phone. After the user slides the finger in the floating window indication region 11603, as shown in FIG. 116(c), the mobile phone displays the floating window 11604 in a form of a favorites drawer, and after the user releases the finger, the floating window 11604 is automatically adsorbed to an edge of the screen. The floating window 11604 includes a link of the information page 11601, that is, the information page 11601 is included in the favorites bar, and the user may tap the favorites bar to view the included information page 11601. A maximum of five applets or article links can be temporarily stored (or added to favorites) in the floating window of WeChat^{™} at the same time. When a plurality of applets or article links are added to favorites in the floating window, a user can tap the floating window to view a favorites list. However, the floating window is always displayed only in WeChat^{™}. After WeChat^{™} exits, the floating window is no longer displayed. In other words, after WeChat^{™} exits, the floating window cannot function as a quick entry. In this way, the problem of poor man-machine interaction performance when information is viewed or shared across applications cannot be resolved. In addition, the floating window function of WeChat^{™} can only temporarily store a link of an entire page in a form of the floating window, but cannot temporarily store some or an element on the page in the form of the floating window.

Related technology 3: Android^{™} provides a bubble (bubble) function. An application (for example, an instant messaging application) invokes an interface corresponding to the function, and after receiving a corresponding user operation, may adsorb and display a contact avatar in the application on an edge of a screen of a mobile phone in a form of a bubble. However, the bubble function provided by Android^{™} is only used to provide a quick entry to a chat interface for a contact. To be specific, after the user performs a tap operation on the contact avatar displayed in the form of the bubble, the mobile phone may display the chat interface for the contact, has no other function, and does not support display of other content except the contact avatar in the form of the bubble, and the man-machine interaction performance cannot be improved better.

It may be learned that the solutions provided in the foregoing related technologies cannot better resolve the problem of poor man-machine interaction performance when the information is viewed or shared across the applications. Based on this, some other embodiments of this application further provide an object drag method, or referred to as an interface element display method (collectively referred to as the interface element display method below). In the method, after receiving an operation such as dragging or copying any element on an interface by the user, a terminal may convert the element into a floating UI element and then display the floating UI element on a screen of the terminal, for example, adsorb and display the floating UI element on an edge of the screen of the terminal. In addition, regardless of whether the user switches a page in an application or exits the application, the floating UI element may continue to be displayed on the screen of the terminal, and is displayed at the topmost layer of the interface. The floating UI element in this embodiment may be moved, and supports functions of interacting with an element of another interface, opening a corresponding interface after being tapped, and receiving and sending content dragged by a user, and the like. In this way, the user can implement operations such as local cross-application file transfer and information sharing in a more convenient interaction manner. This simplifies an interaction process during cross-application interaction, reduces operation steps, and improves man-machine interaction performance.

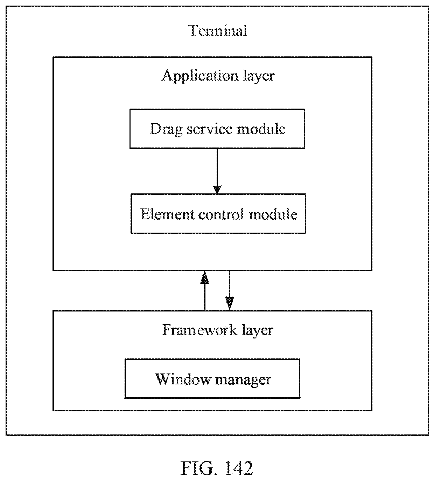

Refer to FIG. 142 to FIG. 169(d). The following specifically describes a process in which an element is displayed in a form of a floating UI element.

With reference to FIG. 3, a software structure of the terminal is described in this embodiment of this application by using an example in which a software system of the terminal (where the terminal may be the first terminal in FIG. 3) is the Android system. FIG. 142 is a schematic composition diagram of the software architecture of the still another terminal according to this embodiment of this application. In some embodiments, as shown in FIG. 142, in addition to a drag service module, the terminal may further include an element control module (controller).

In this embodiment of this application, based on the foregoing software architecture, when the terminal currently displays an interface of an application, after receiving an operation such as dragging or copying any element on the interface by the user, the terminal may convert the element into a floating UI element and then display the floating UI element on a screen of the terminal, for example, adsorb and display the floating UI element on an edge of the screen of the terminal. Then, regardless of whether the user switches a page in the application, exits the application, or opens another application, the floating UI element may continue to be displayed on the screen of the terminal, to implement an operation, for example, cross-application information viewing, file transfer, or information sharing.

The following describes in detail the interface element display method provided in this embodiment of this application with reference to the accompanying drawings by using an example in which the terminal is a mobile phone. In this embodiment, an interface element supporting display as the floating UI element may be any element in an interface. For example, the interface element may be an interface element of a text type, a picture type, an icon type, a card type, a list contact type, a video window type, a file resource type, or the like.

The following describes a process of displaying different types of interface elements on a screen of the mobile phone as floating UI elements by using an example.

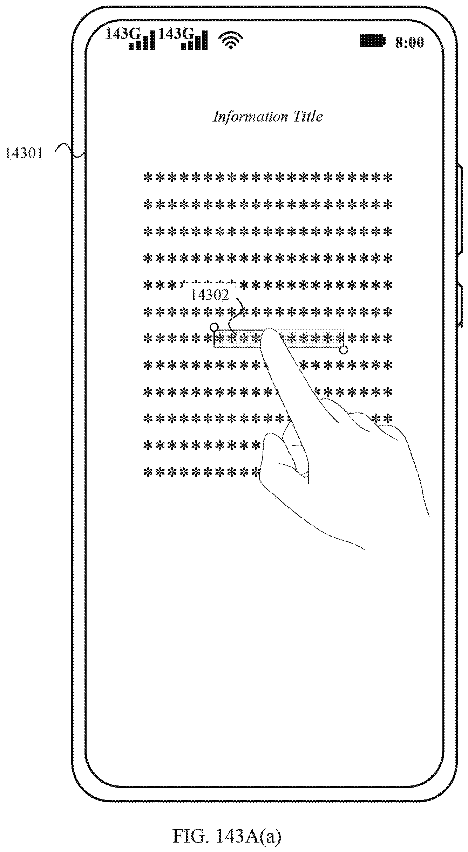

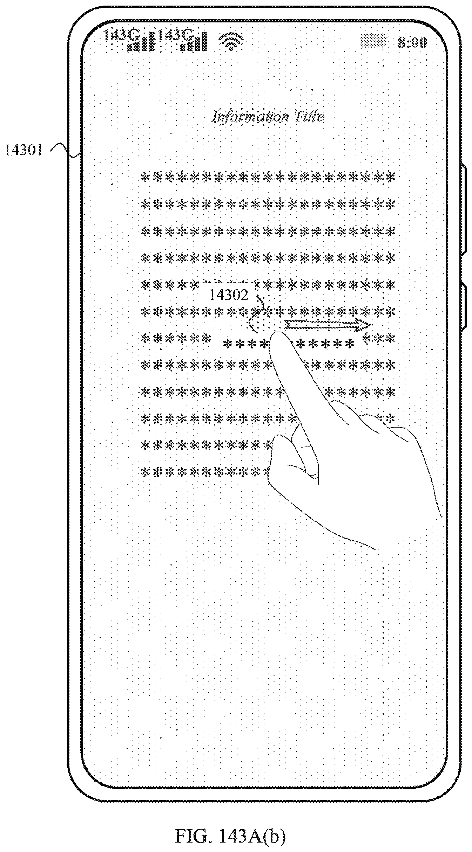

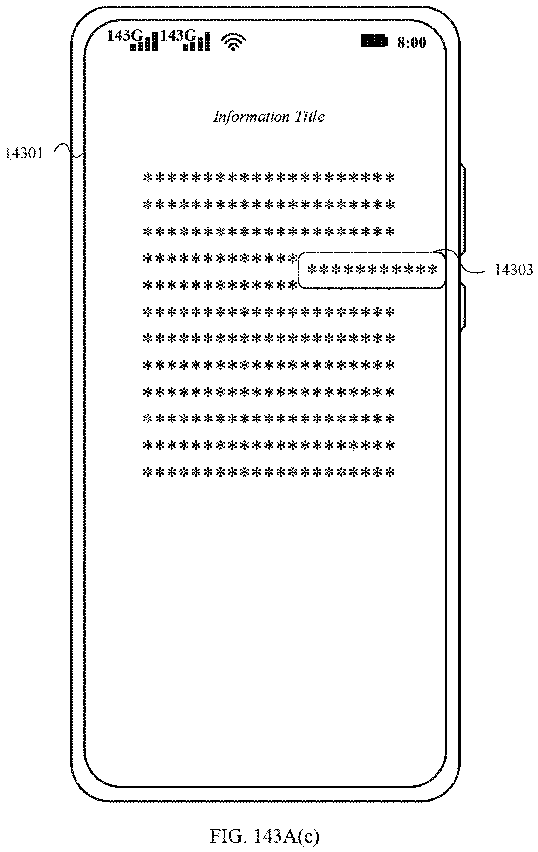

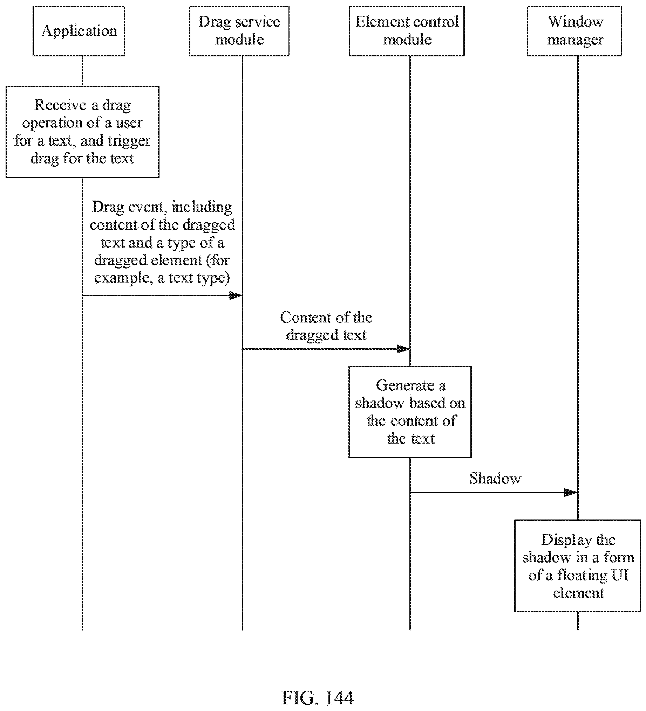

With reference to FIG. 143A(a) to FIG. 143A(c), FIG. 1438(a) to FIG. 143B(c), and FIG. 144, a process of displaying a text type element on the screen of the mobile phone in the form of the floating UI element is described as an example.

An operation of triggering display of the text type element in the form of the floating UI element may be a drag operation of the user for the text type element, or may be a copy operation for the text type element

For example, with reference to FIG. 143A(a) to FIG. 143A(c), the operation of triggering the display of the text type element in the form of the floating UI element is the drag operation of the user for the text type element As shown in FIG. 143A(a), the mobile phone currently displays an information page 14301 of an application. When the user wants to display a text on the information page 14301 on the screen of the mobile phone in the form of the floating UI element, the user may perform a drag operation on the text After the user releases drag, the mobile phone may display the text on the screen of the mobile phone in the form of the floating UI element

The drag operation may include one or more operations. For example, the drag operation may include an operation of triggering float of the text and an operation of triggering movement of a floating text.

For example, the operation of triggering the float of the text is an operation of touching and holding and selecting the text, and the operation of triggering the movement of the floating text is an operation of pressing and moving the floating text. Still refer in FIG. 143A(a). The user may touch and hold and select a text 14302 on the information page 14301. The information page 14301 may be the first interface in embodiments of this application. The text 14302 may be the first element in embodiments of this application. The mobile phone may receive the operation of touching and holding and selecting the text 14302. In response to the operation of touching and bolding and selecting, the mobile phone may display the text 14302 in a floating state. As shown in FIG. 143A(b), the mobile phone may perform background blurring processing, and display a floating text 14302. Then, the user presses the floating text 14302 and moves a finger, so that the text 14302 moves on the screen of the mobile phone as the finger of the user moves. For example, as shown in FIG. 143A(b), the user may use the finger to perform a press operation on the floating text 14302, and move the finger, for example, move the finger rightward. In response to the operation of the user, the mobile phone may display an animation in which the text 14302 moves with the finger of the user, to provide the user with a visual effect in which the text 14302 is dragged by the user. Then, the user may release the finger, to release the drag. After the user releases the finger, the mobile phone may receive a drag release operation of the user. After the mobile phone receives the drag release operation, as shown in FIG. 143A(c), the mobile phone may display a floating UI element 14303 on the screen of the mobile phone. Content in the floating UI element 14303 is the same as content in the text 14302, that is, the text selected and dragged by the user is displayed on the screen of the mobile phone in the form of the floating UI element For example, the floating UI element 14303 may be adsorbed and displayed on an edge of the screen of the mobile phone (for example, the left edge of the screen or the right edge of the screen, and for example, as shown in FIG. 143A(c), the floating UI element 14303 is adsorbed and displayed on the right edge of the screen). The floating Ul element 14303 may be the first floating element in embodiments of this application.

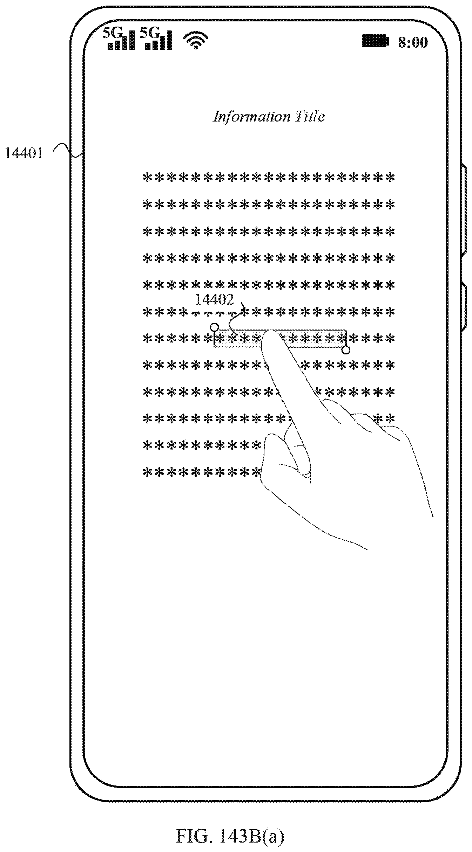

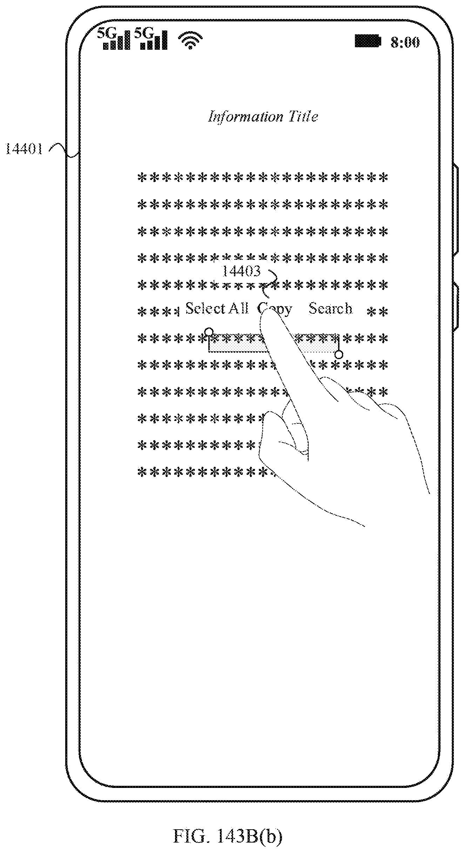

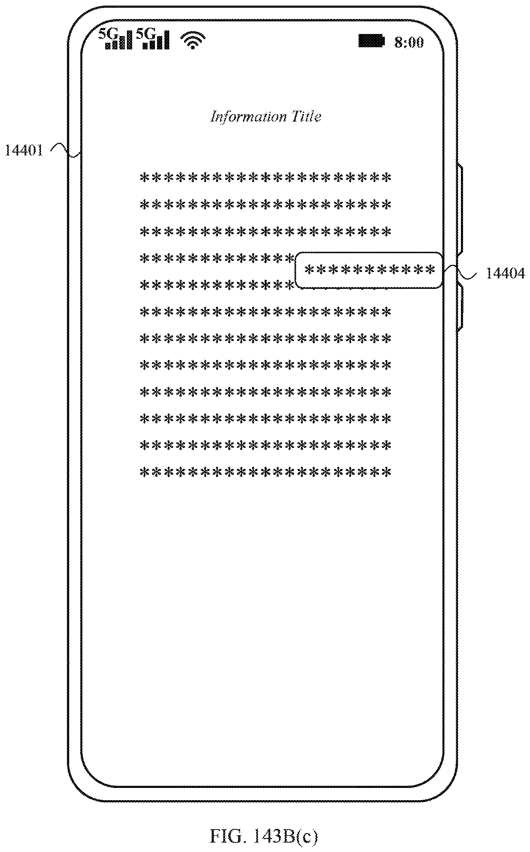

For another example, with reference to FIG. 143B(a) to FIG. 143B(c), the operation of triggering the display of the text type element in the form of the floating UI element is the copy operation for the text type element As shown in FIG. 143B(a), the mobile phone currently displays an information page 14401 of an application. When the user wants to display a text on the information page 14401 on the screen of the mobile phone in the form of the floating UI element, the user may perform a copy operation on the text After receiving the copy operation, the mobile phone may display the text on the screen of the mobile phone in the form of the floating UI element.

The copy operation for the text may include one or more operations. For example, the copy operation for the text may include an operation of touching and holding the text and an operation for a copy button. Still refer to FIG. 143B(a). The user may touch and hold a text 14402 on the information page 14401. The information page 14401 may be the first interface in embodiments of this application. The text 14402 may be the first element in embodiments of this application. As shown in FIG. 143B(b), in response to the touch and hold operation of the user for the text 14402, the mobile phone may display an operation menu. The operation menu includes a "Copy" button 14403. After the mobile phone receives an operation of the user for the "Copy" button 14403, for example, a tap operation, as shown in FIG. 143B(c), the mobile phone may display a floating UI element 14404 on the screen of the mobile phone. Content in the floating UI element 14404 is the same as content in the text 14402, that is, the text copied by the user is displayed on the screen of the mobile phone in the form of the floating UI element. The floating UI element 14404 may be the first floating element in embodiments of this application.

**It should** be noted that the embodiments shown in FIG. 143A(a) to FIG. 143A(c) and FIG. 143B(a) to FIG. 143B(c) are described by using an example in which the text type element is a text included on an information page of an application. The application may be a system application of the mobile phone, or may be a third-party application. This is not limited in this embodiment. In addition, the text type element may also be a text included on another page, for example, chat content on a chat interface of an instant messaging application, or a text included on a page of a shopping application. This is not specifically limited in this embodiment either.

With reference to FIG. 142, as shown in FIG. 144, in an example, a specific implementation process in which the text type element is presented on the screen of the mobile phone by using the floating UI element may be as follows: After receiving a drag operation of a user for a text, a mobile phone, for example, an application at an application layer of the mobile phone, may trigger drag for the text, obtain a drag event, and send the drag event to a drag service module at the application layer of the mobile phone. For example, a process in which the application at the application layer of the mobile phone obtains the drag event may be as follows: After the user performs the drag operation, a framework layer of the mobile phone may listen and detect the drag operation (for example, which may be specifically the touch and hold operation for the floating text), and in response to the drag operation, the framework layer of the mobile phone may generate the drag event (DragEvent). The application at the application layer of the mobile phone may obtain the drag event generated by the framework layer through callback. The drag event may include content of a dragged text and a type (for example, a text type) of a dragged element After receiving the drag event, the drag service module at the application layer of the mobile phone may cooperate with an element control module at the application layer of the mobile phone to construct a shadow (shadow) based on the type of the dragged element and the content of the text in the drag event If the type of the dragged element is the text type, the drag service module at the application layer of the mobile phone may transmit the content of the text included in the drag event to the element control module, and the element control module may generate the shadow based on the content of the text. Then, the element control module at the application layer of the mobile phone may transmit the generated shadow to a window manager at the framework layer of the mobile phone, so that the window manager displays the shadow in a form of a floating UI element. For example, the window manager displays a rounded text box on the screen of the mobile phone. The rounded text box is a floating UI element, and includes a text dragged by the user. Similarly, after receiving the copy operation of the user for the text, the application at the application layer of the mobile phone may also trigger the framework layer of the mobile phone to send content of a copied text to the drag service module at the application layer of the mobile phone, so that the drag service module cooperates with the element control module to construct the shadow, the window manager at the framework layer of the mobile phone displays the shadow in a form of a floating UI element, so that the text type element is presented on the screen of the mobile phone in the form of the floating UI element.

By using the technical solution of the embodiment shown in FIG. 143A(a) to FIG. 143A(c) or FIG. 143B(a) to FIG. 143B(c), for an interface element of a text type, the user may display a corresponding text on the screen of the mobile phone in the form of the floating UI element by performing the drag operation or the copy operation, for example, adsorb and display the corresponding text on an edge of a screen of a terminal. To be specific, the text dragged or copied by the user may be explicitly presented on the screen of the mobile phone by using the floating UI element In addition, after an operation of switching a page in the application, exiting the application, or starting another application by the user is received, the floating UI element may continue to be displayed on the screen of the mobile phone, so that it is more convenient to view information across applications. In addition, the floating UI element can be moved. For example, the user may perform a drag operation on the floating IJI element, for example, press and move a finger at a display location of the floating UI element In response to the drag operation of the user, the mobile phone may display an animation in which the floating UI element moves on the screen of the mobile phone. In addition, when the user wants to use the text across pages or applications, for example, input the text to an input box of another application, the user does not need to switch pages or applications back and forth. The text in the floating UI element can be filled in the input box by dragging the floating UI element in the input box. Specifically, in an example, after the mobile phone displays the text on the screen of the mobile phone in the form of the floating UI element, the mobile phone (for example, the framework layer of the mobile phone) may store an identifier of the floating UI element and content of the text in the mobile phone in an association manner. Then, when displaying an application interface including an input box, the mobile phone may display, after receiving a drag operation of the user for a floating UI element, an animation in which the floating UI element moves. After the user drags the floating UI element to the display location of the input box, hovers over the floating UI element, and releases the finger, in response to the operation, the mobile phone may fill the text in the floating UI element in the input box. For example, after the user drags the floating UI element to the display location of the input box and hovers over the floating UI element, the element control module at the application layer of the mobile phone may indicate the framework layer of the mobile phone to send data corresponding to the floating UI element, namely, content of a text corresponding to an identifier of the floating UI element, to the application. Then, after the user releases the finger, that is, releases the drag, the application at the application layer of the mobile phone may receive the content of the text sent by the framework layer of the mobile phone, and fill the text in the input box.

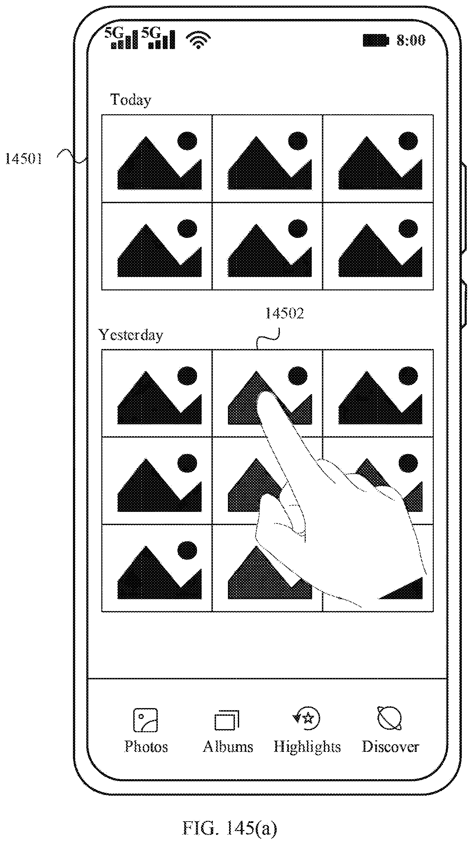

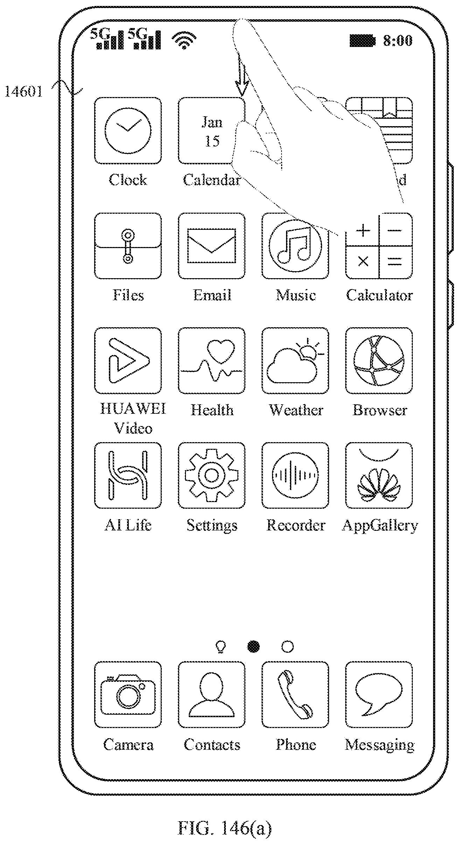

With reference to FIG. 145(a) to FIG. 145(c) and FIG. 146(a) to FIG. 146(d), a process of displaying a picture type element on the screen of the mobile phone in the form of the floating UI element is described as an example.

An operation of triggering display of the picture type element in the form of the floating Ul element may be a drag operation of the user for the picture type element.

For example, with reference to FIG. 145(a) to FIG. 145(c), as shown in FIG. 145(a), the mobile phone displays an interface 14501 of a gallery application. The interface 14501 includes a plurality of pictures. When the user wants to display a picture on the interface 14501 on the screen of the mobile phone in the form of the floating UI element, the user may perform a drag operation on the picture. After the user releases drag, the mobile phone may display the picture (for example, a thumbnail of the picture) on the screen of the mobile phone in the form of the floating UI element

The drag operation may include one or more operations. For example, the drag operation may include an operation of triggering float of the picture and an operation of triggering movement of a floating picture.

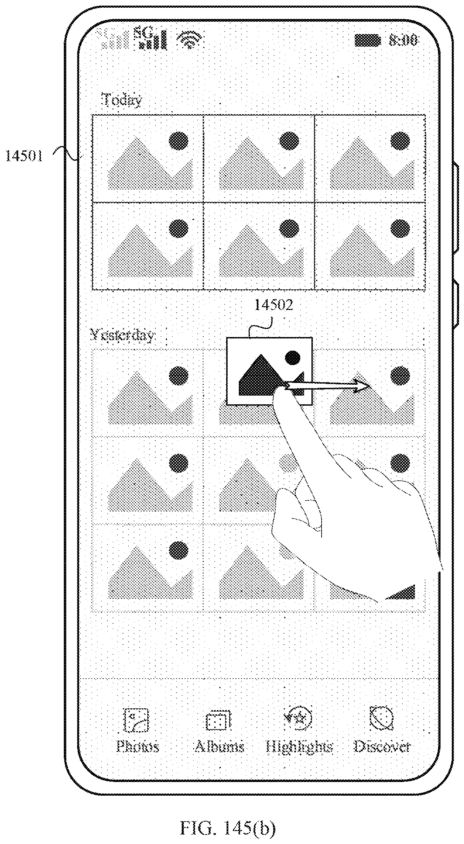

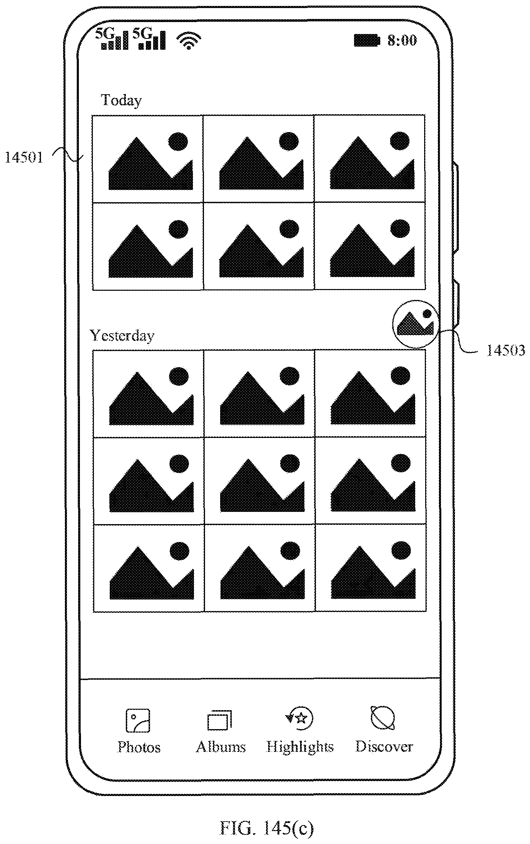

For example, the operation of triggering the float of the picture is an operation of touching and holding the picture, and the operation of triggering the movement of the floating picture is an operation of pressing and moving the floating picture. Still refer to FIG. 145(a). The user may touch and hold a picture 14502 on the interface 14501 of the gallery application. The picture 14502 may be the first element in embodiments of this application. The mobile phone may receive a touch and hold operation of the user for the picture 14502. In response to the touch and hold operation, the mobile phone may display the picture 14502 in a floating state. For example, as shown in FIG. 145(b), the mobile phone may perform background blurring processing, and display a floating picture 14502. Then, the user presses the floating picture 14502 and moves a finger, so that the picture 14502 moves on the screen of the mobile phone as the finger of the user moves. For example, as shown in FIG. 145(b), the user may use the finger to perform a press operation on the floating picture 14502, and move the finger, for example, move the finger rightward. In response to the operation of the user, the mobile phone may display an animation in which the picture 14502 moves with the finger of the user, to provide the user with a visual effect in which the picture 14502 is dragged by the user. Then, the user may release the finger, to release the drag. After the user releases the finger, the mobile phone may receive a drag release operation of the user. After the mobile phone receives the drag release operation, as shown in FIG. 145(c), the mobile phone may display a floating UI element 14503 on the screen of the mobile phone. The floating UI element 14503 includes the picture 14502, for example, a thumbnail of the picture 14502, that is, the picture dragged by the user is displayed on the screen of mobile phone in the form of the floating UI element For example, the floating UI element 14503 may be adsorbed and displayed on an edge of the screen of the mobile phone (for example, the left edge of the screen or the right edge of the screen, and for example, as shown in FIG. 145(c), the floating UI element 14503 is adsorbed and displayed on the right edge of the screen). The floating UI element 14503 may be the first floating element in embodiments of this application.

For another example, with reference to FIG. 146(a) to FIG. 146(d), after the user performs a screenshot operation, a generated screenshot may be displayed on the screen of the mobile phone in a form of a floating UI element.

An operation that the user triggers the mobile phone to take a screenshot, for example, referred to as the screenshot operation, may be an operation for a screenshot button (for example, a tap operation), or may be an operation for a function button (for example, a volume control button: a volume "+" button, a volume "-" button, or an on/off button) or a function combination key (for example, a combination of a volume "+" key and an on/off key) on the mobile phone, or may be an input preset gesture, for example, knuckle tap. Content to be captured may be all or part of content currently displayed on the screen of the mobile phone. If the content to be captured is part of the content currently displayed on the screen of the mobile phone, the foregoing screenshot operation may further include an operation of selecting a capture region in a form of circle drawing or box selection. After the mobile phone receives the screenshot operation, the mobile phone may enable a screenshot function to capture the all or part of the content currently displayed on the screen of the mobile phone, to generate a screenshot After the screenshot is generated, the mobile phone may display the generated screenshot on the screen of the mobile phone in the form of the floating UI element

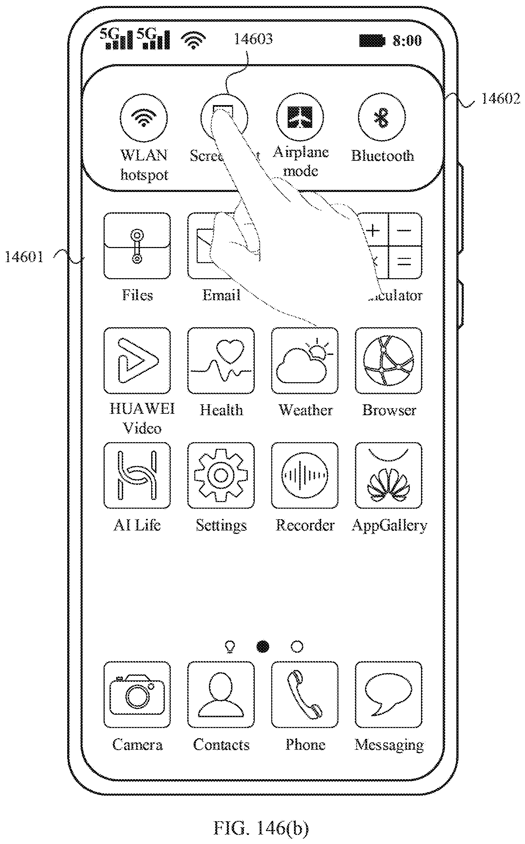

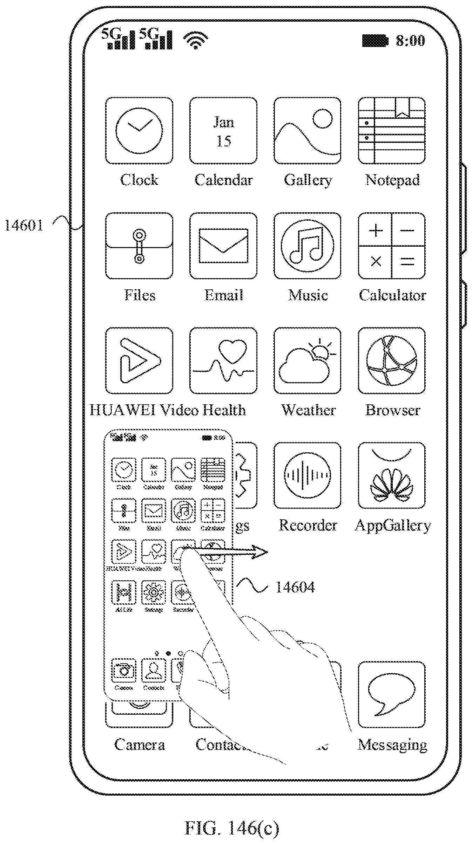

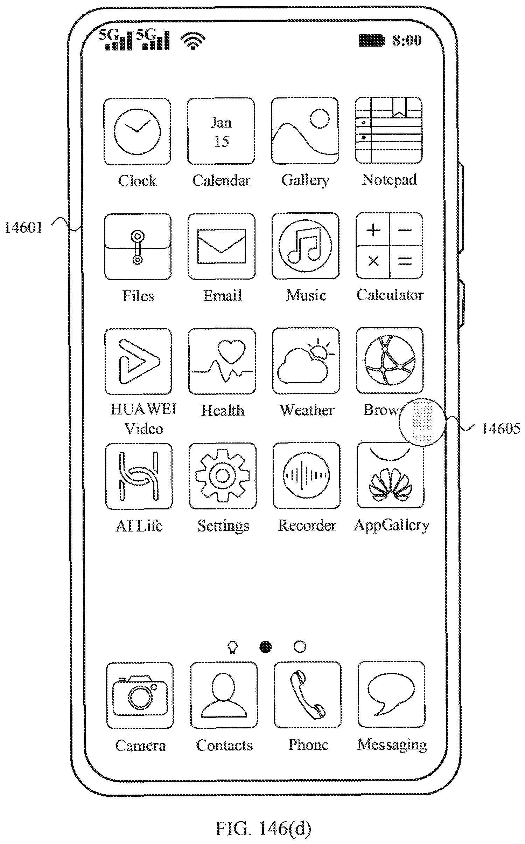

For example, with reference to FIG. 146(a) to FIG. 146(d), the screenshot operation is the operation for the screenshot button. For example, as shown in FIG. 146(a), the mobile phone displays a desktop 14601. When the user wants to use the screenshot function, the user may perform a slide operation that starts from the upper edge of the screen of the mobile phone and that points to the lower edge. The mobile phone may receive the slide operation. In response to the slide operation, as shown in FIG. 146(b), the mobile phone displays a menu bar 14602. The menu bar 14602 includes a "Screenshot" button 14603. The user may perform an operation on the "Screenshot" button 14603, for example, a tap operation. After receiving the tap operation of the user for the "Screenshot" button 14603, the mobile phone may enable a screenshot function, to capture content on a currently displayed desktop 14601 on the screen of the mobile phone, so as to generate a screenshot. After the screenshot is generated, the mobile phone may display the generated screenshot on the screen of the mobile phone in the form of the floating UI element. In an example, the mobile phone may first display the generated screenshot on the screen of the mobile phone in a form of a floating window, and then change the screenshot into a floating UI element (a floating UI element 14605 shown in FIG. 146(d)) with a gradually scaled-down animation effect. Then, the floating UI element is adsorbed and displayed on an edge of the screen of the mobile phone. In still another example, as shown in FIG. 146(c), the mobile phone may first display the generated screenshot on the screen of the mobile phone in a form of a floating window, for example, display a screenshot 14604. The user may press the screenshot 14604 and move a finger (for example, move a finger rightward), so that the screenshot 14604 moves on the screen of the mobile phone as the finger of the user moves. Then, the user may release the finger, to release drag. After the user releases the finger, the mobile phone may receive a drag release operation of the user. After the mobile phone receives the drag release operation, as shown in FIG. 146(d), the mobile phone may display the floating Ul element 14605 on the screen of the mobile phone. The floating UI element 14605 includes the screenshot 14604, for example, a thumbnail of the screenshot 14604, that is, the generated screenshot is displayed on the screen of the mobile phone in the form of the floating UI element. For example, the floating 1JI element 14605 may be adsorbed and displayed on an edge of the screen of the mobile phone (for example, the left edge of the screen or the right edge of the screen, and for example, as shown in FIG. 146(d), the floating UI element 14605 is adsorbed and displayed on the right edge of the screen).

It should be noted that the embodiment shown in FIG. 145(a) to FIG. 145(c) is described by using an example in which the picture type element is a picture in the gallery application. Alternatively, the picture type element may be a picture included on a page of another application of the mobile phone, for example, a picture shared with a friend or shared by a friend on a chat interface of the instant messaging application, or a picture included on a page of a browser. This is not specifically limited in this embodiment either.

In addition, a specific implementation process in which the picture type element is presented on the screen of the mobile phone by using the floating UI element is similar to the specific implementation process in which the text type element is presented on the screen of the mobile phone by using the floating UI element shown in FIG. 144, and details are not described herein again. A difference lies in that the drag event includes a dragged picture and a type (for example, a picture type) of the dragged element, and the element control module at the application layer of the mobile phone may generate the shadow based on the picture.

By using the technical solution of the embodiment shown in FIG. 145(a) to FIG. 145(c) or FIG. 146(a) to FIG. 146(d), for an interface element of a picture type, the user may display a corresponding picture on the screen of the mobile phone in the form of the floating UI element by performing the drag operation or the screenshot operation, for example, adsorb and display the corresponding picture on an edge of a screen of a terminal. In addition, after an operation of switching a page in the application, exiting the application, or starting another application by the user is received, the floating UI element may continue to be displayed on the screen of the mobile phone, so that it is more convenient to view or share information across applications. For example, after the mobile phone receives the tap operation of the user for the floating UI element, the mobile phone may invoke an application selector of the system, so that the user selects an application to be used to view the picture displayed in the form of the floating UI element. For example, after the mobile phone displays the picture on the screen of the mobile phone in the form of the floating UI element, the mobile phone (for example, the framework layer of the mobile phone) may store an identifier of the floating UI element and the picture in the mobile phone in an association manner. After the user selects the application for viewing the picture, the application may display the picture in the floating UI element to the user by using the application based on a stored association relationship. In addition, the floating UI element can be moved. For another example, when the user wants to use the picture across pages or applications, for example, share the picture with a friend, the user does not need to open the gallery application again to view the picture, selects the picture, and drags the floating UI element to an input box on a chat interface with the friend. In this way, the picture in the floating UI element may be shared with the friend, and the like, to improve interaction efficiency. A specific implementation is similar to the implementation of filling the input box with the text displayed in the form of the floating UI element, and details are not described herein again.

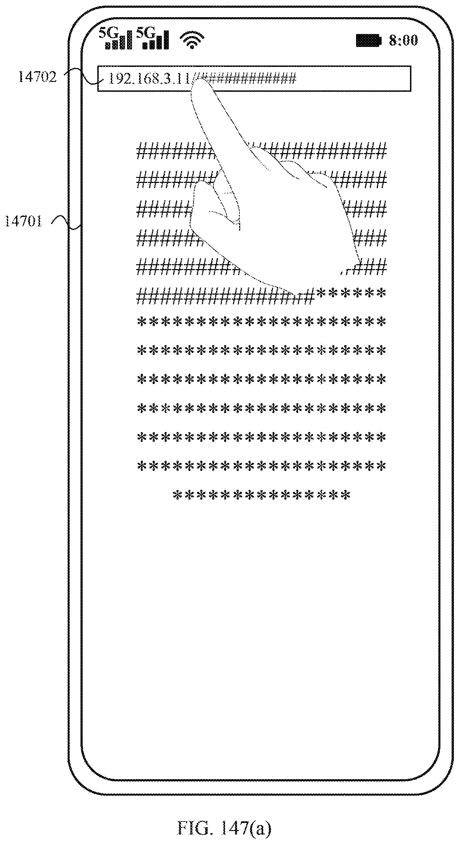

With reference to FIG. 147(a) to FIG. 147(c), a process of displaying a uniform resource locator (uniform resource locator, URL) network address on the screen of the mobile phone in the form of the floating UI element is described as an example.

The process of displaying the URL network address on the screen of the mobile phone in the form of the floating UI element is similar to the process of displaying the text type element on the screen of the mobile phone in the form of the floating UI element, and a detailed process is not described again. Herein, an example is used to describe the process of displaying the URL network address on the screen of the mobile phone in the form of the floating UI element Similar to the description of the embodiments shown in FIG. 143A(a) to FIG. 143A(c) and FIG. 143B(a) to FIG. 143B(c), an operation of triggering display of the URL network address in the form of the floating UI element may be a drag operation of the user for the URL network address, or may be a copy operation for the URL network address. For example, with reference to FIG. 147(a) to FIG. 147(c), the operation of triggering the display of the URL network address in the form of the floating UI element is the copy operation for the URL network address. As shown in FIG. 147(a), the mobile phone currently displays a web page 14701. When the user wants to display a URL network address of the web page 14701 on the screen of the mobile phone in the form of the floating Ul element, the user may perform a copy operation on the URL network address. After receiving the copy operation, the mobile phone may display the URL network address on the screen of the mobile phone in the form of the floating UI element

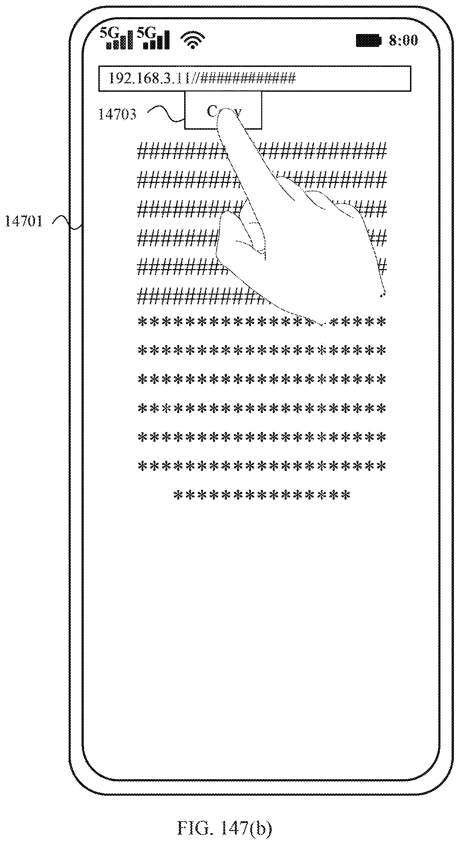

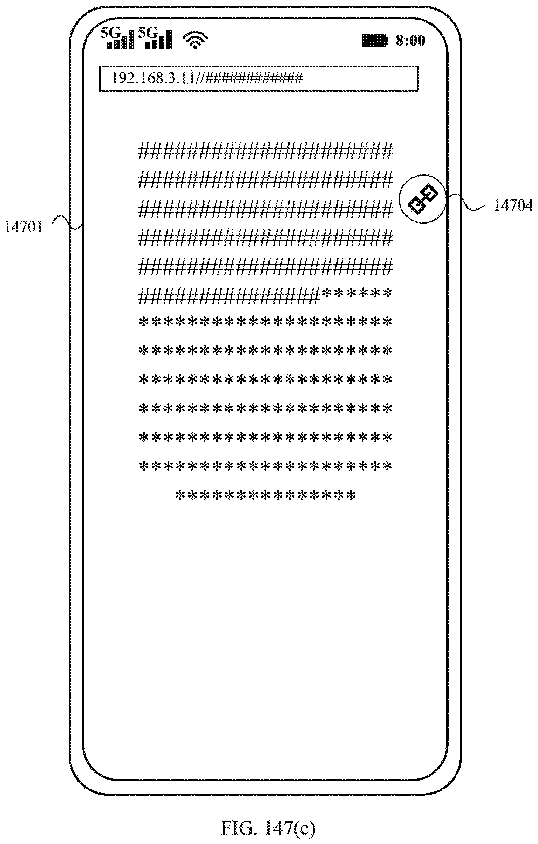

The copy operation for the URL network address may include one or more operations. For example, the copy operation for the URL network address may include an operation of touching and holding a network address bar (or the URL network address in the network address bar) and an operation for a copy button. Still refer to FIG. 147(a). The user may touch and hold a network address bar 14702 on the web page 14701. The web page 14701 may be the first interface in embodiments of this application. A URL network address in the network address bar 14702 may be the first element in embodiments of this application. As shown in FIG. 147(b), in response to a touch and hold operation of the user for the network address bar 14702, the mobile phone may display an operation menu. The operation menu includes a "Copy" button 14703. After the mobile phone receives an operation of the user for the "Copy" button 14703, for example, a tap operation, as shown in FIG. 147(c), the mobile phone may display a floating UI element 14704 on the screen of the mobile phone. The floating UI element 14704 includes a link icon. The floating UI element 14704 may be the first floating element in embodiments of this application. The link icon is used to link to a web page corresponding to the URL network address in the network address bar 14702, that is, a URL network address copied by the user is displayed on the screen of the mobile phone in the form of the floating UI element.

It should be noted that a specific implementation process in which the URL network address is presented on the screen of the mobile phone by using the floating UI element is similar to the specific implementation process in which the text type element is presented on the screen of the mobile phone by using the floating UI element shown in FIG. 144, and details are not described herein again. A difference lies in that the drag event includes a URL network address and an element type that is presented by using a floating UI element and that is of a URL, and the element control module at the application layer of the mobile phone may use the link icon as a shadow.

By using the technical solution of the embodiment shown in FIG. 147(a) to FIG. 147(c), for a URL network address, the user may display the URL network address on the screen of the mobile phone in the form of the floating UI element by performing the drag operation or the copy operation, for example, adsorb and display the URL network address on an edge of a screen of a terminal. In addition, after an operation of switching a page in the application, exiting the application, or starting another application by the user is received, the floating UI element may continue to be displayed on the screen of the mobile phone, so that it is more convenient to view or share information across applications. For example, after the mobile phone receives a tap operation of the user for the floating UI element, the mobile phone may jump to a web page of a URL network address presented by using the floating UI element. For example, after the mobile phone displays the URL network address on the screen of the mobile phone in the form of the floating UI element, the mobile phone (for example, the framework layer of the mobile phone) may store an identifier of the floating UI element and the URL network address in the mobile phone in an association manner. After the user taps the floating UI element, the mobile phone may start, based on a stored association relationship, a URL network address corresponding to the identifier of the floating UI element by using a corresponding application, and display the URL network address to the user. The application may be a default application set by the user, or may be an application automatically selected by the system. In addition, the floating UI element can be moved. For another example, when the user wants to use the URL network address across pages or applications, for example, share the URL network address with a friend, the user may paste the URL network address in the floating UI element to an input box by dragging the floating UI element to the input box of a chat interface with the friend, to share the URL network address with the friend, and the like. A specific implementation is similar to the implementation of filling the input box with the text displayed in the form of the floating UI element, and details are not described herein again.

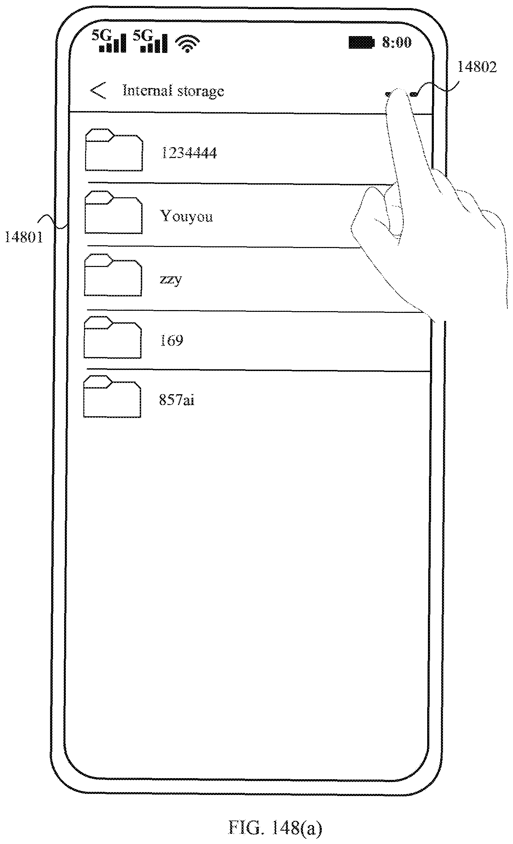

With reference to FIG. 148(a) to FIG. 148(d), a process of displaying a file resource type element on the screen of the mobile phone in the form of the floating UI element is described as an example.

The file resource type element may refer to a picture, a document, a compressed package, or a file resource of another type that is stored in a mobile phone system in a file form. An operation of triggering display of the file resource type element in the form of the floating UI element may be a drag operation of the user for the file resource type element.

For example, as shown in FIG. 148(a), the mobile phone displays a file resource management page 14801. The resource management page 14801 may be the first interface in embodiments of this application. When the user wants to display one or more file resources on the file resource management page 14801 on the screen of the mobile phone in the form of the floating UI element, the user may perform a drag operation on the file resource. After the user releases drag, the mobile phone may display the file resource on the screen of the mobile phone in the form of the floating UI element

The drag operation may include one or more operations. For example, the drag operation may include an operation of triggering float of the file resource and an operation of triggering movement of a floating file resource.

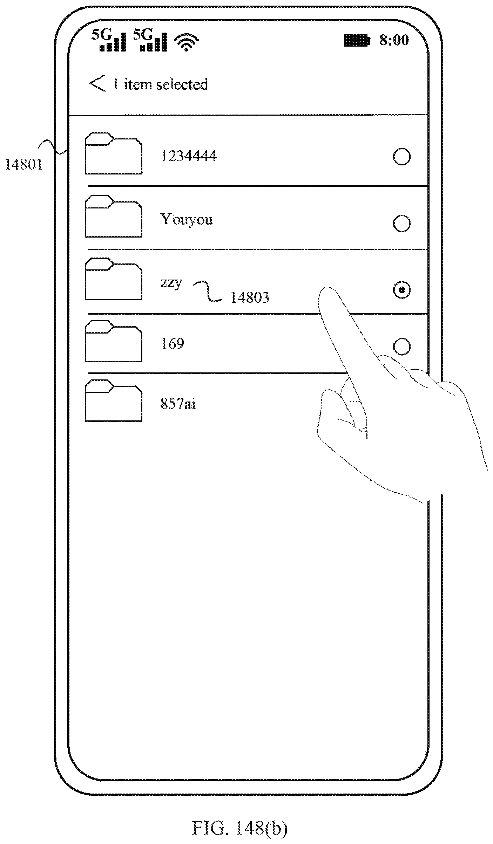

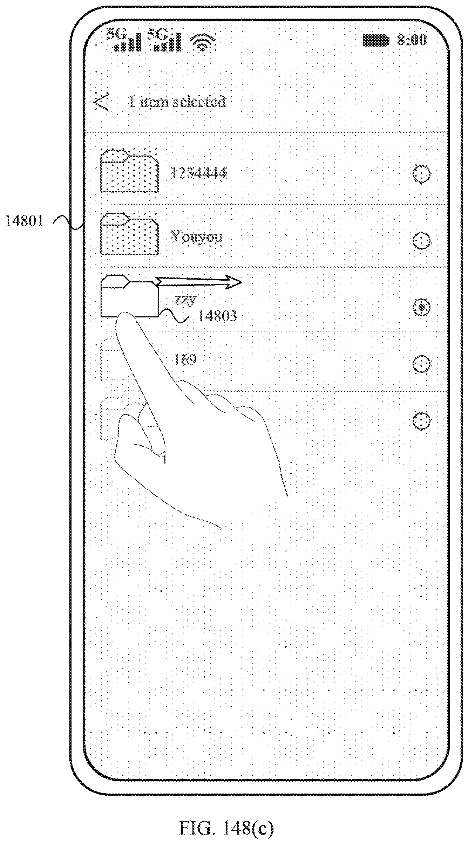

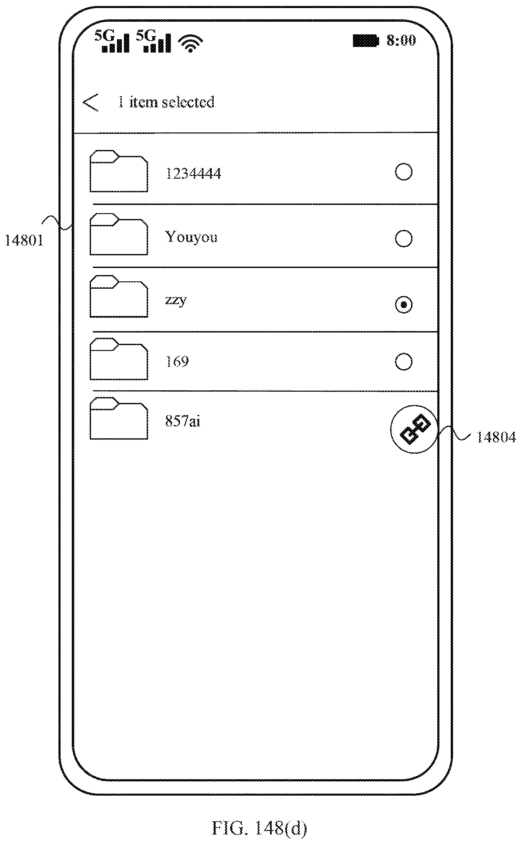

For example, the operation of triggering the float of the file resource is an operation of touching and holding and selecting the file resource, and the operation of triggering the movement of the floating file resource is an operation of pressing and moving the floating file resource. Still refer to FIG. 148(a). The user may perform a tap operation on a select button 14802 on the file resource management page 14801. In response to the operation, as shown in FIG. 148(b), the mobile phone enters a selection mode for a file resource on the file resource management page 14801. The user can select the file resource in the selection mode. If the mobile phone receives a selection operation of the user for a file resource "zyy" 14803, the file resource "zyy" 14803 is in a selected state. The file resource "zyy" 14803 may be the first element in embodiments of this application. The user can touch and hold the selected file resource zyy 14803. In response to the operation of the user, the mobile phone may display the file resource "zyy" 14803 in a floating state. As shown in FIG. 148(c), the mobile phone may perform background blurring processing, and display a floating file resource "zyy" 14803. Then, the user presses the floating file resource "zyy" 14803 and moves a finger (for example, moves a finger rightward), so that the file resource "zyy" 14803 moves on the screen of the mobile phone as the finger of the user moves. Then, the user may release the finger, to release drag. After the user releases the finger, the mobile phone may receive a drag release operation of the user. After the mobile phone receives the drag release operation, as shown in FIG. 148(d), the mobile phone may display a floating UI element 14804 on the screen of the mobile phone. The floating UI element 14804 includes a link icon. The link icon is used to link to a storage address corresponding to the file resource "zyy" 14803 in the mobile phone, that is, the file resource dragged by the user is displayed on the screen of the mobile phone in the form of the floating UI element. For example, the floating UI element 14804 may be adsorbed and displayed on an edge of the screen of the mobile phone (for example, the left edge of the screen or the right edge of the screen, and for example, as shown in FIG. 148(d), the floating UI element 14804 is adsorbed and displayed on the right edge of the screen). The floating UI element 14804 may be the first floating element in embodiments of this application.

It should be noted that a specific implementation process in which the file resource type element is presented on the screen of the mobile phone by using the floating UI element is similar to the specific implementation process in which the text type element is presented on the screen of the mobile phone by using the floating UI element shown in FIG. 144, and details are not described herein again. A difference lies in that the drag event includes a storage address of a file resource in the mobile phone and an element type that is presented by using a floating UI element and that is a file resource type, and the element control module at the application layer of the mobile phone may use the link icon as a shadow.

Similarly, by using the technical solution of the embodiment shown in FIG. 148(a) to FIG. 148(d), for a file resource type element, the user may display the file resource type element on the screen of the mobile phone in the form of the floating UI element by performing the drag operation, for example, adsorb and display the file resource type element on an edge of a screen of a terminal. In addition, after an operation of switching a page in the application, exiting the application, or starting another application by the user is received, the floating Ul element may continue to be displayed on the screen of the mobile phone, so that it is more convenient to view or share information across applications. For example, when the user wants to use the file resource across pages or applications, for example, share the file resource with a friend, the user may share the file resource corresponding to the floating UI element with the friend by dragging the floating UI element to an input box on a chat interface with the friend. A specific implementation is similar to the implementation of filling the input box with the text displayed in the form of the floating UI element, and details are not described herein again.

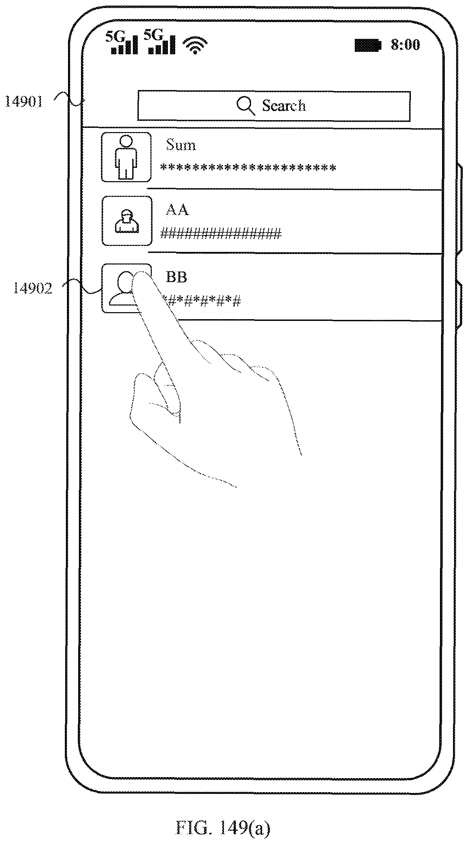

With reference to FIG. 149(a) to FIG. 149(c), a process of displaying a list type element on the screen of the mobile phone in the form of the floating UI element is described as an example.

The list type element is a native control type of Android^{™}. For example, ListView and RecyclerView are list type elements. The list type element may be specifically a list type element in an application such as a social application, a communication application, or a shopping application. An operation of triggering display of the list type element in the form of the floating UI element may be a drag operation of the user for an element included in a list item in a list, for example, an element indicating a user avatar in the list item. For example, as shown in FIG. 149(a), the mobile phone currently displays a home page 14901 of WeChat^{™}. When the user wants to display a list type element on the home page 14901 of WeChat^{™}, for example, a chat list item with one or more friends, on the screen of the mobile phone in the form of the floating UI element, the user may perform a drag operation on a contact avatar in the list item. After the user releases drag, the mobile phone may display the contact avatar on the screen of the mobile phone in the form of the floating UI element.

The drag operation may include one or more operations. For example, the drag operation may include an operation of triggering float of the contact avatar and an operation of triggering movement of a floating contact avatar.

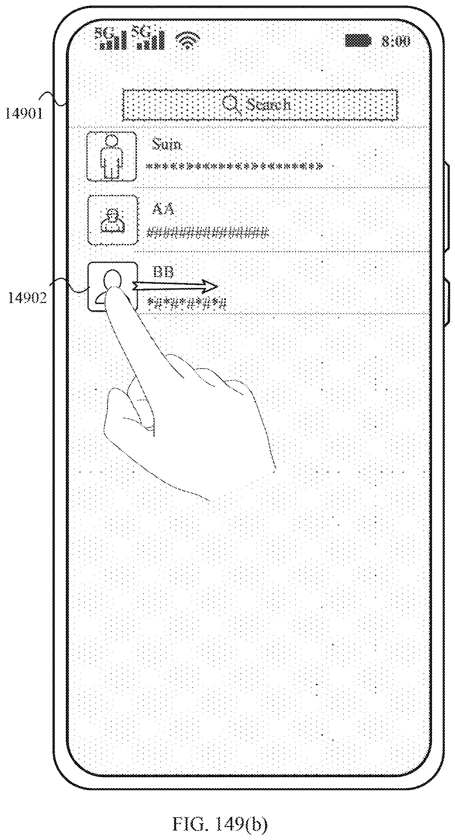

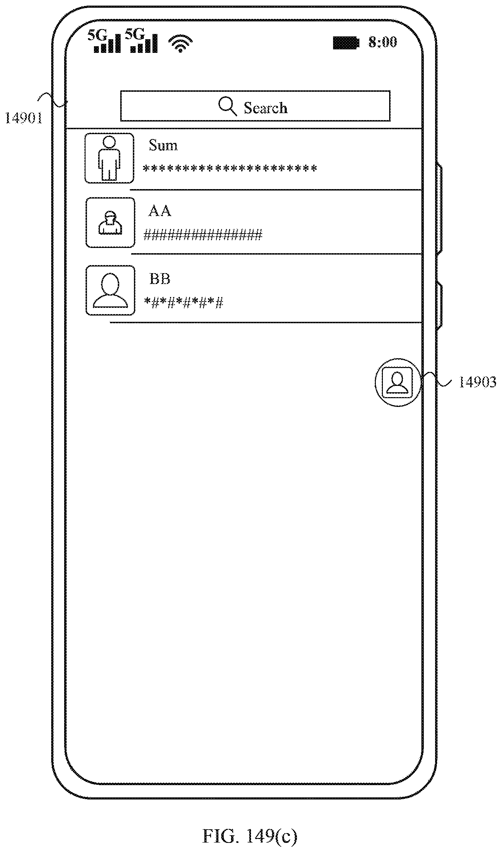

For example, the operation of triggering the float of the contact avatar is an operation of touching and holding the contact avatar, and the operation of triggering the movement of the floating contact avatar is an operation of pressing and moving the floating contact avatar. Still refer to FIG. 149(a). The user may touch and hold a contact avatar 14902 of a friend BB on the home page 14901 of WeChat^{™}. The home page 14901 of WeChat^{™} may be the first interface in embodiments of this application. The mobile phone may receive a touch and hold operation of the user for the contact avatar 14902. In response to the touch and bold operation, the mobile phone may display the contact avatar 14902 in a floating state. The contact avatar 14902 may be the first element in embodiments of this application. For example, as shown in FIG. 149(b), the mobile phone may perform background blurring processing, and display a floating contact avatar 14902. Then, the user presses the floating contact avatar 14902 and moves a finger (for example, moves a finger rightward), so that the contact avatar 14902 moves on the screen of the mobile phone as the finger of the user moves. Then, the user may release the finger, to release drag. After the user releases the finger, the mobile phone may receive a drag release operation of the user. After the mobile phone receives the drag release operation, as shown in FIG. 149(c), the mobile phone may display a floating UI element 14903 on the screen of the mobile phone. The floating UI element 14903 includes the contact avatar 14902, that is, the contact avatar that is dragged by the user and that is in the list item is displayed on the screen of the mobile phone in the form of the floating UI element The floating UI element 14903 may be the first floating element in embodiments of this application.

It should be noted that the embodiment shown in FIG. 149(a) to FIG. 149(c) is described by using an example in which the list type element is a list item in WeChat^{™}. Alternatively, the list type element may be a list item in another application interface, for example, a list item in an address book, or a list item in an SMS message. This is not specifically limited in this embodiment either.

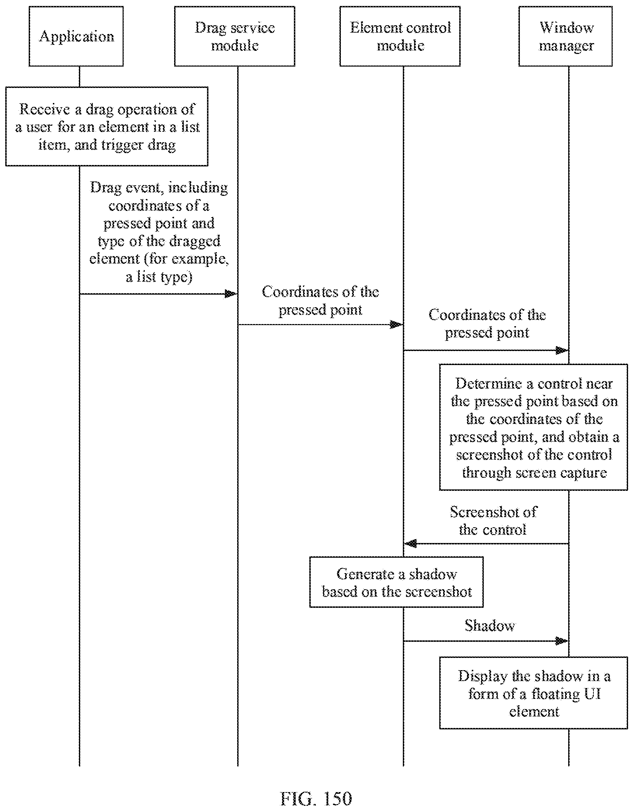

With reference to FIG. 142, as shown in FIG. 150, in an example, a specific implementation process in which the list type element is presented on the screen of the mobile phone by using the floating UI element may be as follows: After receiving a drag operation of a user for an element in a list item, a mobile phone, for example, an application at an application layer of the mobile phone may trigger drag for the element. The application at the application layer of the mobile phone may obtain a drag event and send the drag event to a drag service module at the application layer of the mobile phone. For example, a process in which the application at the application layer of the mobile phone obtains the drag event may be as follows: After the user performs the drag operation, a framework layer of the mobile phone may listen and detect the drag operation (for example, which may be specifically the touch and hold operation for the floating contact avatar), and in response to the drag operation, the framework layer of the mobile phone may generate the drag event (DragEvent). The application at the application layer of the mobile phone may obtain the drag event generated by the framework layer through callback. The drag event may include coordinates of a press point when the user performs the touch and hold operation and a type (for example, a list type) of a dragged element After receiving the drag event, the drag service module at the application layer of the mobile phone may cooperate with the element control module at the application layer of the mobile phone to construct a shadow (shadow) based on the coordinates of the press point in the drag event and the type (for example, the list type) of the dragged element For example, if the drag service module at the application layer of the mobile phone determines that the type of the dragged element is the list type, the drag service module at the application layer of the mobile phone may transmit the coordinates of the press point in the drag event to a window manager at the framework layer of the mobile phone. The window manager may determine a control within a preset range of the press point based on the coordinates of the press point, capture a screenshot of the control, and transmit the screenshot to the clement control module at the application layer of the mobile phone, so that the element control module generates the shadow based on the screenshot. The preset range of the press point may be within a distance of a predetermined pixel (for example, one pixel or more pixel) centered on the press point. Then, the element control module at the application layer of the mobile phone may transmit the generated shadow to the window manager at the framework layer of the mobile phone, so that the window manager displays the shadow in a form of a floating UI element For example, the window manager displays a circular element on the screen of the mobile phone. The circular element is a floating UI element, and includes a control screenshot of a press point for the user, for example, a contact avatar.

By using the technical solution of the embodiment shown in FIG. 149(a) to FIG. 149(c), for an interface element of a list type, the user may display the list item, for example, the element included in the list item, on the screen of the mobile phone in the form of the floating UI element by performing the drag operation. To be specific, the element that is dragged by the user and that is in the list item may be presented on the screen of the mobile phone by using the floating UI element. In addition, after an operation of switching a page in the application, exiting the application, or starting another application by the user is received, the floating UI element may continue to be displayed on the screen of the mobile phone. The floating UI element supports an operation that is supported after an original list item is tapped. To be specific, after the user performs a corresponding operation (where the operation may be the fifth operation in embodiments of this application), for example, the user taps the floating UI element, a response (or an executed function, where the function may be the first function in embodiments of this application) made by the mobile phone is the same as a response made by the mobile phone after the user taps the original list item. A specific implementation may be as follows: After the user performs the drag operation on an element in the list item, for example, a contact avatar, the application at the application layer of the mobile phone may send, to the drag service module at the application layer of the mobile phone, an intent (intent) that needs to be triggered after the contact avatar is tapped, so that after the mobile phone displays the contact avatar on the screen of the mobile phone in the form of the floating UI element, the mobile phone may store, in the mobile phone in an association manner, an identifier of the floating UI element and the intent that needs to be triggered. Then, after the mobile phone receives the operation of the user for the floating UI element, for example, a tap operation, the mobile phone may invoke a corresponding intent that needs to be triggered, to correspondingly respond.

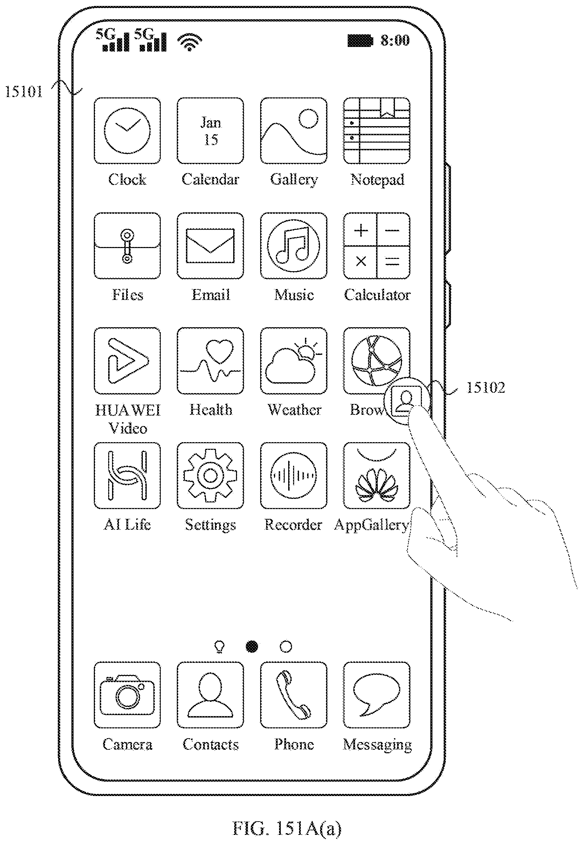

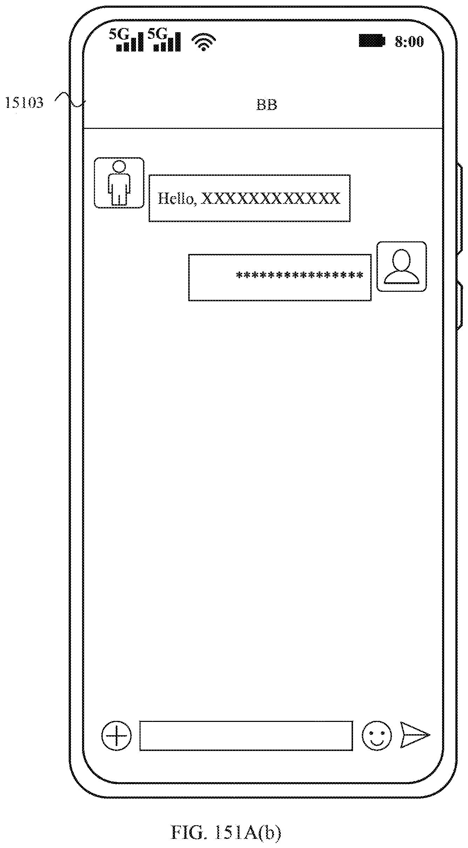

For example, with reference to the example shown in FIG. 149(a) to FIG. 149(c), after the user drags the contact avatar of the friend BB to trigger display of the contact avatar on the screen of the mobile phone in the form of the floating UI element, the user triggers the mobile phone to exit WeChat^{™}. As shown in FIG. 15 1A(a), the mobile phone displays a desktop 15101. The contact avatar of the friend BB continues to be displayed on the screen of the mobile phone in the form of the floating UI element, for example, a floating UI element 15102 shown in FIG. 151A(a). In addition, the mobile phone stores, in the mobile phone in an association manner, an identifier of the floating UI element 15102 and an intent that needs to be triggered. For example, the intent that needs to be triggered is to display the chat interface with the friend BB. After the mobile phone receives an operation of the user for the floating UI element 15102, for example, a tap operation, in response to the operation, as shown in FIG. 151A(b), the mobile phone displays a chat interface 15103 with the friend BB.

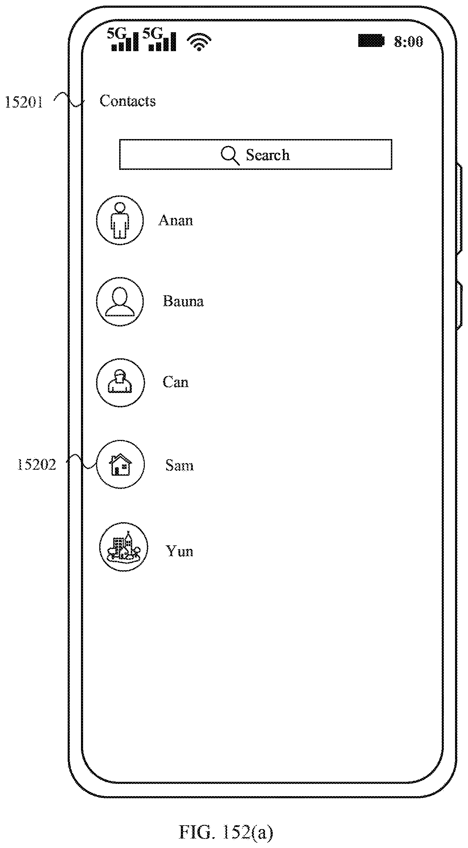

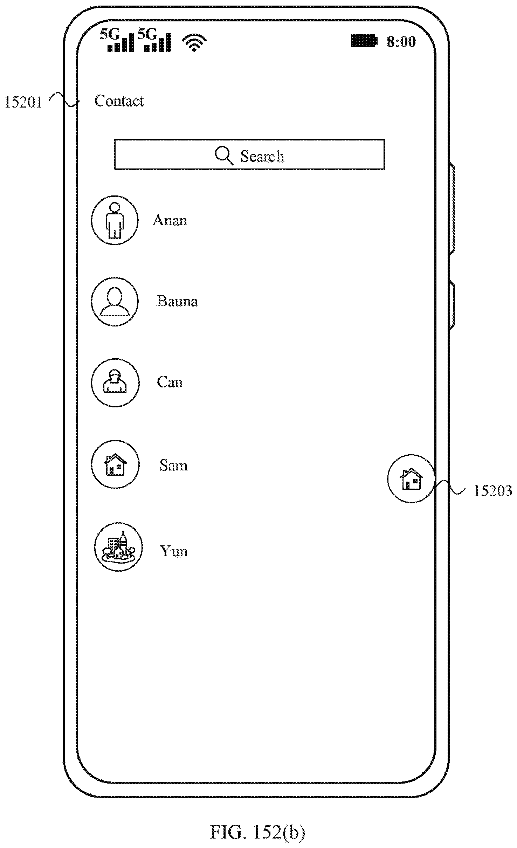

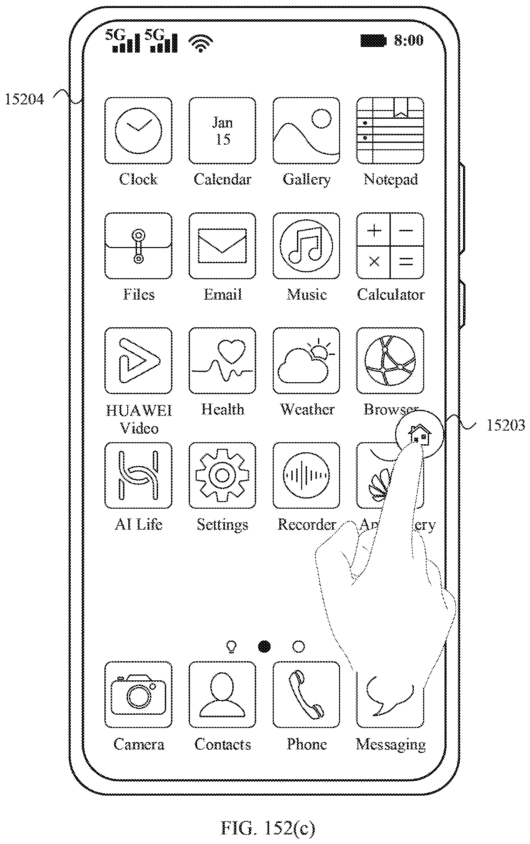

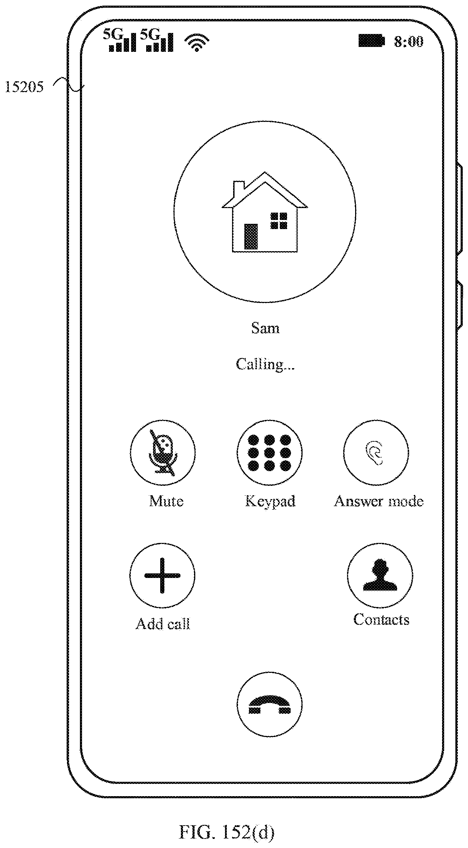

For another example, with reference to FIG. 152(a) to FIG. 152(d), as shown in FIG. 152(a), the mobile phone displays an address book interface 15201. After the mobile phone receives a drag operation of the user for an avatar 15202 of a contact Sam in the address book interface 15201, as shown in FIG. 152(b), the mobile phone displays a floating UI element 15203. The floating UI element 15203 includes the avatar 15202 of the contact Sam, that is, the avatar 15202 that is of the contact Sam in the address book interface 15201 and that is dragged by the user is displayed on the screen of the mobile phone in the form of the floating UI element. In addition, the mobile phone stores, in the mobile phone in an association manner, an identifier of the floating UI element 15203 and an intent that needs to be triggered. For example, the intent that needs to be triggered is to make a call to a corresponding contact. As shown in FIG. 152(c), the user triggers the mobile phone to exit an address book, and the mobile phone displays a desktop 15204. The floating UI element 15203 continues to be displayed on the screen of the mobile phone. Then, after the mobile phone receives an operation of the user for the floating Ul element 15203, for example, a tap operation, in response to the operation, the mobile phone may make a call to the contact Sam. In addition, as shown in FIG. 152(d), the mobile phone may further display a dialer screen 15205.

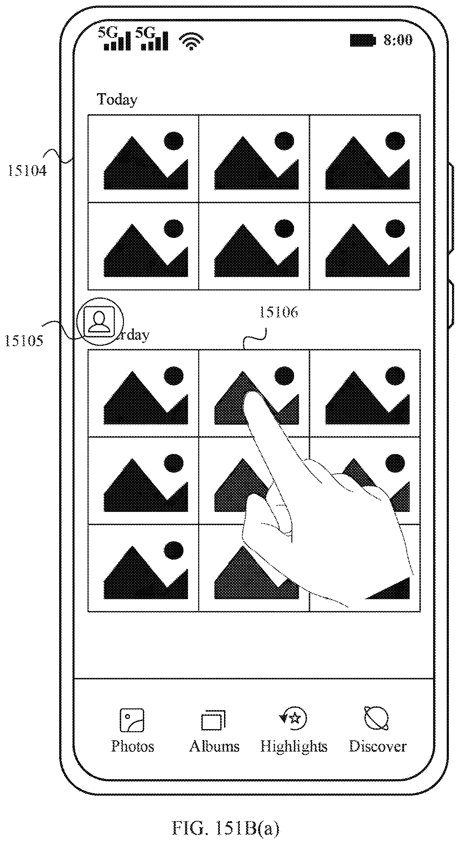

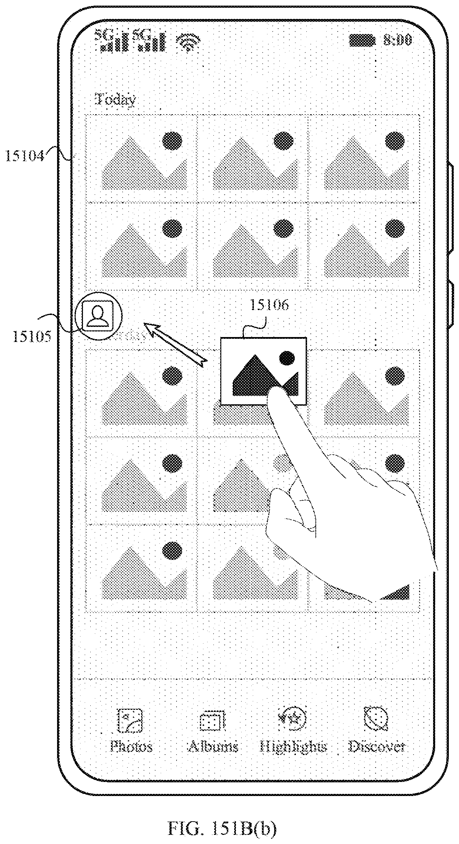

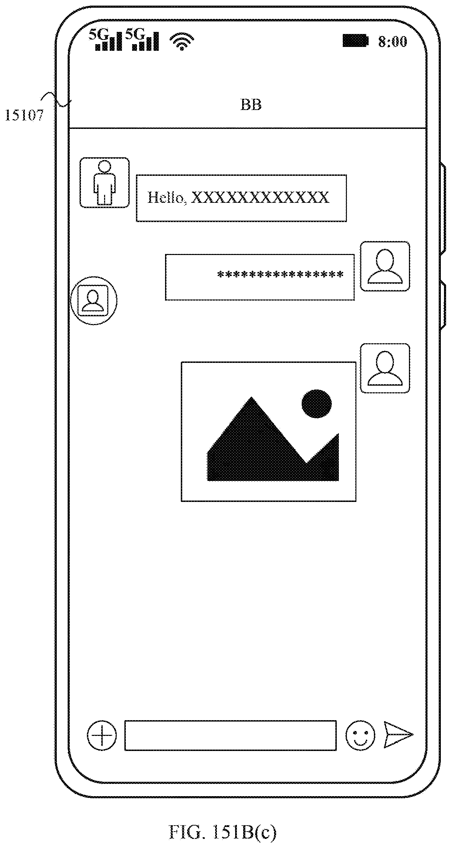

In addition, for a contact avatar displayed in a form of a floating UI element, when content such as a picture, a URL, or a text is dragged to the floating UI element, the mobile phone may directly send the content to a corresponding contact. The operation of dragging the content may include an operation of triggering float of the content and an operation of triggering movement of floating content For example, the operation of triggering the float of the content is an operation of touching and holding the content, and the operation of triggering the movement of the floating content is an operation of pressing and moving the floating content. For example, with reference to the example shown in FIG. 149(a) to FIG. 149(c), after the user drags the contact avatar of the friend BB to trigger the display of the contact avatar on the screen of the mobile phone in the form of the floating UI element, the user opens the gallery application. As shown in FIG. 151B(a), the mobile phone displays an interface 15104 of the gallery application. The contact avatar of the friend BB continues to be displayed on the screen of the mobile phone in the form of the floating UI element, for example, a floating UI element 15105 shown in FIG. 151B(a). After the mobile phone receives a touch and hold operation of the user for a picture 15106 on the interface 15104 of the gallery application, as shown in FIG. 151B(b), the mobile phone displays the picture 15106 in a floating manner. Then, after the mobile phone receives an operation of pressing and moving the floating picture 15106 by the user, and the mobile phone displays an animation in which the picture 15106 moves. If the mobile phone receives an operation of releasing drag when the user moves the picture 15106 to a location of the floating UI element 15105, the mobile phone sends the picture 15106 to the friend BB. In addition, as shown in FIG. 151B(c), the mobile phone may further automatically start a chat interface 15107 with the friend BB, and display a message indicating successfully sending. A specific implementation in which the mobile phone sends a picture to a friend may be as follows: On the basis that the mobile phone stores, in the mobile phone in an association manner, the identifier of the floating UI element and the intent that needs to be triggered (for example, the intent that needs to be triggered is to display the chat interface with the friend BB), after receiving an operation that the user drags content (for example, the picture 15106) to the location of the floating UI element and releases drag, the mobile phone may invoke a corresponding intent that needs to be triggered, to start a chat interface. The mobile phone may further construct material data (ClipData), and store the content dragged by the user to the ClipData. Then, the mobile phone releases the ClipData on the started chat interface. In this way, the application processes the ClipData, that is, sends the content in the ClipData to a corresponding contact friend. It should be noted that the example shown in FIG. 151B(a) to FIG. 151B(c) is described by using an example in which the picture is directly dragged to the contact avatar presented by using the floating UI element, to trigger the mobile phone to directly send the picture to the corresponding contact. It may be understood that, in this embodiment, a send operation is triggered when the user drags, for example, a text, a picture, a URL, or a file, to a floating UI element (for example, the contact avatar presented by using the floating UI element) that can respond to a send event and releases. In this way, interaction efficiency of common operations such as sharing and sending content can be improved.

In the foregoing example, an example in which the mobile phone stores, in the mobile phone in an association manner, the identifier of the floating UI element and the intent that needs to be triggered, to trigger the mobile phone to correspondingly respond after receiving an operation of the user for the floating UI element is used for description. In some other embodiments, the mobile phone may not store, in the mobile phone in an association manner, the identifier of the floating UI element and the intent that needs to be triggered. Instead, after receiving the operation of the user for the floating UI element, the mobile phone sends a corresponding operation event to the application, to trigger the application to correspondingly respond based on the operation event. For example, after receiving the operation of the user for the floating UI element, the mobile phone may determine whether an intent corresponding to the identifier of the floating UI element is stored. If the intent corresponding to the identifier of the floating UI element is stored, the mobile phone may start the intent, to respond to the operation of the user. If the intent corresponding to the identifier of the floating UI element is not stored and the application is still displayed on a foreground, the mobile phone may transmit the corresponding operation event to the home screen, to trigger the application to correspondingly respond based on the operation event. If the application returns to a background, the mobile phone may move an interface of the application to a virtual screen for drawing. After determining that the intent corresponding to the identifier of the floating UI element is not stored, the mobile phone may send the corresponding operation event to the virtual screen that is used to draw the interface of the application, to trigger the application to correspondingly respond based on the operation event

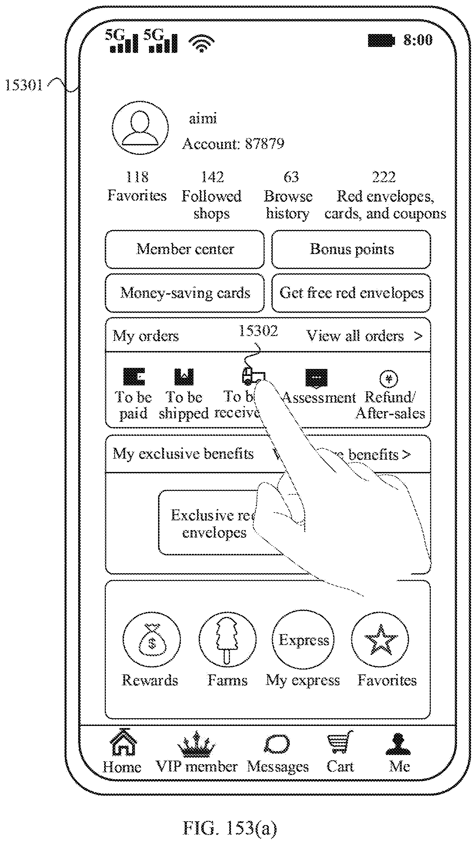

With reference to FIG. 153(a) to FIG. 153(c), a process of displaying an icon type element on the screen of the mobile phone in the form of the floating UI element is described as an example.

The icon type element may refer to a graphic element that is in an interface and that is defined as a tap event. An operation of triggering display of the icon type element in the form of the floating UI element may be a drag operation of the user for the icon type element.

For example, as shown in FIG. 153(a), the mobile phone displays an interface 15301 of Taobao^{™}. The interface 15301 of Taobao^{™} may be the first interface in embodiments of this application. The interface 15301 includes a plurality of controls. When the user wants to display one or more controls on the interface 15301 of Taobao^{™} on the screen of the mobile phone in the form of the floating UI element, the user may perform a drag operation on the control After the user releases drag, the mobile phone may display the control on the screen of the mobile phone in the form of the floating UI element. The drag operation may include one or more operations. For example, the drag operation may include an operation of triggering float of the control and an operation of triggering movement of a floating control.

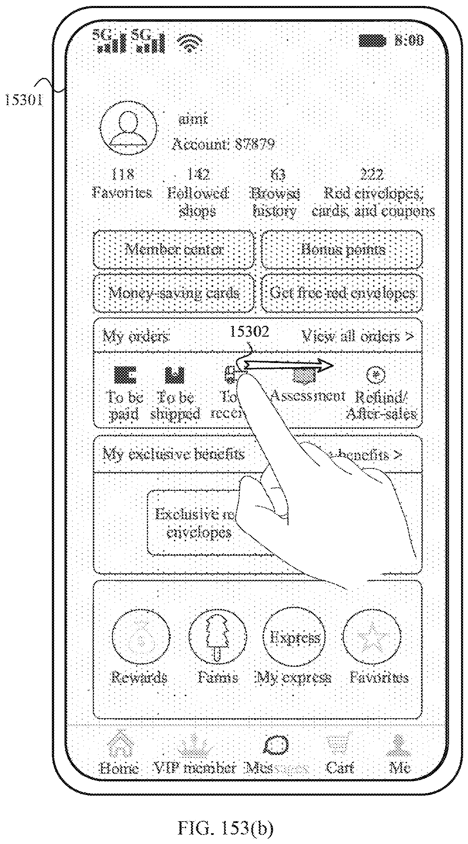

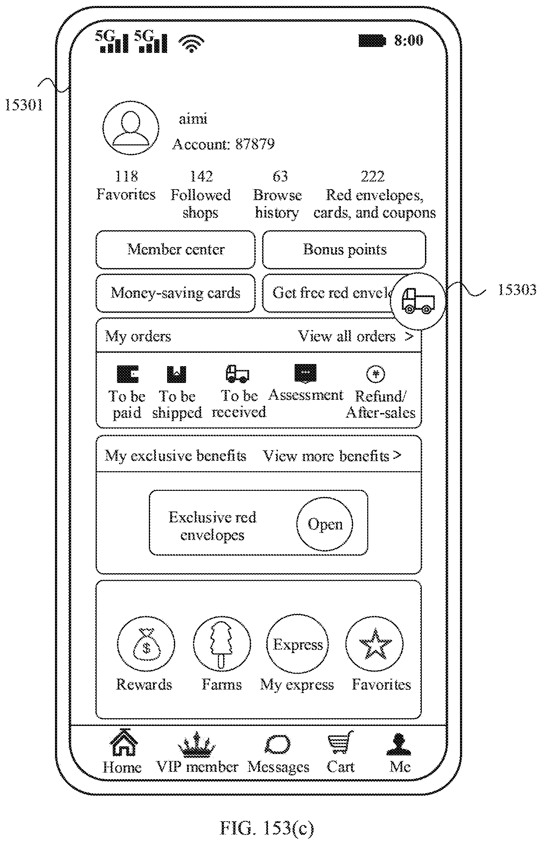

For example, the operation of triggering the float of the control is an operation of touching and holding the control, and the operation of triggering the movement of the floating control is an operation of pressing and moving the floating control. Still refer to FIG. 1 53(a). The user may perform a touch and hold operation on a "To be received" control 15302 on the interface 15301 of Taobao^{™}. The "To be received" control 15302 may be the first element in embodiments of this application. In response to the touch and hold operation, the mobile phone may display the "To be received" control 15302 in a floating state. For example, as shown in FIG. 153(b), the mobile phone may perform background blurring processing, and display a floating "To be received" control 15302. The user presses the floating "To be received" control 15302 and moves a finger (for example, moves a finger rightward), so that the "To be received" control 15302 moves on the screen of the mobile phone as the finger of the user moves. Then, the user may release the finger, to release drag. After the user releases the finger, the mobile phone may receive a drag release operation of the user. After the mobile phone receives the drag release operation, as shown in FIG. 153(c), the mobile phone may display a floating UI element 15303 on the screen of the mobile phone. The floating UI element 15303 includes an icon corresponding to the "To be received" control 15302, that is, the control dragged by the user is displayed on the screen of the mobile phone in the form of the floating UI element. The floating UI element 15303 may be the first floating element in embodiments of this application. The drag operation and the drag release operation may be the second operations in embodiments of this application.

It should be noted that a specific implementation process in which the icon type element is presented on the screen of the mobile phone by using the floating UI element is similar to the specific implementation process in which the list type element is presented on the screen of the mobile phone by using the floating UI element shown in FIG. 150, and details are not described herein again. A difference lies in that the mobile phone may trigger the drag after receiving the drag operation of the user for the control, for example, the touch and hold operation. A type of a dragged element in a drag event is an icon type.

It may be understood that, by using the technical solution of the embodiment shown in FIG. 153(a) to FIG. 153(c), for an icon type element, the user may display the icon type element on the screen of the mobile phone in the form of the floating UI element by performing the drag operation. In addition, after an operation of switching a page in the application, exiting the application, or starting another application by the user is received, the floating UI element may continue to be displayed on the screen of the mobile phone. The floating UI element supports an operation that is supported after the control is tapped. To be specific, after the user performs a corresponding operation (the operation may be the fifth operation in embodiments of this application), for example, the user taps the floating UI element, a response (or an executed function that may be the first function in embodiments of this application) made by the mobile phone is the same as a response made by the mobile phone after the user taps an original control. A specific implementation may be as follows: If the application is still displayed on the foreground, after receiving an operation of the user for the floating UI element, the mobile phone may transmit a corresponding operation event to the home screen, to trigger the application to correspondingly respond based on the operation event. If the application returns to the background, the mobile phone may move the application to a virtual screen for drawing. After receiving an operation of the user for the floating UI element, the mobile phone may send a corresponding operation event to the virtual screen that is used to draw an interface of the application, to trigger the application to correspondingly respond based on the operation event In other words, with reference to the example shown in FIG. 153(a) to FIG. 153(c), after the mobile phone receives an operation of the user for the floating UI element 15303, for example, a tap operation, the mobile phone may display a to-be-received details interface.

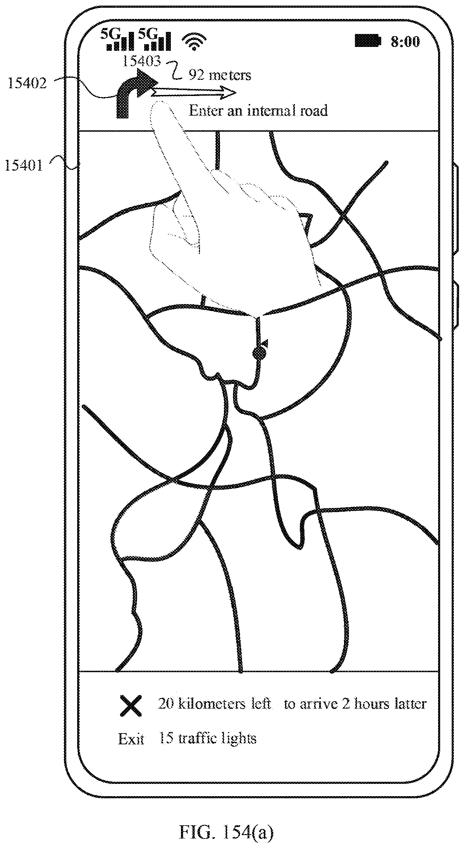

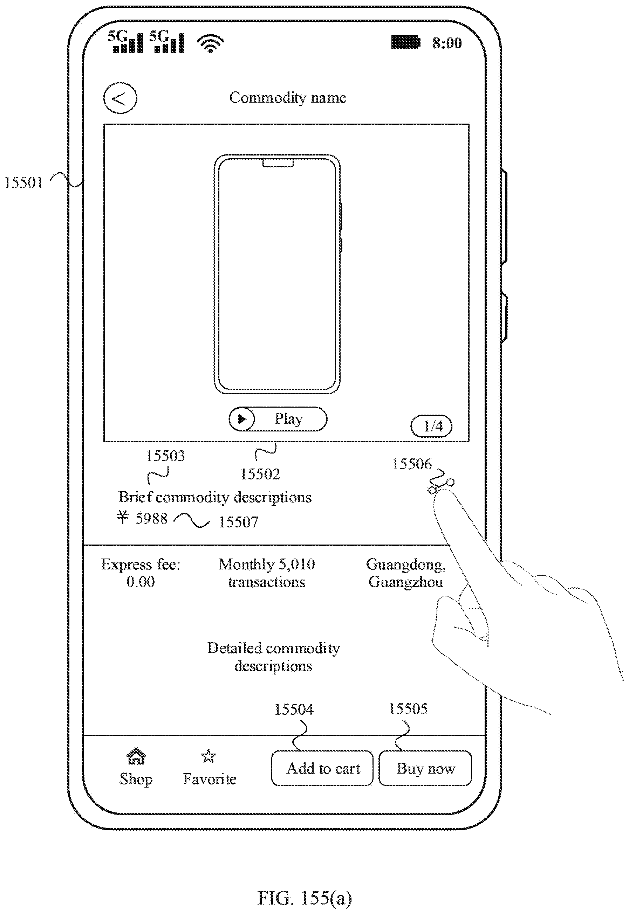

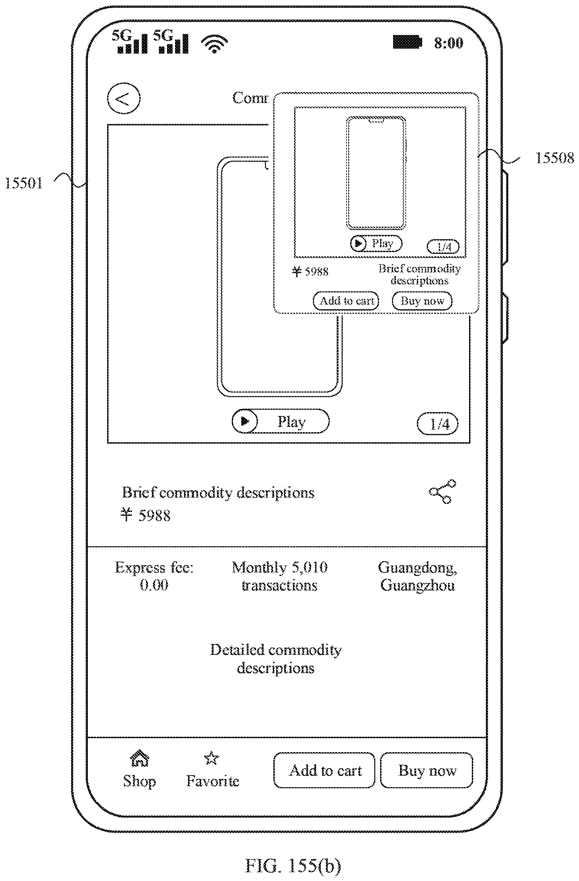

With reference to FIG. 154(a) to FIG. 154(c) and FIG. 155(a) and FIG. 155(b), a process of displaying a card type element on the screen of the mobile phone in the form of the floating UI element is described as an example.

The card type element may refer to an element used to display information. Which elements in an interface are card type elements may be predefined. For example, a corresponding configuration file may be pre-stored in the mobile phone, and the configuration file includes an identifier of the card type element. For example, the card type element may be an element in a navigation application or a shopping application. In some embodiments, an operation of triggering display of the card type element in the form of the floating UI element may be a drag operation of the user for the card type element.

For example, as shown in FIG. 154(a), the mobile phone displays a navigation interface 15401. The navigation interface 15401 may be the first interface in embodiments of this application. When the user wants to display one or more elements on the navigation interface 15401 on the screen of the mobile phone in the form of the floating UI element, the user may perform a drag operation on the element After the user releases drag, the mobile phone may display the element on the screen of the mobile phone in the form of the floating UI element The drag operation may include one or more operations. For example, the drag operation may include an operation of triggering float of the element and an operation of triggering movement of a floating element.

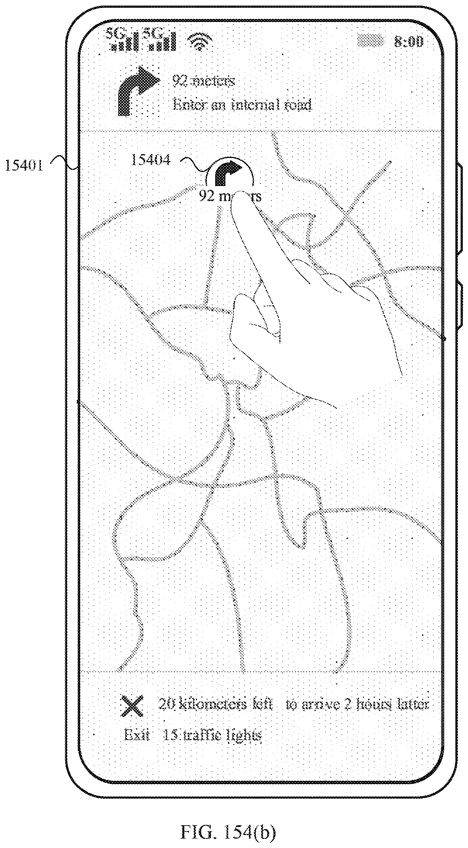

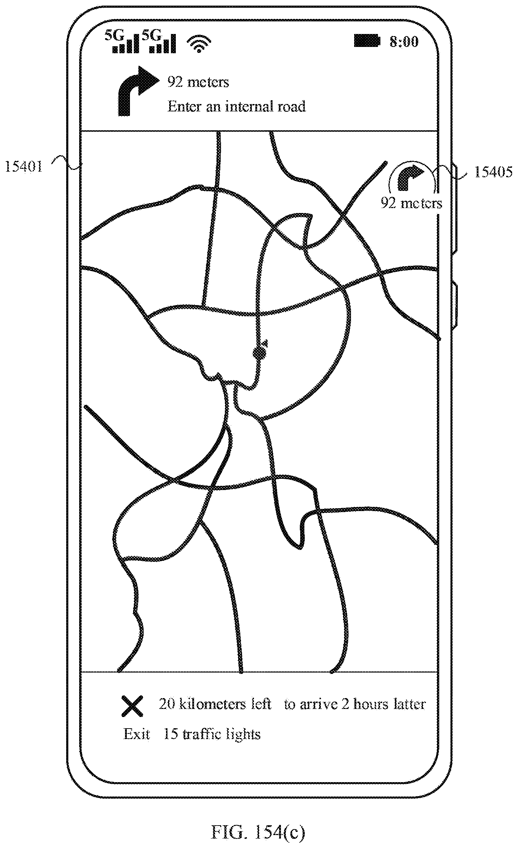

For example, the operation of triggering the float of the element is an operation of touching and holding a display region in which the element is located, and the operation of triggering the movement of the floating element is an operation of pressing and moving the floating element. Still refer to FIG. 154(a). The user may perform a touch and hold operation on a display region in which an element 15402 on the navigation interface 15401 is located. The element 15402 may be the first element in embodiments of this application. in response to the touch and hold operation, the mobile phone may extract some card type elements on the navigation interface 15401 based on a configuration file, for example, extract a card type element in a preset range of a press point, and display the extracted card type element in a floating state. For example, as shown in FIG. 154(a), the mobile phone extracts the element 15402 and an element 15403 on the navigation interface 15401. The element 15403 may be the second element in embodiments of this application. As shown in FIG. 154(b), the mobile phone performs background blurring processing, and displays a floating element 15404. The element 15404 includes the extracted element 15402 and the element 15403. The user presses the floating element 15404 and moves a finger (for example, moves a finger rightward), so that the element 15404 moves on the screen of the mobile phone as the finger of the user moves. Then, the user may release the finger, to release drag. After the user releases the finger, the mobile phone may receive a drag release operation of the user. After the mobile phone receives the drag release operation, as shown in FIG. 154(c), the mobile phone may display a floating UI element 15405 on the screen of the mobile phone. The floating UI element 15405 includes the extracted element 15402 and the element 15403, that is, the element dragged by the user is displayed on the screen of the mobile phone in the form of the floating UI element. The floating UI element 15405 may be the first floating element in embodiments of this application. When the extracted element is displayed in the form of the floating UI element, a layout of the extracted element may be the same as or different from a layout of the element on the interface. When the layout of the extracted element displayed in the form of the floating UI element is the same as the layout of the element on the interface, after extracting the element, the mobile phone may perform layout on the extracted element based on a layout of the extracted element on a current interface, to display the element on the screen of the mobile phone in the form of the floating UI element. When the layout of the extracted element displayed in the form of the floating UI element is different from the layout of the element on the interface, in an example, the mobile phone may pre-store a corresponding layout file. The layout file includes a layout configuration of the extracted element, for example, layout configurations of the element 15402 and the element 15403. After extracting the elements, for example, the element 15402 and the element 15403, the mobile phone may perform layout on the element 15402 and the element 15403 based on the layout file, to display the element in the form of the floating UI element A display effect of the element is, for example, a display effect of the floating Ul element 15405 as shown in FIG. 154(c). The drag operation and the drag release operation may be the second operations in embodiments of this application.

It should be noted that, in the example shown in FIG. 154(a) to FIG. 154(c), a specific implementation process in which the card type element is presented on the screen of the mobile phone by using the floating UI element is similar to the specific implementation process in which the list type element is presented on the screen of the mobile phone by using the floating UI clement shown in FIG. 150, and details are not described herein again. A difference lies in that the mobile phone may trigger the drag after receiving the drag operation of the user for the element, for example, receiving the touch and hold operation for the display region in which the element is located. A type of a dragged element in a drag event is a card type. In addition, during specific implementation, the mobile phone may use, based on coordinates of the press point of the user, the card type element in the preset range of the press point as an element that is subsequently presented by using the floating UI element

In some other embodiments, an operation of triggering display of the card type element in the form of the floating UI element may be an operation of the user for a predetermined button on the interface.

For example, as shown in FIG. 155(a), the mobile phone displays a shopping details interface 15501 of the shopping application. When the user wants to display one or more elements on the shopping details interface 15501 on the screen of the mobile phone in the form of the floating UI element, the user may perform an operation (for example, a tap operation) on a predetermined button, for example, a share button 15506. After receiving the tap operation of the user for a share button, the mobile phone may display some elements on the shopping details interface 15501, for example, a card type element, on the screen of the mobile phone in the form of the floating UI element

For example, still refer to FIG. 155(a). The user performs the operation, for example, the tap operation, on the share button 15506 on the shopping details interface 15501 of the shopping application. In response to the tap operation, the mobile phone may extract the card type element on the shopping details interface 15501, for example, a commodity preview 15502, a commodity price 15507, "Brief commodity descriptions" 15503, an "Add to cart" button 15504, and a "Buy now" button 15505. Then, as shown in FIG. 155(b), the mobile phone may display a floating UI element 15508 on the screen of the mobile phone. The floating UI element 15508 includes the extracted commodity preview 15502, the commodity price 15507, the "Brief commodity descriptions" 15503, the "Add to cart" button 15504, and the "Buy now" button 15505.

After receiving the operation of the user for the predetermined button on the interface, the mobile phone may extract a card type element on the interface based on a corresponding configuration file, to present the card type element to the user in the form of the floating UI element The configuration file defines which elements on the interface are presented in the form of the floating UI element after the operation of the user for the predetermined button is received.

It may be understood that, by using the technical solutions of the embodiments shown in FIG. 154(a) to FIG. 154(c) and FIG. 155(a) and FIG. 155(b), for a card type element, the user may display the card type element on the screen of the mobile phone in the form of the floating UI element by performing the drag operation or performing the operation on the predetermined button. In addition, after an operation of switching a page in the application, exiting the application, or starting another application by the user is received, the floating UI element may continue to be displayed on the screen of the mobile phone for the user to continue to view. In addition, cross-application information sharing may be more convenient. For example, when the user wants to share the card type element with a friend, the user may share the floating UI element with the friend by dragging the floating UI element (a floating UI element 15508 shown in FIG. 155(b)) to an input box of a chat interface with the friend. A specific implementation is similar to the implementation of filling the input box with the text displayed in the form of the floating UI element and sharing the text with the friend, and details are not described herein again. In addition, after receiving the floating UI element, the friend may tap a received floating UI element on a chat interface displayed on the mobile phone, to trigger the mobile phone to display a corresponding shopping details interface.

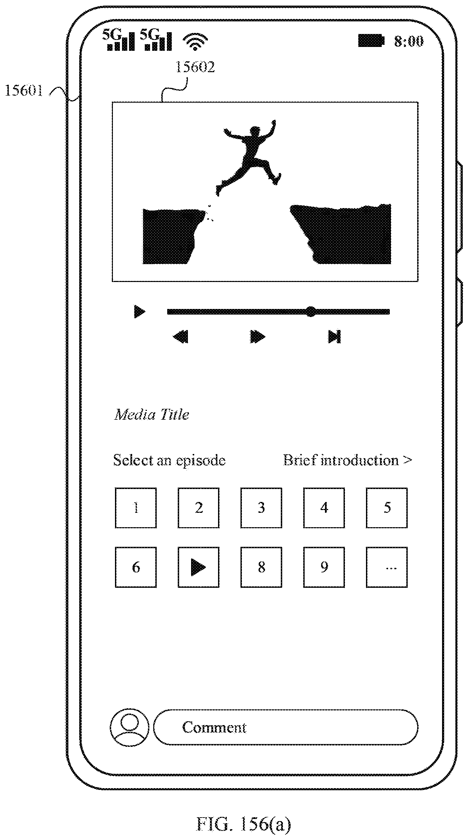

With reference to FIG. 156(a) to FIG. 156(d), a process of displaying a video window type element on the screen of the mobile phone in the form of the floating UI element is described as an example.

The video window type element is a native control type of Android^{™}. For example, a video element in a TextureView, a Surface View, or a webview is a video window type element. An operation of triggering display of the video window type element in the form of the floating UI element may be a drag operation of the user for the video window type element.

For example, as shown in FIG. 156(a), the mobile phone displays a video details interface 15601. When the user wants to display a video element on the video details interface 15601 on the screen of the mobile phone in the form of the floating UI element, the user may perform a drag operation on the video element. After the user releases drag, the mobile phone may display the video element on the screen of the mobile phone in the form of the floating UI element. The drag operation may include one or more operations. For example, the drag operation may include an operation of triggering float of the video element and an operation of triggering movement of a floating video element

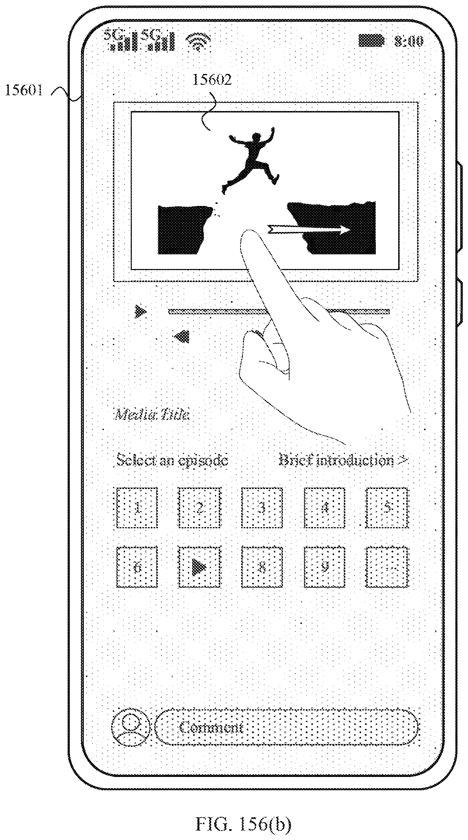

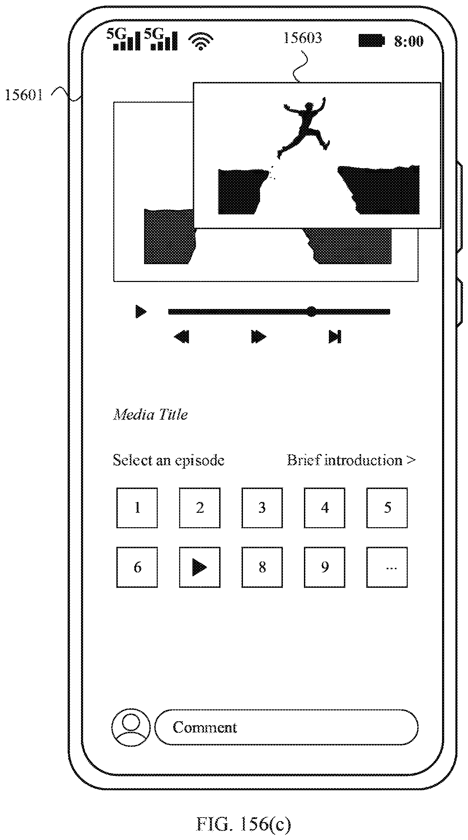

For example, the operation of triggering the float of the video element is an operation of touching and holding the video element, and the operation of triggering the movement of the floating video element is an operation of pressing and moving the floating video element. Still refer to FIG. 156(a). The user may perform a touch and hold operation on a video element 15602 on the video details interface 15601. The video details interface 15601 may be the first interface in embodiments of this application. In response to the touch and hold operation, the mobile phone may display the video element 15602 in a floating state. For example, as shown in FIG. 156(b), the mobile phone may perform background blurring processing, and display a floating video element 15602. The user presses the floating video element 15602 and moves a finger (for example, moves a finger rightward), so that the video element 15602 moves on the screen of the mobile phone as the finger of the user moves. The video element 15602 may be the first element in embodiments of this application. Then, the user may release the finger, to release drag. After the user releases the finger, the mobile phone may receive a drag release operation of the user. After the mobile phone receives the drag release operation, as shown in FIG. 156(c), the mobile phone may display a floating Ul element 15603 on the screen of the mobile phone. The floating UI element 15603 includes the video element 15602, that is, the video element dragged by the user is displayed on the screen of the mobile phone in the form of the floating UI element The floating UI element 15603 may be the first floating element in embodiments of this application. The drag operation and the drag release operation may be the second operations in embodiments of this application.

A specific implementation process in which the video window type element is presented on the screen of the mobile phone by using the floating UI element may be as follows: After receiving a drag operation of a user for a video window type element, a mobile phone, for example, an application at an application layer of the mobile phone, may trigger drag for the video window type element The application at the application layer of the mobile phone may obtain a drag event and send the drag event to a drag service module at the application layer of the mobile phone. For example, a process in which the application at the application layer of the mobile phone obtains the drag event may be as follows: After the user performs the drag operation, a framework layer of the mobile phone may listen and detect the drag operation (for example, which may be specifically the touch and hold operation for the video window type element), and in response to the drag operation, the framework layer of the mobile phone may generate the drag event (DragEvent). The application at the application layer of the mobile phone may obtain the drag event generated by the framework layer through callback. The drag event may include coordinates of a press point, an identifier (for example, a package name) of the application, an identifier of the video window type element, and a type (for example, a video window type) of a dragged element. The drag service module at the application layer of the mobile phone may start a virtual screen, and transfer an identifier of the virtual screen and the package name of the application to a window manager at the framework layer of the mobile phone. The window manager at the framework layer of the mobile phone may move, based on the identifier of the virtual screen and the package name of the application, an interface of the application indicated by the package name, that is, move the video details interface to the virtual screen for drawing. The drag service module at the application layer of the mobile phone may further cooperate with an element control module at the application layer of the mobile phone to construct a shadow (shadow) based on the drag event For example, if the drag service module at the application layer of the mobile phone determines that the type of the dragged element is the video window type, the drag service module at the application layer of the mobile phone may transmit the coordinates of the press point in the drag event to the window manager at the framework layer of the mobile phone. The window manager may determine, based on the coordinates of the press point, an element near the press point, capture a screenshot of the element, and transmit the screenshot to the element control module at the application layer of the mobile phone, so that the element control module generates a shadow based on the screenshot, and transmits the generated shadow to the window manager at the framework layer of the mobile phone. Therefore, the window manager adds the shadow to the home screen of the mobile phone. After the user releases the drag, the drag service module at the application layer of the mobile phone may extract, based on the identifier of the video window type element in the drag event, a corresponding video window type element, for example, a video element, from an interface drawn on the virtual screen, and map the extracted video window type element is mapped to the shadow of the home screen, that is, an effect of displaying the video window type element in a form of a floating UI element is implemented.

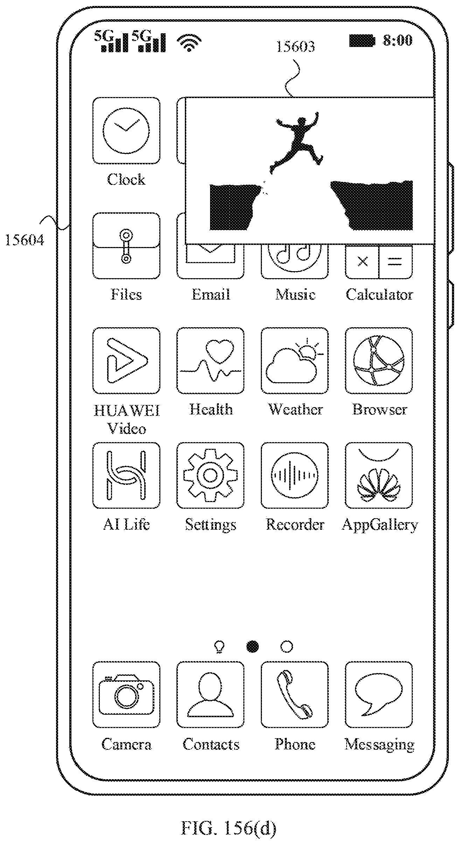

By using the technical solution of the embodiment shown in FIG. 156(a) to FIG. 156(d), for a video window type element, the user may display the video window type element on the screen of the mobile phone in the form of the floating Ul element by performing the drag operation. After an operation of switching a page in the application, exiting the application (displaying a desktop 15604 shown in FIG. 156(d)), or starting another application by the user is received, the floating UI element (for example, a floating UI element 15603 shown in FIG. 156(d)) may continue to be displayed on the screen of the mobile phone for the user to continue to view. In this way, it may be convenient for the user to perform an operation on another interface of the mobile phone while continuing to view a video displayed by the video window type element. In addition, when a video carried in a video window type element is a local video, the user may share the video with a friend by dragging a floating UI element (for example, the floating UI element 15603 shown in FIG. 156(c)) to an input box of a chat interface with the friend. A specific implementation is similar to the implementation of filling the input box with the text displayed in the form of the floating UI element and sharing the text with the friend, and details are not described herein again.

It may be understood that one interface may include a plurality of interface elements. The interface element that can be displayed in a form of a floating Ut element and that is on the interface may be customized by a third-party application or recommended by the system. In other words, the third-party application or the system may define one or more interface elements on the interface to present the floating UI element. For example, a developer of the third-party application may predefine which elements on an interface of the application can be presented in a form of a floating UI element, and configure a corresponding configuration file in the mobile phone. For another example, a system developer may configure a corresponding recommendation model in the mobile phone, and the recommendation model is used to identify which elements on an interface can be presented in a form of a floating UI element Based on this, to help the user learn which elements on the interface can be presented in the form of the floating UI element, in this embodiment, when displaying an interface, the mobile phone may display, in a first form, for example, highlighted, after receiving a corresponding user operation, an element that can be presented in the form of the floating UI element and that is on the interface (where the interface may be the first interface in embodiments of this application), and display, in a second form, an element that cannot be presented in the form of the floating UI element. The user operation may be a preset operation of the user for the element on the interface, for example, a touch and hold operation or a double-tap operation. The user operation may also be an operation of the user for a corresponding on/off button. The user operation may be the first operation in embodiments of this application. The on/off button may be a predetermined function control in embodiments of this application.

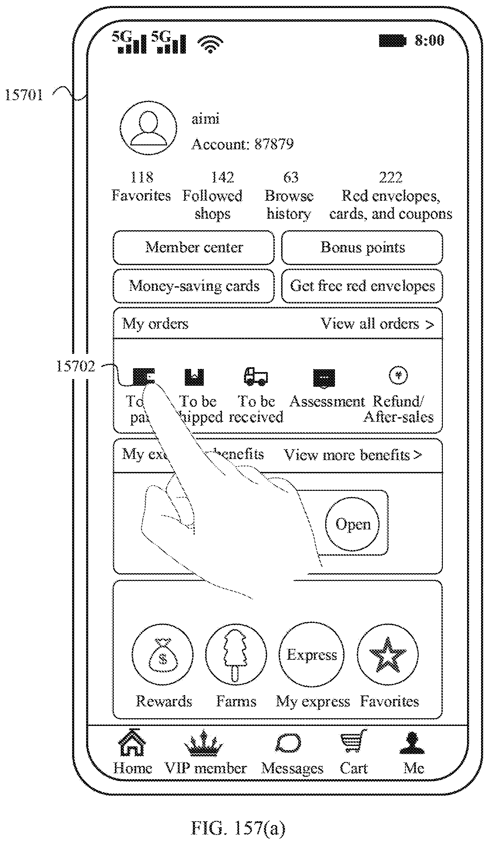

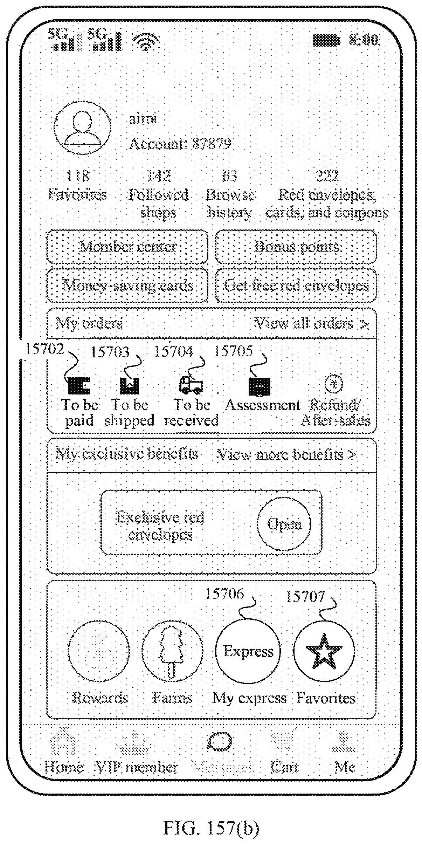

For example, the user operation is the touch and hold operation of the user for the element on the interface. With reference to FIG. 157(a) and FIG. 157(b), an example in which the mobile phone displays an interface 15701 of Taobao^{™} is used. As shown in FIG. 157(a), the user may perform a touch and hold operation on a "To be paid" control 15702 on the interface 15701. After receiving the touch and hold operation for the "To be paid" control 15702, the mobile phone may determine whether the "To be paid" control 15702 can be presented in a form of a floating UI element If the "To be paid" control 15702 can be presented in the form of the floating UI element, the mobile phone may identify, based on a corresponding configuration file or a recommendation model, all elements that can be presented in the form of the floating UI element and that are on the interface 15701. As shown in FIG. 157(b), the mobile phone identifies that the "To be paid" control 15702, a "To be shipped" control 15703, a "To be received" control 15704, a "Comment" control 15705, a "My express" control 15706, and a "Favorites" control 15707 can be presented in the form of the floating UI element. Then, the mobile phone may highlight the elements that can be presented in the form of the floating UI element, for example, display the elements in a floating state. For example, as shown in FIG. 157(b), the mobile phone may perform background blurring processing, and display the floating "To be paid" control 15702, the "To be shipped" control 15703, the "To be received" control 15704, the "Comment" control 15705, the "My express" control 15706, and the "Favorites" control 15707. If the "To be paid" control 15702 cannot be presented in the form of the floating UI element, the mobile phone may not respond.

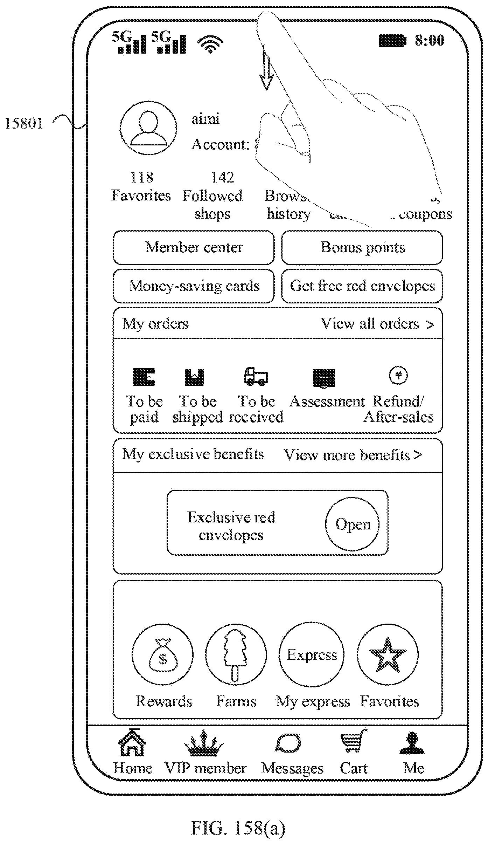

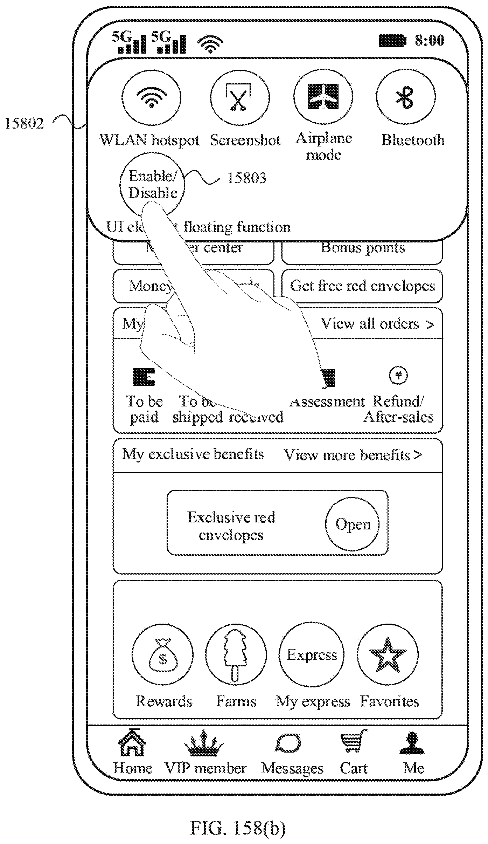

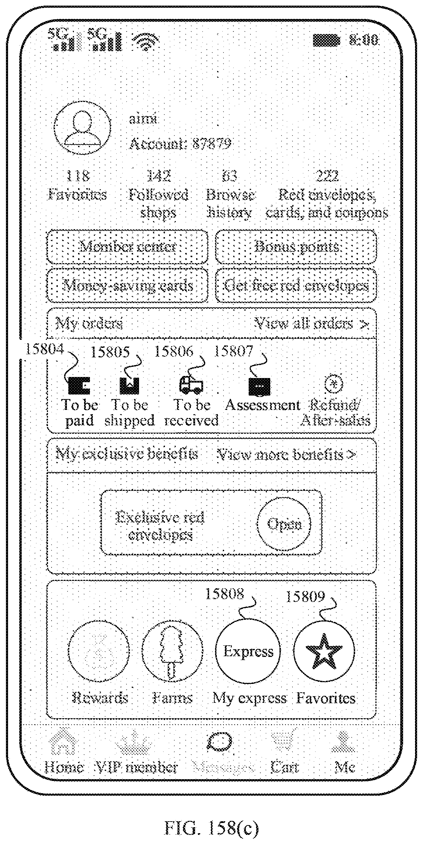

For another example, the user operation is the operation of the user for the corresponding on/off button. With reference to FIG. 158(a) to FIG. 158(c), an example in which the mobile phone displays an interface 15801 of Taobao^{™} is still used. As shown in FIG. 158(a), when the user wants to view which elements on the interface 15801 can be presented in a form of a floating UI element, the user may perform a slide operation that starts from the upper edge of the screen of the mobile phone and that points to the lower edge. In response to the slide operation, as shown in FIG. 158(b), the mobile phone displays a menu bar 15802. The menu bar 15802 includes an "On/Off" button 15803 for a floating UI element function. The user may perform an operation on the "On/Off" button 15803, for example, a tap operation. After the mobile phone receives the tap operation of the user for the "On/Off" button 15803, the mobile phone may identify, based on a corresponding configuration file or recommendation model, all elements that can be presented in the form of the floating UI element and that are on the interface 15801, and display, in a floating state, the elements that can be presented in the form of the floating UI element. For example, as shown in FIG. 158(c), the mobile phone may perform background blurring processing, and display, in a floating state, elements that can be presented in the form of the floating UI element: a "To be paid" control 15804, a "To be shipped" control 15805, a "To be received" control 15806, a "Comment" control 15807, a "My express" control 15808, and a "Favorites" control 15809.

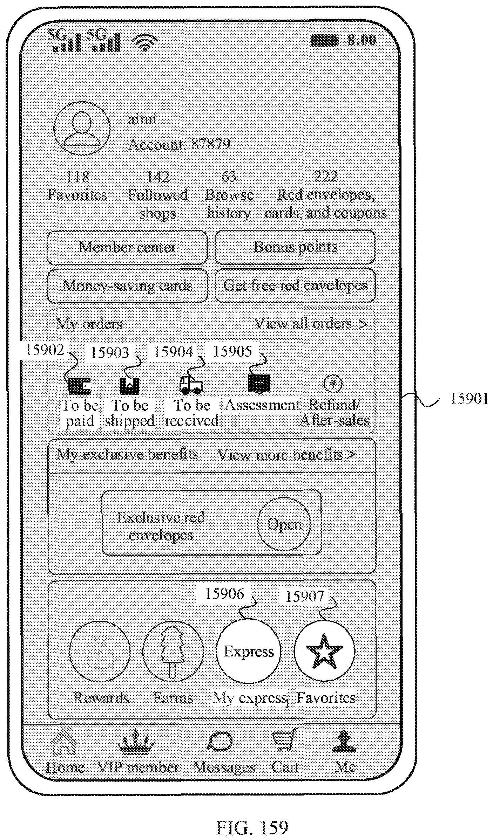

An element that is on the interface and that can be presented in the form of the floating UI element is highlighted, and another element is displayed in a blurred manner, to prompt the user which elements on the interface can be presented in the form of the floating UI element. It should be noted that, in addition to displaying, in the floating state, the element that can be presented in the form of the floating UI element, the element may be displayed in a scaled-up manner, or only the element that can be presented in the form of the floating Ul element is displayed in the scaled-up manner. A highlighting form is not specifically limited herein in this embodiment. For example, as shown in FIG. 159, the mobile phone still displays an interface of Taobao^{™}. After the mobile phone receives the preset operation of the user for the element on the interface or the operation for the corresponding on/off button, in response, the mobile phone may add a dark mask to the current interface, for example, 15901 in FIG. 159. An element that can be presented in the form of the floating UI element is placed above the dark mask (for example, a "To be paid" control 15902, a "To be shipped" control 15903, a "To be received" control 15904, a "Comment" control 15905, a "My express" control 15906, and a "Favorites" control 15907), and another element is placed below the dark mask. Certainly, the element that can be presented in the form of the floating UI element may also be presented in a scaled-up manner. Then, the user may perform a corresponding operation (for example, a drag operation), to trigger display of a corresponding element on the screen of the mobile phone in the form of the floating UI element. After the user completes the corresponding operation (such as the drag operation) or disables a corresponding on/off button, the interface may be restored to an initial display state.

It may be learned from the description of the foregoing embodiment that, by performing the corresponding operation, the user may trigger that the element on the interface is presented on the screen of the mobile phone in the form of the floating UI element. In some embodiments, only one floating UI element may be allowed to be displayed on the screen of the mobile phone. In some other embodiments, a plurality of floating UI elements may be allowed to be displayed on the screen of the mobile phone at the same time. When the plurality of floating UI elements are allowed to be displayed at the same time, a maximum quantity (for example, the maximum quantity is N) of the floating UI elements that are allowed to be displayed at the same time may be limited. For example, the system may configure, by default, whether to allow of a plurality of floating UI elements to be displayed on the screen of the mobile phone at the same time. For example, the system configures, by default, that only one floating UI element is allowed to be displayed on the screen of the mobile phone. For another example, the mobile phone may provide a configuration interface for the user to select whether to allow of a plurality of floating UI elements to be displayed on the screen of the mobile phone at the same time. For example, the user chooses to allow the plurality of floating Ul elements to be displayed on the screen of the mobile phone at the same time. When the user chooses to allow the plurality of floating UI elements to be displayed at the same time, the user may further set a maximum quantity of floating UI elements that are allowed to be displayed at the same time. For another example, the user may select whether to allow of a plurality of floating UI elements to be displayed on the screen of the mobile phone at the same time. When the user chooses to allow all the plurality of floating UI elements to be displayed, a maximum quantity of floating UI elements that are allowed to be displayed at the same time is a default configuration of the system.

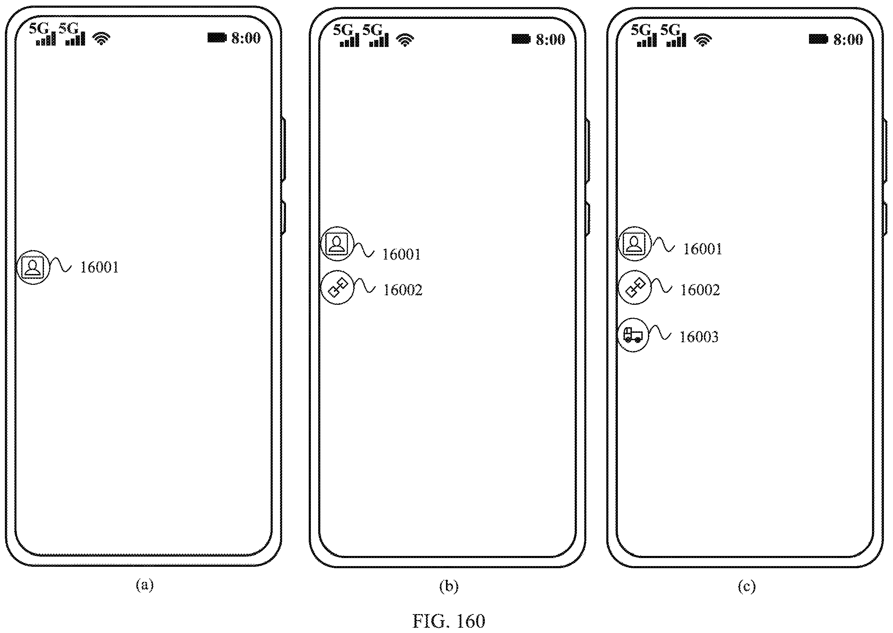

When a plurality of floating Ul elements are allowed to be displayed on the screen of the mobile phone at the same time, the user may perform a corresponding operation (such as a drag operation or a copy operation), to trigger that the mobile phone displays the plurality of elements on the screen of the mobile phone in the form of the floating UI element In some embodiments, the mobile phone may display the plurality of floating UI elements based on a preset arrangement rule. For example, the mobile phone sequentially arranges and displays the plurality of floating UI elements on the screen of the mobile phone according to a generation time sequence of the floating UI elements, for example, sequentially arranges and displays the plurality of floating UI elements on an edge of the screen of the mobile phone from top to bottom. For example, with reference to FIG. 160, as shown in (a) in FIG. 160, the mobile phone displays a floating UI element 16001 on the left edge of the screen of the mobile phone. The user triggers the mobile phone to generate a floating UI element 16002. As shown in (b) in FIG. 160, the mobile phone may arrange and display the floating UI element 16002 after the floating UI element 16001. The user further triggers the mobile phone to generate a floating UI element 16003. As shown in (c) in FIG. 160, the mobile phone may arrange and display the floating UI element 16003 after the floating UI element 16001 and the floating Ul element 16002. In other words, the mobile phone may display an earliest generated floating UI element at the top, and sequentially arrange a subsequently generated floating UI element according to a generation time sequence.

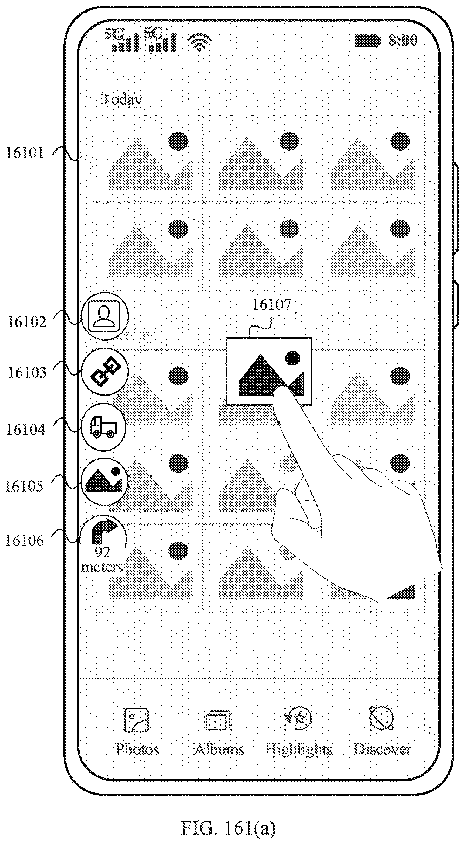

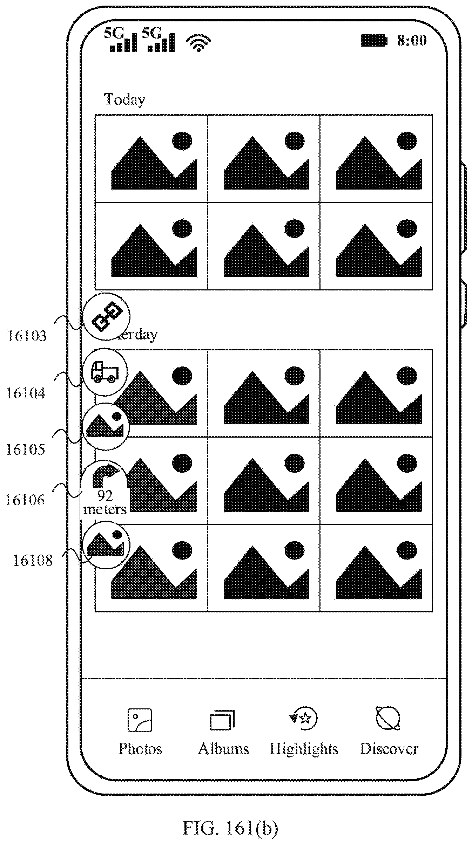

In some embodiments, when a plurality of floating UI elements are allowed to be displayed on the screen of the mobile phone at the same time and a maximum quantity of floating UI elements that are allowed to be displayed at the same time is set, if a quantity of floating UI elements that have been displayed on the screen of the mobile phone already reaches a limit of the maximum quantity, when the user triggers again that the mobile phone displays an interface element in the form of the floating UI element, the mobile phone may automatically delete an earliest generated floating UI element, and display a floating UI element generated at this time on the screen of the mobile phone. For example, with reference to FIG. 161(a) and FIG. 161(b), the mobile phone currently displays five floating UI elements, and a maximum quantity of floating UI elements that are allowed to be displayed at the same time is five. As shown in FIG. 161(a), the mobile phone currently displays the five floating UI elements: a floating UI element 16102, a floating UI element 16103, a floating UI element 16104, a floating UI element 16105, and a floating UI element 16106. The floating UI element 16102 is an earliest generated floating UI element. As shown in FIG. 161(a), the mobile phone displays an interface 16101 of the gallery application. The interface 16101 may be the second interface in embodiments of this application. The user drags a picture 16107 on the interface 16101, to trigger display of the picture 16107 on the screen of the mobile phone in a form of a floating UI element The picture 16107 may be the third element in embodiments of this application. In this case, because the quantity of the floating UI elements displayed on the screen of the mobile phone has reached an upper limit, after the mobile phone receives a drag release operation of the user, as shown in FIG. 161(b), the mobile phone may delete (or not display) the floating UI element 16102, and display a floating UI element 16108, the floating UI element 16103, the floating UI element 16104, the floating UI element 16105, and the floating UI element 16106 on the screen. For example, the mobile phone may automatically arrange and display the newly generated floating UI element 16108 (where the floating UI element 16108 may be the second floating element in embodiments of this application) at the bottom of a displayed floating UI element queue, and move the displayed floating UI elements upward in sequence. The floating UI element 16102 at the top of the queue is automatically replaced and disappears. In some embodiments, before a newly generated floating UI element automatically replaces an earliest generated floating UI element and is displayed on the screen, the mobile phone may further display a prompt message, to prompt the user that the newly generated floating UI element replaces the earliest generated floating UI element and is displayed on the screen. After prompt, the newly generated floating UI element automatically replaces the earliest generated floating UI element and is displayed on the screen.

In the embodiment shown in FIG. 161(a) and FIG. 161(b), when the quantity of the floating UI elements that have been displayed on the screen of the mobile phone already reaches the limit of the maximum quantity, when the user triggers again that the mobile phone displays an interface element in the form of the floating UI element, whether to allow the newly generated floating UI element to automatically replace the earliest generated floating UI element to be displayed on the screen may be a default configuration of the system or may be set by the user by providing a setting interface. For example, when the user sets that the newly generated floating UI element is allowed to automatically replace the earliest generated floating UI element and be displayed on the screen, when the quantity of the floating UI elements that have been displayed on the screen of the mobile phone already reaches the limit of the maximum quantity and the user triggers again the mobile phone to display the interface element in the form of the floating UI element, the mobile phone may automatically replace the earliest generated floating UI element with the newly generated floating UI element and display the newly generated floating UI element on the screen. If the user sets that the newly generated floating UI element is not allowed to automatically replace the earliest generated floating UI element and be displayed on the screen, when the quantity of the floating UI elements that have been displayed on the screen of the mobile phone already reaches the limit of the maximum quantity and the user triggers again that the mobile phone displays the interface element in the form of the floating UI element, the mobile phone displays a prompt message, for example, the prompt message may be "the quantity has reached the upper limit, please delete the existing floating UI element", to prompt the user that the quantity of the floating UI elements on the screen has reached the limit of the maximum quantity, and no new floating UI element can be added and displayed. Certainly, an automatic replacement rule in the embodiment shown in FIG. 161(a) and FIG. 161(b), for example, automatic replacement of the earliest generated floating UI element, is merely an example. In some other embodiments, the automatic replacement rule may also be automatic replacement of a latest generated floating UI element, automatic replacement of a floating Ul element that is least used, or the like. This is not limited in this embodiment. The automatic replacement rule may be predefined by the system, or may be set by the user by providing a setting interface.

As described in the foregoing embodiment, the user may trigger, by performing the corresponding operation (such as the drag operation or the copy operation), the mobile phone to display elements, in the form of the floating UI element, of various types (such as the text type, the picture type, the icon type, the card type, the list contact type, the video window type, and the file resource type) on the interface on the screen of the mobile phone. Therefore, it may be considered that a correspondingly generated floating UI element also has a corresponding type. For example, a type of the floating UI element is the same as a type of the element. Based on this, in some other embodiments, when a plurality of floating UI elements are allowed to be displayed on the screen of the mobile phone at the same time and a maximum quantity of floating UI elements that are allowed to be displayed at the same time is set, if a quantity of floating UI elements that have been displayed on the screen of the mobile phone already reaches a limit of the maximum quantity, when the user triggers again the mobile phone to display an interface element in the form of the floating UI element, the mobile phone may first determine whether there is a floating UI element whose type is the same as a type of a newly generated floating UI element (or whether there is a floating UI element whose type is the same as a type of the interface element) in the currently displayed floating UI elements. If there is no floating UI element whose type is the same as the type of the newly generated floating UI element in the currently displayed floating UI elements, the floating UI element may be displayed on the screen of the mobile phone according to the embodiment shown in FIG. 161(a) and FIG. 161(b). If there is the floating UI element whose type is the same as the type of the newly generated floating UI element in the currently displayed floating Ul elements, for example, a floating UI element 1 in the currently displayed floating UI elements is of a same type as the newly generated floating UI element, the newly generated floating UI element (where the floating UI element may be the second floating element in embodiments of this application) and the floating UI element 1 (where the floating UI element 1 may be the third floating element in embodiments of this application) may be automatically combined into one floating UI element group and be displayed on the screen of the mobile phone.

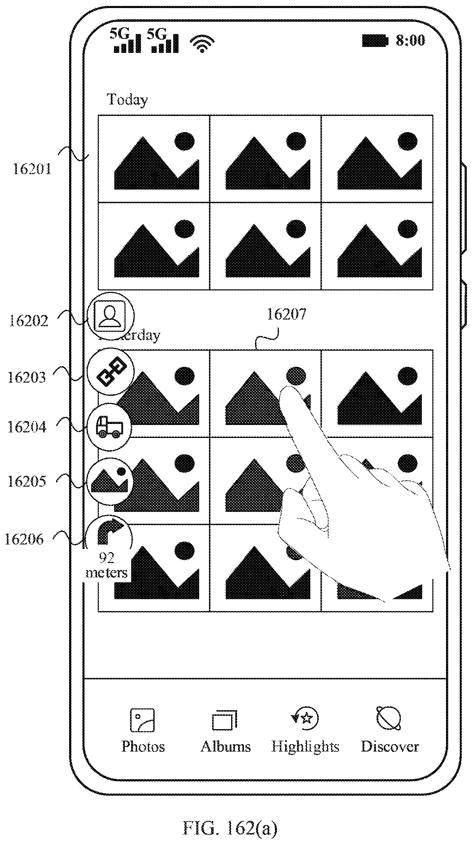

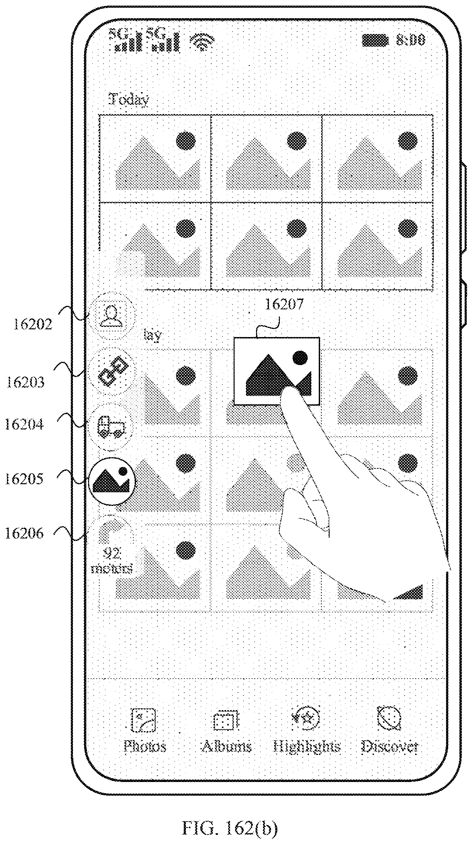

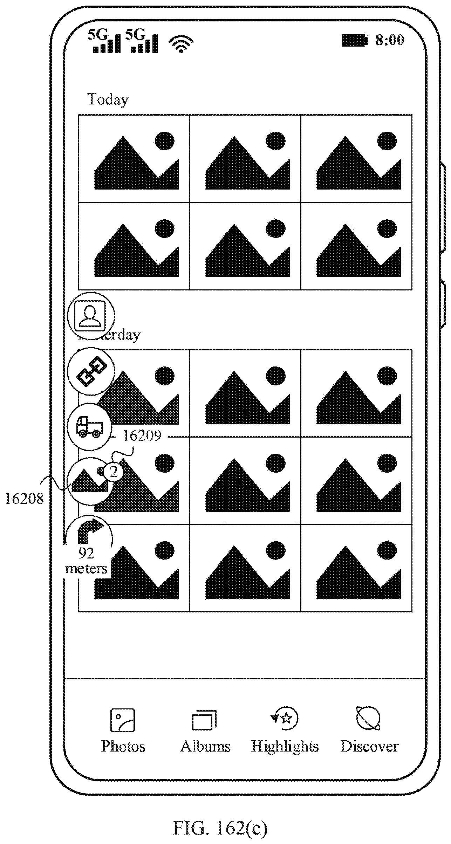

For example, with reference to FIG. 162(a) to FIG. 162(c), as shown in FIG. 162(a), the mobile phone currently displays five floating UI elements: a floating UI element 16202, a floating UI element 16203, a floating UI element 16204, a floating UI element 16205, and a floating UI element 16206. The floating UI element 16202 is a floating UI element of a list contact type. The floating UI element 16203 is a floating UI element of a file resource type. The floating UI element 16204 is a floating UI element of an icon type. The floating UI element 16205 is a floating UI element of a picture type. The floating UI element 16206 is a floating 1JI element of a card type. As shown in FIG. 162(a), the mobile phone displays an interface 16201 of the gallery application, and the user drags a picture 16207 on the interface 16201, to trigger display of the picture 16207 on the screen of the mobile phone in a form of a floating UI element (where a type of a newly generated floating UI element is the picture type). Because the quantity of the floating UI elements displayed on the screen of the mobile phone already reaches the upper limit at this time, after the mobile phone receives a drag release operation of the user, the mobile phone may determine whether there is a floating UI element whose type is the same as a type (picture type) of the newly generated floating UI element in the currently displayed floating UI elements. With reference to the example in FIG. 162(a) to FIG. 162(c), it may be learned that the mobile phone may determine that the currently displayed floating UI element 16205 and the newly generated floating UI element are of the same type, and are both of the picture type. In this case, the mobile phone combines the newly generated floating UI element and the floating UI element 16205 for display. As shown in FIG. 162(c), the mobile phone displays a floating UI element group 16208. In some embodiments, when the mobile phone determines that there is a floating UI element whose type is the same as a type of a newly generated floating UI element in a currently displayed floating UI element, the mobile phone may further highlight the displayed floating UI element whose type is the same as the type of the newly generated floating UI element, to prompt the user that the newly generated floating UI element is displayed in combination with the displayed floating UI element. As shown in FIG. 162(b). in a process in which the user drags the picture 16207. the mobile phone may perform background blurring processing to display the floating picture 16207. The mobile phone may further clearly display the floating UI element 16205 whose type is the same as the type of the newly generated floating UI element and that is in the displayed floating UI elements, and fuzzy other floating UI elements in a blurred manner. Then, after the user releases the drag, as shown in FIG. 162(c), the mobile phone displays the floating UI element group 16208. In addition, after the mobile phone combines and displays a plurality of (two or more) floating UI elements, the mobile phone may further display prompt information on a floating UI element group, to indicate a quantity of floating UI elements included in the floating UI element group. As shown in FIG. 162(c), the mobile phone displays a badge 16209 on the floating UI element group 16208 (for example, in the upper right corner). A number "2" included in the badge 16209 is used to indicate that the floating UI element group 16208 includes two floating UI elements, or is obtained by combining two floating UI elements.

It should be noted that, in the foregoing example, an example in which there is one floating UI element whose type is the same as the type of the newly generated floating UI element in the displayed floating UI elements is used for description. In some other embodiments, when there are a plurality of floating UI elements whose types are the same as the type of the newly generated floating UI element in the displayed floating UI elements, the mobile phone may automatically select one or more of the plurality of floating UI elements and combine them with the newly generated floating UI element into one floating III element group. The mobile phone may also combine, based on an operation of the user, a floating UI element selected by the user from the plurality of floating UI elements and the newly generated floating UI element into one floating UI element group.

In the embodiment shown in FIG. 162(a) to FIG. 162(c), an example in which, when the quantity of the floating UI elements displayed on the screen reaches the upper limit and a new floating UI element is generated, the mobile phone combines the floating UI elements of a same type into the floating UI element group and displays the floating UI element group on the screen of the mobile phone is used for description. In some other embodiments, in a process of generating the floating UI element, if one operation of the user triggers the mobile phone to generate a plurality of floating UI elements, the mobile phone may also automatically combine floating UI elements of a same type in the generated plurality of floating UI elements into one floating UI element group and present the floating In element group to the user. In other words, when the user triggers presentation of a plurality of elements of a same type in a form of floating UI elements at the same time, the mobile phone automatically combines the generated floating UI elements of the plurality of elements into one floating UI element group and presents the floating UI element group to the user.

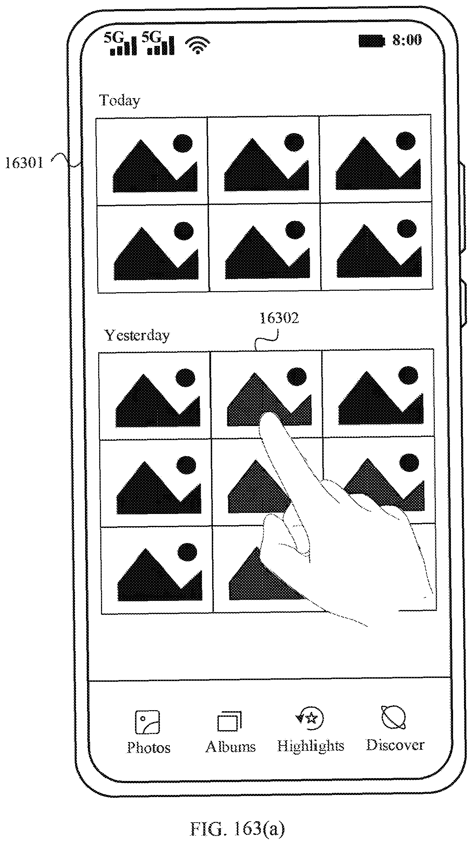

For example, with reference to FIG. 163(a) to FIG. 163(d), the user triggers presentation of a plurality of picture type elements in a form of floating UI elements at the same time, and an operation of triggering presentation of the picture elements in the form of the floating UI elements is a drag operation. For example, the drag operation includes an operation of triggering float of the picture and an operation of triggering movement of a floating picture. The operation of triggering the float of the picture is an operation of touching and holding the picture, and the operation of triggering the movement of the floating picture is an operation of pressing and moving the floating picture.

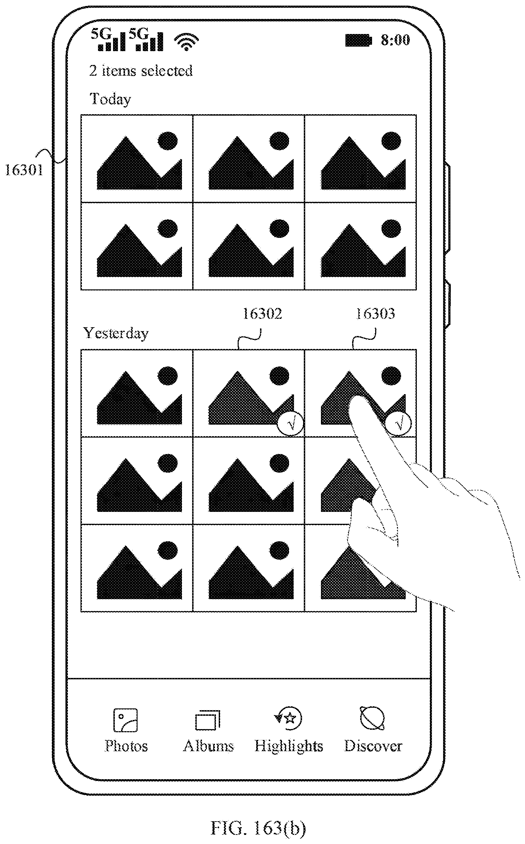

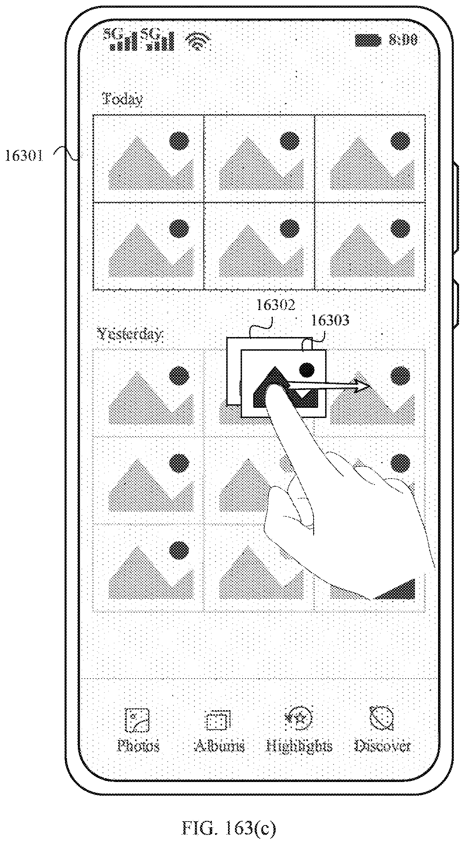

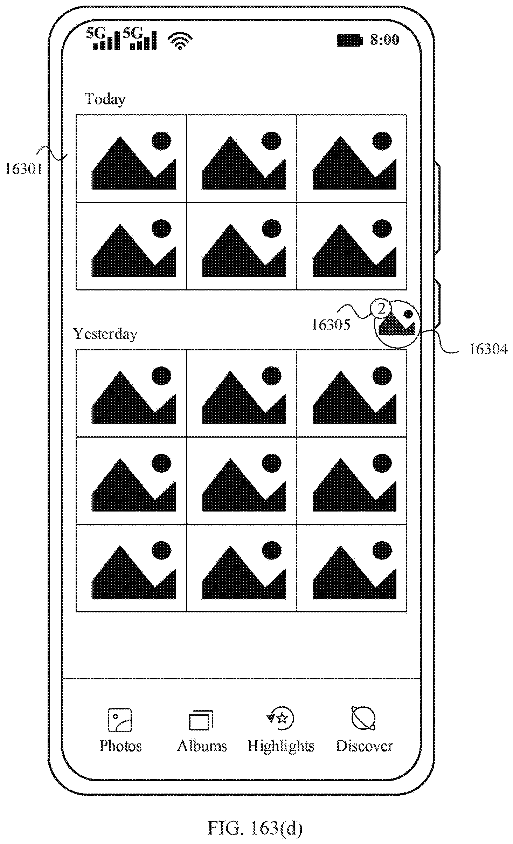

As shown in FIG. 163(a), the mobile phone displays an interface 16301 of the gallery application, and the interface 16301 of the gallery application includes a plurality of pictures. The user may touch and hold a picture 16302 on the interface 16301 of the gallery application. As shown in FIG. 163(b), the user touches and holds a picture 16303 on the interface 16301 of the gallery application. The mobile phone may receive the touch and hold operation of the user for the picture 16302 and the picture 16303. In response to the touch and hold operation, the mobile phone may display the picture 16302 and the picture 16303 in a floating state. For example, as shown in FIG. 163(c), the mobile phone may perform background blurring processing, and display a floating picture 16302 and a floating picture 16303. Then, the user presses the floating picture 16302 and the picture 16303 and moves a finger (for example, moves a finger rightward), so that the picture 16302 and the picture 16303 move on the screen of the mobile phone as finger of the user moves. Then, the user may release the finger, to release drag. After the user releases the finger, the mobile phone may receive a drag release operation of the user. After the mobile phone receives the drag release operation, the mobile phone may generate a floating UI element of the picture 16302 and a floating UI element of the picture 16303. Because types of the two floating Ul elements are the same and are both of a picture type, as shown in FIG. 163(d), the mobile phone may display a floating UI element group 16304 on the screen of the mobile phone. The floating UI element group 16304 includes the floating UI element of the picture 16302 and the floating UI element of the picture 16303, or is obtained by combining the floating UI element of the picture 16302 and the floating UI element of the picture 16303. As shown in FIG. 163(d), the mobile phone displays a badge 16305 on the floating UI element group 16304 (for example, in the upper right corner). A number "2" included in the badge 16305 is used to indicate that the floating Ul element group 16304 includes two floating UI elements, or is obtained by combining two floating UI elements.

Similarly, when the user triggers presentation of a plurality of elements of another same type, for example, a file resource type, a text type, an icon type, a card type, a list contact type, and a video window type, in a form of floating UI elements at the same time, the mobile phone may also automatically combine a plurality of generated floating UI elements into one floating UI element group, and then display the floating UI element group on the screen of the mobile phone. The mobile phone may further display prompt information on the floating IJI element group, to prompt a quantity of the floating UI elements included in the floating UI element group. In addition, in this embodiment, a quantity of floating UI elements allowed to be included in one floating UI element group may be not limited, or an upper limit (for example, 9) may be set The upper limit may be set by the user by providing a setting interface, or may be a default configuration of the system.

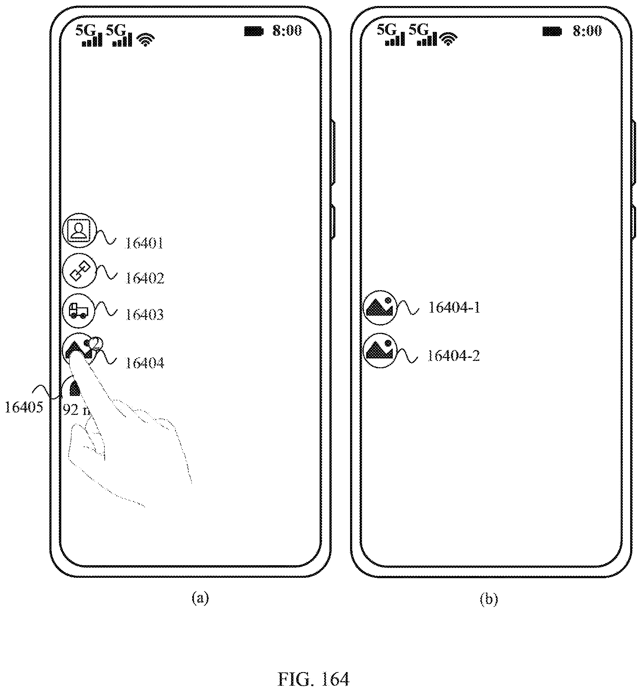

For a floating UI element presented in a floating UI element group, the mobile phone may also expand the floating UI element group based on a user operation, so that the user views each floating UI element in the floating UI element group. For example, as shown in (a) in FIG. 164, the mobile phone currently displays a floating UI element 16401, a floating UI element 16402, a floating UI element 16403, a floating UI element group 16404, and a floating UI element 16405. The floating UI element group 16404 includes two floating UI elements. The mobile phone receives an operation (where the operation may be the third operation in embodiments of this application), for example, a tap operation, a double-tap operation, or a touch and hold operation, of the user for the floating UI element group 16404. In response to the operation, the mobile phone may display the floating UI elements included in the floating UI element group 16404. For example, as shown in (b) in FIG. 164, the mobile phone hides the other floating UI elements, namely, the floating UI element 16401, the floating UI element 16402, the floating UI element 16403, and the floating UI element 16405, expands the floating UI element group 16404, and displays a floating UI element 16404-1 and a floating UI element 16404-2. After receiving an operation of the user, for example, an operation for another region outside a region in which the floating UI elements are displayed, the mobile phone may automatically collapse the floating UI element group, and redisplay the other floating UI elements. A display effect is restored to a display effect shown in (a) in FIG. 164. In addition, as described in the foregoing embodiment, there may be an upper limit requirement on the quantity of the floating UI elements that are allowed to be displayed on the screen of the mobile phone at the same time. When the quantity of the floating UI elements included in the floating UI element group is greater than the upper limit, after receiving an operation of the user for the floating UI element group, the mobile phone may display some floating UI elements in the floating UI element group on the screen of the mobile phone, and temporarily not display another floating UI element A quantity of displayed floating UI elements is the same as the upper limit Then, when receiving an up/down slide operation of the user, the mobile phone may trigger the mobile phone to switch a displayed floating UI element in the floating UI element group.

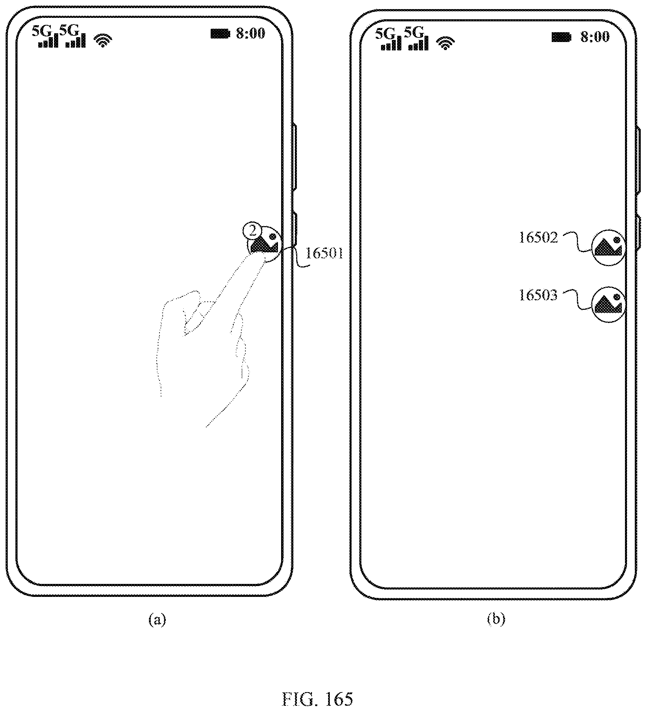

For a floating UI element presented by using a floating UI element group, the mobile phone may also split (or separate) the floating UI element group based on a user operation (where the operation is different from the user operation in the embodiment shown in FIG. 164), so that each floating UI element in the floating UI element group is separately displayed on the screen of the mobile phone. For example, as shown in (a) in FIG. 165, the mobile phone currently displays a floating UI element group 16501. The floating UI element group 16501 includes two floating UI elements. The mobile phone receives an operation, for example, a tap operation, a double-tap operation, or a touch and hold operation, of the user for the floating UI element group 16501. In response to the operation, as shown in (b) in FIG. 165, the mobile phone independently displays, on the screen of the mobile phone, a floating UI element 16502 and a floating UI element 16503 that are included in the floating UI element group 16501. In addition, as described in the foregoing embodiment, there may be an upper limit requirement on the quantity of the floating UI elements that are allowed to be displayed on the screen of the mobile phone at the same time. After receiving an operation of separating the floating UI element group by the user, the mobile phone may first determine whether all floating UI element groups displayed on the screen exceeds the upper limit after the floating UI element group is separated for display. If the upper limit is not exceeded, in response to the operation of separating the floating UI element group, the floating UI element group is separated and then displayed on the screen of the mobile phone. If the upper limit is exceeded, the mobile phone may not perform the operation of separating the floating UI element group, and the mobile phone may temporarily expand and display the floating UI element group, and then automatically retract and continue to display the floating UI element group in a form of a floating UI element group.

In this embodiment, for a floating UI element displayed on the screen of the mobile phone, the mobile phone may delete the floating UI element automatically or based on a user operation (where the user operation may be the fourth operation in embodiments of this application), and no longer display the floating UI element on the screen of the mobile phone.

For example, after receiving an operation of deleting a floating UI element by the user, the mobile phone may delete a corresponding floating UI element, and no longer display the floating UI element on the screen of the mobile phone. The operation of deleting the floating UI element may be a touch and hold operation, a double-tap operation, or a drag operation for the floating UI element. The drag operation may be an operation of holding down the floating UI element and quickly sliding in a direction (for example, upward or downward) (for example, a sliding distance within preset duration meets a preset condition).

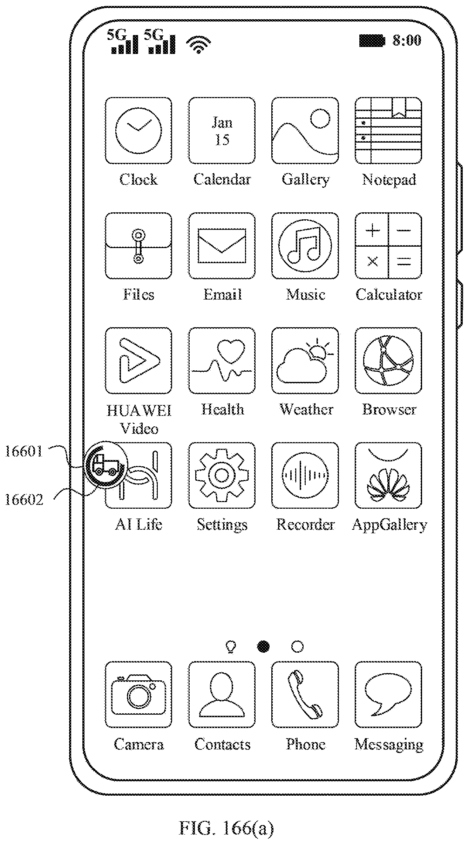

For another example, duration in which the floating UI element is allowed to be displayed on the screen of the mobile phone may be unlimited (that is, when the user does not actively delete the floating UI element, the floating UI element is always displayed on the screen of the mobile phone), or may be limited. For example, maximum existence duration of the floating UI element may be set (set by the user or set by a system by default). If the maximum existence duration of the floating UI element may be set to X hours, after the floating UI element is generated and displayed on the screen of the mobile phone, the mobile phone may start timing, to determine existence duration of the floating UI element on the screen of the mobile phone. After timing duration is equal to the maximum existence duration X hours, the mobile phone may automatically delete the floating UI element and no longer display the floating UI element on the screen of the mobile phone. Alternatively, after the floating UI element is generated and displayed on the screen of the mobile phone, the mobile phone may start timing. If no operation of the user for the floating UI element is received within X hours, after timing duration is equal to the maximum existence duration X hours, the mobile phone automatically deletes the floating UI element and no longer displays the floating UI element on the screen of the mobile phone. If an operation of the user for the floating UI element is received within X hours, timing is started again. In this embodiment, to help the user learn the existence duration of the floating UI element on the screen, after the floating UI element is generated and displayed on the screen of the mobile phone, in a timing process of the mobile phone, the mobile phone may display corresponding prompt information, to prompt the user of the existence duration of the floating UI element For example, as shown in FIG. 166(a), the mobile phone displays a floating UI element 16601. The mobile phone may further display a ring bar 16602, and the ring bar 16602 increases as timing duration of the mobile phone for the floating UI element 16601 increases. When the timing duration is equal to the maximum existence duration, the ring bar 16602 becomes a closed ring. When the timing duration is equal to the maximum existence duration, the mobile phone deletes the floating UI element 16601 and no longer displays the floating UI element 16601 on the screen of the mobile phone. For example, after displaying an animation (for example, an animation similar to bubble explosion) in which the floating UI element 16601 explodes, the mobile phone may delete the floating UI element 16601 from the screen of the mobile phone.

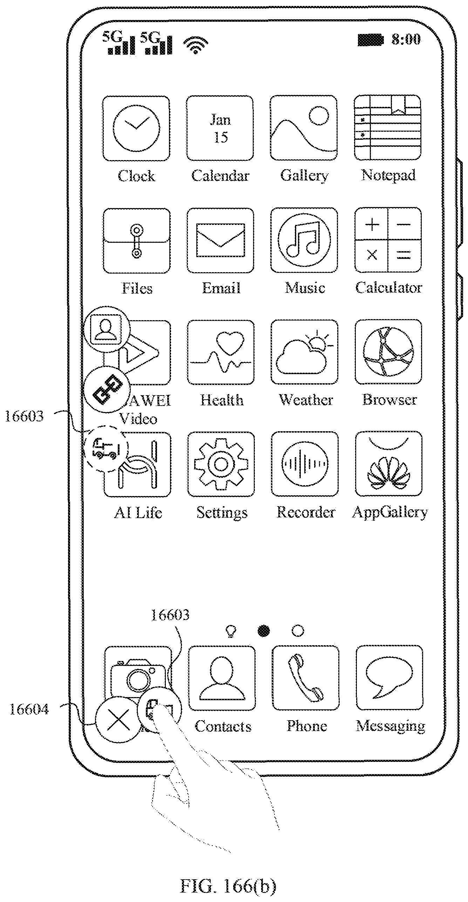

For another example, a region used to delete a floating UI element may be preset. After the mobile phone receives that the user drags the floating UI element to the region and releases the drag (where the operation may be the fourth operation in embodiments of this application), the mobile phone may delete the floating UI element and no longer display the floating UI element on the screen of the mobile phone. For example, as shown in FIG. 166(b), the mobile phone displays a floating UI element 16603. After receiving an operation of dragging the floating UI element 16603 by the user, the mobile phone may display, on the screen of the mobile phone, an animation in which the floating UI element 16603 moves as a finger of the user moves. In addition, the mobile phone may further display a delete button 16604, and a region in which the delete button 16604 is located is the region used to delete the floating UI element If the mobile phone determines that the user drags the floating UI element 16603 to the region in which the delete button 16604 is located, and releases the drag, the mobile phone may delete the floating UI element 16603 and no longer display the floating UI element 16603 on the screen of the mobile phone.

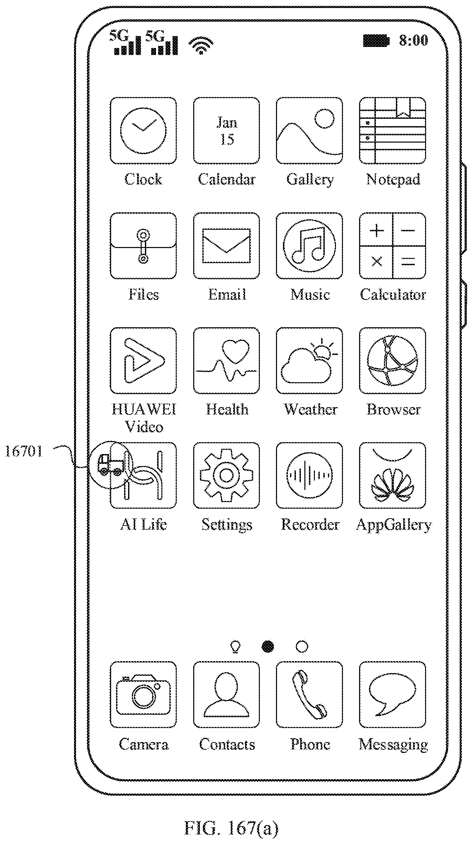

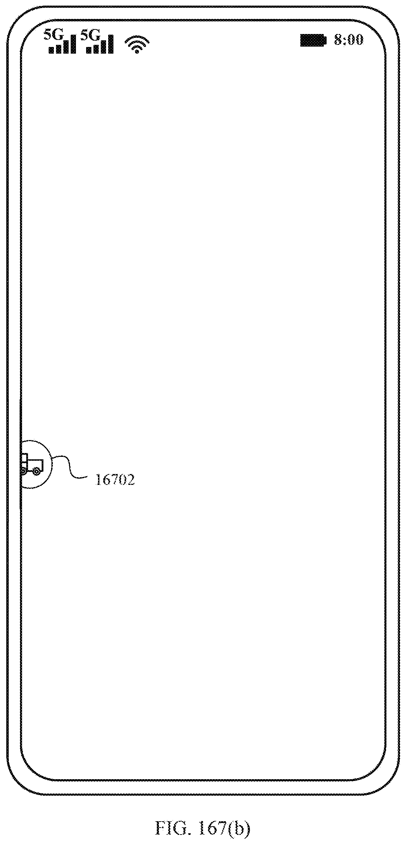

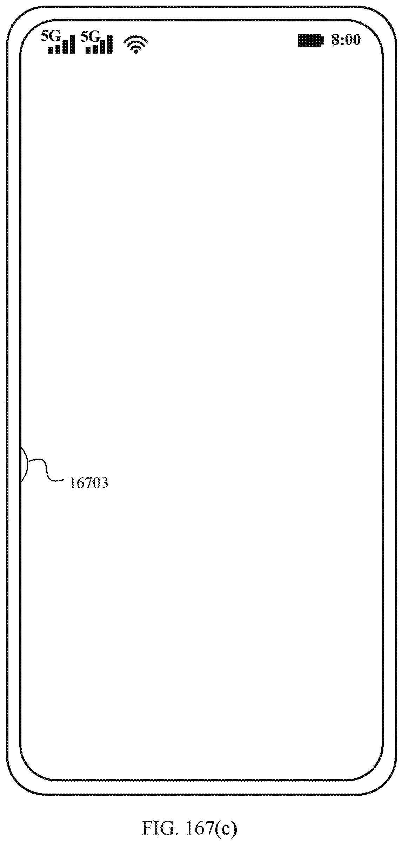

It should be noted that the foregoing embodiment is shown by using an example in which a style of the floating UI element is a circle. In some other embodiments, the style of the floating UI element may alternatively be a rectangle, a rounded rectangle, an ellipse, a polygon, or another irregular UI shape. The style of the floating UI element is not specifically limited herein in this embodiment. Content in the floating UI element (or an element that may be presented in a floating UI element) is not limited to the elements such as the text type, the picture type, the icon type, the card type, the list contact type, the video window type, and the file resource type in this embodiment Certainly, the content in the floating UI element may also be a combination of elements of these types. in addition, in the foregoing embodiment, an example in which the floating UI element is displayed at the left edge or the right edge of the screen is used for description. In some other embodiments, the floating UI element may also be displayed at another location of the screen, for example, the upper edge. A display location (or a layout location) of the floating UI element is not specifically limited herein in this embodiment. The display location of the floating UI element may be specifically configured by the system by default, or may be set by the user by providing a setting interface. It may be seen that, in the foregoing embodiment, an example in which the floating UI element is completely displayed at the edge of the screen in an opaque manner is used. In some other embodiments, with reference to FIG. 167(a) to FIG. 167(c), a floating UI element, for example, a floating UI element 16701 shown in FIG. 167(a), may also be displayed in a translucent manner. Alternatively, as shown in FIG. 167(b), a floating UI element 16702 may be partially hidden at the edge of the screen. Alternatively, as shown in FIG. 167(c), a floating UI element 16703 is partially hidden at the edge of the screen. A manner in which the floating UI element is displayed may be configured by the system by default, or may be set by the user by providing a setting interface.

In addition, in the examples shown in FIG. 162(a) to FIG. 165, the prompt information such as the badge may be displayed on the floating UI element group, to indicate the quantity of the floating UI elements included in the floating UI element group. Whether to display the badge on the floating UI element group may be configured by the system by default, or may be set by the user by providing a setting interface. For example, the setting interface may be provided for the user to set whether to display, on the floating UI element group, the badge used to indicate the quantity of the floating UI elements included in the floating UI element group, that is, to set whether to display or not to display the badge. In some other embodiments, for the floating UI element, another badge may be further displayed.

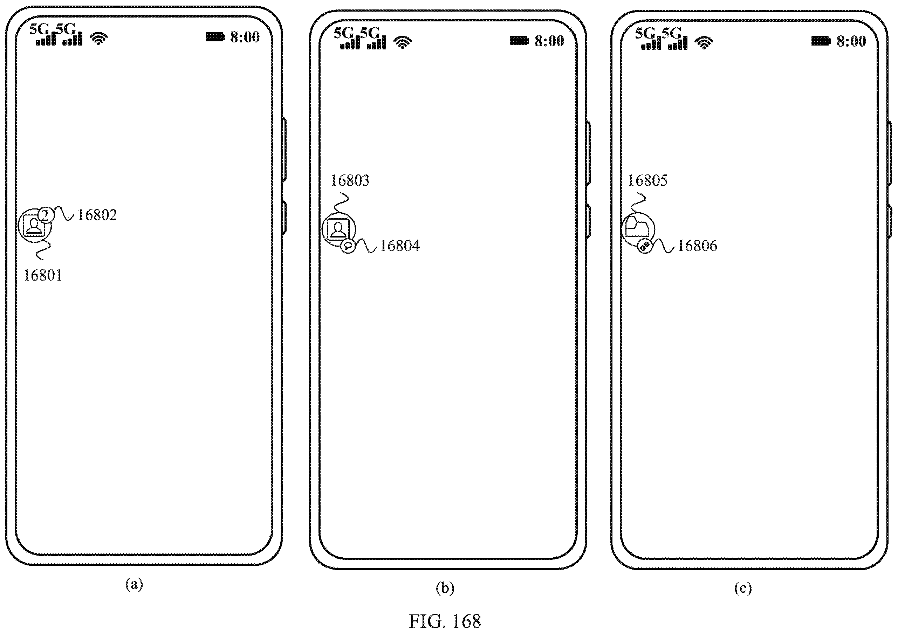

For example, as shown in (a) in FIG. 168, for a floating UI element of the list contact type, for example, a floating UI element 16801 shown in (a) in FIG. 168, the mobile phone may display message reminder information on the floating UI element when receiving a message from a contact As shown in (a) in FIG. 168, the message reminder information may be displayed in a form of a badge 16802, and a number in the badge 16802 may be used to indicate a quantity of received messages. Certainly, whether to display the message reminder information may be configured by the system by default, or may be set by the user by providing a setting interface. If the message reminder information is displayed on the floating UI element when the message is received from the contact, the message reminder information may disappear and be no longer displayed after the user views the message reminder information.

For another example, an identifier of an application used to indicate a source of the floating UI element, for example, an icon of the application. may be displayed on the floating UI element, to help the user identify an original source of the floating UI element, that is, an application from which the floating UI element comes. For example, the floating UI element of the list contact type is still used as an example, the mobile phone displays a floating UI element 16803 shown in (b) in FIG. 168, an icon 16804 of an application used to indicate a source of the floating UI element 16803 is displayed on the floating UI element 16803. Whether to display the identifier of the application used to indicate the source of the floating UI element may be configured by the system by default, or may be set by the user by providing a setting interface. For example, for the floating UI element of the list contact type, that the identifier of the application is displayed by default is configured by the system by default. For another example, the setting interface may be provided for the user to set to display the identifier of the application for one or more types of floating UI elements, and not to display the identifier of the application for floating UI elements of another type.

For another example, a symbol used to indicate a type (for example, a link) of the floating UI element may be displayed on the floating UI element. For example, a floating UI element of the file resource type is used as an example, the mobile phone displays a floating UI element 16805 shown in (c) in FIG. 168, and a symbol 16806 used to indicate a type (for example, a link) of the floating IJI element 16805 is displayed on the floating UI element 16805.

In some other embodiments, both the badges in the foregoing example may appear. For example, the message reminder information and the identifier of the application that is used to indicate the source of the floating UI element are displayed on the floating UI element. For another example, the floating UI element group includes the message reminder information (as shown in (a) in FIG. 168) and the prompt information (as shown in (a) in FIG. 165) that is used to indicate the quantity of the floating UI elements included in the floating UI element group. When the floating UI element group includes both the message reminder information and the prompt information, for differentiation, the two types of information may be displayed at different locations of the floating UI element group. For example, the message reminder information is displayed in the upper left corner, and the prompt information is displayed in the lower left corner. Further, the two types of information may be distinguished by using different display forms. For example, the two types of information are presented in a form of badges. For example, the badge corresponding to the message reminder information and the badge corresponding to the prompt information are different in colors or shapes (for example, one badge is a circle, and the other badge is a square). In a scenario in which the two types of information do not appear at the same time, the two types of information may also be distinguished. For details, refer to the description in the scenario in which the two types of information appear at the same time.

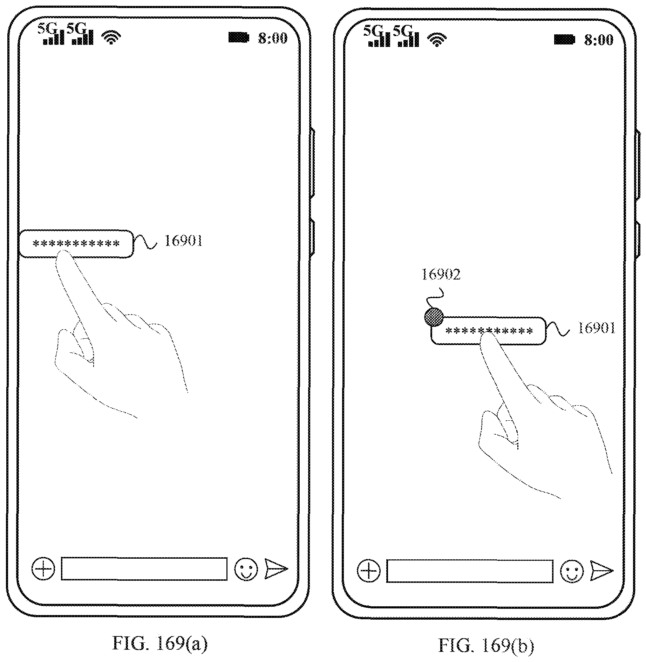

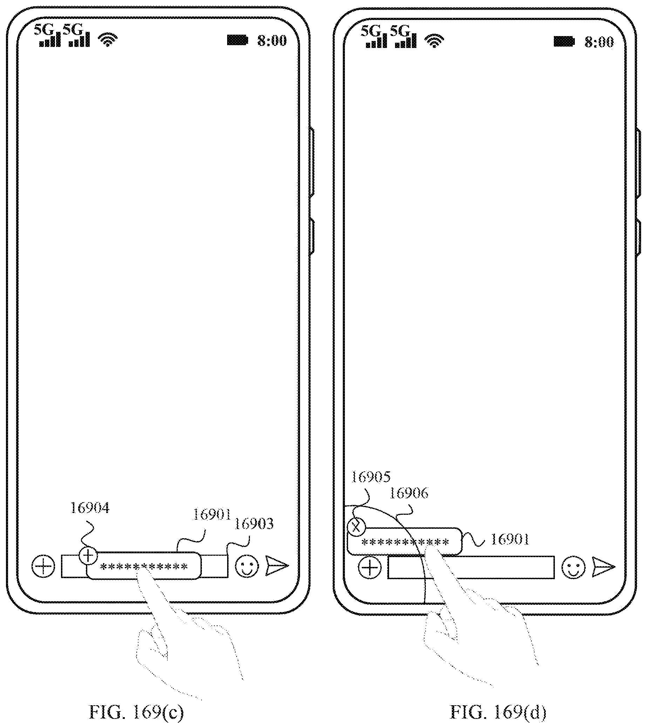

In addition, as described in the foregoing embodiment, the floating UI element displayed on the screen may be dragged by the user to move on the screen. In some other embodiments, in a process in which the floating UI element moves on the screen of the mobile phone, the mobile phone may display a corresponding prompt (for example, prompt in a form of a badge) based on a region in which the floating UI element is currently located, to prompt the user whether the current region supports interaction. For example, with reference to FIG. 169(a) to FIG. 169(d), the floating UI element is a floating UI element of the text type. As shown in FIG. 169(a), the mobile phone displays a floating UI element 16901. The user may press and move the floating UI element 16901, to trigger the floating UI element 16901 to move as the finger of the user moves. As shown in FIG. 169(b). when the floating UI element 16901 moves to a non-interactive region, a badge 16902 is displayed on the floating UI element 16901, and the badge 16902 is used to prompt the user that the current region does not support interaction. As shown in FIG. 169(c), when the floating UI element 16901 moves to an interactive region, for example, a region in which an input box 16903 is located, a badge 16904 is displayed on the floating UI element 16901, and the badge 16904 is used to prompt the user that the current region supports interaction. After the user releases the drag, a text borne by the floating UI element 16901 may be pasted to the input box 16903. As shown in FIG. 169(d), when the floating UI element 16901 moves to a delete region (where the region may be predefined) 16906, a badge 16905 is displayed on the floating UI element 16901, and the badge 16905 is used to prompt the user that the floating UI element 16901 will be deleted after the drag is released in the region.

By using the foregoing technical solution, the mobile phone may display any element on the interface on the screen of the mobile phone in the form of the floating Ul element based on the user operation. Then, regardless of whether the user switches a page in the application, exits the application. or opens another application, the floating UI element may continue to be displayed on the screen of the mobile phone, to implement an operation, for example, cross-application information viewing, file transfer, or information sharing. For example, floating UI elements of the text type, the picture type, the card type, the file resource type, and the video window type support interaction such as being sent to a friend by using an instant messaging application. Content such as files, pictures, texts, and URLs can be shared with a corresponding contact by being dragged to a floating UI element of the list contact type. A floating UI element of a URL type supports direct tap jump. Floating UI elements that are extracted from contact lists of different applications and that represent specific contacts support functions such as sending a file and making a call based on a specific service scenario. In addition, a floating UI element is generated based on the existing interaction logic of the system.

It may be learned from the description of the foregoing embodiment that, in a scenario in which a drag manner is used to trigger presentation of an element in a form of a floating UI element, after the user drags the element and releases the drag, the mobile phone may be triggered to present the element on the screen of the mobile phone in the form of the floating UI element. In some other embodiments, a trigger region may also be predefined. When the user drags an element to the trigger region and releases the drag in the trigger region, the mobile phone may present the element on the screen of the mobile phone in a form of a floating UI element. If the user drags the element to another region and releases the drag, the mobile phone is not triggered to perform the operation of presenting the element in the form of the floating UI element. In an example, to distinguish a cross-device drag operation, a trigger region used to trigger a dynamic small window may be different from the foregoing cross-device drag sensing region and a specified region used to trigger a dynamic small window. In other words, in some embodiments of this application, the cross-device drag sensing region, the specified region used to trigger the dynamic small window, and the trigger region used to trigger the dynamic small window may be preset in a first terminal . For example, the cross-device drag sensing region is at a location close to the left edge of a touchscreen of the first terminal, the specified region used to trigger the dynamic small window is at a location close to the upper edge of the touchscreen of the first terminal, and the trigger region used to trigger the dynamic small window is at a location close to the right edge of the touchscreen of the first terminal. After the user triggers drag for an object on the first terminal, the first terminal may determine, based on a region to which the object is dragged, whether to trigger cross-device drag, display a dynamic small window, or present an element in a form of a floating Ul element For example, when the user drags the object to the location close to the left edge of the touchscreen of the first terminal, the first terminal triggers the cross-device drag. When the user drags the object to the location close to the upper edge of the touchscreen of the first terminal, the first terminal triggers display of the dynamic small window. When the user drags the object to the location close to the right edge of the touchscreen of the first terminal, the first terminal triggers presentation of the element in the form of the floating UI element, In some other embodiments, the first terminal may also determine, based on whether there is a second terminal in a drag direction, whether to trigger cross-device drag, display a dynamic small window, or present an element in a form of a floating UI element. For example, after the user triggers drag of an object on the first terminal, the first terminal determines the drag direction, for example, rightward drag, and the first terminal determines that there is the second terminal in a direction pointing to the right edge of the first terminal, the first terminal triggers the cross-device drag. If there is no second terminal in the direction, display of the dynamic small window or presentation of the element in the form of the floating UI element is triggered. When there is no second terminal in the drag direction, in an example, the first terminal may determine, based on a corresponding setting, whether to trigger display of the dynamic small window or presentation of the element in the form of the floating UI element The setting may be whether a corresponding function is enabled. If the user sets to enable a dynamic small window function, when there is no second terminal in the drag direction, the first terminal triggers the display of the dynamic small window. For another example, if the user sets to enable a floating UI element function, when there is no second terminal in the drag direction, the first terminal presents the element in the form of the floating UI element. Certainly, the foregoing implementation of how to determine, after the user drags the object, whether to trigger the cross-device drag, display the dynamic small window, or present the element in the form of the floating UI element is merely an example. In this embodiment, after the user drags the object, the first terminal may determine, by determining whether a drag intent of the user is the cross-device drag, whether to trigger the cross-device drag or local drag, for example, display the dynamic small window or present the element in the form of the floating UI element. If the drag intent of the user is the cross-device drag, the first terminal triggers a cross-device drag procedure. If the drag intent of the user is not the cross-device drag, the first terminal may trigger a local drag procedure. Specifically, how to determine whether the drag intent of the user is the cross-device drag may be set based on a requirement of an actual application scenario. This is not specifically limited in this embodiment of this application.

The foregoing embodiment describes a process in which an interface of one terminal or an element on an interface is presented on another terminal in a drag manner in a cross-device drag scenario. It may be understood that, in a scenario, for example, a demonstration in a conference or a launch event, display interfaces or elements on interfaces of a plurality of devices may need to be presented on a same device (for example, a large-screen device) for a user to view. In addition, in a current wireless projection scenario, a display interface of one device can be presented on another device, which is mainly implemented by using a one-to-one mirror projection technology, that is, only one-to-one projection can be implemented. Therefore, in a wireless projection scenario, there is also a requirement for presenting display interfaces or elements on interfaces of a plurality of devices on a same device.

In a related technology projection of interfaces of a plurality of terminals to a display of a terminal may be implemented by using a wireless screen projector (for example, an AWIND^{™} wireless projection gateway). However, this technology for implementing many-to-one projection needs to use a corresponding wireless screen projector.

Embodiments of this application provide a projection method. By using the method provided in embodiments, display interfaces of a plurality of terminals can be displayed on a display of a same terminal without using another device. This meets a many-to-one projection requirement in a scenario, for example, a demonstration in a conference or a launch event, improves efficiency of collaboratively using the plurality of terminals, and improves user experience.

In embodiments, a terminal that projects a display interface of the terminal may be referred to as a projection source end, and a terminal that receives projection of the projection source end and displays the display interface of the projection source end may be referred to as a projection destination end. The interface that is projected by the projection source end and that is displayed on the projection destination end is referred to as a projection interface, and a window that is used by the projection target end to display the projection interface is referred to as a projection window.

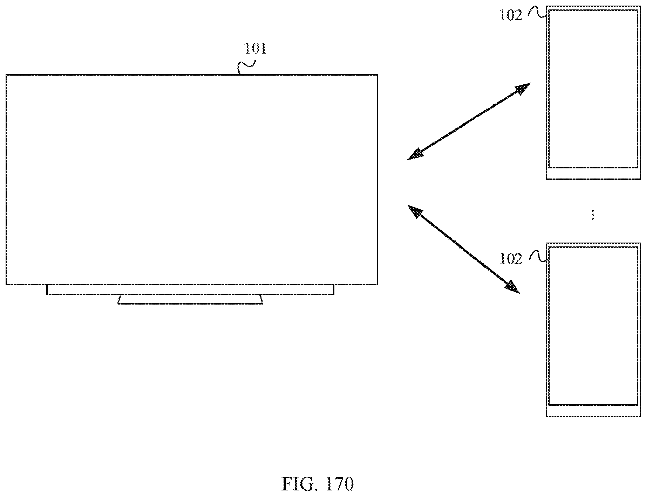

The following describes in detail the projection method provided in this embodiment with reference to FIG. 170 to FIG. 193.

With reference to FIG. 1, FIG. 170 is a simplified schematic diagram of a system architecture to which an embodiment of this application can be applied. As shown in FIG. 170, the system architecture may include a first terminal 101 and a plurality of second terminals 102.

Each of the plurality of second terminals 102 may establish a connection to the first terminal 101 in a wired or wireless manner. After the fust terminal 101 is connected to the plurality of second terminals 102, a projection source end in the first terminal 101 and the plurality of second terminals 102 may project an interface or some elements on an interface displayed on a display of the projection source end to a display of a projection destination end for display. For example, the first terminal 101 is used as the projection destination end, and the plurality of second terminals 102 are all used as the projection source ends. Each of the plurality of second terminals 102 may project, on a display of the first terminal 101 for display, an interface or some elements on an interface displayed on a display of the second terminal 102. For example, the first terminal 101 may aggregate the interfaces of the plurality of second terminals 102, and then display an aggregated interface on the display of the first terminal 101 for a user to view. The user may further perform, by using an input device of the first terminal 101, an operation on a projection interface that corresponds to each second terminal 102 and that is displayed on the display of the first terminal 101, to implement an operation on an actual interface displayed on a corresponding second terminal 102.

Device forms of the first terminal 101 and the second terminal 102 may be the same or different, and device forms of the plurality of second terminals 102 may be the same or different This is not limited herein in this embodiment. In an example, the first terminal 101 may be a large-screen device, for example, a PC or a television, and the second terminal 102 may be a mobile device, for example, a mobile phone or a tablet computer. In FIG. 170, an example in which the first terminal 101 is a television and the plurality of second terminals 102 are all mobile phones is used for illustration.

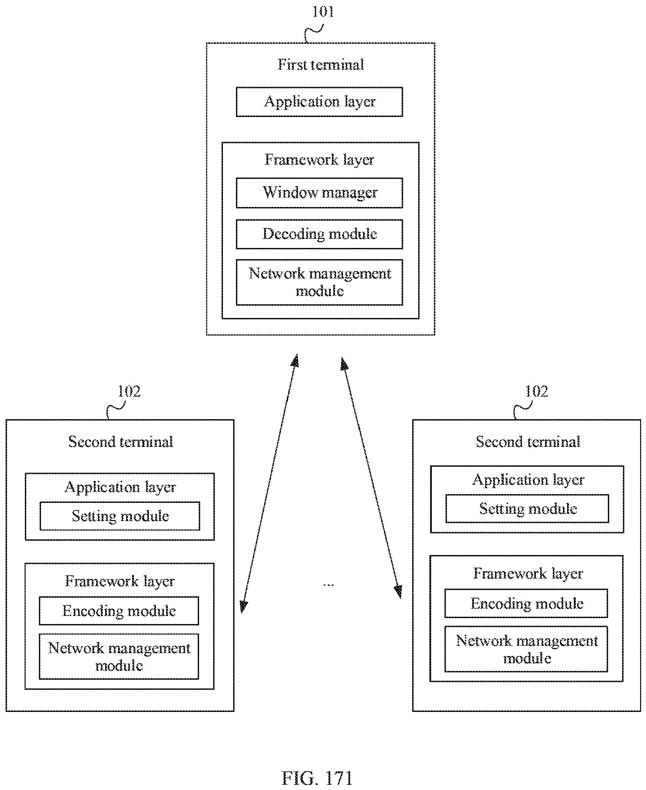

With reference to FIG. 170 and the software architectures shown in FIG. 3, software architectures of the first terminal 101 and the second terminal 102 are described as examples. The first terminal 101 is used as the projection destination end, and the second terminal 102 is used as the projection source end. FIG. 171 is a schematic composition diagram of a software architecture according to this embodiment of this application.

As shown in FIG. 171, the first terminal 101 may include a network management module, a decoding module, and a window manager (or referred to as a window management module). The modules included in the first terminal 101 may be included at any layer of the software architecture of the first terminal 101. For example, the network management module, the decoding module, and the window manager of the first terminal 101 are all included in a framework layer of the first terminal 101. This is not specifically limited herein in this embodiment. The first terminal 101 may further include an application, which may be included in the foregoing application layer. The application may include a projection application, and the projection application may assist the first terminal 101 used as the projection destination end to implement a many-to-one projection function.

The second terminal 102 may include a network management module, an encoding module, and a setting module. The modules included in the second terminal 102 may be included at any layer of the software architecture of the second terminal 102. For example, the network management module and the coding module of the second terminal 102 are included in a framework layer of the second terminal 102. The setting module of the second terminal 102 is included in an application layer of the second terminal 102. This is not specifically limited herein in this embodiment. The second terminal 102 may further include an application, which may be included in the foregoing application layer. The application may include a projection application, and the projection application may assist the second terminal 102 used as the projection source end to implement a many-to-one projection function.

in this embodiment, the network management module of the first terminal 101 may be responsible for establishing a transmission channel between the first terminal 101 and the second terminal 102. The network management module of the first terminal 101 may support establishment of transmission channels between the first terminal 101 and the plurality of second terminals 102, that is, support establishment of a 1 -to-N connection. The decoding module of the first terminal 101 may be responsible for decoding data (for example, referred to as projection data, or also referred to as screen recording data) from the second terminal 102 used as the projection source end. This decoding module supports multi-channel decoding. For example, for data from different second terminals 102, the decoding module of the first terminal 101 may decode corresponding data by using different decoding parameters. The window manager of the first terminal 101 may be responsible for presenting a plurality of projection windows on the first terminal 101 based on a plurality of paths of decoded data. The plurality of projection windows are in a one-to-one correspondence with the plurality of second terminals 102. Content in the projection window is the same as all or a part of content of an interface presented by a corresponding second terminal 102. The window manager of the first terminal 101 may be further responsible for dynamically increasing or decreasing a projection window on the first terminal 101, scaling down or scaling up the projection window presented on the first terminal 101, switching a focus window, or the like based on a user operation.

The network management module of the second terminal 102 may be responsible for establishing the transmission channel between the second terminal 102 and the first terminal 101. The encoding module of the second terminal 102 may be responsible for encoding data (for example, referred to as projection data) corresponding to a current display interface or some elements on an interface. The setting module of the second terminal 102 may be responsible for setting an audio and video parameter based on a setting of the user. The audio and video parameter may include resolution, landscape/portrait orientation, a same source/different source, layer filtering, and the like. The same source/different source may refer to whether a current interface continues to be displayed on the second terminal 102 after the second terminal 102 performs projection. For example, the same source means that the current interface continues to be displayed on the second terminal 102 after the second terminal 102 performs projection, the different source means that the current interface does not continue to be displayed on the second terminal 102 after the second terminal 102 performs projection.

With reference to FIG. 170 and FIG. 171, the following describes in detail the projection method provided in embodiments of this application with reference to the accompanying drawings by using an example in which the first terminal 101 is a television and the plurality of second terminals 102 are all mobile phones (for example, the plurality of second terminals 102 include a mobile phone 1 and a mobile phone 2). It should be noted that, in this embodiment of this application, the first terminal and the second terminal are merely intended to distinguish between two different devices. In some embodiments, nouns "first terminal" and "second terminal" used to describe different devices may also be interchanged. For example, in this embodiment, the first terminal 101 may also be referred to as a second terminal (for example, a television), and the second terminal 102 may also be referred to as a first terminal (for example, a mobile phone). This is not specifically limited herein in this embodiment.

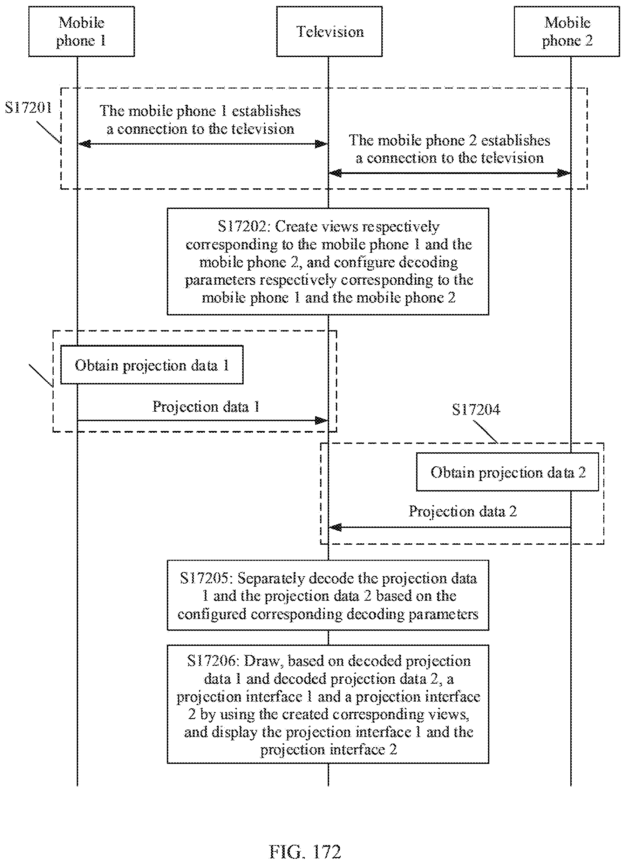

FIG. 172 is a schematic flowchart of a projection method according to an embodiment of this application. As shown in FIG. 172, the method may include the following S17201 to S17206.

S17201: The mobile phone 1 establishes a connection to the television, and the mobile phone 2 establishes a connection to the television.

When a user wants to project display interfaces of a plurality of terminals (for example, referred to as second terminals, for example, the mobile phone 1 and the mobile phone 2) to a same terminal (for example, referred to as a first terminal, for example, the television) for display, to implement many-to-one projection, the plurality of second terminals may separately establish connections to the first terminal.

The first terminal may establish the connection to the second terminal in a plurality of manners. In some embodiments, the first terminal may establish the connection to the second terminal in a wired manner. In some other embodiments, the first terminal may establish the connection to the second terminal in a wireless manner. For specific descriptions of establishing the connection to the second terminal by the first terminal, refer to specific descriptions of corresponding content in the embodiments shown in FIG. 29 and FIG. 47. Details are not described herein again.

It should be noted that different second terminals may establish connections to the first terminal in a same manner or different manners. For example, a manner of establishing the connection to the mobile phone 1 by the television may be the same as or different from a manner of establishing the connection to the mobile phone 2 by the television and. This is not specifically limited herein in this embodiment.

With reference to FIG. 170 and FIG. 171, in this embodiment, for example, the plurality of second terminals all establish the connections to the first terminal in the wireless manner. The user wants to implement many-to-one projection from the plurality of second terminals to the first terminal. To be specific, the plurality of second terminals, for example, the mobile phone 1 and the mobile phone 2, are projection source ends, and the first terminal, for example, the television, is a projection destination end. The user may manually enable a projection service function (which may also be referred to as a many-to-one projection function) of the television used as the projection destination end. The projection service function of the television may be alternatively automatically enabled. For example, the function is automatically enabled when the television is started. After the projection service function of the television is enabled, the television may obtain connection information, for example, IP addresses, of the projection source ends (for example, the mobile phone 1 and the mobile phone 2).

The television may obtain, in the following manner, the connection information of each second terminal used as the projection source end.

Manner 1: The connection information of each second terminal may be manually entered by the user. For example, after the projection service function of the television is enabled, the television may display a configuration interface 1 for the user to enter the connection information of each second terminal, for example, the IP address. After the user inputs the connection information of each second terminals, the television may obtain the connection information of each second terminal. On the configuration interface 1, a quantity of controls (such as input boxes) for the user to enter the connection information may be fixed (for example, two, three, or more, which is not specifically limited in this embodiment). The user may enter the connection information of the second terminal in the control. A quantity of pieces of connection information entered by the user may be equal to or less than the quantity of the controls. It may be understood that the quantity of pieces of connection information entered by the user is the same as a quantity of projection source ends that can be connected to the television.

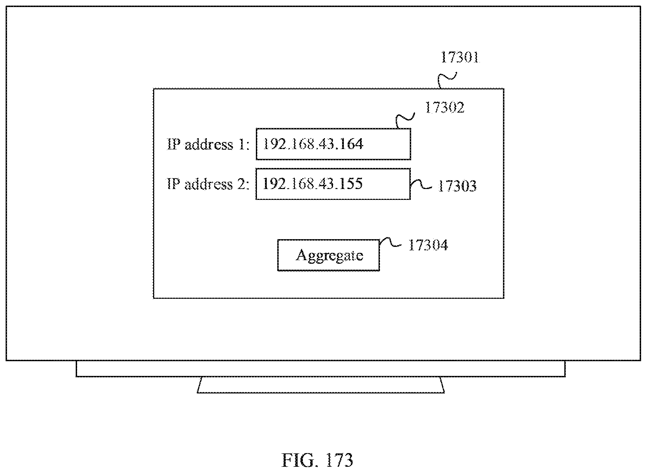

For example, there are two input boxes for the user to enter the connection information on the configuration interface 1. As shown in FIG. 173, after the projection service function of the television is enabled, the television may display a configuration interface 17301. The configuration interface 17301 includes an input box 17302 and an input box 17303 for the user to enter the connection information. The user may respectively enter, in the input box 17302 and the input box 17303, the connection information of the second terminals used as the projection source ends, for example, the IP addresses. For example, the user enters an IP address 192.168.43.164 of the mobile phone I in the input box 17302, and enters an IP address 192.168.43.155 of the mobile phone 2 in the input box 17303. Then, the television may obtain the connection information of each second terminal from the configuration interface 17301. For example, after completing entering, the user may perform an operation, for example, a tap operation, on an "Aggregate" button 17304 on the configuration interface 17301. After receiving the operation, the television may obtain the connection information of each second terminal from the configuration interface 17301, for example, the IP address 192.168.43.164 and the IP address 192.168.43.155. For example, a window manager of the television may obtain the IP address 192.168.43.164 and the IP address 192.168.43.155 from the configuration interface 17301.

Manner 2: The connection information of each second terminal used as the projection source end may be listened and obtained by the television. For example, Bluetooth functions are enabled on all the mobile phone 1, the mobile phone 2, and the television. After the projection service function of the television is enabled, the television may start to perform a device discovery process. For example, Bluetooth listening is enabled on the television. When the Bluetooth functions of the second terminals used as the projection source ends, for example, the mobile phone 1 and the mobile phone 2, are enabled, the second terminals may send a Bluetooth broadcast. The television may receive the Bluetooth broadcast sent by the second terminal. In a process in which the television performs device discovery, the television and a discovered device (for example, the second terminal) may alternatively mutually exchange connection information such as IP addresses. For example, the television may separately send a notification message to the second terminals, for example, the mobile phone 1 and the mobile phone 2, to notify the second terminals to report the IP addresses of the second terminals. Then, the television (for example, a network management module of the television) may receive the IP addresses from the second terminals, for example, the mobile phone 1 and the mobile phone 2.

It may be understood that, after Bluetooth listening is enabled on the television, Bluetooth broadcasts sent by all terminals in a listening range may be listened and obtained by the television. In some embodiments, the television may send the notification message to all listened and detected terminals, so that the terminals report connection information of the listened and detected terminals. For example, if the television listens and obtains Bluetooth broadcasts of the mobile phone 1 and the mobile phone 2, the television sends the notification message to both the mobile phone 2 and the mobile phone 2. In some other embodiments, after listening and obtaining a Bluetooth broadcast of a terminal, the television may display a discovered device list The discovered device list includes identifiers of all terminals listened and detected by the television, for example, includes an identifier of the mobile phone 1 and an identifier of the mobile phone 2. The discovered device list is used by the user to select a terminal that the user wants to connect to the television. The television may send the notification message only to the terminal selected by the user. For example, if the user selects the identifier of the mobile phone 1 and the identifier of the mobile phone 2 in the discovered device list, the television may send the notification message to the mobile phone 1 and the mobile phone 2.

After obtaining the connection information of each second terminal, the television may establish the connections to the corresponding second terminals based on the obtained connection information. Wireless communication protocols used when the television establish the connections to the second terminals may be the same or different. This is not specifically limited herein in this embodiment For example, the television may establish, based on the IP address 192.168.43.164 of the mobile phone 1, the connection to the mobile phone 1 by using a Wi-Fi protocol, and establish, based on the IP address 192.168.43.155 of the mobile phone 2, the connection to the mobile phone 2 by using the Wi-Fi protocol. For example, the television may establish, based on the IP address 192.168.43.164 of the mobile phone 1, the connection to the mobile phone 1 by using a Wi-Fi protocol, and establish, based on the IP address 192.168.43.155 of the mobile phone 2, the connection to the mobile phone 2 by using a Bluetooth protocol.

In an example, with reference to FIG. 171, a process in which the television establishes the connection to the second terminal (for example, the mobile phone 1 or the mobile phone 2) may be as follows: A network management module of the television initiates a network connection, for example, sends a connection establishment request, to the second terminal based on the IP address. A network management module of the second terminal responds to the connection establishment request, and completes establishment of the connection to the television. It should be noted that, in a scenario in which the television obtains the connection information of each second terminal in the foregoing manner 1, the connection information of each second terminal is specifically obtained by the window manager of the television. In this scenario, the window manager of the television may send the obtained connection information of each second terminal to the network management module of the television, so that the network management module of the television initiates the network connection.

S17202: The television creates views respectively corresponding to the mobile phone 1 and the mobile phone 2, and configures decoding parameters respectively corresponding to the mobile phone 1 and the mobile phone 2.

It may be understood that, when the second terminal is connected to the first terminal, a terminal used as a projection source end may project, on a display of a terminal, used as a projection destination end, for display, an interface displayed on a display of the terminal used as a projection source end. With reference to the descriptions of S17201, in this embodiment, the plurality of second terminals are all used as the projection source ends, and the first terminal is used as the projection destination end. To be specific, the plurality of second terminals may all project, to a display of the first terminal for display, interfaces displayed on displays of the plurality of second terminals, to implement many-to-one projection. To achieve a many-to-one projection purpose, in this embodiment, the first terminal used as the projection destination end may perform the following preparations:

For each of the plurality of second terminals, after obtaining the connection information of the second terminal, or after successfully connecting to the second terminal, the first terminal may create a corresponding view (view), to render the interface projected by the second terminal. The foregoing view may be the drawing component in embodiments of this application.

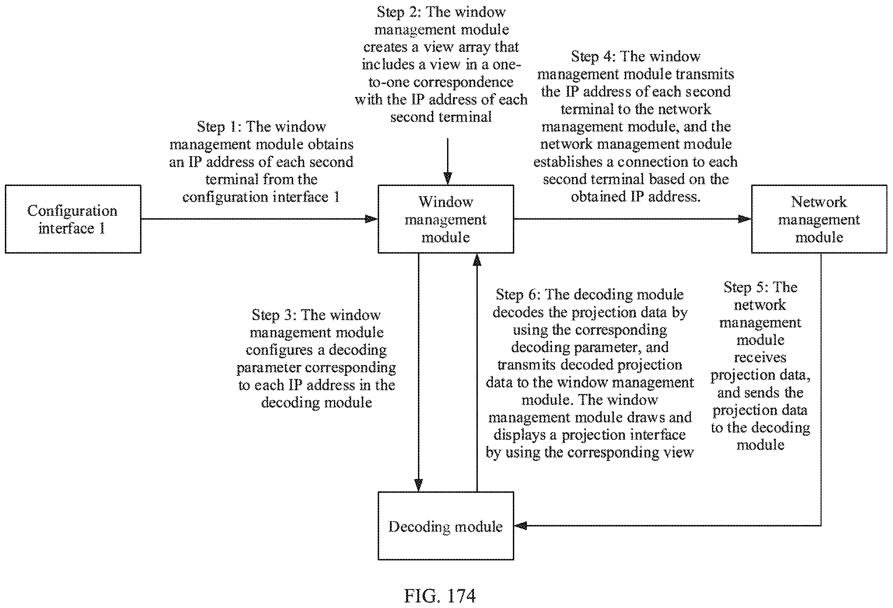

For example, with reference to FIG. 171, the connection information of each second terminal is manually entered by the user. As shown in FIG. 174, after the first terminal displays the configuration interface 1, the user may enter the connection information, for example, the IP address, of each second terminal by using the configuration interface 1. The first terminal, for example, a window manager of the first terminal, may obtain the IP address of each second terminal from the configuration interface 1 (for example, Step 1 in FIG. 174). After obtaining the IP address of each second terminal or successfully connecting to each second terminal, the first terminal may locally store an array, for example, referred to as an array 1. The array 1 includes the IP address of each second terminal used as the projection source end. The first terminal may create, based on the array 1, the corresponding view for each second terminal used as the projection source end, to render the interface projected by each second terminal. For example, the window manager of the first terminal creates a view array. The view array may include views in a one-to-one correspondence with the IP addresses in the array 1 (for example, Step 2 in FIG. 174).

The first terminal configures the decoding parameter for each of the plurality of second terminals, to decode the projection data from each second terminal.

It may be understood that a specific implementation in which the projection source end projects the current display interface to the projection destination end may be that the projection source end obtains data corresponding to the current display interface, for example, referred to as projection data, and sends the data to the projection destination end, so that the projection destination end displays corresponding content on the display of the projection destination end. Generally, before the projection source end transmits the projection data, the projection data may be encoded, and encoded projection data is transmitted to the projection destination end Correspondingly, after receiving the projection data from the projection source end, the projection destination end may decode the projection data.

In this embodiment, for the plurality of second terminals used as the projection source ends, the first terminal may decode projection data from different second terminals by using a same decoding parameter, or may decode projection data from different second terminals by using different decoding parameters. In a scenario in which projection data from different second terminals is decoded by using different decoding parameters, still with reference to FIG. 174, after the window manager of the first terminal successfully creates a view corresponding to each IP address, the window manager of the first terminal may configure, in a decoding module of the first terminal, a decoding parameter associated with the corresponding IP address (for example, Step 3 in FIG. 174). For example, after the view is successfully created, the window manager of the first terminal may configure, in the decoding module by using a callback function, the decoding parameter associated with the corresponding IP address. In this way, the first terminal may configure different decoding parameters for the second terminals, to decode the projection data from the second terminals. The decoding parameter may be obtained through negotiation by the first terminal and the second terminal, or may be pre-configured on the first terminal. This is not specifically limited herein in this embodiment.

In an example, the decoding parameter may include an allocation mode of a video stream, a specification of the video stream, a video encoding format, a bit rate of video encoding, a virtual display (Virtual Display) flag, whether to project audio data, and the like. The allocation mode of the video stream may include a broadcast mode, a distribution mode, an aggregation mode, and the like. The broadcast mode may mean that only a single video stream is started and distributed to a plurality of projection destination ends with a low delay. The distribution mode may mean that a plurality of video streams are started and respectively distributed to a plurality of different projection destination ends. The aggregation mode may mean that a plurality of video streams are started and distributed to a same projection destination end. The specification of the video stream may refer to resolution of a video encoder, for example, 720p, 1080p, or 2K. The coding format of the video may be 11264 (advanced video coding (Advanced Video Coding, AVC)), 11.265 (high Efficiency video coding (high efficiency video coding, HEVC)), or the like.

In addition, the first terminal stores a connection instance for each of the plurality of second terminals, to receive the projection data from the second terminal.

As described in S17201, the first terminal establishes the connection to each second terminal based on the IP address that is obtained (for example, entered by the user). For example, still with reference to FIG. 174, the window manager of the first terminal may transmit the obtained IP address of each second terminal to a network management module of the first terminal, and the network management module establishes the connection to each second terminal based on the obtained IP address (for example, Step 4 in FIG. 174). After the connection between the first terminal and each second terminal is successfully established, the first terminal, for example, a network management module of the first terminal, may locally maintain an array, for example, referred to as an array 2. The array 2 includes connection instances (or referred to as instances) that are in a one-to-one correspondence with the IP addresses in the array 1, to receive projection data from corresponding second terminals.

For example, with reference to the example in S17201, the mobile phone 1 and the mobile phone 2 are used as projection source ends, and the television is used as a projection destination end. For example, the IP address of the mobile phone 1 and the IP address of the mobile phone 2 are manually entered by the user. After the television displays the configuration interface 1 (for example, the configuration interface 17301 shown in FIG. 173), the user may enter the IP address of the mobile phone 1 and the IP address of the mobile phone 2 on the configuration interface 1. The window manager of the television may obtain the IP address of the mobile phone 1 and the IP address of the mobile phone 2 from the configuration interface 1. After the IP addresses of the mobile phone 1 and the mobile phone 2 are obtained, the television may locally store an array 1. The array 1 includes the IP address of the mobile phone 1 and the IP address of the mobile phone 2. The window manager of the television may create a view array based on the array 1. The view array includes a view corresponding to the IP address of the mobile phone 1 in the array 1, for example, a view 1, to render an interface projected by the mobile phone 1, and a view corresponding to the IP address of the mobile phone 2 in the array 1, for example, a view 2, to render an interface projected by the mobile phone 2. After the window manager of the television successfully creates the view 1 corresponding to the IP address of the mobile phone 1, a decoding parameter, for example, referred to as a decoding parameter 1, associated with the IP address of the mobile phone 1 is configured in a decoding module by using a callback function. After the view 2 corresponding to the IP address of the mobile phone 2 is successfully created, a decoding parameter, for example, referred to as a decoding parameter 2, associated with the IP address of the mobile phone 2 is configured in the decoding module by using the callback function. In this way, the television may configure different decoding parameters for the mobile phone 1 and the mobile phone 2, to decode projection data. In addition, after the connections between the television and the mobile phone 1 and between the television and the mobile phone 2 are successfully established, the network management module of the television may further locally maintain an array 2. The array 2 includes a connection instance, for example, referred to as a connection instance 1, corresponding to the IP address of the mobile phone 1 in the array 1, to receive projection data from the mobile phone 1, and a connection instance, for example, referred to as a connection instance 2, corresponding to the IP address of the mobile phone 2 in the array 1, to receive projection data from the mobile phone 2.

S17203: The mobile phone 1 obtains projection data 1 and sends the projection data 1 to the television.

S17204: The mobile phone 2 obtains projection data 2 and sends the projection data 2 to the television.

As described in the foregoing embodiment, when the first terminal is connected to the second terminal, the second terminal may be used as the projection source end to project, on the display of the first terminal, used as the projection destination end, for display, the interface displayed on the display of the second terminal.

In a wireless projection scenario, in addition to successfully establishing the connection to the first terminal, a condition for the second terminal to start projection further includes receiving a corresponding user operation.

For example, the user operation may be a projection start selection operation of the user, for example, may be a tap operation of the user for a projection start button, The projection start selection operation may be received by the second terminal before the second terminal establishes the connection to the first terminal, or may be received by the second terminal after the second terminal establishes the connection to the first terminal. If the projection start selection operation is received by the second terminal before the second terminal establishes the connection to the first terminal, the second terminal may start to perform projection after the second terminal successfully establishes the connection to the first terminal If the projection start selection operation is received by the second terminal after the second terminal establishes the connection to the first terminal, the second terminal starts to perform projection after the second terminal successfully establishes the connection to the first terminal and the second terminal receives the projection start selection operation.

For another example, the user operation may be a projection confirmation operation of the user in a process in which the second terminal establishes the connection to the first terminal. For example, in the process in which the second terminal establishes the connection to the first terminal, the second terminal may display a confirmation interface, to ask the user whether to confirm projecting the display interface of the second terminal to the first terminal for display. The projection confirmation operation may be a tap operation of the user for a projection confirmation button on the confirmation interface. Then, after the second terminal successfully establishes the connection to the first terminal, the second terminal may start to perform projection.

In this embodiment, in an example, a specific implementation in which the second terminal projects, to the display of the first terminal, the interface displayed on the display of the second terminal may be as follows: The second terminal obtains data corresponding to a current display interface of the second terminal, for example, projection data, and sends the data to the first terminal, so that the first terminal displays corresponding content on the display of the first terminal, to project the display interface of the second terminal to the display of the first terminal for display

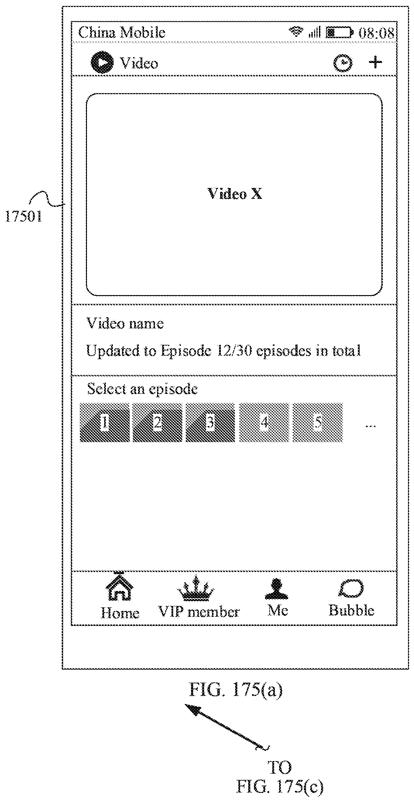

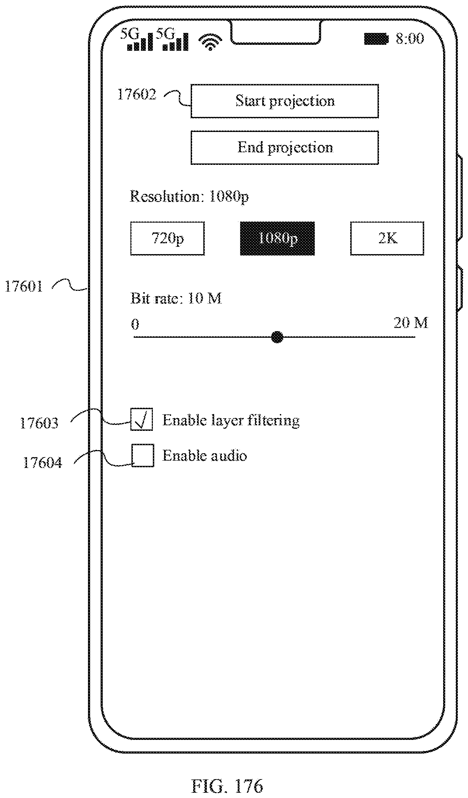

For example, with reference to FIG. 175(a) to FIG. 175(c) and FIG. 176, the mobile phone 1 and the mobile phone 2 are used as projection source ends, the television is used as a projection destination end, the foregoing user operation is the projection start selection operation of the user in the wireless projection scenario, and the operation is performed before the mobile phone 1 and the mobile phone 2 establish the connections to the television.

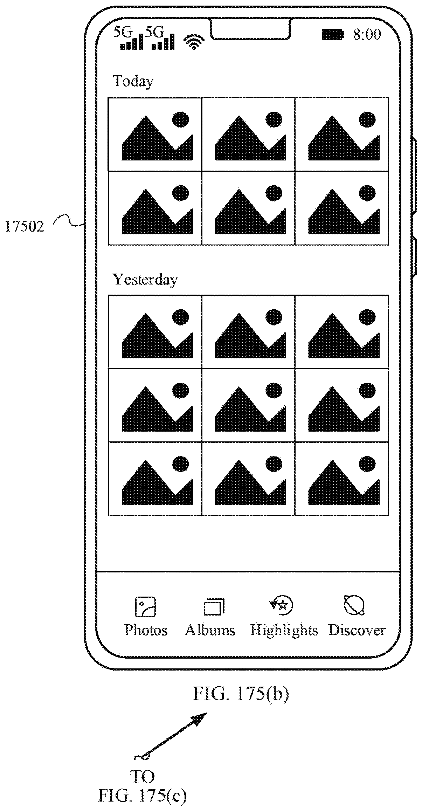

When the user wants to project interfaces respectively displayed by the mobile phone 1 and the mobile phone 2 to the television, the user may separately trigger the mobile phone 1 and the mobile phone 2 to start projection. For example, as shown in FIG. 175(a), the mobile phone 1 currently displays an interface 17501, and as shown in FIG. 175(b), the mobile phone 2 currently displays an interface 17502. The user may separately trigger the mobile phone 1 and the mobile phone 2 to display interfaces including "Start projection" buttons, for example, referred to as configuration interfaces 2, to trigger the mobile phone 1 and the mobile phone 2 to start projection. For example, as shown in FIG. 176, the user may trigger the mobile phone 1 to display a configuration interface 17601. The configuration interface 17601 includes a "Start projection" button 17602. The user may perform a tap operation on the "Start projection" button 17602. The mobile phone 1 receives the tap operation of the user for the "Start projection" button 17602. Then, the mobile phone 1 may obtain data corresponding to the current display interface 17501. For example, the mobile phone 1 may obtain, by using a display management module (or referred to as a display manager, DisplayManager, which may be a module at a framework layer of the mobile phone 1) of the mobile phone 1, the data, for example, referred to as projection data 1, corresponding to the current display interface 17501 of the mobile phone 1. The user may further trigger the mobile phone 2 to display a configuration interface 2 (for example, similar to the configuration interface 17601 in FIG. 176). After receiving a tap operation of the user for a "Start projection" button on the configuration interface 2, the mobile phone 2 may obtain data corresponding to a current display interface 17502. For example, the mobile phone 2 may obtain, by using a display management module (or referred to as a display manager, which may be a module at a framework layer of the mobile phone 2) of the mobile phone 2, the data, for example, referred to as projection data 2, corresponding to the current display interface of the mobile phone 2. In addition, as described in the foregoing embodiment, the television used as the projection destination end may separately establish the connections to the mobile phone 1 and the mobile phone 2 based on the IP addresses of the mobile phone 1 and the mobile phone 2. After the connection between the television and the mobile phone 1 is successfully established, the mobile phone 1 may send the obtained projection data 1 to the television, to project the display interface 17501 of the mobile phone 1 to a display of the television for display. After the connection between the television and the mobile phone 2 is successfully established, the mobile phone 2 may send the obtained projection data 2 to the television, to project the display interface of the mobile phone 2 to the display of the television for display.

**In** some embodiments, a DMP may be used to project the display interface of the second terminal to the display of the first terminal for display. For example, after the user triggers the second terminal to start projection, the second terminal may use the DMP to obtain the corresponding projection data. Then, the second terminal may send the obtained projection data to the first terminal. For example, with reference to FIG. 171, after the second terminal obtains the projection data, an encoding module of the second terminal may encode the projection data and send encoded projection data to the network management module of the second terminal. The network management module of the second terminal may send the encoded projection data to the first terminal through the established connection to the first terminal.

In some other embodiments, wireless projection (Miracast) may be alternatively used to project the display interface of the second terminal to the display of the first terminal for display. To be specific the second terminal may obtain all layers of the display interface of the second terminal, and then, integrate all the obtained layers into a video stream (or referred to as projection data). Then, an encoding module of the second terminal may encode the video stream and then send an encoded video stream to the network management module of the second terminal, so that the network management module sends the encoded video stream to the first terminal through the established connection to the first terminal by using an RTSP protocol.

In the foregoing embodiment, an example in which all content on the display interface on the display of the second terminal is projected to the display of the first terminal for display is used for description, In some other embodiments, a part of content on the display interface, for example, some elements on the interface, on the display of the second terminal may be alternatively projected to the display of the first terminal for display. The element that needs to be projected to the first terminal may be a predetermined element on the interface, for example, a video element. When the second terminal performs projection, only a layer at which the predetermined element is located may be projected to the first terminal, and another layer is not projected. In this way, privacy information on the second terminal can be protected from being displayed on the first terminal.

Whether the second terminal projects only the layer at which the predetermined element is located may be predefined by a system. For example, when the interface displayed on the display of the second terminal includes the predetermined element, the second terminal projects only the layer at which the predetermined element is located to the first terminal. When the interface displayed on the display of the second terminal does not include the predetermined element, the second terminal projects all the content on the current interface to the first terminal. Whether the second terminal projects only the layer at which the predetermined element is located may also be set by the user. For example, still with reference to FIG. 176, the configuration interface 17601 further includes an "Enable layer filtering" option 17603 (where the option 17603 may be a layer filtering setting option in this embodiment of this application). When the user selects the "Enable layer filtering" option 17603 on the configuration interface 17601, the second terminal enables a layer filtering function, that is, the second terminal projects only the layer at which the predetermined element is located to the first terminal. When the user does not select the "Enable layer filtering" option 17603 on the configuration interface 17601, the second terminal projects all the content on the current interface to the first terminal.

In an example, the DMP is used to project the display interface of the second terminal to the display of the first terminal for display, and the predetermined element is the video element. A specific implementation in which the second terminal projects only the layer at which the predetermined element is located may include: After the second terminal creates a VirtualDisplay, the second terminal, for example, a display compositing (surface Flinger) module (for example, which may be a module at an application layer of the second terminal) of the second terminal, may composite, to the VirtualDisplay layer by layer, the interface displayed on the display of the second terminal. In a layer-by-layer compositing process, the surface Flinger module of the second terminal may determine whether a layer that currently needs to be composited includes the video element For example, the second terminal may determine, based on a prefix of a layer name of a layer, whether the layer includes the video element. For example, a prefix of a layer name of the layer at which the video element is located is generally Surfaceview. Therefore, when determining that a prefix of a layer name of the layer that currently needs to be composited is Surfaceview, the second terminal may determine that the layer includes the video element, and when determining that a prefix of a layer name of the layer that currently needs to be composited is not Surfaceview, the second terminal may determine that the layer does not include the video element The surface Flinger module of the second terminal composites only the layer including the video element to the VirtualDisplay, and does not composite the layer that does not include the video element to the VirtualDisplay, to obtain the corresponding projection data. The projection data includes only data corresponding to the layer at which the video element is located, to project only the video element to the first terminal.

It may be understood that, in this embodiment, when the second terminal is currently playing a sound, for example, when the user watches a video or listens to music by using the second terminal, after the second terminal starts projection, the second terminal may not only project a current display interface to the first terminal, but also project audio to the first terminal. In this scenario, the foregoing projection data (for example, the projection data 1 or the projection data 2) may include video data and audio data. The video data is used by the first terminal to display a corresponding projection interface on the display of the first terminal, and the audio data is used by the first terminal to play a corresponding sound. A specific process of obtaining the video data is the same as the process described in the foregoing embodiment in which projection is implemented by using the DMP or a wireless projection manner. A process of obtaining the audio data may be as follows: The second terminal may pre-create an audio record (AudioRecord) object, and create a buffer (buffer). After the user triggers the second terminal to start projection, the second terminal may invoke the AudioRecord object After the AudioRecord object is invoked, the audio data in the second terminal may be recorded. For example, if the projection interface includes a video component, audio in the video played on the video component may be recorded, to obtain the audio data, and the audio data is stored in the created buffer. Then, the second terminal may obtain the audio data from the buffer, and send the audio data to the first terminal. It should be noted that, in this scenario, both the video data and the audio data may be projected to the first terminal, or only the video data may be projected to the first terminal, and the audio data is not projected to the first terminal. Specifically, whether to project the audio data may be predefined by the system, or may be set by the user. For example, still with reference to FIG. 176, the configuration interface 17601 further includes an "Enable audio" option 17604. When the user selects the "Enable audio" option 17604 on the configuration interface 17601, the second terminal projects both the video data and the audio data to the first terminal. When the user does not select the "Enable audio" option 17604 on the configuration interface 17601, the second terminal projects only the video data to the first terminal.

S17205: The television separately decodes the projection data 1 and the projection data 2 based on the configured corresponding decoding parameters.

S17206: The television draws, based on decoded projection data 1 and decoded projection data 2, a projection interface 1 and a projection interface 2 by using the created corresponding views, and displays the projection interface 1 and the projection interface 2 on the television.

After receiving the projection data from the plurality of second terminals, the first terminal may display, on the display of the first terminal based on the received projection data, projection interfaces that are in a one-to-one correspondence with the plurality of second terminals. For example, still with reference to the foregoing example, after receiving the projection data 1, the television may display a projection interface, for example, referred to as the projection interface 1, on the television based on the projection data 1. Content displayed on the projection interface 1 is the same as all or a part of content on the display interface on the display of the mobile phone 1. Alternatively, content on the projection interface 1 is a mirror image of all or a part of content on the display interface on the display of the mobile phone 1. Similarly, after receiving the projection data 2, the television may display a projection interface, for example, referred to as the projection interface 2, on the television based on the projection data 2. Content displayed on the projection interface 2 is the same as all or a part of content on the display interface on the display of the mobile phone 2. Alternatively, content on the projection interface 2 is a mirror image of all or a part of content on the display interface on the display of the mobile phone 2.

For example, with reference to FIG. 171 and FIG. 174, a specific implementation in which the first terminal correspondingly displays the projection interface on the first terminal based on the received projection data of the second terminal may be as follows: After receiving the projection data from the second terminal, the network management module of the first terminal may send the projection data to the decoding module of the first terminal for decoding (for example, Step 5 shown in FIG. 174). After decoding the projection data by using the corresponding decoding parameter, the decoding module of the first terminal sends decoded projection data to the window manager of the first terminal. The window manager of the first terminal may draw the corresponding projection interface by using the corresponding view and based on the received projection data and display the corresponding projection interface on the display of the first terminal (for example, Step 6 in FIG. 174).

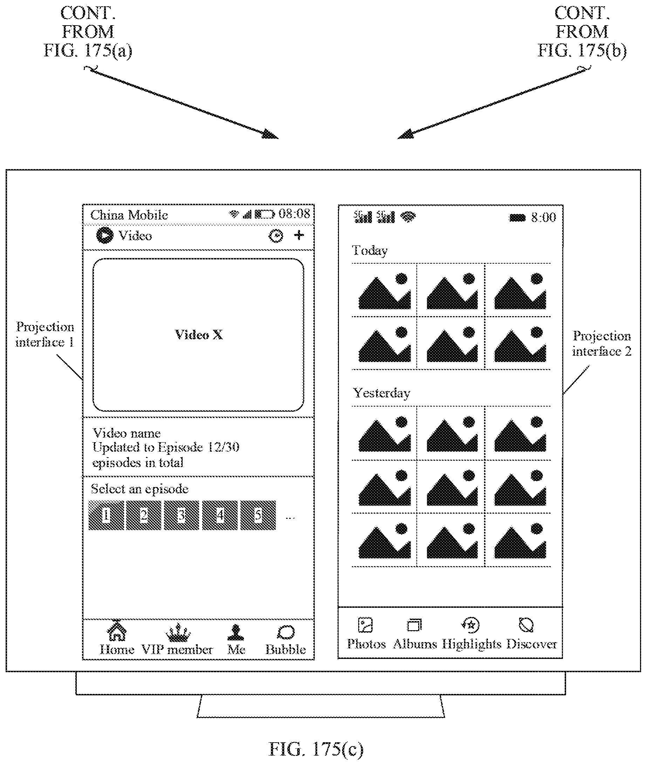

For example, with reference to FIG. 171, FIG. 174, FIG. 175(a) to FIG. 175(c), and the descriptions in S17202, the network management module of the television may receive encoded projection data 1 after a network management module of the mobile phone 1 sends the encoded projection data 1 to the television through the established connection to the television. Specifically, the network management module of the television may receive the encoded projection data 1 by using the connection instance 1 in the locally maintained array 2. The network management module of the television may determine, based on the connection instance 1 of the received data, that the IP address of the projection source end is the IP address of the mobile phone 1. Then, the network management module of the television may send the encoded projection data 1 and the IP address of the mobile phone 1 to the decoding module of the television. The decoding module of the television may obtain the corresponding decoding parameter, for example, obtain the decoding parameter 1, based on the IP address of the mobile phone 1, and decode the projection data 1 by using the decoding parameter 1. The decoding module of the television may send decoded projection data 1 to the window manager of the television. The window manager of the television may draw the projection interface 1 based on the decoded projection data 1 and by using the view 1 that corresponds to the IP address of the mobile phone 1 and that is in the created view array, and as shown in FIG. 175(c), display the projection interface 1 on the display of the television. Content on the projection interface 1 is the same as content on the interface 17501 displayed by the mobile phone 1 in FIG. 175(a). Similarly, after a network management module of the mobile phone 2 sends encoded projection data 2 to the television through the established connection to the television, the network management module of the television may receive the encoded projection data 2 by using the connection instance 2 in the locally maintained array 2. The network management module of the television may determine, based on the connection instance 2 of the received data, that the IP address of the projection source end is the IP address of the mobile phone 2. Then, the network management module of the television may send the encoded projection data 2 and the IP address of the mobile phone 2 to the decoding module of the television. The decoding module of the television may obtain the corresponding decoding parameter, for example, obtain the decoding parameter 2, based on the IP address of the mobile phone 2, and decode the projection data 2 by using the decoding parameter 2. The decoding module of the television may send decoded projection data 2 to the window manager of the television. The window manager of the television may draw the projection interface 2 based on the decoded projection data 2 and by using the view 2 that corresponds to the IP address of the mobile phone 2 and that is in the created view array, and as shown in FIG. 175(c), display the projection interface 2 on the display of the television. Content on the projection interface 2 is the same as content on the interface 17502 displayed by the mobile phone 2 in FIG. 175(b).

In addition, in this embodiment, a window used by the first terminal to display the projection interface may be referred to as a projection window. For example, with reference to FIG. 175(c), a window used to display the projection interface 1 may be referred to as a projection window 1, and a window used to display the projection interface 2 may be referred to as a projection window 2.

When a projection service function of the first terminal is enabled, the first terminal may display a corresponding projection window after determining to connect to the second terminal (for example, the mobile phone 1 or the mobile phone 2). The first terminal may set, based on a quantity of second terminals used as projection source ends and a size of the display of the first terminal, a size and a layout of a projection window corresponding to each second terminal. For example, there are two second terminals used as projection source ends. After connecting to the two second terminals, the first terminal may display, on the display of the first terminal, projection windows respectively corresponding to the two second terminals. The two projection windows may be vertically or horizontally arranged on the display of the first terminal. Sizes of the two projection windows may be the same or different. For example, as shown in FIG. 175(c), the projection window 1 corresponding to the mobile phone 1 and the projection window 2 corresponding to the mobile phone 2 are vertically arranged, and sizes of the projection window I and the projection window 2 are the same. The two projection windows may be displayed on the display of the first terminal at the same time, or may be sequentially displayed on the display of the first terminal according to a sequence in which the corresponding second terminal starts projection, or in other words, according to a sequence in which the first terminal receives projection data of the corresponding second terminal. When the corresponding projection windows are sequentially displayed based on a sequence in which the corresponding second terminals start projection, a size of a first displayed projection window may be the same as the size of the display of the first terminal, and a size of a later displayed projection window may be smaller than the size of the display of the first terminal, and is displayed above the first displayed projection window in a floating window.

When displaying the projection interfaces that are in a one-to-one correspondence with the plurality of second terminals, the first terminal (for example, the window manager of the first terminal) may perform processing, for example, scaling down, scaling up, switching a focus window, or closing the corresponding projection window based on a user operation. The operation may be a touch operation of the user for the screen of the first terminal, or may be an operation input by the user by using an input device of the first terminal (for example, a mouse or a keyboard of a PC, or a remote control of a television).

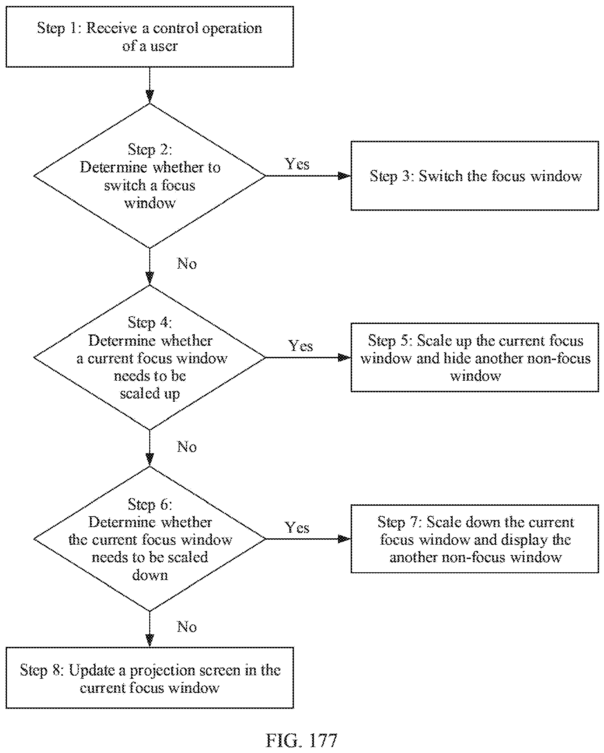

For example, still with reference to FIG. 175(a) to FIG. 175(c), the projection interface 1 and the projection interface 2 are displayed on the television, the window used to display the projection interface 1 is the projection window 1, and the window used to display the projection interface 2 is the projection window 2. As shown in FIG. 177, the user may use a remote control of the television to control a current display interface on the television.

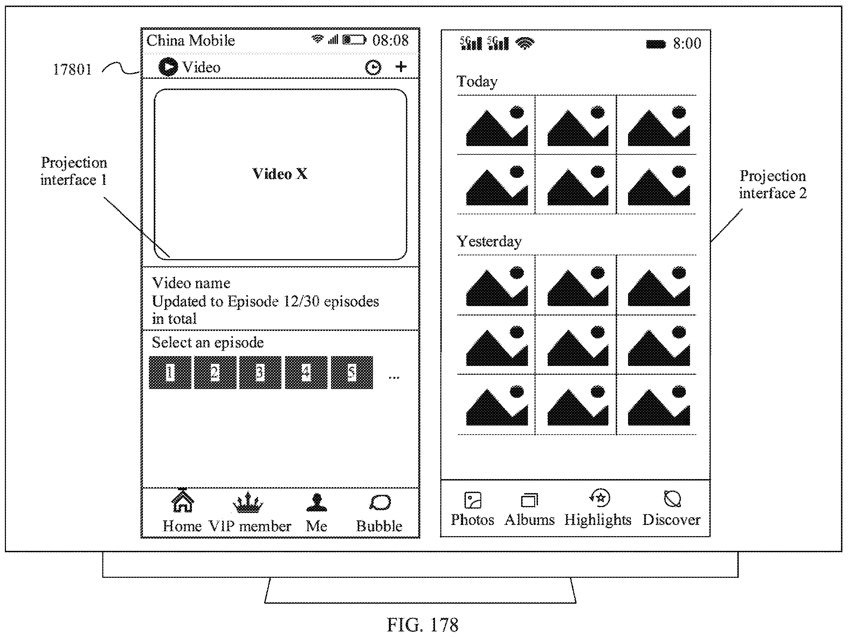

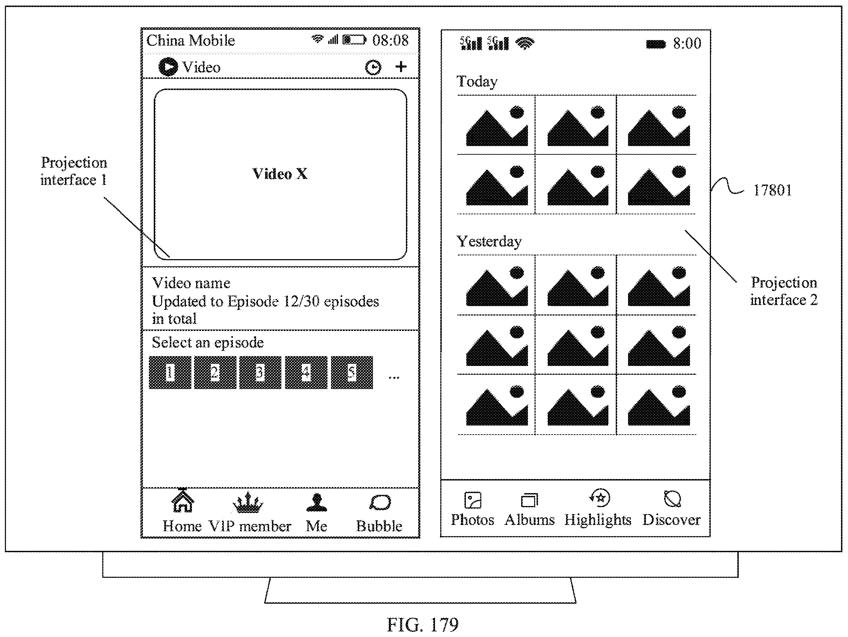

After receiving the control operation of the user (for example, Step 1 in FIG. 177), the television may determine, based on the received control operation, whether the focus window needs to be switched (for example, Step 2 in FIG. 177). If the control operation is an operation of switching the focus window, it is determined that the **focus** window needs to be switched. For example, the operation of switching the focus window may be an operation of the user for the "LEFT" button or the "RIGHT" button of the remote control. To be specific, if the control operation received by the television is an operation for the "LEFT" button or the "RIGHT" button of the remote control, the television may determine that the focus window needs to be switched, and the television may switch a focus (for example, Step 3 in FIG. 177). For example, the television may locally store a focus window variable. The focus window variable is used to indicate which window of a plurality of currently displayed projection windows is the focus window. The operation of switching the focus by the television may include: The television updates the focus window variable from an identifier 1 to an identifier 2. The identifier 1 is an identifier of a projection window that is used as the focus window before focus switching, and the identifier 2 is an identifier of a projection window that is used as the focus window after focus switching. For example, as shown in FIG. 178, after the television displays the projection interface 1 and the projection interface 2, a projection window of one of the projection interface 1 and the projection interface 2 may be considered as the focus window by default. For example, the television considers, as the focus window by default, that the projection window 1 that is used to display the projection interface 1. As shown in FIG. 178, the television may display a prompt identifier 17801, used to prompt the user that the current projection window 1 is the focus window. The television may alternatively set the focus window variable to an identifier of the projection window 1, to indicate that the projection window 1 is the focus window Then, the television receives the operation of the user for the "RIGHT" button of the remote control, and the television may determine that the focus window needs to be switched. In this case, the television updates the focus window variable from the identifier 1 to the identifier 2 of the projection window 2, to indicate that the projection window 2 is a current focus window. In addition, as shown in FIG. 179, the television may update a location of the prompt identifier 17801 on the display of the television, that is, slide from a location of the projection window 1 to a location of the projection window 2, to prompt the user that the current projection window 2 is the focus window.

If the television determines that the focus window does not need to be switched, the television may determine, with reference to a size of a current focus window based on the received control operation, whether the current focus window needs to be scaled up (for example, Step 4 in FIG. 177). If the control operation is a selection operation for the focus window, for example, the selection operation may be an operation for an "OK" button of the remote control, and the current focus window is not a maximized window, the television may scale up the current focus window. The television may hide another non-focus windows (for example, Step 5 in FIG. 177). It may be understood that a size of the projection interface changes with the size of the projection window. The projection interface is also hidden as the projection window is hidden. For example, still with reference to FIG. 178, the current focus window is the projection window 1. If the television receives the operation of the user for the "OK" button of the remote control, and the television determines that the current focus window, namely, the projection window 1, is not a maximized window, the television may maximize the projection window 1, and hide another projection window (that is, hide the projection window 2). In an example, when the window is scaled up, the television may determine, based on a size the display of the television, a size of the current focus window that is scaled up, for example, the size after scaling up is the same as the size of the display of the television.

If the television determines that the current focus window does not need to be scaled up, the television may determine, with reference to a size of the current focus window based on the received control operation, whether the current focus window needs to be scaled down (for example, Step 6 in FIG. 177). If the control operation is an operation for the "OK" button of the remote control, and the current focus window is a maximized window, the television may scale down the current focus window, and display the another non-focus window (for example, Step 7 in FIG. 177). For example, the television currently displays a maximized projection window 1, and the projection window 2 is hidden. If the television receives the operation of the user for the "OK" button of the remote control, and the television determines that the current focus window, that is, the projection window 1, is a maximized window, as shown in FIG. 178, the television may scale down the projection window 1, and display the another hidden projection window, that is, display the projection window 2. In an example, when the window is scaled down, the television may determine, based on a size of the display of the television and a quantity of other hidden projection windows, a size of the current focus window that is scaled down. For example, the size after scaling down is the same as a size of another hidden projection window, a sum of sizes of all the projection windows is the same as the size of the display of the television.

If the television determines that the current focus window does not need to be scaled down, the television may update a projection interface in the current focus window based on the received control operation (for example, Step 8 in FIG. 177). It may be understood that, if the received control operation is not used to switch the focus window, and is not used to scale up or scale down the projection window, the control operation may be an operation used to operate a projection interface. In this case, the television may send the control operation to a projection source end corresponding to the current focus window, so that the projection source end performs a corresponding event based on the received control operation, and updates an interface displayed by the projection source end. Then, the projection source end may project an updated interface to the projection destination end, for example, the television. To be specific, the projection source end may obtain new projection data, and send the new projection data to the television. After receiving the updated projection data, the television may update the projection interface in the current focus window based on the new projection data.

For example, the cunent focus window is the projection window 1. The content on the projection interface 1 in the projection window 1 is a PPT. If the received control operation is an operation for an "Up" button or a "Down" button of the remote control, the television may send the operation for the "Up" button or the "Down" button of the remote control to the mobile phone 1 corresponding to the projection window 1. After receiving the operation, the mobile phone 1 may perform a paging up or paging down operation for the PPT based on the operation, and may obtain new projection data and send the new projection data to the television. After receiving the new projection data, the television may update and display the projection interface 1 in the projection window 1 based on the new projection data. It should be noted that specific implementations in which the mobile phone 1 obtains and sends the new projection data, and the television receives the new projection data and displays the projection interface based on the new projection data are similar to implementations of corresponding processes in S17203 to S17206 in the foregoing embodiment. Details are not described herein again. Certainly, the control operation used to operate the projection interface may be alternatively another operation, for example, an operation for an operable element on the projection interface. If the control operation is an operation for the operable element on the projection interface, the television may not only send the operation to a corresponding projection source end, but also send an operation location of the operation on the projection interface to the projection source end The projection source end may determine, based on the operation location, which element on the current display interface is operated by the user, further execute a corresponding event based on the received operation and the determined operated element, and update the interface displayed by the projection source end.

In addition, the first terminal may further dynamically adjust, based on the quantity of second terminals used as the projection source ends, a size and an arrangement layout of the projection window that corresponds to each second terminal and that is displayed by the first terminal. The quantity of second terminals used as the projection source ends may dynamically increase or decrease. For example, the first terminal establishes connections to a plurality of second terminals, and the first terminal currently displays projection windows respectively corresponding to the plurality of terminals. When the first terminal is disconnected from one of the second terminals, or the first terminal receives an operation of closing a projection window by the user (for example, when the projection window is the focus window, the television receives an operation of the user for a "Back" button of the remote control), that is, if the quantity of second terminals used as the projection source ends decreases, the first terminal may stop displaying a projection window corresponding to the disconnected second terminal, and adjust, based on a quantity of remaining connected second terminals, a size and an arrangement layout of a projection window corresponding to each second terminal. When a new second terminal establishes a connection to the first terminal and enables projection, that is, the quantity of second terminals used as the projection source ends increases, the first terminal may add and display a projection window corresponding to the new second terminal, and adjust, based on the quantity of second terminals currently used as projection source ends, a size and an arrangement layout of a projection window corresponding to each second terminal.

In the example in the foregoing embodiment, an example in which many-to-one projection is implemented in the wireless projection scenario is used for description. In some other embodiments, a many-to-one projection method in this embodiment may also be applied to a cross-device drag scenario. In the cross-device drag scenario, a specific process of implementing many-to-one projection is similar to the implementation in S17201 to S17206, and a difference lies in that:
1. An occasion for the first terminal, for example, the television, to create a view and configure a decoding parameter may be after connections to corresponding second terminals, for example, the mobile phone 1 and the mobile phone 2, are successfully established, or may be after the first terminal determines that a corresponding second terminal is to start projection. For example, in the cross-device drag scenario, when determining that the user triggers cross-device drag, the second terminal may send corresponding drag data to the first terminal. The drag data may be used to indicate that the drag data is an indication of related data in a drag start event The indication may identify a drag start. The first terminal may determine, based on the indication, that the second terminal is to start projection. Then, the television may create the view corresponding to the second terminal, and configure the decoding parameter corresponding to the second terminal.
2. In the cross-device drag scenario, in addition to successfully establishing the connection to the first terminal, a condition for the second terminal to start projection further includes determining that a drag intent of the user is cross-device drag. An object dragged by the user may be an interface or an element (for example, a video element, a picture-in-picture, or a floating window) on an interface displayed by the second terminal.
   For example, in a process in which the user drags the display interface or the element on the display interface of the second terminal, or after the second terminal receives a drag operation of the user, the second terminal may determine whether the drag intent of the user is cross-device drag, and may start projection after determines that the drag intent of the user to drag the element is cross-device drag. For specific descriptions, refer to corresponding descriptions in the embodiment shown in FIG. 4. Details are not described herein again. For example, the second terminal may set a drag sensing region to determine whether the drag intent of the user is cross-device drag. The drag sensing region is provided with a transparent view (view) control. After the dragged object, for example, the interface or the element on the interface, is dragged to the drag sensing region, a view control that is set in a corresponding region may monitor drag in of the element. When the view control monitors drag in of the element, the second terminal may determine that the drag intent of the user is cross-device drag.
3. In the cross-device drag scenario, if the second terminal drags the interface displayed by the second terminal, the second terminal may project the display interface to the first terminal. A specific implementation is similar to an implementation in which the second terminal projects the display interface to the first terminal in the wireless projection scenario in S17203 and S17204. For specific descriptions, refer to descriptions of corresponding content in S17203 and S17204. Details are not described herein again. If the second terminal drags the element on the display interface of the second terminal, the second terminal may project only the element to the first terminal. For example, after the second terminal receives an element dragged by the user on a current interface, the second terminal may obtain a layer name (or a layer name, layer name) of the element on the current display interface. After the second terminal starts projection, in a layer-by-layer compositing process, the second terminal may determine whether a layer name of a layer that currently needs to be composited is the same as the obtained layer name. If they are the same, the second terminal composites the layer to a VirtualDisplay. If they are different, the second terminal does not composite the layer to the VirtualDisplay, to project only the element, that is dragged by the user, to the first terminal.
4. In the cross-device drag scenario, to improve chirality experience of the user during cross-device drag, the second terminal may display the dragged object on the first terminal after receiving a drag release operation of the user. It may be understood that, in a drag process of the user, a partial region of the dragged object is displayed on the display of the second terminal, and another partial region of the dragged object is hidden (or overflows the display). To provide the user a visual effect of dragging the object from the second terminal to the first terminal, in a process of dragging the object, if a partial region of the object overflows the display, the object may be displayed on the first terminal and the second terminal at the same time. Specifically, a partial region of the dragged object is displayed on the second terminal, and another partial region (a region that overflows the second terminal) of the dragged object is displayed on the first terminal.

**In** an example, as described in the embodiment shown in FIG. 4, in the drag process, a specific implementation of displaying the dragged object on the first terminal and the second terminal at the same time may be as follows: After starting projection, the second terminal not only needs to send projection data to the first terminal, but also needs to send, to the first terminal, rectangle (rect) information of the dragged object and coordinate information of a corner (for example, any one of the upper left corner, the lower left corner, the upper right corner, and the lower right corner) of the object in the drag process. In other words, the data sent by the second terminal to the first terminal includes the projection data, the rectangle information of the dragged object, and the coordinate information of the corner of the object in the drag process. The rectangle information of the object includes coordinate information of four corners, namely, the upper left corner, the upper right corner, the lower left corner, and the lower right corner, of the object when drag starts. In this way, the first terminal may determine, based on the rectangle information of the object, the coordinate information of the corner of the object in the drag process, and resolution of the second terminal, whether the object has a region that overflows the display of the second terminal. If the object has the region that overflows the display of the second terminal, the first terminal may determine, based on the rectangular information of the object, the coordinate information of the corner of the object in the dragging process, and the resolution of the second terminal, information about the region that can be correspondingly displayed on the display screen of the first terminal and that is of the object (where content in the region is the same as content in the region that overflows the display screen of the second terminal and that is of the object). The resolution of the second terminal may be sent by the second terminal to the first terminal in a process in which the first terminal establishes the connection to the second terminal or after the connection is successfully established. The first terminal may display, on the display of the first terminal based on the determined information about the region and the projection data, the content in the corresponding region of the object.

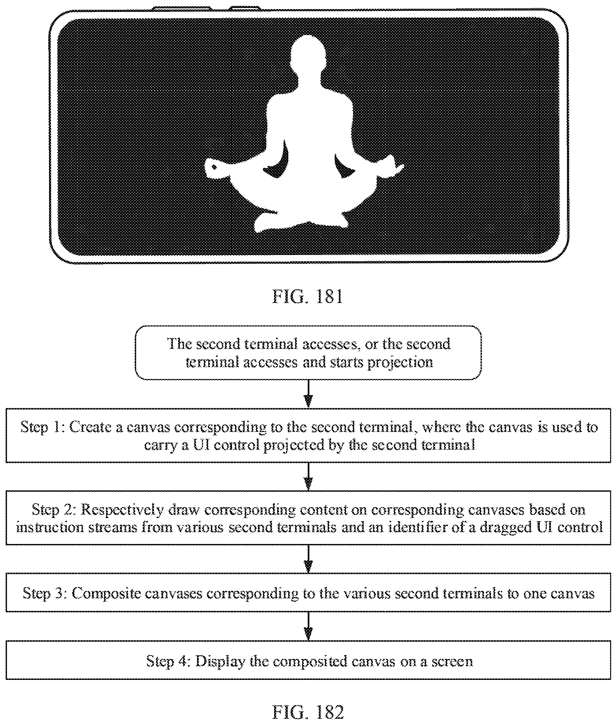

With reference to FIG. 18(a) to FIG. 18(c) and FIG. 181, an example in which the mobile phone 1 and the mobile phone 2 are used as projection source ends, and the television is used as a projection destination end is used to describe the implementation process of many-to-one projection in the cross-device drag scenario by using an example.

The television obtains an IP address 1 of the mobile phone 1, and establishes a connection to the mobile phone 1. The television creates a view, for example, referred to as a view a, corresponding to the IP address 1. The television configures a decoding parameter, for example, referred to as a decoding parameter a, associated with the IP address 1. The television stores a connection instance a corresponding to the IP address 1, to receive projection data from the mobile phone 1.

As shown in FIG. 18(a), the user opens a video application on the mobile phone 1 to play a video X. The mobile phone 1 receives an operation of triggering, by the user, drag for a video element 1801 used to present the video X. As shown in FIG. 18(b), in response to the operation, the mobile phone 1 may drag the video element 1801, and may further perform background blurring processing. Then, the mobile phone 1 receives a drag operation of the user for the dragged video element 1801. The mobile phone 1 responds to the drag operation, so that the video element 1801 moves on a display of the mobile phone 1 as a finger of the user moves, to give the user a visual effect that the video element 1801 is dragged by the finger of the user. A drag direction of the video element 1801 may be upward drag, leftward drag, rightward drag, or downward drag. For example, as shown in FIG. 1 8(c), the user may use the finger to perform a drag operation on the dragged video element 1801, for example, an operation of touching and holding and moving the finger rightward. As the finger of the user moves, the mobile phone may draw and display an animation in which the video element 1801 moves with the finger of the user. In a process in which the video element 1801 is dragged, the mobile phone 1 may determine whether a drag intent of the user is a cross-device operation. After the mobile phone 1 determines that the drag intent of the user is a cross-device operation, the mobile phone 1 may create a virtual display, and draw, on the virtual display, a layer at which the video element 1801 on a current interface is located, to obtain the projection data, for example, referred to as projection data a. The mobile phone 1 may encode the projection data a and send encoded projection data a to the television. The mobile phone 1 may further send rectangle information of the video element 1801 and coordinate information of a corner (for example, the upper left corner) of the video element 1801 in a drag process to the television.

The television may receive the encoded projection data a by using the connection instance a, the rectangle information of the video element 1801, and the coordinate information of the upper left corner of the video element 1801 in the drag process. After the television determines, based on the received rectangle information of the video element 1801, the coordinate information of the upper left corner of the video element 1801 in the drag process, and resolution of the mobile phone 1, that the video element 1801 has a region that overflows the display of the mobile phone 1, the television may determine, based on the rectangle information of the video element 1801, the coordinate information of the upper left corner of the video element 1801 in the drag process, and the resolution of the mobile phone 1, information about a region that is of the video element 1801 and that can be correspondingly displayed on a display of the television.

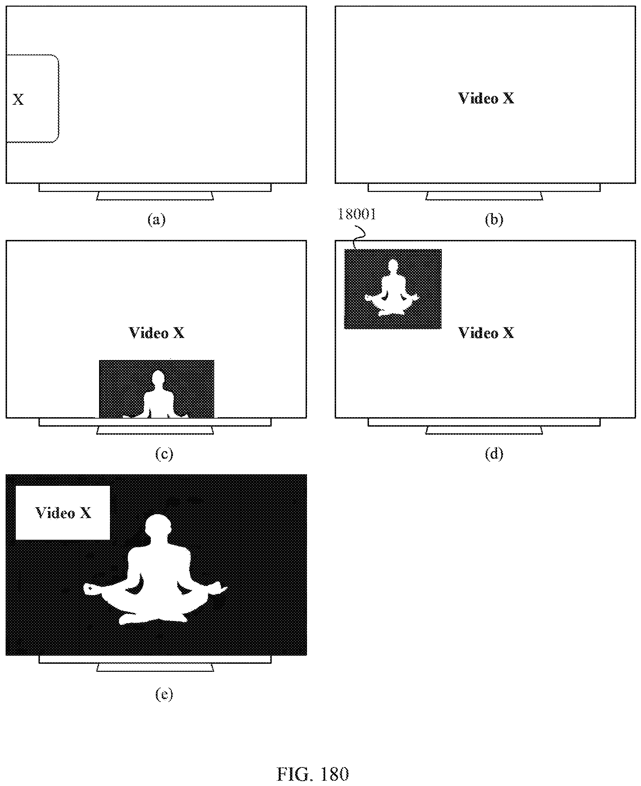

In addition, the television may determine, based on the connection instance a of the received data, that an IP address of a projection source end is the IP address 1 of the mobile phone 1. The television may decode the received projection data a based on the IP address 1 and by using an encoding parameter a corresponding to the IP address 1. Then, the television may draw a projection interface 1 based on decoded projection data a and the determined information about the region that is of the video element 1801 and that can be correspondingly displayed on the display of the television and by using the created view a corresponding to the IP address 1. As shown in (a) in FIG. 180, the projection interface 1 is displayed on the display of the television, and content on the projection interface 1 is the same as content that overflows the display of the mobile phone and that is of the video X carried on the video element 1201 on the mobile phone 1. In a process in which the user drags the video element 1801, the mobile phone 1 may obtain the projection data a and the coordinate information of the upper left corner of the video element 1801 in the drag process in real time, and send the projection data a and the coordinate information to the television. In this way, the television may update the projection interface 1 in real time based on the received data. After the user releases drag, the television may display the projection interface 1 in full screen on the display of the television based on the projection data a received in real time. As shown in (b) in FIG. 180, in this case, the content on the projection interface 1 is the same as all content of the video X carried on the video element 1801.

Similarly, the television obtains an IP address 2 of the mobile phone 2, and establishes a connection to the mobile phone 2. The television creates a view, for example, referred to as a view b, corresponding to the IP address 2. The television configures a decoding parameter, for example, referred to as a decoding parameter b, associated with the IP address 2. The television stores a connection instance b corresponding to the IP address 2, to receive projection data from the mobile phone 2.

As shown in FIG. 181, the user opens a fitness application on the mobile phone 2 to view a fitness video. The mobile phone 2 receives a drag operation of the user for a video element that carries the fitness video. The mobile phone 2 responds to the drag operation, so that the video element moves on a display of the mobile phone 2 as the finger of the user moves, to give the user a visual effect that the video element is dragged by the finger of the user. In a process in which the video element is dragged, the mobile phone 2 may determine whether a drag intent of the user is a cross-device operation. After the mobile phone 2 determines that the drag intent of the user is a cross-device operation, the mobile phone 2 may create a virtual display, and draw, on the virtual display, a layer at which the video element on a current interface is located, to obtain the projection data, for example, referred to as projection data b. The mobile phone 2 may encode the projection data b and send encoded projection data b to the television. The mobile phone 2 may further send rectangle information of the video element and coordinate information of a corner (for example, the upper left corner) of the video element in a drag process to the television. The television may receive the encoded projection data b by using the connection instance b, the rectangle information of the video element, and the coordinate information of the upper left corner of the video element in the drag process. After the television determines, based on the received rectangle information of the video element, the coordinate information of the upper left corner of the video element in the drag process, and resolution of the mobile phone 2, that the video element has a region that overflows the display of the mobile phone 2, the television may determine, based on the rectangle information of the video element, the coordinate information of the upper left corner of the video element in the drag process, and the resolution of the mobile phone 2, information about a region that is of the video element and that can be correspondingly displayed on the display of the television.

In addition, the television may determine, based on the connection instance b of the received data, that an IP address of a projection source end is the IP address 2 of the mobile phone 2. The television may decode the received projection data b based on the IP address 2 and by using an encoding parameter b corresponding to the IP address 2. Then, the television may draw a projection interface 2 based on decoded projection data b and the determined information about the region that is of the video element and that can be correspondingly displayed on the display of the television and by using the created view b corresponding to the IP address 2. In this case, the television may display both the projection interface 1 and the projection interface 2 on the display of the television. For example, the television currently displays the projection interface 1 in full screen. In some embodiments, as shown in (c) in FIG. 180, the television may display the projection interface 2 in a form of a small window (or a picture-in-picture or a floating window) on the display of the television, and content on the projection interface 2 is the same as content that overflows the display of the mobile phone and that is of the fitness video on the mobile phone 2. In a process in which the user drags the video element, the mobile phone 2 may obtain the projection data b and the coordinate information of the upper left corner of the video element in the drag process in real time, and send the projection data b and the coordinate information to the television. In this way, the television may update the projection interface 2 in real time based on the received data After the user releases drag, the television may continue to display the projection interface 2 in the form of the small window on the display of the television based on the projection data b received in real time. As shown in (d) in FIG. 180, in this case, the content on the projection interface 2 is the same as all content of the fitness video displayed by the mobile phone 2.

In addition, as described in the foregoing embodiment, when the television displays a plurality of projection interfaces, the television may set a projection window of one of the plurality of projection interfaces as a focus window by default For example, the television sets a small window as the focus window by default. As shown in (d) in FIG. 180, the television displays a prompt identifier 18001, to prompt the user with a small window, namely, a projection window of the projection interface 2, is the focus window. The user may use a remote control of the television to choose to switch the focus window, may further switch a layout of a large window and the small window (where a window used to display the projection interface 1 in full screen may be referred to as a large window), and may further close the large window and the small window. For example, the television receives an operation of the user for the "LEFT" button or the "RIGHT" button of the remote control, and switches the focus window. When the focus window is the small window, if the television receives an operation of the user for an "OK" button of the remote control, as shown in (c) in FIG. 180, the television may display the small window, namely, the projection interface 2, in full screen, and display the large window, namely, the projection interface 1, in the form of the small window. If the television receives an operation of the user for a "Back" button of the remote control, the television may stop displaying the small window, or close the small window, and the television may further notify the mobile phone 2 corresponding to the small window to stop projection. If the user continues to receive an operation of the user for the "back" button of the remote control, the television may stop displaying the large window, and the television may further notify the mobile phone 1 corresponding to the large window to stop projection.

In the foregoing example, an example in which, in a cross-device drag scenario, the object dragged by the user is the interface or the element, for example, the video element, the picture-in-picture, or the floating window, on the interface displayed by the second terminal is used for description. In some other embodiments, the object dragged by the user may be alternatively a UI control on the interface displayed by the second terminal. The dragged UI controls may be defined by a third-party application, or may be selected by the user, or may be recommended by a system. In a scenario in which the dragged object is the UI control on the interface, a specific process of implementing many-to-one projection is similar to an implementation in which the dragged object is the interface or the element in the interface, and a different lies in:
1. The second terminal does not obtain projection data and send the projection data to the first terminal, to implement projection. Instead, after starting projection, the second terminal obtains data, for example, an instruction stream on a current interface, and sends the instruction stream to the first terminal. In addition, the second terminal may further send an identifier (in other words, the foregoing data may further include the identifier of the dragged UI control) of the dragged UI control to the first terminal. In this way, the first terminal may extract a canvas (canvas) instruction of the dragged UI control from the received instruction stream based on the received identifier of the dragged UI control, to display the dragged UI control on the first terminal according to the canvas instruction. In this way, projection of a UI control on a current display interface of the second terminal to the first terminal is implemented With reference to FIG. 171, the first terminal and the second terminal each may further include an instruction management module. The instruction management module of the second terminal may be responsible for extracting interface content of the projection source end, that is, responsible for obtaining the instruction stream on the current interface. The instruction management module of the first terminal may be responsible for restoring the content on the projection source end, for example, drawing a corresponding UI control based on the instruction stream. Alternatively, after starting projection, the second terminal obtains data, for example, a 2D drawing instruction and an identifier of the dragged UI control, and sends the data to the first terminal. The first terminal draws the dragged UI control on the display of the first terminal according to the received 2D drawing instruction and based on the received identifier and a corresponding layout file, that is, displays, on the first terminal, the UI control that is dragged by the user and that is on the interface displayed by the second terminal. The identifier of the Ul control may be a specific field identifier, for example, dupID=xxx, written by an application developer in the layout file. The layout file further includes other configurations (for example, configurations such as a location and a style corresponding to the identifier of the UI control) of a drawing region. During layout, the first terminal reads, from the layout file according to the received 2D drawing instruction and based on the identifier, a configuration corresponding to the identifier, to draw and lay out the UI control on the display of the first terminal.
2. It may be understood that, in the foregoing embodiment, the data (for example, the foregoing projection data) used to implement projection of the second terminal to the first terminal may be understood as video data, or in other words, includes video data. Therefore, a channel used to transmit the projection data between the first terminal and the second terminal may be referred to as a video channel, or a video transmission channel. In a scenario of cross-device drag of the UI control, the data used to implement projection of the second terminal to the first terminal is an instruction stream. In some embodiments, the foregoing video channel may continue to be used to transmit the instruction stream. In some other embodiments, an instruction channel, or referred to as an instruction transmission channel, may be alternatively used to transmit the instruction stream. In other words, in this embodiment, a plurality of instruction streams may be supported to be projected to one projection destination end, for example, the screen of the first terminal, to implement many-to-one projection.
3. When projection is implemented by using the instruction stream in the scenario of cross-device drag of the UI control, different from that of the view created in SI7202, the first terminal may create a canvas (canvas) corresponding to each second terminal (where the canvas may be the drawing component in embodiments of this application), to project the UI control of the second terminal to the first terminal. For example, refer to FIG. 182. A process in which the first terminal projects the plurality of instruction streams to one screen may include: After the second terminal is connected to the first terminal, or after the second terminal is connected to the first terminal and starts projection, the first terminal creates the canvas corresponding to the second terminal, to carry (or draw) the UI control projected by the second terminal (for example, Step 1 in FIG. 182). The first terminal separately draws corresponding content on a corresponding canvas based on a instruction stream from each second terminal and the identifier of the dragged UI control (for example, Step 2 in FIG. 182). The first terminal composites canvases corresponding to the second terminals into one canvas (for example, Step 3 in FIG. 182). The first terminal displays the composited canvas on the screen of the first terminal (for example, Step 4 in FIG. 182).

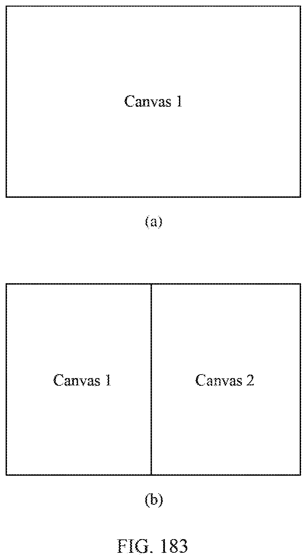

It may be understood that: Refer to FIG. 183, when only one second terminal is used as a projection source end, only content of a canvas (for example, a canvas 1 in (a) in FIG. 183) corresponding to the second terminal is displayed on the screen of the first terminal. When two second terminals are used as projection source ends, canvases corresponding to the two second terminals may be displayed on the screen of the first terminal based on a corresponding layout For example, the screen of the first terminal is divided into two regions. One region is used to display content of a canvas (for example, a canvas 1 in (b) in FIG. 1 83) corresponding to one of the second terminals, and the other region is used to display content of a canvas (for example, a canvas 2 in (b) in FIG. 183) corresponding to the another of the two second terminals. When more than two second terminals are used as projection source ends, canvases corresponding to the plurality of second terminals may be displayed on the screen of the first terminal based on a corresponding layout. For example, the screen of the first terminal may be divided into a corresponding quantity of regions, to respectively display content of canvases corresponding to the second terminals. It should be noted that a layout of a plurality of canvases on the screen of the first terminal may be predetermined, or may be set based on a setting of the user. For example, the plurality of canvases are laid out on the screen in a manner, for example, horizontal bisection, vertical bisection, a picture-in-picture, trisection, or quadrisection, and the layout is not limited to a horizontal bisection manner shown in (b) in FIG. 183.

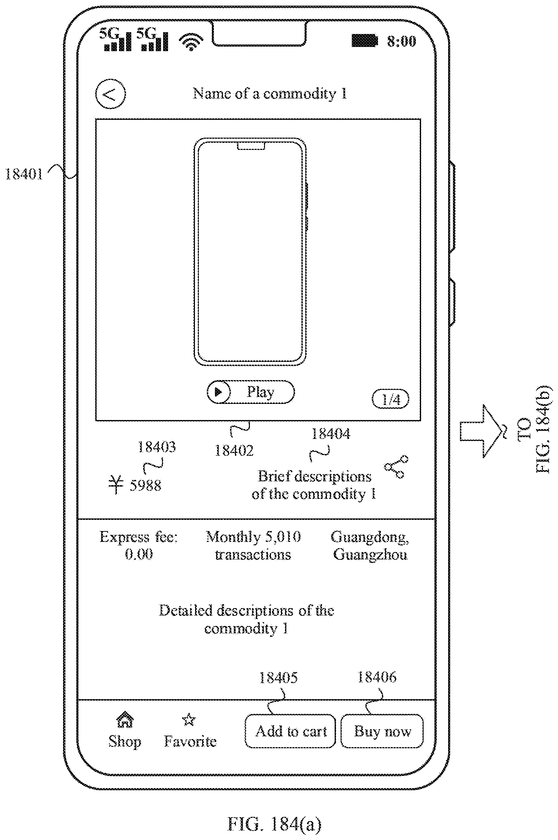

With reference to FIG. 184(a) to FIG. 187(c), an example in which the mobile phone 1 and the mobile phone 2 are used as projection source ends, the television is used as a projection destination end, and the dragged UI control is selected by the user, the projection source end sends an instruction stream on a current interface and the identifier of the dragged UI control to the first terminal to project the UI control is used to describe an implementation process of many-to-one projection in the scenario of cross-device drag of the UI control by using an example.

After a projection service function of the television is enabled, network listening may be enabled, to listen to a connection request The television may also broadcast an IP address of the television, so that another device initiates a connection request. For example, the mobile phone 1 receives the IP address of the television. The mobile phone 1 may initiate a connection request based on the IP address of the television, to request to establish a connection to the television. In a process of establishing the connection, the television may obtain an IP address 1 of the mobile phone 1. After the television establishes the connection to the mobile phone 1, the television may enable a distribution function, for example, may create a canvas, for example, referred to as a canvas x, corresponding to the IP address 1, configure a decoding parameter, for example, referred to as a decoding parameter x, associated with the IP address 1, and store a connection instance x corresponding to the IP address 1, to receive data, for example, an instruction stream and an identifier of the dragged UI control, from the mobile phone 1, so as to prepare for projection of the mobile phone 1. Optionally, after the being ready, the television may further notify the mobile phone 1 that the mobile phone 1 is ready.

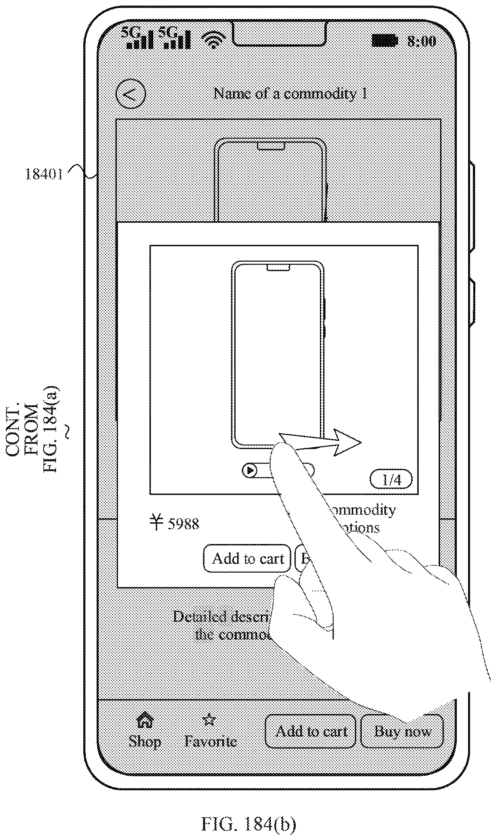

For the mobile phone 1, the user may drag a UI control on a current display interface of the mobile phone 1, to trigger the mobile phone 1 to start projection. As shown in FIG. 184(a), the mobile phone 1 displays a shopping details page 18401 of a shopping application The mobile phone 1 receives a drag operation of the user for a UI control on the shopping details page 18401. For example, the drag operation may include an operation of selecting the UI control by the user and an operation of triggering the selected UI control to move. For example, the dragged UI controls include a commodity preview control 18402, a commodity price control 18403, a brief commodity descriptions control 18404, an "Add to cart" button 18405, and a "Buy now" button 18406 on the shopping details page 18401. As shown in FIG. 184(b), in response to the drag operation, the mobile phone 1 may display an animation in which a corresponding UI control moves as a finger of the user moves, to give the user a visual effect that the UI control is dragged by the finger of the user. In a process in which the UI control is dragged, the mobile phone 1 may determine whether a drag intent of the user is a cross-device operation. After the mobile phone 1 determines that the drag intent of the user is a cross-device operation, the mobile phone 1 may start instruction capture. For example, the mobile phone 1 may perform instruction extraction on the shopping details page 1 8401, to obtain an instruction stream, for example, referred to as an instruction stream x, corresponding to the shopping details page 18401. The instruction stream x may include information such as a canvas instruction, a layer name, and a control identifier of each UI control on the current interface. The mobile phone 1 may encode the instruction stream x and send an encoded instruction stream x to the television. The mobile phone 1 may further send the identifier of the dragged UI control to the television. The control identifier may be a specific field identifier (for example, a dup ID) defined by an application developer.

The mobile phone 1 may identify, by using the Ul control, a type of the UI control dragged by the user. The mobile phone 1 may determine the identifier of the dragged UI control based on the identified type of the UI control. The type of the control is in a one-to-one correspondence with the identifier, and the correspondence is prestored in the mobile phone 1. For example, the type of the UI control dragged by the user may be identified by using an artificial intelligence (artificial intelligence) identification method. For example, each interface (for example, including the commodity details page 18401) of each application on the mobile phone may be obtained in advance. For example, entire-frame image data of the commodity details page 18401 may be obtained by using a screen capture method. A region of each UI control on the commodity details page 18401 may be positioned by using a target detection technology (for example, a model algorithm, for example, an R-CNN, a Fast-R-CNN, or YOLO) in machine learning. Then, the positioned region and the type of each UI control on the commodity details page 18401 and an identifier of the commodity details page 18401 are correspondingly stored in the mobile phone 1. After receiving an operation of dragging the UI control on the commodity details page 18401 by the user, the mobile phone may identify, based on a location touched when the user selects the UI control and the stored region of each UI control on the commodity details page 18401, the type of the UI control dragged by the user. For another example, after an operation of dragging the UI control on the commodity details page 18401 by the user is received, the UI control selected by the user may be drawn, and then a type of the drawn UI control may be identified by using a target classification technology (for example, a ResNet model algorithm) in machine learning.

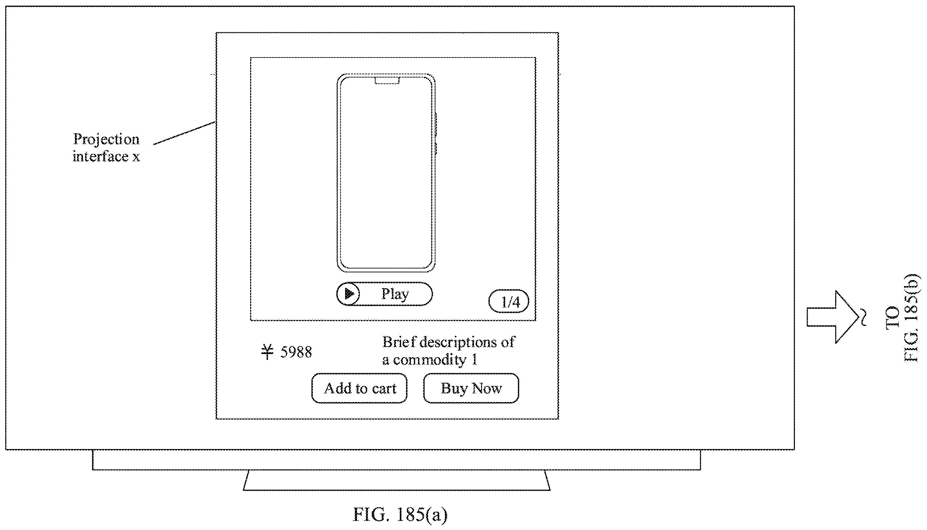

The television may receive the encoded instruction stream x by using the connection instance x and the identifier of the dragged UI control. In addition, the television may determine, based on the connection instance x of the received data, that an IP address of a projection source end is the IP address 1 of the mobile phone 1. The television may decode the received instruction stream x based on the IP address 1 and by using an encoding parameter x corresponding to the IP address 1. Then, the television may draw and display the dragged UI control on the screen of the television based on a decoded instruction stream x and the identifier of the dragged UI control and by using the created canvas x corresponding to the IP address 1. For example, after the user releases drag, as shown in FIG. 185(a), the television may display a projection interface x. Content on the projection interface x is the same as content on the UI control that is dragged by the user and that is on the commodity details page 18401 displayed by the mobile phone 1. When drawing the UI control on the canvas, the television may draw each UI control based on a pre-configured layout file. The layout file includes a configuration of a drawing region of each Ul control (for example, a configuration including the identifier, a location, and a style of the UI control), and the drawing regions of the UI controls do not overlap. In addition, the drawing region of each UI control in the layout file may not correspond to a region of a corresponding UI control on an original interface. In other words, re-layout of the UI control may be implemented by using the layout file. The layout file may be generated by a system developer or an application developer by using Android^{™} Studio. If Android^{™} Studio is used, capture and preview of a layout related to the Ul controls may be implemented. The system developer or the application developer may adjust the layout of the UI control during preview, and may generate a layout file based on a final layout.

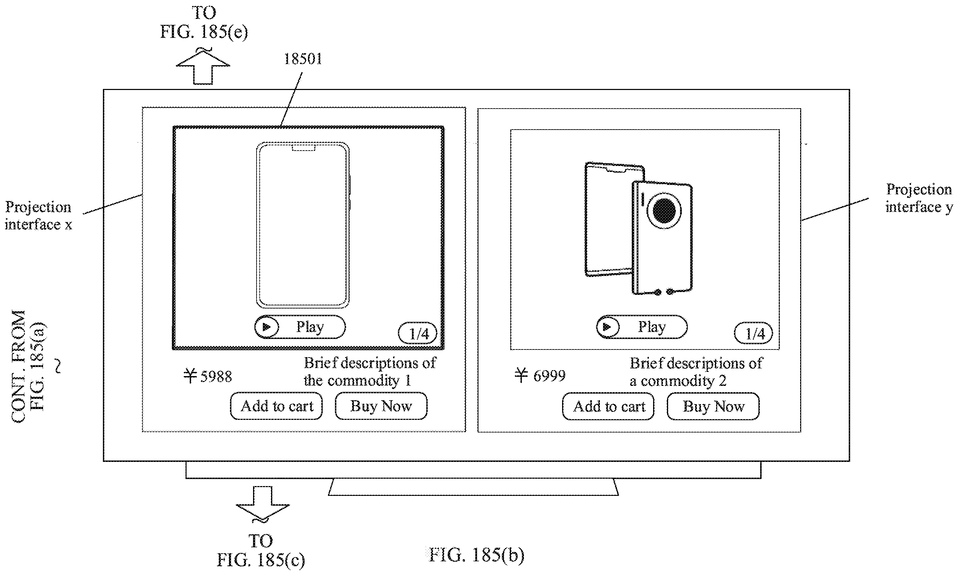

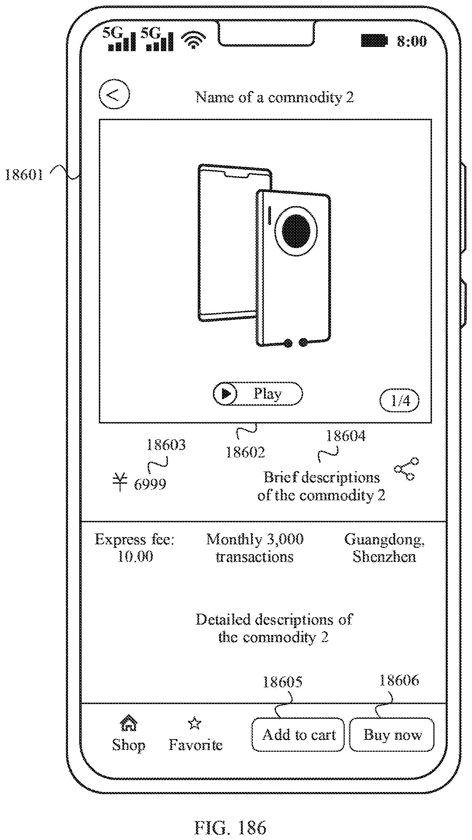

Similarly, the user may project, to the television for display in a drag manner, a UI control on an interface displayed on the mobile phone 2. A specific implementation is similar to that of projecting the UI control on the display interface of the mobile phone 1 to the television for display. Details are not described herein again. For example, as shown in FIG. 186, the mobile phone 2 displays a shopping details page 18601 of a shopping application. The user performs a drag operation on a UI control on the shopping details page 18601. For example, the dragged UI controls include a commodity preview control 18602, a commodity price control 18603, a brief commodity descriptions control 18604, an "Add to cart" button 18605, and a "Buy now" button 18606 on the shopping details page 18601. After drag is released, the television may decode a received instruction stream (for example, an instruction stream y) by using a corresponding encoding parameter (for example, an encoding parameter y). The television may draw, based on a decoded instruction stream y and the identifier of the dragged Ul control and by using a created corresponding canvas (for example, a canvas y), the UI control dragged on the mobile phone 2. It may be understood that the television further draws, on the canvas x, the UI control dragged on the mobile phone 1. Then, the television may composite the canvas x and the canvas y into one canvas, and display the canvas on the screen of the television. For example, as shown in FIG. 185(b), the television may display a projection interface x and a projection interface y. Content on the projection interface x is the same as content on the UI control that is dragged by the user and that is on the commodity details page 18401 displayed by the mobile phone 1, and content on the projection interface y is the same as content on the UI control that is dragged by the user and that is on the commodity details page 18601 displayed by the mobile phone 2.

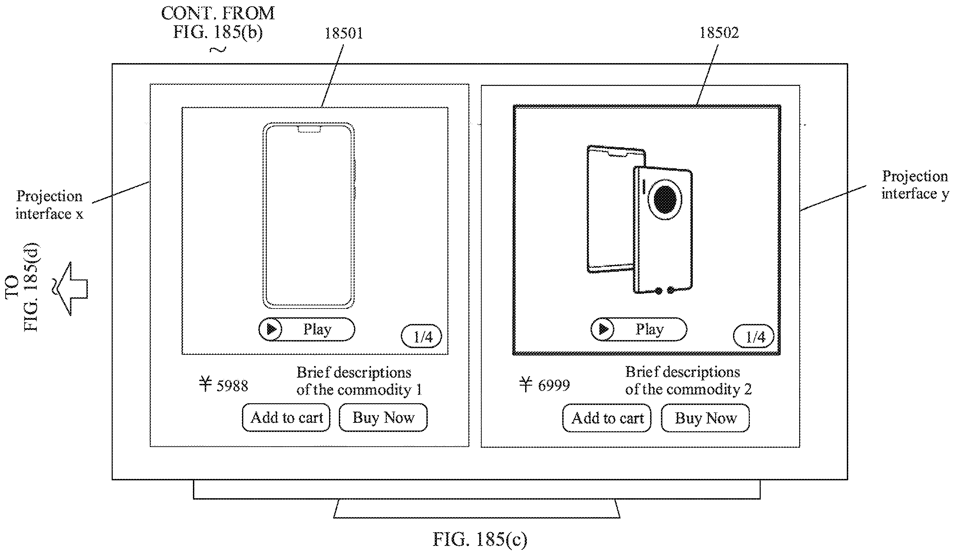

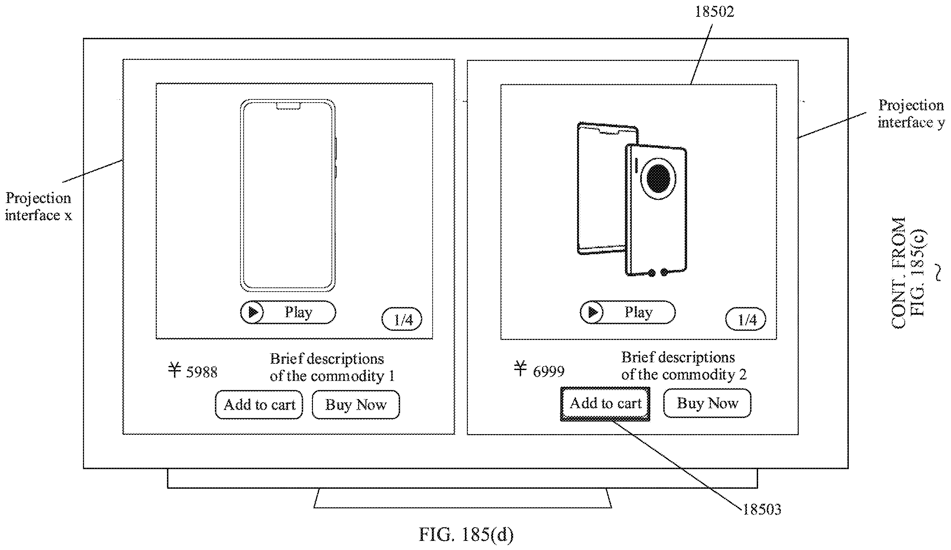

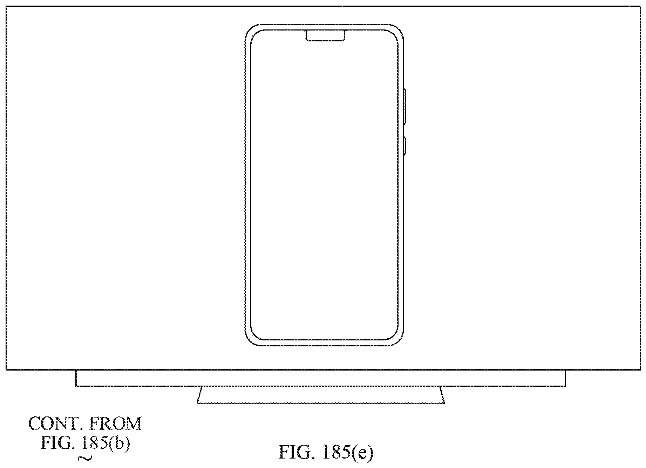

As described in the foregoing embodiment, when the television displays a plurality of projection interfaces, the television may set a projection window of one of the plurality of projection interfaces as a focus window by default. In this embodiment, further, a focus location may be specifically a UI control on a projection interface presented by a projection window. For example, still with reference to FIG. 185(a) and FIG. 185(e), as shown in FIG. 185(b), a focus location of the television is a commodity preview control 18501 on the projection interface x. The user may use a remote control of the television to choose to switch the focus location. For example, if the television receives an operation of the user for the "LEFT" button, the "RIGHT" button, the "UP" button, or the "DOWN" button of the remote control, the focus location may be switched. For example, with reference to FIG. 185(b), the television receives an operation of the user for the "RIGHT" button of the remote control. In this case, as shown in FIG. 185(c), the television switches the focus location from the commodity preview control 18501 on the projection interface x to a commodity preview control 18502 on the projection interface y. Then, the television receives an operation of the user for the "DOWN" button of the remote control. In this case, as shown in FIG. 185(d), the television switches the focus location from the commodity preview control 18502 on the projection interface y to an "Add to cart" button 18503 on the projection interface y.

The user may further implement reverse control by using the remote control of the television. For example, when the television receives an operation of the user for an operable UI control by using the remote control, the television may obtain location information of the operation. The television may determine, based on the location information and a layout location of the dragged UI control on the television, an original location (for example, coordinates) that is on the interface on the mobile phone and that corresponds to location (for example, coordinates) of the operation, to determine which UI control on the mobile phone the user wants to operate. Then, the television may send a corresponding operation instruction to the mobile phone, so that the mobile phone correspondingly responds, to implement reverse control. If the response causes a change of interface content on the mobile phone, the mobile phone may project updated interface content to the television again, so that the television updates a corresponding projection interface. For example, with reference to FIG. 185(b), the focus location is the commodity preview control 18501 on the projection interface x. The television receives an operation of the user for an "OK" button of the remote control. The television may determine, based on the current focus location and a layout, that the user wants to operate the commodity preview control on the mobile phone 1. The television may send a corresponding operation instruction to the mobile phone 1. After receiving the operation instruction, the mobile phone 1 may correspondingly respond, for example, play a commodity preview video, according to the operation instruction. The mobile phone 1 may further perform screen recording on the played video, and then send, to the television, a video obtained through screen recording. As shown in FIG. 185(e), the television may play the commodity preview video in full screen.

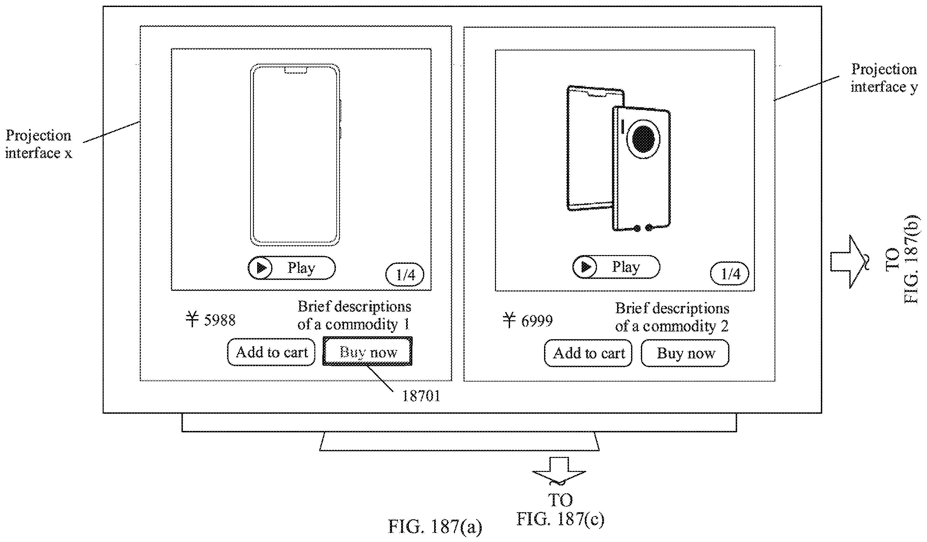

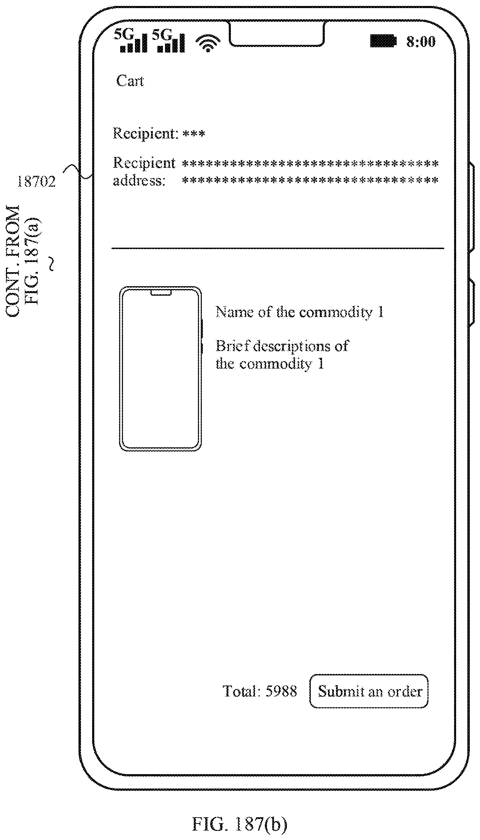

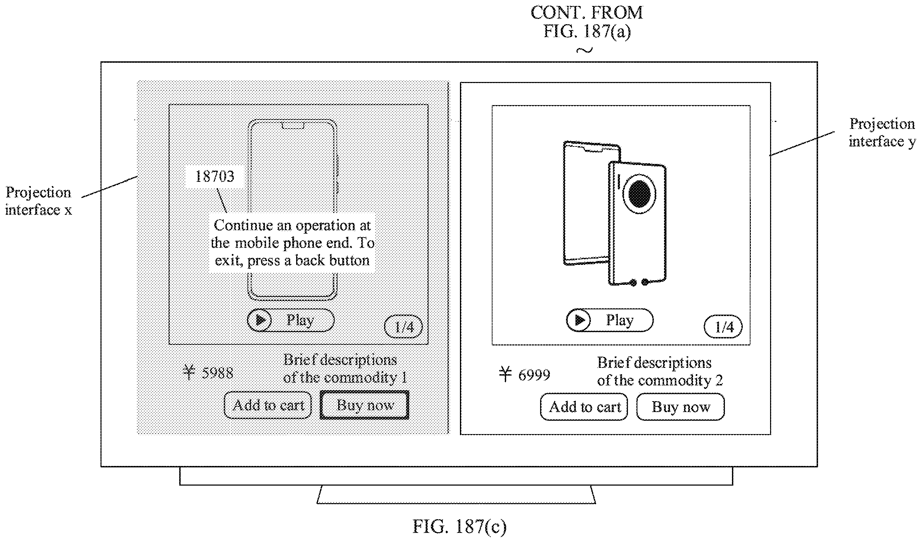

After the television receives an operation of using the remote control by the user, if a response to the operation causes a change of interface content on the mobile phone, the mobile phone may not project an updated interface to the television. The user may continue to perform, on the mobile phone, an operation. For example, with reference to FIG. 187(a) to FIG. 187(c), as shown in FIG. 187(a), the focus location is a "Buy now" button 18701 on the projection interface x. The television receives an operation of the user for an "OK" button of the remote control. The television may determine, based on the current focus location and the stored correspondence, that the user wants to operate the "Buy now" control on the mobile phone 1. The television may send a corresponding operation instruction to the mobile phone 1. As shown in FIG. 187(b), after receiving the operation instruction, the mobile phone 1 may display a buy interface 18702. The user may continue to perform, on the mobile phone 1, an operation. In addition, as shown in FIG. 187(c), the television may further set the projection interface x corresponding to the mobile phone 1 to gray, and may further display prompt information 18703, for example, including words "Continue to operate at the mobile phone end", to prompt the user that the user may continue to operate at the mobile phone end. Then, if the user triggers the buy interface 18702 on the mobile phone 1 to exit foreground display, or operates a "Back" key of the television, the user may switch back to the television to continue operating. For example, the prompt information 18703 further includes words "To exit, please press the 'Back' key".

By using the foregoing technical solution, many-to-one projection from a plurality of projection source ends to one projection destination end can be implemented without using another device, provided that a corresponding application, for example, the foregoing projection application, is set at the projection source end and the projection destination end. For example, in a scenario, for example, a demonstration in a conference or a launch event, a plurality of mobile phones and tablet computers can project content (for example, a PPT or a played video) on displays of the plurality of mobile phones and tablet computers to a same large-screen device for presentation, to implement many-to-one projection. This improves usage efficiency of collaboratively using a plurality of devices, and improves user experience. The user is allowed to use an input device of the projection destination end to control the projection interface, to further implement reverse control on the projection source end. A focus can be set and the focus can be switched between projection interfaces of different source end devices based on a user operation, to implement independent control on different projection source ends. The projection destination end may further adjust a layout of a presented projection interface based on an increase or a decrease of the source end devices, to give the user an optimal visual effect. In addition, layer filtering is supported. To be specific, a layer at which some elements (for example, the element dragged by the user or the predetermined element) on a current interface are located is projected to a projection destination end. In this way, it can be ensured that privacy information on the projection source end is not projected to the projection destination end, to protect user privacy. In addition, in a scenario in which only the UI control on a projection interface is projected, content that needs to be projected may be changed from a pure video stream to an instruction stream This can improve display effect of a projection interface of a projection destination end, and can further save transmission bandwidth.

It can be learned from the descriptions in the foregoing embodiment that, by using the solution provided in this embodiment, when the plurality of second terminals are connected to the first terminal, the interfaces displayed by the plurality of second terminals can be all presented on the first terminal, to implement many-to-one projection. Therefore, a requirement that display interfaces of a plurality of devices are presented on a same device (for example, a large-screen device) in the scenario, for example, the demonstration in the conference or the launch event is met. With development of globalization, cross-district office is becoming increasingly common, and a demand for remote conference communication is increasing. However, it is very troublesome for an existing video conference terminal to remotely share a document A professional paid client needs to be installed and logged in, and another device, for example, a computer, needs to be connected. As a result, various devices and connection cables need to be carried and prepared in advance for each conference, resulting in reducing conference efficiency and increasing communication costs of cross-district office. In addition, with application of a smart device, for example, a mobile phone, in office, many files and data of the user are stored on the mobile phone. Therefore, in another embodiment of this application, a many-to-one projection solution provided in this embodiment may be combined with a MeeTime call, to implement cross-district office. This cross-district office mode improves conference efficiency and reduces communication costs of cross-district office.

The MeeTime call implements a high-definition audio and video call between a plurality of devices. A video call can be made between a mobile phone and a device, for example, a mobile phone, a large-screen device, or a smart speaker with a screen. In addition, the video call can freely continue between these devices, to select an optimal device for answering. This brings smoother and freer call experience to a consumer. In addition, this provides the user with good audio and video call experience, and can also ensure a smooth 1080p high-definition video call even in dark light and poor network quality (for example, in a subway or high-speed railway scenario).

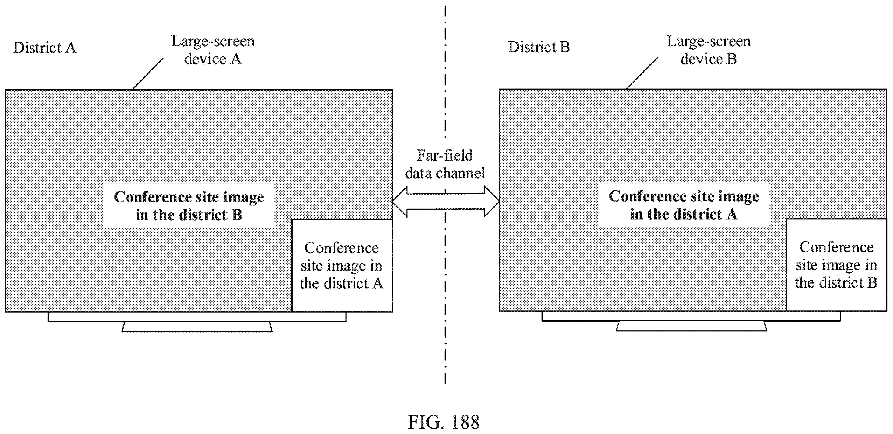

For example, with reference to FIG. 188 to FIG. 193, a specific solution of combining the foregoing many-to-one projection solution with the MeeTime call to implement cross-district office is described by using an example.

Participants in a district A and a district B need to perform cross-district office. The district A includes one first terminal, for example, a large-screen device A. The district B includes one third terminal, for example, a large-screen device B. The large-screen device A makes a MeeTime call with the large-screen device B As shown in FIG. 188, the large-screen device A displays a conference site image of the district B, and may further display a local conference site image, namely, a conference site image of the district A. Similarly, the large-screen device B displays a conference site image of the district A, and may further display a local conference site image, namely, a conference site image of the district B. Conference site images of peer conference sites displayed on large-screen devices (for example, the large-screen device A and the large-screen device B) are drawn by the large-screen devices based on video data collected by the peer large-screen devices in real time. A local conference site image displayed by the large-screen device is drawn based on video data collected by the large-screen device in real time. The video data collected in real time may be transmitted between the large-screen devices through a far-field data channel established between the large-screen devices.

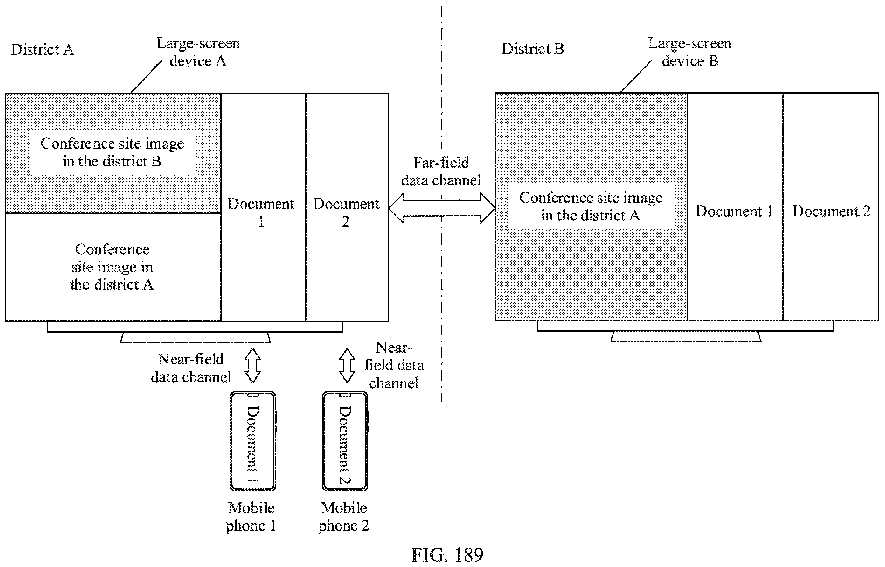

The participant in the district A may project, by using the many-to-one projection solution provided in the foregoing embodiment, documents (for example, respectively referred to as a document 1 and a document 2) displayed on one or more second terminals, for example, a mobile phone 1 and a mobile phone 2, to the large-screen device A in the district A. For example, the document 1 displayed on the mobile phone 1 and the document 2 displayed on the mobile phone 2 may be projected to the large-screen device A in a cross-device drag manner or a wireless projection manner. In an example, the mobile phone 1 may send projection data A1 to the large-screen device A through a near-field data channel established between the mobile phone 1 and the large-screen device A, so that the large-screen device A displays the document 1, to present, on the large-screen device A, the document 1 displayed on the mobile phone 1. The mobile phone 2 may send projection data A2 to the targe-screen device A through a near-field data channel established between the mobile phone 2 and the large-screen device A, so that the large-screen device A displays the document 2, to present, on the large-screen device A, the document 2 displayed on the mobile phone 2. To be specific, with reference to FIG. 188, as shown in FIG. 189, the large-screen device A may display, on a screen of the large-screen device A based on the received projection data A1, projection data A2, and video data from the large-screen device B, and the video data collected by the large-screen device A, the conference site image of the region B, the conference site image of the region A, the document 1 projected by the mobile phone 1, and the document 2 projected by the mobile phone 2. On the screen of the large-screen device A, the local conference site image, namely, the conference site image of the district A, may not be displayed.

As described above, large-screen device A and large-screen device B respectively collect the local conference site images in real time and send the corresponding video data to the peer large-screen devices. After the large-screen device A receives projection of the mobile phone 1 and the mobile phone 2, that is, receives the projection data A1 and the projection data A2, the large-screen device A not only needs to send the video data collected in real time to the large-screen device B, but also may send the projection data A1 and the projection data A2 to the large-screen device B through the far-field data channel between the large-screen device B and the large-screen device A. In this way, the large-screen device B may also display the document 1 and the document 2 on a screen of the large-screen device B. With reference to FIG. 188, as shown in FIG. 189, the large-screen device B may display the conference site image of the district A, the document 1, and the document 2, on the screen of the large-screen device B based on the projection data A1, the projection data A2, and the video data that are from the large-screen device A. On the screen of the large-screen device B, the large-screen device B may also display the local conference site image, namely, the conference site image of the district B, based on the video data collected by the large-screen device B.

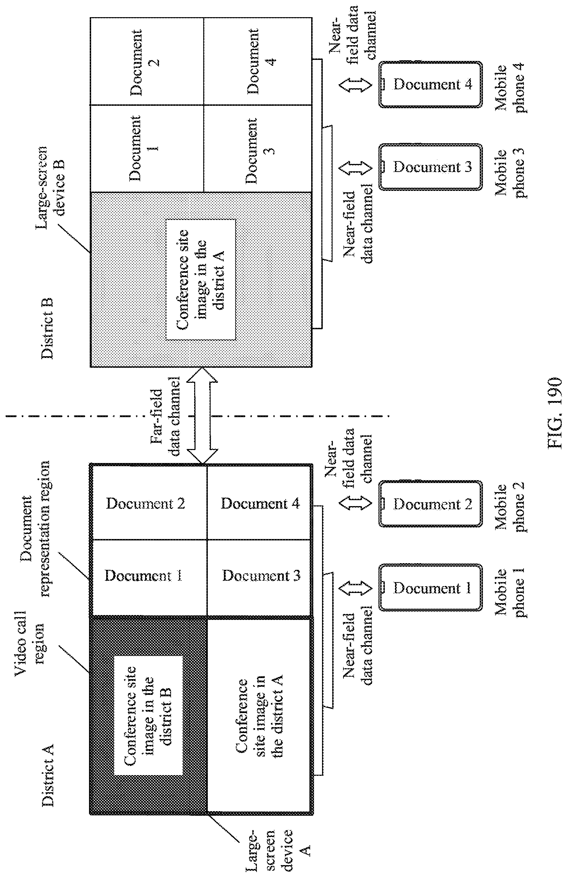

Similarly, the participant in the district B may project, by using the many-to-one projection solution provided in the foregoing embodiment, documents (for example, respectively referred to as a document 3 and a document 4) displayed on one or more second terminals, for example, a mobile phone 3 and a mobile phone 4, to the large-screen device B in the district B. Then, the large-screen device A and the large-screen device B may respectively display the corresponding conference site images and the documents in the two districts. For example, projection data used by the mobile phone 3 to implement projection is referred to as projection data B1, and projection data used by the mobile phone 4 to implement projection is referred to as projection data B2. With reference to FIG. 189, as shown in FIG. 190, the large-screen device A may display, on the screen of the large-screen device A based on the projection data A1 from the mobile phone 1, the projection data A2 from the mobile phone 2, the video data that is collected by the large-screen device A, and the video data, the projection data B1, and the projection data B2 that are from the large-screen device B, the conference site image of the district B, the conference site image of the district A, the document 1 projected by the mobile phone 1, the document 2 projected by the mobile phone 2, the document 3 projected by the mobile phone 3, and the document 4 projected by the mobile phone 4. Similarly, as shown in FIG. 190, the large-screen device B may display, on the screen of the large-screen device B based on the projection data B1 from the mobile phone 3, the projection data B2 from the mobile phone 4, and the video data, the projection data A1, and the projection data A2 that are from the large-screen device A, the conference site image of the district 1, the document 1 projected by the mobile phone 1, the document 2 projected by the mobile phone 2, the document 3 projected by the mobile phone 3, and the document 4 projected by the mobile phone 4.

In this embodiment, for the large-screen device, a region that is used to present a video call image, for example, the foregoing conference site image, and that is on the screen of the large-screen device may be referred to as a video call region, and a region that is used to present a projection interface, for example, the foregoing document, and that is on the screen of the large-screen device may be referred to as a document presentation region, as shown in FIG. 190. In some embodiments, a layout of the video call region and the document presentation region on the screen of the large-screen device may be predefined. The predefined layout manner is not limited to a horizontal layout shown in FIG. 190, and may be alternatively a vertical layout, a layout in a picture-in-picture manner, or the like. When the large-screen device currently displays only the video call image, if projection data of a mobile phone is received, the large-screen device may divide the screen into two regions, namely, a video call region and a document presentation region, based on the predefined layout manner, to respectively display the video call image and a corresponding projection interface.

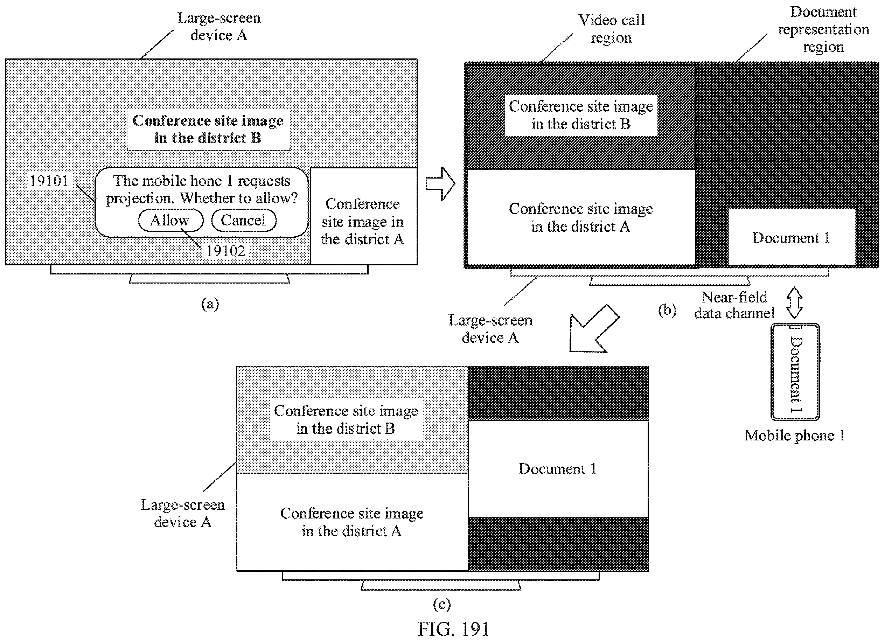

For example, the predefined layout manner is the horizontal layout, and the mobile phone 1 projects the document 1 to the large-screen device A. With reference to FIG. 188, the large-screen device A currently displays a video call image, including the conference site image of the district B and the conference site image of the district A. When the mobile phone 1 of the participant in district A is connected to the large-screen device A, a user triggers cross-device projection in a drag manner. The large-screen device A may receive a projection request. As shown in (a) in FIG. 191, the large-screen device A may display a request notification 19101, to ask the user "The mobile hone 1 requests projection. Whether to allow?". After the user selects "Allow" (for example, selects an "Allow" button 19102), as shown in (b) in FIG. 191, the large-screen device A may vertically divide the screen into two regions: namely, a video call region and a document presentation region, based on the predefined layout manner, and present an animation effect of adding the document 1 projected by the mobile phone. For example, the video call image is collapsed to a left region of the screen, and the document 1 is presented to a right region of the screen. Then, as shown in (c) in FIG. 191, the large-screen device A may display both the video call image and the document 1.

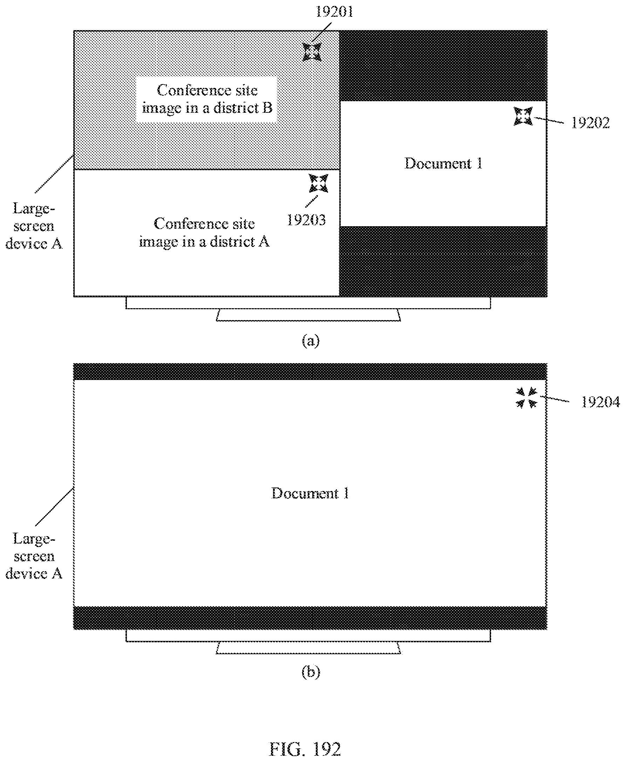

In addition, in this embodiment, the user may further use an input device of the large-screen device to control content presented on the screen. For example, the user may use a remote control of the large-screen device to switch the layout For example, the large-screen device is the large-screen device A. As shown in (a) in FIG. 192, when the large-screen device A presents all the conference site image of the district B, the conference site image of the district A, and the document 1 projected by the mobile phone 1, the large-screen device A may display a full screen button corresponding to each window used to present an image. For example, a full screen button 19201 is displayed corresponding to a window for the conference site image of the district B, a full screen button 19203 is displayed corresponding to a window for the conference site image of the district B, and a full screen button 19202 is displayed corresponding to a window for an image of the document 1. After receiving an operation of the user for a full screen button, the large-screen device A may display an image of a corresponding window in full screen, and hide an image of another window. For example, with reference to (a) in FIG. 192, the user may use the remote control of the large-screen device A to switch a focus location operated by the remote control on the screen. For example, the focus location operated by the remote control is switched to the full screen button 19202. The full screen button 19202 corresponds to the window that presents the image of the document 1. Then, the large-screen device A receives an operation of the user for an "OK" button of the remote control. In response to the operation, as shown in (b) in FIG. 192, the large-screen device A displays the document l in full screen. The conference site image of the district B and the conference site image of the district A may be hidden. When the large-screen device A presents an image in full screen, for example, the image of the document 1, the large-screen device A may further display a scale-down button. As shown in (b) in FIG. 192, the large-screen device A may display a scale-down button 19204. After receiving an operation of the user for the scale-down button 19204, the large-screen device A may present all the pictures on the screen, as shown in (a) in FIG. 192. In some other embodiments, the large-screen device may not display full screen buttons corresponding to different images. In this embodiment, when displaying a plurality of images, the large-screen device, for example, the large-screen device A, may set a window of one of the images as a focus window by default The user may use an arrow key of the remote control of large-screen device A to switch the focus window. When a window of a picture is the focus window, if the large-screen device A receives an operation of the user for the "OK" button of the remote control, the large-screen device A presents the image of the focus window in full screen. Then, the large-screen device A receives an operation performed by the user on the confirm key or the return key of the remote control, exits the full screen, and presents all pictures on the screen. In the foregoing example, an example in which only the picture in the document presentation region is presented is used for description. The user may further notify to perform the foregoing corresponding operation, to present only the picture in the video call region. Details are not described herein again in this embodiment.

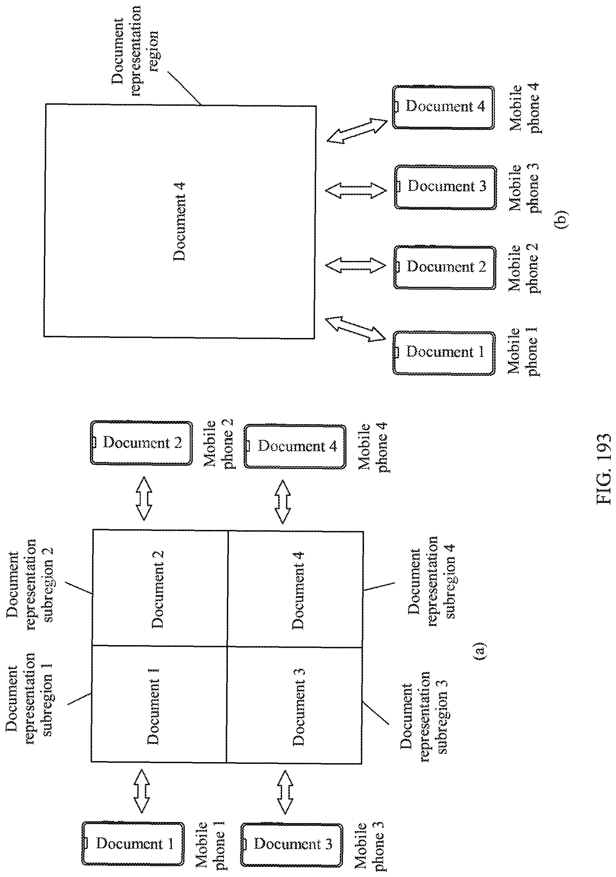

In some embodiments of this application, when there are a plurality of projection source ends that are connected to the large-screen devices (which include the large-screen device A and the large-screen device B that make the MeeTime call), the following solutions may be available for specifically presenting content projected by which projection source end or which projection source ends in the document presentation region:
Solution 1: Many-to-one coexistence sharing is supported in the document presentation region. For example, there are two projection source ends that are connected to the large-screen device A: the mobile phone 1 and the mobile phone 2, and there are also two projection source ends connected to the large-screen device B: the mobile phone 3 and the mobile phone 4. In this case, a many-to-one coexistence sharing solution is used, the document 1 projected by the mobile phone 1, the document 2 projected by the mobile phone 2, the document 3 projected by the mobile phone 3, and the document 4 projected by the mobile phone 4 may be all displayed on the large-screen device A and the large-screen device B. For example, as shown in (a) in FIG. 193, the document 1, the document 2, the document 3, and the document 4 are presented in the document presentation region in a four-grid form. Specifically, the document presentation region is divided into four document presentation sub-regions: a document presentation sub-region 1, a document presentation sub-region 2, a document presentation sub-region 3, and a document presentation sub-region 4. The large-screen device A and the large-screen device B sequentially present documents in corresponding document display sub-regions based on a sequence of receiving corresponding projection data. For example, a sequence of projection data is: the projection data of the mobile phone 1, the projection data of the mobile phone 2, the projection data of the mobile phone 3, and finally the projection data of the mobile phone 4. In this case, the large-screen device A and the large-screen device B sequentially present the document 1, the document 2, the document 3, and the document 4 in the corresponding document display sub-region 1, document display sub-region 2, document display sub-region 3, and document display sub-region 4.
Solution 2: Preemptive sharing is supported in the document display region. To be specific, there is only one document display region on the large-screen device. When there are a plurality of projection source ends that are connected to the large-screen devices (which include the large-screen device A and the large-screen device B that make the MeeTime call), a document projected latter may overlay a document projected previously. For example, with reference to (b) in FIG. 193, the mobile phone 1 is first connected to the large-screen device A, and projects the document 1, that is, the large-screen device A and the large-screen device B first receive the projection data of the mobile phone 1, the large-screen device A and the large-screen device B display the document 1 in the document presentation regions of the large-screen device A and the large-screen device B. Then, the mobile phone 2 is connected to the large-screen device A, and projects the document 2, that is, the large-screen device A and the large-screen device B receive the projection data of the mobile phone 2. In this case, the large-screen device A and the large-screen device B do not display the document 1 but display the document 2 in the document presentation regions of the large-screen device A and the large-screen device B. Then, the mobile phone 3 is connected to the large-screen device B, and projects the document 3, that is, the large-screen device B and the large-screen device A receive the projection data of the mobile phone 3. In this case, the large-screen device A and the large-screen device B do not display the document 2 but display the document 3 in the document presentation regions of the large-screen device A and the large-screen device B. Then, the mobile phone 4 is connected to the large-screen device B, and projects the document 4, that is, the large-screen device B and the large-screen device A receive the projection data of the mobile phone 4. In this case, the large-screen device A and the large-screen device B do not display the document 3 but display the document 4 in the document presentation regions of the large-screen device A and the large-screen device B.
Solution 3: Solution 1 and Solution 2 may also be combined. For example, the large-screen device supports a maximum of four projection source ends to present all content on the screen. In this case, when a quantity of projection source ends is less than or equal to 4, content of each projection source may be presented on the large-screen device based on the result shown in (a) in FIG. 193. When a quantity of projection source ends is greater than 4, content projected by the projection source ends may be presented in a preemptive sharing manner. For example, with reference to (a) in FIG. 193, when the large-screen device currently presents content projected by the mobile phone 1, the mobile phone 2, the mobile phone 3, and the mobile phone 4, if a mobile phone 5 needs to perform projection, content projected by the mobile phone 5, for example, a document 5, may overlay the document 1 projected by the mobile phone 1, to be presented on the large-screen device. Then, if a mobile phone 6 needs to perform projection, content projected by the mobile phone 6, for example, a document 6 may overlay the document 2 projected by the mobile phone 2, to be presented on the large-screen device, and so on.

By using the foregoing technical solution, a corresponding effect in the foregoing many-to-one projection solution can be achieved, and in addition, when two terminals in different districts perform a MeeTime call, interfaces or some elements on interfaces of other terminals in the different districts may be presented on the terminals in the two districts. The terminals in the two districts can not only display video call images, but also display content that is projected locally and by peer terminals, to implement cross-district office. Such a cross-district office mode improves conference efficiency and reduces communication costs of cross-district office.

In the foregoing embodiment, an example in which collaborative use of devices, for example, file sharing, is implemented through cross-device drag when the terminals are connected is used for description. For example, by using a device collaboration technology, when two devices establish a connection or collaborate with each other, cross-device drag and transmission of a file can be implemented. For example, file drag is initiated on a first device, and when leaving the first device, a dragged file carries related information to a second device, and the second device performs corresponding processing. In addition, a connection between devices is established by using a Wi-Fi P2P technology, and file sharing may also be implemented. A point-to-point connection between smart terminal devices is established by using the Wi-Fi P2P technology. A file with a larger data amount is transmitted through a Wi-Fi network, and a file with a smaller data amount is transmitted by using through a Bluetooth channel However, the two file sharing technologies are usually established only between two devices, and file drag and file transfer are performed only between the two devices. For some diversified or complex application scenarios (for example, file sharing between a plurality of devices). providing better file sharing experience for the user is also a requirement.

Some other embodiments of this application further provide a file transfer method and a related device. An object dragged by the user may be an object on the first device, or may be an object projected by another device to the first device. This can improve file sharing efficiency between the plurality of devices and user experience.

The term "user interface (user interface, UI)" in the specification, claims, and accompanying drawings of this application is a medium interface for interaction and information exchange between a user and an application or an operating system, and the user interface implements conversion between an internal form of information and a form that can be accepted by the user. A user interface of an application is source code written in a specific computer language, for example, Java or an extensible markup language (extensible markup language, XML). The source code of the interface is parsed and rendered on a terminal device, and is finally presented as user-recognizable content, for example, a control, for example, a picture, a text, or a button. A control (control), also referred to as a widget (widget), is a basic element on a user interface. Typical controls include a toolbar (toolbar), a menu bar (menu bar), a text box (text box), a button (button), a scrollbar (scrollbar), a photo, and a text. An attribute and content of a control on an interface are defined by using a tag or a node. For example, the control included in the interface is defined in the XML by using a node, for example, <Textview>, <ImgView>, or <Video View>. One node corresponds to one control or one attribute on the interface. After being parsed and rendered, the node is presented as user-visible content. In addition, interfaces of many applications such as a hybrid application (hybrid application) usually further include a web page. The web page, also referred to as a page, may be understood as a special control embedded in an interface of an application. The web page is source code written in a specific computer language, for example, a hypertext markup language (hyper text markup language, GTML), cascading style sheets (cascading style sheets, CSS), or JavaScript (JavaScript, JS). The source code of the web page may be loaded and displayed as user-recognizable content by a browser or a web page display component with a function similar to that of the browser. Specific content included in the web page is also defined by using a tag or a node in the source code of the web page. For example, an element and an attribute of the web page are defined in the OTMI, by using<p>, <img>. <video>, or <canvas>.

The user interface is usually represented in a form of a graphical user interface (graphical user interface, GUI), and is a user interface that is related to a computer operation and that is displayed in a graphic manner. The user interface may be an interface element displayed on a display of an electronic device, for example, an icon, a window, or a control. The control may include a visual interface element, for example, s an icon, a button, a menu, a tab, a text box, a dialog box, a status bar, a navigation bar, or a widget

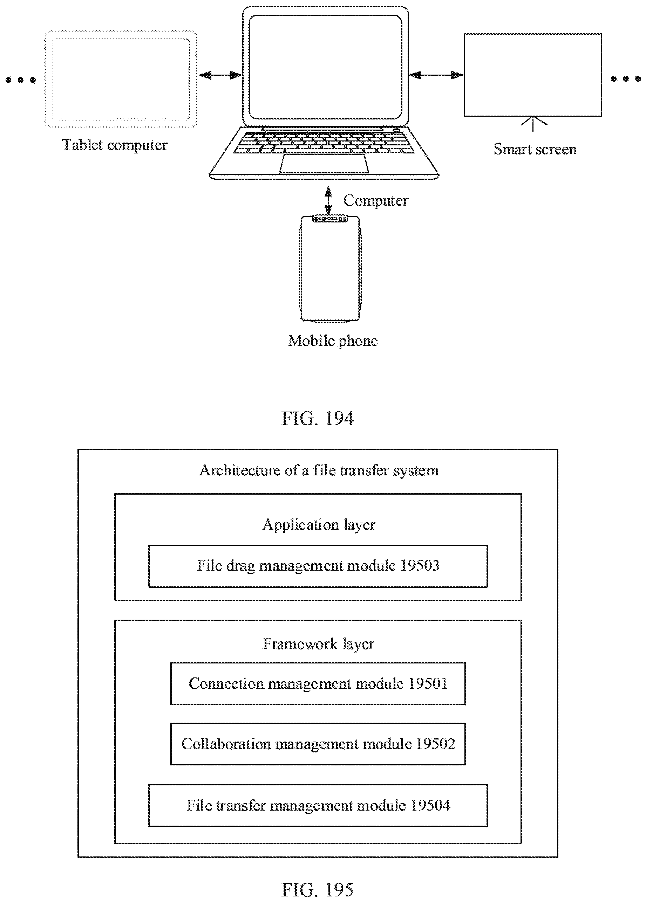

The following describes the file transfer method provided in this embodiment of this application with reference to FIG. 194 to FIG. 199E.

To facilitate understanding of this embodiment of this application, the following lists an example of a scenario in which a file transfer system is applied to the file transfer method in this application. It may be understood that when the file transfer method in this embodiment of this application is applied to different scenarios, a terminal may separately correspond to different types of devices, in addition, corresponding file transfer files are also of different types. The following lists two scenarios as examples.

Scenario 1: a file transfer scenario based on video production.

With the rapid development of the Internet, more and more young people like to take Vlogs to record their lives and upload them to the Internet for sharing the lives with their friends and fans. This drives continuous progress of a camera function of a mobile phone. People gradually put down a heavy camera and start to take out the mobile phone to record video materials anytime and anywhere. To complete a Vlog video needs to write manuscripts, shoot video materials in an early stage, and perform editing later, to make the Vlog video a continuous video with complete content. This problem may occur during Vlog video production. To make a shot image clearer, a shooter usually uses a rear camera of the mobile phone to shoot. When recording some images in which the shooter needs to be shot, the shooter can use a tablet computer and the mobile phone to establish collaboration as a video image monitoring screen, so that the shooter can see a shooting effect at any time. However, when the shooter wants to upload the video material to a computer for editing, the mobile phone needs to disconnect from the tablet computer, and then establish collaboration with the computer to upload documentation. Such a complex operation brings some inconvenience to the shooter. Therefore, in this scenario, collaboration between the mobile phone and the tablet computer can be established by using this embodiment of this application. A display of the mobile phone may be projected to the tablet computer, collaboration between the tablet computer and the computer is established, and the computer may send a manuscript to the tablet computer at any time. In this case, the shooter can complete video recording only by watching the tablet computer. In addition, without establishing the collaboration with the computer, the mobile phone may directly drag and transmit video materials on the mobile phone to the computer, and then the computer is used to perform post-editing. This greatly facilitates a process of producing the Vlog video by the shooter.

Scenario 2: a file transfer scenario based on an enterprise conference.

With the advancement of science and technology, more and more enterprises begin to focus on efficient official business handling. In a conventional enterprise conference, a presenter needs to prepare and print documentation in advance, and distribute the documentation to each participant. In addition, if a person modifies the documentation during the conference, modified documentation cannot be quickly synchronized to another participant In this case, if personal electronic devices of the participants are connected to each other, the presenter of the conference may directly transmit the documentation prepared by the presenter to the personal electronic devices of other participants. If a participant modifies the documentation, the modifier may send modified documentation to the personal electronic devices of other participants. According to this embodiment of this application, a plurality of electronic devices (three or more electronic devices) can transfer files without disconnecting collaboration between the electronic devices, to improve official business handling efficiency in the enterprise conference.

It may be further understood that the foregoing two application scenarios are merely several example implementations in this embodiment of this application, and application scenarios in this embodiment of this application include but are not limited to the foregoing application scenarios.

Based on the foregoing technical problems and the corresponding application scenarios in this application, for ease of understanding of this embodiment of this application, the following first describes an architecture of a system on which this embodiment of this application is based. FIG. 194 is a schematic diagram of an architecture of a file transfer system according to an embodiment of this application. The system is used to resolve a problem of low efficiency of file resource transmission among a plurality of terminals. The architecture of the system may include N devices, and any one of the N devices establishes collaboration with at least one of the N devices, where N is an integer greater than 2.

A first device is any one of the N devices (or terminals). The first device may be the first terminal in embodiments of this application. In this application, the first device refers to an electronic device that initiates a file drag operation. The electronic device has an operating system and has a data transmission interface. The electronic device may be the first terminal in the foregoing embodiment. For example, common electronic devices include devices such as a smartphone, a personal computer, a tablet computer, and a smart screen. For example, the smartphone has an independent operating system, and may implement wireless network access by using a mobile communications network. The smartphone may store some documentation and may edit a file. After collaboration is established between the smartphone and another electronic device, the smartphone may transfer the file on the smartphone to the electronic device in collaboration with the smartphone.

A third device is any one of the N devices (for example, one of M second devices, and the second device may be the third terminal in embodiments of this application). The third device may be the second terminal in embodiments of this application. In this application, the third device refers to an electronic device that receives a target file. The electronic device has an operating system and has a data transmission interface. The electronic device may be the second terminal in the foregoing embodiment For example, common electronic devices include devices such as a smartphone, a personal computer, a tablet computer, and a smart screen. For example, the personal computer has an independent operating system, and may access the Internet in a wired or wireless manner. In addition, the personal computer may establish collaboration with another electronic device, and may receive or forward documentation from the another electronic device. For another example, the tablet computer may communicate with another electronic device, or may establish collaboration with some electronic devices. In addition, a projection function of the smartphone may be further implemented on the tablet computer, and a desktop of the smartphone may be displayed on a display of the tablet computer. In addition, the tablet computer may receive or forward documentation from the another electronic device.

It may be understood that the architecture of the file transfer system in FIG. 194 is merely an example implementation in this embodiment of this application, and the architecture of the file transfer system in this embodiment of this application includes but is not limited to the foregoing system architecture.

The following describes an architecture of a file transfer system of any one of the N devices in this embodiment of this application. With reference to FIG. 3, FIG. 195 is a schematic diagram of an architecture of a file transfer system of any one of the N devices according to an embodiment of this application. The architecture of the file transfer system includes a connection management module 19501, a collaboration management module 19502, a file drag management module 19503, and a file transfer management module 19504. The file drag management module 19503 may be the drag service module in embodiments of this application.

In this embodiment, the connection management module 19501 is responsible for establishing a connection between a plurality of electronic devices. For example, in the connection management module 19501, a connection port may be provided for a user, to facilitate access of the plurality of electronic devices in collaboration. In addition, in a connection process, the connection management module 19501 may provide an authentication function, and after completing authentication on access electronic devices, may establish a connection between the electronic devices. When the electronic devices need to be disconnected, the connection management module 19501 provides a disconnection port, so that the connected electronic devices may be disconnected at any time.

The collaboration management module 19502 is responsible for implementing a collaboration function between the electronic devices. For example, if collaboration is established between the plurality of electronic devices, the collaboration management module 19502 may provide an audio and video transmission capability that supports projection, audio switching, and the like between the electronic devices. The collaboration management module 19502 may also provide a data transmission capability that supports sending, receiving, and the like of various kinds of operation signaling between the devices. In addition, a capability that supports sharing with a peripheral component may be further provided. The peripheral component is used on an electronic device that does not support touch, so that the electronic device conveniently uses a file drag function.

The file drag management module 19503 is responsible for implementing file sharing between the electronic devices. For example, in the file drag management module 19503, file type information may be obtained, for example, file name suffixes of different files are obtained to determine file types. Therefore, corresponding drag effects closer to different operating systems may be generated in different systems. On an electronic device that triggers file drag, a decision may be generated for a drag effect based on a type, a quantity, a size, and an arrangement sequence of a dragged file, to determine that a corresponding dragging effect is displayed on different devices. The drag effect is a display effect of the file in a dragging process. Then, in the file drag management module 19503, a file drag effect may be managed, and operations such as forwarding and releasing may be determined according to a releasing device. The file drag management module 19503 may implement management of a related function for file drag between the electronic devices.

The file transfer management module 19504 is responsible for obtaining and generating a file drag event For example, in the file transfer management module 19504, file information of the dragged file may be obtained, and file transfer and receiving may be prepared accordingly. In addition, in this module, file storage may be managed, and the file storage is correspondingly managed by determining whether a current electronic device can receive a file and determining a storage path of a received file. In this module, file sending and receiving may be further managed, and a socket (Socket) connection maybe created based on IPs between different electronic devices, so that a channel may be established between the different devices to transfer a file between the devices. The file transfer management module 19504 may implement related operations such as file transfer, receiving, and storage between the devices.

It may be understood that the architecture of the file transfer system in the electronic device in FIG. 195 is merely an example implementation in this embodiment of this application. The architecture of the file transfer system in the electronic device in this embodiment of this application includes but is not limited to the foregoing structure. In an example, the architecture of the file transfer system may include a plurality of layers, for example, an application layer and a framework layer. The connection management module 19501, the collaboration management module 19502, the file drag management module 19503, and the file transfer management module 19504 may be located at any layer in the architecture. For example, the file drag management module 19503 is located at the application layer, and the connection management module 19501, the collaboration management module 19502, and the file transfer management module 19504 are located at the framework layer. This is merely an example, and a layer at which each module is located is not specifically limited herein in this embodiment.

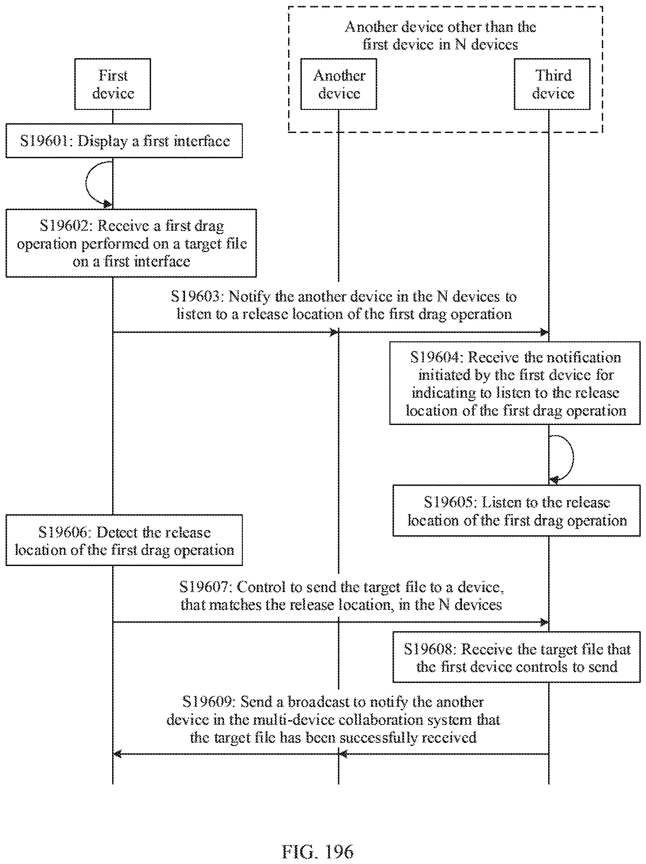

The following describes a specific method architecture on which this embodiment of this application is based. FIG. 196 is a schematic flowchart of a file transfer method according to an embodiment of this application. The following describes the file scan method in this embodiment of this application, with reference to FIG. 196 and based on the architecture of the file transfer system in FIG. 194, from interaction sides of the first device and the third device (for example, one of the M second devices). It should be noted that, to describe the file transfer method in this embodiment of this application in more detail, in each procedure step of this application, that a corresponding execution body is the first device or the third device is described. However, this does not mean that in this embodiment of this application, a corresponding method procedure can be performed only by using the described execution body

Step S19601: The first device displays a first interface.

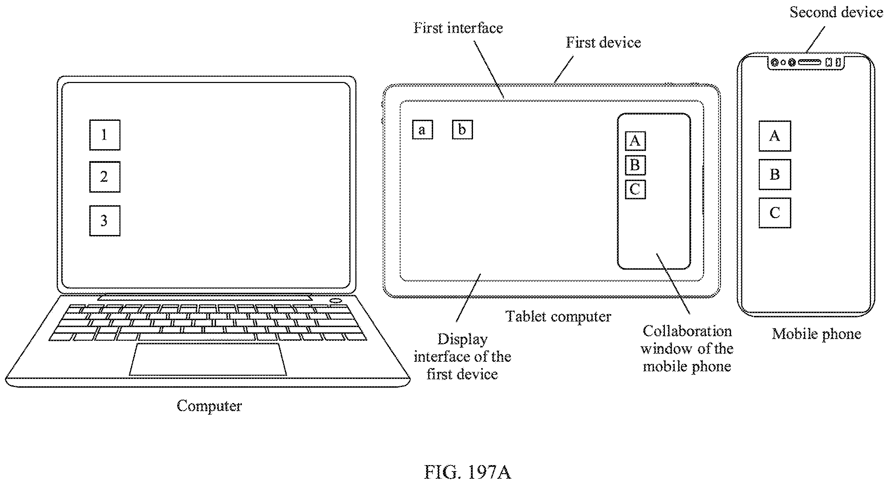

Specifically, the first interface includes a display interface of the first device and collaboration windows corresponding to the M second devices that establish collaboration with the first device, and M is an integer greater than or equal to 0. The first device may display the first interface on a display. For example, FIG. 197A is a schematic diagram of a multi-device collaboration system (where three devices are used as an example). The system in the figure includes three electronic devices, and the three electronic devices are respectively a computer, a tablet computer, and a mobile phone. In a scenario in which the computer establishes collaboration with the tablet computer, the tablet computer establishes collaboration with the mobile phone, and there is a collaboration window of the mobile phone on the tablet computer, but the computer does not establish collaboration with the mobile phone, the first device may be the tablet computer. In this case, a value of M is 1, and the M second devices include one mobile phone. Therefore, the first interface is a screen of the tablet computer, there is only a collaboration window of one device on the screen of the tablet computer, and a location other than a location of the collaboration window on the screen of the tablet computer is the display interface of the first device.

Step S19602: The first device receives a first drag operation performed on a target file on the first interface.

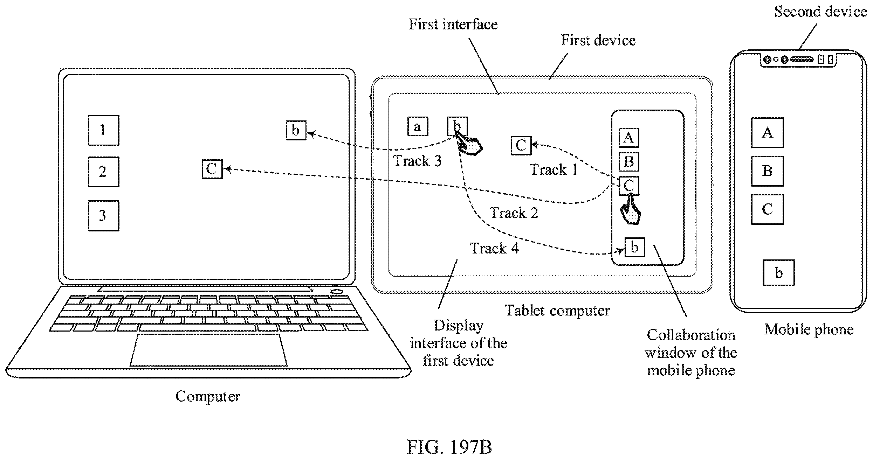

Specifically, the target file is a to-be-shared file, and the first drag operation may include but is not limited to dragging the target file by using a touch sensor touchscreen of the first device, and dragging the target file by using a peripheral component such as a mouse. For example, FIG. 197B is a schematic diagram of initiating file drag on a first device in a multi-device collaboration system (where three devices are used as an example). The system in the figure includes three electronic devices, and the three electronic devices are respectively a computer, a tablet computer, and a mobile phone. In a scenario in which the computer establishes collaboration with the tablet computer, the tablet computer establishes collaboration with the mobile phone, and there is a collaboration window of the mobile phone on the tablet computer, but the computer does not establish collaboration with the mobile phone, the tablet computer may be used as the first device to initiate a drag operation for a target file on a screen of the tablet computer. The target file may be any file that appears on the screen. As shown in the figure, the target file may be a file C or a file b. The user may select the target file on the screen, perform the drag operation on the target file, then drag the file C based on a track 1 or a track 2, and drag the file b based on a track 3 or a track 4. It should be noted that the track is not limited to the track mentioned above, and may further include more possibilities. After the user initiates the drag operation for the target file, the tablet computer may receive the drag operation.

Step S19603: The first device notifies another device in the N devices to listen to a release location of the first drag operation.

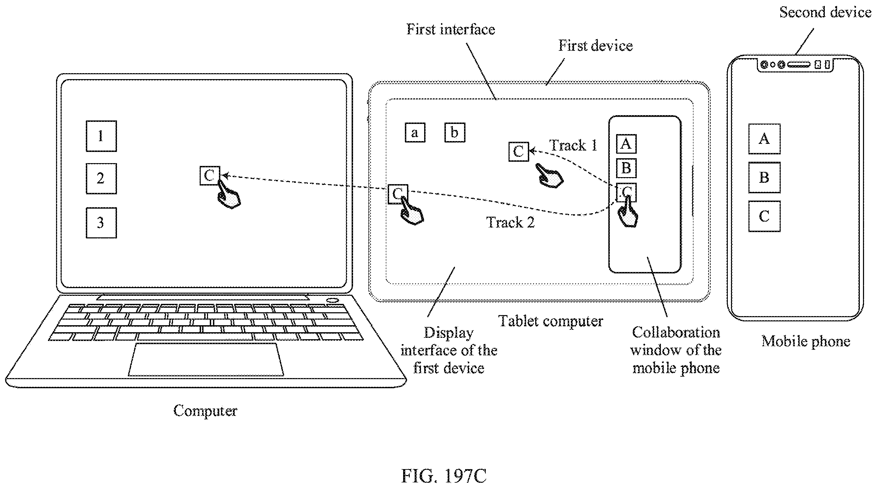

Specifically, the release location includes an interface of any one of the N devices or a collaboration window, and the release location of the first drag operation is a location at which the user releases the target file on the first interface. For example, FIG. 197C is a schematic diagram of a release location of a first drag operation in a multi-device collaboration system (where three devices are used as an example). In the figure, the user initiates a drag operation for a file C in a collaboration window of a mobile phone on a first interface. In this case, a tablet computer sends a broadcast message to notify a computer, the tablet computer, and the mobile phone in the multi-device collaboration system that a file drag operation is initiated, so that each device in the system is ready to receive the file C. In this case, each device listens to a release location of the file drag operation, and each device can know that the file C comes from the mobile phone.

Step S19604: The third device receives a notification initiated by the first device for indicating to listen to the release location of the first drag operation.

Specifically, the third device is a device corresponding to the release location of the first drag operation. For example, FIG. 197C is the schematic diagram of the release location of the first drag operation in the multi-device collaboration system (where the three devices are used as an example). In the figure, the user initiates the drag operation for the file C in the collaboration window of the mobile phone on the first interface, and the third device may be the computer or the tablet computer. In this case, both the computer and the tablet computer receive the notification initiated by the first device for indicating to listen to the release location of the first drag operation, to learn that there is the file C on the mobile phone to be shared, and prepare to receive the file C at any time.

Step S19605: The third device listens to the release location of the first drag operation.

Specifically, after learning that there is the target file on the first device to be shared, the third device always listens to whether the release location of the first drag operation is corresponding to an interface of the third device. For example, FIG. 197C is the schematic diagram of the release location of the first drag operation in the multi-device collaboration system (where the three devices are used as an example). In the figure, the user initiates the drag operation for the file C in the collaboration window of the mobile phone on the first interface, and the third device may be the computer or the tablet computer. When the computer is used as the third device, the computer always listens to a location at which the file C is released, and receives the file C when the file C is released on a display interface of the computer

Step S19606: The first device detects the release location of the first drag operation.

Specifically, the release location on the first interface may include that the release location includes a display interface of any one of the N devices or a collaboration window corresponding to the device. In this case, the third device is the device corresponding to the release location of the first drag operation. For example, as shown in FIG. 197C, FIG. 197C is a schematic diagram of a release location of a first drag operation in a three-device system. The user initiates the drag operation for the file C in the collaboration window of the mobile phone on the first interface, and may release the file C on a display interface of the tablet computer along the track 1. In this case, the tablet computer detects that the release location is the display interface of the tablet computer. In this case, the third device is the tablet computer, and it indicates that the file C needs to be sent to the tablet computer. Alternatively, the file C may be released on the display interface of the computer along the track 2. The tablet computer detects that the release location is the display interface of the computer. In this case, the third device is the computer, and it indicates that the file C needs to be sent to the computer.

Step S19607: The first device controls to send the target file to a device, that matches the release location, in the N devices.

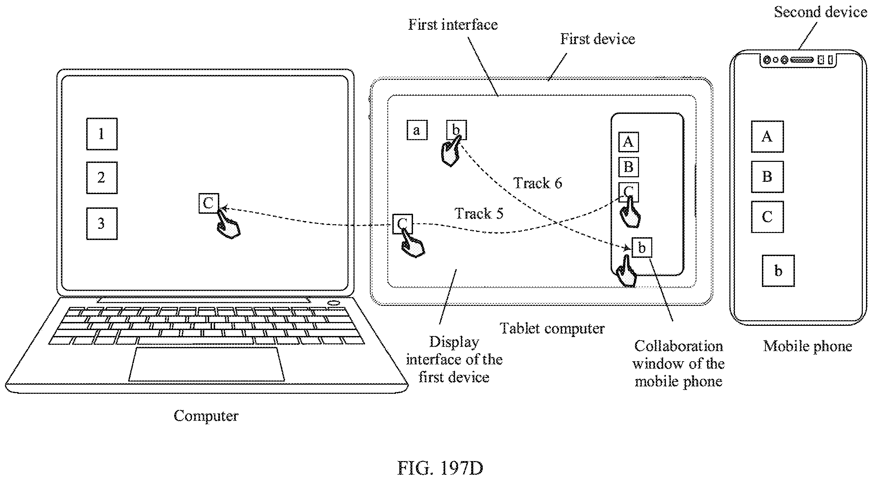

Specifically, that the first device controls to send the target file to a device, that matches the release location, in the N devices includes: The first device sends the target file to the device that matches the release location, and the first device controls another device to send the target file to the device that matches the release location. For example, FIG. 197D is a schematic diagram of sending a target file in a multi-device collaboration system (where three devices are used as an example). If the user selects a file C on the first interface and drags the file C along a track 5, and releases a drag operation on a display interface of a computer, a tablet computer controls a mobile phone to send the file C to the computer. If the user selects a file b on the first interface and drags the file b along a track 6, and releases a drag operation on a collaboration window of the mobile phone, the tablet computer sends the file b to the mobile phone.

Step S19608: The third device receives the target file that the first device controls to send.

Specifically, after the first device controls to send the target file to the third device, the third device may store the target file in the device. For example, FIG. 197D is the schematic diagram of sending the target file in the multi-device collaboration system (where the three devices are used as an example). If the user selects the file C on the first interface and drags the file C along the track 5, and releases the drag operation on the display interface of the computer, the tablet computer controls the mobile phone to send the file C to the computer. In this case, as the third device, the computer receives the file C and stores the file C locally. If the user selects the file b on the first interface and drags the file b along the track 6, and releases the drag operation on the collaboration window of the mobile phone, the tablet computer sends the file b to the mobile phone. In this case, as the third device, the mobile phone receives the file b and stores the file b locally.

Step S19609: The third device sends a broadcast to notify another device in the multi-device collaboration system that the target file has been successfully received.

Specifically, after successfully receiving the target file, the third device sends the broadcast to notify the another device in the multi-device collaboration system that the target file has been successfully received, and the another device does not need to wait for receiving. For example, FIG. 197D is the schematic diagram of sending the target file in the multi-device collaboration system (where the three devices are used as an example). If the user selects the file C on the first interface and drags the file C along the track 5, and releases the drag operation on the display interface of the computer, the tablet computer controls the mobile phone to send the file C to the computer. After successfully receiving the file C. the computer notifies the tablet computer and the mobile phone in the multi-device collaboration system that the file C has been successfully received, and the tablet computer and the mobile phone do not need to wait for receiving.

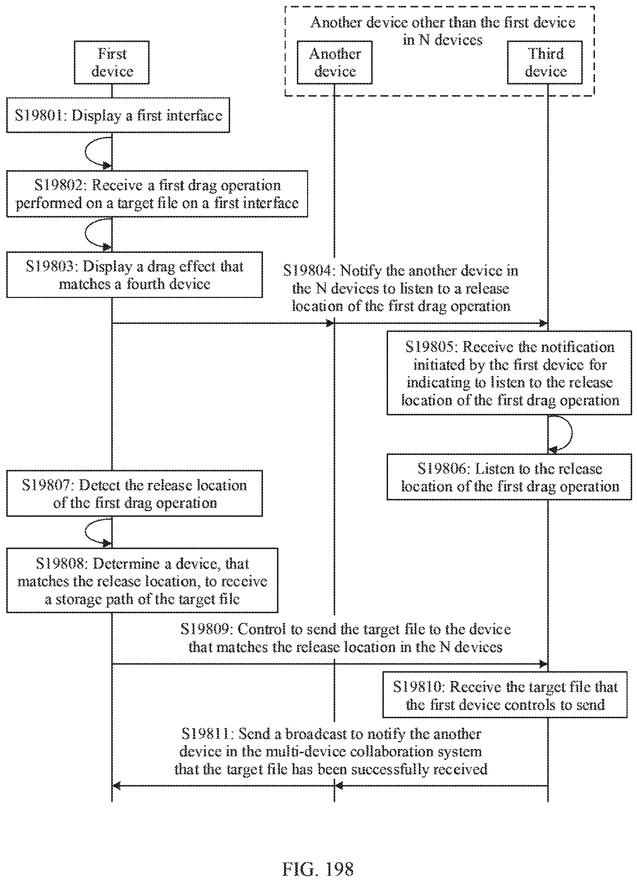

The following describes a specific method architecture on which this embodiment of this application is based. FIG. 198 is a detailed schematic flowchart of a file transfer method according to an embodiment of this application The following describes the file transfer method in this embodiment of this application, with reference to FIG. 198 and based on the architecture of the file transfer system in FIG. 194, from interaction sides of the first device and the third device (for example, one of the M second devices). It should be noted that, to describe the file scan method in this embodiment of this application in more detail, in each procedure step of this application, that a corresponding execution body is the first device or the third device is described However, this does not mean that in this embodiment of this application, a corresponding method procedure can be performed only by using the described execution body.

Step S19801: The first device displays a first interface.

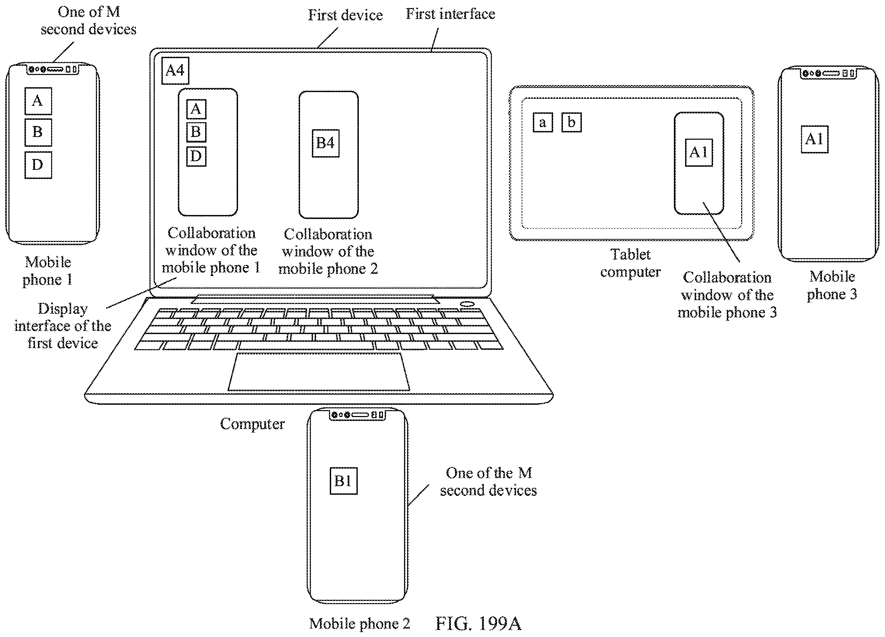

Specifically, the first interface includes a display interface of the first device and collaboration windows corresponding to the M second devices that establish collaboration with the first device, and M is an integer greater than or equal to 0. The first device may display the first interface on a display. For example, FIG. 199A is a schematic diagram of a multi-device collaboration system (where five devices are used as an example). The system in the figure includes five electronic devices, and the five electronic devices are respectively a computer, a tablet computer, a mobile phone 1, a mobile phone 2, and a mobile phone 3. in a scenario in which the mobile phone 1 establishes collaboration with the computer and the computer has a collaboration window of the mobile phone 1, the mobile phone 2 establishes collaboration with the computer and the computer has a collaboration window of the mobile phone 2, the computer establishes collaboration with the tablet computer, and the mobile phone 3 establishes collaboration with the tablet computer and the tablet computer has a collaboration window of the mobile phone 3, the computer may be used as the first device, and a first interface may be displayed on the computer. In this case, a value of M is 2, and the M second devices include the mobile phone 1 and the mobile phone 2. There are collaboration windows of the two devices on a screen of the computer, and a location other than locations of the collaboration windows on the screen of the computer is the display interface of the first device.

Step S19802: The first device receives a first drag operation performed on a target file on the first interface.

Specifically, the target file is a to-be-transferred file, and the first drag operation may include but is not limited to dragging the target file by using a touch sensor touchscreen of the first device, and dragging the target file by using a peripheral component such as a mouse. FIG. 199A is the schematic diagram of the multi-device collaboration system (where the five devices are used as an example). The system in the figure includes the five electronic devices, and the five electronic devices are respectively the computer, the tablet computer, the mobile phone 1, the mobile phone 2, and the mobile phone 3. It should be noted that, in the scenario in which the mobile phone 1 establishes collaboration with the computer and the computer has the collaboration window of the mobile phone 1, the mobile phone 2 establishes collaboration with the computer and the computer has the collaboration window of the mobile phone 2, the computer establishes collaboration with the tablet computer, and the mobile phone 3 establishes collaboration with the tablet computer and the tablet computer has the collaboration window of the mobile phone 3, the computer may be used as the first device. In this case, the target file may be a file A, a file B, a file D, a file A4, or a file B4.

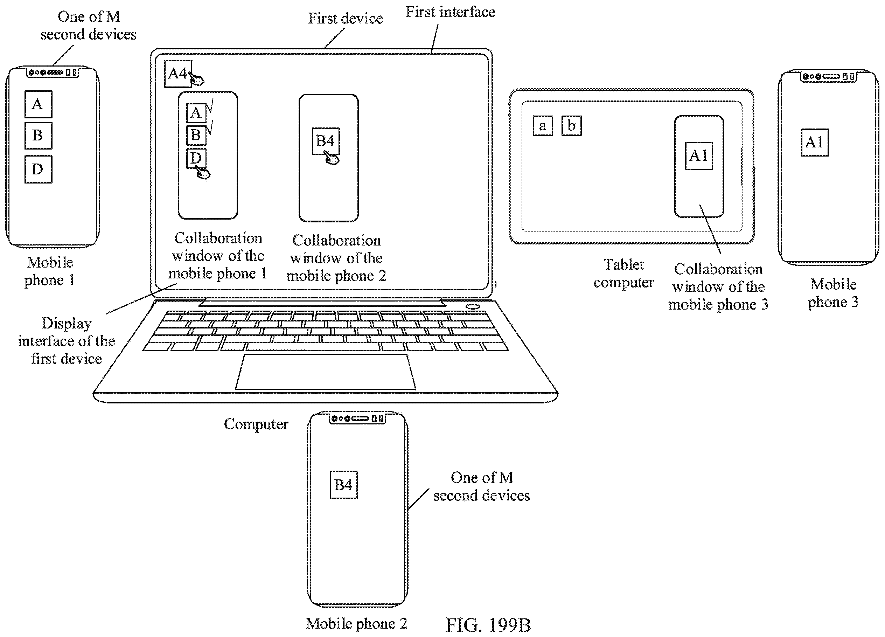

In a possible implementation, the target file is a file stored on the first device, and a start location of the first drag operation is on the display interface. Alternatively, the target file is a file stored on a start second device in the M second devices, and a start location of the first drag operation is in a collaboration window corresponding to the start second device. Specifically, the first interface includes the display interface of the first device and the collaboration windows corresponding to the M second devices. The rag operation is performed on the target file on the first interface. If the target file is on the display interface of the first device and the target file is dragged on the display interface of the first device other than being dragged in the collaboration windows corresponding to the M second devices, it indicates that the target file is stored on the first device, and it is determined that the first device can send the target file. If the target file is on a collaboration window of one of the devices and the target file is dragged on the collaboration window other than being dragged on the display interface of the first device, it indicates that the target file is stored on the device corresponding to the collaboration window, and it is determined that the first device may control the device corresponding to the collaboration window to send the target file. For example, FIG. 199B is a schematic diagram of a target file in a multi-device collaboration system (where five devices are used as an example). The system in the figure includes five electronic devices, and the five electronic devices are respectively a computer, a tablet computer, a mobile phone 1, a mobile phone 2, and a mobile phone 3. In a scenario in which the mobile phone 1 establishes collaboration with the computer and the computer has a collaboration window of the mobile phone 1, the mobile phone 2 establishes collaboration with the computer and the computer has a collaboration window of the mobile phone 2, the computer establishes collaboration with the tablet computer, and the mobile phone 3 establishes collaboration with the tablet computer and the tablet computer has a collaboration window of the mobile phone 3, the computer may be used as the first device. In the figure, when the user needs to perform a file drag operation on a file A4, because the file A4 is on a display interface of the computer, it may be considered that the file A4 is stored on the computer, and the computer may receive the drag operation acting on the file A4 on the display interface of the computer. In the figure, when the user needs to perform a file drag operation on a file A, a file B, and a file D, it should be noted that in this case, the start second device is the mobile phone 1. Because the file A, the file B, and the file D are on a collaboration window of a screen of the computer, it may be considered that the file A, the file B, and the file D are stored on the mobile phone 1 corresponding to the collaboration window, and the computer may receive the drag operation acting on the file A, the file B, and the file D on the collaboration window the screen of the computer.

Step S19803: The first device displays a drag effect that matches a fourth device.

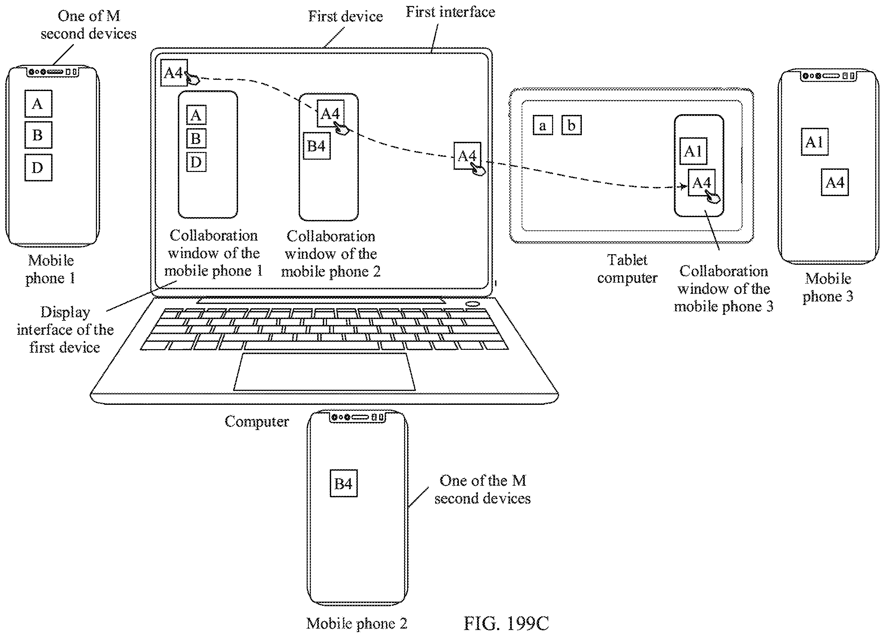

The fourth device may be the fourth terminal in embodiments of this application. Specifically, the fourth device is a device through which the target file passes in a process in which the target file is dragged and moved. For example, the fourth device may be any device in the M second devices. In a possible implementation, first information of the target file is obtained. The first information includes one or more of file type information, file quantity information, and file arrangement sequence information of the target file. A drag effect set of the target file is generated based on the first information. The drag effect that matches the fourth device is displayed based on the drag effect set of the target file. The fourth device is a device through which a drag track of the first drag operation passes, or a device corresponding to a collaboration window on a device through which the drag track of the first drag operation passes. Specifically, when the user selects the target file and performs the drag operation on the target file, the target file moves along the drag track. In this process, in order to display a moved location of the target file in real time, a corresponding drag effect is displayed when the drag operation is performed on the target file. It should be noted that, when the target file is dragged, the first device may control a device storing the target file to obtain one or more of the file type information, the file quantity information, and the file arrangement sequence information of the target file, and generate the drag effect set of the target file based on the information, and then display a corresponding drag effect based on a system of a device through which the drag track passes. For example, FIG. 199C is a schematic diagram of a drag effect in a multi-device collaboration system (where five devices are used as an example). The system in the figure includes five electronic devices, and the five electronic devices are respectively a computer, a tablet computer, a mobile phone 1, a mobile phone 2, and a mobile phone 3. In a scenario in which the mobile phone 1 establishes collaboration with the computer and the computer has a collaboration window of the mobile phone 1, the mobile phone 2 establishes collaboration with the computer and the computer has a collaboration window of the mobile phone 2, the computer establishes collaboration with the tablet computer, and the mobile phone 3 establishes collaboration with the tablet computer and the tablet computer has a collaboration window of the mobile phone 3, the computer may be used as the first device. In the figure, the user selects a file A4 on a display interface of the computer, and moves the file A4 along a drag track. The track may pass through the collaboration window of the mobile phone 2. in this case, the mobile phone 2 may be used as the fourth device. To display a moved location of the file A4 in real time, in a moving process, a drag effect that adapts to a system is displayed based on the system of the device. As shown in FIG. 199C, the drag effect may be a file shadow effect generated based on the file A4.

Step S19804: The first device notifies another device in the N devices to listen to a release location of the first drag operation.

Specifically, when the drag operation is performed on the target file on the first interface, the first device sends a broadcast message to notify another device in the system that there is a target file to be shared, and distinguishes a source of the target file. In this way, all devices in the system can listen to a release location of the drag operation, and all the devices in the system are ready to receive the target file. For example, as shown in FIG. 199C, the system in the figure includes the five electronic devices, and the five electronic devices are respectively the computer, the tablet computer, the mobile phone 1, the mobile phone 2, and the mobile phone 3. In the scenario in which the mobile phone 1 establishes collaboration with the computer and the computer has the collaboration window of the mobile phone 1, the mobile phone 2 establishes collaboration with the computer and the computer has the collaboration window of the mobile phone 2, the computer establishes collaboration with the tablet computer, and the mobile phone 3 establishes collaboration with the tablet computer and the tablet computer has the collaboration window of the mobile phone 3, the computer may be used as the first device. When the user selects the target file, namely, the file A4 on the display interface of the computer, the computer sends a broadcast message to notify the mobile phone 1, the mobile phone 2, the mobile phone 3, and the tablet computer in the multi-device collaboration system to start to listen to the release location of the drag operation. In this case, all devices in the multi-device collaboration system may receive the file A4.

Step S19805: The third device receives a notification initiated by the first device for indicating to listen to the release location of the first drag operation.

Specifically, the third device is a device corresponding to the release location of the first drag operation. For example, as shown in FIG. 199C, the system in the figure includes the five electronic devices, and the five electronic devices are respectively the computer, the tablet computer, the mobile phone 1, the mobile phone 2, and the mobile phone 3. In the scenario in which the mobile phone 1 establishes collaboration with the computer and the computer has the collaboration window of the mobile phone 1, the mobile phone 2 establishes collaboration with the computer and the computer has the collaboration window of the mobile phone 2, the computer establishes collaboration with the tablet computer, and the mobile phone 3 establishes collaboration with the tablet computer and the tablet computer has the collaboration window of the mobile phone 3, the computer may be used as the first device. In the figure, the user initiates the drag operation for the file A4 on the display interface of the computer on the first interface, and the mobile phone 1, the mobile phone 2, the mobile phone 3, the tablet computer, and the computer in the multi-device collaboration system may all be used as the third device. In this case, when the mobile phone 3 is used as the third device, the mobile phone 3 receives a notification initiated by the computer for indicating to listen to the release location of the first drag operation, to learn that there is the file A4 on the computer to be shared, and prepares to receive the file A4 at any time.

Step S19806: The third device listens to the release location of the first drag operation.

Specifically, after learning that there is the target file on the first device to be shared, the third device always listens to whether the release location of the first drag operation is corresponding to an interface of the third device. For example, as shown in FIG. 199C, the system in the figure includes the five electronic devices, and the five electronic devices are respectively the computer, the tablet computer, the mobile phone 1, the mobile phone 2, and the mobile phone 3. In the scenario in which the mobile phone 1 establishes collaboration with the computer and the computer has the collaboration window of the mobile phone 1, the mobile phone 2 establishes collaboration with the computer and the computer has the collaboration window of the mobile phone 2, the computer establishes collaboration with the tablet computer, and the mobile phone 3 establishes collaboration with the tablet computer and the tablet computer has the collaboration window of the mobile phone 3, the computer may be used as the first device. In the figure, the user initiates the drag operation for the file A4 on the display interface of the computer on the first interface, and the mobile phone 1, the mobile phone 2, the mobile phone 3, the tablet computer, and the computer in the multi-device collaboration system may all be used as the third device. When the mobile phone 3 is used as the third device, the mobile phone 3 always listens to a location at which the file A4 is released, and receives the file A4 when the file A4 is released on the collaboration window of the mobile phone 3.

Step S19807: The first device detects the release location of the first drag operation.

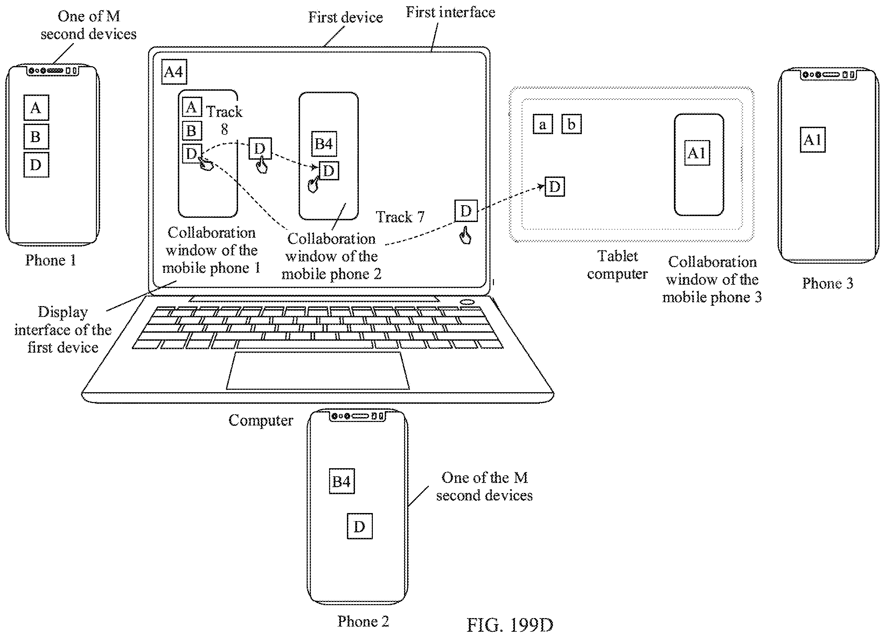

Specifically, the release location may include an interface of any one of the N devices or a collaboration window. In this case, the third device is the device corresponding to the release location of the first drag operation. FIG. 199D is a schematic diagram of a release location of a first drag operation in a multi-device collaboration system (where five devices are used as an example). The user initiates a drag operation for a file D on a collaboration window of a mobile phone 1 on a first interface, and may release the file D on a collaboration window of a mobile phone 2 along a track 8. In this case, a computer detects that the release location is the collaboration window of the mobile phone 2, and it indicates that the file D needs to be sent to the mobile phone 2. Alternatively, the file C may be released on a display interface of a tablet computer along a track 7. In this case, the computer detects that the release location is the display interface of the tablet computer. In this case, the third device is the tablet computer, and it indicates that the file D needs to be sent to the tablet computer.

Step S19808: The first device determines a device, that matches the release location, to receive a storage path of the target file.

Specifically, after being sent to the device that matches the release location, the to-be-shared target file is stored in a determined storage path. In a possible implementation, file information of the target file is obtained. The file information includes a file name, file content, and file size information of the target file. Whether the device that matches the release location meets a condition for receiving the target file is determined. If the condition for receiving the target file is met, that a device that matches the release location receives a storage path of the target file is determined. Specifically, if two devices implement file transfer by performing a drag operation on the target file, a send device needs to determine whether the third device has sufficient storage space to store the target file. After the send device obtains the file information of the target file, optionally, the send device first sends a size of the target file to the third device, and determines whether the device has space to store the target file. If the device has sufficient storage space, the send device determines a storage path of the target file on the third device, and the send device may send the target file to the storage path. For example, as shown in FIG. 199C, when the user selects the target file, namely, the file A4 on the display interface of the computer and performs the file drag operation on the file A4, after obtaining a file size of the file A4, the computer sends the file size to the another device in the multi-device collaboration system, the another device calculates remaining storage space in advance to determine whether the target file can be received. If the target file cannot be received, a prompt indicating that the target file cannot be received is displayed. If the target file can be received, a prompt indicating that the target file can be received is displayed. After receiving the prompt from the device that matches the release location. when the device has storage space to store the file A4, the computer may determine the storage path of the target file stored on the device.

Step S19809: The first device controls to send the target file to the device that matches the release location in the N devices.

Specifically, that the first device controls to send the target file to the device that matches the release location in the N devices includes: The first device sends the target file to the device that matches the release location, and the first device controls another device to send the target file to the device that matches the release location.

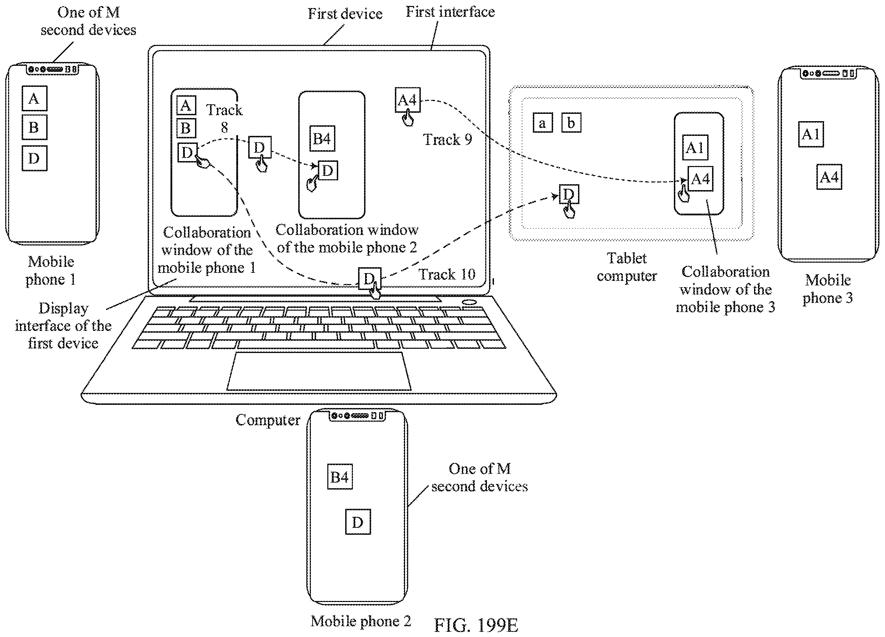

In a possible implementation, the target file is a file stored on the first device. That the first device controls to send the target file to the device that matches the release location in the N devices includes: When it is detected that the release location of the first drag operation is on the display interface of the third device, or when it is detected that the release location of the first drag operation is on a collaboration window that is of the third device and that is on another device of the N devices, the first device is controlled to send the target file to the third device. The third device includes a device, in the N devices, that does not establish collaboration with the first device. It should be noted that, after the target file is dragged on the first interface of the first device, if the target file is released on a display interface of any device in the multi-device collaboration system or a collaboration window corresponding to the device, it indicates that the target file needs to be sent to the device that matches the release location, the device may not need to establish collaboration with the first device. For example, FIG. 199E is a schematic diagram of file drag in a multi-device collaboration system (where five devices are used as an example). The system in the figure includes five electronic devices, and the five electronic devices are respectively a computer, a tablet computer, a mobile phone 1, a mobile phone 2, and a mobile phone 3. In a scenario in which the mobile phone 1 establishes collaboration with the computer and the computer has a collaboration window of the mobile phone 1, the mobile phone 2 establishes collaboration with the computer and the computer has a collaboration window of the mobile phone 2, the computer establishes collaboration with the tablet computer, and the mobile phone 3 establishes collaboration with the tablet computer and the tablet computer has a collaboration window of the mobile phone 3, the computer may be used as the first device. In the figure, the user selects a target file, namely, a file A4 on a display interface of the computer, may move the file A4 along a track 9, and finally release the file A4 on the collaboration window of the mobile phone 3.

In a possible implementation, that the first device is controlled to send the target file to the third device includes: establishing a data transmission channel. The data transmission channel is used to transmit the file information of the target file. If the first device establishes a direct connection to the third device, the file information is sent to the storage path of the third device through the data transmission channel. If the first device establishes an indirect connection to the third device, the file information is sent to a relay device through the data transmission channel, and is forwarded to the storage path of the third device through the relay device. The relay device is a device that establishes a direct connection to the first device and a direct connection to the third device at the same time. Specifically, in the multi-device collaboration system, because different networking technologies are used, more devices can be connected without disconnecting collaboration between the devices. However, different networking technologies may have different networking modes, which may cause changes in connections between the devices. When the first device is a send device and the third device is used as a receive device, the first device and the third device may establish a direct connection or an indirect connection in different networking manners. If the first device establishes the direct connection to the third device (for example, all devices are connected by using an ad hoc networking technology), the first device may directly send the file information of the target file to the third device. If the first device does not establish the direct connection to the third device, but establishes the indirect connection to the third device by using a relay device (a device that may establish a direct connection to the first device and may also establish a direct connection to the third device and that is in the N devices in the multi-device collaboration system), (for example, a one-to-many connection between the devices is implemented by using a Wi-Fi peer-to-peer technology for networking), the first device first sends the file information of the target file to the relay device, and the relay device forwards the file information of the target file to the third device, to implement file transfer between a plurality of devices. Wi-Fi peer-to-peer (WiFi peer-to-peer, WiFi-p2p) enables devices to easily connect to each other without an intermediary wireless access point (Access Point, AP). Usage of Wi-Fi P2P ranges from web browsing to file transfer. Wi-Fi P2P enables a plurality of devices to communicate with each other at the same time, and can use a speed advantage of Wi-Fi. Wi-Fi P2P and a conventional Wi-Fi technology are not mutually exclusive. A group owner (GO) may provide a service for a plurality of group clients (GCs) like an AP. The group owner may connect to an AP like a conventional device. The group owner may also be an AP. The GO is a role in a protocol, and is equivalent to an AP. One group has only one GO. The GC is another role in a protocol, and there may be a plurality of GCs in one group. An ad hoc network is a network that combines mobile communications and a computer network. Information exchange of the network adopts a packet switching mechanism in the computer network. A user terminal is a portable terminal that can be moved. In the ad hoc network, each user terminal has both functions of a router and a host.

For example, as shown in FIG. 199E, in the figure, the user selects the target file, namely, the file A4 on the display interface of the computer, may move the file A4 along the track 9, and finally release the file A4 on the collaboration window of the mobile phone 3. In this case, it may be determined that the target file A4 is stored on the computer, and a device that finally receives the file A4 is the mobile phone 3. In the multi-device collaboration system, if networking is performed between the plurality of devices by using the Wi-Fi P2P technology, a direct connection cannot be established between the computer and the mobile phone 3, but a direct connection may be established between the computer and the tablet computer, and a direct connection may also be established between the tablet computer and the mobile phone 3. In this case, the computer may first establish a data transmission channel with the tablet computer, and the computer sends file information of the file A4 to the tablet computer. Then, the tablet computer establishes a data transmission channel with the mobile phone 3, and the tablet computer forwards the file information of the file A4 to the mobile phone 3. Optionally, if networking is performed between the plurality of devices by using the ad hoc networking technology, all devices in the multi-device collaboration system may establish direct connections. In this case, the computer may establish a direct connection to the mobile phone 3, the computer may directly establish a data transmission channel to the mobile phone 3, and the computer directly sends the file information of the file A4 to the mobile phone 3.

In a possible implementation, the target file is a file stored on a start second device in the M second device. That the first device controls to send the target file to the device that matches the release location in the N devices includes: When it is detected that the release location of the first drag operation is on the display interface of the third device, or when it is detected that the release location of the first drag operation is on a collaboration window that is of the third device and that is on another device of the N devices, the start second device is controlled to send the target file to the third device. It should be noted that, after the target file on the collaboration window is dragged on the first interface, if the target file is released on a display interface of any device in the multi-device collaboration system or a collaboration window corresponding to the device, it indicates that the target file needs to be sent to the device that matches the release location. Optionally, the third device may be one of the M second devices. For example, as shown in FIG. 199E, in the figure, the user selects a target file, namely, a file D on the collaboration window of the mobile phone 1, moves the file D along a track 8, and finally releases the file D on the collaboration window of the mobile phone 2. It should be noted that in this case, the mobile phone 1 is the start second device, the mobile phone 2 is the third device. In addition, the user may select the target file D, namely, the file D on the collaboration window of the mobile phone 1, move the file D along a track 10, and finally release the file D on a display interface of the tablet computer. It should be noted that in this case, the mobile phone 1 is the start second device, and the tablet computer is the third device.

In a possible implementation, that the start second device is controlled to send the target file to the third device includes: establishing a data transmission channel. The data transmission channel is used to transmit the file information of the target file. If the start second device establishes a direct connection to the third device, the file information is sent to the storage path, through the data transmission channel, of the device that matches the release location. If the start second device establishes an indirect connection to the third device, the file information is sent to a relay device through the data transmission channel, and is forwarded by the relay device to the storage path of the device that matches the release location. The relay device is a device that establishes a direct connection to the start second device and a direct connection to the third device at the same time. In this embodiment of this application, in the multi-device collaboration system, because different networking technologies are used, more devices can be connected without disconnecting collaboration between the devices. However, different networking technologies may have different networking modes, which may cause changes in connections between the devices. When the start second device is used as a send device (namely. a device that stores the target file, for example, the first device or one of the M second devices), the start second device and the third device may establish a direct connection or an indirect connection in different networking manners. If the start second device may establish the direct connection to the third device (for example, networking is performed by using the ad hoc networking technology), the start second device may directly send the file information of the target file to the third device. If the start second device does not establish the direct connection to the third device, but establishes the indirect connection (for example, a one-to-many connection between the devices is implemented by using the Wi-Fi P2P technology for networking) to the third device by using a relay device (for example, the first device), the start second device first sends the file information of the target file to the relay device, and the relay device forwards the file information of the target file to the third device, to implement file transfer between a plurality of devices. For example, FIG. 199E is a schematic diagram of file drag in a five-device system. In the figure, the user selects the target file, namely, the file D on the collaboration window of the mobile phone 1, may move the file D along the track 8, and finally releases the file D on the collaboration window of the mobile phone 2. It should be noted that, in the foregoing example, the start second device is the mobile phone 1, and the third device is the mobile phone 2. In this case, it may be determined that the target file D is stored on the mobile phone 1, and a device that finally receives the file D is the mobile phone 2. In the multi-device collaboration system, if networking is performed between the plurality of devices by using the Wi-Fi P2P technology, a direct connection cannot be established between the mobile phone 1 and the mobile phone 2, but a direct connection may be established between the mobile phone 1 and the computer, and a direct connection may also be established between the computer and the mobile phone 2. In this case, the mobile phone 1 may first establish a data transmission channel with the computer, and the mobile phone 1 sends file information of the file D to the computer. Then, the computer establishes a data transmission channel with the mobile phone 2, and the computer forwards the file information of the file D to the mobile phone 2. Optionally, if networking is performed between the plurality of devices by using the ad hoc networking technology, all devices in the multi-device collaboration system may establish direct connections. In this case, the mobile phone 1 may establish a direct connection to the mobile phone 2, the mobile phone 1 may directly establish a data transmission channel to the mobile phone 2, and the mobile phone 1 directly sends the file information of the file D to the mobile phone 2.

Step S19810: The third device receives the target file that the first device controls to send.

Specifically, after the first device controls to send the target file to the third device, the third device may store the target file in the device. In a possible implementation, that the third device receives the target file that the first device controls to send includes: establishing a data transmission channel with a device that stores the target file, and receiving the file information of the target file, where the file information includes a file name, file content, and file size information of the target file. It should be noted that the third device receives the size information of the target file sent by the send device. After determining that the third device has sufficient space to receive the target file, the third device may receive the file information of the target file. For example, as shown in FIG. 199E, if the user selects the file D on the first interface, drags the file D along the track 8, and releases the drag operation on the collaboration window of the mobile phone 2, in this case, the mobile phone 2 serves as the third device, and the computer controls the mobile phone 1 to send the file D to the mobile phone 2. The mobile phone 2 receives the file D and stores the file D locally.

Step S19811: The third device sends a broadcast to notify another device in the multi-device collaboration system that the target file has been successfully received.

Specifically, after successfully receiving the target file, the third device sends the broadcast to notify the another device in the multi-device collaboration system that the target file has been successfully received, and the another device does not need to wait for receiving. For example, as shown in FIG. 199E, if the user selects the file D on the first interface, drags the file D along the track 8, and releases the drag operation on the collaboration window of the mobile phone 2, in this case, the mobile phone 2 serves as the third device, and the computer controls the mobile phone 1 to send the file D to the mobile phone 2. After successfully receiving the file D, the mobile phone 2 notifies the mobile phone 1, the computer, the table, and the mobile phone 3 in the multi-device collaboration system that the file D has been successfully received, and the mobile phone 1, the computer, the table, and the mobile phone 3 do not need to wait for receiving.

According to the method in this embodiment of this application, each device in the multi-device collaboration system can send or receive the target file without interrupting collaboration, to avoid, when file transfer on two devices between which collaboration is not established is performed, interrupting collaboration established with another device and then reestablishing new collaboration for file transfer. This implements convenient file transfer across a plurality of devices, improves file resource transfer efficiency in multi-device collaboration, simplifies a user operation, and improves user experience.

An embodiment of this application further provides a drag apparatus. The apparatus may be applied to an electronic device, for example, the first terminal or the second terminal in the foregoing embodiment. The apparatus may include a processor, and a memory configured to store instructions executable by the processor. When the processor is configured to execute the instructions, the display apparatus is enabled to implement functions or steps performed by the first terminal or the second terminal in the foregoing method embodiments.

An embodiment of this application further provides an electronic device (where the electronic device may be the first terminal or the second terminal). The electronic device may include a display, a memory, and one or more processors. The display and the memory are coupled to the processor. The memory is configured to store computer program code. The computer program code includes computer instructions. When the processor executes the computer instruction, the electronic device may perform functions or steps performed by the first terminal or the second terminal in the foregoing method embodiments. Certainly, the electronic device includes but is not limited to the foregoing display, memory, and one or more processors. For example, for a structure of the electronic device, refer to the structure of the mobile phone shown in FIG. 2.

An embodiment of this application further provides a chip system. The chip system may be applied to an electronic device, for example, the first terminal or the second terminal in the foregoing embodiments. The chip system includes at least one processor and at least one interface circuit. The processor may be a processor in the foregoing electronic device. The processor and the interface circuit may be interconnected through a line. The processor may receive computer instructions from the memory of the electronic device through the interface circuit, and execute the computer instructions. When the computer instructions are executed by the processor, the electronic device may be enabled to perform the steps performed by the first terminal or the second terminal in the foregoing embodiments. Certainly, the chip system may further include another discrete device. This is not specifically limited in this embodiment of this application.

An embodiment of this application further provides a computer-readable storage medium, configured to store computer instructions run by an electronic device, for example, the foregoing first terminal or the second terminal.

An embodiment of this application further provides a computer program product, including computer instructions run by an electronic device, for example, the foregoing first terminal or the second terminal.

An embodiment of this application further provides a drag system. The drag system may include the foregoing first terminal and the foregoing second terminal. The first terminal may be configured to implement functions or steps performed by the first terminal in the foregoing method embodiments. The first terminal may be configured to implement functions or steps performed by the second terminal in the foregoing method embodiments.

The foregoing descriptions about implementations allow a person skilled in the art to clearly understand that, for the purpose of convenient and brief description, division of the foregoing function modules is used as an example for illustration. In actual application, the foregoing functions can be allocated to different modules and implemented based on a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiments are merely examples. For example, the division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An object drag method, applied to a first terminal, wherein the first terminal is connected to a second terminal, and the method comprises:
displaying, by the first terminal, an object on a display of the first terminal;
receiving, by the first terminal, a drag operation input by a user, wherein the drag operation is used to initiate drag for the object;
displaying, by the first terminal on the display of the first terminal in response to the drag operation, an animation in which the object moves with the drag operation; and
sending, by the first terminal, drag data to the second terminal after determining that a drag intent of the user is cross-device drag, wherein the drag data is used by the second terminal to display the object on a display of the second terminal.

2. The method according to claim 1, further comprising:
in a process in which the object moves on the display of the first terminal, displaying, by the first terminal, a second region of the object on the display of the first terminal when a first region of the object is dragged out of the display of the first terminal, wherein
the drag data is specifically used by the second terminal to display the first region of the object on the display of the second terminal, and the second region of the object displayed on the first terminal and the first region of the object displayed on the second terminal can implement complete presentation of content of the object.

3. The method according to claim 2, wherein the drag operation comprises at least an operation of triggering the object to move, and the second region of the object displayed on the display of the first terminal dynamically changes with the operation.

4. The method according to claim 2 or 3, wherein after the displaying, by the first terminal, a second region of the object on the display of the first terminal, the method further comprises:
receiving, by the first terminal, third drag data from the second terminal, wherein the third drag data is sent by the second terminal to the first terminal after the second terminal receives a drag operation of the user for the first region of the object displayed on the second terminal, and the third drag data comprises coordinate information of a first corner of the object, wherein
the second region of the object displayed on the display of the first terminal dynamically changes with a change of the third drag data.

5. The method according to any one of claims 1 to 4, wherein the drag data comprises first drag data and second drag data; and
before the sending drag data to the second terminal, the method further comprises:
obtaining, by the first terminal, the first drag data from a drag start event when the object starts to be dragged; and
obtaining, by the first terminal, the second drag data from a drag movement event in the process in which the object moves on the display of the first terminal.

6. The method according to claim 5, wherein the object is a window or a partial region of a window, and the window comprises an interface of an application;
the first drag data comprises the interface of the application and rectangle information of the object; and
the second drag data comprises the coordinate information of the first corner of the object.

7. The method according to claim 6, wherein after the sending drag data to the second terminal, the method further comprises:
receiving, by the first terminal, a drag release operation input by the user, wherein the drag release operation is used to indicate that drag for the object ends; and
sending, by the first terminal, data to the second terminal in response to the drag release operation, wherein the data is used by the second terminal to display the interface of the application or a partial region of the interface of the application on the display of the second terminal

8. The method according to claim 6 or 7, wherein the window is an application window or a freeform freeform small window.

9. The method according to claim 5, wherein the object is a video component, a floating window, a picture-in-picture, or a freeform small window;
the first drag data comprises rectangle information of the object; and
the second drag data comprises the coordinate information of the first corner of the object.

10. The method according to claim 9, wherein after the first terminal determines that the drag intent of the user is cross-device drag, the method further comprises:
sending, by the first terminal, screen recording data to the second terminal, wherein the screen recording data and the drag data are used by the second terminal to display a partial region or an entire region of the object on the display of the second terminal.

11. The method according to claim 9 or 10, wherein after the sending drag data to the second terminal, the method further comprises:
receiving, by the first terminal, a drag release operation input by the user, wherein the drag release operation is used to indicate that drag for the object ends; and
sending, by the first terminal, indication information to the second terminal in response to the drag release operation, wherein the indication information is used to indicate the second terminal to display the entire region of the object on the display of the second terminal.

12. The method according to claim 5, wherein the object is a user interface UI control on a first interface, or the object is a partial region of a first interface, and the partial region comprises a UI control;
the displaying, by the first terminal on the display of the first terminal in response to the drag operation, an animation in which the object moves with the drag operation comprises: displaying, by the first terminal on the display of the first terminal in response to the drag operation, an animation in which a shadow of the object moves with the drag operation;
the first drag data comprises rectangle information of the shadow, the shadow, and an identifier of the UI control; and
the second drag data comprises coordinate information of a first corner of the shadow.

13. The method according to claim 12, wherein after the sending drag data to the second terminal, the method further comprises:
receiving, by the first terminal, a drag release operation input by the user, wherein the drag release operation is used to indicate that drag for the object ends; and
obtaining, by the first terminal, an instruction stream of the first interface and sending the instruction stream to the second terminal, wherein the instruction stream and the identifier of the UI control are used by the second terminal to display the UI control on the display of the second terminal.

14. The method according to any one of claims 1 to 13, wherein the determining that a drag intent of the user is cross-device drag comprises:
determining, by the first terminal, that the object is dragged to a drag sensing region disposed on an edge of the display of the first terminal; or
determining, by the first terminal, that a distance between the object and an edge of the display of the first terminal is less than a predetermined distance.

15. The method according to claim 1, wherein
the method further comprises: displaying, by the first terminal, a first cursor on the object; and
the displaying, by the first terminal on the display of the first terminal in response to the drag operation, an animation in which the object moves with the drag operation comprises: displaying, by the first terminal on the display of the first terminal in response to the drag operation, an animation in which the object moves with the first cursor.

16. The method according to claim 15, wherein
the drag data is specifically used by the second terminal to display, on the display of the second terminal, an animation in which the object moves with a second cursor.

17. The method according to claim 15 or 16, wherein the object is an icon of an application, or the object is a window, and the window comprises an interface of an application; and
when the object is the icon of the application, the drag data comprises the icon of the application, or when the object is the window, the drag data comprises the interface of the application.

18. The method according to claim 17, wherein after the sending drag data to the second terminal, the method further comprises:
receiving, by the first terminal, an indication message from the second terminal, wherein the indication message is sent by the second terminal after the user inputs a drag release operation, and is used to indicate that drag for the object ends; and
sending, by the first terminal, data to the second terminal, wherein the data is used by the second terminal to display the interface of the application on the display of the second terminal.

19. The method according to claim 15 or 16, wherein the displaying, by the first terminal on the display of the first terminal, an animation in which the object moves with the first cursor comprises:
displaying, by the first terminal on the display of the first terminal, an animation in which a shadow of the object. moves with the first cursor.

20. The method according to claim 19, wherein the object is a text, a file, or a folder, and the drag data comprises drag event content and a bitmap of the shadow; and
when the object is the text, the drag event content comprises the text, or when the object is the file or the folder, the drag event content is a file path

21. The method according to any one of claims 15 to 20, wherein the receiving, by the first terminal, a drag operation input by a user comprises: receiving, by the first terminal, the drag operation input by the user by using an input device of the second terminal.

22. The method according to claim 21, wherein before the displaying, by the first terminal, a first cursor on the object displayed by the first terminal, the method further comprises:
receiving, by the first terminal, first shuttle state information from the second terminal, wherein the first shuttle state information is used to indicate that a shuttle starts; and
displaying, by the first terminal, the first cursor on the first terminal in response to the first shuttle state information.

23. The method according to claim 22, wherein after the displaying, by the first terminal, the first cursor on the first terminal, the method further comprises:
receiving, by the first terminal, an operation that is of moving the first cursor and that is input by the user by using the input device of the second terminal; and
in response to the operation of moving the first cursor, displaying, by the first terminal on the display of the first terminal until the first cursor moves to the object, an animation in which the first cursor moves.

24. The method according to claim 22 or 23, wherein the drag operation comprises a press operation and a movement operation;
the receiving, by the first terminal, the drag operation input by the user by using an input device of the second terminal comprises:
receiving, by the first terminal, a first operation parameter from the second terminal, wherein the first operation parameter is an operation parameter comprised in a press event received by the second terminal after the user performs the press operation by using the input device of the second terminal;
receiving, by the first terminal, a second operation parameter from the second terminal, wherein the second operation parameter is an operation parameter comprised in a movement event received by the second terminal after the user performs the movement operation by using the input device of the second terminal; and
simulating, by the first terminal, the press event based on the first operation parameter, and simulating the movement event based on the second operation parameter, wherein the press event and the movement event are used to indicate to initiate drag for the object; and
the displaying, by the first terminal on the display of the first terminal in response to the drag operation, an animation in which the object moves with the first cursor comprises:
displaying, by the first terminal in response to the press event and the movement event, the animation in which the object moves with the first cursor.

25. The method according to any one of claims 22 to 24, wherein after the first terminal determines that the object is dragged out of an edge of the display of the first terminal, the method further comprises:
sending, by the first terminal, second shuttle state information to the second terminal, wherein the second shuttle state information is used to indicate that the shuttle ends.

26. The method according to any one of claims 15 to 20, wherein the receiving, by the first terminal, a drag operation input by a user comprises: receiving, by the first terminal, the drag operation input by the user by using an input device of the first terminal.

27. The method according to claim 26, wherein the drag operation comprises a press operation and a movement operation; and
when the first terminal determines that the drag intent of the user is cross-device drag, the method further comprises:
sending, by the first terminal to the second terminal, data of the movement operation input by the user by using the input device of the first terminal.

28. The method according to claim 27, wherein the sending, by the first terminal to the second terminal, data of the movement operation input by the user by using the input device of the first terminal comprises:
intercepting, by the first terminal, a movement event in a process in which the user performs the movement operation by using the input device of the first terminal; and
sending, by the first terminal to the second terminal, an operation parameter comprised in the movement event.

29. The method according to any one of claims 26 to 28, wherein after the first terminal determines that the drag intent of the user is cross-device drag, the method further comprises:
sending, by the first terminal, shuttle state information to the second terminal, wherein the shuttle state information is used to indicate that a shuttle starts.

30. The method according to any one of claims 26 to 29, wherein after the first terminal determines that the drag intent of the user is cross-device drag, the method further comprises:
hiding, by the first terminal, the first cursor and the object.

31. The method according to claim 30, wherein after the first terminal determines that the drag intent of the user is cross-device drag, the method further comprises:
displaying, by the first terminal, an invisible window, wherein transparency of the invisible window is greater than a threshold, and the invisible window is configured to receive a drag event, wherein
before the sending drag data to the second terminal, the method further comprises:
obtaining, by the first terminal, the drag event content from the drag event received by the invisible window; and
obtaining, by the first terminal, the bitmap of the shadow of the object.

32. The method according to any one of claims 15 to 31, wherein the determining that a drag intent of the user is cross-device drag comprises:
determining, by the first terminal, that the object is dragged out of the edge of the display of the first terminal.

33. The method according to claim 1, wherein before the sending drag data to the second terminal, the method further comprises:
obtaining, by the first terminal, a data type of the object,
sending, by the first terminal to the second terminal, a determining request carrying the data type; and
receiving, by the first terminal, a determining result obtained by the second terminal based on the data type, wherein the determining result indicates whether the object can be transmitted to the second terminal, wherein
the sending drag data to the second terminal comprises:
sending, by the first terminal, the object to the second terminal when the determining result is that the object can be transmitted to the second terminal and a drag release operation is detected.

34. The method according to claim 33, wherein after the receiving, by the first terminal, a determining result obtained by the second terminal based on the data type, the method further comprises:
displaying, by the first terminal, the determining result.

35. The method according to claim 33 or 34, wherein the determining request carries a data type field and/or an extended data type field, and the data type field and the extended data type field are used to indicate the data type of the object

36. The method according to any one of claims 33 to 35, wherein the sending, by the first terminal, the object to the second terminal comprises:
temporarily storing, by the first terminal, the object locally on the first terminal;
sending, by the first terminal, a data transmission request to the second terminal, wherein the data transmission request is used to transmit the object; and
sending, by the first terminal when receiving a first response signal that indicates that the data transmission request is accepted and that is returned by the second terminal, the object based on the first response signal.

37. The method according to claim 36, wherein after the temporarily storing, by the first terminal, the object locally on the first terminal, the method further comprises:
when detecting a call-out instruction for the temporarily stored object, calling out, by the first terminal, the temporarily stored object, and sending the data transmission request to the second terminal.

38. The method according to claim 36 or 37, wherein the sending, by the first terminal, the object based on the first response signal comprises:
directly sending, by the first terminal, the object when receiving the first response signal; or
delaying, by the first terminal when receiving the first response signal, sending the object

39. The method according to any one of claims 33 to 38, wherein the method further comprises:
sending, by the first terminal, a display instruction to the second terminal, to instruct the second terminal to display a first image of the object according to the display instruction and based on a location relationship between the second terminal and the first terminal, wherein
a second image that is of the object and that is displayed on the first terminal and the first image of the object displayed on the second terminal can be spliced into a complete image of the object, and
sending the object to the second terminal if it is detected that an area of the second image that is of the object and that is displayed on the display of the first terminal meets a sending condition.

40. The method according to any one of claims 33 to 38, wherein the method further comprises:
sending, by the first terminal, a display state request to the second terminal, so that the second terminal returns to a current display interface of the second terminal in response to the display state request, and displays the display interface, wherein
the sending, by the first terminal to the second terminal, a determining request carrying the data type comprises:
sending, by the first terminal, the determining request to the second terminal, wherein the determining request carries the data type and coordinates that are on the display interface and that are of a stay location of the drag operation, wherein
the receiving, by the first terminal, a determining result obtained by the second terminal based on the data type comprises:
receiving, by the first terminal, the determining result obtained by the second terminal based on the data type and the coordinates.

41. The method according to claim 33, wherein the method further comprises:
determining, by the first terminal, a processing manner of the second terminal for the object, wherein
the sending, by the first terminal, the object to the second terminal comprises:
sending, by the first terminal, the object and indication information to the second terminal, wherein the indication information is used to indicate the second terminal to process the object in the processing manner.

42. The method according to any one of claims 1 to 41, wherein before the sending drag data to the second terminal, the method further comprises:
determining, by the first terminal, that a target device for cross-device drag is the second terminal.

43. The method according to claim 42, wherein before the determining, by the first terminal, that a target device for cross-device drag is the second terminal, the method further comprises:
displaying, by the first terminal, information about at least two candidate terminals, wherein the at least two candidate terminals comprise a terminal connected to the first terminal, and/or a terminal that is not connected to the first terminal but whose distance from the first terminal is within a connectable range, wherein
the determining, by the first terminal, that a target device for cross-device drag is the second terminal comprises:
receiving, by the first terminal, a selection operation of the user for information about at least one second terminal in the information about the at least two candidate terminals, or determining, by the first terminal, at least one second terminal based on a relationship between a stay location of the drag operation and a display location of the information about the at least two candidate terminals, wherein
if the second terminal selected or determined by the user is not connected to the first terminal, the method further comprises: establishing, by the first terminal, a connection to the second terminal.

44. The method according to claim 43, wherein the displaying, by the first terminal, information about at least two candidate terminals comprises:
displaying, by the first terminal, device identifiers of the at least two candidate terminals based on a matching degree between each of the at least two candidate terminals and a first service corresponding to the object, wherein a higher matching degree between the candidate terminal and the first service indicates a higher recommendation priority of the device identifier of the candidate terminal.

45. The method according to claim 44, wherein before the displaying, by the first terminal, device identifiers of the at least two candidate terminals based on a matching degree between each of the at least two candidate terminals and a first service corresponding to the object, the method further comprises:
determining, by the first terminal, the matching degree between each of the at least two candidate terminals and the first service.

46. The method according to claim 45, wherein the determining, by the first terminal, the matching degree between each of the at least two candidate terminals and the first service comprises:
for each of the at least two candidate terminals, obtaining, by the first terminal, a score of the candidate terminal in each dimension;
obtaining, by the first terminal, a score of the first service in each dimension; and
determining, by the first terminal, the matching degree between each candidate terminal and the first service based on the score of the candidate terminal in each dimension and the score of the first service in each dimension, wherein
the dimensions are divided based on different factors that affect a matching degree between a device and a service.

47. The method according to claim 46, wherein the determining, by the first terminal, the matching degree between each candidate terminal and the first service based on the score of the candidate terminal in each dimension and the score of the first service in each dimension comprises:
generating, by the first terminal, a device scoring model of the candidate terminal based on the score of the candidate terminal in each dimension, and generating a service scoring model of the first service based on the score of the first service in each dimension;
obtaining, by the first device, a coincidence degree between the device scoring model and the service scoring model; and
determining, by the first device, the matching degree between the candidate terminal and the first service based on the coincidence degree, wherein
a higher coincidence degree between the device scoring model and the service scoring model indicates a higher matching degree between the corresponding candidate terminal and the first service.

48. The method according to claim 42, wherein the determining, by the first terminal, that a target device for cross-device drag is the second terminal comprises:
determining, by the first terminal, at least one second terminal based on a location relationship between a stay location of the drag operation and an edge of the first terminal and relative locations of the first terminal and at least one candidate terminal.

49. The method according to claim 48, wherein before the determining, by the first terminal, at least one second terminal based on a location relationship between the stay location of the drag operation and an edge of the first terminal and relative locations of the first terminal and at least one candidate terminal, the method further comprises:
obtaining, by the first terminal, a first photographing parameter of the first terminal, wherein the first photographing parameter of the first terminal is a photographing parameter obtained by the first terminal through self-metering;
sending, by the first terminal, the first photographing parameter of the first terminal to the at least one candidate terminal, wherein the first photographing parameter of the first terminal is used by the at least one candidate terminal to determine a respective second photographing parameter in combination with a respective first photographing parameter, a first photographing parameter of the candidate terminal is a photographing parameter obtained by the candidate terminal through self-metering, and a second photographing parameter of the candidate terminal is used by the candidate terminal to perform synchronous photographing;
performing, by the first terminal, the synchronous photographing with the at least one candidate terminal;
receiving, by the first terminal, a result that is of the synchronous photographing and that is sent by the at least one candidate terminal; and
obtaining, by the first terminal, the relative locations of the first terminal and the at least one candidate terminal based on results of the synchronous photographing performed by the first terminal and the at least one candidate terminal.

50. The method according to claim 49, wherein the second photographing parameter of the candidate terminal is a photographing parameter obtained by the candidate terminal based on the first photographing parameter of the first terminal, the first photographing parameter of the candidate terminal, and first photographing parameters of a preset quantity of candidate terminals other than the candidate terminal in the at least one candidate terminal.

51. The method according to claim 49 or 50, wherein the result that is of the synchronous photographing and that is sent by the at least one candidate terminal is feature point description information obtained by the at least one candidate terminal by performing feature point detection on a photo separately obtained by the at least one candidate terminal by performing the synchronous photographing.

52. The method according to any one of claims 49 to 51, wherein after the receiving, by the first terminal, a result that is of the synchronous photographing and that is sent by the at least one candidate terminal, the method further comprises:
if the result of the synchronous photographing does not meet a preset condition, displaying, by the first terminal, prompt information for assisting in photographing, wherein the preset condition is that a quantity of feature points whose feature point intensity is greater than a first threshold in the result of the synchronous photographing is greater than a second threshold.

53. The method according to claim 10, wherein before the sending, by the first terminal, screen recording data to the second terminal, the method further comprises:
obtaining, by the first terminal, the screen recording data, wherein the screen recording data comprises a first layer at which the object is located, the first layer is composited to a virtual display based on a first geometric transformation matrix, the first geometric transformation matrix comprises an offset parameter used to offset the first layer and a scaling parameter used to scale the first layer, so that the first layer covers the virtual display in least one direction, the first geometric transformation matrix is different from a second geometric transformation matrix, and the second geometric transformation matrix is a matrix used when the first layer is composited on the display of the first terminal.

54. The method according to claim 53, wherein before the obtaining, by the first terminal, the screen recording data, the method further comprises:
obtaining, by the first terminal, a first identifier, wherein the first identifier is an identifier of the first layer,
obtaining, by the first terminal, the first geometric transformation matrix; and
compositing, by the first terminal based on the first identifier, the first layer to the virtual display by using the first geometric transformation matrix.

55. The method according to claim 54, wherein the obtaining, by the first terminal, the first geometric transformation matrix comprises:
obtaining, by the first terminal, an initial display region of the first layer on the virtual display;
obtaining, by the first terminal, the offset parameter based on coordinates of a first comer of the initial display region relative to a first corner of the virtual display;
obtaining, by the first terminal, the scaling parameter based on a width and a height of the object and a width and a height of the virtual display and
obtaining, by the first terminal the first geometric transformation matrix based on the offset parameter and the scaling parameter.

56. The method according to claim 54, wherein the obtaining, by the first terminal, the first geometric transformation matrix comprises:
obtaining, by the first terminal, rectangle information corresponding to the object;
obtaining, by the first terminal, the offset parameter based on coordinates of a first corner in the rectangular information relative to a first corner of the virtual display;
obtaining, by the first terminal, the scaling parameter based on a width and a height of a rectangle corresponding to the rectangle information and a width and a height of the virtual display; and
obtaining, by the first terminal, the first geometric transformation matrix based on the offset parameter and the scaling parameter.

57. The method according to claim 22, wherein after the receiving, by the first terminal, first shuttle state information from the second terminal, the method further comprises:
displaying, by the first terminal, a first interface;
receiving, by the first terminal, a first operation of the user for content on the first interface; and
sending, by the first terminal, data to the second terminal in response to the first operation when an input source for the first operation is the input device of the second terminal, wherein the data is used by the second terminal to display a second interface on the display of the second terminal; or
displaying, by the first terminal, a second interface on the display of the first terminal in response to the first operation when an input source for the first operation is an input device of the first terminal.

58. The method according to claim 57, wherein when the input source for the first operation is the input device of the second terminal,
the receiving, by the first terminal, a first operation of the user for content on the first interface comprises:
receiving, by the first terminal, a sixth operation parameter from the second terminal, wherein when the user performs the first operation by using the input device of the second terminal, the sixth operation parameter is an operation parameter comprised in a first input event corresponding to the first operation; and
simulating, by the first terminal, the first input event based on the sixth operation parameter; and
the sending, by the first terminal, data to the second terminal in response to the first operation comprises:
determining, by the first terminal based on the simulated first input event, that the input source for the first operation is the input device of the second terminal; and
sending, by the first terminal, the data to the second terminal in response to the first input event.

59. The method according to claim 58, wherein the determining, by the first terminal based on the simulated first input event, that the input source for the first operation is the input device of the second terminal comprises:
determining, by the first terminal, that an input device identifier comprised in the simulated first input event is an identifier of a virtual input device, wherein the virtual input device is created by the first terminal and used to simulate an input event; or
determining, by the first terminal, that an input device type indicated by an input mode comprised in the simulated first input event is the same as a type of the input device of the second terminal, and determining that the first shuttle state information from the second terminal is received.

60. The method according to any one of claims 57 to 59, wherein the displaying, by the first terminal, a second interface on the display of the first terminal in response to the first operation comprises:
when the user performs the first operation by using the input device of the first terminal, determining, by the first terminal based on a second input event corresponding to the first operation, that the input source for the first operation is the input device of the first terminal; and
displaying, by the first terminal, the second interface on the display of the first terminal in response to the second input event

61. The method according to claim 60, wherein the determining, by the first terminal based on a second input event corresponding to the first operation, that the input source for the first operation is the input device of the first terminal comprises:
determining, by the first terminal, that an input device identifier comprised in the second input event is an identifier of the input device of the first terminal; or
determining, by the first terminal, that an input device type indicated by an input mode comprised in the second input event is the same as a type of the input device of the first terminal.

62. The method according to claim 18, wherein the method further comprises:
displaying, by the first terminal, the first cursor in the window when the second cursor of the second terminal enters the interface of the application displayed by the second terminal;
receiving, by the first terminal, a second operation input by the user by using an input device of the second terminal, wherein the second operation is used to move the first cursor on the display of the first terminal;
when the first cursor moves to first content in the window, displaying, by the first terminal, the first cursor in a first style, and/or changing a display manner of the first content from a first manner to a second manner, so that when the second cursor moves to content that corresponds to the first content and that is on the interface of the application, the second cursor is displayed in the first style, and/or a display manner of the content that corresponds to the first content and that is on the interface of the application is changed from the first manner to the second manner; and
when the first cursor moves to second content in the window, displaying, by the first terminal, the first cursor in a second style, and/or changing a display manner of the second content from a third manner to a fourth manner, so that when the second cursor moves to content that corresponds to the second content and that is on the interface of the application, the second cursor is displayed in the second style, and/or a display manner of the content that corresponds to the second content and that is on the interface of the application is changed from the third manner to the fourth manner.

63. The method according to claim 62, wherein after the displaying, by the first terminal, the first cursor in a first style, the method further comprises: sending, by the first terminal, a cursor type of the first style to the second terminal, wherein the cursor type of the first style is used by the second terminal to display the second cursor, so that the second cursor is displayed in the first style; and
after the displaying, by the first terminal, the first cursor in a second style, the method further comprises: sending, by the first terminal, a cursor type of the second style to the second terminal, wherein the cursor type of the second style is used by the second terminal to display the second cursor, so that the second cursor is displayed in the second style.

64. The method according to claim 62 or 63, wherein transparency of the first cursor is greater than a threshold.

65. The method according to claim 1, wherein the object is an application window of a first application, and the application window comprises a plurality of elements; and
the method further comprises:
displaying, by the first terminal, a first window on the display of the first terminal after the first terminal determines that the drag intent of the user is not cross-device drag, wherein the first window comprises a part of elements in the application window.

66. The method according to claim 65, wherein the determining that the drag intent of the user is not cross-device drag comprises:
determining, by the first terminal, that the application window moves to a specified region of the display of the first terminal.

67. The method according to claim 65 or 66, wherein the displaying, by the first terminal the application window on the display of the first terminal comprises:
displaying, by the first terminal, a multi-task interface after receiving a third operation, wherein the multi-task interface comprises the application window, wherein
the drag operation is a drag operation for the application window on the multi-task interface.

68. The method according to claim 65 or 66, wherein the application window is a freeform small window.

69. The method according to any one of claims 65 to 68, wherein before the displaying a first window on the display of the first terminal, the method further comprises:
extracting, by the first terminal, the part of elements from the plurality of elements in the application window.

70. The method according to claim 69, wherein
the part of elements are predetermined; or
the extracting, by the first terminal, the part of elements from the plurality of elements in the application window comprises: obtaining, by the first terminal, a second identifier, and obtaining, from stored configuration files corresponding to different identifiers, a configuration file corresponding to the second identifier, wherein the configuration file corresponding to the second identifier comprises identifiers of the part of elements; and extracting, by the first terminal, the part of elements from the plurality of elements in the application window based on the configuration file corresponding to the second identifier, wherein the second identifier comprises an identifier of the first application, or the second identifier comprises an identifier of the first application and an identifier of an interface in the application window, or
the extracting, by the first terminal, the part of elements from the plurality of elements in the application window comprises: obtaining, by the first terminal, a type of the first application, and obtaining, from stored recommendation models corresponding to different types of applications, a recommendation model corresponding to the type of the first application, wherein the recommendation model has a function of extracting, based on a type corresponding to an application, an element that needs to be displayed in the first window; and extracting, by the first terminal, the part of elements from the plurality of elements in the application window based on the recommendation model corresponding to the type of the first application.

71. The method according to any one of claims 65 to 70, wherein a layout of the part of elements in the first window is different from a layout of elements corresponding to the part of elements in the application window.

72. The method according to claim 71, wherein
the layout of the part of elements in the first window is predetermined; or
before the displaying a first window on the display of the first terminal, the method further comprises: obtaining, by the first terminal from a stored layout file based on the second identifier or the type of the first application, a layout file corresponding to the second identifier or the type of the first application, and laying out, by the first terminal, the part of elements based on the obtained layout file, wherein the second identifier comprises the identifier of the first application, or the second identifier comprises the identifier of the first application and the identifier of the interface in the application window.

73. The method according to any one of claims 65 to 72, wherein after the displaying a first window on the display of the first terminal, the method further comprises:
after receiving a fourth operation for the first window, changing, by the first terminal, the first window to a second window and displaying the second window on the display of the first terminal, wherein
the second window comprises a part of elements in the application window, and the second window comprises more elements than the first window comprises.

74. The method according to claim 73, wherein the second window further comprises a close button and a scale-up button; and
the method further comprises: after the first terminal receives an operation for the close button, skipping, by the first terminal, displaying the second window, and after the first terminal receives an operation for the scale-up button, displaying, by the first terminal, the application window and skipping displaying the second window.

75. The method according to claim 73 or 74, wherein after the changing, by the first terminal, the first window to a second window and displaying the second window on the display of the first terminal, the method further comprises:
after determining that no user operation is received within preset duration or after receiving a fifth operation for the second window, changing, by the first terminal, the second window to the first window and displaying the first window on the display of the first terminal.

76. The method according to any one of claims 65 to 75, wherein
the displaying a first window on the display of the first terminal comprises: displaying, by the first terminal, a desktop on the display of the first terminal, and displaying the first window on the desktop, wherein the desktop comprises an icon of a second application, and
after the displaying a first window on the display of the first terminal, the method further comprises:
displaying, by the first terminal after receiving a drag operation for the first window, an animation in which the first window moves; and
displaying, by the first terminal, an application window of the second application on the display of the first terminal when the first window is dragged to a location of the icon of the second application.

77. The method according to any one of claims 65 to 76, wherein after the displaying, by the first terminal, a first window, the method further comprises:
displaying, by the first terminal, the multi-task interface after receiving the third operation, wherein the multi-task interface comprises the application window of the second application;
displaying, by the first terminal after receiving the operation of dragging the first window, the animation in which the first window moves; and
displaying, by the first terminal, the application window of the second application on the display of the first terminal when the first window is dragged to the location of the application window of the second application.

78. The method according to claim 76 or 77, wherein the method further comprises:
after receiving a drag release operation, converting, by the first terminal, the first window into a resource file and then storing the resource file or sending the resource file to the second terminal by using the second application.

79. The method according to any one of claims 65 to 78, wherein after the displaying a first window on the display of the first terminal, the method further comprises:
displaying, by the first terminal after receiving the drag operation for the first window, the animation in which the first window moves; and
sending data of the first window to the second terminal after it is determined that the drag intent of the user is cross-device drag, wherein the data of the first window is used by the second terminal to display the first window on the display of the second terminal.

80. The method according to claim 1, wherein the object is a first element comprised in a first interface of an application displayed on the display of the first terminal; and
the method further comprises:
displaying, by the first terminal, a first floating element on the display of the first terminal after determining that the drag intent of the user is not cross-device drag, wherein content of the first floating element is the same as content of the first element.

81. The method according to claim 80, wherein the determining that the drag intent of the user is not cross-device drag comprises:
determining, by the first terminal, that the object is not dragged to a drag sensing region and receiving a drag release operation, or determining, by the first terminal, that the object is dragged to a trigger region and receiving a drag release operation.

82. The method according to claim 80 or 81, wherein the first interface further comprises a second element within a preset range of the first element; and
the first floating element further comprises content of the second element

83. The method according to any one of claims 80 to 82, wherein the first element is one or more of a text type element, a uniform resource locator URL network address, a picture type element, an icon type element, a card type element, a list contact type element, a video window type element, or a file resource type element

84. The method according to any one of claims 80 to 83, wherein after the displaying, by the first terminal, a first interface on the display, the method further comprises:
after receiving a first operation, displaying, by the first terminal in a first form, an element that supports floating display and that is on the first interface, and displaying, in a second form, an element that does not support floating display and that is on the first interface, wherein the first element is an element that supports floating display, and the first form is different from the second form.

85. The method according to claim 84, wherein the first operation is an operation for a predetermined functional control, or the first operation is an operation for the element that supports floating display and that is on the first interface.

86. The method according to any one of claims 80 to 85, wherein after the displaying, by the first terminal, a first floating element on the display of the first terminal, the method further comprises:
displaying, by the first terminal, a second interface on the display of the first terminal, wherein the second interface comprises a third element; and
displaying, by the first terminal, a second floating element on the display of the first terminal after receiving a second operation for the third element, wherein content of the second floating element is the same as content of the third element, and the second floating element and the first floating element are displayed on the display of the first terminal according to a preset arrangement rule, wherein
the second operation comprises a drag operation and a drag release operation, or the second operation is a copy operation.

87. The method according to claim 86, wherein before the displaying, by the first terminal, a second floating element on the display of the first terminal, the method further comprises:
determining, by the first terminal, that a quantity of floating elements displayed on the display of the first terminal is less than N, wherein N is a maximum quantity of floating elements that are allowed to be displayed on the display at the same time.

88. The method according to claim 87, wherein the method further comprises:
when determining that the quantity of floating elements displayed on the display of the first terminal is equal to N, deleting, by the first terminal from the N floating elements, a floating element that is ranked first according to the preset arrangement rule, and displaying the second floating element.

89. The method according to claim 86, wherein before the displaying, by the first terminal, a second floating element on the display of the first terminal, the method further comprises:
determining, by the first terminal, that no floating element whose type is the same as that of the second floating element exists in the floating elements displayed on the display of the first terminal.

90. The method according to claim 89, wherein the method further comprises:
when the first terminal determines that a third floating element whose type is the same as that of the second floating element exists in the floating elements displayed on the display of the first terminal, combining, by the first terminal, the second floating element and the third floating element into a floating element group and then displaying the floating element group on the display of the first terminal.

91. The method according to claim 90, wherein the method further comprises:
displaying, by the first terminal, the second floating element and the third floating element on the display of the first terminal after receiving a third operation for the floating element group.

92. The method according to any one of claims 80 to 91, wherein the method further comprises:
deleting, by the first terminal, the first floating element after receiving a fourth operation for the first floating element; or
deleting, by the first terminal, the first floating element after the first floating element is displayed on the display of the first terminal for preset duration.

93. The method according to any one of claims 80 to 92, wherein one or more of the following identifiers are displayed on the first floating element: an identifier of the application, message reminder information, and indication information, wherein the indication information is used to indicate a type of the first floating element

94. The method according to any one of claims 80 to 93, wherein when the first element is the text type element, the URL network address, the picture type element, or the file resource type element, after the displaying, by the first terminal, a first floating element on the display, the method further comprises:
displaying, by the first terminal, an interface comprising an input box; and
filling, by the first terminal after the first terminal receives a drag operation for the first floating element and releases the drag operation at a location of the input box, the input box with content corresponding to the first floating element

95. The method according to any one of claims 80 to 94, wherein when the first element is the icon type element or the list contact type element, after the displaying, by the first terminal, a first floating element on the display, the method further comprises:
executing, by the first terminal, a first function after the first terminal receives a fifth operation for the first floating element, wherein the first function is the same as a function executed by the first terminal after the first terminal receives an operation of the user for the first element

96. The method according to any one of claims 80 to 95, wherein when the first element is the list contact type element, after the displaying, by the first terminal, a first floating element on the display, the method further comprises:
sending, by the first terminal after receiving a drag operation for a text, a URL network address, or a picture on the interface and releasing the drag operation at a location of the first floating element, the text, the URL network address, or the picture to a terminal of a contact corresponding to the first floating element.

97. The method according to claim 1, wherein the object is an object on a first interface, the first interface comprises a display interface of the first terminal and collaboration windows corresponding to M third terminals that establish collaboration with the first terminal, M is an integer greater than or equal to 0, the first terminal is any one of N terminals, the first terminal establishes collaboration with at least one another terminal of the N terminals, and N is an integer greater than 2;
the object is a target file on the first interface; and
after the receiving, by the first terminal, a drag operation input by a user, the method further comprises:
notifying, by the first terminal, the another terminal of the N terminals to listen to a release location of the drag operation, wherein the release location comprises an interface of any one of the N terminals or the collaboration window; and
detecting, by the first terminal, the release location of the drag operation, wherein
the target file is a file stored on the first terminal, and the sending, by the first terminal, drag data to the second terminal after determining that a drag intent of the user is cross-device drag comprises:
sending, by the first terminal, the target file to the second terminal when detecting that the release location of drag operation is on a display interface of the second terminal or when detecting that the release location of the drag operation is in a collaboration window that is of the second terminal and that is on the another terminal of the N terminals, wherein the second terminal comprises a device that establishes no collaboration with the first terminal and that is of the N devices.

98. The method according to claim 97, wherein the target file is the file stored on the first terminal, and a start location of the drag operation is on the display interface; and
the target file is a file stored on a start third terminal of the M third terminals, and the start location of the drag operation is in a collaboration window corresponding to the start third terminal.

99. The method according to claim 97 or 98, wherein the method further comprises:
obtaining, by the first terminal, file information of the target file, wherein the file information comprises a file name, file content, and file size information of the target file;
determining, by the first terminal, whether a device matching the release location meets a condition for receiving the target file; and
determining, by the first terminal if the device meets the condition, that the device matching the release location receives a storage path of the target file.

100. The method according to claim 99, wherein the sending, by the first terminal, the target file to the second terminal comprises:
establishing, by the first terminal, a data transmission channel, wherein the data transmission channel is used to transmit the file information of the target file; and
if the first terminal establishes a direct connection to the second terminal, sending, by the first terminal, the file information to the storage path of the second terminal through the data transmission channel; or
if the first terminal establishes an indirect connection to the second terminal, sending the file information to a relay device through the data transmission channel, and forwarding the file information to the storage path of the second terminal by using the relay device, wherein the relay device is a device that establishes a direct connection to the first terminal and a direct connection to the second terminal at the same time.

101. The method according to claim 97, wherein the target file is a file stored on a start third terminal of the M third terminals, and the sending, by the first terminal, drag data to the second terminal after determining that a drag intent of the user is cross-device drag comprises:
controlling, by the first terminal when it is detected that the release location of the drag operation is on the display interface of the second terminal or when it is detected that the release location of the drag operation is in the collaboration window that is on the another terminal of the N terminals and that is of the second terminal, the start third terminal to send the target file to the second terminal.

102. The method according to claim 101, wherein the controlling, by the first terminal, the start third terminal to send the target file to the second terminal comprises:
establishing, by the first terminal, a data transmission channel, wherein the data transmission channel is used to transmit file information of the target file; and
if the start third terminal establishes a direct connection to the second terminal, sending, by the first terminal, the file information to a storage path of the second terminal through the data transmission channel; or
if the start third terminal establishes an indirect connection to the second terminal, sending, by the first terminal, the file information to a relay device through the data transmission channel, and forwarding the file information to a storage path of the second terminal by using the relay device, wherein the relay device is a device that establishes a direct connection to the start third terminal and a direct connection to the second terminal at the same time.

103. The method according to any one of claims 97 to 102, wherein the method further comprises:
obtaining, by the first terminal, first information of the target file, wherein the first information comprises one or more of file type information, file quantity information, and file arrangement sequence information of the target file;
generating, by the first terminal, a drag effect set of the target file based on the first information; and
displaying, by the first terminal based on the drag effect set of the target file, a drag effect that matches a fourth terminal, wherein the fourth terminal is a device through which a drag track of the drag operation passes or a device corresponding to a collaboration window on a device through which a drag track of the drag operation passes.

104. An object drag method, applied to a second terminal, wherein the second terminal is connected to a first terminal, and the method comprises:
receiving, by the second terminal, drag data from the first terminal, wherein the drag data is sent by the first terminal alter the first terminal determines that a drag intent of a user to drag an object on a display of the first terminal is cross-device drag; and
displaying, by the second terminal, the object on a display of the second terminal based on the drag data.

105. The method according to claim 104, wherein the displaying, by the second terminal, the object on a display of the second terminal based on the drag data comprises:
displaying, by the second terminal based on the drag data, a first region of the object on the display of the second terminal when determining that the first region of the object is dragged out of the display of the first terminal, wherein
a second region that is of the object and that is displayed on the first terminal and the first region of the object displayed on the second terminal can implement complete presentation of content of the object

106. The method according to claim 105, wherein the drag data comprises first drag data and second drag data; and
the first region of the object displayed on the display of the second terminal dynamically changes with a change of the second drag data.

107. The method according to claim 105 or 106, wherein the method further comprises:
receiving, by the second terminal, a drag operation of the user for the first region of the object displayed on the display of the second terminal; and
the first region of the object displayed on the display of the second terminal dynamically changes with the drag operation.

108. The method according to claim 107. wherein after the receiving, by the second terminal, a drag operation of the user for the first region of the object displayed on the display of the second terminal, the method further comprises:
sending, by the second terminal, third drag data to the first terminal, wherein the third drag data comprises coordinate information of a first corner of the object, and is used by the first terminal to dynamically adjust the second region that is of the object and that is displayed on the display of the first terminal.

109. The method according to claim 106, wherein the object is a window or a partial region of a window, and the window comprises an interface of an application;
the first drag data comprises the interface of the application and rectangle information of the object; and
the second drag data comprises coordinate information of a first corner of the object

110. The method according to claim 109, wherein after the displaying, by the second terminal based on the drag data, a first region of the object on the display of the second terminal when determining that the first region of the object is dragged out of the display of the first terminal, the method further comprises:
receiving, by the second terminal, data from the first terminal, wherein the data is sent by the first terminal after the user inputs a drag release operation, and the drag release operation is used to indicate that drag for the object ends; and
displaying, by the second terminal, the interface of the application on the display of the second terminal based on the data, or displaying a partial region of the interface of the application on the display of the second terminal based on the data and the drag data.

111. The method according to claim 109 or 110, wherein the window is an application window or a freeform freeform small window.

112. The method according to claim 106, wherein the object is a video component, a floating window, a picture-in-picture, or a freeform small window,
the first drag data comprises rectangle information of the object; and
the second drag data comprises coordinate information of a first corner of the object

113. The method according to claim 112, wherein the method further comprises:
receiving, by the second terminal, screen recording data from the first terminal, wherein
the displaying, by the second terminal based on the drag data, a first region of the object on the display of the second terminal when determining that the first region of the object is dragged out of the display of the first terminal comprises:
displaying, by the second terminal based on the screen recording data, the first region of the object on the display of the second terminal when determining, based on the drag data, that the first region of the object is dragged out of the display of the first terminal.

114. The method according to claim 113, wherein after the displaying, by the second terminal based on the drag data, a first region of the object on the display of the second terminal when determining that the first region of the object is dragged out of the display of the first terminal, the method further comprises:
receiving, by the second terminal, indication information from the first terminal, wherein the indication information is sent by the first terminal after the user inputs a drag release operation; and
displaying, by the second terminal an entire region of the object on the display of the second terminal in response to the indication information based on the screen recording data.

115. The method according to claim 106, wherein the object is a user interface UI control on a first interface, or the object is a partial region of a first interface, and the partial region comprises a UI control; and
the displaying, by the second terminal based on the drag data, a first region of the object on the display of the second terminal when determining that the first region of the object is dragged out of the display of the first terminal comprises:
displaying, by the second terminal based on the drag data, a first region of a shadow of the object on the display of the second terminal when determining that the first region of the object is dragged out of the display of the first terminal, wherein
the first drag data comprises rectangle information of the shadow, the shadow, and an identifier of the UI control; and
the second drag data comprises coordinate information of a first corner of the shadow.

116. The method according to claim 115, wherein after the displaying, by the second terminal based on the drag data, a first region of the object on the display of the second terminal when determining that the first region of the object is dragged out of the display of the first terminal, the method further comprises:
receiving, by the second terminal, an instruction stream of the first interface from the first terminal; and
displaying, by the second terminal, the UI control on the display of the second terminal based on the instruction stream and the identifier of the UI control.

117. The method according to claim 116, wherein a layout of the UI control on the display of the second terminal is different from a layout of the UI control on the first interface.

118. The method according to claim 104, wherein before the receiving, by the second terminal, drag data from the first terminal, the method further comprises:
sending, by the second terminal to the first terminal, data of a drag operation input by the user by using an input device of the second terminal, wherein the drag operation is used to initiate drag for the object displayed by the first terminal.

119. The method according to claim 118, wherein the displaying, by the second terminal, the object on a display of the second terminal based on the drag data comprises:
displaying, by the second terminal on the display of the second terminal based on the drag data and the drag operation, an animation in which the object moves with a second cursor.

120. The method according to claim 118 or 119, wherein the object is an icon of an application, or the object is a window, and the window comprises an interface of an application; and
when the object is the icon of the application, the drag data comprises the icon of the application, or when the object is the window, the drag data comprises the interface of the application.

121. The method according to claim 120, wherein after the receiving, by the second terminal drag data from the first terminal, the method further comprises:
receiving, by the second terminal, a drag release operation input by the user by using the input device of the second terminal; and
displaying, by the second terminal, the interface of the application on the display of the second terminal in response to the drag release operation.

122. The method according to claim 121, wherein the displaying, by the second terminal, the interface of the application on the display of the second terminal comprises:
sending, by the second terminal, an indication message to the first terminal, wherein the indication message is used to indicate that drag for the object ends;
receiving, by the second terminal, data from the first terminal; and
displaying, by the second terminal, the interface of the application on the display of the second terminal based on the data.

123. The method according to claim 119, wherein the displaying, by the second terminal on the display of the second terminal based on the drag data and the drag operation, an animation in which the object moves with a second cursor comprises:
displaying, by the second terminal on the display of the second terminal based on the drag data and the drag operation, an animation in which a shadow of the object moves with the second cursor.

124. The method according to claim 123, wherein the object is a text, a file, or a folder, and the drag data comprises drag event content and a bitmap of the shadow, and
when the object is the text, the drag event content comprises the text, or when the object is the file or the folder, the drag event content is a file path.

125. The method according to any one of claims 118 to 124, wherein before the sending, by the second terminal to the first terminal, data of a drag operation input by the user by using an input device of the second terminal the method further comprises:
determining, by the second terminal, that the second cursor slides out of an edge of the display of the second terminal.

126. The method according to claim 125, wherein before the determining, by the second terminal, that the second cursor slides out of an edge of the display of the second terminal, the method further comprises:
receiving, by the second terminal, an operation that is of moving the second cursor and that is input by the user by using the input device of the second terminal; and
in response to the operation of moving the second cursor, displaying, by the second terminal on the display of the second terminal, an animation in which the second cursor moves.

127. The method according to claim 125 or 126, wherein after the determining, by the second terminal, that the second cursor slides out of an edge of the display of the second terminal, the method further comprises:
sending, by the second terminal, first shuttle state information to the first terminal, wherein the first shuttle state information is used to indicate that a shuttle starts.

128. The method according to any one of claims 125 to 127, wherein after the determining, by the second terminal, that the second cursor slides out of an edge of the display of the second terminal, the method further comprises:
sending, by the second terminal to the first terminal, data of an operation that is of moving a first cursor and that is input by the user by using the input device of the second terminal, wherein the data of the operation is used by the first terminal to display, on the display of the first terminal, an animation in which the first cursor moves.

129. The method according to any one of claims 125 to 128, wherein the drag operation comprises a press operation and a movement operation; and
the sending, by the second terminal to the first terminal, data of a drag operation input by the user by using an input device of the second terminal comprises:
intercepting, by the second terminal, a press event after the user performs the press operation by using the input device of the second terminal;
sending, by the second terminal to the first terminal, a first operation parameter comprised in the press event;
intercepting, by the second terminal, a movement event after the user performs the movement operation by using the input device of the second terminal; and
sending, by the second terminal to the first terminal, a second operation parameter comprised in the movement event, wherein
the first operation parameter and the second operation parameter are respectively used by the first terminal to simulate the press event and the movement event, and are further used to indicate to initiate drag for the object.

130. The method according to any one of claims 119 to 129, wherein before the di splaying, by the second terminal on the display of the second terminal based on the drag data and the drag operation, an animation in which the object moves with a second cursor, the method further comprises:
receiving, by the second terminal, second shuttle state information from the first terminal, wherein the second shuttle state information is used to indicate that the shuttle ends.

131. The method according to claim 130, wherein after the receiving, by the second terminal, second shuttle state information from the first terminal, the method further comprises:
canceling, by the second terminal, interception of an input event, wherein
the displaying, by the second terminal on the display of the second terminal based on the drag data and the drag operation, an animation in which the object moves with a second cursor comprises:
receiving, by the second terminal, a movement event after the user performs a movement operation by using the input device of the second terminal;
generating, by the second terminal, a press event; and
displaying, by the second terminal on the display of the second terminal based on the movement event, the press event, and the drag data, the animation in which the object moves with the second cursor.

132. The method according to claim 125, wherein after the determining, by the second terminal, that the second cursor slides out of an edge of the display of the second terminal, the method further comprises:
displaying, by the second terminal, an invisible window, wherein transparency of the invisible window is greater than a threshold, and the invisible window is configured to initiate a drag event.

133. The method according to claim 104, wherein the displaying, by the second terminal, the object on a display of the second terminal based on the drag data comprises:
displaying, by the second terminal on the display of the second terminal based on the drag data, the object dragged from the first terminal.

134. The method according to claim 133, wherein after the displaying, by the second terminal on the display of the second terminal, the object dragged from the first terminal, the method further comprises:
displaying, by the second terminal, a second cursor on the object;
receiving, by the second terminal, a movement operation input by the user by using an input device of the first terminal; and
displaying, by the second terminal on the display of the second terminal based on the movement operation, an animation in which the object moves with the second cursor, wherein
the drag data and the movement operation are sent by the first terminal to the second terminal after the first terminal determines, when the object moves with a first cursor on the display of the first terminal, that the object is dragged out of an edge of the display of the first terminal, and are used to initiate a drag event for the object.

135. The method according to claim 133 or 134, wherein before the displaying, by the second terminal on the display of the second terminal, the object dragged from the first terminal, the method further comprises:
receiving, by the second terminal, shuttle state information from the first terminal, wherein the shuttle state information is used to indicate that a shuttle starts.

136. The method according to claim 134, wherein the method further comprises:
generating, by the second terminal, a press operation; and
the displaying, by the second terminal on the display of the second terminal based on the movement operation, an animation in which the object moves with the second cursor comprises:
displaying, by the second terminal on the display of the second terminal based on the movement operation, the press operation, and the drag data, the animation in which the object moves with the second cursor

137. The method according to claim 136, wherein
the generating, by the second terminal, a press operation comprises: simulating, by the second terminal, a press event based on an operation parameter of the press operation;
the receiving, by the second terminal, a movement operation input by the user by using an input device of the first terminal comprises: receiving, by the second terminal, an operation parameter from the first terminal, and simulating a movement event based on the operation parameter, wherein the operation parameter is an operation parameter comprised in the movement event received by the first terminal after the user performs the movement operation by using the input device of the first terminal; and
the displaying, by the second terminal on the display of the second terminal based on the movement operation, the press event, and the drag data, the animation in which the object moves with the second cursor comprises:
displaying, by the second terminal on the display of the second terminal in response to the press event and the movement event based on the drag data, the animation in which the object moves with the second cursor.

138. The method according to any one of claims 133 to 137, wherein the displaying, by the second terminal on the display of the second terminal, the object dragged from the first terminal comprises:
displaying, by the second terminal on the display of the second terminal, a shadow of the object dragged from the first terminal; and
the displaying, by the second terminal on the display of the second terminal based on the movement operation, an animation in which the object moves with the second cursor comprises:
displaying, by the second terminal on the display of the second terminal based on the movement operation, an animation in which the shadow of the object moves with the second cursor.

139. The method according to claim 138, wherein the object is a text, a file, or a folder, and the drag data comprises drag event content and a bitmap of the shadow; and
when the object is the text, the drag event content comprises the text, or when the object is the file or the folder, the drag event content is a file path.

140. The method according to claim 139, wherein after the receiving, by the second terminal, drag data from the first terminal, the method further comprises:
creating, by the second terminal, an invisible activity, wherein the invisible activity has a view control whose transparency is greater than a threshold, and the view control is used to initiate the drag event.

141. The method according to claim 104, wherein before the receiving, by the second terminal, drag data from the first terminal, the method further comprises:
receiving, by the second terminal, a determining request sent by the first terminal, wherein the determining request carries a data type of the to-be-transmitted object, and the determining request is used to request the second terminal to determine whether the object of the data type can be transmitted to the second terminal; and
obtaining, by the second terminal, a determining result based on the data type, and sending the determining result to the first terminal, so that the first terminal device displays the determining result

142. The method according to claim 141, wherein the method further comprises:
returning, by the second terminal, a current display interface of the second terminal to the first terminal when receiving a display state request sent by the first terminal, so that the first terminal determines coordinates of a stay location of a drag operation on the display interface, wherein the drag operation is an operation used by the first terminal to initiate a process of transmitting the object to the second terminal, wherein
the determining request carries the coordinates; and
the obtaining, by the second terminal, a determining result based on the data type comprises:
obtaining, by the second terminal, the determining result based on the data type and the coordinates.

143. The method according to claim 142, wherein the method further comprises:
processing, by the second terminal when receiving the object sent by the first terminal, the object based on one or more of the data type, a local storage status, an application service installed on the second terminal, and the coordinates.

144. The method according to claim 143, wherein the processing, by the second terminal, the object based on one or more of the data type, a local storage status, an application service installed on the second terminal, and the coordinates comprises:
opening, by the second terminal when the local storage status is having no storage capability, the object based on the application service installed on the second terminal; or
locally storing, by the second terminal, the object when the local storage status is having a storage capability.

145. The method according to claim 144, wherein the locally storing, by the second terminal, the object when the local storage status is having a storage capability comprises:
when the local storage status is having the storage capability and the data type is not allowed to be inserted into a corresponding location that is of the coordinates and that is on the display interface, locally storing, by the second terminal, the object, and selecting an application based on the data type, to open the object, or
when the local storage status is having the storage capability and the data type is allowed to be inserted into a corresponding location that is of the coordinates and that is on the display interface, locally storing, by the second terminal, the object, and opening the object on the display interface based on the coordinates.

146. The method according to any one of claims 141 to 145, wherein the method further comprises:
temporarily storing, by the second terminal when receiving the object sent by the first terminal, the object locally if the second terminal has the storage capability;
displaying, by the second terminal, a processing option; and
processing, by the second terminal, the object based on a selection operation for the processing option.

147. The method according to claim 141, wherein the method further comprises:
displaying, by the second terminal when receiving a display instruction sent by the first terminal, a first image of the object according to the display instruction and based on a location relationship between the second terminal and the first terminal, wherein
a second image that is of the object and that is displayed on the first terminal and the first image of the object displayed on the second terminal can be spliced into a complete image of the object

148. The method according to claim 104, wherein before the receiving, by the second terminal, drag data from the first terminal, the method further comprises:
receiving, by the second terminal, a first photographing parameter of the first terminal sent by the first terminal, wherein the first photographing parameter of the first terminal is a photographing parameter obtained by the first terminal through self-metering;
obtaining, by the second terminal, a first photographing parameter of the second terminal, wherein the first photographing parameter of the second terminal is a photographing parameter obtained by the second terminal through self-metering;
obtaining, by the second terminal, a second photographing parameter of the second terminal based on the first photographing parameter of the first terminal and the first photographing parameter of the second terminal, wherein the second photographing parameter of the second terminal is used by the second terminal to perform synchronous photographing;
performing, by the second terminal, the synchronous photographing with the first terminal; and
sending, by the second terminal, a result of the synchronous photographing to the first terminal, wherein the result of the synchronous photographing is used by the first terminal to determine relative locations of the first terminal and the second terminal.

149. The method according to claim 148, wherein the first terminal and the second terminal are further connected to at least one second terminal; and
the obtaining, by the second terminal, a second photographing parameter of the second terminal based on the first photographing parameter of the first terminal and the first photographing parameter of the second terminal comprises:
obtaining, by the second terminal, the second photographing parameter of the second terminal based on the first photographing parameter of the first terminal, the first photographing parameter of the second terminal, and first photographing parameters of a preset quantity of second terminals of the at least one second terminal.

150. The method according to claim 148 or 149, wherein the result of the synchronous photographing is feature point description information obtained by the second terminal by performing feature point detection on a photo obtained by the second terminal by performing the synchronous photographing.

151. The method according to any one of claims 148 to 150, wherein after the performing, by the second terminal, the synchronous photographing with the first electronic device, the method further comprises:
if the result of the synchronous photographing does not meet a preset condition, displaying, by the second terminal, prompt information for assisting in photographing, wherein the preset condition is that a quantity of feature points whose feature point intensity is greater than a first threshold in the result of the synchronous photographing is greater than a second threshold.

152. The method according to claim 121, wherein after the displaying, by the second terminal, the interface of the application on the display of the second terminal, the method further comprises:
receiving, by the second terminal, a second operation input by the user by using the input device of the second terminal, wherein the second operation is used to move the second cursor on the display of the second terminal, wherein
when the second cursor moves to first content on the interface of the application, a cursor style of the second cursor is a first style, and/or a display manner of the first content is changed from a first manner to a second manner, and when the second cursor moves to second content on the interface of the application, the cursor style of the second cursor is a second style, and/or a display manner of the second content is changed from a third manner to a fourth manner.

153. The method according to claim 152, wherein the interface of the application is displayed in a partial region of the display of the second terminal; and
the method further comprises:
displaying, by the second terminal on the display of the second terminal in response to the second operation, an animation in which the second cursor moves;
in a process in which the second cursor moves on the display of the second terminal, when determining that the second cursor enters the interface of the application, sending, by the second terminal to the first terminal, an initial coordinate location at which the second cursor enters the interface of the application, and sending data of the second operation to the first terminal, wherein
the initial coordinate location is a coordinate location of a first corner of the second cursor relative to the interface of the application when the second cursor enters the interface of the application, and is used by the first terminal to display a first cursor on the display of the first terminal, the data of the second operation is used to move the first cursor on the display of the first terminal, so that when the second cursor moves to the first content, the first cursor moves to content that corresponds to the first content and that is in the window displayed by the first terminal, and when the first cursor moves to the content corresponding to the first content, a cursor style of the first cursor is the first style, and so that when the second cursor moves to the second content, the first cursor moves to content that corresponds to the second content and that is in the window, and when the first cursor moves to the content corresponding to the second content, the cursor style of the first cursor is the second style,
when the second cursor moves to the first content on the interface of the application, receiving, by the second terminal, a cursor type of the first style from the first terminal, and displaying the second cursor based on the cursor type of the first style, so that the second cursor is displayed in the first style; and
when the second cursor moves to the second content on the interface of the application, receiving, by the second terminal, a cursor type of the second style from the first terminal, and displaying the second cursor based on the cursor type of the second style, so that the second cursor is displayed in the second style.

154. The method according to claim 153, wherein when the first cursor moves to the content corresponding to the first content, a display manner of the content that corresponds to the first content and that is in the window is changed from the first manner to the second manner,
the method further comprises:
updating, by the second terminal, the interface of the application after the second cursor moves to the first content on the interface of the application, wherein the display manner of the first content on the interface of the application before updating is the first manner, and the display manner of the first content on the interface of the application after updating is the second manner, wherein
when the first cursor moves to the content corresponding to the second content, a display manner of the content that corresponds to the second content and that is in the window is changed from the third manner to the fourth manner; and
the method further comprises:
updating, by the second terminal, the interface of the application after the second cursor moves to the second content on the interface of the application, wherein the display manner of the second content on the interface of the application before updating is the third manner, and the display manner of the second content on the interface of the application after updating is the fourth manner.

155. The method according to claim 153 or 154, wherein transparency of the first cursor is greater than a threshold.

156. The method according to any one of claims 104 to 155, wherein the method further comprises:
receiving, by the second terminal, drag data from another first terminal; and
the displaying, by the second terminal, the object on a display of the second terminal based on the drag data comprises:
displaying, by the second terminal, a plurality of objects on the first terminal based on drag data received from a plurality of first terminals, wherein the plurality of objects are in a one-to-one correspondence with the plurality of first terminals.

157. The method according to claim 156, wherein the method further comprises:
creating, by the second terminal, a plurality of drawing components, wherein the plurality of drawing components are in a one-to-one correspondence with the plurality of first terminals, and the drawing component is a view or a canvas; and
the displaying, by the second terminal, a plurality of objects on the first terminal based on drag data received from a plurality of first terminals comprises:
respectively drawing, by the second terminal on the plurality of drawing components based on the drag data received from the plurality of first terminals, the objects corresponding to the first terminals, to display the plurality of objects on the second terminal.

158. The method according to claim 157, wherein before the displaying, by the second terminal, a plurality of objects on the first terminal based on drag data received from a plurality of first terminals, the method further comprises:
configuring, by the second terminal, a plurality of decoding parameters, wherein the plurality of decoding parameters are in a one-to-one correspondence with the plurality of first terminals; and
decoding, by the second terminal based on the plurality of decoding parameters, the drag data received from the corresponding first terminal.

159. The method according to claim 158, wherein the method further comprises:
obtaining, by the second terminal, connection information of the plurality of first terminals, wherein the connection information is used by the second terminal to establish a connection to the corresponding first terminal;
that the plurality of drawing components are in a one-to-one correspondence with the plurality of first terminals comprises: the plurality of drawing components are in a one-to-one correspondence with the connection information of the plurality of first terminals; and
that the plurality of decoding parameters are in a one-to-one correspondence with the plurality of first terminals comprises: the plurality of decoding parameters are in a one-to-one correspondence with the connection information of the plurality of first terminals.

160. A drag apparatus, used in a first terminal, wherein the drag apparatus comprises a processor and a memory configured to store instructions executable by the processor; and
when the processor is configured to execute the instructions, the drag apparatus is enabled to implement the method according to any one of claims 1 to 103.

161. A drag apparatus, used in a second terminal, wherein the drag apparatus comprises a processor and a memory configured to store instructions executable by the processor; and
when the processor is configured to execute the instructions, the drag apparatus is enabled to implement the method according to any one of claims 104 to 159.

162. A computer-readable storage medium, wherein the computer-readable storage medium stores computer program instructions, and when the computer program instructions are executed by an electronic device, the electronic device is enabled to implement the method according to any one of claims 1 to 159.

163. A drag system, comprising a first terminal and a second terminal, wherein
the first terminal comprises the drag apparatus according to claim 160, and the second terminal comprises the drag apparatus according to claim 161.
